# EUROPEAN PATENT APPLICATION

(11) **EP 4 615 119 A1**
(43) Date of publication of application: **10.09.2025**
(21) Application number: 23885131.5
(22) Date of filing: 06.11.2023
(51) Int. Cl.: H04W 72/23

(54) **COMMUNICATION METHOD AND APPARATUS**

(30) Priority: 06.11.2022 CN 202211381977
(71) Applicant: Huawei Technologies Co., Ltd., Shenzhen, Guangdong 518129 (CN)
(72) Inventor: DONG, Changzhao, Shenzhen, Guangdong 518129 (CN); GAO, Xiang, Shenzhen, Guangdong 518129 (CN); LIU, Xianda, Shenzhen, Guangdong 518129 (CN); ZHANG, Zhening, Shenzhen, Guangdong 518129 (CN); LIU, Kunpeng, Shenzhen, Guangdong 518129 (CN)
(74) Representative: Roth, Sebastian
(86) International application number: PCT/CN2023/129837
(87) International publication number: WO 2024/094207

(57) **Abstract**

This application discloses a communication method and apparatus. The method includes: A network device sends first indication information to a terminal device, where the first indication information indicates a cover code length corresponding to a first port in M ports, the M ports belong to a first port set and/or a second port set, a first cover code length corresponding to the first port set is a first length, and a first cover code length corresponding to the second port set is a second length. According to the method, the network device may indicate, to the terminal device, the cover code length corresponding to the first port in the M ports, so that the terminal device flexibly selects a port to perform channel estimation, to achieve good channel estimation effect.

## Description

### CROSS-REFERENCE TO RELATED APPLICATIONS

This application claims priority to Chinese Patent Application No. 202211381977.3, filed with the China National Intellectual Property Administration on November 6, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A demodulation reference signal (demodulation reference signal, DMRS) may be used for estimating an equivalent channel of a data channel or a control channel. The data channel may be, for example, a physical uplink shared channel (physical uplink shared channel, PUSCH) or a physical downlink shared channel (physical downlink shared channel, PDSCH), and the control channel may be, for example, a physical downlink control channel (physical downlink control channel, PDCCH).

For example, in downlink data transmission, when sending data to a terminal device through a PDSCH, a network device may perform precoding on the data based on downlink channel state information (channel state information, CSI). Further, the network device may allocate a DMRS port to the terminal device, and send a DMRS to the terminal device through the PDSCH on a time-frequency resource corresponding to the DMRS port. Identical signal processing such as precoding is usually performed on the DMRS and the data. In this way, after receiving the DMRS corresponding to the DMRS port, the terminal device may obtain an estimation on an equivalent channel according to a channel estimation algorithm, and then complete data demodulation based on the equivalent channel.

However, how the network device flexibly indicates, to the terminal device after DMRS port increasing, the DMRS port allocated to the terminal device to enable the terminal device to flexibly select the DMRS port still needs to be further studied.

### SUMMARY

This application provides a communication method and apparatus, to flexibly indicate frequency domain orthogonal cover code lengths of some of ports allocated by a network device to a terminal device, so that the terminal device flexibly selects a port to perform channel estimation, to achieve good channel estimation effect.

According to a first aspect, an embodiment of this application provides a communication method. The method may be applied to a network device or a component (for example, a processor, a chip, or a chip system) of the network device. For example, the method is applied to the network device. The method includes: The network device sends first indication information to a first terminal device, where the first indication information indicates a cover code length corresponding to a first port in M ports, the M ports belong to a first port set and/or a second port set, a cover code length corresponding to the first port set is a first length, and a cover code length corresponding to the second port set is a second length.

In embodiments of this application, the first port set may be understood as a set of added ports, that is, R18 ports, and the second port set may be understood as a set of legacy ports, that is, R15 ports. In addition, the "cover code length" may include a first cover code length and a second cover code length. In embodiments of this application, a second cover code length corresponding to the first port set is the same as a second cover code length corresponding to the second port set. In a possible implementation, when the cover code length is the first cover code length, the cover code length is 4-length or 2-length.

A first cover code is a frequency domain cover code, and a second cover code is a time domain cover code. The frequency domain cover code is W_{f}(f) in a first time-frequency resource mapping rule, the time domain cover code is *w*ₜ(*l*') in the first time-frequency resource mapping rule, and the first time-frequency resource mapping rule satisfies the following formula: ${a}_{k , l}^{\left(p, μ\right)} = {β}_{PDSCH}^{DMRS} {w}_{f} \left(2⋅\left(n mode 2\right)+k′\right) {w}_{t} \left(l′\right) r \left(2n+k′\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} + l ′$ $n = 0 , 1 , …$

*p* is a port index value, *µ* is a subcarrier spacing parameter, ${a}_{k , l}^{\left(p, μ\right)}$is a demodulation reference signal DMRS that corresponds to a demodulation reference signal DMRS port *p* and that is mapped to a resource element RE whose index is (*k,l*)*_{p,µ}*(k,l), ${β}_{PDSCH}^{DMRS}$is a power coefficient, *w*ₜ(*l*') is a time domain cover code corresponding to a time domain symbol whose index is *l*', W_{f}(f) is a frequency domain cover code corresponding to a subcarrier whose index is *k',* f = 2 · (*n mod* 2) *+ k', m* = *2n + k', m* is an *m*^{th} element in a reference signal sequence, *l* represents an index of an orthogonal frequency division multiplexing OFDM symbol included in a slot, *l̅* is a symbol index of a start time domain symbol occupied by the DMRS symbol or a symbol index of a reference time domain symbol, and Δ is a subcarrier offset factor.

For example, for a port whose demodulation reference signal type is type1, specific values of *w*ₜ(*l*') and W_{f}(f) may be determined according to table A1; and for a port whose demodulation reference signal type is type2, specific values of *w*ₜ(*l*') and W_{f}(f) may be determined according to table A2.

**Table A1**

| ***p*** | ***λ*** | **Δ** | ***w*_{f}(*f*)** | | | | **wₜ(*l*')** | |
|---|---|---|---|---|---|---|---|---|
| | | | ***f =* 0** | ***f =* 1** | ***f* = 2** | ***f* = 3** | ***l'* = 0** | ***l'* = 1** |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 1 | +1 | +1 | +1 | +1 | +1 | +1 |
| 1003 | 1 | 1 | +1 | -1 | +1 | -1 | +1 | +1 |
| 1004 | 0 | 0 | +1 | +1 | +1 | +1 | +1 | -1 |
| 1005 | 0 | 0 | +1 | -1 | +1 | -1 | +1 | -1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | +1 | +j | -1 | -j | +1 | +j |
| 1009 | 0 | 0 | +1 | -j | -1 | +j | +1 | +j |
| 1010 | 1 | 1 | +1 | +j | -1 | -j | +1 | +j |
| 1011 | 1 | 1 | +1 | -j | -1 | +j | +1 | +j |
| 1012 | 0 | 0 | +1 | +j | -1 | -j | +1 | -j |
| 1013 | 0 | 0 | +1 | -j | -1 | +j | +1 | -j |
| 1014 | 1 | 1 | +1 | +j | -1 | -j | +1 | -j |
| 1015 | 1 | 1 | +1 | -j | -1 | +j | +1 | -j |

**Table A2**

| ***p*** | ***λ*** | **Δ** | ***w*_{f}(*f*)** | | | | **wₜ(*l*')** | |
|---|---|---|---|---|---|---|---|---|
| | | | ***f* = 0** | ***f* = 1** | ***f* = 2** | ***f* = 3** | ***l*' = 0** | ***l*' = 1** |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |
| 1007 | 0 | 0 | +1 | -1 | +1 | -1 | +1 | -1 |
| 1008 | 1 | 2 | +1 | +1 | +1 | +1 | +1 | -1 |
| 1009 | 1 | 2 | +1 | -1 | +1 | -1 | +1 | -1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | +1 | +j | -1 | -j | +1 | +j |
| 1013 | 0 | 0 | +1 | -j | -1 | +j | +1 | +j |
| 1014 | 1 | 2 | +1 | +j | -1 | -j | +1 | +j |
| 1015 | 1 | 2 | +1 | -j | -1 | +j | +1 | +j |
| 1016 | 2 | 4 | +1 | +j | -1 | -j | +1 | +j |
| 1017 | 2 | 4 | +1 | -j | -1 | +j | +1 | +j |
| 1018 | 0 | 0 | +1 | +j | -1 | -j | +1 | -j |
| 1019 | 0 | 0 | +1 | -j | -1 | +j | +1 | -j |
| 1020 | 1 | 2 | +1 | +j | -1 | -j | +1 | -j |
| 1021 | 1 | 2 | +1 | -j | -1 | +j | +1 | -j |
| 1022 | 2 | 4 | +1 | +j | -1 | -j | +1 | -j |
| 1023 | 2 | 4 | +1 | -j | -1 | +j | +1 | -j |

In addition, in embodiments of this application, the M ports are ports allocated by the network device to the terminal device. M is a positive integer greater than or equal to 1. Correspondingly, that "the M ports belong to the first port set and/or the second port set" may be understood as that the ports allocated by the network device to the terminal device belong to the first port set, or the ports allocated by the network device to the terminal device belong to the second port set, or the ports allocated by the network device to the terminal device belong to the first port set and the second port set. Optionally, when the M ports belong to the first port set and the second port set, the cover code length corresponding to the first port set is different from the cover code length corresponding to the second port set. For example, the cover code length corresponding to the first port set is 4-length, and the cover code length corresponding to the second port set is 2-length. For another example, the cover code length corresponding to the first port set is 6-length, and the cover code length corresponding to the second port set is 4-length.

In the solution provided in embodiments of this application, the network device sends the first indication information to the terminal device, where the first indication information indicates the cover code length corresponding to the first port in the M ports, the M ports belong to the first port set and/or the second port set, the cover code length corresponding to the first port set is the first length, and the cover code length corresponding to the second port set is the second length. In this way, the terminal device may know the cover code length corresponding to the first port, so that the terminal device flexibly selects a port to perform channel estimation, to achieve good channel estimation effect. For example, when fewer than four ports are used in one CDM, the terminal device selects a port whose cover code length is 2-length to perform channel estimation, so that good channel estimation effect can be achieved. In addition, in the solution of this application, the M ports that can be flexibly indicated by the network device to the terminal device may belong to a legacy port set and/or an added port set, and a port in the added port set may reuse a time-frequency resource and a sequence corresponding to a port in the legacy port set. Therefore, the network device can flexibly indicate, to the terminal device, ports paired from different port sets, so that the terminal device can achieve a channel estimation capability, and a number of combined ports can be maximized.

In this embodiment of this application, that the network device indicates, to the terminal device by using the first indication information, the cover code length corresponding to the first port in the M ports includes but is not limited to the following implementations.

Implementation 1: The first indication information includes a first bit field, and that the first indication information indicates the cover code length corresponding to the first port in the M ports includes: The first bit field indicates the cover code length corresponding to the first port.

In a possible implementation, the first bit field includes one first bit, and the first bit indicates the cover code length corresponding to the first port. For example, four ports are used as an example of the M ports, and cover code lengths of two of the four ports need to be indicated. In this case, the first bit may indicate the cover code lengths corresponding to the two ports. In this way, only one bit is required to indicate a cover code length corresponding to at least one first port, so that communication overheads are reduced.

In another possible implementation, the first bit field includes one first bit, and the first bit indicates cover code lengths corresponding to the M ports.

In another possible implementation, the first bit field includes a bitmap, and the bitmap indicates the cover code length corresponding to the first port. Further, in a possible implementation, the bitmap includes N bits, N is greater than or equal to M, an i^{th} bit in the N bits indicates a first cover code length corresponding to an i^{th} port in the M ports, and i∈{1, M}. Optionally, the N bits include M bits, there are at least two bits with different values in the M bits, and the M bits are a 1^{st} bit to an M^{th} bit in the N bits.

Further, in Implementation 1, the first indication information may be carried in first signaling, the first signaling further includes second indication information, the second indication information indicates a first value, the first value is associated with a first port index group, the first port index group includes indexes of the M ports, and M is a positive integer greater than or equal to 1. For example, the first signaling may be DCI.

Implementation 2: That the first indication information indicates the cover code length corresponding to the first port in the M ports includes: The first indication information indicates a first value, the first value is associated with a first port index group, the first port index group includes indexes of the M ports, an index of the first port corresponds to a first identifier, and the first identifier indicates the cover code length corresponding to the first port, where M is a positive integer greater than or equal to 1.

Implementation 3: That the first indication information indicates the cover code length corresponding to the first port in the M ports includes: The first indication information indicates a first value, the first value is associated with a first port index group, the first port index group includes indexes of the M ports, and an index of the first port indicates the cover code length corresponding to the first port, where M is a positive integer greater than or equal to 1.

In a possible implementation, when the first value includes a value 1 and/or a value 2, the first port index group includes an index of a third port; and when the first value includes the value 1, a cover code length corresponding to the third port is the first length; or when the first value includes the value 2, a cover code length corresponding to the third port is the second length. In this way, the cover code length of the third port can be dynamically switched. Optionally, the first length is 2, and the second length is 4.

In a possible implementation, when the first value includes a value 3, the first port index group includes indexes of a fourth port and a fifth port, where 4-length frequency domain cover codes corresponding to the fourth port and the fifth port are orthogonal, and 2-length frequency domain cover codes corresponding to the fourth port and the fifth port are not orthogonal. In this way, an R15 port and an R18 port may be paired in one CDM group.

In a possible implementation, when the first value includes a value 4, the first port index group includes indexes of at least one sixth port and at least one seventh port, where a cover code length corresponding to the at least one sixth port is the first length, and a cover code length corresponding to the at least one seventh port is the second length. In this way, different ports in a same first port index group may correspond to different cover code lengths. Optionally, the first length is 2, and the second length is 4. Correspondingly, that the first identifier indicates the cover code length corresponding to the first port includes: The first identifier indicates that the cover code length of the first port is 2-length.

In a possible implementation, the network device obtains a first antenna port set, where the first antenna port set includes at least one port index group set, port indexes included in a first port index group set in the at least one port index group set are different from each other, the first port index group is any port index group in the first port index group set, a total number of port indexes included in the first port index group set is G, G is a positive integer greater than or equal to 1 and less than or equal to K, and K is related to a type of a demodulation reference signal DMRS. For example, the first antenna port set may include the first port index group, a second port index group, and a third port index group. The first port index group includes indexes of a port 0, a port 1, and a port 8, the second port index group includes indexes of a port 2, a port 3, and a port 10, and the third port index group includes indexes of a port 9 and a port 11.

In a possible implementation, K is further associated with a maximum length of the demodulation reference signal. Correspondingly, the method further includes: The network device sends second signaling to the first terminal device, where the second signaling indicates the type of the demodulation reference signal and/or the maximum length of the demodulation reference signal. Further, the first terminal device may further determine the type of the demodulation reference signal and/or the maximum length of the demodulation reference signal by using the second signaling. The maximum length may alternatively be a maximum number of symbols or a number of front-load DMRS symbols.

In a possible implementation, a value of K is any one of 8, 12, 16, or 24. Specifically, when the type of the demodulation reference signal is a first type, and the maximum length of the demodulation reference signal is 1, the value of K is 8; or when the type of the demodulation reference signal is a first type, and the maximum length of the demodulation reference signal is 2, the value of K is 16; or when the type of the demodulation reference signal is a second type, and the maximum length of the demodulation reference signal is 1, the value of K is 12; or when the type of the demodulation reference signal is a second type, and the maximum length of the demodulation reference signal is 2, the value of K is 24.

In a possible implementation, the first port index group belongs to the first antenna port set and a second antenna port set, and the second antenna port set is a subset of the first antenna port set. For example, the first antenna port set may include the first port index group, the second port index group, and the third port index group, and the second antenna port set includes the first port index group and the second port index group. Therefore, the second antenna port set is a subset of the first antenna port set.

In another possible implementation, the first port index group belongs to the first antenna port set and a second antenna port set, but the second antenna port set is not a subset of the first antenna port set. For example, the first antenna port set may include the first port index group, the second port index group, and the third port index group, and the second antenna port set includes a fourth port index group. Therefore, the second antenna port set is not a subset of the first antenna port set.

In another possible implementation, the first port index group belongs to the first antenna port set and a second antenna port set, the second antenna port set includes at least one antenna port subset, and a complementary set of the at least one antenna port subset in the second antenna port set is a subset of the first antenna port set. A port index group included in the at least one antenna port subset is used for MIMO transmission of the first terminal device, and the first terminal device is not paired with another terminal device, or the first terminal device assumes that a port index group included in the second antenna port set is not indicated to another terminal device. For example, the first antenna port set may include the first port index group, the second port index group, and the third port index group, the at least one antenna port subset in the second antenna port set includes the first port index group, the second port index group, and the third port index group, and the second port index group is used for single-user MIMO transmission. Therefore, only the first port index group and the second port index group are subsets of the first antenna port set.

In a possible implementation, the method further includes: The network device receives third indication information from the first terminal device, where the third indication information indicates that the first terminal device supports a first capability, the first capability includes that the first terminal device supports cover code length switching, and the cover code length switching includes switching a cover code length by using the first signaling. The first indication information is carried in the first signaling, and the switching a cover code length by using the first signaling includes switching the cover code length by using the first indication information. That the first terminal device supports cover code length switching may be understood as that the first terminal device supports that a same DMRS port index corresponds to different cover code lengths, and the cover code length may be 2 or 4. For example, when the first port index group includes a port index of a port 0, a cover code length of the port 0 is 2; or when the second port index group includes a port index of a port 0, a cover code length of the port 0 is 4.

In a possible implementation, when any one of the M ports belongs to the second port set, the method further includes: The network device receives fourth indication information from the first terminal device, where the fourth indication information indicates that the first terminal device supports a second capability, the second capability includes that the any one of the M ports occupies a same time-frequency resource as a twelfth port, and the twelfth port belongs to the first port set.

In a possible implementation, the first port set includes an eighth port and a ninth port, and 4-length frequency domain cover codes corresponding to the eighth port and the ninth port are orthogonal.

That the 4-length frequency domain cover codes are orthogonal includes that frequency domain cover codes corresponding to four consecutive subcarriers in one code division multiplexing CDM group are orthogonal. Further, that the 4-length frequency domain cover codes are orthogonal satisfies the following formula: ${W}_{1 , f}^{H} {W}_{2 , f} = 0$${W}_{1 , f} = \left[\begin{matrix}{W}_{1 , 1} \\ {W}_{1 , 2} \\ {W}_{1 , 3} \\ {W}_{1 , 4}\end{matrix}\right]$represents a first frequency domain cover code of the eighth port, ${W}_{2 , f} = \left[\begin{matrix}{W}_{2 , 1} \\ {W}_{2 , 2} \\ {W}_{2 , 3} \\ {W}_{2 , 4}\end{matrix}\right]$represents a second frequency domain cover code of the ninth port, and *f* represents a frequency domain position.

In a possible implementation, the second port set includes a tenth port and an eleventh port, and 2-length frequency domain cover codes corresponding to the tenth port and the eleventh port are orthogonal. That the 2-length frequency domain cover codes are orthogonal includes that frequency domain cover codes corresponding to two consecutive subcarriers in one CDM group are orthogonal. Further, that the 2-length frequency domain cover codes are orthogonal satisfies the following formula: ${W}_{1 , f}^{H} {W}_{2 , f} = 0$${W}_{1 , f} = \left[\begin{matrix}{W}_{1 , 1} \\ {W}_{1 , 2}\end{matrix}\right]$ represents a first frequency domain cover code corresponding to the tenth port, ${W}_{2 , f} = \left[\begin{matrix}{W}_{2 , 1} \\ {W}_{2 , 2}\end{matrix}\right]$ represents a second frequency domain cover code corresponding to the eleventh port, and *f* represents a frequency domain position.

In another possible implementation, the first port set includes an eighth port and a ninth port, and 6-length frequency domain cover codes corresponding to the eighth port and the ninth port are orthogonal. That the 6-length frequency domain cover codes are orthogonal includes that frequency domain cover codes corresponding to six consecutive subcarriers in one code division multiplexing CDM group are orthogonal. Further, that the 6-length frequency domain cover codes are orthogonal satisfies the following formula: ${W}_{1 , f}^{H} {W}_{2 , f} = 0$ ${W}_{1 , f} = \left[\begin{matrix}{W}_{1 , 1} \\ {W}_{1 , 2} \\ {W}_{1 , 3} \\ {W}_{1 , 4} \\ {W}_{1 , 5} \\ {W}_{1 , 6}\end{matrix}\right]$ represents a first frequency domain cover code corresponding to the eighth port, ${W}_{2 , f} = \left[\begin{matrix}{W}_{2,1} \\ {W}_{2,2} \\ {W}_{2,3} \\ {W}_{2,4} \\ {W}_{2,5} \\ {W}_{2,6}\end{matrix}\right]$ represents a second frequency domain cover code corresponding to the ninth port, and *f* represents a frequency domain position.

According to a second aspect, a communication method is further provided. The method may be applied to a terminal device or a component (for example, a processor, a chip, or a chip system) of the terminal device. For example, the method is applied to a first terminal device. The method includes: The first terminal device receives first indication information from a network device, where the first indication information indicates a cover code length corresponding to a first port in M ports, the M ports belong to a first port set and/or a second port set, a first cover code length corresponding to the first port set is a first length, and a first cover code length corresponding to the second port set is a second length.

In another possible implementation, the method further includes: The first terminal device sends third indication information to the network device, where the third indication information indicates that the first terminal device supports a first capability, the first capability includes that the first terminal device supports cover code length switching, and the cover code length switching includes switching a cover code length by using first signaling. The first indication information is carried in the first signaling, and the switching a cover code length by using first signaling includes switching the cover code length by using the first indication information.

In another possible implementation, when any one of the M ports belongs to the second port set, the method further includes: The network device receives fourth indication information from the first terminal device, where the fourth indication information indicates that the first terminal device supports a second capability, the second capability includes that the any one of the M ports occupies a same time-frequency resource as a twelfth port, and the twelfth port belongs to the first port set.

It should be noted that for technical effects achieved by any possible implementation of the second aspect and related detailed descriptions, correspondingly refer to the related descriptions in the first aspect. Details are not described herein again.

According to a third aspect, an embodiment of this application provides another communication method. The method may be applied to a network device or a component (for example, a processor, a chip, or a chip system) of the network device. For example, the method is applied to the network device. The method includes: The network device sends first signaling to a first terminal device, where the first signaling indicates a port index of a first port in M ports and indicates allocation status information of a second port, and the second port and the first port belong to a same code division multiplexing CDM group.

In embodiments of this application, the allocation status information of the second port may be understood as whether the second port is scheduled to another terminal.

In embodiments of this application, the M ports belong to a first port set and/or a second port set, a cover code length corresponding to the first port set is a first length, and a cover code length corresponding to the second port set is a second length.

In embodiments of this application, the first port set may be understood as a set of added ports, that is, R18 ports, and the second port set may be understood as a set of legacy ports, that is, R15 ports. In addition, the "cover code length" may include a first cover code length and a second cover code length. In embodiments of this application, a second cover code length corresponding to the first port set is the same as a second cover code length corresponding to the second port set. In a possible implementation, when the cover code length is the first cover code length, the cover code length is 4-length or 2-length.

A first cover code is a frequency domain cover code, and a second cover code is a time domain cover code. The frequency domain cover code is W_{f}(f) in a first time-frequency resource mapping rule, the time domain cover code is *w*ₜ(*l*') in the first time-frequency resource mapping rule, and the first time-frequency resource mapping rule satisfies the following formula: ${a}_{k , l}^{\left(p, μ\right)} = {β}_{PDSCH}^{DMRS} {w}_{f} \left(2⋅\left(n mod 2\right)+k′\right) {w}_{t} \left(l′\right) r \left(2n+k′\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} + l ′$ $n = 0 , 1 , …$

*p* is a port index value, *µ* is a subcarrier spacing parameter, ${a}_{k , l}^{\left(p, μ\right)}$ is a demodulation reference signal DMRS that corresponds to a demodulation reference signal DMRS port *p* and that is mapped to a resource element RE whose index is (*k,l*)*_{p,µ}*(k,l), ${β}_{PDSCH}^{DMRS}$ is a power coefficient, *w*ₜ(*l*') is a time domain cover code corresponding to a time domain symbol whose index is *l*', W_{f}(f) is a frequency domain cover code corresponding to a subcarrier whose index is *k',* f = 2 · *(n mod* 2) *+ k',* m = *2n + k', m* is an *m*^{th} element in a reference signal sequence, *l* represents an index of an orthogonal frequency division multiplexing OFDM symbol included in a slot, *l̅* is a symbol index of a start time domain symbol occupied by the DMRS symbol or a symbol index of a reference time domain symbol, and Δ is a subcarrier offset factor.

In a possible implementation, the first signaling includes the first indication information, and the first indication information indicates the allocation status information of the second port. Optionally, the first indication information further indicates the port index of the first port.

In embodiments of this application, an allocation status of the second port includes that the second port is allocated or the second port is not allocated.

Correspondingly, in a possible implementation, that the first indication information indicates the allocation status information of the second port includes: The first indication information indicates that the second port is allocated to a second terminal device, or the first indication information indicates that the second port is not allocated to a second terminal device.

In embodiments of this application, that the first indication information indicates the allocation status information of the second port includes but is not limited to the following implementations.

Implementation 1: The first indication information includes a first bit field, and that the first indication information indicates the allocation status information of the second port includes: The first bit field indicates the allocation status information of the second port.

In a possible implementation, the first bit field includes one first bit, and the first bit indicates the allocation status information of the second port.

In another possible implementation, the first bit field includes one first bit, and the first bit indicates allocation status information of second ports corresponding to the M ports.

In another possible implementation, the first bit field includes a bitmap, and that the first indication information indicates the allocation status information of the second port includes: The bitmap indicates the allocation status information of the second port. Further, in a possible implementation, the bitmap includes N bits, N is greater than M, an i^{th} bit in the N bits indicates allocation status information of a second port corresponding to an i^{th} port in the M ports, and i∈{1, M}. The N bits include M bits, there are at least two bits with different values in the M bits, and the M bits are a 1^{st} bit to an M^{th} bit in the N bits.

In Implementation 1, in a possible implementation, the first signaling further includes second indication information, the second indication information indicates a first value, the first value is associated with a first port index group, and the first port index group includes indexes of the M ports.

Implementation 2: That the first indication information indicates the allocation status information of the second port includes: The first indication information indicates a first value, the first value is associated with a first port index group, the first port index group includes the index of the first port, the index of the first port corresponds to a first identifier, and the first identifier indicates the allocation status information of the second port.

In a possible implementation, that the first identifier indicates the allocation status information of the second port includes: The first identifier indicates that 2-length non-orthogonal cover codes in 4-length orthogonal cover codes corresponding to the second port are allocated to the second terminal device, or the first identifier indicates that 2-length non-orthogonal cover codes in 4-length orthogonal cover codes corresponding to the second port are not allocated to the second terminal device.

In a possible implementation, when the first value includes a value 1 and/or a value 2, the first port index group includes an index of a third port; and when the first value includes the value 1, a cover code length corresponding to the third port is the first length; or when the first value includes the value 2, a cover code length corresponding to the third port is the second length. In this way, the cover code length of the third port can be dynamically switched. Optionally, the first length is 2, and the second length is 4.

In a possible implementation, when the first value includes a value 3, the first port index group includes indexes of a fourth port and a fifth port, where 4-length frequency domain cover codes corresponding to the fourth port and the fifth port are orthogonal, and 2-length frequency domain cover codes corresponding to the fourth port and the fifth port are not orthogonal. In this way, an R15 port and an R18 port may be paired in one CDM group.

In a possible implementation, when the first value includes a value 4, the first port index group includes indexes of the first port, a sixth port, and a seventh port, where a cover code length corresponding to the first port is the first length, and cover code lengths corresponding to the sixth port and the seventh port are the second length. In this way, different ports in a same first port index group may correspond to different cover code lengths. Optionally, the first length is 2, and the second length is 4. Correspondingly, that the first identifier indicates the cover code length corresponding to the first port includes: The first identifier indicates that the cover code length of the first port is 2-length.

In a possible implementation, the network device obtains a first antenna port set, where the first antenna port set includes at least one port index group set, port indexes included in a first port index group set in the at least one port index group set are different from each other, the first port index group is any port index group in the first port index group set, a total number of port indexes included in the first port index group set is G, G is a positive integer greater than or equal to 1 and less than or equal to K, and K is related to a type of a demodulation reference signal DMRS. For example, the first antenna port set may include the first port index group, a second port index group, and a third port index group. The first port index group includes indexes of a port 0, a port 1, and a port 8, the second port index group includes indexes of a port 2, a port 3, and a port 10, and the third port index group includes indexes of a port 9 and a port 11.

In a possible implementation, K is further associated with a maximum length of the demodulation reference signal. Correspondingly, the method further includes: The network device sends second signaling to the first terminal device, where the second signaling indicates the type of the demodulation reference signal and/or the maximum length of the demodulation reference signal. Further, the first terminal device may further determine the type of the demodulation reference signal and/or the maximum length of the demodulation reference signal by using the second signaling.

In a possible implementation, a value of K is any one of 8, 12, 16, or 24. Specifically, when the type of the demodulation reference signal is a first type, and the maximum length of the demodulation reference signal is 1, the value of K is 8; or when the type of the demodulation reference signal is a first type, and the maximum length of the demodulation reference signal is 2, the value of K is 16; or when the type of the demodulation reference signal is a second type, and the maximum length of the demodulation reference signal is 1, the value of K is 12; or when the type of the demodulation reference signal is a second type, and the maximum length of the demodulation reference signal is 2, the value of K is 24.

In a possible implementation, the first port index group belongs to the first antenna port set and a second antenna port set, and the second antenna port set is a subset of the first antenna port set. For example, the first antenna port set may include the first port index group, the second port index group, and the third port index group, and the second antenna port set includes the first port index group and the second port index group. Therefore, the second antenna port set is a subset of the first antenna port set.

In another possible implementation, the first port index group belongs to the first antenna port set and a second antenna port set, but the second antenna port set is not a subset of the first antenna port set. For example, the first antenna port set may include the first port index group, the second port index group, and the third port index group, and the second antenna port set includes a fourth port index group. Therefore, the second antenna port set is not a subset of the first antenna port set.

In another possible implementation, the first port index group belongs to the first antenna port set and a second antenna port set, the second antenna port set includes at least one antenna port subset, and a complementary set of the at least one antenna port subset in the second antenna port set is a subset of the first antenna port set. A port index group included in the at least one antenna port subset is used for MIMO transmission of the first terminal device, and the first terminal device is not paired with another terminal device, or the first terminal device assumes that a port index group included in the second antenna port set is not indicated to another terminal device. For example, the first antenna port set may include the first port index group, the second port index group, and the third port index group, the at least one antenna port subset in the second antenna port set includes the first port index group, the second port index group, and the third port index group, and the second port index group is used for single-user MIMO transmission. Therefore, only the first port index group and the second port index group are subsets of the first antenna port set.

In a possible implementation, the method further includes: The network device receives third indication information from the first terminal device, where the third indication information indicates that the first terminal device supports a first capability, the first capability includes that the first terminal device supports cover code length switching, and the cover code length switching includes switching a cover code length by using the first signaling. The first indication information is carried in the first signaling, and the switching a cover code length by using the first signaling includes switching the cover code length by using the first indication information. That the first terminal device supports cover code length switching may be understood as that the first terminal device supports that a same DMRS port index corresponds to different cover code lengths, and the cover code length may be 2 or 4. For example, when the first port index group includes a port index of a port 0, a cover code length of the port 0 is 2; or when the second port index group includes a port index of a port 0, a cover code length of the port 0 is 4.

In a possible implementation, when any one of the M ports belongs to the second port set, the method further includes: The network device receives fourth indication information from the first terminal device, where the fourth indication information indicates that the first terminal device supports a second capability, the second capability includes that the any one of the M ports occupies a same time-frequency resource as a twelfth port, and the twelfth port belongs to the first port set.

In a possible implementation, the first port set includes an eighth port and a ninth port, and 4-length frequency domain cover codes corresponding to the eighth port and the ninth port are orthogonal.

That the 4-length frequency domain cover codes are orthogonal includes that frequency domain cover codes corresponding to four consecutive subcarriers in one code division multiplexing CDM group are orthogonal. Further, that the 4-length frequency domain cover codes are orthogonal satisfies the following formula: ${W}_{1 , f}^{H} {W}_{2 , f} = 0$${W}_{1 , f} = \left[\begin{matrix}{W}_{1 , 1} \\ {W}_{1 , 2} \\ {W}_{1 , 3} \\ {W}_{1 , 4}\end{matrix}\right]$ represents a first frequency domain cover code of the eighth port, ${W}_{2 , f} = \left[\begin{matrix}{W}_{2 , 1} \\ {W}_{2 , 2} \\ {W}_{2 , 3} \\ {W}_{2 , 4}\end{matrix}\right]$ represents a second frequency domain cover code of the ninth port, and *f* represents a frequency domain position.

In a possible implementation, the second port set includes a tenth port and an eleventh port, and 2-length frequency domain cover codes corresponding to the tenth port and the eleventh port are orthogonal. That the 2-length frequency domain cover codes are orthogonal includes that frequency domain cover codes corresponding to two consecutive subcarriers in one CDM group are orthogonal. Further, that the 2-length frequency domain cover codes are orthogonal satisfies the following formula: ${W}_{1 , f}^{H} {W}_{2 , f} = 0$${W}_{1 , f} = \left[\begin{matrix}{W}_{1 , 1} \\ {W}_{1 , 2}\end{matrix}\right]$ represents a first frequency domain cover code corresponding to the tenth port, ${W}_{2 , f} = \left[\begin{matrix}{W}_{2 , 1} \\ {W}_{2 , 2}\end{matrix}\right]$ represents a second frequency domain cover code corresponding to the eleventh port, and *f* represents a frequency domain position.

In another possible implementation, the first port set includes an eighth port and a ninth port, and 6-length frequency domain cover codes corresponding to the eighth port and the ninth port are orthogonal. That the 6-length frequency domain cover codes are orthogonal includes that frequency domain cover codes corresponding to six consecutive subcarriers in one code division multiplexing CDM group are orthogonal. Further, that the 6-length frequency domain cover codes are orthogonal satisfies the following formula: ${W}_{1 , f}^{H} {W}_{2 , f} = 0$${W}_{1 , f} = \left[\begin{matrix}{W}_{1 , 1} \\ {W}_{1 , 2} \\ {W}_{1 , 3} \\ {W}_{1 , 4} \\ {W}_{1 , 5} \\ {W}_{1 , 6}\end{matrix}\right]$ represents a first frequency domain cover code corresponding to the eighth port, ${W}_{2 , f} = \left[\begin{matrix}{W}_{2 , 1} \\ {W}_{2 , 2} \\ {W}_{2 , 3} \\ {W}_{2 , 4} \\ {W}_{2 , 5} \\ {W}_{2 , 6}\end{matrix}\right]$ represents a second frequency domain cover code corresponding to the ninth port, and f represents a frequency domain position.

According to a fourth aspect, another communication method is further provided. The method may be applied to a first terminal device or a component (for example, a processor, a chip, or a chip system) of the first terminal device. For example, the method is applied to the terminal device. The method includes: The first terminal device receives first signaling from a network device, where the first signaling indicates a port index of a first port in M ports and indicates allocation status information of a second port, and the second port and the first port belong to a same code division multiplexing CDM group.

In a possible implementation, the method further includes: The first terminal device sends third indication information to the network device, where the third indication information indicates that the first terminal device supports a first capability, the first capability includes that the first terminal device supports cover code length switching, and the cover code length switching includes switching a cover code length by using first signaling. The first indication information is carried in the first signaling, and the switching a cover code length by using first signaling includes switching the cover code length by using the first indication information.

In a possible implementation, when any one of the M ports belongs to a second port set, the method further includes: A second capability includes that the any one of the M ports occupies a same time-frequency resource as a twelfth port, and the twelfth port belongs to a first port set.

It should be noted that for technical effects achieved by any possible implementation of the fourth aspect and detailed descriptions, correspondingly refer to the technical effects achieved by the possible implementations of the third aspect and the related descriptions. Details are not described herein again.

According to a fifth aspect, an embodiment of this application provides an antenna port indication method. The method may be applied to a network device or a component (for example, a processor, a chip, or a chip system) of the network device. For example, the method is applied to the network device. The method includes: The network device obtains an antenna port set, where the antenna port set includes at least one port index group set, port indexes included in a first port index group set in the at least one port index group set are different from each other, the first port index group set includes at least one port index group, the at least one port index group includes M port indexes, M is a positive integer greater than or equal to 1, a total number of port indexes included in the first port index group set is G, G is a positive integer greater than or equal to 1 and less than or equal to K, and K is related to a type of a demodulation reference signal DMRS; and the network device sends first indication information to a first terminal device, where the first indication information indicates a first port index group.

In a possible implementation, the at least one port index group set includes K port index group sets, a total number G of port indexes included in an i^{th} port index group set in the K port index group sets is in a one-to-one correspondence with a positive integer greater than or equal to 1 and less than or equal to K, and i∈[1, K].

In a possible implementation, K is further associated with a maximum length of the demodulation reference signal. Correspondingly, the method further includes: The network device sends second signaling to the first terminal device, where the second signaling indicates the type of the demodulation reference signal and/or the maximum length of the demodulation reference signal. Further, the first terminal device may further determine the type of the demodulation reference signal and/or the maximum length of the demodulation reference signal by using the second signaling.

In a possible implementation, a value of K is any one of 8, 12, 16, or 24. Specifically, when the type of the demodulation reference signal is a first type, and the maximum length of the demodulation reference signal is 1, the value of K is 8; or when the type of the demodulation reference signal is a first type, and the maximum length of the demodulation reference signal is 2, the value of K is 16; or when the type of the demodulation reference signal is a second type, and the maximum length of the demodulation reference signal is 1, the value of K is 12; or when the type of the demodulation reference signal is a second type, and the maximum length of the demodulation reference signal is 2, the value of K is 24.

In a possible implementation, the first port index group set includes the first port index group, a second port index group, and a third port index group, the first port index group includes three port indexes, the second port index group includes three port indexes, and the third port index group includes two port indexes. The first port index group may be understood as a port index group indicated by the network device to the first terminal device, the second port index group may be understood as a port index group indicated by the network device to a second terminal device, and the third port index group may be understood as a port index group indicated by the network device to a third terminal device. In this way, the network device may indicate three streams to the first terminal device, indicate three streams to the second terminal device, and indicate two streams to the third terminal device. For example, when the type of the demodulation reference signal is the first type, and the maximum length of the demodulation reference signal is 1, the first port index group includes indexes of a port 0, a port 1, and a port 8, the second port index group includes indexes of a port 2, a port 3, and a port 10, and the third port index group includes indexes of a port 9 and a port 11.

In another possible implementation, the first port index group set includes the first port index group, a second port index group, a third port index group, and a fourth port index group, the first port index group includes three port indexes, the second port index group includes three port indexes, the third port index group includes three port indexes, and the fourth port index group includes four port indexes. The first port index group may be understood as a port index group indicated by the network device to the first terminal device, the second port index group may be understood as a port index group indicated by the network device to a second terminal device, the third port index group may be understood as a port index group indicated by the network device to a third terminal device, and the fourth port index group may be understood as a port index group indicated by the network device to a fourth terminal device. In this way, the network device may indicate three streams to the first terminal device, indicate three streams to the second terminal device, indicate three streams to the third terminal device, and indicate four streams to the fourth terminal device. For example, when the type of the demodulation reference signal is the first type, and the maximum length of the demodulation reference signal is 2, the first port index group includes indexes of a port 7, a port 12, and a port 13, the second port index group includes indexes of a port 0, a port 1, and a port 4, the third port index group includes indexes of a port 2, a port 3, and a port 6, and the fourth port index group includes indexes of a port 10, a port 11, a port 14, and a port 15.

In another possible implementation, the first port index group set includes the first port index group, a second port index group, a third port index group, and a fourth port index group, the first port index group includes three port indexes, the second port index group includes three port indexes, the third port index group includes three port indexes, and the fourth port index group includes three port indexes. The first port index group may be understood as a port index group indicated by the network device to the first terminal device, the second port index group may be understood as a port index group indicated by the network device to a second terminal device, the third port index group may be understood as a port index group indicated by the network device to a third terminal device, and the fourth port index group may be understood as a port index group indicated by the network device to a fourth terminal device. In this way, the network device may indicate three streams to the first terminal device, indicate three streams to the second terminal device, indicate three streams to the third terminal device, and indicate three streams to the fourth terminal device. For example, when the type of the demodulation reference signal is the second type, and the maximum length of the demodulation reference signal is 1, the first port index group includes indexes of a port 13, a port 15, and a port 17, the second port index group includes indexes of a port 0, a port 1, and a port 12, the third port index group includes indexes of a port 4, a port 5, and a port 16, and the fourth port index group includes indexes of a port 2, a port 3, and a port 14.

In another possible implementation, the first port index group set includes the first port index group, a second port index group, a third port index group, a fourth port index group, a fifth port index group, a sixth port index group, a seventh port index group, and an eighth port index group, the first port index group includes three port indexes, the second port index group includes three port indexes, the third port index group includes three port indexes, the fourth port index group includes three port indexes, the fifth port index group includes three port indexes, the sixth port index group includes three port indexes, the seventh port index group includes three port indexes, and the eighth port index group includes three port indexes. The first port index group may be understood as a port index group indicated by the network device to the first terminal device, the second port index group may be understood as a port index group indicated by the network device to a second terminal device, the third port index group may be understood as a port index group indicated by the network device to a third terminal device, the fourth port index group may be understood as a port index group indicated by the network device to a fourth terminal device, the fifth port index group may be understood as a port index group indicated by the network device to a fifth terminal device, the sixth port index group may be understood as a port index group indicated by the network device to a sixth terminal device, the seventh port index group may be understood as a port index group indicated by the network device to a seventh terminal device, and the eighth port index group may be understood as a port index group indicated by the network device to an eighth terminal device. In this way, the network device may indicate three streams to the first terminal device, indicate three streams to the second terminal device, indicate three streams to the third terminal device, indicate three streams to the fourth terminal device, indicate three streams to the fifth terminal device, indicate three streams to the sixth terminal device, indicate three streams to the seventh terminal device, and indicate three streams to the eighth terminal device. For example, when the type of the demodulation reference signal is the second type, and the maximum length of the demodulation reference signal is 2, the first port index group includes indexes of a port 18, a port 19, and a port 20, the second port index group includes indexes of a port 21, a port 22, and a port 23, the third port index group includes indexes of a port 7, a port 12, and a port 13, the fourth port index group includes indexes of a port 9, a port 14, and a port 15, the fifth port index group includes indexes of a port 11, a port 16, and a port 17, the sixth port index group includes indexes of a port 2, a port 3, and a port 8, the seventh port index group includes indexes of a port 0, a port 1, and a port 6, and the eighth port index group includes indexes of a port 4, a port 5, and a port 10.

In a possible implementation, that the first indication information indicates the first port index group includes: The first indication information indicates a first value, and the first value is associated with the first port index group.

In a possible implementation, when the first value includes a value 1 and/or a value 2, the first port index group includes an index of a first port; and when the first value includes the value 1, a cover code length corresponding to the first port is a first length; or when the first value includes the value 2, a cover code length corresponding to the first port is a second length. Optionally, the first length is 2, and the second length is 4.

In a possible implementation, when the first value includes a value 3, the first port index group includes indexes of a second port and a third port, where 4-length frequency domain cover codes corresponding to the second port and the third port are orthogonal, and 2-length frequency domain cover codes corresponding to the second port and the third port are not orthogonal. The second port and the third port are in a same CDM group.

In a possible implementation, when the first value includes a value 4, the first port index group includes indexes of at least one fourth port and at least one fifth port, where a cover code length corresponding to the at least one fourth port is the first length, and a cover code length corresponding to the at least one fifth port is the second length. Optionally, the first length is 2, and the second length is 4.

Correspondingly, in a possible implementation, the index of the fourth port corresponds to a first identifier, and the first identifier indicates that the cover code length of the fourth port is 2-length.

In a possible implementation, the first port index group includes at least one first port, the at least one first port belongs to a first port set, and a first cover code length corresponding to a port in the first port set is 4. Correspondingly, the first cover code is W_{f}(f), and a time-frequency resource mapping formula corresponding to the first port set is as follows: ${a}_{k , l}^{\left(p, μ\right)} = {β}_{PDSCH}^{DMRS} {w}_{f} \left(2⋅\left(n mod 2\right)+k′\right) {w}_{t} \left(l′\right) r \left(2n+k′\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} + l ′$ $n = 0 , 1 , …$

*p* is a port index value, *µ* is a subcarrier spacing parameter, ${a}_{k , l}^{\left(p, μ\right)}$ is a demodulation reference signal DMRS that corresponds to a demodulation reference signal DMRS port *p* and that is mapped to a resource element RE whose index is (*k,l*)*_{p,µ}*(k,l), ${β}_{PDSCH}^{DMRS}$ is a power coefficient, *w*ₜ(*l'*) is a time domain cover code corresponding to a time domain symbol whose index is *l*', W_{f}(f) is a frequency domain cover code corresponding to a subcarrier whose index is *k',* f = 2 · *(n mod* 2) *+ k', m* = *2n + k', m* is an *m*^{th} element in a reference signal sequence, *l* represents an index of an orthogonal frequency division multiplexing OFDM symbol included in a slot, *l̅* is a symbol index of a start time domain symbol occupied by the DMRS symbol or a symbol index of a reference time domain symbol, and Δ is a subcarrier offset factor.

In a possible implementation, the first port index group further includes at least one second port, the at least one second port belongs to a second port set, and a first cover code length corresponding to a port in the second port set is 2. Correspondingly,
the first cover code is *w*_{f}(*k'*)*,* and a time-frequency resource mapping formula corresponding to the second port set is as follows: ${a}_{k , l}^{\left(p, μ\right)} = {β}_{PDSCH}^{DMRS} {w}_{f} \left(k′\right) {w}_{t} \left(l′\right) r \left(2n+k′\right)$ $k = \left\{\begin{matrix}4 n + 2 k ′ + Δ & Type 1 \\ 6 n + k ′ + Δ & Type 2\end{matrix}\right. ;$ $k ′ = 0 , 1 ;$ $l = \overline{l} + l ′ ;$ $n = 0 , 1 , … ;$ $l ′ = 0 , 1 ;$

*p* is a port index value, *µ* is a subcarrier spacing parameter, ${a}_{k , l}^{\left(p, μ\right)}$ is a demodulation reference signal DMRS symbol that corresponds to a demodulation reference signal DMRS port *p* and that is mapped to a resource element RE whose index is (*k,l*)*_{p,µ},* ${β}_{PDSCH}^{DMRS}$ is a power scaling factor or a power control factor, *w*ₜ(*l*') is a time domain cover code sequence element corresponding to a time domain symbol whose index is *l*', *w*_{f}(*k*') is a frequency domain cover code sequence element corresponding to a subcarrier whose index is *k', m* = *2n + k', m* is an *m*^{th} element in a reference signal sequence, *l* represents an index of an orthogonal frequency division multiplexing OFDM symbol included in a slot, *l̅* is a symbol index of a start time domain symbol occupied by the DMRS symbol or a symbol index of a reference time domain symbol, and Δ is a subcarrier offset factor.

According to a sixth aspect, an embodiment of this application further provides an antenna port indication method. The method may be applied to a first terminal device or a component (for example, a processor, a chip, or a chip system) of the first terminal device. For example, the method is applied to the first terminal device. The method includes: The first terminal device receives first indication information from a network device, where the first indication information indicates a first port index group, the first port index group includes M port indexes, M is a positive integer greater than or equal to 1, the first port index group is one port index group in a first port index group set, the first port index group set is one port index group set in an antenna port set, the antenna port set includes at least one port index group set, port indexes included in the first port index group set are different from each other, the first port index group set includes at least one port index group, a total number of port indexes included in the first port index group set is G, G is a positive integer greater than or equal to 1 and less than or equal to K, and K is related to a type of a demodulation reference signal DMRS.

It should be noted that for technical effects achieved by any possible implementation of the sixth aspect and detailed descriptions, correspondingly refer to the technical effects achieved by the possible implementations of the fifth aspect and the related descriptions. Details are not described herein again.

According to a seventh aspect, an embodiment of this application further provides an antenna port indication method. The method may be applied to a network device or a component (for example, a processor, a chip, or a chip system) of the network device. For example, the method is applied to the network device. The method includes: obtaining an antenna port set, where the antenna port set includes at least one port index group, the one port index group includes M port indexes, M is a positive integer greater than or equal to 1, a number of port indexes that are different from each other and that are included in the antenna port set is K, K is related to a type of a demodulation reference signal DMRS, and K is a positive integer greater than or equal to 1; and sending first indication information, where the first indication information indicates a first port index group, and the antenna port set includes the first port index group.

In a possible design, a value of K is any one of 8, 12, 16, or 24.

In a possible design, K is further related to a maximum length of the demodulation reference signal; and
when the type of the demodulation reference signal is a first type, and the maximum length of the demodulation reference signal is 1, the value of K is 8; or
when the type of the demodulation reference signal is a first type, and the maximum length of the demodulation reference signal is 2, the value of K is 16; or
when the type of the demodulation reference signal is a second type, and the maximum length of the demodulation reference signal is 1, the value of K is 12; or
when the type of the demodulation reference signal is a second type, and the maximum length of the demodulation reference signal is 2, the value of K is 24.

In a possible design, the type of the demodulation reference signal is the first type, the maximum length of the demodulation reference signal is 1, and a value of M corresponding to the port index group included in the antenna port set is one of 1 to 8.

In a possible design, the value of M of the at least one port index group in the antenna port set is 1, and the at least one port index group includes the first port index group, a second port index group, a third port index group, a fourth port index group, a fifth port index group, a sixth port index group, a seventh port index group, an eighth port index group, a ninth port index group, a tenth port index group, an eleventh port index group, and a twelfth port index group; the first port index group includes a port 0, and a number of DMRS CDM groups without data that correspond to the first port index group is 1; the second port index group includes a port 1, and a number of DMRS CDM groups without data that correspond to the second port index group is 1; the third port index group includes a port 0, and a number of DMRS CDM groups without data that correspond to the third port index group is 2; the fourth port index group includes a port 1, and a number of DMRS CDM groups without data that correspond to the fourth port index group is 2; the fifth port index group includes a port 2, and a number of DMRS CDM groups without data that correspond to the fifth port index group is 2; the sixth port index group includes a port 3, and a number of DMRS CDM groups without data that correspond to the sixth port index group is 2; the seventh port index group includes a port 8, and a number of DMRS CDM groups without data that correspond to the seventh port index group is 1; the eighth port index group includes a port 9, and a number of DMRS CDM groups without data that correspond to the eighth port index group is 1; the ninth port index group includes a port 8, and a number of DMRS CDM groups without data that correspond to the ninth port index group is 2; the tenth port index group includes a port 9, and a number of DMRS CDM groups without data that correspond to the tenth port index group is 2; the eleventh port index group includes a port 10, and a number of DMRS CDM groups without data that correspond to the eleventh port index group is 1; and the twelfth port index group includes a port 11, and a number of DMRS CDM groups without data that correspond to the twelfth port index group is 1.

In a possible design, the value of M of the at least one port index group in the antenna port set is 2, and the at least one port index group includes the first port index group, a second port index group, a third port index group, a fourth port index group, a fifth port index group, a sixth port index group, a seventh port index group, and an eighth port index group; the first port index group includes a port 0 and a port 1, and a number of DMRS CDM groups without data that correspond to the first port index group is 1; the second port index group includes a port 0 and a port 1, and a number of DMRS CDM groups without data that correspond to the second port index group is 2; the third port index group includes a port 2 and a port 3, and a number of DMRS CDM groups without data that correspond to the third port index group is 2; the fourth port index group includes a port 0 and a port 2, and a number of DMRS CDM groups without data that correspond to the fourth port index group is 2; the fifth port index group includes a port 8 and a port 9, and a number of DMRS CDM groups without data that correspond to the fifth port index group is 1; the sixth port index group includes a port 8 and a port 9, and a number of DMRS CDM groups without data that correspond to the sixth port index group is 2; the seventh port index group includes a port 10 and a port 11, and a number of DMRS CDM groups without data that correspond to the seventh port index group is 2; and the eighth port index group includes a port 9 and a port 11, and a number of DMRS CDM groups without data that correspond to the eighth port index group is 2.

In a possible design, the value of M of the at least one port index group in the antenna port set is 3, and the at least one port index group includes the first port index group, a second port index group, a third port index group, and a fourth port index group; the first port index group includes a port 0, a port 1, and a port 2, and a number of DMRS CDM groups without data that correspond to the first port index group is 2; the second port index group includes a port 0, a port 1, and a port 8, and a number of DMRS CDM groups without data that correspond to the second port index group is 1; the third port index group includes a port 0, a port 1, and a port 8, and a number of DMRS CDM groups without data that correspond to the third port index group is 2; and the fourth port index group includes a port 2, a port 3, and a port 10, and a number of DMRS CDM groups without data that correspond to the fourth port index group is 2.

In a possible design, the value of M of the at least one port index group in the antenna port set is 4, and the at least one port index group includes the first port index group, a second port index group, a third port index group, a fourth port index group, and a fifth port index group; the first port index group includes a port 0, a port 1, a port 2, and a port 3, and a number of DMRS CDM groups without data that correspond to the first port index group is 2; the second port index group includes a port 8, a port 9, a port 10, and a port 11, and a number of DMRS CDM groups without data that correspond to the second port index group is 2; the third port index group includes a port 0, a port 1, a port 8, and a port 9, and a number of DMRS CDM groups without data that correspond to the third port index group is 1; the fourth port index group includes a port 0, a port 1, a port 8, and a port 9, and a number of DMRS CDM groups without data that correspond to the fourth port index group is 2; and the fifth port index group includes a port 2, a port 3, a port 10, and a port 11, and a number of DMRS CDM groups without data that correspond to the fifth port index group is 2.

In a possible design, the value of M of the at least one port index group in the antenna port set is 5, the at least one port index group includes the first port index group, the first port index group includes a port 0, a port 1, a port 2, a port 3, and a port 8, and a number of DMRS CDM groups without data that correspond to the first port index group is 2.

In a possible design, the value of M of the at least one port index group in the antenna port set is 6, the at least one port index group includes the first port index group, the first port index group includes a port 0, a port 1, a port 2, a port 3, a port 8, and a port 10, and a number of DMRS CDM groups without data that correspond to the first port index group is 2.

In a possible design, the value of M of the at least one port index group in the antenna port set is 7, the at least one port index group includes the first port index group, the first port index group includes a port 0, a port 1, a port 2, a port 3, a port 8, a port 9, and a port 10, and a number of DMRS CDM groups without data that correspond to the first port index group is 2.

In a possible design, the value of M of the at least one port index group in the antenna port set is 8, the at least one port index group includes the first port index group, the first port index group includes a port 0, a port 1, a port 2, a port 3, a port 8, a port 9, a port 10, and a port 11, and a number of DMRS CDM groups without data that correspond to the first port index group is 2.

In a possible design, any two port index groups included in the antenna port set have a same number of DMRS CDM groups without data.

In a possible design, when the maximum length of the DMRS is 2, any two port index groups included in the antenna port set have a same number of front-load symbols.

In a possible design, the antenna port set includes the first port index group, a second port index group, and a third port index group, the first port index group includes three port indexes, the second port index group includes three port indexes, the third port index group includes two port indexes, and the first port index group, the second port index group, and the third port index group have different port indexes.

In a possible design, when the type of the DMRS is the first type, and the maximum length of the DMRS is 1, the first port index group includes indexes of a port 0, a port 1, and a port 8, the second port index group includes indexes of a port 2, a port 3, and a port 10, and the third port index group includes indexes of a port 9 and a port 11.

In a possible design, the antenna port set includes the first port index group, a second port index group, a third port index group, and a fourth port index group, the first port index group includes three port indexes, the second port index group includes three port indexes, the third port index group includes three port indexes, the fourth port index group includes four port indexes, and the first port index group, the second port index group, the third port index group, and the fourth port index group have different port indexes.

In a possible design, when the type of the DMRS is the first type, and the maximum length of the DMRS is 2, the first port index group includes indexes of a port 7, a port 12, and a port 13, the second port index group includes indexes of a port 0, a port 1, and a port 4, the third port index group includes indexes of a port 2, a port 3, and a port 6, and the fourth port index group includes indexes of a port 10, a port 11, a port 14, and a port 15.

In a possible design, the antenna port set includes the first port index group, a second port index group, a third port index group, and a fourth port index group, the first port index group includes three port indexes, the second port index group includes three port indexes, the third port index group includes three port indexes, the fourth port index group includes three port indexes, and the first port index group, the second port index group, the third port index group, and the fourth port index group have different port indexes.

In a possible design, when the type of the DMRS is the second type, and the maximum length of the DMRS is 1, the first port index group includes indexes of a port 13, a port 15, and a port 17, the second port index group includes indexes of a port 0, a port 1, and a port 12, the third port index group includes indexes of a port 4, a port 5, and a port 16, and the fourth port index group includes indexes of a port 2, a port 3, and a port 14.

In a possible design, the antenna port set includes the first port index group, a second port index group, a third port index group, a fourth port index group, a fifth port index group, a sixth port index group, a seventh port index group, and an eighth port index group, the first port index group includes three port indexes, the second port index group includes three port indexes, the third port index group includes three port indexes, the fourth port index group includes three port indexes, the fifth port index group includes three port indexes, the sixth port index group includes three port indexes, the seventh port index group includes three port indexes, the eighth port index group includes three port indexes, and the first port index group, the second port index group, the third port index group, the fourth port, the fifth port index group, the sixth port index group, the seventh port index group, and the eighth port index group have different port indexes.

In a possible design, when the type of the DMRS is the second type, and the maximum length of the DMRS is 2, the first port index group includes indexes of a port 18, a port 19, and a port 20, the second port index group includes indexes of a port 21, a port 22, and a port 23, the third port index group includes indexes of a port 7, a port 12, and a port 13, the fourth port index group includes indexes of a port 14, a port 15, and a port 20, the fifth port index group includes indexes of a port 11, a port 16, and a port 17, the sixth port index group includes indexes of a port 2, a port 3, and a port 8, the seventh port index group includes indexes of a port 0, a port 1, and a port 6, and the eighth port index group includes indexes of a port 4, a port 5, and a port 10.

In a possible design, the first port index group includes at least one first port, the at least one first port belongs to a first port set, and a first cover code length corresponding to a port in the first port set is 4.

In a possible design, the first cover code is W_{f}(f), and a time-frequency resource mapping formula corresponding to the first port set is as follows: ${a}_{k , l}^{\left(p, μ\right)} = {β}_{PDSCH}^{DMRS} {w}_{f} \left(2⋅\left(n mod 2\right)+k′\right) {w}_{t} \left(l′\right) r \left(2n+k′\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} + l ′$ $n = 0 , 1 , …$

*p is* a port index value, *µ* is a subcarrier spacing parameter, ${a}_{k , l}^{\left(p, μ\right)}$ is a demodulation reference signal DMRS that corresponds to a demodulation reference signal DMRS port *p* and that is mapped to a resource element RE whose index is (*k,l*)*_{p,µ}*(k,l), ${β}_{PDSCH}^{DMRS}$ is a power coefficient, *w*ₜ(*l'*) is a time domain cover code corresponding to a time domain symbol whose index is *l*', W_{f}(f) is a frequency domain cover code corresponding to a subcarrier whose index is *k',* f = 2 · *(n mod* 2) *+ k', m* = *2n + k', m* is an *m*^{th} element in a reference signal sequence, *l* represents an index of an orthogonal frequency division multiplexing OFDM symbol included in a slot, *l̅* is a symbol index of a start time domain symbol occupied by the DMRS symbol or a symbol index of a reference time domain symbol, and Δ is a subcarrier offset factor.

In a possible design, the method further includes: sending RRC signaling, where the RRC signaling indicates the type and/or the maximum length of the DMRS.

According to an eighth aspect, an embodiment of this application further provides an antenna port indication method. The method may be applied to a network device or a component (for example, a processor, a chip, or a chip system) of the network device. For example, the method is applied to the network device. The method includes: receiving first indication information, where the first indication information indicates a first port index group, the first port index group includes M port indexes, and M is a positive integer greater than or equal to 1.

The first port index group is one port index group in an antenna port set, a number of port indexes that are different from each other and that are included in the antenna port set is K, K is related to a type of a demodulation reference signal DMRS, and K is a positive integer greater than or equal to 1.

According to a ninth aspect, this application provides a communication apparatus. The communication apparatus has a function of implementing the first aspect, the third aspect, the fifth aspect, or the seventh aspect. For example, the communication apparatus includes a corresponding module, unit, or means (means) for performing an operation in the first aspect, the third aspect, the fifth aspect, or the seventh aspect. The module, unit, or means may be implemented by software, may be implemented by hardware, or may be implemented by hardware executing corresponding software.

In a possible design, the communication apparatus includes a processing unit and a communication unit. The communication unit may be configured to receive a signal and send a signal, to implement communication between the communication apparatus and another apparatus. The processing unit may be configured to perform some internal operations of the communication apparatus. Functions performed by the processing unit and the communication unit may correspond to the operations in the first aspect, the third aspect, the fifth aspect, or the seventh aspect.

In a possible design, the communication apparatus includes a processor, and the processor may be coupled to a memory. The memory may store a necessary computer program or necessary instructions for implementing functions in the first aspect, the third aspect, the fifth aspect, or the seventh aspect. The processor may execute the computer program or the instructions stored in the memory, and when the computer program or the instructions are executed, the communication apparatus is enabled to implement the method according to any one of the possible designs or implementations of the first aspect, the third aspect, the fifth aspect, or the seventh aspect.

In a possible design, the communication apparatus includes a processor and a memory, and the memory may store a necessary computer program or necessary instructions for implementing functions in the first aspect, the third aspect, the fifth aspect, or the seventh aspect. The processor may execute the computer program or the instructions stored in the memory, and when the computer program or the instructions are executed, the communication apparatus is enabled to implement the method according to any one of the possible designs or implementations of the first aspect, the third aspect, the fifth aspect, or the seventh aspect.

In a possible design, the communication apparatus includes a processor and an interface circuit, and the processor is configured to: communicate with another apparatus through the interface circuit, and perform the method according to any one of the possible designs or implementations of the first aspect.

According to a tenth aspect, this application provides a communication apparatus. The communication apparatus has a function of implementing the second aspect, the fourth aspect, the sixth aspect, or the eighth aspect. For example, the communication apparatus includes a corresponding module, unit, or means for performing an operation in the second aspect, the fourth aspect, the sixth aspect, or the eighth aspect. The function, unit, or means may be implemented by software, may be implemented by hardware, or may be implemented by hardware executing corresponding software.

In a possible design, the communication apparatus includes a processing unit and a communication unit. The communication unit may be configured to receive a signal and send a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to the operations in the second aspect, the fourth aspect, the sixth aspect, or the eighth aspect.

In a possible design, the communication apparatus includes a processor, and the processor may be coupled to a memory. The memory may store a necessary computer program or necessary instructions for implementing functions in the second aspect, the fourth aspect, the sixth aspect, or the eighth aspect. The processor may execute the computer program or the instructions stored in the memory, and when the computer program or the instructions are executed, the communication apparatus is enabled to implement the method according to any one of the possible designs or implementations of the second aspect, the fourth aspect, the sixth aspect, or the eighth aspect.

In a possible design, the communication apparatus includes a processor and a memory, and the memory may store a necessary computer program or necessary instructions for implementing functions in the second aspect, the fourth aspect, the sixth aspect, or the eighth aspect. The processor may execute the computer program or the instructions stored in the memory, and when the computer program or the instructions are executed, the communication apparatus is enabled to implement the method according to any one of the possible designs or implementations of the second aspect, the fourth aspect, the sixth aspect, or the eighth aspect.

In a possible design, the communication apparatus includes a processor and an interface circuit. The processor is configured to: communicate with another apparatus through the interface circuit, and perform the method according to any one of the possible designs or implementations of the second aspect, the fourth aspect, the sixth aspect, or the eighth aspect.

It may be understood that, in the ninth aspect and the tenth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to an eleventh aspect, this application provides a communication system. The communication system may include the communication apparatus provided in the ninth aspect and the communication apparatus provided in the tenth aspect.

According to a twelfth aspect, this application provides a computer-readable storage medium, and the computer storage medium stores computer-readable instructions. When a computer reads and executes the computer-readable instructions, the computer is enabled to perform the method according to any one of the first aspect to the eighth aspect or a possible design of the aspect.

According to a thirteenth aspect, this application provides a computer program product. When a computer reads and executes the computer program product, the computer is enabled to perform the method according to any one of the first aspect to the eighth aspect or a possible design of the aspect.

According to a fourteenth aspect, this application provides a chip. The chip includes a processor. The processor is coupled to a memory, and is configured to read and execute a software program stored in the memory, to implement the method according to any one of the first aspect to the eighth aspect or a possible design of the aspect.

### BRIEF DESCRIPTION OF DRAWINGS

FIG. 1 is a diagram of a network architecture to which an embodiment of this application is applicable;
FIG. 2 is a diagram of DMRS resource mapping according to an embodiment of this application;
FIG. 3A shows a DMRS port pattern obtained through single-symbol extension of a configuration type 1 according to an embodiment of this application;
FIG. 3B is a DMRS port pattern obtained through double-symbol extension of a configuration type 1 according to an embodiment of this application;
FIG. 4A shows a DMRS port pattern obtained through single-symbol extension of a configuration type 2 according to an embodiment of this application;
FIG. 4B is a DMRS port pattern obtained through double-symbol extension of a configuration type 2 according to an embodiment of this application;
FIG. 5 is a diagram of a time-frequency resource mapping method according to an embodiment of this application;
FIG. 6 is a diagram of another time-frequency resource mapping method according to an embodiment of this application;
FIG. 7 is a schematic flowchart corresponding to a communication method according to an embodiment of this application;
FIG. 8 is a possible example block diagram of an apparatus according to an embodiment of this application;
FIG. 9 is a diagram of a structure of a network device according to an embodiment of this application; and
FIG. 10 is a diagram of a structure of a terminal device according to an embodiment of this application.

### DESCRIPTION OF EMBODIMENTS

The following describes technical solutions in embodiments of this application with reference to the accompanying drawings in embodiments of this application.

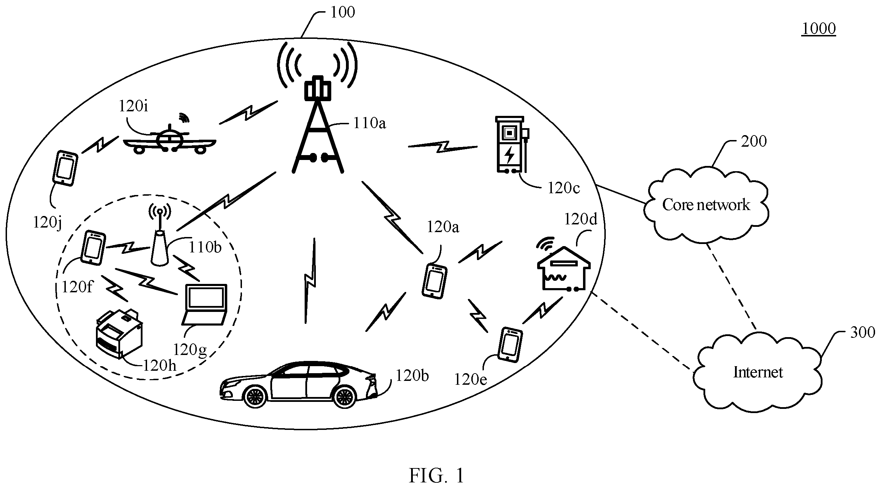

FIG. 1 is a diagram of an architecture of a communication system to which an embodiment of this application is applied. As shown in FIG. 1, the communication system 1000 includes a network device 100 and a core network 200. Optionally, the communication system 1000 may further include an internet 300. The network device 100 may include at least one network device, for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle.

In FIG. 1, the terminal device may be connected to the network device, and the network device may be connected to a core network device in the core network. The core network device and the network device may be different physical devices independent of each other; functions of the core network device and logical functions of the network device may be integrated into a same physical device; or some functions of the core network device and some functions of the radio network device may be integrated into one physical device. Terminal devices may be connected to each other and network devices may be connected to each other in a wired or wireless manner. FIG. 1 is merely a diagram. The communication system may further include another device, for example, a wireless relay device and a wireless backhaul device, which are not drawn in FIG. 1.

The following describes the network device and the terminal device.

### (1) Network device

The network device is a node in a radio access network (radio access network, RAN), may also be referred to as a base station, and may further be referred to as a RAN node (or device). Examples of some network devices are: a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (baseband unit, BBU), or a wireless fidelity (wireless fidelity, Wi-Fi) access point (access point, AP). The network device may alternatively be a satellite, and the satellite may also be referred to as a high-altitude platform, a high-altitude aircraft, or a satellite base station. Alternatively, the network device may be another device that has a network device function. For example, the network device may be a device that functions as a network device in device-to-device (device-to-device, D2D) communication. The network device may alternatively be a network device in a possible future communication system.

In some deployments, the network device may include a central unit (central unit, CU) and a distributed unit (distributed unit, DU). The network device may further include an active antenna unit (active antenna unit, AAU). The CU implements some functions of the network device, and the DU implements some functions of the network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in a RAN, or the CU may be classified into a network device in a core network (core network, CN). This is not limited in this application.

In embodiments of this application, an apparatus configured to implement a function of a network device may be a network device, or may be an apparatus that can support the network device in implementing the function, for example, a chip system. The apparatus may be installed in the network device. The chip system may include a chip, or may include a chip and another discrete device. In the technical solutions provided in embodiments of this application, the technical solutions provided in embodiments of this application are described by using an example in which the apparatus configured to implement a function of a network device is a network device.

### (2) Terminal device

The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal device may be a mobile phone, a tablet computer, a computer with wireless sending and receiving functions, a wearable device, a vehicle, an uncrewed aerial vehicle, a helicopter, an airplane, a ship, a robot, a robot arm, a smart home device, or the like. Neither of a specific technology and a specific device form used by the terminal device is limited in embodiments of this application.

In embodiments of this application, an apparatus configured to implement a function of a terminal device may be a terminal device, or may be an apparatus that can support a terminal device in implementing the function, for example, a chip system. The apparatus may be installed in the terminal device. In the technical solutions provided in embodiments of this application, the technical solutions provided in embodiments of this application are described by using an example in which the apparatus configured to implement a function of a terminal device is a terminal device.

In addition, a same terminal device or network device may provide different functions in different application scenarios. For example, the mobile phones in FIG. 1 include 120a, 120e, 120f, and 120j. The mobile phone 120a may access the base station 110a, connect to the vehicle 120b, directly communicate with the mobile phone 120e, and access the HAP. The mobile phone 120e may access the HAP and directly communicate with the mobile phone 120a. The mobile phone 120f may access the micro base station 110b, connect to the notebook computer 120g, and connect to the printer 120h. The mobile phone 120j may control the uncrewed aerial vehicle 120i.

Roles of the network device and the terminal device may be relative. For example, the helicopter or the uncrewed aerial vehicle 120i in FIG. 1 may be configured as a mobile base station. For the terminal device 120j that accesses the network device 100 via 120i, the terminal device 120i is a base station. However, for the base station 110a, 120i is a terminal device. In other words, 110a communicates with 120i according to a wireless air interface protocol. Certainly, communication between 110a and 120i may alternatively be performed based on an interface protocol between base stations. In this case, for 110a, 120i is also a base station. Therefore, both the network device and the terminal device may be collectively referred to as communication apparatuses. 110a and 110b in FIG. 1 may be referred to as communication apparatuses having a function of a base station, and 120a to 120j in FIG. 1 may be referred to as communication apparatuses having a function of a terminal device.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

Communication may be performed between the network device and the terminal device, between the network devices, and between the terminal devices by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource for wireless communication is not limited in embodiments of this application.

The communication system shown in FIG. 1 may support various radio access technologies (radio access technology, RAT). For example, the communication system shown in FIG. 1 may be a 4th generation (4th generation, 4G) communication system (which may also be referred to as a long term evolution (long term evolution, LTE) communication system), a 5G communication system (which may also be referred to as a new radio (new radio, NR) communication system), or a future-oriented evolved system. The communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the communication system evolves and a new service scenario emerges.

The following first explains related technical features in embodiments of this application. It should be noted that these explanations are intended to make embodiments of this application easier to understand, but should not be considered as a limitation on the protection scope claimed in this application.

### 1. DMRS

In the communication system shown in FIG. 1, a network device may send control information to a terminal device through a control channel (for example, a PDCCH), to allocate a transmission parameter of a data channel to the terminal device. The data channel may be, for example, a PDSCH or a PUSCH. For example, the control information may indicate a time domain symbol and/or a frequency domain resource block (resource block, RB) to which the data channel is mapped, so that the network device and the terminal device can transmit downlink data (for example, data carried on the PDSCH) and/or uplink data (for example, data carried on the PUSCH) on the allocated time-frequency resources through the data channel. In embodiments of this application, a time domain symbol may be an orthogonal frequency division multiplexing (orthogonal frequency division multiplexing, OFDM) symbol, or a discrete Fourier transform spread spectrum OFDM (discrete Fourier transform-spread-OFDM, DFT-s-OFDM) symbol.

Further, the control channel (for example, the PDCCH) or the data channel (for example, the PDSCH or the PUSCH) may carry a reference signal, for example, a demodulation reference signal (demodulation reference signal, DMRS). The data channel is used as an example. The DMRS may be used to estimate an equivalent channel of a data signal carried on the data channel, to detect and demodulate data on the data channel. Signal processing such as precoding the same as that on the data is usually performed on the DMRS, to ensure that the DMRS and the data pass through a same equivalent channel.

Currently, a DMRS may be used to estimate an equivalent channel that is passed through and that is of a data channel (for example, a PDSCH or a PUSCH) or a control channel (for example, a PDCCH), or used to estimate a matrix of an equivalent channel that is passed through and that is of a data channel (for example, a PDSCH) or a control channel (for example, a PDCCH), so as to be used for data detection and demodulation. A channel may perform specific weighting or a change (for example, an amplitude change, a phase change, or a frequency change) on a signal that passes through the channel. The channel may also be referred to as a channel response, and the channel response may be represented by a channel response coefficient. It is assumed that a vector of a DMRS sent by a transmitter is s, a vector of a sent data signal (or referred to as a data symbol) is x, same precoding (for example, multiplying by a same precoding matrix P) is performed on the DMRS and the data, and a precoded data signal and DMRS are simultaneously transmitted and pass through a same channel. Corresponding signal vectors received by a receiver may be represented as: $Data : y = HPx + n = {H}^{˜} x + n ; and$ $DMRS : r = HPs + n = {H}^{˜} s + n .$

y represents a data signal vector received by the receiver, r represents a DMRS vector received by the receiver, H represents a channel through which the data signal and the DMRS actually pass, P represents a precoding matrix, and n represents a noise signal vector.

Because both the data and the DMRS pass through an equivalent channel H̃, the receiver may obtain, based on a known DMRS vector s and according to a channel estimation algorithm, estimation of the equivalent channel. The DMRS vector includes DMRS symbols corresponding to a plurality of DMRS ports. Further, the receiver may complete data detection and demodulation based on the equivalent channel. The channel estimation algorithm may be, for example, a least square (least square, LS) channel estimation algorithm, a minimum mean square error (minimum mean square error, MMSE) channel estimation algorithm, or a delay domain channel estimation algorithm based on discrete Fourier transform (discrete Fourier transform, DFT)/inverse discrete Fourier transform (inverse DFT, IDFT).

### 2. DMRS port

The port may be an antenna port (antenna port), and the port may be understood as a transmit antenna identified by a receiver, or a transmit antenna that can be distinguished in space. One port may be configured for each virtual antenna, and each virtual antenna may be a weighted combination of a plurality of physical antennas. A port used to send a reference signal may be referred to as a reference signal port. The reference signal may be, for example, a DMRS, a channel state information-reference signal (channel state information reference signal, CSI-RS), or a sounding reference signal (sounding reference signal, SRS). This is not specifically limited.

A DMRS port is used as an example. Different DMRS ports may be distinguished by using different indexes (or port numbers). For example, an index of a DMRS port may be 1000+X, and a value of X may be an integer greater than or equal to 0. 1000+X may also be denoted as X. When the index of the DMRS port may be 1000+X, the DMRS port may be referred to as a DMRS port 1000+X, or may be referred to as a DMRS port X. In other words, in embodiments of this application, 1000+X and X may be understood as indexes of a same DMRS port.

The following provides descriptions by using an example in which a port is a DMRS port. It may be understood that, in addition to the DMRS port, the method provided in embodiments of this application may also be applicable to another possible reference signal port, for example, a CSI-RS port or an SRS port.

### 3. Time-frequency resource mapping of a DMRS port

For one DMRS port, the DMRS port may correspond to one or more DMRS signal symbols (which may also be referred to as DMRS modulation symbols, or referred to as DMRS symbols for short). To perform channel estimation on different time-frequency resources, a plurality of DMRS symbols corresponding to the DMRS port may be sent on a plurality of time-frequency resources. In addition, to ensure channel estimation quality, different DMRS ports are usually orthogonal ports, to avoid interference between the different DMRS ports.

A plurality of DMRS symbols corresponding to one DMRS port may correspond to one DMRS sequence, and one DMRS sequence includes a plurality of DMRS sequence elements. A DMRS sequence corresponding to one DMRS port may be mapped to a corresponding time-frequency resource according to a time-frequency resource mapping rule after being multiplied by a corresponding cover code sequence. For example, an *m*^{th} DMRS sequence element *r(m)* in a DMRS sequence corresponding to a DMRS port *p* may be mapped, according to the time-frequency resource mapping rule, to a resource element (resource element, RE) whose index is (*k,l*)*_{p,µ}.* The RE whose index is (*k,l*)*_{p,µ}* may correspond to a time domain symbol whose index is *l* in a slot in time domain, and correspond to a subcarrier whose index is *k* in frequency domain. The time-frequency resource mapping rule may satisfy the following formula 1: $\begin{matrix}{a}_{k , l}^{\left(p, μ\right)} = {β}_{PDSCH}^{DMRS} {w}_{f} \left(k′\right) {w}_{t} \left(l′\right) r \left(2n+k′\right) \\ k = \left\{\begin{matrix}4 n + 2 k ′ + Δ & Type 1 \\ 6 n + k ′ + Δ & Type 2\end{matrix};\right. \\ k ′ = 0 , 1 ; \\ l = \overline{l} + l ′ ; \\ n = 0 , 1 , … ; \\ l ′ = 0 , 1 ;\end{matrix}$

*p* is a DMRS port index (that is, a port index value), *µ* is a subcarrier spacing parameter, ${a}_{k , l}^{\left(p, μ\right)}$ is a DMRS symbol that corresponds to a DMRS port *p* and that is mapped to an RE whose index is (*k,l*)*_{p,µ},* ${β}_{PDSCH}^{DMRS}$ is a power scaling factor or a power control factor, *w*ₜ(*l'*) is a time domain cover code sequence element corresponding to a time domain symbol whose index is *l*', *w*_{f}(*k'*) is a frequency domain cover code sequence element corresponding to a subcarrier whose index is *k', m* = 2*n + k',* Δ is a subcarrier offset factor, and *l̅* is a symbol index of a start time domain symbol occupied by the DMRS symbol or a symbol index of a reference time domain symbol.

Further, values of *w*_{f}(*k'*)*, w*ₜ(*l*')*,* and Δ corresponding to the DMRS port *p* are related to a DMRS configuration type. For details, refer to descriptions about the DMRS configuration type.

### 4. DMRS configuration type

The DMRS configuration type may include a configuration type 1 (type1) and a configuration type 2 (type2). Different configuration types support different numbers of orthogonal DMRS ports and different time-frequency resource mapping rules. The following separately describes the configuration type 1 and the configuration type 2.

### (1) Configuration type 1

For the configuration type 1, values of *w*_{f}(*k'*)*, w*ₜ(*l*')*,* and Δ corresponding to a DMRS port *p* may be determined according to the following table 1.

**Table 1: Parameter value corresponding to a type 1 DMRS port**

| ***p*** | ***λ*** | **Δ** | *w*_{f}(*k*') | | *w*ₜ(*l*') | |
|---|---|---|---|---|---|---|
| | | | *k*' = 0 | *k'* = 1 | *l*' = 0 | *l*' = 1 |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

*λ* is an index of a code division multiplexing (code divide multiplexing, CDM) group (which may also be referred to as an orthogonal multiplexing group) to which the DMRS port *p* belongs, and DMRS ports in a same CDM group occupy a same time-frequency resource. The "time-frequency resources occupied by the DMRS ports" may also be replaced with "time-frequency resources corresponding to the DMRS ports" or "time-frequency resources to which the DMRS ports are mapped".

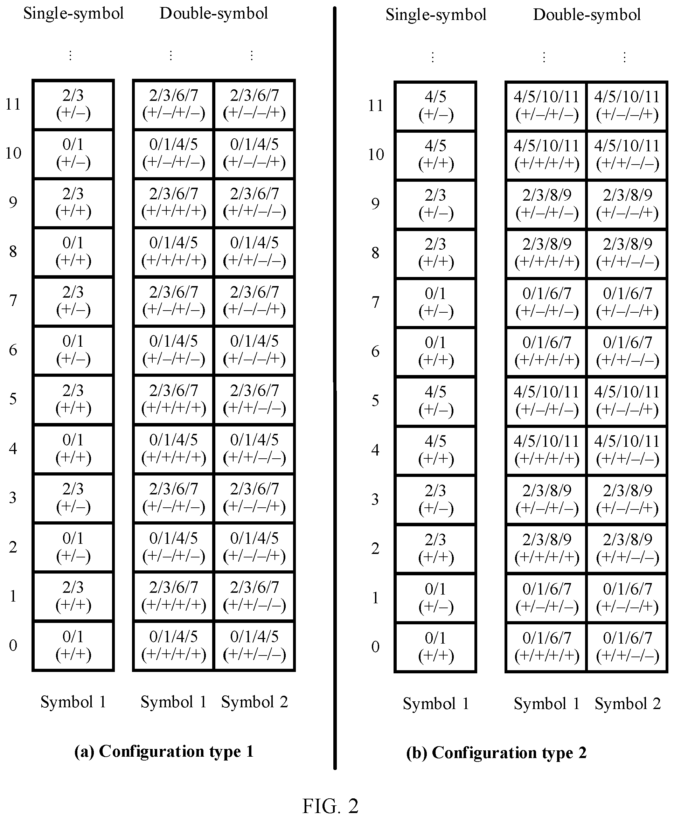

Time-frequency resources to which DMRS sequences corresponding to different DMRS ports are mapped may be determined based on the foregoing time-frequency resource mapping rule (that is, formula 1) and values of parameters in table 1, as shown in (a) in FIG. 2. A time domain symbol length occupied by a DMRS port (or a number of time domain symbols occupied by the DMRS port) may be 1 or 2. When the time domain symbol length occupied by the DMRS port is 1, a DMRS may be referred to as a single-symbol DMRS. When the time domain symbol length occupied by the DMRS port is 2, a DMRS may be referred to as a double-symbol DMRS. The following separately describes a single-symbol DMRS and a double-symbol DMRS.

### (1.1) Single-symbol DMRS

A single-symbol DMRS (corresponding to l'=0) supports a maximum of four orthogonal DMRS ports. The four orthogonal DMRS ports may be divided into two CDM groups: a CDM group 0 and a CDM group 1. The CDM group 0 includes a DMRS port 0 and a DMRS port 1, and the CDM group 1 includes a DMRS port 2 and a DMRS port 3. The CDM group 0 and the CDM group 1 are frequency division multiplexed (mapped to different frequency domain resources). DMRS ports included in a CDM group are mapped to a same time-frequency resource. DMRS sequences corresponding to the DMRS ports included in the CDM group are distinguished by using cover code sequences, to ensure orthogonality of the DMRS ports in the CDM group, and suppress interference between DMRSs transmitted on different DMRS ports. The cover code sequence may be an orthogonal cover code (orthogonal cover code, OCC) sequence.

Specifically, the DMRS port 0 and the DMRS port 1 are located in a same RE, and resource mapping is performed in a comb manner in frequency domain. To be specific, adjacent frequency domain resources occupied by the DMRS port 0 and the DMRS port 1 are separated by one subcarrier. Two adjacent subcarriers occupied by a DMRS port in frequency domain correspond to a frequency domain cover code sequence whose length is 2, for example, (+1, +1) or (+1, -1). One time domain symbol occupied by the DMRS port in time domain corresponds to a time domain cover code sequence whose length is 1, for example, (+1). It may be learned, based on the frequency domain cover code sequence and the time domain cover code sequence, that a length of a cover code sequence corresponding to the DMRS port is 2 (a cover code sequence corresponding to the DMRS port may be formed by a Kronecker product of the frequency domain cover code sequence and the time domain cover code sequence). For example, for a subcarrier 0 and a subcarrier 2 corresponding to a time domain symbol 0, the DMRS port 0 and the DMRS port 1 may be code division multiplexed by using a cover code sequence whose length is 2. A cover code sequence corresponding to the DMRS port 0 is (+1, +1), and a cover code sequence corresponding to the DMRS port 1 is (+1, -1).

Similarly, the DMRS port 2 and the DMRS port 3 are located in a same RE, and are mapped, in a comb manner in frequency domain, to REs that are not occupied by the DMRS port 0 and the DMRS port 1. For example, for a subcarrier 1 and a subcarrier 3 corresponding to the time domain symbol 0, the DMRS port 2 and the DMRS port 3 may be code division multiplexed by using a cover code sequence whose length is 2. A cover code sequence corresponding to the DMRS port 2 is (+1, +1), and a cover code sequence corresponding to the DMRS port 3 is (+1, - 1).

### (1.2) Double-symbol DMRS

**A double-symbol DMRS (corresponding to 1'=0 or 1) supports a maximum of eight orthogonal DMRS ports.** The eight orthogonal DMRS ports are divided into two CDM groups: a CDM group 0 and a CDM group 1. The CDM group 0 includes a DMRS port 0, a DMRS port 1, a DMRS port 4, and a DMRS port 5. The CDM group 1 includes a DMRS port 2, a DMRS port 3, a DMRS port 6, and a DMRS port 7. The CDM group 0 and the CDM group 1 are frequency division multiplexed, DMRS ports included in a CDM group are mapped to a same time-frequency resource, and DMRS sequences corresponding to the DMRS ports included in the CDM group are distinguished by using cover code sequences.

Specifically, the DMRS port 0, the DMRS port 1, the DMRS port 4, and the DMRS port 5 are located in a same RE, and resource mapping is performed in a comb manner in frequency domain. To be specific, adjacent frequency domain resources occupied by the DMRS port 0, the DMRS port 1, the DMRS port 4, and the DMRS port 5 are separated by one subcarrier. Two adjacent subcarriers occupied by a DMRS port in frequency domain correspond to a frequency domain cover code sequence whose length is 2, for example, (+1, +1) or (+1, -1). Two adjacent time domain symbols occupied by the DMRS port in time domain correspond to a time domain cover code sequence whose length is 2, for example, (+1, +1) or (+1, -1). It may be obtained, based on the frequency domain cover code sequence and the time domain cover code sequence, that a length of a cover code sequence corresponding to the DMRS port is 4 (a cover code sequence corresponding to the DMRS port may be formed by a Kronecker product of the frequency domain cover code sequence and the time domain cover code sequence). For example, for a subcarrier 0 and a subcarrier 2 corresponding to a time domain symbol 0 and a time domain symbol 1, the DMRS port 0, the DMRS port 1, the DMRS port 4, and the DMRS port 5 may be code division multiplexed by using a cover code sequence whose length is 4. A cover code sequence corresponding to the DMRS port 0 is (+1, +1, +1, +1), a cover code sequence corresponding to the DMRS port 1 is (+1, +1, -1, -1), a cover code sequence corresponding to the DMRS port 4 is (+1, -1, +1, -1), and a cover code sequence corresponding to the DMRS port 5 is (+1, -1, -1, +1).

Similarly, the DMRS port 2, the DMRS port 3, the DMRS port 6, and the DMRS port 7 are located in a same RE, and are mapped, in a comb manner in frequency domain, to subcarriers that are not occupied by the DMRS port 0, the DMRS port 1, the DMRS port 4, and the DMRS port 5. For a subcarrier 1 and a subcarrier 3 corresponding to the time domain symbol 0 and the time domain symbol 1, the DMRS port 2, the DMRS port 3, the DMRS port 6, and the DMRS port 7 may be code division multiplexed by using a cover code sequence whose length is 4. A cover code sequence corresponding to the DMRS port 2 is (+1, +1, +1, +1), a cover code sequence corresponding to the DMRS port 3 is (+1, +1, -1, -1), a cover code sequence corresponding to the DMRS port 6 is (+1, -1, +1, -1), and a cover code sequence corresponding to the DMRS port 7 is (+1, -1, -1, +1).

### (2) Configuration type 2

For the configuration type 2, values of *w*_{f}(*k'*)*, w*ₜ(*l'*)*,* and Δ corresponding to a DMRS port *p* may be determined according to table 2.

**Table 2: Parameter value corresponding to a type2 DMRS port**

| ***p*** | ***λ*** | **Δ** | *w*_{f}(*k*') | | *w*ₜ(*l*') | |
|---|---|---|---|---|---|---|
| | | | *k'* = 0 | *k*' = 1 | *l*' = 0 | *l*' = 1 |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

*λ* is an index of a CDM group to which the DMRS port *p* belongs, and DMRS ports in a same CDM group occupy a same time-frequency resource.

Time-frequency resources to which DMRS sequences corresponding to different DMRS ports are mapped may be determined based on the foregoing time-frequency resource mapping rule (that is, formula 1) and values of parameters in table 1, as shown in (b) in FIG. 2. A time domain symbol length occupied by a DMRS port may be 1 or 2. When the time domain symbol length occupied by the DMRS port is 1, a DMRS may be referred to as a single-symbol DMRS. When the time domain symbol length occupied by the DMRS port is 2, a DMRS may be referred to as a double-symbol DMRS. The following separately describes a single-symbol DMRS and a double-symbol DMRS.

### (2.1) Single-symbol DMRS

**A single-symbol DMRS supports a maximum of six orthogonal DMRS ports.** The six orthogonal DMRS ports are divided into three CDM groups: a CDM group 0, a CDM group 1, and a CDM group 2. The CDM group 0 includes a DMRS port 0 and a DMRS port 1, the CDM group 1 includes a DMRS port 2 and a DMRS port 3, and the CDM group 2 includes a DMRS port 4 and a DMRS port 5. CDM groups are frequency division multiplexed, and DMRSs corresponding to DMRS ports included in a CDM group are mapped to a same time-frequency resource. DMRS sequences corresponding to the DMRS ports included in the CDM group are distinguished by using cover code sequences. A DMRS sequence corresponding to a DMRS port is mapped to a plurality of resource sub-blocks including two consecutive subcarriers in frequency domain, and adjacent resource sub-blocks are separated by four subcarriers in frequency domain.

Specifically, the DMRS port 0 and the DMRS port 1 are located in a same RE, and resource mapping is performed in a comb manner in frequency domain. For example, a frequency domain resource granularity is 1 RB, and the DMRS port 0 and the DMRS port 1 occupy a subcarrier 0, a subcarrier 1, a subcarrier 6, and a subcarrier 7. The DMRS port 2 and the DMRS port 3 occupy a subcarrier 2, a subcarrier 3, a subcarrier 8, and a subcarrier 9. The DMRS port 4 and the DMRS port 5 occupy a subcarrier 4, a subcarrier 5, a subcarrier 10, and a subcarrier 11. Two DMRS ports included in a CDM group are code division multiplexed in two adjacent subcarriers by using a cover code sequence whose length is 2. For example, cover code sequences corresponding to the two DMRS ports are respectively (+1, +1) and (+1, -1).

### (2.2) Double-symbol DMRS

**A double-symbol DMRS supports a maximum of 12 orthogonal DMRS ports.** The 12 orthogonal DMRS ports are divided into three CDM groups. A CDM group 0 includes a DMRS port 0, a DMRS port 1, a DMRS port 6, and a DMRS port 7. A CDM group 1 includes a DMRS port 2, a DMRS port 3, a DMRS port 8, and a DMRS port 9. A CDM group 2 includes a DMRS port 4, a DMRS port 5, a DMRS port 10, and a DMRS port 11. CDM groups are frequency division multiplexed, and DMRSs corresponding to DMRS ports included in a CDM group are mapped to a same time-frequency resource. DMRS sequences corresponding to the DMRS ports included in the CDM group are distinguished by using cover code sequences. A DMRS sequence corresponding to a DMRS port is mapped to a plurality of resource sub-blocks including two consecutive subcarriers in frequency domain, and adjacent resource sub-blocks are separated by four subcarriers in frequency domain.

Specifically, the DMRS port 0, the DMRS port 1, the DMRS port 6, and the DMRS port 7 are located in a same RE, and resource mapping is performed in a comb manner in frequency domain. For example, a frequency domain resource granularity is 1 RB. The DMRS port 0, the DMRS port 1, the DMRS port 6, and the DMRS port 7 occupy a subcarrier 0, a subcarrier 1, a subcarrier 6, and a subcarrier 7 corresponding to a time domain symbol 0 and a time domain symbol 1. The DMRS port 2, the DMRS port 3, the DMRS port 8, and the DMRS port 9 occupy a subcarrier 2, a subcarrier 3, a subcarrier 8, and a subcarrier 9 corresponding to the time domain symbol 1 and a time domain symbol 2. The DMRS port 4, the DMRS port 5, the DMRS port 10, and the DMRS port 11 occupy a subcarrier 4, a subcarrier 5, a subcarrier 10, and a subcarrier 11 corresponding to the time domain symbol 1 and the time domain symbol 2. Four DMRS ports included in a CDM group are code division multiplexed in two adjacent subcarriers corresponding to two time domain symbols by using a cover code sequence whose length is 4. For example, cover code sequences corresponding to the four DMRS ports are respectively (+1, +1, +1, +1), (+1, +1, -1, -1), (+1, -1, +1, -1), and (+1, -1, -1, +1).

### 5. DMRS port increasing

It can be learned from the foregoing descriptions that a maximum number of orthogonal DMRS ports supported by the configuration type 1 is 8, and a maximum number of orthogonal DMRS ports supported by the configuration type 2 is 12. When a plurality of parallel data streams are simultaneously transmitted on a same time-frequency resource, each data stream may be referred to as a spatial layer, a spatial stream, or a transmission stream, and one DMRS port may correspond to one spatial layer or transmission stream. For example, the V spatial layers include a spatial layer 0 and a spatial layer 1. When DMRS port indexes allocated by a network device to a terminal device are "0, 1", the spatial layer 0 corresponds to the DMRS port 0, and the spatial layer 1 corresponds to the DMRS port 1. When DMRS port indexes allocated by the network device to the terminal device are "2, 3", the spatial layer 0 corresponds to the DMRS port 2, and the spatial layer 1 corresponds to the DMRS port 3.

However, as wireless communication devices are deployed more densely, and a number of terminal devices further increases, a higher requirement is imposed on a number of MIMO transmission streams (more than 12 transmission streams). However, a maximum of 12 DMRS ports cannot ensure good transmission performance of more than 12 transmission streams. Therefore, to support more transmission streams, DMRS ports need to be increased.

There may be a plurality of methods for increasing the DMRS ports. For example, DMRS ports may be increased through code division multiplexing, or DMRS ports may be increased through frequency division multiplexing. Code division multiplexing is to introduce more orthogonal DMRS ports in a same time-frequency resource. The following describes related content of DMRS port increasing by using an example in which DMRS ports are increased in a code division multiplexing manner.

In embodiments of this application, after DMRS ports are increased in a code division multiplexing manner, as shown in table 3-1 or table 3-2, a single-symbol DMRS of the configuration type 1 can support a maximum of eight ports, a double-symbol DMRS of the configuration type 1 can support a maximum of 16 ports, a single-symbol DMRS of the configuration type 2 can support a maximum of 12 ports, and a double-symbol DMRS of the configuration type 2 can support a maximum of 24 ports.

**Table 3-1: Legacy DMRS ports and new DMRS ports corresponding to different configuration types**

| Configuration type | | Legacy DMRS port index | New DMRS port index |
|---|---|---|---|
| Configuration type 1 | Single-symbol | 0, 1, 2, 3 | 8, 9, 10, 11 |
| | Double-symbol | 0, 1, 2, 3, 4, 5, 6, 7 | 8, 9, 10, 11, 12, 13, 14, 15 |
| Configuration type 2 | Single-symbol | 0, 1, 2, 3, 4, 5 | 12, 13, 14, 15, 16, 17 |
| | Double-symbol | 0, 1, 2, 3, 4, 5, 6, 7, 8, 9, 10, 11 | 12, 13, 14, 15, 16, 17, 18, 19, 20, 21, 22, 23 |

**Table 3-2: Legacy DMRS ports and new DMRS ports corresponding to different configuration types**

| Configuration type | | Legacy DMRS port index | R18 DMRS port index |
|---|---|---|---|
| Configuration type 1 | Single-symbol | 0, 1, 2, 3 | 0, 1, 2, 3, 8, 9, 10, 11 |
| | Double-symbol | 0, 1, 2, 3, 4, 5, 6, 7 | 0, 1, 2, 3, 4, 5, 6, 7, 8, 9, 10, 11, 12, 13, 14, 15 |
| Configuration type 2 | Single-symbol | 0, 1, 2, 3, 4, 5 | 0, 1, 2, 3, 4, 5, 12, 13, 14, 15, 16, 17 |
| | Double-symbol | 0, 1, 2, 3, 4, 5, 6, 7, 8, 9, 10, 11 | 0, 1, 2, 3, 4, 5, 6, 7, 8, 9, 10, 11, 12, 13, 14, 15, 16, 17, 18, 19, 20, 21, 22, 23 |

### The following describes a time-frequency resource mapping rule present after DMRS port increasing.

For a legacy DMRS port, a DMRS sequence corresponding to one legacy DMRS port may be mapped to a corresponding time-frequency resource according to a time-frequency resource mapping rule after being multiplied by a corresponding cover code sequence. Correspondingly, for a new DMRS port, a DMRS sequence corresponding to one new DMRS port may be mapped to a corresponding time-frequency resource according to a time-frequency resource mapping rule after being multiplied by a corresponding cover code sequence.

For example, an *m*^{th} DMRS sequence element *r(m)* in a DMRS sequence corresponding to a DMRS port *p* may be mapped, according to the time-frequency resource mapping rule, to a resource element (resource element, RE) whose index is (*k,l*)*_{p,µ}*. The RE whose index is (*k,l*)*_{p,µ}* may correspond to a time domain symbol whose index is *l* in a slot in time domain, and correspond to a subcarrier whose index is *k* in frequency domain. The time-frequency resource mapping rule of the new DMRS port has a plurality of implementations. The following provides descriptions by using an example in which the DMRS port is a PDSCH port.

### Implementation 1

In Implementation 1, the time-frequency resource mapping rule may satisfy the following formula 2.1, formula 2.2, formula 2.3, and formula 2.4.

Formula 2.1 is as follows: ${a}_{k , l}^{\left(p, μ\right)} = {β}_{PDSCH}^{DMRS} {w}_{f} \left(2∗\left(n mod 2\right)+k′\right) {w}_{t} \left(l′\right) r \left(2n+k′\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} + l ′$ $n = 0 , 1 , …$ $l ′ = 0 , 1$

*p* is an index of a DMRS port, *µ* is a subcarrier spacing parameter, ${a}_{k . l}^{\left(p, μ\right)}$ is a DMRS symbol that corresponds to a port *p* and that is mapped to an RE whose index is (*k,l*)*_{p,µ},* ${β}_{PDSCH}^{DMRS}$ is a power factor, *w*ₜ(*l'*) is a time domain cover code sequence element corresponding to a time domain symbol whose index is *l*', and *w*_{f}(*k*') is a frequency domain cover code sequence element corresponding to a subcarrier whose index is *k'.* Δ is a subcarrier offset factor, and *l̅* is a symbol index of a start time domain symbol occupied by the DMRS symbol or a symbol index of a reference time domain symbol.

Formula 2.2 is as follows: ${a}_{k , l}^{\left(p, μ\right)} = {β}_{PDSCH}^{DMRS} {w}_{f} \left(k′\right) {w}_{t} \left(l′\right) r \left(n+k′\right)$ $k = \left\{\begin{matrix}8 n + 2 k ′ + Δ , Type 1 \\ 12 n + 6 ∗ \left⌊\frac{k ′}{2}\right⌋ + \left(k′mod 2\right) + Δ , Type 2\end{matrix}\right.$ $k ′ = 0 , 1 , 2 , 3$ $l = \overline{l} + l ′$ $n = 0 , 1 , …$ $l ′ = 0 , 1$

A difference between formula 2.2 and formula 2.1 lies in that the index *k'* of the subcarrier corresponds to different values.

Formula 2.3 is as follows: ${a}_{k , l}^{\left(p, μ\right)} = {β}_{PDSCH}^{DMRS} {w}_{f} \left(2∗\left(n mod 2\right)+k′\right) {w}_{t} \left(l′\right) r \left(2n+k′\right) t \left(i\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} + l ′$ $n = 0 , 1 , …$ $l ′ = 0 , 1$ $i ∈ 0 , 1 , 2 , 3$

***t(i)*** represents an anti-interference sequence (or referred to as a cover code element), and *i* is a sequence index, and is applicable to interference randomization between different additional symbols. Compared with formula 2.1, ***t*(*i*)** is added in formula 2.3. A value of *t*(*i*) may be determined according to table 4.

**Table 4**

| | Cover code element | | | |
|---|---|---|---|---|
| TD-OCC index | ***t*(0)** | ***t*(1)** | ***t*(2)** | ***t*(3)** |
| R15 port | +1 | +1 | +1 | +1 |
| R18 port | +1 | -1 | +1 | -1 |

Formula 2.4 is as follows: ${a}_{k , l}^{\left(p, μ\right)} = {β}_{PDSCH}^{DMRS} {w}_{f} \left(k′\right) {w}_{t} \left(l′\right) r \left(n+k′\right) t \left(i\right)$ $k = \left\{\begin{matrix}8 n + 2 k ′ + Δ , Type 1 \\ 12 n + 6 ∗ \left⌊\frac{k ′}{2}\right⌋ + \left(k′mod 2\right) + Δ , Type 2\end{matrix}\right.$ $k ′ = 0 , 1 , 2 , 3$ $l = \overline{l} + l ′$ $n = 0 , 1 , …$ $l ′ = 0 , 1$ $i ∈ 0 , 1 , 2 , 3$

***t(i)*** represents an anti-interference sequence (or referred to as a cover code element), and *i* is a sequence index, and is applicable to interference randomization between different additional symbols. Compared with formula 2.2, ***t*(*i*)** is added in formula 2.4. A value of *t*(*i*) may be determined according to table 4.

**Correspondingly, further, in the foregoing formula 2.1 to formula 2.4, values of** w_{f}(k'), *w*ₜ(*l*')*,* **and Δ corresponding to the DMRS port *p* are related to a DMRS configuration type and a used sequence type. For details, refer to the following descriptions.**

### Solution 1: Interference randomization sequence

In solution 1, a value of a frequency domain cover code *w*_{f}(*k*') (that is, a value of an OCC index) may be determined according to table 5-1.

**Table 5-1: Value of a frequency domain cover code w_{f}(k')**

| OCC index | ***w_{f}*(0)** | ***w_{f}*(1)** | ***w_{f}*(2)** | ***w_{f}*(3)** |
|---|---|---|---|---|
| #0 | +1 | +1 | +1 | +1 |
| #1 | +1 | -1 | +1 | -1 |
| #2 | +1 | +j | -1 | -j |
| #3 | +1 | -j | -1 | +j |

For type1, values of **w*_{f}*(*k*'), w*ₜ*(*l*')*,*** and Δ corresponding to a DMRS port *p* may be determined by looking up table 5-2 based on a value of an OCC index.

For example, when a type1 single-symbol configuration is used, and the DMRS port*p* is any one of a port 0 to a port 3 and a port 8 to a port 11, the values of **w*_{f}*(*k*'), w*ₜ*(*l*')*,*** and Δ corresponding to the DMRS port *p* may be determined according to table 5-2. For example, when the DMRS port *p* is a port 1008, an OCC index corresponding to a cover code value of **w*_{f}*(*k*')** corresponding to the port 1008 is #2, and correspondingly, a frequency domain cover code **w*_{f}*(*k*')** corresponding to the port 1008 is (+1, +j, -1, -j), and a time domain cover code corresponding to the port 1008 is (+1).

For another example, when a type1 double-symbol configuration is used, and the DMRS port *p* is any one of a port 0 to a port 7 and a port 8 to a port 15, the values of **w*_{f}*(*k*')** and **w*ₜ*(*l*')** corresponding to the DMRS port *p* may be determined according to table 5-2. For example, when the DMRS port *p* is a port 1008, an OCC index corresponding to a cover code value of **w*_{f}*(*k*')** corresponding to the port 1008 is #2, and correspondingly, a frequency domain cover code **w*_{f}*(*k*')** corresponding to the port 1008 is (+1, +j, -1, -j), and a time domain cover code corresponding to the port 1008 is (+1, +j).

**Table 5-2: Parameter value corresponding to a PDSCH DMRS port (type1 R18)**

| ***p*** | **CDM group** | ***Δ*** | *w*_{f}(*k*') | *w*ₜ(*l*') | |
|---|---|---|---|---|---|
| | | | | *l*' = 0 | *l*' = 1 |
| 1000 | 0 | 0 | #0 | +1 | +1 |
| 1001 | 0 | 0 | #1 | +1 | +1 |
| 1002 | 1 | 1 | #0 | +1 | +1 |
| 1003 | 1 | 1 | #1 | +1 | +1 |
| 1004 | 0 | 0 | #0 | +1 | -1 |
| 1005 | 0 | 0 | #1 | +1 | -1 |
| 1006 | 1 | 1 | #0 | +1 | -1 |
| 1007 | 1 | 1 | #1 | +1 | -1 |
| 1008 | 0 | 0 | #2 | +1 | +j |
| 1009 | 0 | 0 | #3 | +1 | +j |
| 1010 | 1 | 1 | #2 | +1 | +j |
| 1011 | 1 | 1 | #3 | +1 | +j |
| 1012 | 0 | 0 | #2 | +1 | -j |
| 1013 | 0 | 0 | #3 | +1 | -j |
| 1014 | 1 | 1 | #2 | +1 | -j |
| 1015 | 1 | 1 | #3 | +1 | -j |

For type2, values of **w*_{f}*(*k*'), w*ₜ*(*l*')*****,** w*ₜ(*l*')*,* and Δ corresponding to a DMRS port *p* may be determined by looking up table 5-3 based on a value of an OCC index.

For example, when a type2 DMRS single-symbol configuration is used, and the DMRS port *p* is any one of a port 0 to a port 5 and a port 12 to a port 17, the values of **w*_{f}*(*k*')** and **w*ₜ*(*l*')** corresponding to the DMRS port *p* may be determined according to table 5-3.

For another example, when a type2 DMRS double-symbol configuration is used, and the DMRS port *p* is any one of a port 0 to a port 11 and a port 12 to a port 23, the values of **w*_{f}*(*k*')** and **w*ₜ*(*l*')** corresponding to the DMRS port *p* may be determined according to table 5-3.

**Table 5-3: Parameter value corresponding to a PDSCH DMRS port (type2 R18)**

| ***p*** | **CDM group** | ***Δ*** | *w*_{f}(*k*') | *w*ₜ(*l*') | |
|---|---|---|---|---|---|
| | | | | *l*' = 0 | *l*' = 1 |
| 1000 | 0 | 0 | #0 | +1 | +1 |
| 1001 | 0 | 0 | #1 | +1 | +1 |
| 1002 | 1 | 1 | #0 | +1 | +1 |
| 1003 | 1 | 1 | #1 | +1 | +1 |
| 1004 | 2 | 2 | #0 | +1 | +1 |
| 1005 | 2 | 2 | #1 | +1 | +1 |
| 1006 | 0 | 0 | #0 | +1 | -1 |
| 1007 | 0 | 0 | #1 | +1 | -1 |
| 1008 | 1 | 1 | #0 | +1 | -1 |
| 1009 | 1 | 1 | #1 | +1 | -1 |
| 1010 | 2 | 2 | #0 | +1 | -1 |
| 1011 | 2 | 2 | #1 | +1 | -1 |
| 1012 | 0 | 0 | #2 | +1 | +j |
| 1013 | 0 | 0 | #3 | +1 | +j |
| 1014 | 1 | 1 | #2 | +1 | +j |
| 1015 | 1 | 1 | #3 | +1 | +j |
| 1016 | 2 | 2 | #2 | +1 | +j |
| 1017 | 2 | 2 | #3 | +1 | +j |
| 1018 | 0 | 0 | #2 | +1 | -j |
| 1019 | 0 | 0 | #3 | +1 | -j |
| 1020 | 1 | 1 | #2 | +1 | -j |
| 1021 | 1 | 1 | #3 | +1 | -j |
| 1022 | 2 | 2 | #2 | +1 | -j |
| 1023 | 2 | 2 | #3 | +1 | -j |

### Solution 2: Walsh sequence

In solution 2, a value of a frequency domain cover code *w*_{f}(*k*') (that is, a value of an OCC index) may be determined according to table 6-1.

For type1, values of **w*_{f}*(*k*'), w*ₜ*(*l*')*,*** and Δ corresponding to a DMRS port *p* may be determined by looking up table 6-2 based on a value of an OCC index.

For example, when a type1 single-symbol configuration is used, and the DMRS port*p* is any one of a port 0 to a port 3 and a port 8 to a port 11, the values of **w*_{f}*(*k*'), w*ₜ*(*l*')*,*** and Δ corresponding to the DMRS port *p* may be determined according to table 6-2.

For another example, when a type1 double-symbol configuration is used, and the DMRS port *p* is any one of a port 0 to a port 7 and a port 8 to a port 15, the values of **w*_{f}*(*k*')** and **w*ₜ*(*l*')** corresponding to the DMRS port *p* may be determined according to table 6-2.

**Table 6-1: Frequency domain cover code w_{f}(k')**

| OCC index | w_{f}(0) | w_{f}(1) | w_{f}(2) | w_{f}(3) |
|---|---|---|---|---|
| #0 | +1 | +1 | +1 | +1 |
| #1 | +1 | -1 | +1 | -1 |
| #2 | +1 | +1 | -1 | -1 |
| #3 | +1 | -1 | -1 | +1 |

**Table 6-2: Parameter value corresponding to a PDSCH DMRS port (type1 R18)**

| p | CDM group | Δ | *w*_{f}(*k'*) | *w*ₜ(*l'*) | |
|---|---|---|---|---|---|
| | | | | *l'* = 0 | *l'* = 1 |
| 1000 | 0 | 0 | #0 | +1 | +1 |
| 1001 | 0 | 0 | #1 | +1 | +1 |
| 1002 | 1 | 1 | #0 | +1 | +1 |
| 1003 | 1 | 1 | #1 | +1 | +1 |
| 1004 | 0 | 0 | #0 | +1 | -1 |
| 1005 | 0 | 0 | #1 | +1 | -1 |
| 1006 | 1 | 1 | #0 | +1 | -1 |
| 1007 | 1 | 1 | #1 | +1 | -1 |
| 1008 | 0 | 0 | #2 | +1 | +1 |
| 1009 | 0 | 0 | #3 | +1 | +1 |
| 1010 | 1 | 1 | #2 | +1 | +1 |
| 1011 | 1 | 1 | #3 | +1 | +1 |
| 1012 | 0 | 0 | #2 | +1 | -1 |
| 1013 | 0 | 0 | #3 | +1 | -1 |
| 1014 | 1 | 1 | #2 | +1 | -1 |
| 1015 | 1 | 1 | #3 | +1 | -1 |

For type2, values of **w*_{f}***(***k**'*)**, w*ₜ***(***l'***)*, w*ₜ(*l'*), and Δ corresponding to a DMRS port *p* may be determined by looking up table 6-3 based on a value of an OCC index.

For example, when a type2 DMRS single-symbol configuration is used, and the DMRS port *p* is any one of a port 0 to a port 5 and a port 12 to a port 17, the values of **w*_{f}***(***k'***) and **w*ₜ***(***l'***) corresponding to the DMRS port *p* may be determined according to table 6-3.

For another example, when a type2 DMRS double-symbol configuration is used, and the DMRS port *p* is any one of a port 0 to a port 11 and a port 12 to a port 23, the values of **w*_{f}***(***k'***) and **w*ₜ***(***l'***) corresponding to the DMRS port *p* may be determined according to table 6-3.

**Table 6-3: Parameter value corresponding to a PDSCH DMRS port (type1 R18)**

| p | CDM group | Δ | *w*_{f}(*k'*) | *w*ₜ(*l'*) | |
|---|---|---|---|---|---|
| | | | | *l'* = 0 | *l'* = 1 |
| 1000 | 0 | 0 | #0 | +1 | +1 |
| 1001 | 0 | 0 | #1 | +1 | +1 |
| 1002 | 1 | 1 | #0 | +1 | +1 |
| 1003 | 1 | 1 | #1 | +1 | +1 |
| 1004 | 2 | 2 | #0 | +1 | +1 |
| 1005 | 2 | 2 | #1 | +1 | +1 |
| 1006 | 0 | 0 | #0 | +1 | -1 |
| 1007 | 0 | 0 | #1 | +1 | -1 |
| 1008 | 1 | 1 | #0 | +1 | -1 |
| 1009 | 1 | 1 | #1 | +1 | -1 |
| 1010 | 2 | 2 | #0 | +1 | -1 |
| 1011 | 2 | 2 | #1 | +1 | -1 |
| 1012 | 0 | 0 | #2 | +1 | +1 |
| 1013 | 0 | 0 | #3 | +1 | +1 |
| 1014 | 1 | 1 | #2 | +1 | +1 |
| 1015 | 1 | 1 | #3 | +1 | +1 |
| 1016 | 2 | 2 | #2 | +1 | +1 |
| 1017 | 2 | 2 | #3 | +1 | +1 |
| 1018 | 0 | 0 | #2 | +1 | -1 |
| 1019 | 0 | 0 | #3 | +1 | -1 |
| 1020 | 1 | 1 | #2 | +1 | -1 |
| 1021 | 1 | 1 | #3 | +1 | -1 |
| 1022 | 2 | 2 | #2 | +1 | -1 |
| 1023 | 2 | 2 | #3 | +1 | -1 |

### Solution 3: DFT sequence

In solution 1, a value of a frequency domain cover code *w*_{f}(*k'*) (that is, a value of an OCC index) may be determined according to table 7-1.

**Table 7-1: Frequency domain cover code w_{f}(k')**

| OCC index | w_{f}(0) | w_{f}(1) | w_{f}(2) | w_{f}(3) |
|---|---|---|---|---|
| #0 | +1 | +1 | +1 | +1 |
| #1 | +1 | -1 | +1 | -1 |
| #2 | +1 | +j | -1 | -j |
| #3 | +1 | -j | -1 | +j |

For type1, values of **w*_{f}***(***k'***)**, w*ₜ***(***l'***)***,*** and Δ corresponding to a DMRS port *p* may be determined by looking up table 7-2 based on a value of an OCC index. For example, when a type1 single-symbol configuration is used, and the DMRS port *p* is any one of a port 0 to a port 3 and a port 8 to a port 11, the values of **w*_{f}***(***k'***), **w*ₜ***(***l'***), and Δ corresponding to the DMRS port *p* may be determined according to table 7-2.

For another example, when a type1 double-symbol configuration is used, and the DMRS port *p* is any one of a port 0 to a port 7 and a port 8 to a port 15, the values of **w*_{f}***(***k'***) and **w*ₜ***(***l'***) corresponding to the DMRS port *p* may be determined according to table 7-2.

**Table 7-2: Parameter value corresponding to a PDSCH DMRS port (type1 R18)**

| p | CDM group | Δ | *w*_{f}*(k')* | *w*ₜ(*l'*) | |
|---|---|---|---|---|---|
| | | | | *l'* = 0 | *1'=1* |
| 1000 | 0 | 0 | #0 | +1 | +1 |
| 1001 | 0 | 0 | #1 | +1 | +1 |
| 1002 | 1 | 1 | #0 | +1 | +1 |
| 1003 | 1 | 1 | #1 | +1 | +1 |
| 1004 | 0 | 0 | #0 | +1 | -1 |
| 1005 | 0 | 0 | #1 | +1 | -1 |
| 1006 | 1 | 1 | #0 | +1 | -1 |
| 1007 | 1 | 1 | #1 | +1 | -1 |
| 1008 | 0 | 0 | #2 | +1 | +1 |
| 1009 | 0 | 0 | #3 | +1 | +1 |
| 1010 | 1 | 1 | #2 | +1 | +1 |
| 1011 | 1 | 1 | #3 | +1 | +1 |
| 1012 | 0 | 0 | #2 | +1 | -1 |
| 1013 | 0 | 0 | #3 | +1 | -1 |
| 1014 | 1 | 1 | #2 | +1 | -1 |
| 1015 | 1 | 1 | #3 | +1 | -1 |

For type2, values of **w*_{f}***(***k'***)**, w*ₜ***(***l'***), *w*ₜ(*l'*), and Δ corresponding to a DMRS port *p* may be determined by looking up table 7-3 based on a value of an OCC index.

For example, when a type2 DMRS single-symbol configuration is used, and the DMRS port *p* is any one of a port 0 to a port 5 and a port 12 to a port 17, the values of **w*_{f}***(***k'***) and **w*ₜ***(***l'***) corresponding to the DMRS port *p* may be determined according to table 7-3.

For another example, when a type2 DMRS double-symbol configuration is used, and the DMRS port *p* is any one of a port 0 to a port 11 and a port 12 to a port 23, the values of **w*_{f}*(*k'*)** and **w*ₜ*(*l'*)** corresponding to the DMRS port *p* may be determined according to table 7-3.

**Table 7-3: Parameter value corresponding to a PDSCH DMRS port (type1 R18)**

| p | CDM group | Δ | *w*_{f}(*k'*) | *w*ₜ(*l'*) | |
|---|---|---|---|---|---|
| | | | | *l'* = 0 | *l'* = 1 |
| 1000 | 0 | 0 | #0 | +1 | +1 |
| 1001 | 0 | 0 | #1 | +1 | +1 |
| 1002 | 1 | 1 | #0 | +1 | +1 |
| 1003 | 1 | 1 | #1 | +1 | +1 |
| 1004 | 2 | 2 | #0 | +1 | +1 |
| 1005 | 2 | 2 | #1 | +1 | +1 |
| 1006 | 0 | 0 | #0 | +1 | -1 |
| 1007 | 0 | 0 | #1 | +1 | -1 |
| 1008 | 1 | 1 | #0 | +1 | -1 |
| 1009 | 1 | 1 | #1 | +1 | -1 |
| 1010 | 2 | 2 | #0 | +1 | -1 |
| 1011 | 2 | 2 | #1 | +1 | -1 |
| 1012 | 0 | 0 | #2 | +1 | +1 |
| 1013 | 0 | 0 | #3 | +1 | +1 |
| 1014 | 1 | 1 | #2 | +1 | +1 |
| 1015 | 1 | 1 | #3 | +1 | +1 |
| 1016 | 2 | 2 | #2 | +1 | +1 |
| 1017 | 2 | 2 | #3 | +1 | +1 |
| 1018 | 0 | 0 | #2 | +1 | -1 |
| 1019 | 0 | 0 | #3 | +1 | -1 |
| 1020 | 1 | 1 | #2 | +1 | -1 |
| 1021 | 1 | 1 | #3 | +1 | -1 |
| 1022 | 2 | 2 | #2 | +1 | -1 |
| 1023 | 2 | 2 | #3 | +1 | -1 |

### Implementation 2

In Implementation 2, the time-frequency resource mapping rule may satisfy the following formula 3.1 and formula 3.2.

Formula 3.1 is as follows: ${a}_{k , l}^{\left(p, μ\right)} = {β}_{PDSCH}^{DMRS} {w}_{f} \left(k′\right) {w}_{t} \left(l′\right) r \left(2n+k′\right) b \left(n mod 2\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} + l ′$ $n = 0 , 1 , …$ $l ′ = 0 , 1$

p is an index of a DMRS port, µ is a subcarrier spacing parameter, ${a}_{k , l}^{\left(p, μ\right)}$ is a DMRS symbol that corresponds to a DMRS port p and that is mapped to an RE whose index is (k, l), ${β}_{PDSCH}^{DMRS}$ is a power factor, wₜ(l') is a time domain cover code sequence element corresponding to a time domain symbol whose index is l', and w_{f}(k') is a frequency domain cover code sequence element corresponding to a subcarrier whose index is k'. Δ is a subcarrier offset factor, and l̅ is a symbol index of a start time domain symbol occupied by the DMRS symbol or a symbol index of a reference time domain symbol. b(n mod 2) is an outer cover code sequence. For an R15 legacy DMRS port, b(0)=1 and b(1)=1. For an R18 new DMRS port, b(0)=1 and b(1)=-1, or b(0)=-1 and b(1)=1.

A b(n mod 2) outer frequency domain cover code index may be determined according to table 8-1.

**Table 8-1**

| | Cover code element value | |
|---|---|---|
| Outer frequency domain cover code index | b(0) | b(1) |
| Second port set (R15) | +1 | +1 |
| First port set (R18) | +1 | -1 |

Formula 3.2 is as follows: ${a}_{k , l}^{\left(p, μ\right)} = {β}_{PDSCH}^{DMRS} {w}_{f} \left(k′\right) {w}_{t} \left(l′\right) r \left(2n+k′\right) b \left(n mod 2\right) t \left(i\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} + l ′$ $n = 0 , 1 , …$ $l ′ = 0 , 1$ $i ∈ 0 , 1 , 2 , 3$

***t***(***i***) represents an anti-interference sequence (or referred to as a cover code element), and *i* is a sequence index, and is applicable to interference randomization between different additional symbols. Compared with formula 3.1, ***t***(***i***) is added in formula 3.2. A value of *t*(*i*) may be determined according to table 4.

### Implementation 3

In Implementation 3, the time-frequency resource mapping rule may satisfy the following formula 4.1 and formula 4.2.

Formula 4.1 is as follows: ${a}_{k , l}^{\left(p, μ\right)} = {β}_{PDSCH}^{DMRS} {w}_{f} \left(k′\right) {w}_{t} \left(l′\right) r \left(2n+k′\right) b \left(\left(2n+k′\right) mod 4\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} \left(i\right) + l ′$ $n = 0 , 1 , …$ $l ′ = 0 , 1$

p is an index of a DMRS port, *µ* is a subcarrier spacing parameter, ${a}_{k , l}^{\left(p, μ\right)}$ is a DMRS symbol that corresponds to a DMRS port p and that is mapped to an RE whose index is (*k, l*), ${β}_{PDSCH}^{DMRS}$ is a power factor, w*ₜ*(*l'*) is a time domain cover code sequence element corresponding to a time domain symbol whose index is *l'*, and w*_{f}*(*k'*) is a frequency domain cover code sequence element corresponding to a subcarrier whose index is *k'.* Δ is a subcarrier offset factor, and *l̅* is a symbol index of a start time domain symbol occupied by the DMRS symbol or a symbol index of a reference time domain symbol. *b*((2*n + k'*) mod 4) is an outer cover code sequence, and an outer frequency domain cover code (FD-OCC) index may be determined according to table 9-1. An outer time domain cover code (TD-OCC) index may be determined according to table 9-2. i represents a relative index of non-adjacent DMRS symbols, or a relative index between different additional DMRS symbol groups. It may be understood that, the frequency domain cover code w_{f}(k')b((2n + k') mod 4) in the foregoing formula may be alternatively represented in a form of w_{f}(k') in Implementation 1 and w_{f}(k')b(n mod 2) in Implementation 2.

Formula 4.2 is as follows: ${a}_{k , l}^{\left(p, μ\right)} = {β}_{PDSCH}^{DMRS} {w}_{f} \left(k′\right) {w}_{t} \left(l′\right) r \left(2n+k′\right) b \left(\left(2n+k′\right)mod 4\right) t \left(i\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} \left(i\right) + l ′$ $n = 0 , 1 , …$ $l ′ = 0 , 1$ $i ∈ 0 , 1 , 2 , 3$

***t***(***i***) represents an anti-interference sequence (or referred to as a cover code element), and *i* is a sequence index, and is applicable to interference randomization between different additional symbols. Compared with formula 4.1, ***t***(***i***) is added in formula 4.2. A value of *t*(*i*) may be determined according to table 4.

**Table 9-1**

| | Cover code element value | | | |
|---|---|---|---|---|
| FD-OCC index | ***b***(**0**) | ***b***(**1**) | ***b***(**2**) | ***b***(**3**) |
| Second port set | +1 | +1 | +1 | +1 |
| First port set | +1 | +1 | -1 | -1 |

**Table 9-2**

| | Cover code element value | | | |
|---|---|---|---|---|
| TD-OCC index | ***t***(**0**) | ***t***(**1**) | ***t***(**2**) | ***t***(**3**) |
| Second port set | +1 | +1 | +1 | +1 |
| First port set | +1 | -1 | +1 | -1 |

In embodiments of this application, FD-OCC enhancement may be implemented in Implementation 2 and Implementation 3 by using a same sequence, including but not limited to the following solutions.

### Solution 1: Interference randomization sequence

For type1, values of *w*_{f}(*k'*), *w*ₜ(*l'*), and Δ corresponding to a DMRS port *p* may be determined according to table 10-1.

For example, when a type1 single-symbol configuration is used, and the DMRS port*p* is any one of a port 0 to a port 3 and a port 8 to a port 11, the values of **w*_{f}***(***k'***), **w*ₜ***(***l'***)***,*** and Δ corresponding to the DMRS port *p* may be determined according to table 10-1.

For another example, when a type1 double-symbol configuration is used, and the DMRS port *p* is any one of a port 0 to a port 7 and a port 8 to a port 15, the values of **w*_{f}***(***k'***) and ***wₜ***(***l'***) corresponding to the DMRS port *p* may be determined according to table 10-1.

For type2, values of *w*_{f}(*k'*), *w*ₜ(*l'*), and Δ corresponding to a DMRS port *p* may be determined according to table 10-2.

For example, when a type2 DMRS single-symbol configuration is used, and the DMRS port *p* is any one of a port 0 to a port 5 and a port 12 to a port 17, the values of **w*_{f}***(***k**'*) and **w*ₜ***(***l'***) corresponding to the DMRS port *p* may be determined according to table 10-2.

For another example, when a type2 DMRS double-symbol configuration is used, and the DMRS port *p* is any one of a port 0 to a port 11 and a port 12 to a port 23, the values of **w*_{f}***(***k**'*) and **w*ₜ***(***l'***) corresponding to the DMRS port *p* may be determined according to table 10-2.

**Table 10-1: Parameter values corresponding to different PDSCH DMRS ports (type1 R18)**

| **p** | *λ* | **Δ** | *w*_{f}(*k*') | | *w*ₜ(*l'*) | |
|---|---|---|---|---|---|---|
| | | | *k' = 0* | *k'* = 1 | *l'* = 0 | *l'* = 1 |
| 1000 | 0 | 0 | +1 | +j | +1 | +j |
| 1001 | 0 | 0 | +1 | -j | +1 | +j |
| 1002 | 1 | 1 | +1 | +j | +1 | +j |
| 1003 | 1 | 1 | +1 | -j | +1 | +j |
| 1004 | 0 | 0 | +1 | +j | +1 | -j |
| 1005 | 0 | 0 | +1 | -j | +1 | -j |
| 1006 | 1 | 1 | +1 | +j | +1 | -j |
| 1007 | 1 | 1 | +1 | -j | +1 | -j |
| 1008 | 0 | 0 | +1 | +j | +1 | +j |
| 1009 | 0 | 0 | +1 | -j | +1 | +j |
| 1010 | 1 | 1 | +1 | +j | +1 | +j |
| 1011 | 1 | 1 | +1 | -j | +1 | +j |
| 1012 | 0 | 0 | +1 | +j | +1 | -j |
| 1013 | 0 | 0 | +1 | -j | +1 | -j |
| 1014 | 1 | 1 | +1 | +j | +1 | -j |
| 1015 | 1 | 1 | +1 | -j | +1 | -j |

**Table 10-2: Parameter values corresponding to different PDSCH DMRS ports (type2 R18)**

| p | *λ* | Δ | *w*_{f}*(k')* | | *w*ₜ(*l'*) | |
|---|---|---|---|---|---|---|
| | | | *k' = 0* | *k'=1* | *l'* = 0 | *l'* = 1 |
| 1000 | 0 | 0 | +1 | +j | +1 | +j |
| 1001 | 0 | 0 | +1 | -j | +1 | +j |
| 1002 | 1 | 2 | +1 | +j | +1 | +j |
| 1003 | 1 | 2 | +1 | -j | +1 | +j |
| 1004 | 2 | 4 | +1 | +j | +1 | +j |
| 1005 | 2 | 4 | +1 | -j | +1 | +j |
| 1006 | 0 | 0 | +1 | +j | +1 | -j |
| 1007 | 0 | 0 | +1 | -j | +1 | -j |
| 1008 | 1 | 2 | +1 | +j | +1 | -j |
| 1009 | 1 | 2 | +1 | -j | +1 | -j |
| 1010 | 2 | 4 | +1 | +j | +1 | -j |
| 1011 | 2 | 4 | +1 | -j | +1 | -j |
| 1012 | 0 | 0 | +1 | +j | +1 | +j |
| 1013 | 0 | 0 | +1 | -j | +1 | +j |
| 1014 | 1 | 2 | +1 | +j | +1 | +j |
| 1015 | 1 | 2 | +1 | -j | +1 | +j |
| 1016 | 2 | 4 | +1 | +j | +1 | +j |
| 1017 | 2 | 4 | +1 | -j | +1 | +j |
| 1018 | 0 | 0 | +1 | +j | +1 | -j |
| 1019 | 0 | 0 | +1 | -j | +1 | -j |
| 1020 | 1 | 2 | +1 | +j | +1 | -j |
| 1021 | 1 | 2 | +1 | -j | +1 | -j |
| 1022 | 2 | 4 | +1 | +j | +1 | -j |
| 1023 | 2 | 4 | +1 | -j | +1 | -j |

### Solution 2: Walsh sequence

For type1, values of *w*_{f}(*k'*), *w*ₜ(*l'*), and Δ corresponding to a DMRS port *p* may be determined according to table 11-1.

For example, when a type1 single-symbol configuration is used, and the DMRS port*p* is any one of a port 0 to a port 3 and a port 8 to a port 11, the values of **w*_{f}***(***k'***), **w*ₜ***(***l'***)*,* and Δ corresponding to the DMRS port *p* may be determined according to table 11-1.

For another example, when a type1 double-symbol configuration is used, and the DMRS port *p* is any one of a port 0 to a port 7 and a port 8 to a port 15, the values of **w*_{f}***(***k'***) and **w*ₜ***(***l'***) corresponding to the DMRS port *p* may be determined according to table 11-1.

For type2, values of *w*_{f}(*k'*), *w*ₜ(*l'*), and Δ corresponding to a DMRS port *p* may be determined according to table 11-2.

For example, when a type2 DMRS single-symbol configuration is used, and the DMRS port *p* is any one of a port 0 to a port 5 and a port 12 to a port 17, the values of **w*_{f}***(***k'***) and **w*ₜ***(***l'***) corresponding to the DMRS port *p* may be determined according to table 11-2.

For another example, when a type2 DMRS double-symbol configuration is used, and the DMRS port *p* is any one of a port 0 to a port 11 and a port 12 to a port 23, the values of **w*_{f}***(***k'***) and **w*ₜ*(*l'*)** corresponding to the DMRS port *p* may be determined according to table 11-2.

**Table 11-1: Parameter values corresponding to different PDSCH DMRS ports (type1 R18)**

| ***p*** | *λ* | **Δ** | *w*_{f}(*k'*) | | *w*ₜ(*l'*) | |
|---|---|---|---|---|---|---|
| | | | *k' =* 0 | *k'* = 1 | *l'* = 0 | *l'* = 1 |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |
| 1008 | 0 | 0 | +1 | +1 | +1 | +1 |
| 1009 | 0 | 0 | +1 | -1 | +1 | +1 |
| 1010 | 1 | 1 | +1 | +1 | +1 | +1 |
| 1011 | 1 | 1 | +1 | -1 | +1 | +1 |
| 1012 | 0 | 0 | +1 | +1 | +1 | -1 |
| 1013 | 0 | 0 | +1 | -1 | +1 | -1 |
| 1014 | 1 | 1 | +1 | +1 | +1 | -1 |
| 1015 | 1 | 1 | +1 | -1 | +1 | -1 |

**Table 11-2: Parameter values corresponding to different PDSCH DMRS ports (type2 R18)**

| *p* | *λ* | Δ | *w*_{f}(*k'*) | | *w*ₜ(*l'*) | |
|---|---|---|---|---|---|---|
| | | | *k' =* 0 | *k'* =1 | *l'* = 0 | *l'* = 1 |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |
| 1012 | 0 | 0 | +1 | +1 | +1 | +1 |

| *k'=0* | *k'* = 1 | *l'* = 0 | *l'* = 1 | | | |
|---|---|---|---|---|---|---|
| 1013 | 0 | 0 | +1 | -1 | +1 | +1 |
| 1014 | 1 | 2 | +1 | +1 | +1 | +1 |
| 1015 | 1 | 2 | +1 | -1 | +1 | +1 |
| 1016 | 2 | 4 | +1 | +1 | +1 | +1 |
| 1017 | 2 | 4 | +1 | -1 | +1 | +1 |
| 1018 | 0 | 0 | +1 | +1 | +1 | -1 |
| 1019 | 0 | 0 | +1 | -1 | +1 | -1 |
| 1020 | 1 | 2 | +1 | +1 | +1 | -1 |
| 1021 | 1 | 2 | +1 | -1 | +1 | -1 |
| 1022 | 2 | 4 | +1 | +1 | +1 | -1 |
| 1023 | 2 | 4 | +1 | -1 | +1 | -1 |

### Solution 3: DFT sequence

For type1, values of *w*_{f}(*k'*), *w*ₜ(*l'*), and Δ corresponding to a DMRS port *p* may be determined according to table 12-1.

For example, when a type1 single-symbol configuration is used, and the DMRS port*p* is any one of a port 0 to a port 3 and a port 8 to a port 11, the values of **w*_{f}***(***k'***), **w*ₜ***(***l'***)*,* and Δ corresponding to the DMRS port *p* may be determined according to table 12-1.

For another example, when a type1 double-symbol configuration is used, and the DMRS port *p* is any one of a port 0 to a port 7 and a port 8 to a port 15, the values of **w*_{f}***(***k'***) and **w*ₜ*(*l'*)** corresponding to the DMRS port *p* may be determined according to table 12-1.

For type2, values of *w*_{f}(*k'*), *w*ₜ(*l'*), and Δ corresponding to a DMRS port *p* may be determined according to table 12-2.

For example, when a type2 DMRS single-symbol configuration is used, and the DMRS port *p* is any one of a port 0 to a port 5 and a port 12 to a port 17, the values of **w*_{f}***(***k'***) and **w*ₜ***(***l'***) corresponding to the DMRS port *p* may be determined according to table 12-2.

For another example, when a type2 DMRS double-symbol configuration is used, and the DMRS port *p* is any one of a port 0 to a port 11 and a port 12 to a port 23, the values of **w*_{f}***(***k'***) and **w*ₜ***(***l'***) corresponding to the DMRS port *p* may be determined according to table 12-2.

**Table 12-1: Parameter values corresponding to different PDSCH DMRS ports (type1 R18)**

| **p** | *λ* | **Δ** | *w*_{f}(*k'*) | | *w*ₜ(*l'*) | |
|---|---|---|---|---|---|---|
| | | | *k' =* 0 | *k'* = 1 | *l'* = 0 | *l'* = 1 |
| 1000 | 0 | 0 | +1 | +j | +1 | +1 |
| 1001 | 0 | 0 | +1 | -j | +1 | +1 |
| 1002 | 1 | 1 | +1 | +j | +1 | +1 |
| 1003 | 1 | 1 | +1 | -j | +1 | +1 |
| 1004 | 0 | 0 | +1 | +j | +1 | -1 |
| 1005 | 0 | 0 | +1 | -j | +1 | -1 |
| 1006 | 1 | 1 | +1 | +j | +1 | -1 |
| 1007 | 1 | 1 | +1 | -j | +1 | -1 |
| 1008 | 0 | 0 | +1 | +j | +1 | +1 |
| 1009 | 0 | 0 | +1 | -j | +1 | +1 |
| 1010 | 1 | 1 | +1 | +j | +1 | +1 |
| 1011 | 1 | 1 | +1 | -j | +1 | +1 |
| 1012 | 0 | 0 | +1 | +j | +1 | -1 |
| 1013 | 0 | 0 | +1 | -j | +1 | -1 |
| 1014 | 1 | 1 | +1 | +j | +1 | -1 |
| 1015 | 1 | 1 | +1 | -j | +1 | -1 |

**Table 12-2: Parameter values corresponding to different PDSCH DMRS ports (type2 R18)**

| *p* | *λ* | Δ | *w*_{f}(*k'*) | | *w*ₜ(*l'*) | |
|---|---|---|---|---|---|---|
| | | | *k' =* 0 | *k'*=1 | *l'* = 0 | *l'* = 1 |
| 1000 | 0 | 0 | +1 | +j | +1 | +1 |
| 1001 | 0 | 0 | +1 | -j | +1 | +1 |
| 1002 | 1 | 2 | +1 | +j | +1 | +1 |
| 1003 | 1 | 2 | +1 | -j | +1 | +1 |
| 1004 | 2 | 4 | +1 | +j | +1 | +1 |
| 1005 | 2 | 4 | +1 | -j | +1 | +1 |
| 1006 | 0 | 0 | +1 | +j | +1 | -1 |
| 1007 | 0 | 0 | +1 | -j | +1 | -1 |
| 1008 | 1 | 2 | +1 | +j | +1 | -1 |
| 1009 | 1 | 2 | +1 | -j | +1 | -1 |
| 1010 | 2 | 4 | +1 | +j | +1 | -1 |
| 1011 | 2 | 4 | +1 | -j | +1 | -1 |
| 1012 | 0 | 0 | +1 | +j | +1 | +1 |
| 1013 | 0 | 0 | +1 | -j | +1 | +1 |
| 1014 | 1 | 2 | +1 | +j | +1 | +1 |

| *k' =* 0 | *k' =* 1 | *l'* = 0 | *l'* = 1 | | | |
|---|---|---|---|---|---|---|
| 1015 | 1 | 2 | +1 | -j | +1 | +1 |
| 1016 | 2 | 4 | +1 | +j | +1 | +1 |
| 1017 | 2 | 4 | +1 | -j | +1 | +1 |
| 1018 | 0 | 0 | +1 | +j | +1 | -1 |
| 1019 | 0 | 0 | +1 | -j | +1 | -1 |
| 1020 | 1 | 2 | +1 | +j | +1 | -1 |
| 1021 | 1 | 2 | +1 | -j | +1 | -1 |
| 1022 | 2 | 4 | +1 | +j | +1 | -1 |
| 1023 | 2 | 4 | +1 | -j | +1 | -1 |

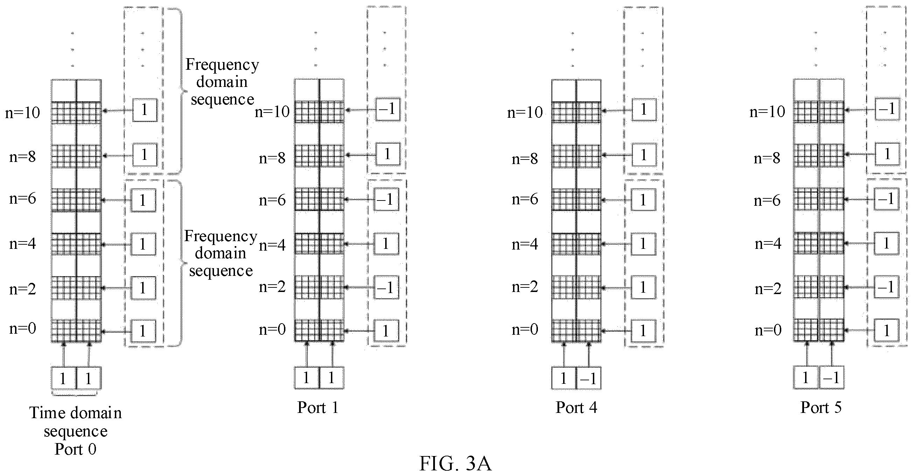

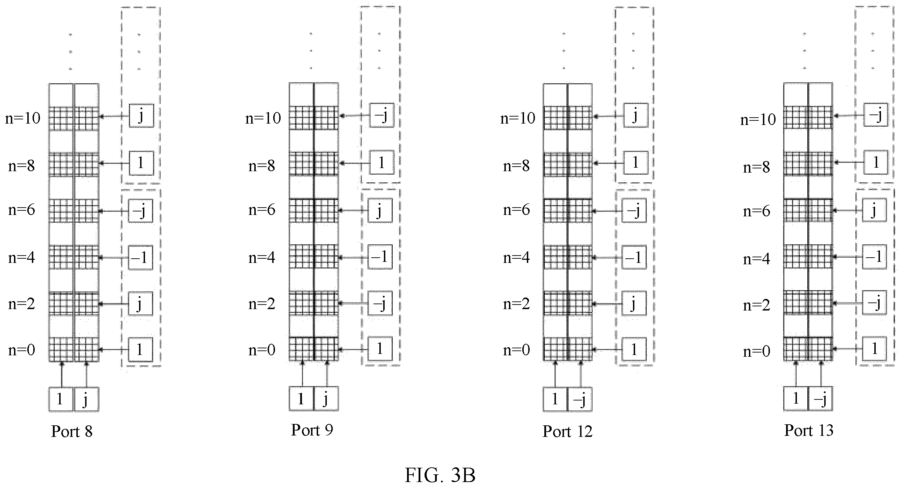

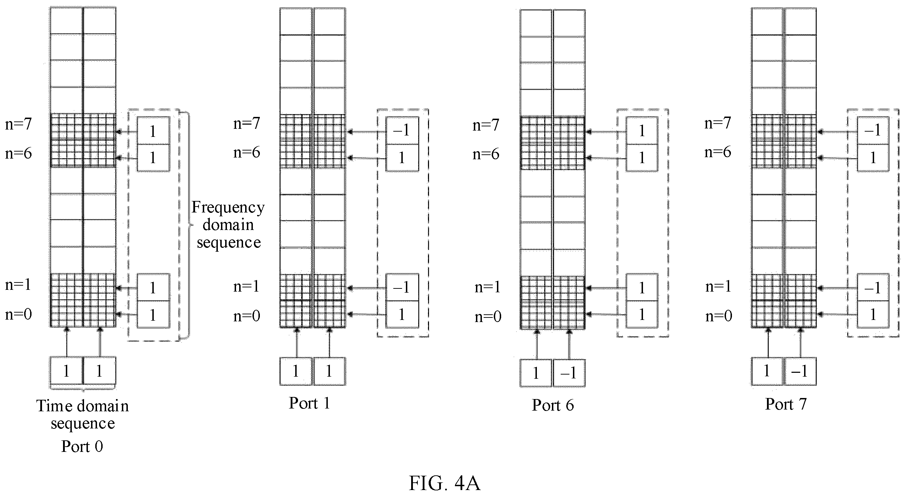

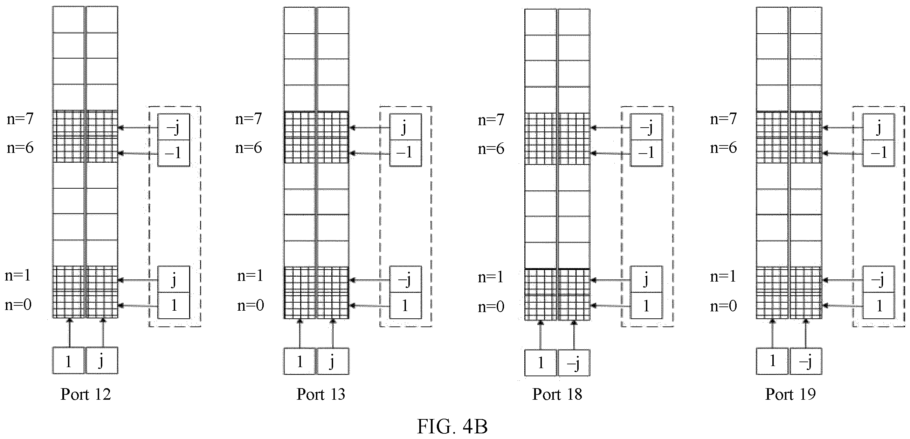

In table 5-1 to table 12-2, p=1000+port index value. For the port 0, the port 1, the port 4, and the port 5 corresponding to a single symbol of the configuration type 1, DMRS patterns corresponding to the port 0, the port 1, the port 4, and the port 5 are shown in FIG. 3A. For the port 8, the port 9, the port 12, and the port 13 corresponding to double symbols of the configuration type 1, DMRS patterns corresponding to the port 8, the port 9, the port 12, and the port 13 are shown in FIG. 3B. For the port 0, the port 1, the port 6, and the port 7 corresponding to a single symbol of the configuration type 2, DMRS patterns corresponding to the port 0, the port 1, the port 6, and the port 7 are shown in FIG. 4A. For the port 12, the port 13, the port 18, and the port 19 corresponding to double symbols of the configuration type 2, DMRS patterns corresponding to the port 12, the port 13, the port 18, and the port 19 are shown in FIG. 4B.

It may be understood that the foregoing tables are also applicable to a PUSCH port, and for a PUSCH port index, 1000 to 1023 may be changed to 0 to 23.

**The following provides descriptions with reference to specific examples.**

### Case 1: Front-load single symbol + addition1 symbol

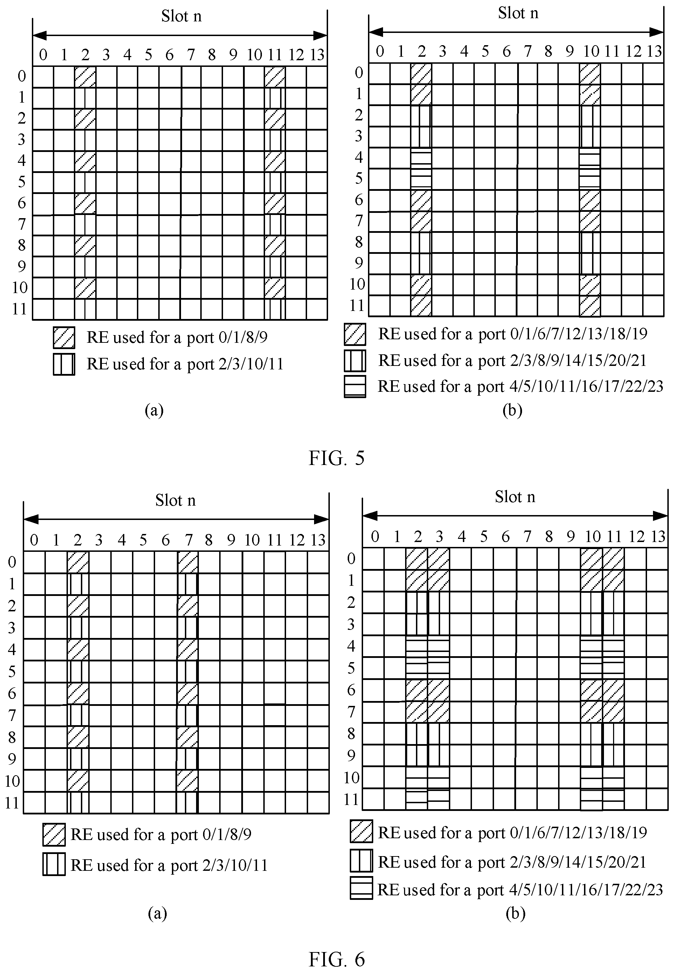

As shown in (a) in FIG. 5, in a type1 DMRS configuration, when a single symbol is used as a front-load DMRS symbol, and a number of additional DMRSs is 1, an example in which the front-load DMRS symbol is a symbol 2 is used, and an example in which the additional symbol is a symbol 7 is used.

As shown in (b) in FIG. 5, in a type2 DMRS configuration, when a single symbol is used as a front-load DMRS symbol, and a number of additional DMRSs is 1, an example in which the front-load DMRS symbol is a symbol 2 is used, and an example in which the additional symbol is a symbol 7 is used.

### Implementation 1: A DMRS sequence is implemented by using an interference randomization sequence or a DFT sequence.

As shown in table 13-1, a port in a type1 CDM group 0 is used as an example. In the symbol 2, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the new port 8 corresponds to frequency domain OCCs {+1, +j, -1, -j} on the subcarrier 0, the subcarrier 2, the subcarrier 4, and the subcarrier 6 respectively; and the new port 9 corresponds to frequency domain OCCs {+1, -j, -1, +j} on the subcarrier 0, the subcarrier 2, the subcarrier 4, and the subcarrier 6 respectively.

In the symbol 7, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the new port 8 corresponds to frequency domain OCCs {-1, -j, 1, j} on the subcarrier 0, the subcarrier 2, the subcarrier 4, and the subcarrier 6 respectively; and the new port 9 corresponds to frequency domain OCCs {-1, j, 1, -j} on the subcarrier 0, the subcarrier 2, the subcarrier 4, and the subcarrier 6 respectively.

By analogy, frequency domain OCCs corresponding to the port 0, the port 1, the port 8, and the port 9 on the subcarrier 8, the subcarrier 10, the subcarrier 12, and the subcarrier 14 in the symbol 2 and the symbol 7, and frequency domain OCCs corresponding to the port 0, the port 1, the port 8, and the port 9 on the subcarrier 16, the subcarrier 18, the subcarrier 20, and the subcarrier 22 in the symbol 2 and the symbol 7 may be determined according to table 13-1.

In this way, a DMRS corresponding to the new port and a DMRS corresponding to the legacy port may be distinguished by using 4-length frequency domain OCCs, to implement code domain orthogonality.

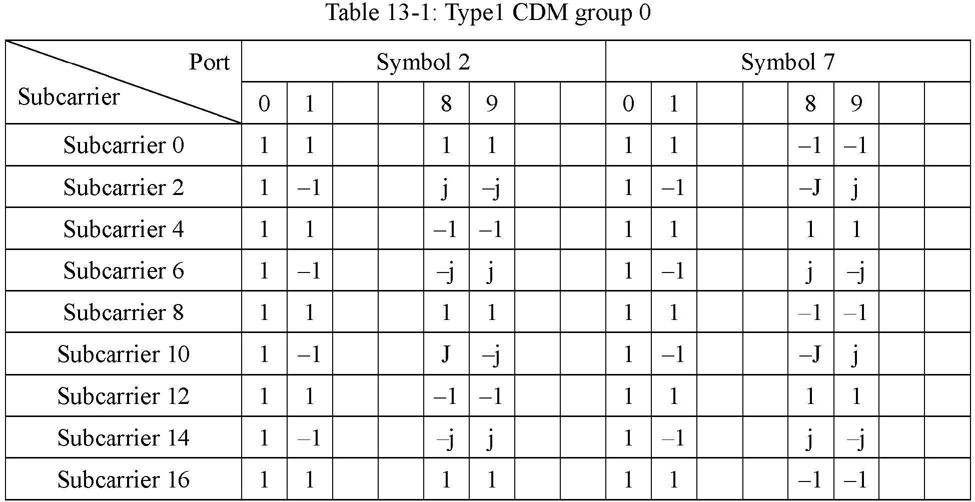

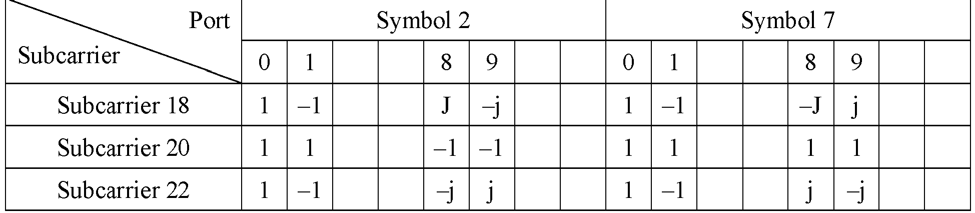

As shown in table 13-2, a port in a type1 CDM group 1 is used as an example. In the symbol 2, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the new port 10 corresponds to frequency domain OCCs {+1, +j, -1, -j} on the subcarrier 1, the subcarrier 3, the subcarrier 5, and the subcarrier 7 respectively; and the new port 11 corresponds to frequency domain OCCs {+1, -j, -1, +j} on the subcarrier 1, the subcarrier 3, the subcarrier 5, and the subcarrier 7 respectively.

In the symbol 7, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the new port 10 corresponds to frequency domain OCCs {-1, -j, 1, j} on the subcarrier 1, the subcarrier 3, the subcarrier 5, and the subcarrier 7 respectively; and the new port 11 corresponds to frequency domain OCCs {-1, j, 1, -j} on the subcarrier 1, the subcarrier 3, the subcarrier 5, and the subcarrier 7 respectively.

By analogy, frequency domain OCCs corresponding to the port 2, the port 3, the port 10, and the port 11 on the subcarrier 9, the subcarrier 11, the subcarrier 13, and the subcarrier 15 in the symbol 2 and the symbol 7, and frequency domain OCCs corresponding to the port 2, the port 3, the port 10, and the port 11 on the subcarrier 17, the subcarrier 19, the subcarrier 21, and the subcarrier 23 in the symbol 2 and the symbol 7 may be determined according to table 13-2.

In this way, a DMRS corresponding to the new port and a DMRS corresponding to the legacy port may be distinguished by using 4-length frequency domain OCCs, to implement code domain orthogonality.

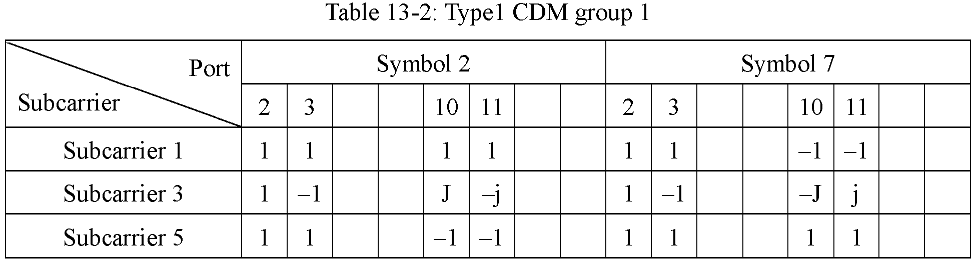

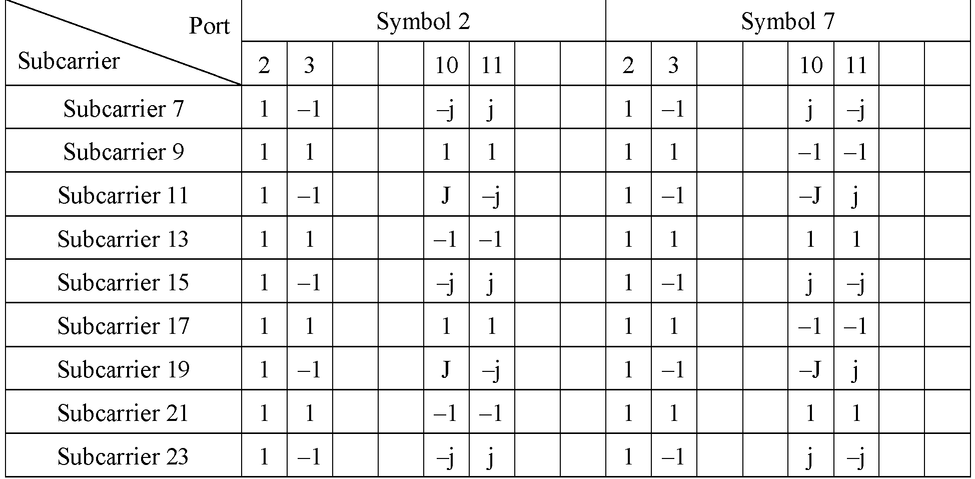

As shown in table 13-3, a port in a type2 CDM group 0 is used as an example. In the symbol 2, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the new port 12 corresponds to frequency domain OCCs {+1, +j, -1, -j} on the subcarrier 0, the subcarrier 1, the subcarrier 6, and the subcarrier 7 respectively; and the new port 13 corresponds to frequency domain OCCs {+1, -j, -1, +j} on the subcarrier 0, the subcarrier 1, the subcarrier 6, and the subcarrier 7 respectively.

In the symbol 7, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the new port 12 corresponds to frequency domain OCCs {-1, -j, 1, j} on the subcarrier 0, the subcarrier 1, the subcarrier 6, and the subcarrier 7 respectively; and the new port 13 corresponds to frequency domain OCCs {-1, j, 1, -j} on the subcarrier 0, the subcarrier 1, the subcarrier 6, and the subcarrier 7 respectively.

In this way, a DMRS corresponding to the new port and a DMRS corresponding to the legacy port may be distinguished by using 4-length frequency domain OCCs, to implement code domain orthogonality.

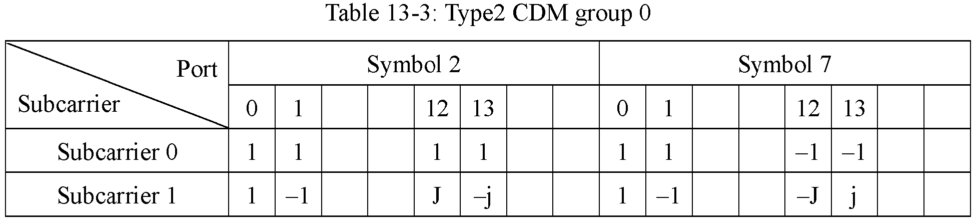

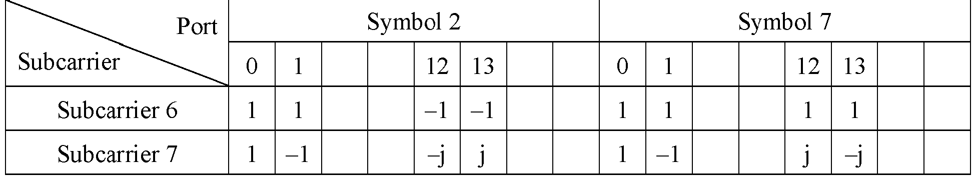

As shown in table 13-4, a port in a type2 CDM group 1 is used as an example. In the symbol 2, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the new port 14 corresponds to frequency domain OCCs {+1, +j, -1, -j} on the subcarrier 2, the subcarrier 3, the subcarrier 8, and the subcarrier 9 respectively; and the new port 15 corresponds to frequency domain OCCs {+1, -j, -1, +j} on the subcarrier 2, the subcarrier 3, the subcarrier 8, and the subcarrier 9 respectively.

In the symbol 7, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the new port 14 corresponds to frequency domain OCCs {-1, -j, 1, j} on the subcarrier 2, the subcarrier 3, the subcarrier 8, and the subcarrier 9 respectively; and the new port 15 corresponds to frequency domain OCCs {-1, j, 1, -j} on the subcarrier 2, the subcarrier 3, the subcarrier 8, and the subcarrier 9 respectively.

In this way, a DMRS corresponding to the new port and a DMRS corresponding to the legacy port may be distinguished by using 4-length frequency domain OCCs, to implement code domain orthogonality.

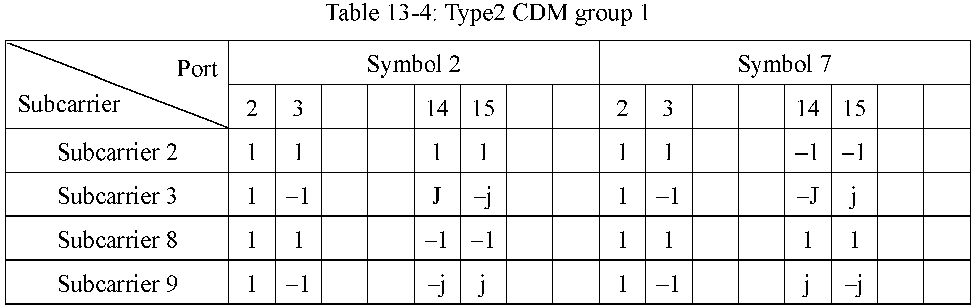

As shown in table 13-5, a port in a type2 CDM group 2 is used as an example. In the symbol 2, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the new port 16 corresponds to frequency domain OCCs {+1, +j, -1, -j} on the subcarrier 4, the subcarrier 5, the subcarrier 10, and the subcarrier 11 respectively; and the new port 17 corresponds to frequency domain OCCs {+1, -j, - 1, +j} on the subcarrier 4, the subcarrier 5, the subcarrier 10, and the subcarrier 11 respectively.

In the symbol 7, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the new port 16 corresponds to frequency domain OCCs {-1, -j, 1, j} on the subcarrier 4, the subcarrier 5, the subcarrier 10, and the subcarrier 11 respectively; and the new port 17 corresponds to frequency domain OCCs {-1, j, 1, -j} on the subcarrier 4, the subcarrier 5, the subcarrier 10, and the subcarrier 11 respectively.

In this way, a DMRS corresponding to the new port and a DMRS corresponding to the legacy port may be distinguished by using 4-length frequency domain OCCs, to implement code domain orthogonality.

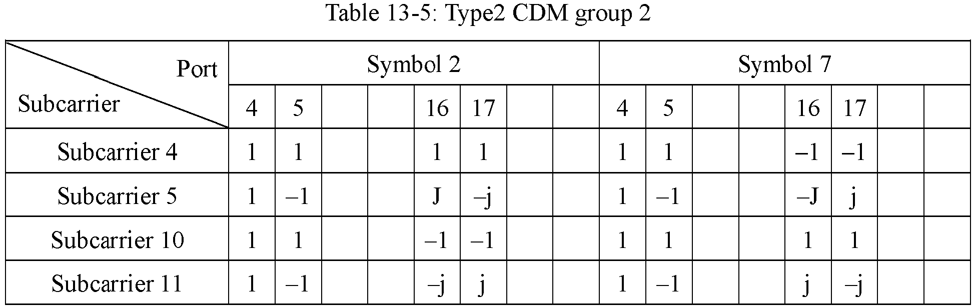

Implementation 2: ADMRS sequence is implemented by using a Walsh sequence.

As shown in table 14-1, a port in a type1 CDM group 0 is used as an example. In the symbol 2, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the new port 8 corresponds to frequency domain OCCs {+1, +1, -1, -1} on the subcarrier 0, the subcarrier 2, the subcarrier 4, and the subcarrier 6 respectively; and the new port 9 corresponds to frequency domain OCCs {+1, -1, -1, +1} on the subcarrier 0, the subcarrier 2, the subcarrier 4, and the subcarrier 6 respectively.

In the symbol 7, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the new port 8 corresponds to frequency domain OCCs {1, 1, -1, -1} on the subcarrier 0, the subcarrier 2, the subcarrier 4, and the subcarrier 6 respectively; and the new port 9 corresponds to frequency domain OCCs {1, -1, -1, 1} on the subcarrier 0, the subcarrier 2, the subcarrier 4, and the subcarrier 6 respectively.

By analogy, frequency domain OCCs corresponding to the port 0, the port 1, the port 8, and the port 9 on the subcarrier 8, the subcarrier 10, the subcarrier 12, and the subcarrier 14 in the symbol 2 and the symbol 7, and frequency domain OCCs corresponding to the port 0, the port 1, the port 8, and the port 9 on the subcarrier 16, the subcarrier 18, the subcarrier 20, and the subcarrier 22 in the symbol 2 and the symbol 7 may be determined according to table 14-1.

In this way, a DMRS corresponding to the new port and a DMRS corresponding to the legacy port may be distinguished by using 4-length frequency domain OCCs, to implement code domain orthogonality.

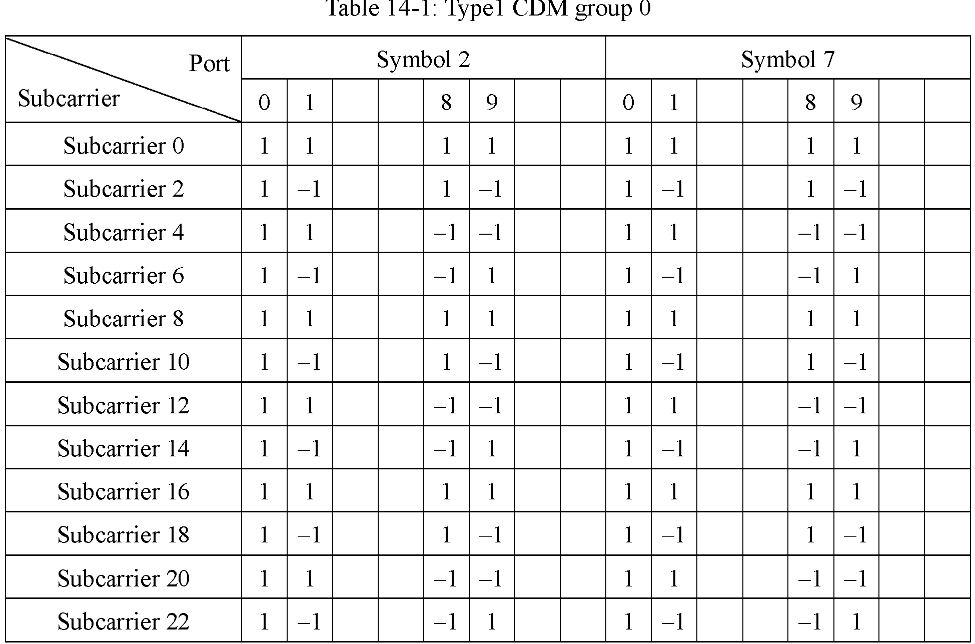

As shown in table 14-2, a port in a type1 CDM group 1 is used as an example. In the symbol 2, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the new port 10 corresponds to frequency domain OCCs {+1, +1, -1, -1} on the subcarrier 1, the subcarrier 3, the subcarrier 5, and the subcarrier 7 respectively; and the new port 11 corresponds to frequency domain OCCs {+1, -1, -1, +1} on the subcarrier 1, the subcarrier 3, the subcarrier 5, and the subcarrier 7 respectively.

In the symbol 7, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the new port 10 corresponds to frequency domain OCCs {1, 1, -1, -1} on the subcarrier 1, the subcarrier 3, the subcarrier 5, and the subcarrier 7 respectively; and the new port 11 corresponds to frequency domain OCCs {1, -1, -1, 1} on the subcarrier 1, the subcarrier 3, the subcarrier 5, and the subcarrier 7 respectively.

By analogy, frequency domain OCCs corresponding to the port 2, the port 3, the port 10, and the port 11 on the subcarrier 9, the subcarrier 11, the subcarrier 13, and the subcarrier 15 in the symbol 2 and the symbol 7, and frequency domain OCCs corresponding to the port 2, the port 3, the port 10, and the port 11 on the subcarrier 17, the subcarrier 19, the subcarrier 21, and the subcarrier 23 in the symbol 2 and the symbol 7 may be determined according to table 14-2.

In this way, a DMRS corresponding to the new port and a DMRS corresponding to the legacy port may be distinguished by using 4-length frequency domain OCCs, to implement code domain orthogonality.

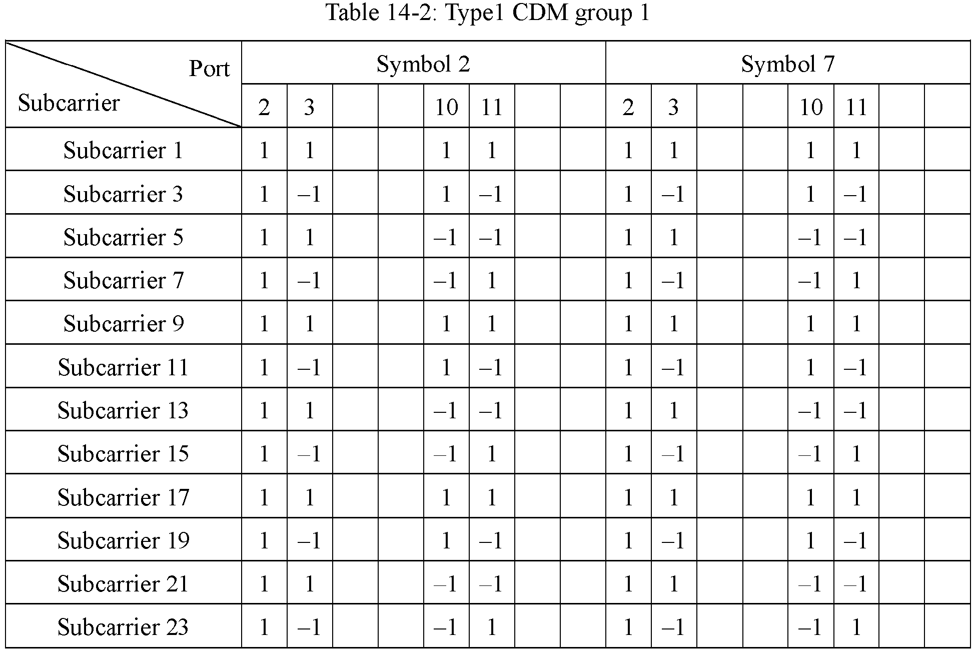

As shown in table 14-3, a port in a type2 CDM group 0 is used as an example. In the symbol 2, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the new port 12 corresponds to frequency domain OCCs {+1, +1, -1, -1} on the subcarrier 0, the subcarrier 1, the subcarrier 6, and the subcarrier 7 respectively; and the new port 13 corresponds to frequency domain OCCs {+1, -1, -1, +1} on the subcarrier 0, the subcarrier 1, the subcarrier 6, and the subcarrier 7 respectively.

In the symbol 7, the legacy port 2 corresponds to frequency domain OCCs {+1, +1, +1, +1} on the subcarrier 0, the subcarrier 1, the subcarrier 6, and the subcarrier 7 respectively; the legacy port 3 corresponds to frequency domain OCCs {+1, -1, +1, -1} on the subcarrier 0, the subcarrier 1, the subcarrier 6, and the subcarrier 7 respectively; the new port 10 corresponds to frequency domain OCCs {+1, +1, -1, -1} on the subcarrier 0, the subcarrier 1, the subcarrier 6, and the subcarrier 7 respectively; and the new port 11 corresponds to frequency domain OCCs {+1, -1, -1, +1} on the subcarrier 0, the subcarrier 1, the subcarrier 6, and the subcarrier 7 respectively.

In this way, a DMRS corresponding to the new port and a DMRS corresponding to the legacy port may be distinguished by using 4-length frequency domain OCCs, to implement code domain orthogonality.

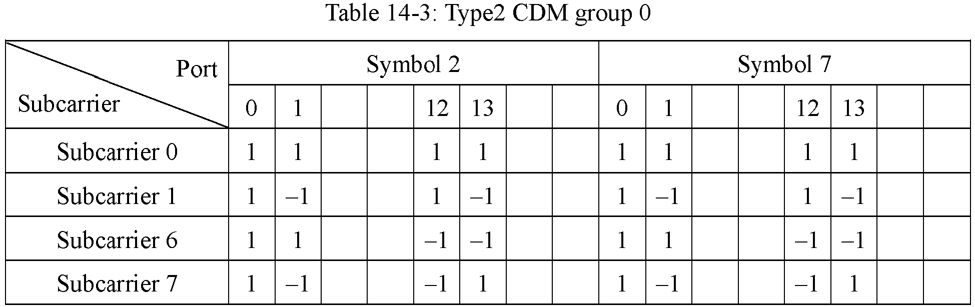

As shown in table 14-4, a port in a type2 CDM group 1 is used as an example. In the symbol 2, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the new port 14 corresponds to frequency domain OCCs {+1, +1, -1, -1} on the subcarrier 2, the subcarrier 3, the subcarrier 8, and the subcarrier 9 respectively; and the new port 15 corresponds to frequency domain OCCs {+1, -1, -1, +1} on the subcarrier 2, the subcarrier 3, the subcarrier 8, and the subcarrier 9 respectively.

In the symbol 7, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the new port 14 corresponds to frequency domain OCCs {+1, +1, -1, -1} on the subcarrier 2, the subcarrier 3, the subcarrier 8, and the subcarrier 9 respectively; and the new port 15 corresponds to frequency domain OCCs {+1, -1, -1, +1} on the subcarrier 2, the subcarrier 3, the subcarrier 8, and the subcarrier 9 respectively.

In this way, a DMRS corresponding to the new port and a DMRS corresponding to the legacy port may be distinguished by using 4-length frequency domain OCCs, to implement code domain orthogonality.

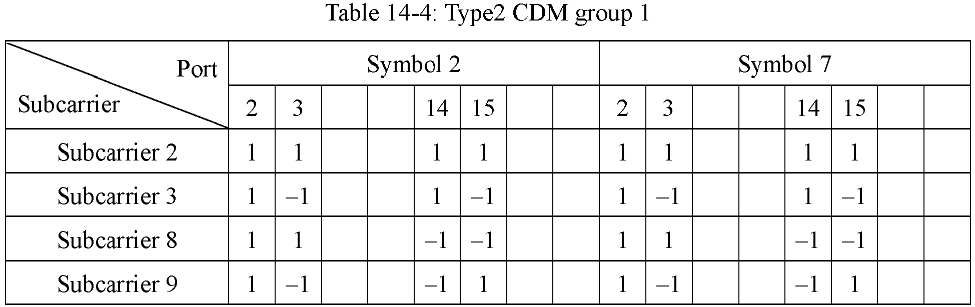

As shown in table 14-5, a port in a type2 CDM group 2 is used as an example. In the symbol 2, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the new port 16 corresponds to frequency domain OCCs {+1, +1, -1, -1} on the subcarrier 4, the subcarrier 5, the subcarrier 10, and the subcarrier 11 respectively; and the new port 17 corresponds to frequency domain OCCs {+1, -1, -1, +1} on the subcarrier 4, the subcarrier 5, the subcarrier 10, and the subcarrier 11 respectively.

In the symbol 7, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the new port 16 corresponds to frequency domain OCCs {+1, +1, -1, -1} on the subcarrier 4, the subcarrier 5, the subcarrier 10, and the subcarrier 11 respectively; and the new port 17 corresponds to frequency domain OCCs {+1, -1, -1, +1} on the subcarrier 4, the subcarrier 5, the subcarrier 10, and the subcarrier 11 respectively.

In this way, a DMRS corresponding to the new port and a DMRS corresponding to the legacy port may be distinguished by using 4-length frequency domain OCCs, to implement code domain orthogonality.

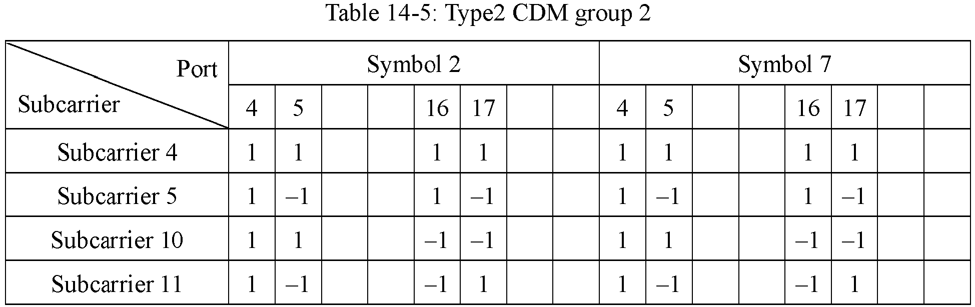

### Case 2: Front-load double symbols + addition1 group

As shown in (a) in FIG. 6, in a type1 DMRS configuration, when double symbols are used as front-load DMRS symbols, and a number of additional DMRSs is 1, an example in which the front-load DMRS symbols are a symbol 2 and a symbol 3 is used, and an example in which an additional symbol group is a symbol 10 and a symbol 11 is used.

As shown in (b) in FIG. 6, in a type2 DMRS configuration, when double symbols are used as front-load DMRS symbols, and a number of additional DMRSs is 1, an example in which the front-load DMRS symbols are a symbol 2 and a symbol 3 is used, and an example in which an additional symbol group is a symbol 10 and a symbol 11 is used.

Implementation 1: A DMRS sequence is implemented by using an interference randomization sequence.

As shown in table 15-1, a port in a type1 CDM group 0 is used as an example. In the symbol 2, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the legacy port 4 corresponds to frequency domain OCCs {+1, +1, +1, +1} on the subcarrier 0, the subcarrier 2, the subcarrier 4, and the subcarrier 6 respectively; the legacy port 5 corresponds to frequency domain OCCs {+1, -1, +1, -1} on the subcarrier 0, the subcarrier 2, the subcarrier 4, and the subcarrier 6 respectively; the new port 8 corresponds to frequency domain OCCs {+1, +j, -1, -j} on the subcarrier 0, the subcarrier 2, the subcarrier 4, and the subcarrier 6 respectively; the new port 9 corresponds to frequency domain OCCs {+1, -j, -1, +j} on the subcarrier 0, the subcarrier 2, the subcarrier 4, and the subcarrier 6 respectively; the new port 12 corresponds to frequency domain OCCs {+1, +j, -1, -j} on the subcarrier 0, the subcarrier 2, the subcarrier 4, and the subcarrier 6 respectively; and the new port 13 corresponds to frequency domain OCCs {+1, -j, -1, +j} on the subcarrier 0, the subcarrier 2, the subcarrier 4, and the subcarrier 6 respectively.

In the symbol 3, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the legacy port 4 corresponds to frequency domain OCCs {-1, -1, -1, -1} on the subcarrier 0, the subcarrier 2, the subcarrier 4, and the subcarrier 6 respectively; the legacy port 5 corresponds to frequency domain OCCs {-1, +1, -1, +1} on the subcarrier 0, the subcarrier 2, the subcarrier 4, and the subcarrier 6 respectively; the new port 8 corresponds to frequency domain OCCs {+j, -1, -j, +1} on the subcarrier 0, the subcarrier 2, the subcarrier 4, and the subcarrier 6 respectively; the new port 9 corresponds to frequency domain OCCs {+j, 1, -j, -1} on the subcarrier 0, the subcarrier 2, the subcarrier 4, and the subcarrier 6 respectively; the new port 12 corresponds to frequency domain OCCs {-j, +1, +j, -1} on the subcarrier 0, the subcarrier 2, the subcarrier 4, and the subcarrier 6 respectively; and the new port 13 corresponds to frequency domain OCCs {-j, -1, j, +1} on the subcarrier 0, the subcarrier 2, the subcarrier 4, and the subcarrier 6 respectively.

In the symbol 10, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the legacy port 4 corresponds to frequency domain OCCs {+1, +1, +1, +1} on the subcarrier 0, the subcarrier 2, the subcarrier 4, and the subcarrier 6 respectively; the legacy port 5 corresponds to frequency domain OCCs {+1, -1, +1, -1} on the subcarrier 0, the subcarrier 2, the subcarrier 4, and the subcarrier 6 respectively; the new port 8 corresponds to frequency domain OCCs {+1, +j, -1, -j} on the subcarrier 0, the subcarrier 2, the subcarrier 4, and the subcarrier 6 respectively; the new port 9 corresponds to frequency domain OCCs {+1, -j, -1, +j} on the subcarrier 0, the subcarrier 2, the subcarrier 4, and the subcarrier 6 respectively; the new port 12 corresponds to frequency domain OCCs {+1, +j, -1, -j} on the subcarrier 0, the subcarrier 2, the subcarrier 4, and the subcarrier 6 respectively; and the new port 13 corresponds to frequency domain OCCs {+1, -j, -1, +j} on the subcarrier 0, the subcarrier 2, the subcarrier 4, and the subcarrier 6 respectively.

In the symbol 11, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the legacy port 4 corresponds to frequency domain OCCs {-1, -1, -1, -1} on the subcarrier 0, the subcarrier 2, the subcarrier 4, and the subcarrier 6 respectively; the legacy port 5 corresponds to frequency domain OCCs {-1, +1, -1, +1} on the subcarrier 0, the subcarrier 2, the subcarrier 4, and the subcarrier 6 respectively; the new port 8 corresponds to frequency domain OCCs {+j, -1, -j, +1} on the subcarrier 0, the subcarrier 2, the subcarrier 4, and the subcarrier 6 respectively; the new port 9 corresponds to frequency domain OCCs {+j, 1, -j, -1} on the subcarrier 0, the subcarrier 2, the subcarrier 4, and the subcarrier 6 respectively; the new port 12 corresponds to frequency domain OCCs {-j, +1, +j, -1} on the subcarrier 0, the subcarrier 2, the subcarrier 4, and the subcarrier 6 respectively; and the new port 13 corresponds to frequency domain OCCs {-j, -1, j, +1} on the subcarrier 0, the subcarrier 2, the subcarrier 4, and the subcarrier 6 respectively.

By analogy, frequency domain OCCs corresponding to the port 0, the port 1, the port 8, the port 9, the port 12, and the port 13 on the subcarrier 8, the subcarrier 10, the subcarrier 12, and the subcarrier 14 in the symbol 2, the symbol 3, the symbol 10, and the symbol 11, and frequency domain OCCs corresponding to the port 0, the port 1, the port 8, the port 9, the port 12, and the port 13 on the subcarrier 16, the subcarrier 18, the subcarrier 20, and the subcarrier 22 in the symbol 2 and the symbol 7 may be determined according to table 15-1.

In this way, a DMRS corresponding to the new port and a DMRS corresponding to the legacy port may be distinguished by using 4-length frequency domain OCCs, to implement code domain orthogonality.

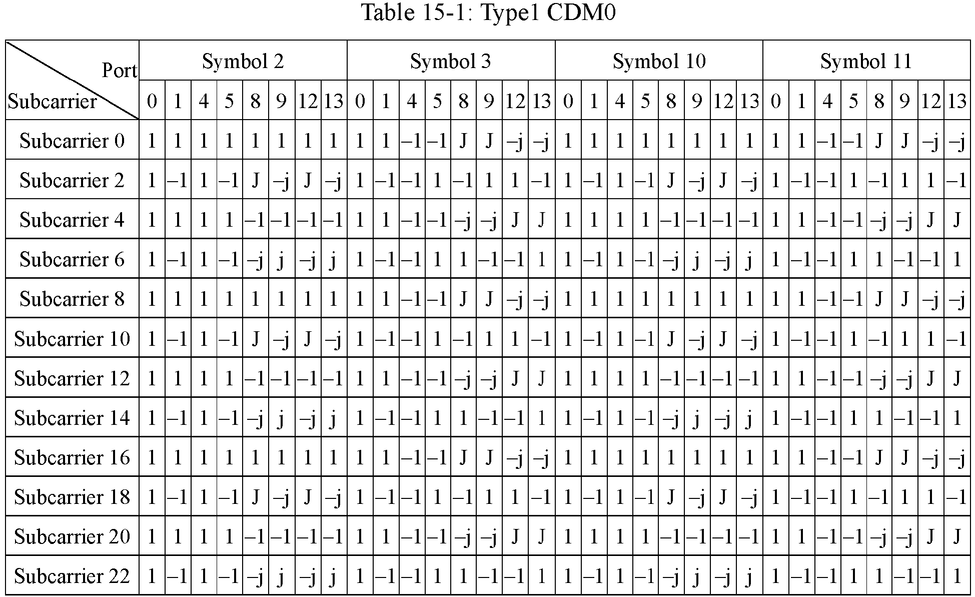

As shown in table 15-2, a port in a type1 CDM group 1 is used as an example. In the symbol 2, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the legacy port 6 corresponds to frequency domain OCCs {+1, +1, +1, +1} on the subcarrier 1, the subcarrier 3, the subcarrier 5, and the subcarrier 7 respectively; the legacy port 7 corresponds to frequency domain OCCs {+1, -1, +1, -1} on the subcarrier 1, the subcarrier 3, the subcarrier 5, and the subcarrier 7 respectively; the new port 10 corresponds to frequency domain OCCs {+1, +j, -1, -j} on the subcarrier 1, the subcarrier 3, the subcarrier 5, and the subcarrier 7 respectively; the new port 11 corresponds to frequency domain OCCs {+1, -j, -1, +j} on the subcarrier 1, the subcarrier 3, the subcarrier 5, and the subcarrier 7 respectively; the new port 14 corresponds to frequency domain OCCs {+1, +j, -1, -j} on the subcarrier 1, the subcarrier 3, the subcarrier 5, and the subcarrier 7 respectively; and the new port 15 corresponds to frequency domain OCCs {+1, -j, -1, +j} on the subcarrier 1, the subcarrier 3, the subcarrier 5, and the subcarrier 7 respectively.

In the symbol 3, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the legacy port 6 corresponds to frequency domain OCCs {-1, -1, -1, -1} on the subcarrier 1, the subcarrier 3, the subcarrier 5, and the subcarrier 7 respectively; the legacy port 7 corresponds to frequency domain OCCs {-1, +1, -1, +1} on the subcarrier 0, the subcarrier 2, the subcarrier 4, and the subcarrier 6 respectively; the new port 10 corresponds to frequency domain OCCs {+j, -1, -j, +1} on the subcarrier 1, the subcarrier 3, the subcarrier 5, and the subcarrier 7 respectively; the new port 11 corresponds to frequency domain OCCs {+j, 1, -j, -1} on the subcarrier 1, the subcarrier 3, the subcarrier 5, and the subcarrier 7 respectively; the new port 14 corresponds to frequency domain OCCs {-j, +1, +j, -1} on the subcarrier 1, the subcarrier 3, the subcarrier 5, and the subcarrier 7 respectively; and the new port 15 corresponds to frequency domain OCCs {-j, -1, j, +1} on the subcarrier 1, the subcarrier 3, the subcarrier 5, and the subcarrier 7 respectively.

In the symbol 10, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the legacy port 6 corresponds to frequency domain OCCs {+1, +1, +1, +1} on the subcarrier 1, the subcarrier 3, the subcarrier 5, and the subcarrier 7 respectively; the legacy port 7 corresponds to frequency domain OCCs {+1, -1, +1, -1} on the subcarrier 1, the subcarrier 3, the subcarrier 5, and the subcarrier 7 respectively; the new port 10 corresponds to frequency domain OCCs {+1, +j, -1, -j} on the subcarrier 1, the subcarrier 3, the subcarrier 5, and the subcarrier 7 respectively; the new port 11 corresponds to frequency domain OCCs {+1, -j, -1, +j} on the subcarrier 1, the subcarrier 3, the subcarrier 5, and the subcarrier 7 respectively; the new port 14 corresponds to frequency domain OCCs {+1, +j, -1, -j} on the subcarrier 1, the subcarrier 3, the subcarrier 5, and the subcarrier 7 respectively; and the new port 15 corresponds to frequency domain OCCs {+1, -j, -1, +j} on the subcarrier 1, the subcarrier 3, the subcarrier 5, and the subcarrier 7 respectively.

In the symbol 11, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the legacy port 6 corresponds to frequency domain OCCs {-1, -1, -1, -1} on the subcarrier 1, the subcarrier 3, the subcarrier 5, and the subcarrier 7 respectively; the legacy port 7 corresponds to frequency domain OCCs {-1, +1, -1, +1} on the subcarrier 0, the subcarrier 2, the subcarrier 4, and the subcarrier 6 respectively; the new port 10 corresponds to frequency domain OCCs {+j, -1, -j, +1} on the subcarrier 1, the subcarrier 3, the subcarrier 5, and the subcarrier 7 respectively; the new port 11 corresponds to frequency domain OCCs {+j, 1, -j, -1} on the subcarrier 1, the subcarrier 3, the subcarrier 5, and the subcarrier 7 respectively; the new port 14 corresponds to frequency domain OCCs {-j, +1, +j, -1} on the subcarrier 1, the subcarrier 3, the subcarrier 5, and the subcarrier 7 respectively; and the new port 15 corresponds to frequency domain OCCs {-j, -1, j, +1} on the subcarrier 1, the subcarrier 3, the subcarrier 5, and the subcarrier 7 respectively.

By analogy, frequency domain OCCs corresponding to the port 2, the port 3, the port 10, the port 11, the port 14, and the port 15 on the subcarrier 9, the subcarrier 11, the subcarrier 13, and the subcarrier 15 in the symbol 2, the symbol 3, the symbol 10, and the symbol 11, and frequency domain OCCs corresponding to the port 2, the port 3, the port 10, the port 11, the port 14, and the port 15 on the subcarrier 17, the subcarrier 19, the subcarrier 21, and the subcarrier 23 in the symbol 2 and the symbol 7 may be determined according to table 15-2.

In this way, a DMRS corresponding to the new port and a DMRS corresponding to the legacy port may be distinguished by using 4-length frequency domain OCCs, to implement code domain orthogonality.

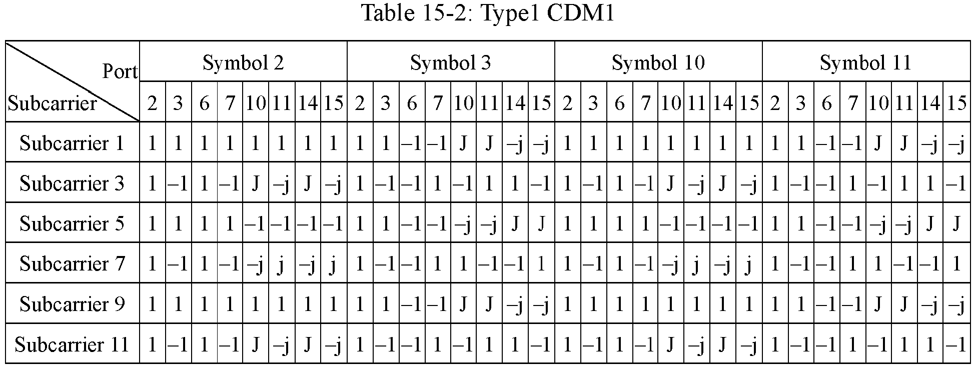

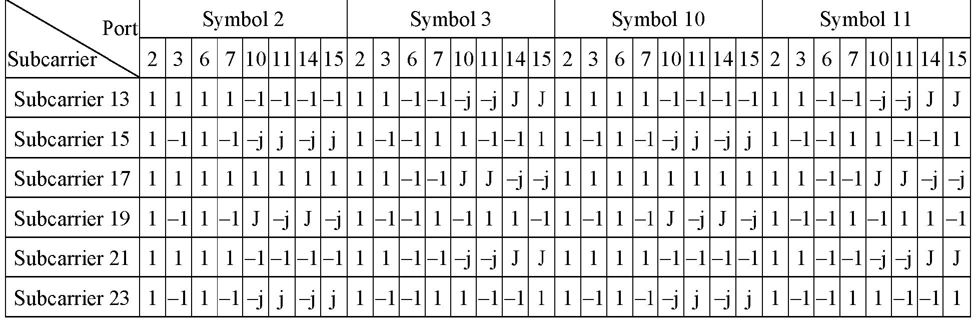

As shown in table 15-3, a port in a type2 CDM group 0 is used as an example. In the symbol 2, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the legacy port 6 corresponds to frequency domain OCCs {+1, +1, +1, +1} on the subcarrier 0, the subcarrier 1, the subcarrier 6, and the subcarrier 7 respectively; the legacy port 7 corresponds to frequency domain OCCs {+1, -1, +1, -1} on the subcarrier 0, the subcarrier 1, the subcarrier 6, and the subcarrier 7 respectively; the new port 12 corresponds to frequency domain OCCs {+1, +j, -1, -j} on the subcarrier 0, the subcarrier 1, the subcarrier 6, and the subcarrier 7 respectively; the new port 13 corresponds to frequency domain OCCs {+1, -j, -1, +j} on the subcarrier 0, the subcarrier 1, the subcarrier 6, and the subcarrier 7 respectively; the new port 18 corresponds to frequency domain OCCs {+1, +j, -1, -j} on the subcarrier 0, the subcarrier 1, the subcarrier 6, and the subcarrier 7 respectively; and the new port 19 corresponds to frequency domain OCCs {+1, -j, -1, +j} on the subcarrier 0, the subcarrier 1, the subcarrier 6, and the subcarrier 7 respectively.

In the symbol 3, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the legacy port 6 corresponds to frequency domain OCCs {-1, -1, -1, -1} on the subcarrier 0, the subcarrier 1, the subcarrier 6, and the subcarrier 7 respectively; the legacy port 7 corresponds to frequency domain OCCs {-1, +1, -1, +1} on the subcarrier 0, the subcarrier 1, the subcarrier 6, and the subcarrier 7 respectively; the new port 12 corresponds to frequency domain OCCs {+j, -1, -j, +1} on the subcarrier 0, the subcarrier 1, the subcarrier 6, and the subcarrier 7 respectively; the new port 13 corresponds to frequency domain OCCs {+j, 1, -j, -1} on the subcarrier 0, the subcarrier 1, the subcarrier 6, and the subcarrier 7 respectively; the new port 18 corresponds to frequency domain OCCs {-j, +1, +j, -1} on the subcarrier 0, the subcarrier 1, the subcarrier 6, and the subcarrier 7 respectively; and the new port 19 corresponds to frequency domain OCCs {-j, -1, j, +1} on the subcarrier 0, the subcarrier 1, the subcarrier 6, and the subcarrier 7 respectively.

In the symbol 10, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the legacy port 6 corresponds to frequency domain OCCs {+1, +1, +1, +1} on the subcarrier 0, the subcarrier 1, the subcarrier 6, and the subcarrier 7 respectively; the legacy port 7 corresponds to frequency domain OCCs {+1, -1, +1, -1} on the subcarrier 0, the subcarrier 1, the subcarrier 6, and the subcarrier 7 respectively; the new port 12 corresponds to frequency domain OCCs {+1, +j, -1, -j} on the subcarrier 0, the subcarrier 1, the subcarrier 6, and the subcarrier 7 respectively; the new port 13 corresponds to frequency domain OCCs {+1, -j, -1, +j} on the subcarrier 0, the subcarrier 1, the subcarrier 6, and the subcarrier 7 respectively; the new port 18 corresponds to frequency domain OCCs {+1, +j, -1, -j} on the subcarrier 0, the subcarrier 1, the subcarrier 6, and the subcarrier 7 respectively; and the new port 19 corresponds to frequency domain OCCs {+1, -j, -1, +j} on the subcarrier 0, the subcarrier 1, the subcarrier 6, and the subcarrier 7 respectively.

In the symbol 11, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the legacy port 6 corresponds to frequency domain OCCs {-1, -1, -1, -1} on the subcarrier 0, the subcarrier 1, the subcarrier 6, and the subcarrier 7 respectively; the legacy port 7 corresponds to frequency domain OCCs {-1, +1, -1, +1} on the subcarrier 0, the subcarrier 1, the subcarrier 6, and the subcarrier 7 respectively; the new port 12 corresponds to frequency domain OCCs {+j, -1, -j, +1} on the subcarrier 0, the subcarrier 1, the subcarrier 6, and the subcarrier 7 respectively; the new port 13 corresponds to frequency domain OCCs {+j, 1, -j, -1} on the subcarrier 0, the subcarrier 1, the subcarrier 6, and the subcarrier 7 respectively; the new port 18 corresponds to frequency domain OCCs {-j, +1, +j, -1} on the subcarrier 0, the subcarrier 1, the subcarrier 6, and the subcarrier 7 respectively; and the new port 19 corresponds to frequency domain OCCs {-j, -1, j, +1} on the subcarrier 0, the subcarrier 1, the subcarrier 6, and the subcarrier 7 respectively.

In this way, a DMRS corresponding to the new port and a DMRS corresponding to the legacy port may be distinguished by using 4-length frequency domain OCCs, to implement code domain orthogonality.

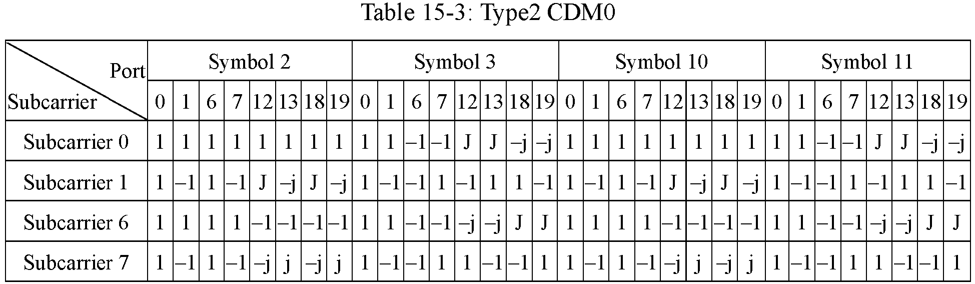

As shown in table 15-4, a port in a type2 CDM group 1 is used as an example. In the symbol 2, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the legacy port 8 corresponds to frequency domain OCCs {+1, +1, +1, +1} on the subcarrier 2, the subcarrier 3, the subcarrier 8, and the subcarrier 9 respectively; the legacy port 9 corresponds to frequency domain OCCs {+1, -1, +1, -1} on the subcarrier 2, the subcarrier 3, the subcarrier 8, and the subcarrier 9 respectively; the new port 14 corresponds to frequency domain OCCs {+1, +j, -1, -j} on the subcarrier 2, the subcarrier 3, the subcarrier 8, and the subcarrier 9 respectively; the new port 15 corresponds to frequency domain OCCs {+1, -j, -1, +j} on the subcarrier 2, the subcarrier 3, the subcarrier 8, and the subcarrier 9 respectively; the new port 20 corresponds to frequency domain OCCs {+1, +j, -1, -j} on the subcarrier 2, the subcarrier 3, the subcarrier 8, and the subcarrier 9 respectively; and the new port 21 corresponds to frequency domain OCCs {+1, -j, -1, +j} on the subcarrier 2, the subcarrier 3, the subcarrier 8, and the subcarrier 9 respectively.

In the symbol 3, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the legacy port 8 corresponds to frequency domain OCCs {-1, -1, -1, -1} on the subcarrier 2, the subcarrier 3, the subcarrier 8, and the subcarrier 9 respectively; the legacy port 9 corresponds to frequency domain OCCs {-1, +1, -1, +1} on the subcarrier 2, the subcarrier 3, the subcarrier 8, and the subcarrier 9 respectively; the new port 14 corresponds to frequency domain OCCs {+j, -1, -j, +1} on the subcarrier 2, the subcarrier 3, the subcarrier 8, and the subcarrier 9 respectively; the new port 15 corresponds to frequency domain OCCs {+j, 1, -j, -1} on the subcarrier 2, the subcarrier 3, the subcarrier 8, and the subcarrier 9 respectively; the new port 20 corresponds to frequency domain OCCs {-j, +1, +j, -1} on the subcarrier 2, the subcarrier 3, the subcarrier 8, and the subcarrier 9 respectively; and the new port 21 corresponds to frequency domain OCCs {-j, -1, j, +1} on the subcarrier 2, the subcarrier 3, the subcarrier 8, and the subcarrier 9 respectively.

In the symbol 10, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the legacy port 8 corresponds to frequency domain OCCs {+1, +1, +1, +1} on the subcarrier 2, the subcarrier 3, the subcarrier 8, and the subcarrier 9 respectively; the legacy port 9 corresponds to frequency domain OCCs {+1, -1, +1, -1} on the subcarrier 2, the subcarrier 3, the subcarrier 8, and the subcarrier 9 respectively; the new port 14 corresponds to frequency domain OCCs {+1, +j, -1, -j} on the subcarrier 2, the subcarrier 3, the subcarrier 8, and the subcarrier 9 respectively; the new port 15 corresponds to frequency domain OCCs {+1, -j, -1, +j} on the subcarrier 2, the subcarrier 3, the subcarrier 8, and the subcarrier 9 respectively; the new port 20 corresponds to frequency domain OCCs {+1, +j, -1, -j} on the subcarrier 2, the subcarrier 3, the subcarrier 8, and the subcarrier 9 respectively; and the new port 21 corresponds to frequency domain OCCs {+1, -j, -1, +j} on the subcarrier 2, the subcarrier 3, the subcarrier 8, and the subcarrier 9 respectively.

In the symbol 11, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the legacy port 8 corresponds to frequency domain OCCs {-1, -1, -1, -1} on the subcarrier 2, the subcarrier 3, the subcarrier 8, and the subcarrier 9 respectively; the legacy port 9 corresponds to frequency domain OCCs {-1, +1, -1, +1} on the subcarrier 2, the subcarrier 3, the subcarrier 8, and the subcarrier 9 respectively; the new port 14 corresponds to frequency domain OCCs {+j, -1, -j, +1} on the subcarrier 2, the subcarrier 3, the subcarrier 8, and the subcarrier 9 respectively; the new port 15 corresponds to frequency domain OCCs {+j, 1, -j, -1} on the subcarrier 2, the subcarrier 3, the subcarrier 8, and the subcarrier 9 respectively; the new port 20 corresponds to frequency domain OCCs {-j, +1, +j, -1} on the subcarrier 2, the subcarrier 3, the subcarrier 8, and the subcarrier 9 respectively; and the new port 21 corresponds to frequency domain OCCs {-j, -1, j, +1} on the subcarrier 2, the subcarrier 3, the subcarrier 8, and the subcarrier 9 respectively.

In this way, a DMRS corresponding to the new port and a DMRS corresponding to the legacy port may be distinguished by using 4-length frequency domain OCCs, to implement code domain orthogonality.

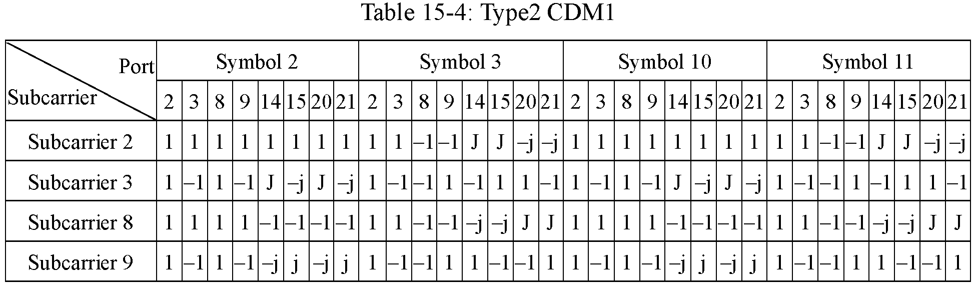

As shown in table 15-5, a port in a type2 CDM group 2 is used as an example. In the symbol 2, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the legacy port 10 corresponds to frequency domain OCCs {+1, +1, +1, +1} on the subcarrier 4, the subcarrier 5, the subcarrier 10, and the subcarrier 11 respectively; the legacy port 11 corresponds to frequency domain OCCs {+1, -1, +1, -1} on the subcarrier 4, the subcarrier 5, the subcarrier 10, and the subcarrier 11 respectively; the new port 16 corresponds to frequency domain OCCs {+1, +j, -1, -j} on the subcarrier 4, the subcarrier 5, the subcarrier 10, and the subcarrier 11 respectively; the new port 17 corresponds to frequency domain OCCs {+1, -j, -1, +j} on the subcarrier 4, the subcarrier 5, the subcarrier 10, and the subcarrier 11 respectively; the new port 22 corresponds to frequency domain OCCs {+1, +j, -1, -j} on the subcarrier 4, the subcarrier 5, the subcarrier 10, and the subcarrier 11 respectively; and the new port 23 corresponds to frequency domain OCCs {+1, -j, -1, +j} on the subcarrier 4, the subcarrier 5, the subcarrier 10, and the subcarrier 11 respectively.

In the symbol 3, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the legacy port 10 corresponds to frequency domain OCCs {-1, -1, -1, -1} on the subcarrier 4, the subcarrier 5, the subcarrier 10, and the subcarrier 11 respectively; the legacy port 11 corresponds to frequency domain OCCs {-1, +1, -1, +1} on the subcarrier 4, the subcarrier 5, the subcarrier 10, and the subcarrier 11 respectively; the new port 16 corresponds to frequency domain OCCs {+j, -1, -j, +1} on the subcarrier 4, the subcarrier 5, the subcarrier 10, and the subcarrier 11 respectively; the new port 17 corresponds to frequency domain OCCs {+j, 1, -j, -1} on the subcarrier 4, the subcarrier 5, the subcarrier 10, and the subcarrier 11 respectively; the new port 22 corresponds to frequency domain OCCs {-j, +1, +j, -1} on the subcarrier 4, the subcarrier 5, the subcarrier 10, and the subcarrier 11 respectively; and the new port 23 corresponds to frequency domain OCCs {-j, -1, j, +1} on the subcarrier 4, the subcarrier 5, the subcarrier 10, and the subcarrier 11 respectively.

In the symbol 10, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the legacy port 10 corresponds to frequency domain OCCs {+1, +1, +1, +1} on the subcarrier 4, the subcarrier 5, the subcarrier 10, and the subcarrier 11 respectively; the legacy port 11 corresponds to frequency domain OCCs {+1, -1, +1, -1} on the subcarrier 4, the subcarrier 5, the subcarrier 10, and the subcarrier 11 respectively; the new port 16 corresponds to frequency domain OCCs {+1, +j, -1, -j} on the subcarrier 4, the subcarrier 5, the subcarrier 10, and the subcarrier 11 respectively; the new port 17 corresponds to frequency domain OCCs {+1, -j, -1, +j} on the subcarrier 4, the subcarrier 5, the subcarrier 10, and the subcarrier 11 respectively; the new port 22 corresponds to frequency domain OCCs {+1, +j, -1, -j} on the subcarrier 4, the subcarrier 5, the subcarrier 10, and the subcarrier 11 respectively; and the new port 23 corresponds to frequency domain OCCs {+1, -j, - 1, +j} on the subcarrier 4, the subcarrier 5, the subcarrier 10, and the subcarrier 11 respectively.

In the symbol 11, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the legacy port 10 corresponds to frequency domain OCCs {-1, -1, -1, -1} on the subcarrier 4, the subcarrier 5, the subcarrier 10, and the subcarrier 11 respectively; the legacy port 11 corresponds to frequency domain OCCs {-1, +1, -1, +1} on the subcarrier 4, the subcarrier 5, the subcarrier 10, and the subcarrier 11 respectively; the new port 16 corresponds to frequency domain OCCs {+j, -1, -j, +1} on the subcarrier 4, the subcarrier 5, the subcarrier 10, and the subcarrier 11 respectively; the new port 17 corresponds to frequency domain OCCs {+j, 1, -j, -1} on the subcarrier 4, the subcarrier 5, the subcarrier 10, and the subcarrier 11 respectively; the new port 22 corresponds to frequency domain OCCs {-j, +1, +j, -1} on the subcarrier 4, the subcarrier 5, the subcarrier 10, and the subcarrier 11 respectively; and the new port 23 corresponds to frequency domain OCCs {-j, -1, j, +1} on the subcarrier 4, the subcarrier 5, the subcarrier 10, and the subcarrier 11 respectively.

In this way, a DMRS corresponding to the new port and a DMRS corresponding to the legacy port may be distinguished by using 4-length frequency domain OCCs, to implement code domain orthogonality.

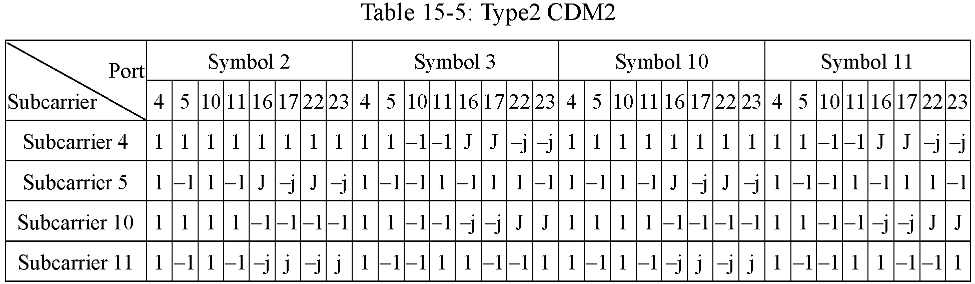

Implementation 2: ADMRS sequence is implemented by using a Walsh sequence.

As shown in table 16-1, a port in a type1 CDM group 0 is used as an example. In the symbol 2, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the legacy port 4 corresponds to frequency domain OCCs {+1, +1, +1, +1} on the subcarrier 0, the subcarrier 2, the subcarrier 4, and the subcarrier 6 respectively; the legacy port 5 corresponds to frequency domain OCCs {+1, -1, +1, -1} on the subcarrier 0, the subcarrier 2, the subcarrier 4, and the subcarrier 6 respectively; the new port 8 corresponds to frequency domain OCCs {+1, +1, -1, -1} on the subcarrier 0, the subcarrier 2, the subcarrier 4, and the subcarrier 6 respectively; the new port 9 corresponds to frequency domain OCCs {+1, -1, -1, +1} on the subcarrier 0, the subcarrier 2, the subcarrier 4, and the subcarrier 6 respectively; the new port 12 corresponds to frequency domain OCCs {+1, +1, -1, -1} on the subcarrier 0, the subcarrier 2, the subcarrier 4, and the subcarrier 6 respectively; and the new port 13 corresponds to frequency domain OCCs {+1, -1, -1, +1} on the subcarrier 0, the subcarrier 2, the subcarrier 4, and the subcarrier 6 respectively.

In the symbol 3, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the legacy port 4 corresponds to frequency domain OCCs {-1, -1, -1, -1} on the subcarrier 0, the subcarrier 2, the subcarrier 4, and the subcarrier 6 respectively; the legacy port 5 corresponds to frequency domain OCCs {-1, +1, -1, +1} on the subcarrier 0, the subcarrier 2, the subcarrier 4, and the subcarrier 6 respectively; the new port 8 corresponds to frequency domain OCCs {+1, +1, -1, -1} on the subcarrier 0, the subcarrier 2, the subcarrier 4, and the subcarrier 6 respectively; the new port 9 corresponds to frequency domain OCCs {+1, -1, -1, 1} on the subcarrier 0, the subcarrier 2, the subcarrier 4, and the subcarrier 6 respectively; the new port 12 corresponds to frequency domain OCCs {-1, -1, +1, +1} on the subcarrier 0, the subcarrier 2, the subcarrier 4, and the subcarrier 6 respectively; and the new port 13 corresponds to frequency domain OCCs {-1, 1, 1, -1} on the subcarrier 0, the subcarrier 2, the subcarrier 4, and the subcarrier 6 respectively.

In the symbol 10, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the legacy port 4 corresponds to frequency domain OCCs {+1, +1, +1, +1} on the subcarrier 0, the subcarrier 2, the subcarrier 4, and the subcarrier 6 respectively; the legacy port 5 corresponds to frequency domain OCCs {+1, -1, +1, -1} on the subcarrier 0, the subcarrier 2, the subcarrier 4, and the subcarrier 6 respectively; the new port 8 corresponds to frequency domain OCCs {+1, +1, -1, -1} on the subcarrier 0, the subcarrier 2, the subcarrier 4, and the subcarrier 6 respectively; the new port 9 corresponds to frequency domain OCCs {+1, -1, -1, +1} on the subcarrier 0, the subcarrier 2, the subcarrier 4, and the subcarrier 6 respectively; the new port 12 corresponds to frequency domain OCCs {+1, +1, -1, -1} on the subcarrier 0, the subcarrier 2, the subcarrier 4, and the subcarrier 6 respectively; and the new port 13 corresponds to frequency domain OCCs {+1, -1, -1, +1} on the subcarrier 0, the subcarrier 2, the subcarrier 4, and the subcarrier 6 respectively.

In the symbol 11, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the legacy port 4 corresponds to frequency domain OCCs {-1, -1, -1, -1} on the subcarrier 0, the subcarrier 2, the subcarrier 4, and the subcarrier 6 respectively; the legacy port 5 corresponds to frequency domain OCCs {-1, +1, -1, +1} on the subcarrier 0, the subcarrier 2, the subcarrier 4, and the subcarrier 6 respectively; the new port 8 corresponds to frequency domain OCCs {+1, +1, -1, -1} on the subcarrier 0, the subcarrier 2, the subcarrier 4, and the subcarrier 6 respectively; the new port 9 corresponds to frequency domain OCCs {+1, -1, -1, 1} on the subcarrier 0, the subcarrier 2, the subcarrier 4, and the subcarrier 6 respectively; the new port 12 corresponds to frequency domain OCCs {-1, -1, +1, +1} on the subcarrier 0, the subcarrier 2, the subcarrier 4, and the subcarrier 6 respectively; and the new port 13 corresponds to frequency domain OCCs {-1, 1, 1, -1} on the subcarrier 0, the subcarrier 2, the subcarrier 4, and the subcarrier 6 respectively.

By analogy, frequency domain OCCs corresponding to the port 0, the port 1, the port 8, the port 9, the port 12, and the port 13 on the subcarrier 8, the subcarrier 10, the subcarrier 12, and the subcarrier 14 in the symbol 2, the symbol 3, the symbol 10, and the symbol 11, and frequency domain OCCs corresponding to the port 0, the port 1, the port 8, the port 9, the port 12, and the port 13 on the subcarrier 16, the subcarrier 18, the subcarrier 20, and the subcarrier 22 in the symbol 2 and the symbol 7 may be determined according to table 16-1.

In this way, a DMRS corresponding to the new port and a DMRS corresponding to the legacy port may be distinguished by using 4-length frequency domain OCCs, to implement code domain orthogonality.

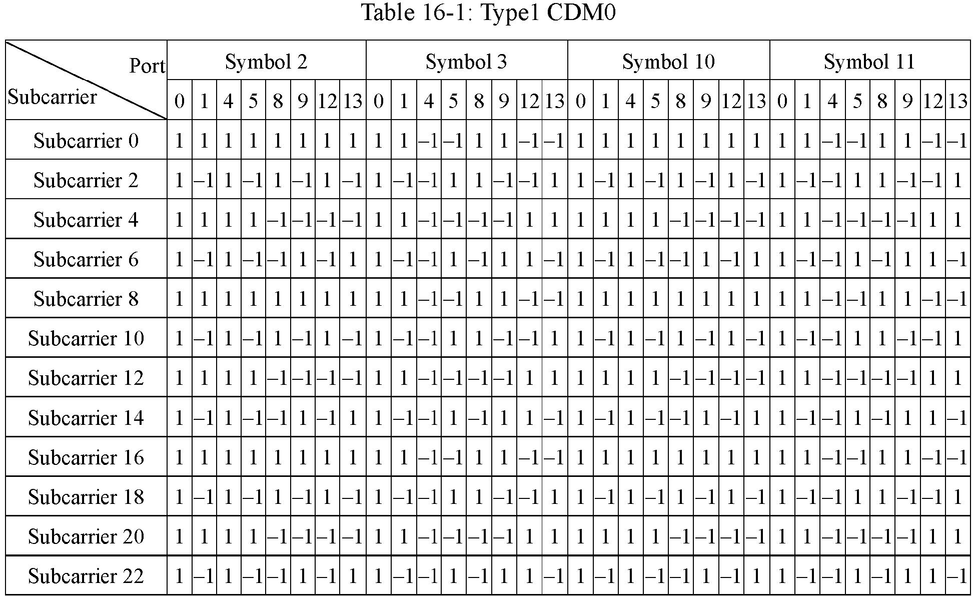

As shown in table 16-2, a port in a type1 CDM group 1 is used as an example. In the symbol 2, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the legacy port 6 corresponds to frequency domain OCCs {+1, +1, +1, +1} on the subcarrier 1, the subcarrier 3, the subcarrier 5, and the subcarrier 7 respectively; the legacy port 7 corresponds to frequency domain OCCs {+1, -1, +1, -1} on the subcarrier 1, the subcarrier 3, the subcarrier 5, and the subcarrier 7 respectively; the new port 10 corresponds to frequency domain OCCs {+1, +1, -1, -1} on the subcarrier 1, the subcarrier 3, the subcarrier 5, and the subcarrier 7 respectively; the new port 11 corresponds to frequency domain OCCs {+1, -1, -1, +1} on the subcarrier 1, the subcarrier 3, the subcarrier 5, and the subcarrier 7 respectively; the new port 14 corresponds to frequency domain OCCs {+1, +1, -1, -1} on the subcarrier 1, the subcarrier 3, the subcarrier 5, and the subcarrier 7 respectively; and the new port 15 corresponds to frequency domain OCCs {+1, -1, -1, +1} on the subcarrier 1, the subcarrier 3, the subcarrier 5, and the subcarrier 7 respectively.

In the symbol 3, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the legacy port 6 corresponds to frequency domain OCCs {-1, -1, -1, -1} on the subcarrier 1, the subcarrier 3, the subcarrier 5, and the subcarrier 7 respectively; the legacy port 7 corresponds to frequency domain OCCs {-1, +1, -1, +1} on the subcarrier 1, the subcarrier 3, the subcarrier 5, and the subcarrier 7 respectively; the new port 10 corresponds to frequency domain OCCs {+1, +1, -1, -1} on the subcarrier 1, the subcarrier 3, the subcarrier 5, and the subcarrier 7 respectively; the new port 11 corresponds to frequency domain OCCs {+1, -1, -1, 1} on the subcarrier 1, the subcarrier 3, the subcarrier 5, and the subcarrier 7 respectively; the new port 14 corresponds to frequency domain OCCs {-1, -1, +1, +1} on the subcarrier 1, the subcarrier 3, the subcarrier 5, and the subcarrier 7 respectively; and the new port 15 corresponds to frequency domain OCCs {-1, 1, 1, -1} on the subcarrier 1, the subcarrier 3, the subcarrier 5, and the subcarrier 7 respectively.

In the symbol 10, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the legacy port 6 corresponds to frequency domain OCCs {+1, +1, +1, +1} on the subcarrier 1, the subcarrier 3, the subcarrier 5, and the subcarrier 7 respectively; the legacy port 7 corresponds to frequency domain OCCs {+1, -1, +1, -1} on the subcarrier 1, the subcarrier 3, the subcarrier 5, and the subcarrier 7 respectively; the new port 10 corresponds to frequency domain OCCs {+1, +1, -1, -1} on the subcarrier 1, the subcarrier 3, the subcarrier 5, and the subcarrier 7 respectively; the new port 11 corresponds to frequency domain OCCs {+1, -1, -1, +1} on the subcarrier 1, the subcarrier 3, the subcarrier 5, and the subcarrier 7 respectively; the new port 14 corresponds to frequency domain OCCs {+1, +1, -1, -1} on the subcarrier 1, the subcarrier 3, the subcarrier 5, and the subcarrier 7 respectively; and the new port 15 corresponds to frequency domain OCCs {+1, -1, -1, +1} on the subcarrier 1, the subcarrier 3, the subcarrier 5, and the subcarrier 7 respectively.

In the symbol 11, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the legacy port 6 corresponds to frequency domain OCCs {-1, -1, -1, -1} on the subcarrier 1, the subcarrier 3, the subcarrier 5, and the subcarrier 7 respectively; the legacy port 7 corresponds to frequency domain OCCs {-1, +1, -1, +1} on the subcarrier 1, the subcarrier 3, the subcarrier 5, and the subcarrier 7 respectively; the new port 10 corresponds to frequency domain OCCs {+1, +1, -1, -1} on the subcarrier 1, the subcarrier 3, the subcarrier 5, and the subcarrier 7 respectively; the new port 11 corresponds to frequency domain OCCs {+1, -1, -1, 1} on the subcarrier 1, the subcarrier 3, the subcarrier 5, and the subcarrier 7 respectively; the new port 14 corresponds to frequency domain OCCs {-1, -1, +1, +1} on the subcarrier 1, the subcarrier 3, the subcarrier 5, and the subcarrier 7 respectively; and the new port 15 corresponds to frequency domain OCCs {-1, 1, 1, -1} on the subcarrier 1, the subcarrier 3, the subcarrier 5, and the subcarrier 7 respectively.

By analogy, frequency domain OCCs corresponding to the port 2, the port 3, the port 10, the port 11, the port 14, and the port 15 on the subcarrier 9, the subcarrier 11, the subcarrier 13, and the subcarrier 15 in the symbol 2, the symbol 3, the symbol 10, and the symbol 11, and frequency domain OCCs corresponding to the port 2, the port 3, the port 10, the port 11, the port 14, and the port 15 on the subcarrier 17, the subcarrier 19, the subcarrier 21, and the subcarrier 23 in the symbol 2 and the symbol 7 may be determined according to table 15-2.

In this way, a DMRS corresponding to the new port and a DMRS corresponding to the legacy port may be distinguished by using 4-length frequency domain OCCs, to implement code domain orthogonality.

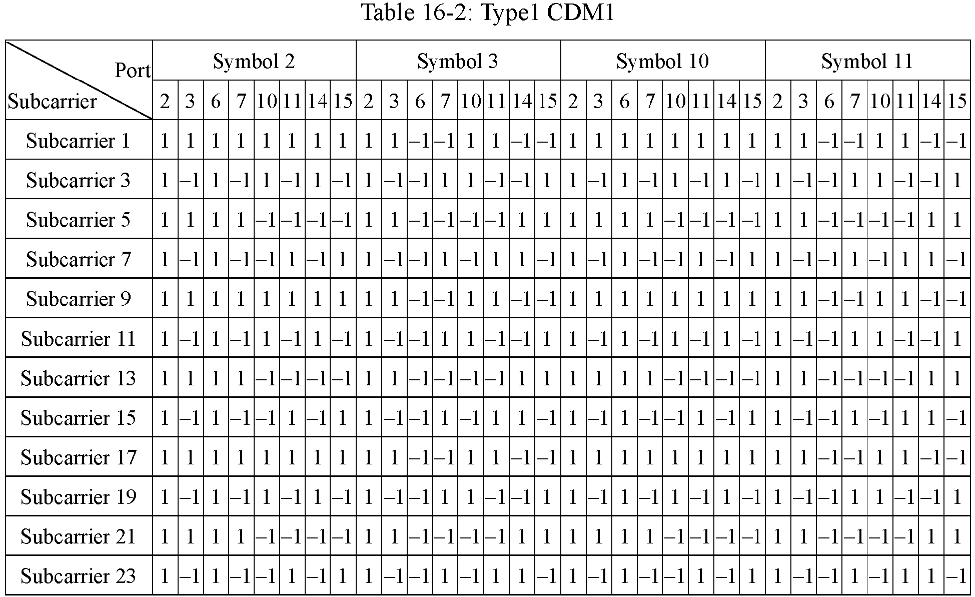

As shown in table 16-3, a port in a type2 CDM group 0 is used as an example. In the symbol 2, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the legacy port 6 corresponds to frequency domain OCCs {+1, +1, +1, +1} on the subcarrier 0, the subcarrier 1, the subcarrier 6, and the subcarrier 7 respectively; the legacy port 7 corresponds to frequency domain OCCs {+1, -1, +1, -1} on the subcarrier 0, the subcarrier 1, the subcarrier 6, and the subcarrier 7 respectively; the new port 12 corresponds to frequency domain OCCs {+1, +1, -1, -1} on the subcarrier 0, the subcarrier 1, the subcarrier 6, and the subcarrier 7 respectively; the new port 13 corresponds to frequency domain OCCs {+1, -1, -1, +1} on the subcarrier 0, the subcarrier 1, the subcarrier 6, and the subcarrier 7 respectively; the new port 18 corresponds to frequency domain OCCs {+1, +1, -1, -1} on the subcarrier 0, the subcarrier 1, the subcarrier 6, and the subcarrier 7 respectively; and the new port 19 corresponds to frequency domain OCCs {+1, -1, -1, +1} on the subcarrier 0, the subcarrier 1, the subcarrier 6, and the subcarrier 7 respectively.

In the symbol 3, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the legacy port 6 corresponds to frequency domain OCCs {-1, -1, -1, -1} on the subcarrier 0, the subcarrier 1, the subcarrier 6, and the subcarrier 7 respectively; the legacy port 7 corresponds to frequency domain OCCs {-1, +1, -1, +1} on the subcarrier 0, the subcarrier 1, the subcarrier 6, and the subcarrier 7 respectively; the new port 12 corresponds to frequency domain OCCs {+1, +1, -1, -1} on the subcarrier 0, the subcarrier 1, the subcarrier 6, and the subcarrier 7 respectively; the new port 13 corresponds to frequency domain OCCs {+1, -1, -1, 1} on the subcarrier 0, the subcarrier 1, the subcarrier 6, and the subcarrier 7 respectively; the new port 18 corresponds to frequency domain OCCs {-1, -1, +1, +1} on the subcarrier 0, the subcarrier 1, the subcarrier 6, and the subcarrier 7 respectively; and the new port 19 corresponds to frequency domain OCCs {-1, 1, 1, -1} on the subcarrier 0, the subcarrier 1, the subcarrier 6, and the subcarrier 7 respectively.

In the symbol 10, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the legacy port 6 corresponds to frequency domain OCCs {+1, +1, +1, +1} on the subcarrier 0, the subcarrier 1, the subcarrier 6, and the subcarrier 7 respectively; the legacy port 7 corresponds to frequency domain OCCs {+1, -1, +1, -1} on the subcarrier 0, the subcarrier 1, the subcarrier 6, and the subcarrier 7 respectively; the new port 12 corresponds to frequency domain OCCs {+1, +1, -1, -1} on the subcarrier 0, the subcarrier 1, the subcarrier 6, and the subcarrier 7 respectively; the new port 13 corresponds to frequency domain OCCs {+1, -1, -1, +1} on the subcarrier 0, the subcarrier 1, the subcarrier 6, and the subcarrier 7 respectively; the new port 18 corresponds to frequency domain OCCs {+1, +1, -1, -1} on the subcarrier 0, the subcarrier 1, the subcarrier 6, and the subcarrier 7 respectively; and the new port 19 corresponds to frequency domain OCCs {+1, -1, -1, +1} on the subcarrier 0, the subcarrier 1, the subcarrier 6, and the subcarrier 7 respectively.

In the symbol 11, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the legacy port 6 corresponds to frequency domain OCCs {-1, -1, -1, -1} on the subcarrier 0, the subcarrier 1, the subcarrier 6, and the subcarrier 7 respectively; the legacy port 7 corresponds to frequency domain OCCs {-1, +1, -1, +1} on the subcarrier 0, the subcarrier 1, the subcarrier 6, and the subcarrier 7 respectively; the new port 12 corresponds to frequency domain OCCs {+1, +1, -1, -1} on the subcarrier 0, the subcarrier 1, the subcarrier 6, and the subcarrier 7 respectively; the new port 13 corresponds to frequency domain OCCs {+1, -1, -1, 1} on the subcarrier 0, the subcarrier 1, the subcarrier 6, and the subcarrier 7 respectively; the new port 18 corresponds to frequency domain OCCs {-1, -1, +1, +1} on the subcarrier 0, the subcarrier 1, the subcarrier 6, and the subcarrier 7 respectively; and the new port 19 corresponds to frequency domain OCCs {-1, 1, 1, -1} on the subcarrier 0, the subcarrier 1, the subcarrier 6, and the subcarrier 7 respectively.

In this way, a DMRS corresponding to the new port and a DMRS corresponding to the legacy port may be distinguished by using 4-length frequency domain OCCs, to implement code domain orthogonality.

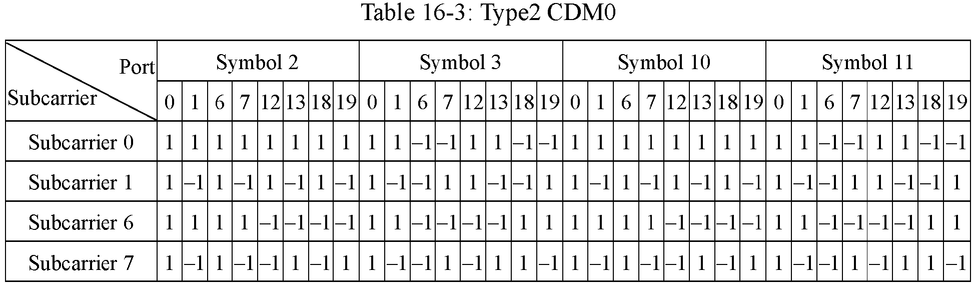

As shown in table 16-4, a port in a type2 CDM group 1 is used as an example. In the symbol 2, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the legacy port 8 corresponds to frequency domain OCCs {+1, +1, +1, +1} on the subcarrier 2, the subcarrier 3, the subcarrier 8, and the subcarrier 9 respectively; the legacy port 9 corresponds to frequency domain OCCs {+1, -1, +1, -1} on the subcarrier 2, the subcarrier 3, the subcarrier 8, and the subcarrier 9 respectively; the new port 14 corresponds to frequency domain OCCs {+1, +1, -1, -1} on the subcarrier 2, the subcarrier 3, the subcarrier 8, and the subcarrier 9 respectively; the new port 15 corresponds to frequency domain OCCs {+1, -1, -1, +1} on the subcarrier 2, the subcarrier 3, the subcarrier 8, and the subcarrier 9 respectively; the new port 20 corresponds to frequency domain OCCs {+1, +1, -1, -1} on the subcarrier 2, the subcarrier 3, the subcarrier 8, and the subcarrier 9 respectively; and the new port 21 corresponds to frequency domain OCCs {+1, -1, -1, +1} on the subcarrier 2, the subcarrier 3, the subcarrier 8, and the subcarrier 9 respectively.

In the symbol 3, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the legacy port 8 corresponds to frequency domain OCCs {-1, -1, -1, -1} on the subcarrier 2, the subcarrier 3, the subcarrier 8, and the subcarrier 9 respectively; the legacy port 9 corresponds to frequency domain OCCs {-1, +1, -1, +1} on the subcarrier 2, the subcarrier 3, the subcarrier 8, and the subcarrier 9 respectively; the new port 14 corresponds to frequency domain OCCs {+1, +1, -1, -1} on the subcarrier 2, the subcarrier 3, the subcarrier 8, and the subcarrier 9 respectively; the new port 15 corresponds to frequency domain OCCs {+1, -1, -1, 1} on the subcarrier 2, the subcarrier 3, the subcarrier 8, and the subcarrier 9 respectively; the new port 20 corresponds to frequency domain OCCs {-1, -1, +1, +1} on the subcarrier 2, the subcarrier 3, the subcarrier 8, and the subcarrier 9 respectively; and the new port 21 corresponds to frequency domain OCCs {-1, 1, 1, -1} on the subcarrier 2, the subcarrier 3, the subcarrier 8, and the subcarrier 9 respectively.

In the symbol 10, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the legacy port 8 corresponds to frequency domain OCCs {+1, +1, +1, +1} on the subcarrier 2, the subcarrier 3, the subcarrier 8, and the subcarrier 9 respectively; the legacy port 9 corresponds to frequency domain OCCs {+1, -1, +1, -1} on the subcarrier 2, the subcarrier 3, the subcarrier 8, and the subcarrier 9 respectively; the new port 14 corresponds to frequency domain OCCs {+1, +1, -1, -1} on the subcarrier 2, the subcarrier 3, the subcarrier 8, and the subcarrier 9 respectively; the new port 15 corresponds to frequency domain OCCs {+1, -1, -1, +1} on the subcarrier 2, the subcarrier 3, the subcarrier 8, and the subcarrier 9 respectively; the new port 20 corresponds to frequency domain OCCs {+1, +1, -1, -1} on the subcarrier 2, the subcarrier 3, the subcarrier 8, and the subcarrier 9 respectively; and the new port 21 corresponds to frequency domain OCCs {+1, -1, -1, +1} on the subcarrier 2, the subcarrier 3, the subcarrier 8, and the subcarrier 9 respectively.

In the symbol 11, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the legacy port 8 corresponds to frequency domain OCCs {-1, -1, -1, -1} on the subcarrier 2, the subcarrier 3, the subcarrier 8, and the subcarrier 9 respectively; the legacy port 9 corresponds to frequency domain OCCs {-1, +1, -1, +1} on the subcarrier 2, the subcarrier 3, the subcarrier 8, and the subcarrier 9 respectively; the new port 14 corresponds to frequency domain OCCs {+1, +1, -1, -1} on the subcarrier 2, the subcarrier 3, the subcarrier 8, and the subcarrier 9 respectively; the new port 15 corresponds to frequency domain OCCs {+1, -1, -1, 1} on the subcarrier 2, the subcarrier 3, the subcarrier 8, and the subcarrier 9 respectively; the new port 20 corresponds to frequency domain OCCs {-1, -1, +1, +1} on the subcarrier 2, the subcarrier 3, the subcarrier 8, and the subcarrier 9 respectively; and the new port 21 corresponds to frequency domain OCCs {-1, 1, 1, -1} on the subcarrier 2, the subcarrier 3, the subcarrier 8, and the subcarrier 9 respectively.

In this way, a DMRS corresponding to the new port and a DMRS corresponding to the legacy port may be distinguished by using 4-length frequency domain OCCs, to implement code domain orthogonality.

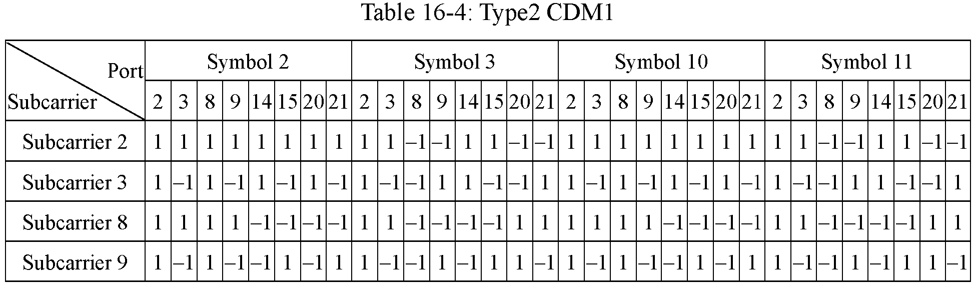

As shown in table 16-5, a port in a type2 CDM group 2 is used as an example. In the symbol 2, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the legacy port 10 corresponds to frequency domain OCCs {+1, +1, +1, +1} on the subcarrier 4, the subcarrier 5, the subcarrier 10, and the subcarrier 11 respectively; the legacy port 11 corresponds to frequency domain OCCs {+1, -1, +1, -1} on the subcarrier 4, the subcarrier 5, the subcarrier 10, and the subcarrier 11 respectively; the new port 16 corresponds to frequency domain OCCs {+1, +1, -1, -1} on the subcarrier 4, the subcarrier 5, the subcarrier 10, and the subcarrier 11 respectively; the new port 17 corresponds to frequency domain OCCs {+1, -1, -1, +1} on the subcarrier 4, the subcarrier 5, the subcarrier 10, and the subcarrier 11 respectively; the new port 22 corresponds to frequency domain OCCs {+1, +1, -1, -1} on the subcarrier 4, the subcarrier 5, the subcarrier 10, and the subcarrier 11 respectively; and the new port 23 corresponds to frequency domain OCCs {+1, -1, -1, +1} on the subcarrier 4, the subcarrier 5, the subcarrier 10, and the subcarrier 11 respectively.

In the symbol 3, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the legacy port 10 corresponds to frequency domain OCCs {-1, -1, -1, -1} on the subcarrier 4, the subcarrier 5, the subcarrier 10, and the subcarrier 11 respectively; the legacy port 11 corresponds to frequency domain OCCs {-1, +1, -1, +1} on the subcarrier 4, the subcarrier 5, the subcarrier 10, and the subcarrier 11 respectively; the new port 16 corresponds to frequency domain OCCs {+1, +1, -1, -1} on the subcarrier 4, the subcarrier 5, the subcarrier 10, and the subcarrier 11 respectively; the new port 17 corresponds to frequency domain OCCs {+1, -1, -1, 1} on the subcarrier 4, the subcarrier 5, the subcarrier 10, and the subcarrier 11 respectively; the new port 22 corresponds to frequency domain OCCs {-1, -1, +1, +1} on the subcarrier 4, the subcarrier 5, the subcarrier 10, and the subcarrier 11 respectively; and the new port 23 corresponds to frequency domain OCCs {-1, 1, 1, -1} on the subcarrier 4, the subcarrier 5, the subcarrier 10, and the subcarrier 11 respectively.

In the symbol 10, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the legacy port 10 corresponds to frequency domain OCCs {+1, +1, +1, +1} on the subcarrier 4, the subcarrier 5, the subcarrier 10, and the subcarrier 11 respectively; the legacy port 11 corresponds to frequency domain OCCs {+1, -1, +1, -1} on the subcarrier 4, the subcarrier 5, the subcarrier 10, and the subcarrier 11 respectively; the new port 16 corresponds to frequency domain OCCs {+1, +1, -1, -1} on the subcarrier 4, the subcarrier 5, the subcarrier 10, and the subcarrier 11 respectively; the new port 17 corresponds to frequency domain OCCs {+1, -1, -1, +1} on the subcarrier 4, the subcarrier 5, the subcarrier 10, and the subcarrier 11 respectively; the new port 22 corresponds to frequency domain OCCs {+1, +1, -1, -1} on the subcarrier 4, the subcarrier 5, the subcarrier 10, and the subcarrier 11 respectively; and the new port 23 corresponds to frequency domain OCCs {+1, -1, -1, +1} on the subcarrier 4, the subcarrier 5, the subcarrier 10, and the subcarrier 11 respectively.

In the symbol 11, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the legacy port 10 corresponds to frequency domain OCCs {-1, -1, -1, -1} on the subcarrier 4, the subcarrier 5, the subcarrier 10, and the subcarrier 11 respectively; the legacy port 11 corresponds to frequency domain OCCs {-1, +1, -1, +1} on the subcarrier 4, the subcarrier 5, the subcarrier 10, and the subcarrier 11 respectively; the new port 16 corresponds to frequency domain OCCs {+1, +1, -1, -1} on the subcarrier 4, the subcarrier 5, the subcarrier 10, and the subcarrier 11 respectively; the new port 17 corresponds to frequency domain OCCs {+1, -1, -1, 1} on the subcarrier 4, the subcarrier 5, the subcarrier 10, and the subcarrier 11 respectively; the new port 22 corresponds to frequency domain OCCs {-1, -1, +1, +1} on the subcarrier 4, the subcarrier 5, the subcarrier 10, and the subcarrier 11 respectively; and the new port 23 corresponds to frequency domain OCCs {-1, 1, 1, -1} on the subcarrier 4, the subcarrier 5, the subcarrier 10, and the subcarrier 11 respectively.

In this way, a DMRS corresponding to the new port and a DMRS corresponding to the legacy port may be distinguished by using 4-length frequency domain OCCs, to implement code domain orthogonality.

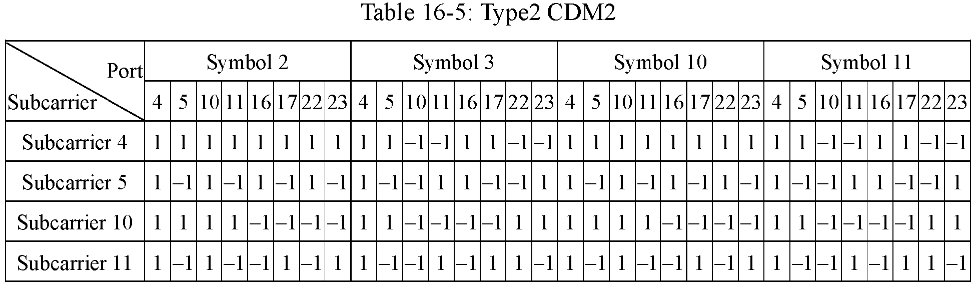

Implementation 3: ADMRS sequence is implemented by using a DFT sequence.

As shown in table 17-1, a port in a type1 CDM group 0 is used as an example. In the symbol 2, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the legacy port 4 corresponds to frequency domain OCCs {+1, +1, +1, +1} on the subcarrier 0, the subcarrier 2, the subcarrier 4, and the subcarrier 6 respectively; the legacy port 5 corresponds to frequency domain OCCs {+1, -1, +1, -1} on the subcarrier 0, the subcarrier 2, the subcarrier 4, and the subcarrier 6 respectively; the new port 8 corresponds to frequency domain OCCs {+1, +j, -1, -j} on the subcarrier 0, the subcarrier 2, the subcarrier 4, and the subcarrier 6 respectively; the new port 9 corresponds to frequency domain OCCs {+1, -j, -1, +j} on the subcarrier 0, the subcarrier 2, the subcarrier 4, and the subcarrier 6 respectively; the new port 12 corresponds to frequency domain OCCs {+1, +j, -1, -j} on the subcarrier 0, the subcarrier 2, the subcarrier 4, and the subcarrier 6 respectively; and the new port 13 corresponds to frequency domain OCCs {+1, -j, -1, +j} on the subcarrier 0, the subcarrier 2, the subcarrier 4, and the subcarrier 6 respectively.

In the symbol 3, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the legacy port 4 corresponds to frequency domain OCCs {-1, -1, -1, -1} on the subcarrier 0, the subcarrier 2, the subcarrier 4, and the subcarrier 6 respectively; the legacy port 5 corresponds to frequency domain OCCs {-1, +1, -1, +1} on the subcarrier 0, the subcarrier 2, the subcarrier 4, and the subcarrier 6 respectively; the new port 8 corresponds to frequency domain OCCs {-1, -j, 1, +j} on the subcarrier 0, the subcarrier 2, the subcarrier 4, and the subcarrier 6 respectively; the new port 9 corresponds to frequency domain OCCs {-1, +j, 1, -j} on the subcarrier 0, the subcarrier 2, the subcarrier 4, and the subcarrier 6 respectively; the new port 12 corresponds to frequency domain OCCs {-1, -j, +1, +j} on the subcarrier 0, the subcarrier 2, the subcarrier 4, and the subcarrier 6 respectively; and the new port 13 corresponds to frequency domain OCCs {-1, j, 1, -j } on the subcarrier 0, the subcarrier 2, the subcarrier 4, and the subcarrier 6 respectively.

In the symbol 10, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the legacy port 4 corresponds to frequency domain OCCs {+1, +1, +1, +1} on the subcarrier 0, the subcarrier 2, the subcarrier 4, and the subcarrier 6 respectively; the legacy port 5 corresponds to frequency domain OCCs {+1, -1, +1, -1} on the subcarrier 0, the subcarrier 2, the subcarrier 4, and the subcarrier 6 respectively; the new port 8 corresponds to frequency domain OCCs {+1, +j, -1, -j} on the subcarrier 0, the subcarrier 2, the subcarrier 4, and the subcarrier 6 respectively; the new port 9 corresponds to frequency domain OCCs {+1, -j, -1, +j} on the subcarrier 0, the subcarrier 2, the subcarrier 4, and the subcarrier 6 respectively; the new port 12 corresponds to frequency domain OCCs {+1, +j, -1, -j} on the subcarrier 0, the subcarrier 2, the subcarrier 4, and the subcarrier 6 respectively; and the new port 13 corresponds to frequency domain OCCs {+1, -j, -1, +j} on the subcarrier 0, the subcarrier 2, the subcarrier 4, and the subcarrier 6 respectively.

In the symbol 11, the legacy port 0 corresponds to frequency domain OCCs {+1, +1, +1, +1} on the subcarrier 0, the subcarrier 2, the subcarrier 4, and the subcarrier 6 respectively; the legacy port 1 corresponds to frequency domain OCCs {+1, -1, +1, -1} on the subcarrier 0, the subcarrier 2, the subcarrier 4, and the subcarrier 6 respectively; the legacy port 4 corresponds to frequency domain OCCs {-1, -1, -1, -1} on the subcarrier 0, the subcarrier 2, the subcarrier 4, and the subcarrier 6 respectively; the legacy port 5 corresponds to frequency domain OCCs {-1, +1, -1, +1} on the subcarrier 0, the subcarrier 2, the subcarrier 4, and the subcarrier 6 respectively; the new port 8 corresponds to frequency domain OCCs {-1, -j, 1, +j} on the subcarrier 0, the subcarrier 2, the subcarrier 4, and the subcarrier 6 respectively; the new port 9 corresponds to frequency domain OCCs {-1, +j, 1, -j} on the subcarrier 0, the subcarrier 2, the subcarrier 4, and the subcarrier 6 respectively; the new port 12 corresponds to frequency domain OCCs {-1, -j, +1, +j} on the subcarrier 0, the subcarrier 2, the subcarrier 4, and the subcarrier 6 respectively; and the new port 13 corresponds to frequency domain OCCs {-1, j, 1, -j } on the subcarrier 0, the subcarrier 2, the subcarrier 4, and the subcarrier 6 respectively.

In this way, a DMRS corresponding to the new port and a DMRS corresponding to the legacy port may be distinguished by using 4-length frequency domain OCCs, to implement code domain orthogonality.

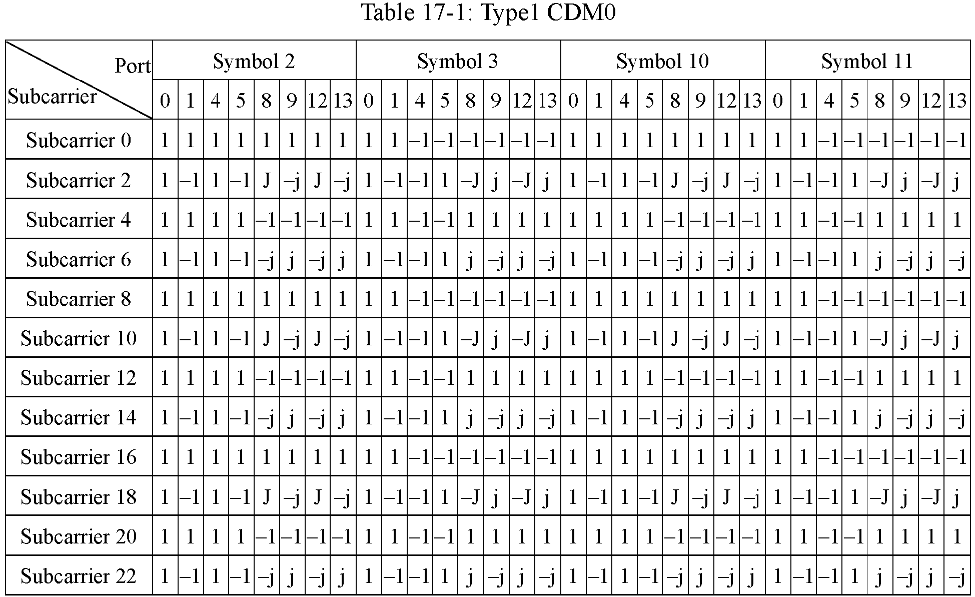

As shown in table 17-2, a port in a type1 CDM group 1 is used as an example. In the symbol 2, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the legacy port 6 corresponds to frequency domain OCCs {+1, +1, +1, +1} on the subcarrier 1, the subcarrier 3, the subcarrier 5, and the subcarrier 7 respectively; the legacy port 7 corresponds to frequency domain OCCs {+1, -1, +1, -1} on the subcarrier 1, the subcarrier 3, the subcarrier 5, and the subcarrier 7 respectively; the new port 10 corresponds to frequency domain OCCs {+1, +j, -1, -j} on the subcarrier 1, the subcarrier 3, the subcarrier 5, and the subcarrier 7 respectively; the new port 11 corresponds to frequency domain OCCs {+1, -j, -1, +j} on the subcarrier 1, the subcarrier 3, the subcarrier 5, and the subcarrier 7 respectively; the new port 14 corresponds to frequency domain OCCs {+1, +j, -1, -j} on the subcarrier 1, the subcarrier 3, the subcarrier 5, and the subcarrier 7 respectively; and the new port 15 corresponds to frequency domain OCCs {+1, -j, -1, +j} on the subcarrier 1, the subcarrier 3, the subcarrier 5, and the subcarrier 7 respectively.

In the symbol 3, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the legacy port 6 corresponds to frequency domain OCCs {-1, -1, -1, -1} on the subcarrier 1, the subcarrier 3, the subcarrier 5, and the subcarrier 7 respectively; the legacy port 7 corresponds to frequency domain OCCs {-1, +1, -1, +1} on the subcarrier 1, the subcarrier 3, the subcarrier 5, and the subcarrier 7 respectively; the new port 10 corresponds to frequency domain OCCs {-1, -j, 1, +j} on the subcarrier 1, the subcarrier 3, the subcarrier 5, and the subcarrier 7 respectively; the new port 11 corresponds to frequency domain OCCs {-1, +j, 1, -j} on the subcarrier 1, the subcarrier 3, the subcarrier 5, and the subcarrier 7 respectively; the new port 14 corresponds to frequency domain OCCs {-1, -j, +1, +j} on the subcarrier 1, the subcarrier 3, the subcarrier 5, and the subcarrier 7 respectively; and the new port 15 corresponds to frequency domain OCCs {-1, j, 1, -j } on the subcarrier 1, the subcarrier 3, the subcarrier 5, and the subcarrier 7 respectively.

In the symbol 10, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the legacy port 6 corresponds to frequency domain OCCs {+1, +1, +1, +1} on the subcarrier 1, the subcarrier 3, the subcarrier 5, and the subcarrier 7 respectively; the legacy port 7 corresponds to frequency domain OCCs {+1, -1, +1, -1} on the subcarrier 1, the subcarrier 3, the subcarrier 5, and the subcarrier 7 respectively; the new port 10 corresponds to frequency domain OCCs {+1, +j, -1, -j} on the subcarrier 1, the subcarrier 3, the subcarrier 5, and the subcarrier 7 respectively; the new port 11 corresponds to frequency domain OCCs {+1, -j, -1, +j} on the subcarrier 1, the subcarrier 3, the subcarrier 5, and the subcarrier 7 respectively; the new port 14 corresponds to frequency domain OCCs {+1, +j, -1, -j} on the subcarrier 1, the subcarrier 3, the subcarrier 5, and the subcarrier 7 respectively; and the new port 15 corresponds to frequency domain OCCs {+1, -j, -1, +j} on the subcarrier 1, the subcarrier 3, the subcarrier 5, and the subcarrier 7 respectively.

In the symbol 11, the legacy port 2 corresponds to frequency domain OCCs {+1, +1, +1, +1} on the subcarrier 1, the subcarrier 3, the subcarrier 5, and the subcarrier 7 respectively; the legacy port 3 corresponds to frequency domain OCCs {+1, -1, +1, -1} on the subcarrier 1, the subcarrier 3, the subcarrier 5, and the subcarrier 7 respectively; the legacy port 6 corresponds to frequency domain OCCs {-1, -1, -1, -1} on the subcarrier 1, the subcarrier 3, the subcarrier 5, and the subcarrier 7 respectively; the legacy port 7 corresponds to frequency domain OCCs {-1, +1, -1, +1} on the subcarrier 1, the subcarrier 3, the subcarrier 5, and the subcarrier 7 respectively; the new port 10 corresponds to frequency domain OCCs {-1, -j, 1, +j} on the subcarrier 1, the subcarrier 3, the subcarrier 5, and the subcarrier 7 respectively; the new port 11 corresponds to frequency domain OCCs {-1, +j, 1, -j} on the subcarrier 1, the subcarrier 3, the subcarrier 5, and the subcarrier 7 respectively; the new port 14 corresponds to frequency domain OCCs {-1, -j, +1, +j} on the subcarrier 1, the subcarrier 3, the subcarrier 5, and the subcarrier 7 respectively; and the new port 15 corresponds to frequency domain OCCs {-1, j, 1, -j } on the subcarrier 1, the subcarrier 3, the subcarrier 5, and the subcarrier 7 respectively.

In this way, a DMRS corresponding to the new port and a DMRS corresponding to the legacy port may be distinguished by using 4-length frequency domain OCCs, to implement code domain orthogonality.

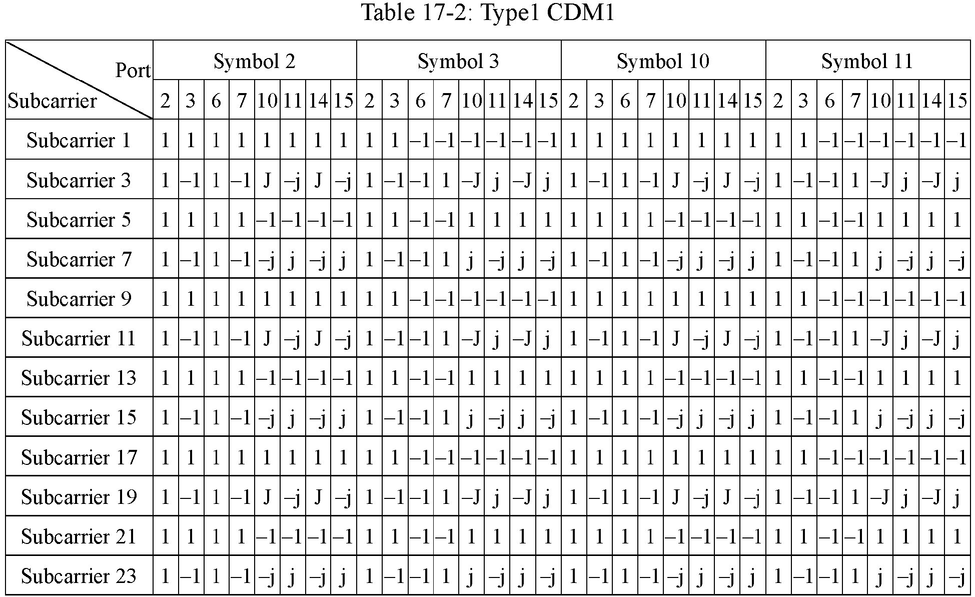

As shown in table 17-3, a port in a type2 CDM group 0 is used as an example. In the symbol 2, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the legacy port 6 corresponds to frequency domain OCCs {+1, +1, +1, +1} on the subcarrier 0, the subcarrier 1, the subcarrier 6, and the subcarrier 7 respectively; the legacy port 7 corresponds to frequency domain OCCs {+1, -1, +1, -1} on the subcarrier 0, the subcarrier 1, the subcarrier 6, and the subcarrier 7 respectively; the new port 12 corresponds to frequency domain OCCs {+1, +j, -1, -j} on the subcarrier 0, the subcarrier 1, the subcarrier 6, and the subcarrier 7 respectively; the new port 13 corresponds to frequency domain OCCs {+1, -j, -1, +j} on the subcarrier 0, the subcarrier 1, the subcarrier 6, and the subcarrier 7 respectively; the new port 18 corresponds to frequency domain OCCs {+1, +j, -1, -j} on the subcarrier 0, the subcarrier 1, the subcarrier 6, and the subcarrier 7 respectively; and the new port 19 corresponds to frequency domain OCCs {+1, -j, -1, +j} on the subcarrier 0, the subcarrier 1, the subcarrier 6, and the subcarrier 7 respectively.

In the symbol 3, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the legacy port 6 corresponds to frequency domain OCCs {-1, -1, -1, -1} on the subcarrier 0, the subcarrier 1, the subcarrier 6, and the subcarrier 7 respectively; the legacy port 7 corresponds to frequency domain OCCs {-1, +1, -1, +1} on the subcarrier 0, the subcarrier 1, the subcarrier 6, and the subcarrier 7 respectively; the new port 12 corresponds to frequency domain OCCs {-1, -j, +1, j} on the subcarrier 0, the subcarrier 1, the subcarrier 6, and the subcarrier 7 respectively; the new port 13 corresponds to frequency domain OCCs {-1, +j, +1, -j} on the subcarrier 0, the subcarrier 1, the subcarrier 6, and the subcarrier 7 respectively; the new port 18 corresponds to frequency domain OCCs {-1, -j, +1, +j} on the subcarrier 0, the subcarrier 1, the subcarrier 6, and the subcarrier 7 respectively; and the new port 19 corresponds to frequency domain OCCs {-1, j, 1, -j } on the subcarrier 0, the subcarrier 1, the subcarrier 6, and the subcarrier 7 respectively.

In the symbol 10, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the legacy port 6 corresponds to frequency domain OCCs {+1, +1, +1, +1} on the subcarrier 0, the subcarrier 1, the subcarrier 6, and the subcarrier 7 respectively; the legacy port 7 corresponds to frequency domain OCCs {+1, -1, +1, -1} on the subcarrier 0, the subcarrier 1, the subcarrier 6, and the subcarrier 7 respectively; the new port 12 corresponds to frequency domain OCCs {+1, +j, -1, -j} on the subcarrier 0, the subcarrier 1, the subcarrier 6, and the subcarrier 7 respectively; the new port 13 corresponds to frequency domain OCCs {+1, -j, -1, +j} on the subcarrier 0, the subcarrier 1, the subcarrier 6, and the subcarrier 7 respectively; the new port 18 corresponds to frequency domain OCCs {+1, +j, -1, -j} on the subcarrier 0, the subcarrier 1, the subcarrier 6, and the subcarrier 7 respectively; and the new port 19 corresponds to frequency domain OCCs {+1, -j, -1, +j} on the subcarrier 0, the subcarrier 1, the subcarrier 6, and the subcarrier 7 respectively.

In the symbol 11, the legacy port 0 corresponds to frequency domain OCCs {+1, +1, +1, +1} on the subcarrier 0, the subcarrier 1, the subcarrier 6, and the subcarrier 7 respectively; the legacy port 1 corresponds to frequency domain OCCs {+1, -1, +1, -1} on the subcarrier 0, the subcarrier 1, the subcarrier 6, and the subcarrier 7 respectively; the legacy port 6 corresponds to frequency domain OCCs {-1, -1, -1, -1} on the subcarrier 0, the subcarrier 1, the subcarrier 6, and the subcarrier 7 respectively; the legacy port 7 corresponds to frequency domain OCCs {-1, +1, -1, +1} on the subcarrier 0, the subcarrier 1, the subcarrier 6, and the subcarrier 7 respectively; the new port 12 corresponds to frequency domain OCCs {-1, -j, +1, j} on the subcarrier 0, the subcarrier 1, the subcarrier 6, and the subcarrier 7 respectively; the new port 13 corresponds to frequency domain OCCs {-1, +j, +1, -j } on the subcarrier 0, the subcarrier 1, the subcarrier 6, and the subcarrier 7 respectively; the new port 18 corresponds to frequency domain OCCs {-1, -j, +1, +j} on the subcarrier 0, the subcarrier 1, the subcarrier 6, and the subcarrier 7 respectively; and the new port 19 corresponds to frequency domain OCCs {-1, j, 1, -j } on the subcarrier 0, the subcarrier 1, the subcarrier 6, and the subcarrier 7 respectively.

In this way, a DMRS corresponding to the new port and a DMRS corresponding to the legacy port may be distinguished by using 4-length frequency domain OCCs, to implement code domain orthogonality.

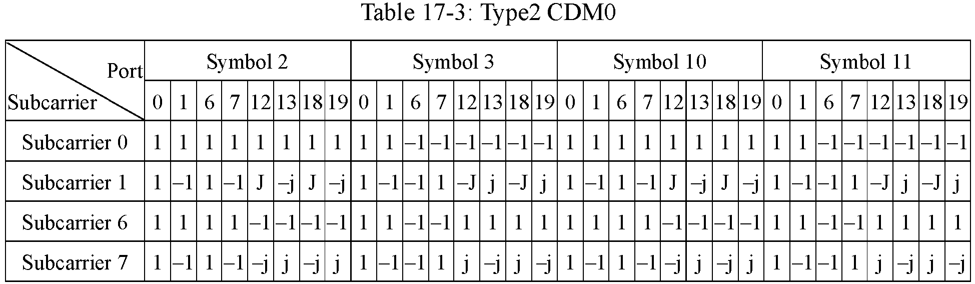

As shown in table 17-4, a port in a type2 CDM group 1 is used as an example. In the symbol 2, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the legacy port 8 corresponds to frequency domain OCCs {+1, +1, +1, +1} on the subcarrier 2, the subcarrier 3, the subcarrier 8, and the subcarrier 9 respectively; the legacy port 9 corresponds to frequency domain OCCs {+1, -1, +1, -1} on the subcarrier 2, the subcarrier 3, the subcarrier 8, and the subcarrier 9 respectively; the new port 14 corresponds to frequency domain OCCs {+1, +j, -1, -j} on the subcarrier 2, the subcarrier 3, the subcarrier 8, and the subcarrier 9 respectively; the new port 15 corresponds to frequency domain OCCs {+1, -j, -1, +j} on the subcarrier 2, the subcarrier 3, the subcarrier 8, and the subcarrier 9 respectively; the new port 20 corresponds to frequency domain OCCs {+1, +j, -1, -j} on the subcarrier 2, the subcarrier 3, the subcarrier 8, and the subcarrier 9 respectively; and the new port 21 corresponds to frequency domain OCCs {+1, -j, -1, +j} on the subcarrier 2, the subcarrier 3, the subcarrier 8, and the subcarrier 9 respectively.

In the symbol 3, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the legacy port 8 corresponds to frequency domain OCCs {-1, -1, -1, -1} on the subcarrier 2, the subcarrier 3, the subcarrier 8, and the subcarrier 9 respectively; the legacy port 9 corresponds to frequency domain OCCs {-1, +1, -1, +1} on the subcarrier 2, the subcarrier 3, the subcarrier 8, and the subcarrier 9 respectively; the new port 14 corresponds to frequency domain OCCs {-1, -j, +1, j} on the subcarrier 2, the subcarrier 3, the subcarrier 8, and the subcarrier 9 respectively; the new port 15 corresponds to frequency domain OCCs {-1, +j, +1, -j } on the subcarrier 2, the subcarrier 3, the subcarrier 8, and the subcarrier 9 respectively; the new port 20 corresponds to frequency domain OCCs {-1, -j, +1, +j} on the subcarrier 2, the subcarrier 3, the subcarrier 8, and the subcarrier 9 respectively; and the new port 21 corresponds to frequency domain OCCs {-1, j, 1, -j } on the subcarrier 2, the subcarrier 3, the subcarrier 8, and the subcarrier 9 respectively.

In the symbol 10, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the legacy port 8 corresponds to frequency domain OCCs {+1, +1, +1, +1} on the subcarrier 2, the subcarrier 3, the subcarrier 8, and the subcarrier 9 respectively; the legacy port 9 corresponds to frequency domain OCCs {+1, -1, +1, -1} on the subcarrier 2, the subcarrier 3, the subcarrier 8, and the subcarrier 9 respectively; the new port 14 corresponds to frequency domain OCCs {+1, +j, -1, -j} on the subcarrier 2, the subcarrier 3, the subcarrier 8, and the subcarrier 9 respectively; the new port 15 corresponds to frequency domain OCCs {+1, -j, -1, +j} on the subcarrier 2, the subcarrier 3, the subcarrier 8, and the subcarrier 9 respectively; the new port 20 corresponds to frequency domain OCCs {+1, +j, -1, -j} on the subcarrier 2, the subcarrier 3, the subcarrier 8, and the subcarrier 9 respectively; and the new port 21 corresponds to frequency domain OCCs {+1, -j, -1, +j} on the subcarrier 2, the subcarrier 3, the subcarrier 8, and the subcarrier 9 respectively.

In the symbol 11, the legacy port 2 corresponds to frequency domain OCCs {+1, +1, +1, +1} on the subcarrier 2, the subcarrier 3, the subcarrier 8, and the subcarrier 9 respectively; the legacy port 3 corresponds to frequency domain OCCs {+1, -1, +1, -1} on the subcarrier 2, the subcarrier 3, the subcarrier 8, and the subcarrier 9 respectively; the legacy port 8 corresponds to frequency domain OCCs {-1, -1, -1, -1} on the subcarrier 2, the subcarrier 3, the subcarrier 8, and the subcarrier 9 respectively; the legacy port 9 corresponds to frequency domain OCCs {-1, +1, -1, +1} on the subcarrier 2, the subcarrier 3, the subcarrier 8, and the subcarrier 9 respectively; the new port 14 corresponds to frequency domain OCCs {-1, -j, +1, j} on the subcarrier 2, the subcarrier 3, the subcarrier 8, and the subcarrier 9 respectively; the new port 15 corresponds to frequency domain OCCs {-1, +j, +1, -j } on the subcarrier 2, the subcarrier 3, the subcarrier 8, and the subcarrier 9 respectively; the new port 20 corresponds to frequency domain OCCs {-1, -j, +1, +j} on the subcarrier 2, the subcarrier 3, the subcarrier 8, and the subcarrier 9 respectively; and the new port 21 corresponds to frequency domain OCCs {-1, j, 1, -j } on the subcarrier 2, the subcarrier 3, the subcarrier 8, and the subcarrier 9 respectively.

In this way, a DMRS corresponding to the new port and a DMRS corresponding to the legacy port may be distinguished by using 4-length frequency domain OCCs, to implement code domain orthogonality.

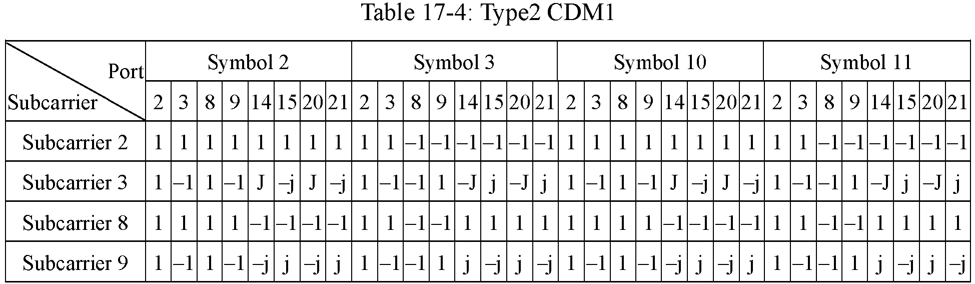

As shown in table 17-5, a port in a type2 CDM group 2 is used as an example. In the symbol 2, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the legacy port 10 corresponds to frequency domain OCCs {+1, +1, +1, +1} on the subcarrier 4, the subcarrier 5, the subcarrier 10, and the subcarrier 11 respectively; the legacy port 11 corresponds to frequency domain OCCs {+1, -1, +1, -1} on the subcarrier 4, the subcarrier 5, the subcarrier 10, and the subcarrier 11 respectively; the new port 16 corresponds to frequency domain OCCs {+1, +j, -1, -j} on the subcarrier 4, the subcarrier 5, the subcarrier 10, and the subcarrier 11 respectively; the new port 17 corresponds to frequency domain OCCs {+1, -j, -1, +j} on the subcarrier 4, the subcarrier 5, the subcarrier 10, and the subcarrier 11 respectively; the new port 22 corresponds to frequency domain OCCs {+1, +j, -1, -j} on the subcarrier 4, the subcarrier 5, the subcarrier 10, and the subcarrier 11 respectively; and the new port 23 corresponds to frequency domain OCCs {+1, -j, -1, +j} on the subcarrier 4, the subcarrier 5, the subcarrier 10, and the subcarrier 11 respectively.

In the symbol 3, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the legacy port 10 corresponds to frequency domain OCCs {-1, -1, -1, -1} on the subcarrier 4, the subcarrier 5, the subcarrier 10, and the subcarrier 11 respectively; the legacy port 11 corresponds to frequency domain OCCs {-1, +1, -1, +1} on the subcarrier 4, the subcarrier 5, the subcarrier 10, and the subcarrier 11 respectively; the new port 16 corresponds to frequency domain OCCs {-1, -j, +1, j} on the subcarrier 4, the subcarrier 5, the subcarrier 10, and the subcarrier 11 respectively; the new port 17 corresponds to frequency domain OCCs {-1, +j, +1, -j} on the subcarrier 4, the subcarrier 5, the subcarrier 10, and the subcarrier 11 respectively; the new port 22 corresponds to frequency domain OCCs {-1, -j, +1, +j} on the subcarrier 4, the subcarrier 5, the subcarrier 10, and the subcarrier 11 respectively; and the new port 23 corresponds to frequency domain OCCs {-1, j, 1, -j} on the subcarrier 4, the subcarrier 5, the subcarrier 10, and the subcarrier 11 respectively.

In the symbol 10, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the legacy port 10 corresponds to frequency domain OCCs {+1, +1, +1, +1} on the subcarrier 4, the subcarrier 5, the subcarrier 10, and the subcarrier 11 respectively; the legacy port 11 corresponds to frequency domain OCCs {+1, -1, +1, -1} on the subcarrier 4, the subcarrier 5, the subcarrier 10, and the subcarrier 11 respectively; the new port 16 corresponds to frequency domain OCCs {+1, +j, -1, -j} on the subcarrier 4, the subcarrier 5, the subcarrier 10, and the subcarrier 11 respectively; the new port 17 corresponds to frequency domain OCCs {+1, -j, -1, +j} on the subcarrier 4, the subcarrier 5, the subcarrier 10, and the subcarrier 11 respectively; the new port 22 corresponds to frequency domain OCCs {+1, +j, -1, -j} on the subcarrier 4, the subcarrier 5, the subcarrier 10, and the subcarrier 11 respectively; and the new port 23 corresponds to frequency domain OCCs {+1, -j, - 1, +j} on the subcarrier 4, the subcarrier 5, the subcarrier 10, and the subcarrier 11 respectively.

In the symbol 11, the legacy port 4 corresponds to frequency domain OCCs {+1, +1, +1, +1} on the subcarrier 4, the subcarrier 5, the subcarrier 10, and the subcarrier 11 respectively; the legacy port 5 corresponds to frequency domain OCCs {+1, -1, +1, -1} on the subcarrier 4, the subcarrier 5, the subcarrier 10, and the subcarrier 11 respectively; the legacy port 10 corresponds to frequency domain OCCs {-1, -1, -1, -1} on the subcarrier 4, the subcarrier 5, the subcarrier 10, and the subcarrier 11 respectively; the legacy port 11 corresponds to frequency domain OCCs {-1, +1, -1, +1} on the subcarrier 4, the subcarrier 5, the subcarrier 10, and the subcarrier 11 respectively; the new port 16 corresponds to frequency domain OCCs {-1, -j, +1, j} on the subcarrier 4, the subcarrier 5, the subcarrier 10, and the subcarrier 11 respectively; the new port 17 corresponds to frequency domain OCCs {-1, +j, +1, -j} on the subcarrier 4, the subcarrier 5, the subcarrier 10, and the subcarrier 11 respectively; the new port 22 corresponds to frequency domain OCCs {-1, -j, +1, +j} on the subcarrier 4, the subcarrier 5, the subcarrier 10, and the subcarrier 11 respectively; and the new port 23 corresponds to frequency domain OCCs {-1, j, 1, -j} on the subcarrier 4, the subcarrier 5, the subcarrier 10, and the subcarrier 11 respectively.

In this way, a DMRS corresponding to the new port and a DMRS corresponding to the legacy port may be distinguished by using 4-length frequency domain OCCs, to implement code domain orthogonality.

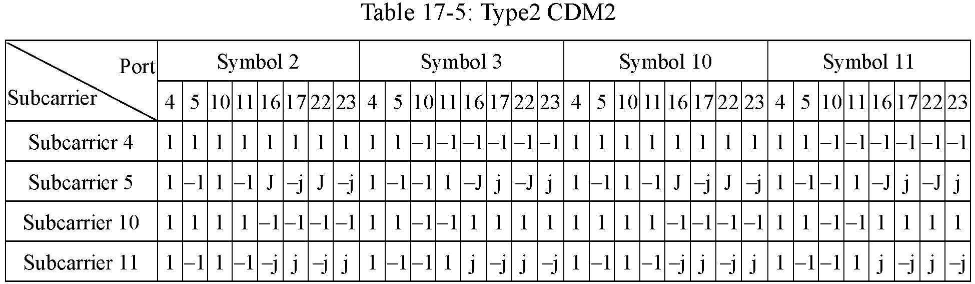

It may be understood that all the foregoing tables use a PDSCH as an example, and for a PUSCH port index, 1000 to 1023 may be changed to 0 to 23.

Based on the descriptions of the foregoing related technical features, when a network device communicates with a terminal device through a control channel or a data channel, the network device needs to indicate, to the terminal device, a port allocated to the terminal device. In addition, in embodiments of this application, how the network device indicates, to the terminal device after DMRS port increasing, a DMRS port allocated to the terminal device is studied. The method provided in embodiments of this application is not only applicable to DMRS port indication, but also applicable to indication of another reference signal port. In embodiments of this application, an example in which the network device indicates a DMRS port to the terminal device is used for detailed description.

It should be noted that "port n", "Pn", and "Port n" in embodiments of this application are all a port with a port number n or with a port index value n, where n is an integer greater than 0, and a maximum value of n may depend on a total number of ports. In addition, if a demodulation reference signal sent by the network device to the terminal device in embodiments of this application is a DMRS, all ports indicated by the network device to the terminal device may be understood as DMRS ports.

Generally, after DMRS port increasing, the DMRS ports allocated by the access network device to the terminal device may be all legacy ports, or may be all new ports, or one part may be legacy ports and the other part may be new ports. A legacy DMRS port corresponds to a 2-length frequency domain orthogonal cover code. If the DMRS port allocated by the network device to the terminal device is a legacy port, because cover code sequences of the legacy port on two adjacent subcarriers in a same CDM group are orthogonal, an interference channel may be eliminated by using such orthogonality, thereby improving an anti-interference capability of the terminal device during channel estimation. A legacy DMRS port corresponds to a 4-length frequency domain orthogonal cover code. If the DMRS port allocated by the network device to the terminal device is a new port, because cover code sequences of the new port on four adjacent subcarriers in a same CDM group are orthogonal, an interference channel may be eliminated by using such orthogonality, thereby improving an anti-interference capability of the terminal device during channel estimation. However, the anti-interference capability of the 4-length frequency domain orthogonal cover code is weaker than that of the 2-length frequency domain orthogonal cover code. Therefore, how to enable a new port to have the anti-interference capability of the 2-length frequency domain orthogonal cover code, so that the terminal device flexibly selects a port to perform channel estimation, to achieve good channel estimation effect is a problem to be urgently resolved by a person skilled in the art.

In view of this, embodiments of this application provide a communication method, to flexibly indicate frequency domain orthogonal cover code lengths of some of ports allocated by a network device to a terminal device, so that the terminal device flexibly selects a port to perform channel estimation, to achieve good channel estimation effect. For example, when fewer than four ports are used in one CDM, the terminal device selects a port whose frequency domain orthogonal cover code length is 2-length to perform channel estimation, so that good channel estimation effect can be achieved.

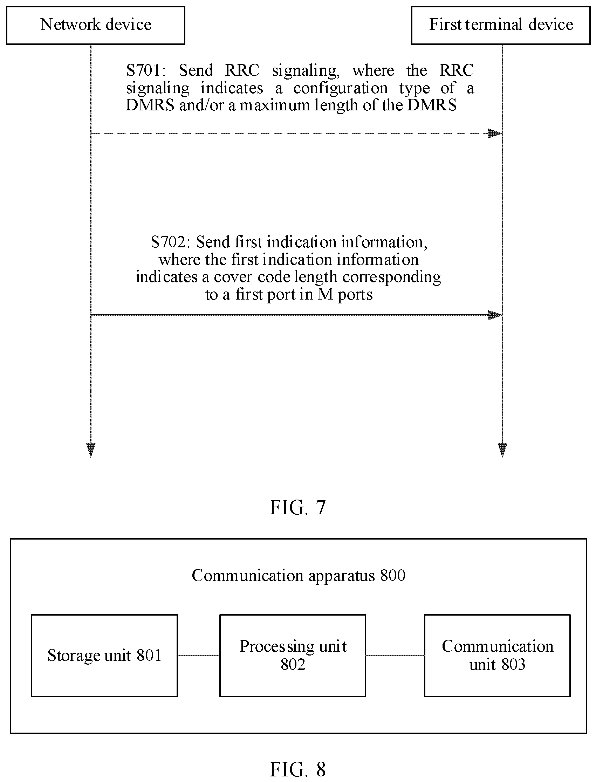

FIG. 7 is a schematic flowchart corresponding to a communication method according to an embodiment of this application. As shown in FIG. 7, a procedure of the method may include the following steps.

S701: A network device sends RRC signaling to a first terminal device, where the RRC signaling indicates a configuration type of a DMRS and/or a maximum length of the DMRS. Correspondingly, the first terminal device receives second signaling.

The maximum length of the DMRS may be understood as a maximum number of symbols occupied by the DMRS or a number of symbols occupied by the DMRS.

For example, the demodulation reference signal is a DMRS. The second signaling may be an RRC message, or the second signaling is carried in an RRC message. For example, the second signaling may include a configuration type field and a maximum number of occupied symbols field in the RRC message.

It may be understood that step S701 is an optional step. The type of the DMRS and/or the maximum length of the DMRS may be configured by default, or may be indicated by the network device to the first terminal device. When the network device indicates the type of the DMRS and/or the maximum length of the DMRS to the first terminal device, the network device performs step S701.

S702: The network device sends first indication information to the first terminal device, where the first indication information indicates a frequency domain orthogonal cover code length corresponding to at least one first port in M ports. Correspondingly, the first terminal device may receive the first indication information.

In embodiments of this application, the M ports are ports allocated by the network device to the first terminal device. M is a positive integer greater than or equal to 1. The M ports belong to a first port set and/or a second port set. Correspondingly, that "the M ports belong to the first port set and/or the second port set" may be understood as that the ports allocated by the network device to the first terminal device belong to the first port set, or the ports allocated by the network device to the first terminal device belong to the second port set, or the ports allocated by the network device to the first terminal device belong to the first port set and the second port set.

In embodiments of this application, the first port set may be understood as a set of added ports, that is, R18 ports, and the second port set may be understood as a set of legacy ports, that is, R15 ports. In addition, the "cover code length" may include a first cover code length and a second cover code length. In embodiments of this application, a second cover code length corresponding to the first port set is the same as a second cover code length corresponding to the second port set. In a possible implementation, when the cover code length is the first cover code length, the cover code length is 4-length or 2-length.

A first cover code is a frequency domain cover code, and a second cover code is a time domain cover code. The frequency domain cover code is W_{f}(f) in a first time-frequency resource mapping rule, the time domain cover code is *w*ₜ(*l'*) in the first time-frequency resource mapping rule, and the first time-frequency resource mapping rule satisfies the following formula: ${a}_{k , l}^{\left(p, μ\right)} = {β}_{PDSCH}^{DMRS} {w}_{f} \left(2⋅\left(n mod 2\right)+k′\right) {w}_{t} \left(l′\right) r \left(2n+k′\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} + l ′$ $n = 0 , 1 , …$

*p* is a port index value, *µ* is a subcarrier spacing parameter, ${a}_{k , l}^{\left(p, μ\right)}$ is a demodulation reference signal DMRS that corresponds to a demodulation reference signal DMRS port *p* and that is mapped to a resource element RE whose index is (*k,l*)*_{p,µ}* (k,l), ${β}_{PDSCH}^{DMRS}$ is a power coefficient, *w*ₜ(*l'*) is a time domain cover code corresponding to a time domain symbol whose index is *l'*, W_{f}(f) is a frequency domain cover code corresponding to a subcarrier whose index is *k',* f = 2 · *(n mod* 2) *+ k', m = 2n + k', m is* an *m*^{th} element in a reference signal sequence, *l* represents an index of an orthogonal frequency division multiplexing OFDM symbol included in a slot, *l̅* is a symbol index of a start time domain symbol occupied by the DMRS symbol or a symbol index of a reference time domain symbol, and Δ is a subcarrier offset factor.

For example, for a port whose demodulation reference signal type is type1, specific values of *w*ₜ(*l'*) and W_{f}(f) may be determined according to table A1; and for a port whose demodulation reference signal type is type2, specific values of *w*ₜ(*l'*) and W_{f}(f) may be determined according to table A2.

**Table A1**

| ***p*** | ***λ*** | **Δ** | ***w*_{f}(*f*)** | | | | **wₜ**(***l'***) | |
|---|---|---|---|---|---|---|---|---|
| | | | ***f =* 0** | ***f =* 1** | ***f* = 2** | ***f* = 3** | ***l'* = 0** | ***l'* = 1** |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 1 | +1 | +1 | +1 | +1 | +1 | +1 |
| 1003 | 1 | 1 | +1 | -1 | +1 | -1 | +1 | +1 |
| 1004 | 0 | 0 | +1 | +1 | +1 | +1 | +1 | -1 |
| 1005 | 0 | 0 | +1 | -1 | +1 | -1 | +1 | -1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | +1 | +j | -1 | -j | +1 | +j |
| 1009 | 0 | 0 | +1 | -j | -1 | +j | +1 | +j |
| 1010 | 1 | 1 | +1 | +j | -1 | -j | +1 | +j |
| 1011 | 1 | 1 | +1 | -j | -1 | +j | +1 | +j |
| 1012 | 0 | 0 | +1 | +j | -1 | -j | +1 | -j |
| 1013 | 0 | 0 | +1 | -j | -1 | +j | +1 | -j |
| 1014 | 1 | 1 | +1 | +j | -1 | -j | +1 | -j |
| 1015 | 1 | 1 | +1 | -j | -1 | +j | +1 | -j |

**Table A2**

| ***p*** | ***λ*** | **Δ** | ***w*_{f}(*f*)** | | | | **wₜ(*l'*)** | |
|---|---|---|---|---|---|---|---|---|
| | | | ***f =* 0** | ***f =* 1** | ***f* = 2** | ***f* = 3** | ***l'* = 0** | ***l'* = 1** |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |
| 1007 | 0 | 0 | +1 | -1 | +1 | -1 | +1 | -1 |
| 1008 | 1 | 2 | +1 | +1 | +1 | +1 | +1 | -1 |
| 1009 | 1 | 2 | +1 | -1 | +1 | -1 | +1 | -1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | +1 | +j | -1 | -j | +1 | +j |
| 1013 | 0 | 0 | +1 | -j | -1 | +j | +1 | +j |
| 1014 | 1 | 2 | +1 | +j | -1 | -j | +1 | +j |
| 1015 | 1 | 2 | +1 | -j | -1 | +j | +1 | +j |
| 1016 | 2 | 4 | +1 | +j | -1 | -j | +1 | +j |
| 1017 | 2 | 4 | +1 | -j | -1 | +j | +1 | +j |
| 1018 | 0 | 0 | +1 | +j | -1 | -j | +1 | -j |
| 1019 | 0 | 0 | +1 | -j | -1 | +j | +1 | -j |
| 1020 | 1 | 2 | +1 | +j | -1 | -j | +1 | -j |
| 1021 | 1 | 2 | +1 | -j | -1 | +j | +1 | -j |
| 1022 | 2 | 4 | +1 | +j | -1 | -j | +1 | -j |
| 1023 | 2 | 4 | +1 | -j | -1 | +j | +1 | -j |

In addition, in embodiments of this application, the M ports are ports allocated by the network device to the terminal device. M is a positive integer greater than or equal to 1. Correspondingly, that "the M ports belong to the first port set and/or the second port set" may be understood as that the ports allocated by the network device to the terminal device belong to the first port set, or the ports allocated by the network device to the terminal device belong to the second port set, or the ports allocated by the network device to the terminal device belong to the first port set and the second port set. Optionally, when the M ports belong to the first port set and the second port set, the cover code length corresponding to the first port set is different from the cover code length corresponding to the second port set. For example, the cover code length corresponding to the first port set is 4-length, and the cover code length corresponding to the second port set is 2-length. For another example, the cover code length corresponding to the first port set is 6-length, and the cover code length corresponding to the second port set is 4-length.

In the solution provided in embodiments of this application, the network device sends the first indication information to the terminal device, where the first indication information indicates the cover code length corresponding to the first port in the M ports, the M ports belong to the first port set and/or the second port set, the cover code length corresponding to the first port set is the first length, and the cover code length corresponding to the second port set is the second length. In this way, the terminal device may know the cover code length corresponding to the first port, so that the terminal device flexibly selects a port to perform channel estimation, to achieve good channel estimation effect. For example, when fewer than four ports are used in one CDM, the terminal device selects a port whose cover code length is 2-length to perform channel estimation, so that good channel estimation effect can be achieved. In addition, in the solution of this application, the M ports that can be flexibly indicated by the network device to the terminal device may belong to a legacy port set and/or an added port set, and a port in the added port set may reuse a time-frequency resource and a sequence corresponding to a port in the legacy port set. Therefore, the network device can flexibly indicate, to the terminal device, ports paired from different port sets, so that the terminal device can achieve a channel estimation capability, and a number of combined ports can be maximized.

In a possible implementation, the first port set includes an eighth port and a ninth port, and 4-length frequency domain cover codes corresponding to the eighth port and the ninth port are orthogonal.

That the 4-length frequency domain cover codes are orthogonal includes that frequency domain cover codes corresponding to four consecutive subcarriers in one code division multiplexing CDM group are orthogonal. Further, that the 4-length frequency domain cover codes are orthogonal satisfies the following formula: ${W}_{1 , f}^{H} {W}_{2 , f} = 0$ ${W}_{1 , f} = \left[\begin{matrix}{W}_{1 , 1} \\ {W}_{1 , 2} \\ {W}_{1 , 3} \\ {W}_{1 , 4}\end{matrix}\right]$ represents a first frequency domain cover code of the eighth port, ${W}_{2 , f} = \left[\begin{matrix}{W}_{2 , 1} \\ {W}_{2 , 2} \\ {W}_{2 , 3} \\ {W}_{2 , 4}\end{matrix}\right]$ represents a second frequency domain cover code of the ninth port, and *f* represents a frequency domain position.

In a possible implementation, the second port set includes a tenth port and an eleventh port, and 2-length frequency domain cover codes corresponding to the tenth port and the eleventh port are orthogonal. That the 2-length frequency domain cover codes are orthogonal includes that frequency domain cover codes corresponding to two consecutive subcarriers in one CDM group are orthogonal. Further, that the 2-length frequency domain cover codes are orthogonal satisfies the following formula: ${W}_{1 , f}^{H} {W}_{2 , f} = 0$${W}_{1 , f} = \left[\begin{matrix}{W}_{1 , 1} \\ {W}_{1 , 2}\end{matrix}\right]$ represents a first frequency domain cover code corresponding to the tenth port, ${W}_{2 , f} = \left[\begin{matrix}{W}_{2 , 1} \\ {W}_{2 , 2}\end{matrix}\right]$ represents a second frequency domain cover code corresponding to the eleventh port, and *f* represents a frequency domain position.

In another possible implementation, the first port set includes an eighth port and a ninth port, and 6-length frequency domain cover codes corresponding to the eighth port and the ninth port are orthogonal. That the 6-length frequency domain cover codes are orthogonal includes that frequency domain cover codes corresponding to six consecutive subcarriers in one code division multiplexing CDM group are orthogonal. Further, that the 6-length frequency domain cover codes are orthogonal satisfies the following formula: ${W}_{1 , f}^{H} {W}_{2 , f} = 0$${W}_{1 , f} = \left[\begin{matrix}{W}_{1 , 1} \\ {W}_{1 , 2} \\ {W}_{1 , 3} \\ {W}_{1 , 4} \\ {W}_{1 , 5} \\ {W}_{1 , 6}\end{matrix}\right]$ represents a first frequency domain cover code corresponding to the eighth port, ${W}_{2 , f} = \left[\begin{matrix}{W}_{2 , 1} \\ {W}_{2 , 2} \\ {W}_{2 , 3} \\ {W}_{2 , 4} \\ {W}_{2 , 5} \\ {W}_{2 , 6}\end{matrix}\right]$ represents a second frequency domain cover code corresponding to the ninth port, and f represents a frequency domain position.

For example, the network device may send the first indication information to the first terminal device by using a media access control (media access control, MAC) layer message (for example, a MAC control element (control element, CE)) or a physical layer message (for example, downlink control information (Downlink control information, DCI)). The first indication information may be a media access control MAC layer message (for example, a CE) or a physical layer message (for example, DCI); or the first indication information may be carried in a media access control MAC layer message (for example, a CE) or a physical layer message (for example, DCI). This is not specifically limited in this application. In an implementation, the first indication information is carried in first signaling. Optionally, the first signaling may further include indication information for indicating a number of CDM groups without data and a number of symbols occupied by the demodulation reference signal.

Optionally, the first signaling may further include indication information for indicating indexes of the M ports. In this way, the first terminal device may know the DMRS ports allocated by the network device to the first terminal device]

In embodiments of this application, that the network device indicates, to the first terminal device by using the first indication information, the cover code length corresponding to the first port in the M ports has a plurality of implementations.

Implementation 1: The first indication information includes a first bit field, and that the first indication information indicates the cover code length corresponding to the first port in the M ports includes: The first bit field indicates the cover code length corresponding to the first port.

In a possible implementation, the first bit field includes one first bit, and the first bit indicates the cover code length corresponding to the first port. For example, four ports are used as an example of the M ports, and cover code lengths of two ports (that is, first ports) in the four ports need to be indicated. In this case, the first bit may indicate the cover code lengths corresponding to the two ports.

In another possible implementation, the first bit field includes one first bit, and the first bit indicates cover code lengths corresponding to the M ports. For example, the M ports are four ports, and the first bit may indicate cover code lengths corresponding to the four ports.

In another possible implementation, the first bit field includes a bitmap, and the bitmap indicates the cover code length corresponding to the first port. Further, in a possible implementation, the bitmap includes N bits, N is greater than or equal to M, an i^{th} bit in the N bits indicates a first cover code length corresponding to an i^{th} port in the M ports, and i∈{1, M}. Optionally, the N bits include M bits, there are at least two bits with different values in the M bits, and the M bits are a 1^{st} bit to an M^{th} bit in the N bits.

For example, the bitmap includes the N bits, where N=4, and M=2. Correspondingly, the 1^{st} bit in the N bits indicates that a frequency domain cover code length corresponding to a 1^{st} port in the M ports is 2, and the 2^{nd} bit in the N bits indicates that a frequency domain cover code length corresponding to a 2^{nd} port in the M ports is 4.

For another example, the bitmap includes the N bits, where N=4, and M=4. Correspondingly, the 1^{st} bit in the N bits indicates that a frequency domain cover code length corresponding to a 1^{st} port in the M ports is 2, the 2^{nd} bit in the N bits indicates that a frequency domain cover code length corresponding to a 2^{nd} port in the M ports is 4, the 3^{rd} bit in the N bits indicates that a frequency domain cover code length corresponding to a 3^{rd} port in the M ports is 4, and the 4^{th} bit in the N bits indicates that a frequency domain cover code length corresponding to a 4^{th} port in the M ports is 4.

Further, in Implementation 1, the first indication information may be carried in first signaling, the first signaling further includes second indication information, the second indication information indicates a first value, the first value is associated with a first port index group, the first port index group includes indexes of the M ports, and M is a positive integer greater than or equal to 1. For example, the first signaling may be DCI.

Implementation 2: That the first indication information indicates the cover code length corresponding to the first port in the M ports includes: The first indication information indicates a first value, the first value is associated with a first port index group, the first port index group includes indexes of the M ports, an index of the first port corresponds to a first identifier, and the first identifier indicates the cover code length corresponding to the first port, where M is a positive integer greater than or equal to 1.

Implementation 3: That the first indication information indicates the cover code length corresponding to the first port in the M ports includes: The first indication information indicates a first value, the first value is associated with a first port index group, the first port index group includes indexes of the M ports, and an index of the first port indicates the cover code length corresponding to the first port, where M is a positive integer greater than or equal to 1.

In some embodiments, S702 may be replaced with the following: The network device sends first signaling to the first terminal device, where the first signaling indicates a port index of a first port in M ports and indicates allocation status information of a second port, and the second port and the first port belong to a same code division multiplexing CDM group. Correspondingly, the first terminal device receives the first signaling.

In embodiments of this application, an allocation status of the second port includes that the second port is allocated or the second port is not allocated. In addition, the allocation status information of the second port may be understood as whether the second port is scheduled to another terminal.

Correspondingly, the first signaling includes the first indication information, and the first indication information indicates the allocation status information of the second port. Optionally, the first indication information further indicates the port index of the first port. In a possible implementation, that the first indication information indicates the allocation status information of the second port includes: The first indication information indicates that the second port is allocated to a second terminal device, or the first indication information indicates that the second port is not allocated to a second terminal device.

Similarly, in embodiments of this application, that the network device indicates the allocation status information of the second port to the first terminal device by using the first indication information includes but is not limited to the following implementations.

Implementation 1: The first indication information includes a first bit field, and that the first indication information indicates the allocation status information of the second port includes: The first bit field indicates the allocation status information of the second port.

In a possible implementation, the first bit field includes one first bit, and the first bit indicates the allocation status information of the second port.

In another possible implementation, the first bit field includes one first bit, and the first bit indicates allocation status information of second ports corresponding to the M ports.

In another possible implementation, the first bit field includes a bitmap, and that the first indication information indicates the allocation status information of the second port includes: The bitmap indicates the allocation status information of the second port. Further, in a possible implementation, the bitmap includes N bits, N is greater than M, an i^{th} bit in the N bits indicates allocation status information of a second port corresponding to an i^{th} port in the M ports, and i∈{1, M}. The N bits include M bits, there are at least two bits with different values in the M bits, and the M bits are a 1^{st} bit to an M^{th} bit in the N bits. The second port corresponding to the i^{th} port in the M ports may be understood as that there is one second port that belongs to a same CDM group as the i^{th} port in the M ports.

For example, the bitmap includes the N bits, where N=4, and M=2. Correspondingly, the 1^{st} bit in the N bits indicates allocation status information of a second port corresponding to a 1^{st} port in the M ports, and the 2^{nd} bit in the N bits indicates allocation status information of a second port corresponding to a 2^{nd} port in the M ports.

For another example, the bitmap includes the N bits, where N=4, and M=4. Correspondingly, the 1^{st} bit in the N bits indicates allocation status information of a second port corresponding to a 1^{st} port in the M ports, the 2^{nd} bit in the N bits indicates allocation status information of a second port corresponding to a 2^{nd} port in the M ports, the 3^{rd} bit in the N bits indicates allocation status information of a second port corresponding to a 3^{rd} port in the M ports, and the 4^{th} bit in the N bits indicates allocation status information of a second port corresponding to a 4^{th} port in the M ports.

In Implementation 1, in a possible implementation, the first signaling further includes second indication information, the second indication information indicates a first value, the first value is associated with a first port index group, and the first port index group includes indexes of the M ports.

Implementation 2: That the first indication information indicates the allocation status information of the second port includes: The first indication information indicates a first value, the first value is associated with a first port index group, the first port index group includes the index of the first port, the index of the first port corresponds to a first identifier, and the first identifier indicates the allocation status information of the second port.

In a possible implementation, that the first identifier indicates the allocation status information of the second port includes: The first identifier indicates that 2-length non-orthogonal cover codes in 4-length orthogonal cover codes corresponding to the second port are allocated to the second terminal device, or the first identifier indicates that 2-length non-orthogonal cover codes in 4-length orthogonal cover codes corresponding to the second port are not allocated to the second terminal device.

For ease of understanding, the following further describes, by using Embodiment 1 and Embodiment 2, the communication method provided in embodiments of this application.

### Embodiment 1

Case 1: The first indication information includes the first bit field, and the first bit field indicates the cover code length corresponding to the first port.

Case 1.1: The first bit field includes one first bit, and the first bit indicates the cover code length corresponding to the first port. For example, four ports are used as an example of the M ports, and cover code lengths of two ports (that is, first ports) in the four ports need to be indicated. In this case, the first bit may indicate the cover code lengths corresponding to the two ports. For example, information indicated by the first bit may be shown in table 18-1. When a value of a frequency domain orthogonal cover code (frequency domain orthogonal cover code, FD-OCC) length field indicated by the first bit is 0, frequency domain orthogonal cover code lengths of the two ports are 2-length; or when a value of an FD-OCC length field indicated by the first bit is 1, frequency domain orthogonal cover code lengths corresponding to the two ports are 4-length.

Case 1.2: The first bit field includes one first bit, and the first bit indicates the cover code lengths corresponding to the M ports. For example, four ports are used as an example of the M ports. In this case, the first bit may indicate the cover code lengths corresponding to the four ports. For example, information indicated by the first bit may be shown in table 18-1. When a value of an FD-OCC length field indicated by the first bit is 0, frequency domain orthogonal cover code lengths of the two ports are 2-length; or when a value of an FD-OCC length field indicated by the first bit is 1, frequency domain orthogonal cover code lengths corresponding to the two ports are 4-length.

**Table 18-1**

| | | |
|---|---|---|
| FD-OCC length | 2 | 4 |
| Value of an FD-OCC length field | 0 | 1 |

Case 1.3: The first bit field includes the bitmap, and the bitmap indicates the cover code length corresponding to the first port. Further, in a possible implementation, the bitmap includes N bits, N is greater than or equal to M, an i^{th} bit in the N bits indicates a first cover code length corresponding to an i^{th} port in the M ports, and i∈{1, M}. Optionally, the N bits include M bits, there are at least two bits with different values in the M bits, and the M bits are a 1^{st} bit to an M^{th} bit in the N bits.

For example, the bitmap includes the N bits, where N=4, and M=2. Correspondingly, the 1^{st} bit in the N bits indicates that a frequency domain cover code length corresponding to a 1^{st} port in the M ports is 2, and the 2^{nd} bit in the N bits indicates that a frequency domain cover code length corresponding to a 2^{nd} port in the M ports is 4.

For another example, the bitmap includes the N bits, where N=4, and M=4. Correspondingly, the 1^{st} bit in the N bits indicates that a frequency domain cover code length corresponding to a 1^{st} port in the M ports is 2, the 2^{nd} bit in the N bits indicates that a frequency domain cover code length corresponding to a 2^{nd} port in the M ports is 4, the 3^{rd} bit in the N bits indicates that a frequency domain cover code length corresponding to a 3^{rd} port in the M ports is 4, and the 4^{th} bit in the N bits indicates that a frequency domain cover code length corresponding to a 4^{th} port in the M ports is 4.

In an example, as shown in table 18-2, the bitmap includes the N bits, where N=4. At least one port in the M ports includes a maximum of four ports, a bit 1 indicates a frequency domain orthogonal cover code length corresponding to a first port, a bit 2 indicates a frequency domain orthogonal cover code length corresponding to a second port, a bit 3 indicates a frequency domain orthogonal cover code length corresponding to a third port, and a bit 4 indicates a frequency domain orthogonal cover code length corresponding to a fourth port. When a value indicated by the bit 1 is 0, the frequency domain orthogonal cover code length corresponding to the first port is 2-length; or when a value indicated by the bit 1 is 1, the frequency domain orthogonal cover code length corresponding to the first port is 4-length. Similarly, when a value indicated by the bit 2 is 0, the frequency domain orthogonal cover code length corresponding to the second port is 2-length; or when a value indicated by the bit 2 is 1, the frequency domain orthogonal cover code length corresponding to the second port is 4-length. Similarly, when a value indicated by the bit 3 is 0, the frequency domain orthogonal cover code length corresponding to the third port is 2-length; or when a value indicated by the bit 2 is 1, the frequency domain orthogonal cover code length corresponding to the third port is 4-length. Similarly, when a value indicated by the bit 4 is 0, the frequency domain orthogonal cover code length corresponding to the fourth port is 2-length; or when a value indicated by the bit 2 is 1, the frequency domain orthogonal cover code length corresponding to the fourth port is 4-length.

For example, the M ports include a port 0, a port 1, a port 8, and a port 9, and the first port is the port 0. When the value indicated by the bit 1 is 0, a frequency domain orthogonal cover code length corresponding to the port 0 is 2-length; or when the value indicated by the bit 1 is 1, a frequency domain orthogonal cover code length corresponding to the port 0 is 4-length. Similarly, the second port is the port 1. When the value indicated by the bit 2 is 0, a frequency domain orthogonal cover code length corresponding to the port 1 is 2-length; or when the value indicated by the bit 2 is 1, a frequency domain orthogonal cover code length corresponding to the port 1 is 4-length. Similarly, the third port is the port 8. When the value indicated by the bit 3 is 0, a frequency domain orthogonal cover code length corresponding to the port 8 is 2-length; or when the value indicated by the bit 2 is 1, a frequency domain orthogonal cover code length corresponding to the port 8 is 4-length. Similarly, the fourth port is the port 9. When the value indicated by the bit 4 is 0, a frequency domain orthogonal cover code length corresponding to the port 9 is 2-length; or when the value indicated by the bit 2 is 1, a frequency domain orthogonal cover code length corresponding to the port 9 is 4-length.

For another example, the M ports include a port 2 and a port 3, and the first port is the port 2. When the value indicated by the bit 1 is 0, a frequency domain orthogonal cover code length corresponding to the port 2 is 2-length; or when the value indicated by the bit 1 is 1, a frequency domain orthogonal cover code length corresponding to the port 2 is 4-length. Similarly, the second port is the port 3. When the value indicated by the bit 2 is 0, a frequency domain orthogonal cover code length corresponding to the port 3 is 2-length; or when the value indicated by the bit 2 is 1, a frequency domain orthogonal cover code length corresponding to the port 3 is 4-length.

**Table 18-2**

| | | |
|---|---|---|
| FD-OCC length | 4 | 2 |
| Value corresponding to the bit 1 | 0 | 1 |
| Value corresponding to the bit 2 | 0 | 1 |
| Value corresponding to the bit 3 | 0 | 1 |
| Value corresponding to the bit 4 | 0 | 1 |

Case 2: The first indication information includes a first bit field, and that the first indication information indicates the allocation status information of the second port includes: The first bit field indicates the allocation status information of the second port.

Case 2.1: The first bit field includes one first bit, and the first bit indicates the allocation status information of the second port. For example, four ports are used as an example of the M ports. The four ports include a port 9, and the port 9 and a port 0 (that is, the second port) are in one CDM group. In this case, the first bit may indicate a cover code length corresponding to the port 0. For example, information indicated by the first bit may be shown in table 19-1. When a value of an allocation status information field indicated by the first bit is 0, the port 0 is allocated; or when a value of an allocation status information field indicated by the first bit is 1, the port 0 is not allocated.

Case 2.2: The first bit field includes one first bit, and the first bit indicates allocation status information of second ports corresponding to the M ports. For example, four ports are used as an example of the M ports, and each of the four ports corresponds to a second port. In this case, the first bit may indicate allocation status information of the four second ports. For example, information indicated by the first bit may be shown in table 19-1. When a value of an allocation status information field indicated by the first bit is 0, the four second ports are allocated; or when a value of an allocation status information field indicated by the first bit is 1, the four second ports are not allocated.

Case 2.3: The first bit field includes a bitmap, and that the first indication information indicates the allocation status information of the second port includes: The bitmap indicates the allocation status information of the second port. Further, in a possible implementation, the bitmap includes N bits, N is greater than M, an i^{th} bit in the N bits indicates allocation status information of a second port corresponding to an i^{th} port in the M ports, and i∈{1, M}. The N bits include M bits, there are at least two bits with different values in the M bits, and the M bits are a 1^{st} bit to an M^{th} bit in the N bits. The second port corresponding to the i^{th} port in the M ports may be understood as that there is one second port that belongs to a same CDM group as the i^{th} port in the M ports.

For example, the bitmap includes the N bits, where N=4, and M=2. Correspondingly, the 1^{st} bit in the N bits indicates allocation status information of a second port corresponding to a 1^{st} port in the M ports, and the 2^{nd} bit in the N bits indicates allocation status information of a second port corresponding to a 2^{nd} port in the M ports.

For another example, the bitmap includes the N bits, where N=4, and M=4. Correspondingly, the 1^{st} bit in the N bits indicates allocation status information of a second port corresponding to a 1^{st} port in the M ports, the 2^{nd} bit in the N bits indicates allocation status information of a second port corresponding to a 2^{nd} port in the M ports, the 3^{rd} bit in the N bits indicates allocation status information of a second port corresponding to a 3^{rd} port in the M ports, and the 4^{th} bit in the N bits indicates allocation status information of a second port corresponding to a 4^{th} port in the M ports.

In an example, information indicated by the bitmap is shown in table 19-2. When a value indicated by the bit 1 is 0, the second port corresponding to the 1^{st} port in the M ports is allocated; or when a value indicated by the bit 1 is 1, the second port corresponding to the 1^{st} port in the M ports is not allocated. Similarly, when a value indicated by the bit 2 is 0, the second port corresponding to the 1^{st} port in the M ports is allocated; or when a value indicated by the bit 2 is 1, the second port corresponding to the 1^{st} port in the M ports is not allocated. Similarly, when a value indicated by the bit 3 is 0, the second port corresponding to the 1^{st} port in the M ports is allocated; or when a value indicated by the bit 3 is 1, the second port corresponding to the 1^{st} port in the M ports is not allocated. Similarly, when a value indicated by the bit 4 is 0, the second port corresponding to the 1^{st} port in the M ports is allocated; or when a value indicated by the bit 4 is 1, the second port corresponding to the 1^{st} port in the M ports is not allocated.

For example, the M ports include a port 0, a port 1, a port 8, and a port 9, and the first port is the port 0. When the value indicated by the bit 1 is 0, a frequency domain orthogonal cover code length corresponding to the port 0 is 2-length; or when the value indicated by the bit 1 is 1, a frequency domain orthogonal cover code length corresponding to the port 0 is 4-length. Similarly, the second port is the port 1. When the value indicated by the bit 2 is 0, a frequency domain orthogonal cover code length corresponding to the port 1 is 2-length; or when the value indicated by the bit 2 is 1, a frequency domain orthogonal cover code length corresponding to the port 1 is 4-length. Similarly, the third port is the port 8. When the value indicated by the bit 3 is 0, a frequency domain orthogonal cover code length corresponding to the port 8 is 2-length; or when the value indicated by the bit 2 is 1, a frequency domain orthogonal cover code length corresponding to the port 8 is 4-length. Similarly, the fourth port is the port 9. When the value indicated by the bit 4 is 0, a frequency domain orthogonal cover code length corresponding to the port 9 is 2-length; or when the value indicated by the bit 2 is 1, a frequency domain orthogonal cover code length corresponding to the port 9 is 4-length.

For another example, the M ports include a port 2 and a port 3, and the first port is the port 2. When the value indicated by the bit 1 is 0, a frequency domain orthogonal cover code length corresponding to the port 2 is 2-length; or when the value indicated by the bit 1 is 1, a frequency domain orthogonal cover code length corresponding to the port 2 is 4-length. Similarly, the second port is the port 3. When the value indicated by the bit 2 is 0, a frequency domain orthogonal cover code length corresponding to the port 3 is 2-length; or when the value indicated by the bit 2 is 1, a frequency domain orthogonal cover code length corresponding to the port 3 is 4-length.

The following uses case 1 as an example for further description with reference to specific examples.

**Table 19-1**

| Allocation status information | Allocated | Not allocated |
|---|---|---|
| Value of an allocation status information field | 0 | 1 |

**Table 19-2**

| Allocation status information | Allocated | Not allocated |
|---|---|---|
| Value corresponding to the bit 1 | 0 | 1 |
| Value corresponding to the bit 2 | 0 | 1 |
| Value corresponding to the bit 3 | 0 | 1 |
| Value corresponding to the bit 4 | 0 | 1 |

Example 1.1: Table 20-1 is a DMRS table corresponding to a DMRS type1 single symbol. If the M ports indicated by the network device to the terminal device include a port 0 and a port 1 that correspond to a value being 2, the port 0 and the port 1 are R15 ports, and the first indication information includes a first bit, it can be learned with reference to table 18-1 that when a value indicated by the first bit is 0, FD-OCC lengths corresponding to the port 0 and the port 1 are 4; or when a value indicated by the first bit is 1, FD-OCC lengths corresponding to the port 0 and the port 1 are 2.

Example 1.2: Table 20-1 is a DMRS table corresponding to a DMRS type1 single symbol. If the M ports indicated by the network device to the terminal device include a port 0 and a port 1 that correspond to an index being 2, and the port 0 and the port 1 are R15 ports, it can be learned with reference to table 18-2 that the first indication information includes a bitmap. The bitmap uses an example of 4 bits. When a value indicated by a bit 1 in the bitmap is 0, an FD-OCC length corresponding to the port 0 is 4. When a value indicated by a bit 1 in the bitmap is 1, an FD-OCC length corresponding to the port 0 is 2. When a value indicated by a bit 2 in the bitmap is 0, an FD-OCC length corresponding to the port 1 is 4. When a value indicated by a bit 2 in the bitmap is 1, an FD-OCC length corresponding to the port 1 is 2.

**Table 20-1: DMRS port table corresponding to dmrs-Type=1 and maxLength=1**

| **One Codeword: Codeword 0 enabled, Codeword 1 disabled** | | |
|---|---|---|
| **Value** | **Number of DMRS CDM group(s) without data** | **DMRS port(s)** |
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0-2 |
| 10 | 2 | 0-3 |
| 11 | 2 | 0, 2 |
| 12-15 | Reserved | Reserved |

Example 2.1: Table 20-2 is a DMRS table corresponding to DMRS type1 double symbols. If the M ports indicated by the network device to the terminal device include a port 2 and a port 3 that correspond to a value being 8, the port 2 and the port 3 are R15 ports, and the first indication information includes a first bit, it can be learned with reference to table 18-1 that when a value indicated by the first bit is 0, FD-OCC lengths corresponding to the port 2 and the port 3 are 4; or when a value indicated by the first bit is 1, FD-OCC lengths corresponding to the port 2 and the port 3 are 2.

Example 2.2: Table 20-2 is a DMRS table corresponding to a DMRS type1 single symbol. If the M ports indicated by the network device to the terminal device include a port 2 and a port 3 that correspond to a value being 8, and the port 2 and the port 3 are R15 ports, it can be learned with reference to table 18-2 that the first indication information includes a bitmap. The bitmap uses an example of 4 bits. When a value indicated by a bit 1 in the bitmap is 0, an FD-OCC length corresponding to the port 2 is 4. When a value indicated by a bit 1 in the bitmap is 1, an FD-OCC length corresponding to the port 2 is 42. When a value indicated by a bit 2 in the bitmap is 0, an FD-OCC length corresponding to the port 3 is 4. When a value indicated by a bit 2 in the bitmap is 1, an FD-OCC length corresponding to the port 3 is 2.

**Table 20-2: DMRS port table corresponding to dmrs-Type=1 and maxLength=2**

| **One Codeword: Codeword 0 enabled, Codeword 1 disabled** | | | | **Two Codewords: Codeword 0 enabled, Codeword 1 enabled** | | | |
|---|---|---|---|---|---|---|---|
| **Value** | **Number of DMRS CDM group(s) without data** | **DMRS port(s)** | **Number of front-load symbols** | **Value** | **Number of DMRS CDM group(s) without data** | **DMRS port(s)** | **Number of front-load symbols** |
| 0 | 1 | 0 | 1 | 0 | 2 | 0-4 | 2 |
| 1 | 1 | 1 | 1 | 1 | 2 | 0, 1, 2, 3, 4, 6 | 2 |
| 2 | 1 | 0, 1 | 1 | 2 | 2 | 0, 1, 2, 3, 4, 5, 6 | 2 |
| 3 | 2 | 0 | 1 | 3 | 2 | 0, 1, 2, 3, 4, 5, 6, 7 | 2 |
| 4 | 2 | 1 | 1 | 4-31 | Reserved | Reserved | Reserved |
| 5 | 2 | 2 | 1 | | | | |
| 6 | 2 | 3 | 1 | | | | |
| 7 | 2 | 0, 1 | 1 | | | | |
| 8 | 2 | 2, 3 | 1 | | | | |
| 9 | 2 | 0-2 | 1 | | | | |
| 10 | 2 | 0-3 | 1 | | | | |
| 11 | 2 | 0, 2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0, 1 | 2 | | | | |
| 21 | 2 | 2, 3 | 2 | | | | |
| 22 | 2 | 4, 5 | 2 | | | | |
| 23 | 2 | 6, 7 | 2 | | | | |
| 24 | 2 | 0, 4 | 2 | | | | |
| 25 | 2 | 2, 6 | 2 | | | | |
| 26 | 2 | 0, 1, 4 | 2 | | | | |
| 27 | 2 | 2,3,6 | 2 | | | | |
| 28 | 2 | 0, 1, 4, 5 | 2 | | | | |
| 29 | 2 | 2,3,6,7 | 2 | | | | |
| 30 | 2 | 0, 2, 4, 6 | 2 | | | | |
| 31 | Reserved | Reserved | Reserved | | | | |

Example 3.1: Table 20-3 is a DMRS table corresponding to a DMRS type2 single symbol. If the M ports indicated by the network device to the terminal device include a port 4 and a port 5 that correspond to a value being 19, the port 4 and the port 5 are R15 ports, and the first indication information includes a first bit, it can be learned with reference to table 18-1 that when a value indicated by the first bit is 0, FD-OCC lengths corresponding to the port 4 and the port 5 are 4; or when a value indicated by the first bit is 1, FD-OCC lengths corresponding to the port 4 and the port 5 are 2.

Example 3.2: Table 20-3 is a DMRS table corresponding to a DMRS type1 single symbol. If the M ports indicated by the network device to the terminal device include a port 4 and a port 5 that correspond to a value being 19, and the port 4 and the port 5 are R15 ports, the first indication information includes a bitmap. The bitmap uses an example of 4 bits. When a value indicated by a bit 1 in the bitmap is 0, an FD-OCC length corresponding to the port 4 is 4. When a value indicated by a bit 1 in the bitmap is 1, an FD-OCC length corresponding to the port 4 is 2. When a value indicated by a bit 2 in the bitmap is 0, an FD-OCC length corresponding to the port 5 is 4. When a value indicated by a bit 2 in the bitmap is 1, an FD-OCC length corresponding to the port 5 is 2.

**Table 20-3: DMRS port table corresponding to dmrs-Type=2 and maxLength=1**

| **One codeword: Codeword 0 enabled, Codeword 1 disabled** | | | **Two codewords: Codeword 0 enabled, Codeword 1 enabled** | | |
|---|---|---|---|---|---|
| **Value** | **Number of DMRS CDM group(s) without data** | **DMRS port(s)** | **Value** | **Number of DMRS CDM group(s) without data** | **DMRS port(s)** |
| 0 | 1 | 0 | 0 | 3 | 0-4 |
| 1 | 1 | 1 | 1 | 3 | 0-5 |
| 2 | 1 | 0, 1 | 2-31 | Reserved | Reserved |
| 3 | 2 | 0 | | | |
| 4 | 2 | 1 | | | |
| 5 | 2 | 2 | | | |
| 6 | 2 | 3 | | | |
| 7 | 2 | 0, 1 | | | |
| 8 | 2 | 2, 3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0, 1 | | | |
| 18 | 3 | 2, 3 | | | |
| 19 | 3 | 4, 5 | | | |
| 20 | 3 | 0-2 | | | |
| 21 | 3 | 3-5 | | | |
| 22 | 3 | 0-3 | | | |
| 23 | 2 | 0, 2 | | | |
| 24-31 | Reserved | Reserved | | | |

Example 4.1: Table 20-4 is a DMRS table corresponding to DMRS type2 double symbols. If the M ports indicated by the network device to the terminal device include a port 2, a port 3, and a port 8 that correspond to a value being 43, and the first indication information includes a first bit, it can be learned with reference to table 18-1 that when a value indicated by the first bit is 0, FD-OCC lengths corresponding to the port 2, the port 3, and the port 8 are 4; or when a value indicated by the first bit is 1, FD-OCC lengths corresponding to the port 2, the port 3, and the port 8 are 2.

Example 4.2: Table 20-4 is a DMRS table corresponding to a DMRS type1 single symbol. If the M ports indicated by the network device to the terminal device include a port 2, a port 3, and a port 8 that correspond to a value being 43, it can be learned with reference to table 18-2 that the first indication information includes a bitmap. The bitmap uses an example of 4 bits. When a value indicated by a bit 1 in the bitmap is 0, an FD-OCC length corresponding to the port 2 is 4. When a value indicated by a bit 1 in the bitmap is 1, an FD-OCC length corresponding to the port 2 is 4. When a value indicated by a bit 2 in the bitmap is 0, an FD-OCC length corresponding to the port 3 is 4. When a value indicated by a bit 2 in the bitmap is 1, an FD-OCC length corresponding to the port 3 is 2. When a value indicated by a bit 3 in the bitmap is 0, an FD-OCC length corresponding to the port 8 is 4. When a value indicated by a bit 3 in the bitmap is 1, an FD-OCC length corresponding to the port 8 is 2.

**Table 20-4: DMRS port table corresponding to dmrs-Type=2 and maxLength=2**

| One codeword: Codeword 0 enabled, Codeword 1 disabled | | | | Two Codewords: Codeword 0 enabled, Codeword 1 enabled | | | |
|---|---|---|---|---|---|---|---|
| **Value** | **Number of DMRS CDM group(s) without data** | **DMRS port(s)** | **Number of front-load symbols** | **Value** | **Number of DMRS CDM group(s) without data** | **DMRS port(s)** | **Number of front-load symbols** |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6-63 | Reserved | Reserved | Reserved |
| 7 | 2 | 0, 1 | 1 | | | | |
| 8 | 2 | 2, 3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0, 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0, 1 | 2 | | | | |
| 37 | 3 | 2, 3 | 2 | | | | |
| 38 | 3 | 4, 5 | 2 | | | | |
| 39 | 3 | 6, 7 | 2 | | | | |
| 40 | 3 | 8, 9 | 2 | | | | |
| 41 | 3 | 10, 11 | 2 | | | | |
| 42 | 3 | 0, 1, 6 | 2 | | | | |
| 43 | 3 | 2,3,8 | 2 | | | | |
| 44 | 3 | 4, 5, 10 | 2 | | | | |
| 45 | 3 | 0, 1, 6, 7 | 2 | | | | |
| 46 | 3 | 2,3,8,9 | 2 | | | | |
| 47 | 3 | 4, 5, 10, 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0, 1 | 2 | | | | |
| 53 | 1 | 6, 7 | 2 | | | | |
| 54 | 2 | 0, 1 | 2 | | | | |
| 55 | 2 | 2, 3 | 2 | | | | |
| 56 | 2 | 6, 7 | 2 | | | | |
| 57 | 2 | 8, 9 | 2 | | | | |
| 58-63 | Reserved | Reserved | Reserved | | | | |

In embodiments of this application, table 18-1, table 18-2, table 19-1, and table 19-2 in Embodiment 1 may be further used to determine, with reference to table 21-9, table 22-9, table 23-9, table 24-A9, and table 24-B9 in Embodiment 2, the cover code length of the first port or the allocation status information of the second port specified by the network device.

### Embodiment 2

Case 1: The first indication information indicates the cover code length corresponding to the first port in the M ports.

Case 1.1: That the first indication information indicates the cover code length corresponding to the first port in the M ports includes: The first indication information indicates a first value, the first value is associated with a first port index group, the first port index group includes indexes of the M ports, an index of the first port corresponds to a first identifier, and the first identifier indicates the cover code length corresponding to the first port, where M is a positive integer greater than or equal to 1.

Case 1.2: That the first indication information indicates the cover code length corresponding to the first port in the M ports includes: The first indication information indicates a first value, the first value is associated with a first port index group, the first port index group includes indexes of the M ports, and an index of the first port indicates the cover code length corresponding to the first port, where M is a positive integer greater than or equal to 1.

Case 2: That the first indication information indicates the allocation status information of the second port includes: The first indication information indicates a first value, the first value is associated with a first port index group, the first port index group includes the index of the first port, the index of the first port corresponds to a first identifier, and the first identifier indicates the allocation status information of the second port.

In a possible implementation, that the first identifier indicates the allocation status information of the second port includes: The first identifier indicates that 2-length non-orthogonal cover codes in 4-length orthogonal cover codes corresponding to the second port are allocated to the second terminal device, or the first identifier indicates that 2-length non-orthogonal cover codes in 4-length orthogonal cover codes corresponding to the second port are not allocated to the second terminal device.

In Implementation 1 of Embodiment 2, that the first indication information indicates an FD-OCC length corresponding to at least one first port in the M ports includes: The first indication information may indicate indexes of the M ports, an index of at least one of the M ports corresponds to a first identifier, and the first identifier indicates a cover code length corresponding to the at least one first port.

In embodiments of this application, the second port and the first port belong to a same CDM group, and the FD-OCC length may also be understood as an allocation status (that is, whether the second port is allocated to the second terminal device) or a scheduling status (that is, whether the second port is scheduled to the second terminal device) of the second port.

The following describes, with reference to a configuration type of a DMRS and a maximum number of symbols occupied by the DMRS, an indication method corresponding to the cover code length of the first port.
1. If a DMRS type configured by the network device for the terminal device is type1 and the DMRS occupies one symbol, the network device may indicate content in table 21-1 to table 21-9 to the terminal device by using the first indication information, so that the terminal device may determine, based on the first indication information with reference to table 21-1 to table 21-9, ports allocated by the network device to the terminal device and FD-OCC lengths corresponding to the ports. In table 21-1 to table 21-9, an FD-OCC length corresponding to a port that is not indicated is 4-length by default. In another possible embodiment, the FD-OCC length corresponding to the port that is not indicated may alternatively be 2-length or 6-length by default. This is not limited in embodiments of this application. A default FD-OCC length of R18 may be determined according to table 5-1 to table 7-3 corresponding to the foregoing formulas 2.1 to 2.4.

Table 21-1 occupies 6 bits. It can be learned from table 21-1 that an FD-OCC length of a same port may be dynamically switched (for example, the network device may indicate, by using DCI signaling, the first terminal device to perform switching). In a possible implementation, the first indication information is carried in first signaling, the first signaling further includes second indication information, the second indication information indicates a first value, the first value is associated with a first port index group, and the first port index group includes indexes of the M ports. The first value may be understood as a value in a row in table 21-1.

In a possible implementation, when the first value includes a value 1 and/or a value 2, the first port index group includes an index of a third port; and when the first value includes the value 1, a cover code length corresponding to the third port is the first length; or when the first value includes the value 2, a cover code length corresponding to the third port is the second length. In this way, the cover code length of the third port can be dynamically switched. Optionally, the first length is 2, and the second length is 4.

For example, using a port 0 as an example, in table 21-1, when the first value is 0 and 29, the indexes of the M ports include an index of the port 0; and when the first value is 0, an FD-OCC length of the port 0 is 4-length; or when the first value is 29, the index of the port 0 corresponds to a first identifier (that is, FD-OCC2), and the first identifier indicates that an FD-OCC length corresponding to the port 0 is 2-length.

For another example, using a port 0 as an example, in table 21-1, when the first value is 3 and 32, the indexes of the M ports include an index of the port 0; and when the first value is 3, an FD-OCC length of the port 0 is 4-length; or when the first value is 32, the index of the port 0 corresponds to a first identifier (that is, FD-OCC2), and the first identifier indicates that an FD-OCC length corresponding to the port 0 is 2-length.

For another example, using a port 1 as an example, in table 21-1, when the first value is 1 and 30, the indexes of the M ports include an index of the port 1; and when the first value is 1, an FD-OCC length of the port 1 is 4-length; or when the first value is 30, the index of the port 1 corresponds to a first identifier (that is, FD-OCC2), and the first identifier indicates that an FD-OCC length corresponding to the port 1 is 2-length.

For another example, using a port 1 as an example, in table 21-1, when the first value is 4 and 33, the indexes of the M ports include an index of the port 1; and when the first value is 4, an FD-OCC length of the port 1 is 4-length; or when the first value is 33, the index of the port 1 corresponds to a first identifier (that is, FD-OCC2), and the first identifier indicates that an FD-OCC length corresponding to the port 1 is 2-length.

For another example, using a port 0 and a port 1 as an example, in table 21-1, when the first value is 2 and 31, the indexes of the M ports include indexes of the port 0 and the port 1; and when the first value is 2, FD-OCC lengths of the port 0 and the port 1 are 4-length; or when the first value is 31, the indexes of the port 0 and the port 1 correspond to a first identifier (that is, FD-OCC2), and the first identifier indicates that FD-OCC lengths corresponding to the port 0 and the port 1 are 2-length.

For another example, using a port 0 and a port 1 as an example, in table 21-1, when the first value is 7 and 34, the indexes of the M ports include indexes of the port 0 and the port 1; and when the first value is 7, FD-OCC lengths of the port 0 and the port 1 are 4-length; or when the first value is 34, the indexes of the port 0 and the port 1 correspond to a first identifier (that is, FD-OCC2), and the first identifier indicates that FD-OCC lengths corresponding to the port 0 and the port 1 are 2-length.

For another example, using a port 2 as an example, in table 21-1, when the first value is 5 and 35, the indexes of the M ports include an index of the port 2; and when the first value is 5, an FD-OCC length of the port 2 is 4-length; or when the first value is 33, the index of the port 2 corresponds to a first identifier (that is, FD-OCC2), and the first identifier indicates that an FD-OCC length corresponding to the port 2 is 2-length.

For another example, using a port 3 as an example, in table 21-1, when the first value is 6 and 36, the indexes of the M ports include an index of the port 3; and when the first value is 6, an FD-OCC length of the port 3 is 4-length; or when the first value is 36, the index of the port 3 corresponds to a first identifier (that is, FD-OCC2), and the first identifier indicates that an FD-OCC length corresponding to the port 3 is 2-length.

For another example, using a port 2 and a port 3 as an example, in table 21-1, when the first value is 8 and 37, the indexes of the M ports include indexes of the port 2 and the port 3; and when the first value is 8, FD-OCC lengths of the port 2 and the port 3 are 4-length; or when the first value is 37, the indexes of the port 2 and the port 3 correspond to a first identifier (that is, FD-OCC2), and the first identifier indicates that FD-OCC lengths corresponding to the port 2 and the port 3 are 2-length.

For another example, using a port 0, a port 2, and a port 3 as an example, in table 21-1, when the first value is 38, the indexes of the M ports include indexes of the port 0, the port 2, and the port 3, the indexes of the port 0, the port 2, and the port 3 correspond to a first identifier (that is, FD-OCC2), and the first identifier indicates that FD-OCC lengths corresponding to the port 0, the port 2, and the port 3 are 2-length; or when the first value is 8, the indexes of the M ports include indexes of the port 2 and the port 3, and FD-OCC lengths of the port 2 and the port 3 are 4-length; or when the first value is 3, the indexes of the M ports include an index of the port 0, and an FD-OCC length of the port 0 is 4-length.

For another example, using a port 0, a port 1, a port 2, and a port 3 as an example, in table 21-1, when the first value is 10 and 39, the indexes of the M ports include indexes of the port 0, the port 1, the port 2, and the port 3; and when the first value is 10, FD-OCC lengths of the port 0, the port 1, the port 2, and the port 3 are 4-length; or when the first value is 39, indexes of the port 0, the port 1, the port 2, and the port 3 correspond to a first identifier (that is, FD-OCC2), and the first identifier indicates that FD-OCC lengths corresponding to the port 0, the port 1, the port 2, and the port 3 are 2-length.

In a possible implementation, when the first value includes a value 3, 4-length frequency domain cover codes corresponding to the second port and the third port are orthogonal, and 2-length frequency domain cover codes corresponding to the second port and the third port are not orthogonal. The second port and the third port are in a same CDM group. In this way, an R15 port and an R18 port may be paired in one CDM group. It can be learned from table 21-1 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal. For example, it is assumed that the port 0 is allocated to another terminal. The M ports may include a port 1 and a port 9 that correspond to the row 40 or 41, and the port 1 and the port 9 belong to a same CDM group. However, 4-length frequency domain cover codes corresponding to the port 1 and the port 9 are orthogonal, but 2-length frequency domain cover codes corresponding to the port 1 and the port 9 are not orthogonal. Alternatively, the corresponding ports in the row 40 or 41 may be replaced with a port 0 and a port 8.

In a possible implementation, when the first value includes a value 4, the first port index group includes indexes of at least one fourth port and at least one fifth port, where a cover code length corresponding to the at least one fourth port is the first length, and a cover code length corresponding to the at least one fifth port is the second length. In this way, different ports in a same first port index group may correspond to different cover code lengths. Optionally, the first length is 2, and the second length is 4. Correspondingly, that the first identifier indicates the cover code length corresponding to the first port includes: The first identifier indicates that the cover code length of the first port is 2-length. In addition, it can be learned from table 21-1 that, when the first value is the value 1, FD-OCC lengths of the M ports associated with the first value may be different, that is, ports in a same row in table 21-1 may correspond to different FD-OCC lengths.

For example, when the first value is the row 42 or 43, the M ports may include a port 0, a port 1, and a port 9 that correspond to the row 42 or 43, an FD-OCC length of the port 0 is 2-length, an FD-OCC length of the port 1 is 4-length, and an FD-OCC length of the port 9 is 4-length. Alternatively, the corresponding ports in the row 42 or 43 may be replaced with a port 0, a port 1, and a port 8, where an FD-OCC length of the port 0 is 4-length, an FD-OCC length of the port 1 is 2-length, and an FD-OCC length of the port 8 is 4-length.

For another example, when the first value is the row 44 or 45, the M ports may include a port 0 and a port 1 that correspond to the row 44 or 45, an FD-OCC length of the port 0 is 2-length, and an FD-OCC length of the port 1 is 4-length. Alternatively, the corresponding ports in the row 44 or 45 are still the port 0 and the port 1, but an FD-OCC length of the port 0 is 4-length, and an FD-OCC length of the port 1 is 2-length.

In a possible implementation, the network device obtains a first antenna port set, where the first antenna port set includes at least one port index group set, port indexes included in a first port index group set in the at least one port index group set are different from each other, the first port index group is any port index group in the first port index group set, a total number of port indexes included in the first port index group set is G, G is a positive integer greater than or equal to 1 and less than or equal to K, and K is related to a type of a demodulation reference signal DMRS.

For example, the first antenna port set may include the first port index group, a second port index group, and a third port index group. The first port index group includes indexes of a port 0, a port 1, and a port 8, the second port index group includes indexes of a port 2, a port 3, and a port 10, and the third port index group includes indexes of a port 9 and a port 11. Further, K is further associated with a maximum length of the demodulation reference signal. Correspondingly, the method further includes: The network device sends second signaling to the first terminal device, where the second signaling indicates the type of the demodulation reference signal and/or the maximum length of the demodulation reference signal. Further, the first terminal device may further determine the type of the demodulation reference signal and/or the maximum length of the demodulation reference signal by using the second signaling.

In a possible implementation, a value of K is any one of 8, 12, 16, or 24. Specifically, when the type of the demodulation reference signal is a first type, and the maximum length of the demodulation reference signal is 1, the value of K is 8; or when the type of the demodulation reference signal is a first type, and the maximum length of the demodulation reference signal is 2, the value of K is 16; or when the type of the demodulation reference signal is a second type, and the maximum length of the demodulation reference signal is 1, the value of K is 12; or when the type of the demodulation reference signal is a second type, and the maximum length of the demodulation reference signal is 2, the value of K is 24.

In addition, it can be learned from table 21-1 that, for a type1 single-symbol R18 port, K=8, table 21-1 includes any port combination for a maximum of 8-stream transmission supported by the type1 single-symbol R18 port, a total number of ports allocated by the network device to paired terminal devices is less than or equal to 8, and a number of ports allocated to each terminal is less than or equal to 4. Specifically, at least one of rows 12 to 45 in table 21-1 may be used for implementation.

For example, the network device may indicate a port 0, a port 1, and a port 8 in the row 20 to a terminal device 1, indicate a port 2, a port 3, and a port 10 in the row 25 to a terminal device 2, and indicate a port 9 and a port 11 in the row 27 to a terminal device 3. To be specific, the network device indicates three streams to the terminal device 1, indicates three streams to the terminal device 2, and indicates two streams to the terminal device 3, to form 8-stream transmission pairing.

For another example, the network device indicates a port 8, a port 9, a port 10, and a port 11 in the row 28 to a terminal device 1, indicates a port 0 and a port 1 in the row 31 to a terminal device 2, and indicates a port 2 and a port 3 in the row 37 to a terminal device 3. To be specific, the network device indicates four streams to the terminal device 1, indicates two streams to the terminal device 2, and indicates two streams to the terminal device 3, to form 8-stream transmission pairing.

For another example, the network device indicates a port 8, a port 9, a port 10, and a port 11 in the row 28 to a terminal device 1, and indicates a port 0, a port 1, a port 2, and a port 3 in the row 39 to a terminal device 2. To be specific, the network device indicates four streams to the terminal device 1, and indicates four streams to the terminal device 2, to form 8-stream transmission pairing.

In a possible implementation, the first port index group belongs to the first antenna port set and a second antenna port set, and the second antenna port set is a subset of the first antenna port set. For example, the first antenna port set may include the first port index group, the second port index group, and the third port index group, and the second antenna port set includes the first port index group and the second port index group. Therefore, the second antenna port set is a subset of the first antenna port set. In addition, it can be learned from table 21-1 that, for a type1 single-symbol R15 port, K=4, and table 21-1 includes a port index group for a maximum of 4-stream transmission supported by the type1 single-symbol R15 port. This may be specifically implemented by using at least one row in rows 0 to 11 in table 21-1, and a number of ports corresponding to each row is less than or equal to 4.

For example, the network device may indicate a port 0 and a port 1 in the row 2 to a terminal device 1, and indicate a port 2 and a port 3 in the row 8 to a terminal device 2, so that the terminal device 1 and the terminal device 2 are simultaneously scheduled in a same slot (that is, scheduled on a same time-frequency resource). For another example, the network device may indicate a port 0 in the row 5 to a terminal device 1, and indicate a port 3 in the row 6 to a terminal device 2, so that the terminal device 1 and the terminal device 2 are simultaneously scheduled in a same slot (that is, scheduled on a same time-frequency resource).

An existing protocol specifies that when the network device indicates a port 0, a port 1, and a port 2 in the row 9, or indicates a port 0, a port 1, a port 2, and a port 3 in the row 10, or indicates a port 0, a port 1, and a port 2 in the row 11 to a terminal device 1, ports corresponding to the row 2, the row 9, and the row 11 are used only for single-UE transmission. Therefore, only the terminal device 1 is scheduled, that is, no other terminal is scheduled on a same time-frequency resource as the terminal device 1.

Optionally, table 21-1 may not include a value set corresponding to the R15 port (a row corresponding to a port combination of R15 ports). That is, rows 0 to 11 in Table 21-1 may be deleted.

**Table 21-1: Type1-E or Type1-R18, maxlength=1**

| One codeword (One Codeword): | | | One codeword (One Codeword): Codeword 0 enabled (Codeword 0 enabled), Codeword 1 disabled (Codeword 1 disabled) | | |
|---|---|---|---|---|---|
| Codeword 0 enabled (Codeword 0 enabled), | | | | | |
| Codeword 1 disabled (Codeword 1 disabled) | | | | | |
| Value | Number of CDM groups without data (Number of DMRS CDM group(s) without data) | DMRS port (port(s)) index | Value | Number of CDM groups without data (Number of DMRS CDM group(s) without data) | DMRS port (port(s)) index |
| 0 | 1 | 0 | 0 | 2 | 0, 1, 2, 3, 8 |
| 1 | 1 | 1 | 1 | 2 | 0, 1, 2, 3, 8, 9 |
| 2 | 1 | 0, 1 | 2 | 2 | 0, 1, 2, 3, 8, 9, 10 |
| 3 | 2 | 0 | 3 | 2 | 0, 1, 2, 3, 8, 9, 10, 11 |
| 4 | 2 | 1 | 4~63 | | |
| 5 | 2 | 2 | | | |
| 6 | 2 | 3 | | | |
| 7 | 2 | 0, 1 | | | |
| 8 | 2 | 2, 3 | | | |
| 9 | 2 | 0-2 | | | |
| 10 | 2 | 0-3 | | | |
| 11 | 2 | 0, 2 | | | |
| 12 | 1 | 8 | | | |
| 13 | 1 | 9 | | | |
| 14 | 1 | 8, 9 | | | |
| 15 | 1 | 0, 1, 8 | | | |
| 16 | 1 | 0, 1, 8, 9 | | | |
| 17 | 2 | 8 | | | |
| 18 | 2 | 9 | | | |
| 19 | 2 | 8, 9 | | | |
| 20 | 2 | 0, 1, 8 | | | |
| 21 | 2 | 0, 1, 8, 9 | | | |
| 22 | 2 | 10 | | | |
| 23 | 2 | 11 | | | |
| 24 | 2 | 10, 11 | | | |
| 25 | 2 | 2, 3, 10 | | | |
| 26 | 2 | 2, 3, 10, 11 | | | |
| 27 | 2 | 9, 11 | | | |
| 28 | 2 | 8, 9, 10, 11 | | | |
| 29 | 1 | 0(FD-OCC2) | | | |
| 30 | 1 | 1(FD-OCC2) | | | |
| 31 | 1 | 0(FD-OCC2), 1(FD-OCC2) | | | |
| 32 | 2 | 0(FD-OCC2) | | | |
| 33 | 2 | 1(FD-OCC2) | | | |
| 34 | 2 | 0(FD-OCC2), 1(FD-OCC2) | | | |
| 35 | 2 | 2(FD-OCC2) | | | |
| 36 | 2 | 3(FD-OCC2) | | | |
| 37 | 2 | 2(FD-OCC2), 3(FD-OCC2) | | | |
| 38 | 2 | 0(FD-OCC2), 2(FD-OCC2), 3(FD-OCC2) | | | |
| 39 | 2 | 0~3(FD-OCC2) | | | |
| 40 | 1 | 1, 9 | | | |
| 41 | 2 | 1, 9 | | | |
| 42 | 1 | 0(FD-OCC2), 1, 9 | | | |
| 43 | 2 | 0(FD-OCC2), 1, 9 | | | |
| 44 | 1 | 0(FD-OCC2), 1 | | | |
| 45 | 2 | 0(FD-OCC2), 1 | | | |
| 46~63 | Reserved | | | | |

In another possible implementation, the first port index group belongs to the first antenna port set and a second antenna port set, the second antenna port set includes at least one antenna port subset, and a complementary set of the at least one antenna port subset in the second antenna port set is a subset of the first antenna port set. A port index group included in the at least one antenna port subset is used for single-user MIMO transmission. For example, the first antenna port set may include the first port index group, the second port index group, and the third port index group, the at least one antenna port subset in the second antenna port set includes the first port index group, the second port index group, and the third port index group, and the second port index group is used for single-user MIMO transmission. Therefore, only the first port index group and the second port index group are subsets of the first antenna port set.

In another possible implementation, the first port index group belongs to the first antenna port set and a second antenna port set, but the second antenna port set is not a subset of the first antenna port set. For example, the first antenna port set may include the first port index group, the second port index group, and the third port index group, and the second antenna port set includes a fourth port index group. Therefore, the second antenna port set is not a subset of the first antenna port set. The first antenna port set is a table corresponding to R18, and the second antenna port set is a table corresponding to R15. The first antenna port set is shown in table 21-9, and the first antenna port set does not include a table corresponding to R15.

Table 21-2 occupies 6 bits. In table 21-2, an FD-OCC length corresponding to a port that is not indicated is 4-length by default. It can be learned from table 21-2 that an FD-OCC length of a same port can be dynamically switched. For a specific example, refer to related descriptions in table 21-1.

In addition, it can be learned from table 21-2 that table 21-1 includes a maximum of 8-stream transmission supported by an R18 port of type1, and a total number of ports allocated by the network device to paired terminal devices is less than or equal to 8. This may be specifically implemented by using at least one row in rows 12 to 45 in table 21-1, and a number of M ports corresponding to each row is less than or equal to 4. For a specific example, refer to related descriptions in table 21-1.

In addition, all rows in table 21-2 are used for MU. In other words, the network device may indicate, to a terminal device, a port combination corresponding to any plurality of rows in table 21-2, to implement MU of a plurality of terminals. For example, the network device indicates a port 0 and a port 1 in a row 7 to a terminal device 1, and indicates a port 8 and a port 9 in a row 11 to a terminal device 2, so that the terminal device 1 and the terminal device 2 can be paired.

**Table 21-2: Type1-E or Type1-R18, maxlength=1**

| One codeword (One Codeword): | | | One codeword (One Codeword): Codeword 0 enabled (Codeword 0 enabled), Codeword 1 disabled (Codeword 1 disabled) | | |
|---|---|---|---|---|---|
| Codeword 0 enabled (Codeword 0 enabled), | | | | | |
| Codeword 1 disabled (Codeword 1 disabled) | | | | | |
| Value | Number of CDM groups without data (Number of DMRS CDM group(s) without data) | DMRS port (port(s)) index | Value | Number of CDM groups without data (Number of DMRS CDM group(s) without data) | DMRS port (port(s)) index |
| 0 | 1 | 0 | 0 | 2 | 0, 1, 2, 3, 8 |
| 1 | 1 | 1 | 1 | 2 | 0, 1, 2, 3, 8, 9 |
| 2 | 1 | 0, 1 | 2 | 2 | 0, 1, 2, 3, 8, 9, 10 |
| 3 | 2 | 0 | 3 | 2 | 0, 1, 2, 3, 8, 9, 10, 11 |
| 4 | 2 | 1 | 4~63 | | |
| 5 | 2 | 2 | | | |
| 6 | 2 | 3 | | | |
| 7 | 2 | 0, 1 | | | |
| 8 | 2 | 2, 3 | | | |
| 9 | 1 | 8 | | | |
| 10 | 1 | 9 | | | |
| 11 | 1 | 8, 9 | | | |
| 12 | 1 | 0, 1,8 | | | |
| 13 | 1 | 0, 1, 8, 9 | | | |
| 14 | 2 | 8 | | | |
| 18 | 2 | 9 | | | |
| 15 | 2 | 8, 9 | | | |
| 16 | 2 | 0, 1,8 | | | |
| 17 | 2 | 0, 1, 8, 9 | | | |
| 18 | 2 | 10 | | | |
| 19 | 2 | 11 | | | |
| 20 | 2 | 10, 11 | | | |
| 21 | 2 | 2, 3, 10 | | | |
| 22 | 2 | 2, 3, 10, 11 | | | |
| 23 | 2 | 9, 11 | | | |
| 24 | 1 | 0(FD-OCC2) | | | |
| 25 | 1 | 1(FD-OCC2) | | | |
| 26 | 1 | 0(FD-OCC2), 1(FD-OCC2) | | | |
| 27 | 2 | 0(FD-OCC2) | | | |
| 28 | 2 | 1(FD-OCC2) | | | |
| 29 | 2 | 0(FD-OCC2), 1(FD-OCC2) | | | |
| 30 | 2 | 2(FD-OCC2) | | | |
| 31 | 2 | 3(FD-OCC2) | | | |
| 32 | 2 | 2(FD-OCC2), 3(FD-OCC2) | | | |
| 33 | 2 | 0(FD-OCC2), 2(FD-OCC2), 3(FD-OCC2) | | | |
| 34 | 2 | 0~3(FD-OCC2) | | | |
| 35~63 | Reserved | | | | |

A difference between table 21-3 and table 21-2 lies in that a number of rows corresponding to a port combination included in table 21-3 is less than that in table 21-2, so that table 21-3 needs to occupy only 5 bits, thereby reducing resource overheads.

**Table 21-3: Type1-E or Type1-R18, maxlength=1**

| One codeword (One Codeword): | | | One codeword (One Codeword): Codeword 0 enabled (Codeword 0 enabled), Codeword 1 disabled (Codeword 1 disabled) | | |
|---|---|---|---|---|---|
| Codeword 0 enabled (Codeword 0 enabled), | | | | | |
| Codeword 1 disabled (Codeword 1 disabled) | | | | | |
| Value | Number of CDM groups without data (Number of DMRS CDM group(s) without data) | DMRS port (port(s)) index | Value | Number of CDM groups without data (Number of DMRS CDM group(s) without data) | DMRS port (port(s)) index |
| 0 | 1 | 0 | 0 | 2 | 0, 1, 2, 3, 8 |
| 1 | 1 | 1 | 1 | 2 | 0, 1, 2, 3, 8, 9 |
| 2 | 1 | 0, 1 | 2 | 2 | 0, 1, 2, 3, 8, 9, 10 |
| 3 | 2 | 0 | 3 | 2 | 0, 1, 2, 3, 8, 9, 10, 11 |
| 4 | 2 | 1 | 4~63 | | |
| 5 | 2 | 2 | | | |
| 6 | 2 | 3 | | | |
| 7 | 2 | 0, 1 | | | |
| 8 | 2 | 2, 3 | | | |
| 9 | 1 | 8 | | | |
| 10 | 1 | 9 | | | |
| 11 | 1 | 8, 9 | | | |
| 12 | 1 | 0, 1, 8 | | | |
| 13 | 1 | 0, 1, 8, 9 | | | |
| 14 | 2 | 8 | | | |
| 15 | 2 | 9 | | | |
| 16 | 2 | 8, 9 | | | |
| 17 | 2 | 0, 1,8 | | | |
| 18 | 2 | 0, 1, 8, 9 | | | |
| 19 | 2 | 10 | | | |
| 20 | 2 | 11 | | | |
| 21 | 2 | 10, 11 | | | |
| 22 | 2 | 2, 3, 10 | | | |
| 23 | 2 | 2,3, 10, 11 | | | |
| 24 | 2 | 9, 11 | | | |
| 25 | 2 | 0(FD-OCC2) | | | |
| 26 | 2 | 1(FD-OCC2) | | | |
| 27 | 2 | 0(FD-OCC2), 1(FD-OCC2) | | | |
| 28 | 2 | 2(FD-OCC2) | | | |
| 29 | 2 | 3(FD-OCC2) | | | |
| 30 | 2 | 2(FD-OCC2), 3(FD-OCC2) | | | |
| 31 | 2 | 0(FD-OCC2), 2(FD-OCC2), 3(FD-OCC2) | | | |
| 32~63 | Reserved | | | | |

Table 21-4 occupies 6 bits. It can be learned from table 21-4 that an FD-OCC length of a same port can be dynamically switched. For a specific example, refer to related descriptions in table 21-1.

In addition, it can be learned from table 21-4 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal. For example, it is assumed that the port 0 is allocated to another terminal. The M ports may include a port 1 and a port 9 that correspond to the row 36 or 37, and the port 1 and the port 9 belong to a same CDM group. However, 4-length frequency domain cover codes corresponding to the port 1 and the port 9 are orthogonal, but 2-length frequency domain cover codes corresponding to the port 1 and the port 9 are not orthogonal. Alternatively, the corresponding ports in the row 36 or 37 are replaced with a port 0 and a port 8.

In addition, it can be learned from table 21-4 that an R18 port of type1 supports a maximum of 8-stream transmission, that is, table 21-4 includes any port combination for 8-stream transmission, a total number of ports allocated by the network device to paired terminal devices is less than or equal to 8, and a number of M ports corresponding to each row is less than or equal to 4. For a specific example, refer to related descriptions in table 21-1.

In addition, all rows in table 21-4 are used for MU. In other words, the network device may indicate, to a terminal device, a port combination corresponding to any plurality of rows in table 21-4, to implement MU of a plurality of terminals. For example, the network device indicates a port 0 and a port 1 in a row 7 to a terminal device 1, and indicates a port 8 and a port 9 in a row 11 to a terminal device 2, so that the terminal device 1 and the terminal device 2 can be paired.

**Table 21-4: Type1-E or Type1-R18, maxlength=1**

| One codeword (One Codeword): | | | One codeword (One Codeword): Codeword 0 enabled (Codeword 0 enabled), Codeword 1 disabled (Codeword 1 disabled) | | |
|---|---|---|---|---|---|
| Codeword 0 enabled (Codeword 0 enabled), | | | | | |
| Codeword 1 disabled (Codeword 1 disabled) | | | | | |
| Value | Number of CDM groups without data (Number of DMRS CDM group(s) without data) | DMRS port (port(s)) index | Value | Number of CDM groups without data (Number of DMRS CDM group(s) without data) | DMRS port (port(s)) index |
| 0 | 1 | 0 | 0 | 2 | 0, 1, 2, 3, 8 |
| 1 | 1 | 1 | 1 | 2 | 0, 1, 2, 3, 8, 9 |
| 2 | 1 | 0, 1 | 2 | 2 | 0, 1, 2, 3, 8, 9, 10 |
| 3 | 2 | 0 | 3 | 2 | 0, 1, 2, 3, 8, 9, 10, 11 |
| 4 | 2 | 1 | 4~63 | | |
| 5 | 2 | 2 | | | |
| 6 | 2 | 3 | | | |
| 7 | 2 | 0, 1 | | | |
| 8 | 2 | 2, 3 | | | |
| 9 | 1 | 8 | | | |
| 10 | 1 | 9 | | | |
| 11 | 1 | 8, 9 | | | |
| 12 | 1 | 0, 1,8 | | | |
| 13 | 1 | 0, 1, 8, 9 | | | |
| 14 | 2 | 8 | | | |
| 15 | 2 | 9 | | | |
| 16 | 2 | 8, 9 | | | |
| 17 | 2 | 0, 1,8 | | | |
| 18 | 2 | 0, 1, 8, 9 | | | |
| 19 | 2 | 10 | | | |
| 20 | 2 | 11 | | | |
| 21 | 2 | 10, 11 | | | |
| 22 | 2 | 2, 3, 10 | | | |
| 23 | 2 | 2, 3, 10, 11 | | | |
| 24 | 2 | 9, 11 | | | |
| 25 | 1 | 0(FD-OCC2) | | | |
| 26 | 1 | 1(FD-OCC2) | | | |
| 27 | 1 | 0(FD-OCC2), 1(FD-OCC2) | | | |
| 28 | 2 | 0(FD-OCC2) | | | |
| 29 | 2 | 1(FD-OCC2) | | | |
| 30 | 2 | 0(FD-OCC2), 1(FD-OCC2) | | | |
| 31 | 2 | 2(FD-OCC2) | | | |
| 32 | 2 | 3(FD-OCC2) | | | |
| 33 | 2 | 2(FD-OCC2), 3(FD-OCC2) | | | |
| 34 | 2 | 0(FD-OCC2), 2(FD-OCC2), 3(FD-OCC2) | | | |
| 35 | 2 | 0~3(FD-OCC2) | | | |
| 36 | 1 | 1, 9 | | | |
| 37 | 2 | 1, 9 | | | |
| 38~63 | Reserved | | | | |

A difference between table 21-5 and table 21-4 lies in that a number of rows corresponding to a port combination included in table 21-4 is less than that in table 21-4, so that table 21-4 needs to occupy only 5 bits. Corresponding ports in a row 30 or a row 31 are a port 1 and a port 9, and the corresponding ports in the row 30 or the row 31 are replaced with a port 0 and a port 8.

**Table 21-5: Type1-E or Type1-R18, maxlength=1**

| One codeword (One Codeword): | | | One codeword (One Codeword): Codeword 0 enabled (Codeword 0 enabled), Codeword 1 disabled (Codeword 1 disabled) | | |
|---|---|---|---|---|---|
| Codeword 0 enabled (Codeword 0 enabled), | | | | | |
| Codeword 1 disabled (Codeword 1 disabled) | | | | | |
| Value | Number of CDM groups without data (Number of DMRS CDM group(s) without data) | DMRS port (port(s)) index | Value | Number of CDM groups without data (Number of DMRS CDM group(s) without data) | DMRS port (port(s)) index |
| 0 | 1 | 0 | 0 | 2 | 0, 1, 2, 3, 8 |
| 1 | 1 | 1 | 1 | 2 | 0, 1, 2, 3, 8, 9 |
| 2 | 1 | 0, 1 | 2 | 2 | 0, 1, 2, 3, 8, 9, 10 |
| 3 | 2 | 0 | 3 | 2 | 0, 1, 2, 3, 8, 9, 10, 11 |
| 4 | 2 | 1 | 4~63 | | |
| 5 | 2 | 2 | | | |
| 6 | 2 | 3 | | | |
| 7 | 2 | 0, 1 | | | |
| 8 | 2 | 2, 3 | | | |
| 9 | 1 | 8 | | | |
| 10 | 1 | 9 | | | |
| 11 | 1 | 8, 9 | | | |
| 12 | 1 | 0, 1,8 | | | |
| 13 | 1 | 0, 1, 8, 9 | | | |
| 14 | 2 | 8 | | | |
| 15 | 2 | 9 | | | |
| 16 | 2 | 8, 9 | | | |
| 17 | 2 | 0, 1,8 | | | |
| 18 | 2 | 0, 1, 8, 9 | | | |
| 19 | 2 | 10 | | | |
| 20 | 2 | 11 | | | |
| 21 | 2 | 10, 11 | | | |
| 22 | 2 | 2, 3, 10 | | | |
| 23 | 2 | 2, 3, 10, 11 | | | |
| 24 | 2 | 9, 11 | | | |
| 25 | 2 | 0(FD-OCC2) | | | |
| 26 | 2 | 1(FD-OCC2) | | | |
| 27 | 2 | 0(FD-OCC2), 1(FD-OCC2) | | | |
| 28 | 2 | 0(FD-OCC2), 2(FD-OCC2), 3(FD-OCC2) | | | |
| 29 | 2 | 0~3(FD-OCC2) | | | |
| 30 | 1 | 1, 9 | | | |
| 31 | 2 | 1, 9 | | | |
| 32~63 | Reserved | | | | |

Table 21-6 occupies 5 bits. It can be learned from table 21-6 that an R18 port of type1 supports a maximum of 8-stream transmission, that is, table 21-6 includes any port combination for 8-stream transmission, a total number of ports allocated by the network device to paired terminal devices is less than or equal to 8, and a number of M ports corresponding to each row is less than or equal to 4. For a specific example, refer to related descriptions in table 21-1.

In addition, it can be learned from table 21-6 that, table 21-6 includes any port combination for a maximum of 4-stream transmission supported by the R15 port. This may be specifically implemented by using at least one row in rows 0 to 11 in table 21-6, and a number of ports corresponding to each row is less than or equal to 4. For example, the network device may indicate a port 0 and a port 1 in the row 2 to a terminal device 1, and indicate a port 2 and a port 3 in the row 8 to a terminal device 2, so that the terminal device 1 and the terminal device 2 are simultaneously scheduled in a same slot (that is, scheduled on a same time-frequency resource). An existing protocol specifies that when the network device indicates a port 0, a port 1, and a port 2 in the row 9, or indicates a port 0, a port 1, a port 2, and a port 3 in the row 10, or indicates a port 0, a port 1, and a port 2 in the row 11 to a terminal device 1, ports corresponding to the row 2, the row 9, and the row 11 are used only for single-UE transmission. Therefore, only the terminal device 1 is scheduled, that is, no other terminal is scheduled on a same time-frequency resource as the terminal device 1.

**Table 21-6: Type1-E or Type1-R18, maxlength=1**

| One codeword (One Codeword): | | | One codeword (One Codeword): Codeword 0 enabled (Codeword 0 enabled), Codeword 1 disabled (Codeword 1 disabled) | | |
|---|---|---|---|---|---|
| Codeword 0 enabled (Codeword 0 enabled), | | | | | |
| Codeword 1 disabled (Codeword 1 disabled) | | | | | |
| Value | Number of CDM groups without data (Number of DMRS CDM group(s) without data) | DMRS port (port(s)) index | Value | Number of CDM groups without data (Number of DMRS CDM group(s) without data) | DMRS port (port(s)) index |
| 0 | 1 | 0 | 0 | 2 | 0, 1, 2, 3, 8 |
| 1 | 1 | 1 | 1 | 2 | 0, 1, 2, 3, 8, 9 |
| 2 | 1 | 0, 1 | 2 | 2 | 0, 1, 2, 3, 8, 9, 10 |
| 3 | 2 | 0 | 3 | 2 | 0, 1, 2, 3, 8, 9, 10, 11 |
| 4 | 2 | 1 | 4~63 | | |
| 5 | 2 | 2 | | | |
| 6 | 2 | 3 | | | |
| 7 | 2 | 0, 1 | | | |
| 8 | 2 | 2, 3 | | | |
| 9 | 2 | 0-2 | | | |
| 10 | 2 | 0-3 | | | |
| 11 | 2 | 0, 2 | | | |
| 12 | 1 | 8 | | | |
| 13 | 1 | 9 | | | |
| 14 | 1 | 8, 9 | | | |
| 15 | 1 | 0, 1, 8 | | | |
| 16 | 1 | 0, 1, 8, 9 | | | |
| 17 | 2 | 8 | | | |
| 18 | 2 | 9 | | | |
| 19 | 2 | 8, 9 | | | |
| 20 | 2 | 0, 1, 8 | | | |
| 21 | 2 | 0, 1, 8, 9 | | | |
| 22 | 2 | 10 | | | |
| 23 | 2 | 11 | | | |
| 24 | 2 | 10, 11 | | | |
| 25 | 2 | 2, 3, 10 | | | |
| 26 | 2 | 2, 3, 10, 11 | | | |
| 27 | 2 | 9, 11 | | | |
| 28 | 2 | 8, 9, 10, 11 | | | |
| 29~63 | Reserved | | | | |

Table 21-7 occupies 5 bits. It can be learned from table 21-7 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal. For example, it is assumed that the port 0 is allocated to another terminal. The M ports may include a port 1 and a port 9 that correspond to the row 29 or 30, and the port 1 and the port 9 belong to a same CDM group. However, 4-length frequency domain cover codes corresponding to the port 1 and the port 9 are orthogonal, but 2-length frequency domain cover codes corresponding to the port 1 and the port 9 are not orthogonal. Alternatively, the corresponding ports in the row 29 or 30 may be replaced with a port 0 and a port 8.

In addition, it can be learned from table 21-7 that an R18 port of type1 supports a maximum of 8-stream transmission, that is, table 21-7 includes any port combination for 8-stream transmission, a total number of ports allocated by the network device to paired terminal devices is less than or equal to 8, and a number of M ports corresponding to each row is less than or equal to 4. For a specific example, refer to related descriptions in table 21-1.

In addition, it can be learned from table 21-7 that, table 21-7 includes any port combination for a maximum of 4-stream transmission supported by the R15 port. This may be specifically implemented by using at least one row in rows 0 to 11 in table 21-7, and a number of ports corresponding to each row is less than or equal to 4. For example, the network device may indicate a port 0 and a port 1 in the row 2 to a terminal device 1, and indicate a port 2 and a port 3 in the row 8 to a terminal device 2, so that the terminal device 1 and the terminal device 2 are simultaneously scheduled in a same slot (that is, scheduled on a same time-frequency resource). An existing protocol specifies that when the network device indicates a port 0, a port 1, and a port 2 in the row 9, or indicates a port 0, a port 1, a port 2, and a port 3 in the row 10, or indicates a port 0, a port 1, and a port 2 in the row 11 to a terminal device 1, ports corresponding to the row 2, the row 9, and the row 11 are used only for single-UE transmission. Therefore, only the terminal device 1 is scheduled, that is, no other terminal is scheduled on a same time-frequency resource as the terminal device 1.

**Table 21-7: Type1-E or Type1-R18, maxlength=1**

| One codeword (One Codeword): | | | One codeword (One Codeword): Codeword 0 enabled (Codeword 0 enabled), Codeword 1 disabled (Codeword 1 disabled) | | |
|---|---|---|---|---|---|
| Codeword 0 enabled (Codeword 0 enabled), | | | | | |
| Codeword 1 disabled (Codeword 1 disabled) | | | | | |
| Value | Number of CDM groups without data (Number of DMRS CDM group(s) without data) | DMRS port (port(s)) index | Value | Number of CDM groups without data (Number of DMRS CDM group(s) without data) | DMRS port (port(s)) index |
| 0 | 1 | 0 | 0 | 2 | 0, 1, 2, 3, 8 |
| 1 | 1 | 1 | 1 | 2 | 0, 1, 2, 3, 8, 9 |
| 2 | 1 | 0, 1 | 2 | 2 | 0, 1, 2, 3, 8, 9, 10 |
| 3 | 2 | 0 | 3 | 2 | 0, 1, 2, 3, 8, 9, 10, 11 |
| 4 | 2 | 1 | 4~63 | | |
| 5 | 2 | 2 | | | |
| 6 | 2 | 3 | | | |
| 7 | 2 | 0, 1 | | | |
| 8 | 2 | 2, 3 | | | |
| 9 | 2 | 0-2 | | | |
| 10 | 2 | 0-3 | | | |
| 11 | 2 | 0, 2 | | | |
| 12 | 1 | 8 | | | |
| 13 | 1 | 9 | | | |
| 14 | 1 | 8, 9 | | | |
| 15 | 1 | 0, 1, 8 | | | |
| 16 | 1 | 0, 1, 8, 9 | | | |
| 17 | 2 | 8 | | | |
| 18 | 2 | 9 | | | |
| 19 | 2 | 8, 9 | | | |
| 20 | 2 | 0, 1, 8 | | | |
| 21 | 2 | 0, 1, 8, 9 | | | |
| 22 | 2 | 10 | | | |
| 23 | 2 | 11 | | | |
| 24 | 2 | 10, 11 | | | |
| 25 | 2 | 2, 3, 10 | | | |
| 26 | 2 | 2, 3, 10, 11 | | | |
| 27 | 2 | 9, 11 | | | |
| 28 | 2 | 8, 9, 10, 11 | | | |
| 29 | 1 | 1, 9 | | | |
| 30 | 2 | 1, 9 | | | |
| 31~63 | Reserved | | | | |

Table 21-8 occupies 5 bits. It can be learned from table 21-8 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal. For example, it is assumed that the port 0 is allocated to another terminal. The M ports may include a port 1 and a port 9 that correspond to the row 29 or 30, and the port 1 and the port 9 belong to a same CDM group. However, 4-length frequency domain cover codes corresponding to the port 1 and the port 9 are orthogonal, but 2-length frequency domain cover codes corresponding to the port 1 and the port 9 are not orthogonal. Alternatively, the corresponding ports in the row 29 or 30 may be replaced with a port 0 and a port 8.

In addition, it can be learned from table 21-8 that an R18 port of type1 supports a maximum of 8-stream transmission, that is, table 21-8 includes any port combination for 8-stream transmission, a total number of ports allocated by the network device to paired terminal devices is less than or equal to 8, and a number of M ports corresponding to each row is less than or equal to 4. For a specific example, refer to related descriptions in table 21-1.

In addition, all rows in table 21-8 are used for MU. In other words, the network device may indicate, to a terminal device, a port combination corresponding to any plurality of rows in table 21-2, to implement MU of a plurality of terminals. For example, the network device indicates a port 0 and a port 1 in a row 7 to a terminal device 1, and indicates a port 8 and a port 9 in a row 19 to a terminal device 2, so that the terminal device 1 and the terminal device 2 can be paired.

**Table 21-8: Type1-E or Type1-R18, maxlength=1**

| One codeword (One Codeword): | | | One codeword (One Codeword): Codeword 0 enabled (Codeword 0 enabled), Codeword 1 disabled (Codeword 1 disabled) | | |
|---|---|---|---|---|---|
| Codeword 0 enabled (Codeword 0 enabled), | | | | | |
| Codeword 1 disabled (Codeword 1 disabled) | | | | | |
| Value | Number of CDM groups without data (Number of DMRS CDM group(s) without data) | DMRS port (port(s)) index | Value | Number of CDM groups without data (Number of DMRS CDM group(s) without data) | DMRS port (port(s)) index |
| 0 | 1 | 0 | 0 | 2 | 0, 1, 2, 3, 8 |
| 1 | 1 | 1 | 1 | 2 | 0, 1, 2, 3, 8, 9 |
| 2 | 1 | 0, 1 | 2 | 2 | 0, 1, 2, 3, 8, 9, 10 |
| 3 | 2 | 0 | 3 | 2 | 0, 1, 2, 3, 8, 9, 10, 11 |
| 4 | 2 | 1 | 4~63 | | |
| 5 | 2 | 2 | | | |
| 6 | 2 | 3 | | | |
| 7 | 2 | 0, 1 | | | |
| 8 | 2 | 2, 3 | | | |
| 12 | 1 | 8 | | | |
| 13 | 1 | 9 | | | |
| 14 | 1 | 8, 9 | | | |
| 15 | 1 | 0, 1,8 | | | |
| 16 | 1 | 0, 1, 8, 9 | | | |
| 17 | 2 | 8 | | | |
| 18 | 2 | 9 | | | |
| 19 | 2 | 8, 9 | | | |
| 20 | 2 | 0, 1,8 | | | |
| 21 | 2 | 0, 1, 8, 9 | | | |
| 22 | 2 | 10 | | | |
| 23 | 2 | 11 | | | |
| 24 | 2 | 10, 11 | | | |
| 25 | 2 | 2, 3, 10 | | | |
| 26 | 2 | 2, 3, 10, 11 | | | |
| 27 | 2 | 9, 11 | | | |
| 28 | 2 | 8, 9, 10, 11 | | | |
| 29 | 1 | 1, 9 | | | |
| 30 | 2 | 1, 9 | | | |
| 31~63 | Reserved | | | | |

Table 21-9 occupies 5 bits. It can be learned from table 21-9 that an R18 port of type1 supports a maximum of 8-stream transmission, that is, table 21-8 includes any port combination for 8-stream transmission, a total number of ports allocated by the network device to paired terminal devices is less than or equal to 8, and a number of M ports corresponding to each row is less than or equal to 4. For a specific example, refer to related descriptions in table 21-1.

In addition, table 21-9 does not include a value set corresponding to the R15 port (a row corresponding to a port combination of R15 ports).

Correspondingly, table 21-9 may be used with reference to table 18-1 to table 19-2 in Embodiment 1. For example, the network device indicates a port 0, a port 1, a port 8, and a port 9 in the row 9 to the terminal device. Correspondingly, if the network device indicates that a value of a first DCI field is 0, 4-length orthogonal cover codes corresponding to the port 0, the port 1, the port 8, and the port 9 have been allocated to another terminal, or FD-OCC lengths corresponding to the port 0, the port 1, the port 8, and the port 9 are 2-length. If the network device indicates that a value of a first DCI field is 1, 4-length orthogonal cover codes corresponding to the port 0, the port 1, the port 8, and the port 9 are not allocated to another terminal, or FD-OCC lengths corresponding to the port 0, the port 1, the port 8, and the port 9 are 4-length.

**Table 21-9: Type1-E or Type1-R18, maxlength=1**

| One codeword (One Codeword): | | | One codeword (One Codeword): Codeword 0 enabled (Codeword 0 enabled), Codeword 1 disabled (Codeword 1 disabled) | | |
|---|---|---|---|---|---|
| Codeword 0 enabled (Codeword 0 enabled), | | | | | |
| Codeword 1 disabled (Codeword 1 disabled) | | | | | |
| Value | Number of CDM groups without data (Number of DMRS CDM group(s) without data) | DMRS port (port(s)) index | Value | Number of CDM groups without data (Number of DMRS CDM group(s) without data) | DMRS port (port(s)) index |
| 0 | 1 | 8 | 0 | 2 | 0, 1, 2, 3, 8 |
| 1 | 1 | 9 | 1 | 2 | 0, 1, 2, 3, 8, 9 |
| 2 | 1 | 8, 9 | 2 | 2 | 0, 1, 2, 3, 8, 9, 10 |
| 3 | 1 | 0, 1,8 | 3 | 2 | 0, 1, 2, 3, 8, 9, 10, 11 |
| 4 | 1 | 0, 1, 8, 9 | 4~63 | | |
| 5 | 2 | 8 | | | |
| 6 | 2 | 9 | | | |
| 7 | 2 | 8, 9 | | | |
| 8 | 2 | 0, 1,8 | | | |
| 9 | 2 | 0, 1, 8, 9 | | | |
| 10 | 2 | 10 | | | |
| 11 | 2 | 11 | | | |
| 12 | 2 | 10, 11 | | | |
| 13 | 2 | 2, 3, 10 | | | |
| 14 | 2 | 2, 3, 10, 11 | | | |
| 15 | 2 | 9, 11 | | | |
| 16 | 2 | 8, 9, 10, 11 | | | |
| 17 | 1 | 1, 9 | | | |
| 18 | 2 | 1, 9 | | | |
| 19~63 | Reserved | | | | |

2. If a DMRS type configured by the network device for the terminal device is type1 and the DMRS occupies two symbols, the network device may indicate content in table 22-1 to table 22-9 to the terminal device by using the first indication information, so that the terminal device may determine, based on the first indication information with reference to table 22-1 to table 22-9, ports allocated by the network device to the terminal device and FD-OCC lengths corresponding to the ports. In table 22-1 to table 22-9, an FD-OCC length corresponding to a port that is not indicated is 4-length by default. In another possible embodiment, the FD-OCC length corresponding to the port that is not indicated may alternatively be 2-length or 6-length by default. This is not limited in embodiments of this application. A default FD-OCC length of R18 may be determined according to table 5-1 to table 7-3 corresponding to the foregoing formulas 2.1 to 2.4.

Table 22-1 occupies 7 bits. It can be learned from table 22-1 that an FD-OCC length of a same port may be dynamically switched (for example, the network device may indicate, by using DCI signaling, the terminal device to perform switching). In a possible implementation, the first indication information is carried in first signaling, the first signaling further includes second indication information, the second indication information indicates a first value, the first value is associated with a first port index group, and the first port index group includes indexes of the M ports. The first value may be understood as a value in a row in table 22-1.

For example, using a port 0 as an example, in table 22-1, when the first value is 0 and 29, the indexes of the M ports include an index of the port 0; and when the first value is 0, an FD-OCC length of the port 0 is 4-length; or when the first value is 29, the index of the port 0 corresponds to a first identifier (that is, FD-OCC2), and the first identifier indicates that an FD-OCC length corresponding to the port 0 is 2-length.

For another example, using a port 0 as an example, in table 22-1, when the first value is 3 and 32, the indexes of the M ports include an index of the port 0; and when the first value is 3, an FD-OCC length of the port 0 is 4-length; or when the first value is 32, the index of the port 0 corresponds to a first identifier (that is, FD-OCC2), and the first identifier indicates that an FD-OCC length corresponding to the port 0 is 2-length.

For another example, using a port 1 as an example, in table 22-1, when the first value is 1 and 30, the indexes of the M ports include an index of the port 1; and when the first value is 1, an FD-OCC length of the port 1 is 4-length; or when the first value is 30, the index of the port 1 corresponds to a first identifier (that is, FD-OCC2), and the first identifier indicates that an FD-OCC length corresponding to the port 1 is 2-length.

For another example, using a port 1 as an example, in table 22-1, when the first value is 4 and 33, the indexes of the M ports include an index of the port 1; and when the first value is 4, an FD-OCC length of the port 1 is 4-length; or when the first value is 33, the index of the port 1 corresponds to a first identifier (that is, FD-OCC2), and the first identifier indicates that an FD-OCC length corresponding to the port 1 is 2-length.

For another example, using a port 0 and a port 1 as an example, in table 22-1, when the first value is 2 and 31, the indexes of the M ports include indexes of the port 0 and the port 1; and when the first value is 2, FD-OCC lengths of the port 0 and the port 1 are 4-length; or when the first value is 31, the indexes of the port 0 and the port 1 correspond to a first identifier (that is, FD-OCC2), and the first identifier indicates that FD-OCC lengths corresponding to the port 0 and the port 1 are 2-length.

For another example, using a port 0 and a port 1 as an example, in table 22-1, when the first value is 7 and 34, the indexes of the M ports include indexes of the port 0 and the port 1; and when the first value is 7, FD-OCC lengths of the port 0 and the port 1 are 4-length; or when the first value is 34, the indexes of the port 0 and the port 1 correspond to a first identifier (that is, FD-OCC2), and the first identifier indicates that FD-OCC lengths corresponding to the port 0 and the port 1 are 2-length.

For another example, using a port 2 as an example, in table 22-1, when the first value is 5 and 35, the indexes of the M ports include an index of the port 2; and when the first value is 5, an FD-OCC length of the port 2 is 4-length; or when the first value is 33, the index of the port 2 corresponds to a first identifier (that is, FD-OCC2), and the first identifier indicates that an FD-OCC length corresponding to the port 2 is 2-length.

For another example, using a port 3 as an example, in table 22-1, when the first value is 6 and 36, the indexes of the M ports include an index of the port 3; and when the first value is 6, an FD-OCC length of the port 3 is 4-length; or when the first value is 36, the index of the port 3 corresponds to a first identifier (that is, FD-OCC2), and the first identifier indicates that an FD-OCC length corresponding to the port 3 is 2-length.

For another example, using a port 2 and a port 3 as an example, in table 22-1, when the first value is 8 and 37, the indexes of the M ports include indexes of the port 2 and the port 3; and when the first value is 8, FD-OCC lengths of the port 2 and the port 3 are 4-length; or when the first value is 37, the indexes of the port 2 and the port 3 correspond to a first identifier (that is, FD-OCC2), and the first identifier indicates that FD-OCC lengths corresponding to the port 2 and the port 3 are 2-length.

For another example, using a port 0, a port 2, and a port 3 as an example, in table 22-1, when the first value is 38, the indexes of the M ports include indexes of the port 0, the port 2, and the port 3, the indexes of the port 0, the port 2, and the port 3 correspond to a first identifier (that is, FD-OCC2), and the first identifier indicates that FD-OCC lengths corresponding to the port 0, the port 2, and the port 3 are 2-length; or when the first value is 8, the indexes of the M ports include indexes of the port 2 and the port 3, and FD-OCC lengths of the port 2 and the port 3 are 4-length; or when the first value is 3, the indexes of the M ports include an index of the port 0, and an FD-OCC length of the port 0 is 4-length.

For another example, using a port 0, a port 1, a port 2, and a port 3 as an example, in table 22-1, when the first value is 10 and 39, the indexes of the M ports include indexes of the port 0, the port 1, the port 2, and the port 3; and when the first value is 10, FD-OCC lengths of the port 0, the port 1, the port 2, and the port 3 are 4-length; or when the first value is 39, indexes of the port 0, the port 1, the port 2, and the port 3 correspond to a first identifier (that is, FD-OCC2), and the first identifier indicates that FD-OCC lengths corresponding to the port 0, the port 1, the port 2, and the port 3 are 2-length.

For another example, using a port 0 as an example, in table 22-1, when the first value is 46 and 82, the indexes of the M ports include an index of the port 0; and when the first value is 46, an FD-OCC length of the port 0 is 4-length; or when the first value is 82, the index of the port 0 corresponds to a first identifier (that is, FD-OCC2), and the first identifier indicates that an FD-OCC length corresponding to the port 0 is 2-length.

For another example, using a port 1 as an example, in table 22-1, when the first value is 47 and 83, the indexes of the M ports include an index of the port 1; and when the first value is 47, an FD-OCC length of the port 1 is 4-length; or when the first value is 83, the index of the port 1 corresponds to a first identifier (that is, FD-OCC2), and the first identifier indicates that an FD-OCC length corresponding to the port 1 is 2-length.

For another example, using a port 2 as an example, in table 22-1, when the first value is 48 and 84, the indexes of the M ports include an index of the port 2; and when the first value is 48, an FD-OCC length of the port 2 is 4-length; or when the first value is 84, the index of the port 2 corresponds to a first identifier (that is, FD-OCC2), and the first identifier indicates that an FD-OCC length corresponding to the port 2 is 2-length.

For another example, using a port 3 as an example, in table 22-1, when the first value is 49 and 85, the indexes of the M ports include an index of the port 3; and when the first value is 49, an FD-OCC length of the port 3 is 4-length; or when the first value is 85, the index of the port 3 corresponds to a first identifier (that is, FD-OCC2), and the first identifier indicates that an FD-OCC length corresponding to the port 3 is 2-length.

For another example, using a port 4 as an example, in table 22-1, when the first value is 50 and 86, the indexes of the M ports include an index of the port 4; and when the first value is 50, an FD-OCC length of the port 4 is 4-length; or when the first value is 86, the index of the port 4 corresponds to a first identifier (that is, FD-OCC2), and the first identifier indicates that an FD-OCC length corresponding to the port 4 is 2-length.

For another example, using a port 5 as an example, in table 22-1, when the first value is 51 and 87, the indexes of the M ports include an index of the port 5; and when the first value is 51, an FD-OCC length of the port 5 is 4-length; or when the first value is 87, the index of the port 5 corresponds to a first identifier (that is, FD-OCC2), and the first identifier indicates that an FD-OCC length corresponding to the port 5 is 2-length.

By analogy, FD-OCC lengths of ports corresponding to the row 88 to the row 99 may also be dynamically switched.

In addition, it can be learned from table 22-1 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal.

For example, it is assumed that the port 0 is allocated to another terminal. The M ports allocated by the network device to the current terminal device may include a port 1 and a port 9 that correspond to the row 40 or 41, and the port 1 and the port 9 belong to a same CDM group. However, 4-length frequency domain cover codes corresponding to the port 1 and the port 9 are orthogonal, but 2-length frequency domain cover codes corresponding to the port 1 and the port 9 are not orthogonal. Alternatively, the corresponding ports in the row 40 or 41 may be replaced with a port 0 and a port 8.

For another example, it is assumed that the port 0 is allocated to another terminal. The M ports allocated by the network device to the current terminal device may include a port 1 and a port 9 that correspond to the row 100, and the port 1 and the port 9 belong to a same CDM group. However, 4-length frequency domain cover codes corresponding to the port 1 and the port 9 are orthogonal, but 2-length frequency domain cover codes corresponding to the port 1 and the port 9 are not orthogonal. The corresponding ports in the row 100 may be replaced with a port 0 and a port 8.

For another example, it is assumed that the port 0 is allocated to another terminal. The M ports allocated by the network device to the current terminal device may include a port 1, a port 5, and a port 9 that correspond to the row 101, and the port 1, the port 5, and the port 9 belong to a same CDM group. However, 4-length frequency domain cover codes corresponding to the port 1, the port 5, and the port 9 are orthogonal, but 2-length frequency domain cover codes corresponding to the port 1, the port 5, and the port 9 are not orthogonal. The corresponding ports in the row 101 may be replaced with a port 0, a port 4, and a port 8.

For another example, it is assumed that the port 0 is allocated to another terminal. The M ports allocated by the network device to the current terminal device may include a port 1, a port 5, a port 9, and a port 13 that correspond to the row 102, and the port 1, the port 5, the port 9, and the port 13 belong to a same CDM group. However, 4-length frequency domain cover codes corresponding to the port 1, the port 5, the port 9, and the port 13 are orthogonal, but 2-length frequency domain cover codes corresponding to the port 1, the port 5, the port 9, and the port 13 are not orthogonal. The corresponding ports in the row 102 may be replaced with a port 0, a port 4, a port 8, and a port 12.

In addition, it can be learned from table 22-1 that, when the first value is the value 1, FD-OCC lengths of the M ports associated with the first value may be different, that is, ports in a same row in table 22-1 may correspond to different FD-OCC lengths.

For example, when the first value is the row 42 or 43, the M ports may include a port 0, a port 1, and a port 9 that correspond to the row 42 or 43, an FD-OCC length of the port 0 is 2-length, an FD-OCC length of the port 1 is 4-length, and an FD-OCC length of the port 9 is 4-length. Alternatively, the corresponding ports in the row 42 or 43 may be replaced with a port 0, a port 1, and a port 8, where an FD-OCC length of the port 0 is 4-length, an FD-OCC length of the port 1 is 2-length, and an FD-OCC length of the port 8 is 4-length.

For another example, when the first value is the row 44 or 45, the M ports may include a port 0 and a port 1 that correspond to the row 44 or 45, an FD-OCC length of the port 0 is 2-length, and an FD-OCC length of the port 1 is 4-length. Alternatively, the corresponding ports in the row 44 or 45 are still the port 0 and the port 1, but an FD-OCC length of the port 0 is 4-length, and an FD-OCC length of the port 1 is 2-length.

For another example, when the first value is the row 103, the M ports may include a port 0 and a port 1 that correspond to the row 103, an FD-OCC length of the port 0 is 2-length, and an FD-OCC length of the port 1 is 4-length. The corresponding ports in the row 103 may be replaced with a port 0 and a port 5, where an FD-OCC length of the port 0 is 2-length, and an FD-OCC length of the port 5 is 4-length. Alternatively, the corresponding ports in the row 103 may be replaced with a port 0 and a port 9, where an FD-OCC length of the port 0 is 2-length, and an FD-OCC length of the port 9 is 4-length. Alternatively, the corresponding ports in the row 103 may be replaced with a port 0 and a port 13, where an FD-OCC length of the port 0 is 2-length, and an FD-OCC length of the port 13 is 4-length. Alternatively, the corresponding ports in the row 103 may be replaced with a port 0 and a port 1, where an FD-OCC length of the port 0 is 4-length, and an FD-OCC length of the port 1 is 2-length. Alternatively, the corresponding ports in the row 103 may be replaced with a port 1 and a port 4, where an FD-OCC length of the port 1 is 2-length, and an FD-OCC length of the port 4 is 4-length. Alternatively, the corresponding ports in the row 103 may be replaced with a port 1 and a port 8, where an FD-OCC length of the port 1 is 2-length, and an FD-OCC length of the port 8 is 4-length. Alternatively, the corresponding ports in the row 103 may be replaced with a port 1 and a port 12, where an FD-OCC length of the port 1 is 2-length, and an FD-OCC length of the port 12 is 4-length.

For another example, when the first value is the row 104, the M ports may include a port 0, a port 1, and a port 13 that correspond to the row 104, an FD-OCC length of the port 0 is 2-length, and FD-OCC lengths of the port 1 and the port 13 are 4-length. The corresponding ports in the row 104 may be replaced with a port 0, a port 5, and a port 13, where an FD-OCC length of the port 0 is 2-length, and FD-OCC lengths of the port 5 and the port 13 are 4-length. Alternatively, the corresponding ports in the row 104 may be replaced with a port 0, a port 5, and a port 9, where an FD-OCC length of the port 0 is 2-length, and FD-OCC lengths of the port 5 and the port 9 are 4-length. Alternatively, the corresponding ports in the row 104 may be replaced with a port 0, a port 1, and a port 9, where an FD-OCC length of the port 0 is 2-length, and FD-OCC lengths of the port 5 and the port 9 are 4-length. Alternatively, the corresponding ports in the row 104 may be replaced with a port 1, a port 4, and a port 12, where an FD-OCC length of the port 1 is 2-length, and FD-OCC lengths of the port 4 and the port 12 are 4-length. Alternatively, the corresponding ports in the row 104 may be replaced with a port 0, a port 1, and a port 12, where an FD-OCC length of the port 1 is 2-length, and FD-OCC lengths of the port 0 and the port 12 are 4-length. Alternatively, the corresponding ports in the row 104 may be replaced with a port 1, a port 4, and a port 8, where an FD-OCC length of the port 1 is 2-length, and FD-OCC lengths of the port 4 and the port 8 are 4-length. Alternatively, the corresponding ports in the row 104 may be replaced with a port 0, a port 1, and a port 8, where an FD-OCC length of the port 1 is 2-length, and FD-OCC lengths of the port 0 and the port 8 are 4-length.

For another example, when the first value is the row 105, the M ports may include a port 0, a port 1, a port 5, and a port 9 that correspond to the row 105, an FD-OCC length of the port 0 is 2-length, and FD-OCC lengths of the port 1, the port 5, and the port 9 are 4-length. The corresponding ports in the row 105 may be replaced with a port 0, a port 1, a port 5, and a port 13, where an FD-OCC length of the port 0 is 2-length, and FD-OCC lengths of the port 1, the port 5, and the port 13 are 4-length. Alternatively, the corresponding ports in the row 105 may be replaced with a port 0, a port 1, a port 9, and a port 13, where an FD-OCC length of the port 0 is 2-length, and FD-OCC lengths of the port 1, the port 9, and the port 13 are 4-length. Alternatively, the corresponding ports in the row 105 may be replaced with a port 0, a port 1, a port 4, and a port 8, where an FD-OCC length of the port 1 is 2-length, and FD-OCC lengths of the port 0, the port 4, and the port 8 are 4-length. Alternatively, the corresponding ports in the row 105 may be replaced with a port 0, a port 1, a port 4, and a port 12, where an FD-OCC length of the port 1 is 2-length, and FD-OCC lengths of the port 0, the port 4, and the port 12 are 4-length. Alternatively, the corresponding ports in the row 105 may be replaced with a port 0, a port 1, a port 8, and a port 12, where an FD-OCC length of the port 1 is 2-length, and FD-OCC lengths of the port 0, the port 8, and the port 12 are 4-length.

For another example, when the first value is the row 106, the M ports may include a port 0, a port 4, and a port 1 that correspond to the row 106, FD-OCC lengths of the port 0 and the port 4 are 2-length, and an FD-OCC length of the port 1 is 4-length. The corresponding ports in the row 106 may be replaced with a port 0, a port 4, and a port 5, where FD-OCC lengths of the port 0 and the port 4 are 2-length, and an FD-OCC length of the port 5 is 4-length. Alternatively, the corresponding ports in the row 106 may be replaced with a port 0, a port 4, and a port 9, where FD-OCC lengths of the port 0 and the port 4 are 2-length, and an FD-OCC length of the port 9 is 4-length. Alternatively, the corresponding ports in the row 106 may be replaced with a port 0, a port 4, and a port 13, where FD-OCC lengths of the port 0 and the port 4 are 2-length, and an FD-OCC length of the port 13 is 4-length. Alternatively, the corresponding ports in the row 106 may be replaced with a port 1, a port 5, and a port 4, where FD-OCC lengths of the port 1 and the port 5 are 2-length, and an FD-OCC length of the port 4 is 4-length. Alternatively, the corresponding ports in the row 106 may be replaced with a port 1, a port 5, and a port 8, where FD-OCC lengths of the port 1 and the port 5 are 2-length, and an FD-OCC length of the port 8 is 4-length. Alternatively, the corresponding ports in the row 106 may be replaced with a port 0, a port 1, a port 5, and a port 4, where FD-OCC lengths of the port 1 and the port 5 are 2-length, and FD-OCC lengths of the port 0 and the port 4 are 4-length. Alternatively, the corresponding ports in the row 106 may be replaced with a port 1, a port 5, and a port 12, where FD-OCC lengths of the port 1 and the port 5 are 2-length, and an FD-OCC length of the port 12 is 4-length.

For another example, when the first value is the row 107, the M ports may include a port 0, a port 4, a port 9, and a port 13 that correspond to the row 107, FD-OCC lengths of the port 0 and the port 4 are 2-length, and FD-OCC lengths of the port 9 and the port 13 are 4-length. The corresponding ports in the row 107 may be replaced with a port 0, a port 4, a port 5, and a port 13, where FD-OCC lengths of the port 0 and the port 4 are 2-length, and FD-OCC lengths of the port 5 and the port 13 are 4-length. Alternatively, the corresponding ports in the row 107 may be replaced with a port 0, a port 4, a port 5, and a port 9, where FD-OCC lengths of the port 0 and the port 4 are 2-length, and FD-OCC lengths of the port 5 and the port 9 are 4-length. Alternatively, the corresponding ports in the row 107 may be replaced with a port 8, a port 1, a port 5, and a port 12, where FD-OCC lengths of the port 1 and the port 5 are 2-length, and FD-OCC lengths of the port 8 and the port 12 are 4-length. Alternatively, the corresponding ports in the row 107 may be replaced with a port 4, a port 1, a port 5, and a port 12, where FD-OCC lengths of the port 1 and the port 5 are 2-length, and FD-OCC lengths of the port 4 and the port 12 are 4-length. Alternatively, the corresponding ports in the row 107 may be replaced with a port 4, a port 1, a port 5, and a port 8, where FD-OCC lengths of the port 1 and the port 5 are 2-length, and FD-OCC lengths of the port 4 and the port 8 are 4-length. Alternatively, the corresponding ports in the row 107 may be replaced with a port 0, a port 1, a port 5, and a port 4, where FD-OCC lengths of the port 1 and the port 5 are 2-length, and FD-OCC lengths of the port 0 and the port 4 are 4-length.

In addition, it can be learned from table 22-1 that a type1 double-symbol R18 port supports a maximum of 16-stream transmission, a total number of ports allocated by the network device to paired terminal devices is less than or equal to 16, and a number of ports allocated to each terminal is less than or equal to 4. Specifically, this may be implemented by using the rows 12 to 107 in table 22-1.

For example, the network device may indicate a port 0, a port 1, and a port 8 in the row 20 to a terminal device 1, indicate a port 2, a port 3, and a port 10 in the row 25 to a terminal device 2, and indicate a port 9 and a port 11 in the row 27 to a terminal device 3. To be specific, the network device indicates three streams to the terminal device 1, indicates three streams to the terminal device 2, and indicates two streams to the terminal device 3, to form 8-stream transmission pairing.

For another example, the network device may indicate a port 0, a port 1, and a port 8 in the row 15 to a terminal device 1, indicate a port 2, a port 3, and a port 6 in the row 61 to a terminal device 2, indicate a port 7, a port 12, and a port 13 in the row 81 to a terminal device 3, and indicate a port 10, a port 11, a port 14, and a port 15 in the row 80 to a terminal device 4. To be specific, the network device indicates three streams to the terminal device 1, indicates three streams to the terminal device 2, indicates three streams to the terminal device 3, and indicates four streams to the terminal device 4, to form 16-stream transmission pairing.

The corresponding ports in the row 81 may be replaced with a port 5, a port 14, and a port 15. Correspondingly, the network device may indicate a port 7, a port 10, and a port 11 in the row 78 to a terminal device 1, indicate a port 2, a port 3, and a port 6 in the row 61 to a terminal device 2, indicate a port 5, a port 14, and a port 15 in the row 81 to a terminal device 3, and indicate a port 8, a port 9, a port 12, and a port 13 in the row 79 to a terminal device 4. To be specific, the network device indicates three streams to the terminal device 1, indicates three streams to the terminal device 2, indicates three streams to the terminal device 3, and indicates four streams to the terminal device 4, to form 16-stream transmission pairing.

In addition, it can be learned from table 22-1 that table 22-1 includes any port combination for a maximum of 8-stream transmission supported by a type1 double-symbol R15 port, and a number of ports allocated to each terminal is less than or equal to 4. Specifically, this may be implemented by using the rows 0 to 11 in table 22-1. For example, the network device may indicate a port 0 and a port 1 in the row 2 to a terminal device 1, and indicate a port 2 and a port 3 in the row 8 to a terminal device 2, so that the terminal device 1 and the terminal device 2 are simultaneously scheduled in a same slot (that is, scheduled on a same time-frequency resource). For another example, the network device may indicate a port 0 in the row 5 to a terminal device 1, and indicate a port 3 in the row 6 to a terminal device 2, so that the terminal device 1 and the terminal device 2 are simultaneously scheduled in a same slot (that is, scheduled on a same time-frequency resource). An existing protocol specifies that when the network device indicates a port 0, a port 1, and a port 2 in the row 9, or indicates a port 0, a port 1, a port 2, and a port 3 in the row 10, or indicates a port 0, a port 1, and a port 2 in the row 11, or indicates a port 0, a port 2, a port 4, and a port 6 in the row 64 to a terminal device 1, ports corresponding to the row 9, the row 10, the row 11, and the row 64 are used only for single-UE transmission. Therefore, only the terminal device 1 is scheduled, that is, no other terminal is scheduled on a same time-frequency resource as the terminal device 1.

Optionally, table 22-1 may not include a value set corresponding to the R15 port (a row corresponding to a port combination of R15 ports). That is, rows 0 to 11 in Table 22-1 may be deleted.

**Table 22-1: Type1-E or Type1-R18, maxlength=2**

| One codeword (One Codeword): Codeword 0 enabled (Codeword 0 enabled), Codeword 1 disabled (Codeword 1 disabled) | | | | Two codewords (Two Codewords): Codeword 0 enabled (Codeword 0 enabled), Codeword 1 disabled (Codeword 1 disabled) | | | |
|---|---|---|---|---|---|---|---|
| Value | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 2 | 0-4 | 2 |
| 1 | 1 | 1 | 1 | 1 | 2 | 0, 1, 2, 3, 4, 6 | 2 |
| 2 | 1 | 0, 1 | 1 | 2 | 2 | 0, 1, 2, 3, 4, 5, 6 | 2 |
| 3 | 2 | 0 | 1 | 3 | 2 | 0, 1, 2, 3, 4, 5, 6, 7 | 2 |
| 4 | 2 | 1 | 1 | 4 | 1 | 0, 1, 4, 5, 8 | 2 |
| 5 | 2 | 2 | 1 | 5 | 1 | 0, 1, 4, 5, 8, 9 | 2 |
| 6 | 2 | 3 | 1 | 6 | 1 | 0, 1, 4, 5, 8, 9, 12 | 2 |
| 7 | 2 | 0, 1 | 1 | 7 | 1 | 0, 1, 4, 5, 8, 9, 12, 13 | 2 |
| 8 | 2 | 2, 3 | 1 | 8-31 | Reserved | Reserved | Reserved |
| 9 | 2 | 0-2 | 1 | | | | |
| 10 | 2 | 0-3 | 1 | | | | |
| 11 | 2 | 0, 2 | 1 | | | | |
| 12 | 1 | 8 | 1 | | | | |
| 13 | 1 | 9 | 1 | | | | |
| 14 | 1 | 8, 9 | 1 | | | | |
| 15 | 1 | 0, 1,8 | 1 | | | | |
| 16 | 1 | 0, 1, 8, 9 | 1 | | | | |
| 17 | 2 | 8 | 1 | | | | |
| 18 | 2 | 9 | 1 | | | | |
| 19 | 2 | 8, 9 | 1 | | | | |
| 20 | 2 | 0, 1,8 | 1 | | | | |
| 21 | 2 | 0, 1, 8, 9 | 1 | | | | |
| 22 | 2 | 10 | 1 | | | | |
| 23 | 2 | 11 | 1 | | | | |
| 24 | 2 | 10, 11 | 1 | | | | |
| 25 | 2 | 2, 3, 10 | 1 | | | | |
| 26 | 2 | 2, 3, 10, 11 | 1 | | | | |
| 27 | 2 | 9, 11 | 1 | | | | |
| 28 | 2 | 8, 9, 10, 11 | 1 | | | | |
| 29 | 1 | 0(FD-OCC2) | 1 | | | | |
| 30 | 1 | 1(FD-OCC2) | 1 | | | | |
| 31 | 1 | 0(FD-OCC2), 1(FD-OCC2) | 1 | | | | |
| 32 | 2 | 0(FD-OCC2) | 1 | | | | |
| 33 | 2 | 1(FD-OCC2) | 1 | | | | |
| 34 | 2 | 0(FD-OCC2), 1(FD-OCC2) | 1 | | | | |
| 35 | 2 | 2(FD-OCC2) | 1 | | | | |
| 36 | 2 | 3(FD-OCC2) | 1 | | | | |
| 37 | 2 | 2(FD-OCC2), 3(FD-OCC2) | 1 | | | | |
| 38 | 2 | 0(FD-OCC2), 2(FD-OCC2), 3(FD-OCC2) | 1 | | | | |
| 39 | 2 | 0~3(FD-OCC2) | 1 | | | | |
| 40 | 1 | 1, 9 | 1 | | | | |
| 41 | 2 | 1, 9 | 1 | | | | |
| 42 | 1 | 0, 1(FD-OCC2), 8 | 1 | | | | |
| 43 | 2 | 0, 1(FD-OCC2), 8 | 1 | | | | |
| 44 | 1 | 0(FD-OCC2), 1 | 1 | | | | |
| 45 | 2 | 0(FD-OCC2), 1 | 1 | | | | |
| 46 | 2 | 0 | 2 | | | | |
| 47 | 2 | 1 | 2 | | | | |
| 48 | 2 | 2 | 2 | | | | |
| 49 | 2 | 3 | 2 | | | | |
| 50 | 2 | 4 | 2 | | | | |
| 51 | 2 | 5 | 2 | | | | |
| 52 | 2 | 6 | 2 | | | | |
| 53 | 2 | 7 | 2 | | | | |
| 54 | 2 | 0, 1 | 2 | | | | |
| 55 | 2 | 2, 3 | 2 | | | | |
| 56 | 2 | 4, 5 | 2 | | | | |
| 57 | 2 | 6, 7 | 2 | | | | |
| 58 | 2 | 0, 4 | 2 | | | | |
| 59 | 2 | 2, 6 | 2 | | | | |
| 60 | 2 | 0, 1, 4 | 2 | | | | |
| 61 | 2 | 2,3,6 | 2 | | | | |
| 62 | 2 | 0, 1, 4, 5 | 2 | | | | |
| 63 | 2 | 2,3,6, 7 | 2 | | | | |
| 64 | 2 | 0, 2, 4, 6 | 2 | | | | |
| 65 | 2 | 8 | 2 | | | | |
| 66 | 2 | 9 | 2 | | | | |
| 67 | 2 | 10 | 2 | | | | |
| 68 | 2 | 11 | 2 | | | | |
| 69 | 2 | 12 | 2 | | | | |
| 70 | 2 | 13 | 2 | | | | |
| 71 | 2 | 14 | 2 | | | | |
| 72 | 2 | 15 | 2 | | | | |
| 73 | 2 | 8, 9 | 2 | | | | |
| 74 | 2 | 10, 11 | 2 | | | | |
| 75 | 2 | 12, 13 | 2 | | | | |
| 76 | 2 | 14, 15 | 2 | | | | |
| 77 | 2 | 5, 8, 9 | 2 | | | | |
| 78 | 2 | 7, 10, 11 | 2 | | | | |
| 79 | 2 | 8, 9, 12, 13 | 2 | | | | |
| 80 | 2 | 10, 11, 14, 15 | 2 | | | | |
| 81 | 2 | 7, 12, 13 | 2 | | | | |
| 82 | 2 | 0(FD-OCC2) | 2 | | | | |
| 83 | 2 | 1(FD-OCC2) | 2 | | | | |
| 84 | 2 | 2(FD-OCC2) | 2 | | | | |
| 85 | 2 | 3(FD-OCC2) | 2 | | | | |
| 86 | 2 | 4(FD-OCC2) | 2 | | | | |
| 87 | 2 | 5(FD-OCC2) | 2 | | | | |
| 88 | 2 | 6(FD-OCC2) | 2 | | | | |
| 89 | 2 | 7(FD-OCC2) | 2 | | | | |
| 90 | 2 | 0(FD-OCC2), 1(FD-OCC2) | 2 | | | | |
| 91 | 2 | 2(FD-OCC2), 3(FD-OCC2) | 2 | | | | |
| 92 | 2 | 4(FD-OCC2), 5(FD-OCC2) | 2 | | | | |
| 93 | 2 | 6(FD-OCC2), 7(FD-OCC2) | 2 | | | | |
| 94 | 2 | 0(FD-OCC2), 4(FD-OCC2) | 2 | | | | |
| 95 | 2 | 2(FD-OCC2), 6(FD-OCC2) | 2 | | | | |
| 96 | 2 | 0(FD-OCC2), 1(FD-OCC2), 4(FD-OCC2) | 2 | | | | |
| 97 | 2 | 2(FD-OCC2), 3(FD-OCC2), 6(FD-OCC2) | 2 | | | | |
| 98 | 2 | 0(FD-OCC2), 1(FD-OCC2), 4(FD-OCC2), 5(FD-OCC2) | 2 | | | | |
| 99 | 2 | 2(FD-OCC2), 3(FD-OCC2), 6(FD-OCC2), 7(FD-OCC2) | 2 | | | | |
| 100 | 2 | 1, 9 | 2 | | | | |
| 101 | 2 | 1, 5, 9 | 2 | | | | |
| 102 | 2 | 1, 5, 9, 13 | 2 | | | | |
| 103 | 2 | 0(FD-OCC2), 1 | 2 | | | | |
| 104 | 2 | 0(FD-OCC2), 1, 13 | 2 | | | | |
| 105 | 2 | 0(FD-OCC2), 1, 5, 9 | 2 | | | | |
| 106 | 2 | 0(FD-OCC2), 4(FD-OCC2), 1 | 2 | | | | |
| 107 | 2 | 0(FD-OCC2), 4(FD-OCC2), 9, 13 | 2 | | | | |
| 108~127 | | Reserved | | | | | |

Table 22-2 occupies 7 bits. It can be learned from table 22-2 that an FD-OCC length of a same port may be dynamically switched (for example, the network device may indicate, by using DCI signaling, the terminal device to perform switching). For a specific example, refer to related descriptions in table 22-1.

In addition, it can be learned from table 22-2 that a type1 double-symbol R18 port supports a maximum of 16-stream transmission, a total number of ports allocated by the network device to paired terminal devices is less than or equal to 16, and a number of ports allocated to each terminal is less than or equal to 4.

For example, the network device may indicate a port 0, a port 1, and a port 8 in the row 12 to a terminal device 1, indicate a port 2, a port 3, and a port 10 in the row 22 to a terminal device 2, and indicate a port 9 and a port 11 in the row 24 to a terminal device 3. To be specific, the network device indicates three streams to the terminal device 1, indicates three streams to the terminal device 2, and indicates two streams to the terminal device 3, to form 8-stream transmission pairing.

For another example, the network device may indicate a port 0, a port 1, and a port 8 in the row 12 to a terminal device 1, indicate a port 2, a port 3, and a port 6 in the row 51 to a terminal device 2, indicate a port 7, a port 12, and a port 13 in the row 70 to a terminal device 3, and indicate a port 10, a port 11, a port 14, and a port 15 in the row 69 to a terminal device 4. To be specific, the network device indicates three streams to the terminal device 1, indicates three streams to the terminal device 2, indicates three streams to the terminal device 3, and indicates four streams to the terminal device 4, to form 16-stream transmission pairing.

The corresponding ports in the row 70 may be replaced with a port 5, a port 14, and a port 15. Correspondingly, the network device may indicate a port 7, a port 10, and a port 11 in the row 67 to a terminal device 1, indicate a port 2, a port 3, and a port 6 in the row 51 to a terminal device 2, indicate a port 5, a port 14, and a port 15 in the row 70 to a terminal device 3, and indicate a port 8, a port 9, a port 12, and a port 13 in the row 68 to a terminal device 4. To be specific, the network device indicates three streams to the terminal device 1, indicates three streams to the terminal device 2, indicates three streams to the terminal device 3, and indicates four streams to the terminal device 4, to form 16-stream transmission pairing.

In addition, all rows in table 22-2 are used for MU. In other words, the network device may indicate, to a terminal device, a port combination corresponding to any plurality of rows in table 22-2, to implement MU of a plurality of terminals. For example, the network device indicates a port 0 and a port 1 in a row 7 to a terminal device 1, and indicates a port 8 and a port 9 in a row 11 to a terminal device 2, so that the terminal device 1 and the terminal device 2 can be paired.

**Table 22-2: Type1-E or Type1-R18, maxlength=2**

| One codeword (One Codeword): Codeword 0 enabled (Codeword 0 enabled), Codeword 1 disabled (Codeword 1 disabled) | | | | Two codewords (Two Codewords): Codeword 0 enabled (Codeword 0 enabled), Codeword 1 disabled (Codeword 1 disabled) | | | |
|---|---|---|---|---|---|---|---|
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 2 | 0-4 | 2 |
| 1 | 1 | 1 | 1 | 1 | 2 | 0, 1, 2, 3, 4, 6 | 2 |
| 2 | 1 | 0, 1 | 1 | 2 | 2 | 0, 1, 2, 3, 4, 5, 6 | 2 |
| 3 | 2 | 0 | 1 | 3 | 2 | 0, 1, 2, 3, 4, 5, 6, 7 | 2 |
| 4 | 2 | 1 | 1 | 4 | 1 | 0, 1, 4, 5, 8 | 2 |
| 5 | 2 | 2 | 1 | 5 | 1 | 0, 1, 4, 5, 8, 9 | 2 |
| 6 | 2 | 3 | 1 | 6 | 1 | 0, 1, 4, 5, 8, 9, 12 | 2 |
| 7 | 2 | 0, 1 | 1 | 7 | 1 | 0, 1, 4, 5, 8,9,12, 13 | 2 |
| 8 | 2 | 2, 3 | 1 | 8-31 | Reserved | Reserved | Reserved |
| 9 | 1 | 8 | 1 | | | | |
| 10 | 1 | 9 | 1 | | | | |
| 11 | 1 | 8, 9 | 1 | | | | |
| 12 | 1 | 0, 1,8 | 1 | | | | |
| 13 | 1 | 0, 1, 8, 9 | 1 | | | | |
| 14 | 2 | 8 | 1 | | | | |
| 15 | 2 | 9 | 1 | | | | |
| 16 | 2 | 8, 9 | 1 | | | | |
| 17 | 2 | 0, 1,8 | 1 | | | | |
| 18 | 2 | 0, 1, 8, 9 | 1 | | | | |
| 19 | 2 | 10 | 1 | | | | |
| 20 | 2 | 11 | 1 | | | | |
| 21 | 2 | 10, 11 | 1 | | | | |
| 22 | 2 | 2, 3, 10 | 1 | | | | |
| 23 | 2 | 2, 3, 10, 11 | 1 | | | | |
| 24 | 2 | 9, 11 | 1 | | | | |
| 25 | 1 | 0(FD-OCC2) | 1 | | | | |
| 26 | 1 | 1(FD-OCC2) | 1 | | | | |
| 27 | 1 | 0(FD-OCC2), 1(FD-OCC2) | 1 | | | | |
| 28 | 2 | 0(FD-OCC2) | 1 | | | | |
| 29 | 2 | 1(FD-OCC2) | 1 | | | | |
| 30 | 2 | 0(FD-OCC2), 1(FD-OCC2) | 1 | | | | |
| 31 | 2 | 2(FD-OCC2) | 1 | | | | |
| 32 | 2 | 3(FD-OCC2) | 1 | | | | |
| 33 | 2 | 2(FD-OCC2), 3(FD-OCC2) | 1 | | | | |
| 34 | 2 | 0(FD-OCC2), 2(FD-OCC2), 3(FD-OCC2) | 1 | | | | |
| 35 | 2 | 0~3(FD-OCC2) | 1 | | | | |
| 36 | 2 | 0 | 2 | | | | |
| 37 | 2 | 1 | 2 | | | | |
| 38 | 2 | 2 | 2 | | | | |
| 39 | 2 | 3 | 2 | | | | |
| 40 | 2 | 4 | 2 | | | | |
| 41 | 2 | 5 | 2 | | | | |
| 42 | 2 | 6 | 2 | | | | |
| 43 | 2 | 7 | 2 | | | | |
| 44 | 2 | 0, 1 | 2 | | | | |
| 45 | 2 | 2, 3 | 2 | | | | |
| 46 | 2 | 4, 5 | 2 | | | | |
| 47 | 2 | 6, 7 | 2 | | | | |
| 48 | 2 | 0, 4 | 2 | | | | |
| 49 | 2 | 2, 6 | 2 | | | | |
| 50 | 2 | 0, 1, 4 | 2 | | | | |
| 51 | 2 | 2,3,6 | 2 | | | | |
| 52 | 2 | 0, 1, 4, 5 | 2 | | | | |
| 53 | 2 | 2,3,6,7 | 2 | | | | |
| 54 | 2 | 8 | 2 | | | | |
| 55 | 2 | 9 | 2 | | | | |
| 56 | 2 | 10 | 2 | | | | |
| 57 | 2 | 11 | 2 | | | | |
| 58 | 2 | 12 | 2 | | | | |
| 59 | 2 | 13 | 2 | | | | |
| 60 | 2 | 14 | 2 | | | | |
| 61 | 2 | 15 | 2 | | | | |
| 62 | 2 | 8, 9 | 2 | | | | |
| 63 | 2 | 10, 11 | 2 | | | | |
| 64 | 2 | 12, 13 | 2 | | | | |
| 65 | 2 | 14, 15 | 2 | | | | |
| 66 | 2 | 5, 8, 9 | 2 | | | | |
| 67 | 2 | 7, 10, 11 | 2 | | | | |
| 68 | 2 | 8, 9, 12, 13 | 2 | | | | |
| 69 | 2 | 10, 11, 14, 15 | 2 | | | | |
| 70 | 2 | 7, 12, 13 | 2 | | | | |
| 71 | 2 | 0(FD-OCC2) | 2 | | | | |
| 72 | 2 | 1(FD-OCC2) | 2 | | | | |
| 73 | 2 | 2(FD-OCC2) | 2 | | | | |
| 74 | 2 | 3(FD-OCC2) | 2 | | | | |
| 75 | 2 | 4(FD-OCC2) | 2 | | | | |
| 76 | 2 | 5(FD-OCC2) | 2 | | | | |
| 77 | 2 | 6(FD-OCC2) | 2 | | | | |
| 78 | 2 | 7(FD-OCC2) | 2 | | | | |
| 79 | 2 | 0(FD-OCC2), 1(FD-OCC2) | 2 | | | | |
| 80 | 2 | 2(FD-OCC2), 3(FD-OCC2) | 2 | | | | |
| 81 | 2 | 4(FD-OCC2), 5(FD-OCC2) | 2 | | | | |
| 82 | 2 | 6(FD-OCC2), 7(FD-OCC2) | 2 | | | | |
| 83 | 2 | 0(FD-OCC2), 4(FD-OCC2) | 2 | | | | |
| 84 | 2 | 2(FD-OCC2), 6(FD-OCC2) | 2 | | | | |
| 85 | 2 | 0(FD-OCC2), 1(FD-OCC2), 4(FD-OCC2) | 2 | | | | |
| 86 | 2 | 2(FD-OCC2), 3(FD-OCC2), 6(FD-OCC2) | 2 | | | | |
| 87 | 2 | 0(FD-OCC2), 1(FD-OCC2), 4(FD-OCC2), 5(FD-OCC2) | 2 | | | | |
| 88 | 2 | 2(FD-OCC2), 3(FD-OCC2), 6(FD-OCC2), 7(FD-OCC2) | 2 | | | | |
| 89~127 | | Reserved | | | | | |

A difference between table 22-3 and table 22-2 lies in that table 22-3 includes only three corresponding examples (that is, the row 60, the row 61, and the row 62) in which an FD-OCC length of a same port can be dynamically switched. In this case, table 22-3 occupies 6 bits, and table 22-2 occupies 7 bits. Therefore, a number of bits that need to be consumed in table 22-3 is smaller.

**Table 22-3: Type1-E or Type1-R18, maxlength=2**

| One codeword (One Codeword): Codeword 0 enabled (Codeword 0 enabled), Codeword 1 disabled (Codeword 1 disabled) | | | | Two codewords (Two Codewords): Codeword 0 enabled (Codeword 0 enabled), Codeword 1 disabled (Codeword 1 disabled) | | | |
|---|---|---|---|---|---|---|---|
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 2 | 0-4 | 2 |
| 1 | 1 | 1 | 1 | 1 | 2 | 0, 1, 2, 3, 4, 6 | 2 |
| 2 | 1 | 0, 1 | 1 | 2 | 2 | 0, 1, 2, 3, 4, 5,6 | 2 |
| 3 | 2 | 0 | 1 | 3 | 2 | 0, 1, 2, 3, 4, 5, 6, 7 | 2 |
| 4 | 2 | 1 | 1 | 4 | 1 | 0, 1, 4, 5, 8 | 2 |
| 5 | 2 | 2 | 1 | 5 | 1 | 0, 1, 4, 5, 8, 9 | 2 |
| 6 | 2 | 3 | 1 | 6 | 1 | 0, 1, 4, 5, 8, 9, 12 | 2 |
| 7 | 2 | 0, 1 | 1 | 7 | 1 | 0, 1, 4, 5, 8, 9, 12, 13 | 2 |
| 8 | 2 | 2, 3 | 1 | 8-31 | Reserved | Reserved | Reserved |
| 9 | 1 | 8 | 1 | | | | |
| 10 | 1 | 9 | 1 | | | | |
| 11 | 1 | 8, 9 | 1 | | | | |
| 12 | 1 | 0, 1,8 | 1 | | | | |
| 13 | 1 | 0, 1, 8, 9 | 1 | | | | |
| 14 | 2 | 8 | 1 | | | | |
| 15 | 2 | 9 | 1 | | | | |
| 16 | 2 | 8, 9 | 1 | | | | |
| 17 | 2 | 0, 1,8 | 1 | | | | |
| 18 | 2 | 0, 1, 8, 9 | 1 | | | | |
| 19 | 2 | 10 | 1 | | | | |
| 20 | 2 | 11 | 1 | | | | |
| 21 | 2 | 10, 11 | 1 | | | | |
| 22 | 2 | 2, 3, 10 | 1 | | | | |
| 23 | 2 | 2, 3, 10, 11 | 1 | | | | |
| 24 | 2 | 9, 11 | 1 | | | | |
| 25 | 2 | 0 | 2 | | | | |
| 26 | 2 | 1 | 2 | | | | |
| 27 | 2 | 2 | 2 | | | | |
| 28 | 2 | 3 | 2 | | | | |
| 29 | 2 | 4 | 2 | | | | |
| 30 | 2 | 5 | 2 | | | | |
| 31 | 2 | 6 | 2 | | | | |
| 32 | 2 | 7 | 2 | | | | |
| 33 | 2 | 0, 1 | 2 | | | | |
| 34 | 2 | 2, 3 | 2 | | | | |
| 35 | 2 | 4, 5 | 2 | | | | |
| 36 | 2 | 6, 7 | 2 | | | | |
| 37 | 2 | 0, 4 | 2 | | | | |
| 38 | 2 | 2, 6 | 2 | | | | |
| 39 | 2 | 0, 1, 4 | 2 | | | | |
| 40 | 2 | 2,3,6 | 2 | | | | |
| 41 | 2 | 0, 1, 4, 5 | 2 | | | | |
| 42 | 2 | 2,3,6,7 | 2 | | | | |
| 43 | 2 | 8 | 2 | | | | |
| 44 | 2 | 9 | 2 | | | | |
| 45 | 2 | 10 | 2 | | | | |
| 46 | 2 | 11 | 2 | | | | |
| 47 | 2 | 12 | 2 | | | | |
| 48 | 2 | 13 | 2 | | | | |
| 49 | 2 | 14 | 2 | | | | |
| 50 | 2 | 15 | 2 | | | | |
| 51 | 2 | 8, 9 | 2 | | | | |
| 52 | 2 | 10, 11 | 2 | | | | |
| 53 | 2 | 12, 13 | 2 | | | | |
| 54 | 2 | 14, 15 | 2 | | | | |
| 55 | 2 | 5, 8, 9 | 2 | | | | |
| 56 | 2 | 7, 10, 11 | 2 | | | | |
| 57 | 2 | 8, 9, 12, 13 | 2 | | | | |
| 58 | 2 | 10, 11, 14, 15 | 2 | | | | |
| 59 | 2 | 7, 12, 13 | 2 | | | | |
| 60 | 2 | 0(FD-OCC2) | 2 | | | | |
| 61 | 2 | 4(FD-OCC2) | 2 | | | | |
| 62 | 2 | 0(FD-OCC2), 4(FD-OCC2) | 2 | | | | |
| 63~127 | | Reserved | | | | | |

Table 22-4 occupies 7 bits. It can be learned from table 22-4 that an FD-OCC length of a same port may be dynamically switched (for example, the network device may indicate, by using DCI signaling, the terminal device to perform switching). For a specific example, refer to related descriptions in table 22-1.

In addition, it can be learned from table 22-4 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal.

For example, it is assumed that the port 0 is allocated to another terminal. The M ports allocated by the network device to the current terminal device may include a port 1 and a port 9 that correspond to the row 37 or 38, and the port 1 and the port 9 belong to a same CDM group. However, 4-length frequency domain cover codes corresponding to the port 1 and the port 9 are orthogonal, but 2-length frequency domain cover codes corresponding to the port 1 and the port 9 are not orthogonal. Alternatively, the corresponding ports in the row 37 or 38 may be replaced with a port 0 and a port 8.

For another example, it is assumed that the port 0 is allocated to another terminal. The M ports allocated by the network device to the current terminal device may include a port 1 and a port 9 that correspond to the row 92, and the port 1 and the port 9 belong to a same CDM group. However, 4-length frequency domain cover codes corresponding to the port 1 and the port 9 are orthogonal, but 2-length frequency domain cover codes corresponding to the port 1 and the port 9 are not orthogonal. The corresponding ports in the row 92 may be replaced with a port 0 and a port 8.

For another example, it is assumed that the port 0 is allocated to another terminal. The M ports allocated by the network device to the current terminal device may include a port 1, a port 5, and a port 9 that correspond to the row 93, and the port 1, the port 5, and the port 9 belong to a same CDM group. However, 4-length frequency domain cover codes corresponding to the port 1, the port 5, and the port 9 are orthogonal, but 2-length frequency domain cover codes corresponding to the port 1, the port 5, and the port 9 are not orthogonal. The corresponding ports in the row 93 may be replaced with a port 0, a port 4, and a port 8.

For another example, it is assumed that the port 0 is allocated to another terminal. The M ports allocated by the network device to the current terminal device may include a port 1, a port 5, a port 9, and a port 13 that correspond to the row 94, and the port 1, the port 5, the port 9, and the port 13 belong to a same CDM group. However, 4-length frequency domain cover codes corresponding to the port 1, the port 5, the port 9, and the port 13 are orthogonal, but 2-length frequency domain cover codes corresponding to the port 1, the port 5, the port 9, and the port 13 are not orthogonal. The corresponding ports in the row 94 may be replaced with a port 0, a port 4, a port 8, and a port 12.

In addition, it can be learned from table 22-4 that an R18 port of type1 supports a maximum of 16-stream transmission, that is, table 22-4 includes any port combination for 16-stream transmission, a total number of ports allocated by the network device to paired terminal devices is less than or equal to 16, and a number of M ports corresponding to each row is less than or equal to 4.

For example, the network device may indicate a port 0, a port 1, and a port 8 in the row 12 to a terminal device 1, indicate a port 2, a port 3, and a port 10 in the row 22 to a terminal device 2, and indicate a port 9 and a port 11 in the row 24 to a terminal device 3. To be specific, the network device indicates three streams to the terminal device 1, indicates three streams to the terminal device 2, and indicates two streams to the terminal device 3, to form 8-stream transmission pairing.

For another example, the network device may indicate a port 0, a port 1, and a port 8 in the row 12 to a terminal device 1, indicate a port 2, a port 3, and a port 6 in the row 54 to a terminal device 2, indicate a port 7, a port 12, and a port 13 in the row 73 to a terminal device 3, and indicate a port 10, a port 11, a port 14, and a port 15 in the row 72 to a terminal device 4. To be specific, the network device indicates three streams to the terminal device 1, indicates three streams to the terminal device 2, indicates three streams to the terminal device 3, and indicates four streams to the terminal device 4, to form 16-stream transmission pairing.

The corresponding ports in the row 73 may be replaced with a port 5, a port 14, and a port 15. Correspondingly, the network device may indicate a port 7, a port 10, and a port 11 in the row 70 to a terminal device 1, indicate a port 2, a port 3, and a port 6 in the row 54 to a terminal device 2, indicate a port 5, a port 14, and a port 15 in the row 73 to a terminal device 3, and indicate a port 8, a port 9, a port 12, and a port 13 in the row 71 to a terminal device 4. To be specific, the network device indicates three streams to the terminal device 1, indicates three streams to the terminal device 2, indicates three streams to the terminal device 3, and indicates four streams to the terminal device 4, to form 16-stream transmission pairing.

In addition, all rows in table 22-4 are used for MU. In other words, the network device may indicate, to a terminal device, a port combination corresponding to any plurality of rows in table 21-4, to implement MU of a plurality of terminals. For example, the network device indicates a port 0 and a port 1 in a row 7 to a terminal device 1, and indicates a port 8 and a port 9 in a row 11 to a terminal device 2, so that the terminal device 1 and the terminal device 2 can be paired.

**Table 22-4: Type1-E or Type1-R18, maxlength=2**

| One codeword (One Codeword): Codeword 0 enabled (Codeword 0 enabled), Codeword 1 disabled (Codeword 1 disabled) | | | | Two codewords (Two Codewords): Codeword 0 enabled (Codeword 0 enabled), Codeword 1 disabled (Codeword 1 disabled) | | | |
|---|---|---|---|---|---|---|---|
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 2 | 0-4 | 2 |
| 1 | 1 | 1 | 1 | 1 | 2 | 0, 1, 2, 3, 4, 6 | 2 |
| 2 | 1 | 0, 1 | 1 | 2 | 2 | 0, 1, 2, 3, 4, 5, 6 | 2 |
| 3 | 2 | 0 | 1 | 3 | 2 | 0, 1, 2, 3, 4, 5, 6, 7 | 2 |
| 4 | 2 | 1 | 1 | 4 | 1 | 0, 1, 4, 5, 8 | 2 |
| 5 | 2 | 2 | 1 | 5 | 1 | 0, 1, 4, 5, 8, 9 | 2 |
| 6 | 2 | 3 | 1 | 6 | 1 | 0, 1, 4, 5, 8, 9, 12 | 2 |
| 7 | 2 | 0, 1 | 1 | 7 | 1 | 0, 1, 4, 5, 8, 9, 12, 13 | 2 |
| 8 | 2 | 2, 3 | 1 | 8-31 | Reserved | Reserved | Reserved |
| 9 | 1 | 8 | 1 | | | | |
| 10 | 1 | 9 | 1 | | | | |
| 11 | 1 | 8, 9 | 1 | | | | |
| 12 | 1 | 0, 1, 8 | 1 | | | | |
| 13 | 1 | 0, 1, 8, 9 | 1 | | | | |
| 14 | 2 | 8 | 1 | | | | |
| 15 | 2 | 9 | 1 | | | | |
| 16 | 2 | 8, 9 | 1 | | | | |
| 17 | 2 | 0, 1, 8 | 1 | | | | |
| 18 | 2 | 0, 1, 8, 9 | 1 | | | | |
| 19 | 2 | 10 | 1 | | | | |
| 20 | 2 | 11 | 1 | | | | |
| 21 | 2 | 10, 11 | 1 | | | | |
| 22 | 2 | 2, 3, 10 | 1 | | | | |
| 23 | 2 | 2, 3, 10, 11 | 1 | | | | |
| 24 | 2 | 9, 11 | 1 | | | | |
| 25 | 2 | 8, 9, 10, 11 | 1 | | | | |
| 26 | 1 | 0(FD-OCC2) | 1 | | | | |
| 27 | 1 | 1(FD-OCC2) | 1 | | | | |
| 28 | 1 | 0(FD-OCC2), 1(FD-OCC2) | 1 | | | | |
| 29 | 2 | 0(FD-OCC2) | 1 | | | | |
| 30 | 2 | 1(FD-OCC2) | 1 | | | | |
| 31 | 2 | 0(FD-OCC2), 1(FD-OCC2) | 1 | | | | |
| 32 | 2 | 2(FD-OCC2) | 1 | | | | |
| 33 | 2 | 3(FD-OCC2) | 1 | | | | |
| 34 | 2 | 2(FD-OCC2), 3(FD-OCC2) | 1 | | | | |
| 35 | 2 | 0(FD-OCC2), 2(FD-OCC2), 3(FD-OCC2) | 1 | | | | |
| 36 | 2 | 0~3(FD-OCC2) | 1 | | | | |
| 37 | 1 | 1, 9 | 1 | | | | |
| 38 | 2 | 1, 9 | 1 | | | | |
| 39 | 2 | 0 | 2 | | | | |
| 40 | 2 | 1 | 2 | | | | |
| 41 | 2 | 2 | 2 | | | | |
| 42 | 2 | 3 | 2 | | | | |
| 43 | 2 | 4 | 2 | | | | |
| 44 | 2 | 5 | 2 | | | | |
| 45 | 2 | 6 | 2 | | | | |
| 46 | 2 | 7 | 2 | | | | |
| 47 | 2 | 0, 1 | 2 | | | | |
| 48 | 2 | 2, 3 | 2 | | | | |
| 49 | 2 | 4, 5 | 2 | | | | |
| 50 | 2 | 6, 7 | 2 | | | | |
| 51 | 2 | 0, 4 | 2 | | | | |
| 52 | 2 | 2, 6 | 2 | | | | |
| 53 | 2 | 0, 1, 4 | 2 | | | | |
| 54 | 2 | 2,3,6 | 2 | | | | |
| 55 | 2 | 0, 1, 4, 5 | 2 | | | | |
| 56 | 2 | 2, 3, 6, 7 | 2 | | | | |
| 57 | 2 | 8 | 2 | | | | |
| 58 | 2 | 9 | 2 | | | | |
| 59 | 2 | 10 | 2 | | | | |
| 60 | 2 | 11 | 2 | | | | |
| 61 | 2 | 12 | 2 | | | | |
| 62 | 2 | 13 | 2 | | | | |
| 63 | 2 | 14 | 2 | | | | |
| 64 | 2 | 15 | 2 | | | | |
| 65 | 2 | 8, 9 | 2 | | | | |
| 66 | 2 | 10, 11 | 2 | | | | |
| 67 | 2 | 12, 13 | 2 | | | | |
| 68 | 2 | 14, 15 | 2 | | | | |
| 69 | 2 | 5, 8, 9 | 2 | | | | |
| 70 | 2 | 7, 10, 11 | 2 | | | | |
| 71 | 2 | 8, 9, 12, 13 | 2 | | | | |
| 72 | 2 | 10, 11, 14, 15 | 2 | | | | |
| 73 | 2 | 7, 12, 13 | 2 | | | | |
| 74 | 2 | 0(FD-OCC2) | 2 | | | | |
| 75 | 2 | 1(FD-OCC2) | 2 | | | | |
| 76 | 2 | 2(FD-OCC2) | 2 | | | | |
| 77 | 2 | 3(FD-OCC2) | 2 | | | | |
| 78 | 2 | 4(FD-OCC2) | 2 | | | | |
| 79 | 2 | 5(FD-OCC2) | 2 | | | | |
| 80 | 2 | 6(FD-OCC2) | 2 | | | | |
| 81 | 2 | 7(FD-OCC2) | 2 | | | | |
| 82 | 2 | 0(FD-OCC2), 1(FD-OCC2) | 2 | | | | |
| 83 | 2 | 2(FD-OCC2), 3(FD-OCC2) | 2 | | | | |
| 84 | 2 | 4(FD-OCC2), 5(FD-OCC2) | 2 | | | | |
| 85 | 2 | 6(FD-OCC2), 7(FD-OCC2) | 2 | | | | |
| 86 | 2 | 0(FD-OCC2), 4(FD-OCC2) | 2 | | | | |
| 87 | 2 | 2(FD-OCC2), 6(FD-OCC2) | 2 | | | | |
| 88 | 2 | 0(FD-OCC2), 1(FD-OCC2), 4(FD-OCC2) | 2 | | | | |
| 89 | 2 | 2(FD-OCC2), 3(FD-OCC2), 6(FD-OCC2) | 2 | | | | |
| 90 | 2 | 0(FD-0CC2), 1(FD-OCC2), 4(FD-OCC2), 5(FD-OCC2) | 2 | | | | |
| 91 | 2 | 2(FD-OCC2), 3(FD-OCC2), 6(FD-OCC2), 7(FD-OCC2) | 2 | | | | |
| 92 | 2 | 1, 9 | 2 | | | | |
| 93 | 2 | 1, 5, 9 | 2 | | | | |
| 94 | 2 | 1, 5, 9, 13 | 2 | | | | |
| 95~127 | | Reserved | | | | | |

Table 22-5 occupies 7 bits. A difference between table 22-5 and table 22-4 lies in that table 22-5 includes only three corresponding examples (that is, the row 61, the row 62, and the row 63) in which an FD-OCC length of a same port can be dynamically switched, and includes only three corresponding examples (that is, the row 64, the row 65, and the row 66) in which MU is performed on an R15 port and an R18 port in one CDM group. In this case, table 22-5 occupies 6 bits, and table 22-4 occupies 7 bits. Therefore, compared with table 22-4, table 22-5 can reduce bit consumption.

**Table 22-5: Type1-E or Type1-R18, maxlength=2**

| One codeword (One Codeword): Codeword 0 enabled (Codeword 0 enabled), Codeword 1 disabled (Codeword 1 disabled) | | | | Two codewords (Two Codewords): Codeword 0 enabled (Codeword 0 enabled), Codeword 1 disabled (Codeword 1 disabled) | | | |
|---|---|---|---|---|---|---|---|
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 2 | 0-4 | 2 |
| 1 | 1 | 1 | 1 | 1 | 2 | 0, 1, 2, 3, 4, 6 | 2 |
| 2 | 1 | 0, 1 | 1 | 2 | 2 | 0, 1, 2, 3, 4, 5, 6 | 2 |
| 3 | 2 | 0 | 1 | 3 | 2 | 0, 1, 2, 3, 4, 5, 6, 7 | 2 |
| 4 | 2 | 1 | 1 | 4 | 1 | 0, 1, 4, 5, 8 | 2 |
| 5 | 2 | 2 | 1 | 5 | 1 | 0, 1, 4, 5, 8, 9 | 2 |
| 6 | 2 | 3 | 1 | 6 | 1 | 0, 1, 4, 5, 8, 9, 12 | 2 |
| 7 | 2 | 0, 1 | 1 | 7 | 1 | 0, 1, 4, 5, 8, 9, 12, 13 | 2 |
| 8 | 2 | 2, 3 | 1 | 8-31 | Reserved | Reserved | Reserved |
| 9 | 1 | 8 | 1 | | | | |
| 10 | 1 | 9 | 1 | | | | |
| 11 | 1 | 8, 9 | 1 | | | | |
| 12 | 1 | 0, 1, 8 | 1 | | | | |
| 13 | 1 | 0, 1, 8, 9 | 1 | | | | |
| 14 | 2 | 8 | 1 | | | | |
| 15 | 2 | 9 | 1 | | | | |
| 16 | 2 | 8, 9 | 1 | | | | |
| 17 | 2 | 0, 1,8 | 1 | | | | |
| 18 | 2 | 0, 1, 8, 9 | 1 | | | | |
| 19 | 2 | 10 | 1 | | | | |
| 20 | 2 | 11 | 1 | | | | |
| 21 | 2 | 10, 11 | 1 | | | | |
| 22 | 2 | 2, 3, 10 | 1 | | | | |
| 23 | 2 | 2, 3, 10, 11 | 1 | | | | |
| 24 | 2 | 9, 11 | 1 | | | | |
| 25 | 2 | 8, 9, 10, 11 | 1 | | | | |
| 26 | 2 | 0 | 2 | | | | |
| 27 | 2 | 1 | 2 | | | | |
| 28 | 2 | 2 | 2 | | | | |
| 29 | 2 | 3 | 2 | | | | |
| 30 | 2 | 4 | 2 | | | | |
| 31 | 2 | 5 | 2 | | | | |
| 32 | 2 | 6 | 2 | | | | |
| 33 | 2 | 7 | 2 | | | | |
| 34 | 2 | 0, 1 | 2 | | | | |
| 35 | 2 | 2, 3 | 2 | | | | |
| 36 | 2 | 4, 5 | 2 | | | | |
| 37 | 2 | 6, 7 | 2 | | | | |
| 38 | 2 | 0, 4 | 2 | | | | |
| 39 | 2 | 2, 6 | 2 | | | | |
| 40 | 2 | 0, 1, 4 | 2 | | | | |
| 41 | 2 | 2, 3, 6 | 2 | | | | |
| 42 | 2 | 0, 1, 4, 5 | 2 | | | | |
| 43 | 2 | 2, 3, 6, 7 | 2 | | | | |
| 44 | 2 | 8 | 2 | | | | |
| 45 | 2 | 9 | 2 | | | | |
| 46 | 2 | 10 | 2 | | | | |
| 47 | 2 | 11 | 2 | | | | |
| 48 | 2 | 12 | 2 | | | | |
| 49 | 2 | 13 | 2 | | | | |
| 50 | 2 | 14 | 2 | | | | |
| 51 | 2 | 15 | 2 | | | | |
| 52 | 2 | 8, 9 | 2 | | | | |
| 53 | 2 | 10, 11 | 2 | | | | |
| 54 | 2 | 12, 13 | 2 | | | | |
| 55 | 2 | 14, 15 | 2 | | | | |
| 56 | 2 | 5, 8, 9 | 2 | | | | |
| 57 | 2 | 7, 10, 11 | 2 | | | | |
| 58 | 2 | 8, 9, 12, 13 | 2 | | | | |
| 59 | 2 | 10, 11, 14, 15 | 2 | | | | |
| 60 | 2 | 7, 12, 13 | 2 | | | | |
| 61 | 2 | 0(FD-OCC2) | 2 | | | | |
| 62 | 2 | 4(FD-OCC2) | 2 | | | | |
| 63 | 2 | 0(FD-OCC2), 4(FD-OCC2) | 2 | | | | |
| 64 | 2 | 1, 9 | 2 | | | | |
| 65 | 2 | 1, 5, 9 | 2 | | | | |
| 66 | 2 | 1, 5, 9, 13 | 2 | | | | |
| 67~127 | | Reserved | | | | | |

Table 22-6 occupies 6 bits. It can be learned from table 22-6 that a type1 double-symbol R18 port supports a maximum of 16-stream transmission, a total number of ports allocated by the network device to paired terminal devices is less than or equal to 16, and a number of ports allocated to each terminal is less than or equal to 4. For a specific example, refer to related descriptions in table 22-1.

In addition, it can be learned from table 22-6 that table 22-6 includes any port combination for a maximum of 8-stream transmission supported by a type1 double-symbol R15 port, and a number of ports allocated to each terminal is less than or equal to 4. Specifically, this may be implemented by using the rows 0 to 11 in table 22-6. For example, the network device may indicate a port 0 and a port 1 in the row 2 to a terminal device 1, and indicate a port 2 and a port 3 in the row 8 to a terminal device 2, so that the terminal device 1 and the terminal device 2 are simultaneously scheduled in a same slot (that is, scheduled on a same time-frequency resource). For another example, the network device may indicate a port 0 in the row 5 to a terminal device 1, and indicate a port 3 in the row 6 to a terminal device 2, so that the terminal device 1 and the terminal device 2 are simultaneously scheduled in a same slot (that is, scheduled on a same time-frequency resource). An existing protocol specifies that when the network device indicates a port 0, a port 1, and a port 2 in the row 9, or indicates a port 0, a port 1, a port 2, and a port 3 in the row 10, or indicates a port 0, a port 1, and a port 2 in the row 11, or indicates a port 0, a port 2, a port 4, and a port 6 in the row 46 to a terminal device 1, ports corresponding to the row 9, the row 10, the row 11, and the row 46 are used only for single-UE transmission. Therefore, only the terminal device 1 is scheduled, that is, no other terminal is scheduled on a same time-frequency resource as the terminal device 1.

**Table 22-6: Type1-E or Type1-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 2 | 0-4 | 2 |
| 1 | 1 | 1 | 1 | 1 | 2 | 0, 1, 2, 3, 4, 6 | 2 |
| 2 | 1 | 0, 1 | 1 | 2 | 2 | 0, 1, 2, 3, 4, 5, 6 | 2 |
| 3 | 2 | 0 | 1 | 3 | 2 | 0, 1, 2, 3, 4, 5, 6, 7 | 2 |
| 4 | 2 | 1 | 1 | 4 | 1 | 0, 1, 4, 5, 8 | 2 |
| 5 | 2 | 2 | 1 | 5 | 1 | 0, 1, 4, 5, 8, 9 | 2 |
| 6 | 2 | 3 | 1 | 6 | 1 | 0, 1, 4, 5, 8, 9, 12 | 2 |
| 7 | 2 | 0, 1 | 1 | 7 | 1 | 0, 1, 4, 5, 8, 9, 12, 13 | 2 |
| 8 | 2 | 2, 3 | 1 | 8-31 | Reserved | Reserved | Reserved |
| 9 | 2 | 0-2 | 1 | | | | |
| 10 | 2 | 0-3 | 1 | | | | |
| 11 | 2 | 0, 2 | 1 | | | | |
| 12 | 1 | 8 | 1 | | | | |
| 13 | 1 | 9 | 1 | | | | |
| 14 | 1 | 8, 9 | 1 | | | | |
| 15 | 1 | 0, 1,8 | 1 | | | | |
| 16 | 1 | 0, 1, 8, 9 | 1 | | | | |
| 17 | 2 | 8 | 1 | | | | |
| 18 | 2 | 9 | 1 | | | | |
| 19 | 2 | 8, 9 | 1 | | | | |
| 20 | 2 | 0, 1,8 | 1 | | | | |
| 21 | 2 | 0, 1, 8, 9 | 1 | | | | |
| 22 | 2 | 10 | 1 | | | | |
| 23 | 2 | 11 | 1 | | | | |
| 24 | 2 | 10, 11 | 1 | | | | |
| 25 | 2 | 2, 3, 10 | 1 | | | | |
| 26 | 2 | 2, 3, 10, 11 | 1 | | | | |
| 27 | 2 | 9, 11 | 1 | | | | |
| 28 | 2 | 0 | 2 | | | | |
| 29 | 2 | 1 | 2 | | | | |
| 30 | 2 | 2 | 2 | | | | |
| 31 | 2 | 3 | 2 | | | | |
| 32 | 2 | 4 | 2 | | | | |
| 33 | 2 | 5 | 2 | | | | |
| 34 | 2 | 6 | 2 | | | | |
| 35 | 2 | 7 | 2 | | | | |
| 36 | 2 | 0, 1 | 2 | | | | |
| 37 | 2 | 2, 3 | 2 | | | | |
| 38 | 2 | 4, 5 | 2 | | | | |
| 39 | 2 | 6, 7 | 2 | | | | |
| 40 | 2 | 0, 4 | 2 | | | | |
| 41 | 2 | 2, 6 | 2 | | | | |
| 42 | 2 | 0, 1, 4 | 2 | | | | |
| 43 | 2 | 2,3,6 | 2 | | | | |
| 44 | 2 | 0, 1, 4, 5 | 2 | | | | |
| 45 | 2 | 2, 3, 6, 7 | 2 | | | | |
| 46 | 2 | 0, 2, 4, 6 | 2 | | | | |
| 47 | 2 | 8 | 2 | | | | |
| 48 | 2 | 9 | 2 | | | | |
| 49 | 2 | 10 | 2 | | | | |
| 50 | 2 | 11 | 2 | | | | |
| 51 | 2 | 12 | 2 | | | | |
| 52 | 2 | 13 | 2 | | | | |
| 53 | 2 | 14 | 2 | | | | |
| 54 | 2 | 15 | 2 | | | | |
| 55 | 2 | 8, 9 | 2 | | | | |
| 56 | 2 | 10, 11 | 2 | | | | |
| 57 | 2 | 12, 13 | 2 | | | | |
| 58 | 2 | 14, 15 | 2 | | | | |
| 59 | 2 | 5, 8, 9 | 2 | | | | |
| 60 | 2 | 7, 10, 11 | 2 | | | | |
| 61 | 2 | 8, 9, 12, 13 | 2 | | | | |
| 62 | 2 | 10, 11, 14, 15 | 2 | | | | |
| 63 | 2 | 7, 12, 13 | 2 | | | | |
| 64~127 | | Reserved | | | | | |

Table 22-7 occupies 6 bits. It can be learned from table 22-7 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal.

For example, it is assumed that the port 0 is allocated to another terminal. The M ports allocated by the network device to the current terminal device may include a port 1 and a port 9 that correspond to the row 61, and the port 1 and the port 9 belong to a same CDM group. However, 4-length frequency domain cover codes corresponding to the port 1 and the port 9 are orthogonal, but 2-length frequency domain cover codes corresponding to the port 1 and the port 9 are not orthogonal. The corresponding ports in the row 61 may be replaced with a port 0 and a port 8.

For another example, it is assumed that the port 0 is allocated to another terminal. The M ports allocated by the network device to the current terminal device may include a port 1, a port 5, and a port 9 that correspond to the row 62, and the port 1, the port 5, and the port 9 belong to a same CDM group. However, 4-length frequency domain cover codes corresponding to the port 1, the port 5, and the port 9 are orthogonal, but 2-length frequency domain cover codes corresponding to the port 1, the port 5, and the port 9 are not orthogonal. The corresponding ports in the row 62 may be replaced with a port 0, a port 4, and a port 8.

For another example, it is assumed that the port 0 is allocated to another terminal. The M ports allocated by the network device to the current terminal device may include a port 1, a port 5, a port 9, and a port 13 that correspond to the row 63, and the port 1, the port 5, the port 9, and the port 13 belong to a same CDM group. However, 4-length frequency domain cover codes corresponding to the port 1, the port 5, the port 9, and the port 13 are orthogonal, but 2-length frequency domain cover codes corresponding to the port 1, the port 5, the port 9, and the port 13 are not orthogonal. The corresponding ports in the row 63 may be replaced with a port 0, a port 4, a port 8, and a port 12.

In addition, it can be learned from table 22-7 that a double symbol R18 port of type1 supports a maximum of 16-stream transmission, that is, table 22-7 includes any port combination for 16-stream transmission, a total number of ports allocated by the network device to paired terminal devices is less than or equal to 16, and a number of M ports corresponding to each row is less than or equal to 4. For a specific example, refer to related descriptions in table 22-1.

In addition, it can be learned from table 22-7 that table 22-7 includes any port combination for a maximum of 4-stream transmission supported by a type1 double-symbol R15 port, and a number of ports corresponding to each port combination (that is, each row in table 22-7) is less than or equal to 4, that is, rows 0 to 11 in table 22-7. For example, the network device may indicate a port 0 and a port 1 in the row 2 to a terminal device 1, and indicate a port 2 and a port 3 in the row 8 to a terminal device 2, so that the terminal device 1 and the terminal device 2 are simultaneously scheduled in a same slot (that is, scheduled on a same time-frequency resource). For another example, the network device may indicate a port 0 in the row 5 to a terminal device 1, and indicate a port 3 in the row 6 to a terminal device 2, so that the terminal device 1 and the terminal device 2 are simultaneously scheduled in a same slot (that is, scheduled on a same time-frequency resource). An existing protocol specifies that when the network device indicates a port 0, a port 1, and a port 2 in the row 9, or indicates a port 0, a port 1, a port 2, and a port 3 in the row 10, or indicates a port 0, a port 1, and a port 2 in the row 11, or indicates a port 0, a port 2, a port 4, and a port 6 in the row 43 to a terminal device 1, ports corresponding to the row 9, the row 10, the row 11, and the row 43 are used only for single-UE transmission. Therefore, only the terminal device 1 is scheduled, that is, no other terminal is scheduled on a same time-frequency resource as the terminal device 1.

**Table 22-7: Type1-E or Type1-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 2 | 0-4 | 2 |
| 1 | 1 | 1 | 1 | 1 | 2 | 0, 1, 2, 3, 4, 6 | 2 |
| 2 | 1 | 0, 1 | 1 | 2 | 2 | 0, 1, 2, 3, 4, 5,6 | 2 |
| 3 | 2 | 0 | 1 | 3 | 2 | 0, 1, 2, 3, 4, 5, 6, 7 | 2 |
| 4 | 2 | 1 | 1 | 4 | 1 | 0, 1, 4, 5, 8 | 2 |
| 5 | 2 | 2 | 1 | 5 | 1 | 0, 1, 4, 5, 8, 9 | 2 |
| 6 | 2 | 3 | 1 | 6 | 1 | 0, 1, 4, 5, 8, 9, 12 | 2 |
| 7 | 2 | 0, 1 | 1 | 7 | 1 | 0, 1, 4, 5, 8, 9, 12, 13 | 2 |
| 8 | 2 | 2, 3 | 1 | 8-31 | Reserved | Reserved | Reserved |
| 9 | 2 | 0-2 | 1 | | | | |
| 10 | 2 | 0-3 | 1 | | | | |
| 11 | 2 | 0, 2 | 1 | | | | |
| 12 | 1 | 8 | 1 | | | | |
| 13 | 1 | 9 | 1 | | | | |
| 14 | 1 | 8, 9 | 1 | | | | |
| 15 | 1 | 0, 1,8 | 1 | | | | |
| 16 | 1 | 0, 1, 8, 9 | 1 | | | | |
| 17 | 2 | 8 | 1 | | | | |
| 18 | 2 | 9 | 1 | | | | |
| 19 | 2 | 8, 9 | 1 | | | | |
| 20 | 2 | 0, 1,8 | 1 | | | | |
| 21 | 2 | 0, 1, 8, 9 | 1 | | | | |
| 22 | 2 | 10 | 1 | | | | |
| 23 | 2 | 11 | 1 | | | | |
| 24 | 2 | 10, 11 | 1 | | | | |
| 25 | 2 | 2, 3, 10 | 1 | | | | |
| 26 | 2 | 2, 3, 10, 11 | 1 | | | | |
| 27 | 2 | 9, 11 | 1 | | | | |
| 28 | 2 | 0 | 2 | | | | |
| 29 | 2 | 1 | 2 | | | | |
| 30 | 2 | 2 | 2 | | | | |
| 31 | 2 | 3 | 2 | | | | |
| 32 | 2 | 4 | 2 | | | | |
| 33 | 2 | 5 | 2 | | | | |
| 34 | 2 | 6 | 2 | | | | |
| 35 | 2 | 7 | 2 | | | | |
| 36 | 2 | 0, 1 | 2 | | | | |
| 37 | 2 | 2, 3 | 2 | | | | |
| 38 | 2 | 0, 4 | 2 | | | | |
| 39 | 2 | 0, 1, 4 | 2 | | | | |
| 40 | 2 | 2,3,6 | 2 | | | | |
| 41 | 2 | 0, 1, 4, 5 | 2 | | | | |
| 42 | 2 | 2,3,6,7 | 2 | | | | |
| 43 | 2 | 0, 2, 4, 6 | 2 | | | | |
| 44 | 2 | 8 | 2 | | | | |
| 45 | 2 | 9 | 2 | | | | |
| 46 | 2 | 10 | 2 | | | | |
| 47 | 2 | 11 | 2 | | | | |
| 48 | 2 | 12 | 2 | | | | |
| 49 | 2 | 13 | 2 | | | | |
| 50 | 2 | 14 | 2 | | | | |
| 51 | 2 | 15 | 2 | | | | |
| 52 | 2 | 8, 9 | 2 | | | | |
| 53 | 2 | 10, 11 | 2 | | | | |
| 54 | 2 | 12, 13 | 2 | | | | |
| 55 | 2 | 14, 15 | 2 | | | | |
| 56 | 2 | 5, 8, 9 | 2 | | | | |
| 57 | 2 | 7, 10, 11 | 2 | | | | |
| 58 | 2 | 8, 9, 12, 13 | 2 | | | | |
| 59 | 2 | 10, 11, 14, 15 | 2 | | | | |
| 60 | 2 | 7, 12, 13 | 2 | | | | |
| 61 | 2 | 1, 9 | 2 | | | | |
| 62 | 2 | 1, 5, 9 | 2 | | | | |
| 63 | 2 | 1, 5, 9, 13 | 2 | | | | |
| 64~127 | | Reserved | | | | | |

Table 22-8 occupies 6 bits. It can be learned from table 22-8 that a double-symbol R18 port of type1 supports a maximum of 16-stream transmission, that is, table 22-4 includes any port combination for 16-stream transmission, a total number of ports allocated by the network device to paired terminal devices is less than or equal to 16, and a number of M ports corresponding to each row is less than or equal to 4.

For example, the network device may indicate a port 0, a port 1, and a port 8 in the row 12 to a terminal device 1, indicate a port 2, a port 3, and a port 10 in the row 22 to a terminal device 2, and indicate a port 9 and a port 11 in the row 24 to a terminal device 3. To be specific, the network device indicates three streams to the terminal device 1, indicates three streams to the terminal device 2, and indicates two streams to the terminal device 3, to form 8-stream transmission pairing.

For another example, the network device may indicate a port 0, a port 1, and a port 8 in the row 12 to a terminal device 1, indicate a port 2, a port 3, and a port 6 in the row 40 to a terminal device 2, indicate a port 7, a port 12, and a port 13 in the row 59 to a terminal device 3, and indicate a port 10, a port 11, a port 14, and a port 15 in the row 58 to a terminal device 4. To be specific, the network device indicates three streams to the terminal device 1, indicates three streams to the terminal device 2, indicates three streams to the terminal device 3, and indicates four streams to the terminal device 4, to form 16-stream transmission pairing.

The corresponding ports in the row 59 may be replaced with a port 5, a port 14, and a port 15. Correspondingly, the network device may indicate a port 7, a port 10, and a port 11 in the row 56 to a terminal device 1, indicate a port 2, a port 3, and a port 6 in the row 40 to a terminal device 2, indicate a port 5, a port 14, and a port 15 in the row 59 to a terminal device 3, and indicate a port 8, a port 9, a port 12, and a port 13 in the row 56 to a terminal device 4. To be specific, the network device indicates three streams to the terminal device 1, indicates three streams to the terminal device 2, indicates three streams to the terminal device 3, and indicates four streams to the terminal device 4, to form 16-stream transmission pairing.

In addition, all rows in table 22-8 are used for MU. In other words, the network device may indicate, to a terminal device, a port combination corresponding to any plurality of rows in table 21-8, to implement MU of a plurality of terminals. For example, the network device indicates a port 0 and a port 1 in a row 7 to a terminal device 1, and indicates a port 8 and a port 9 in a row 11 to a terminal device 2, so that the terminal device 1 and the terminal device 2 can be paired.

**Table 22-8: Type1-E or Type1-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 2 | 0-4 | 2 |
| 1 | 1 | 1 | 1 | 1 | 2 | 0, 1, 2, 3, 4, 6 | 2 |
| 2 | 1 | 0, 1 | 1 | 2 | 2 | 0, 1, 2, 3, 4, 5, 6 | 2 |
| 3 | 2 | 0 | 1 | 3 | 2 | 0, 1, 2, 3, 4, 5, 6, 7 | 2 |
| 4 | 2 | 1 | 1 | 4 | 1 | 0, 1, 4, 5, 8 | 2 |
| 5 | 2 | 2 | 1 | 5 | 1 | 0, 1, 4, 5, 8, 9 | 2 |
| 6 | 2 | 3 | 1 | 6 | 1 | 0, 1, 4, 5, 8, 9, 12 | 2 |
| 7 | 2 | 0, 1 | 1 | 7 | 1 | 0, 1, 4, 5, 8, 9, 12, 13 | 2 |
| 8 | 2 | 2, 3 | 1 | 8-31 | Reserved | Reserved | Reserved |
| 9 | 1 | 8 | 1 | | | | |
| 10 | 1 | 9 | 1 | | | | |
| 11 | 1 | 8, 9 | 1 | | | | |
| 12 | 1 | 0, 1,8 | 1 | | | | |
| 13 | 1 | 0, 1, 8, 9 | 1 | | | | |
| 14 | 2 | 8 | 1 | | | | |
| 15 | 2 | 9 | 1 | | | | |
| 16 | 2 | 8, 9 | 1 | | | | |
| 17 | 2 | 0, 1,8 | 1 | | | | |
| 18 | 2 | 0, 1, 8, 9 | 1 | | | | |
| 19 | 2 | 10 | 1 | | | | |
| 20 | 2 | 11 | 1 | | | | |
| 21 | 2 | 10, 11 | 1 | | | | |
| 22 | 2 | 2, 3, 10 | 1 | | | | |
| 23 | 2 | 2, 3, 10, 11 | 1 | | | | |
| 24 | 2 | 9, 11 | 1 | | | | |
| 25 | 2 | 0 | 2 | | | | |
| 26 | 2 | 1 | 2 | | | | |
| 27 | 2 | 2 | 2 | | | | |
| 28 | 2 | 3 | 2 | | | | |
| 29 | 2 | 4 | 2 | | | | |
| 30 | 2 | 5 | 2 | | | | |
| 31 | 2 | 6 | 2 | | | | |
| 32 | 2 | 7 | 2 | | | | |
| 33 | 2 | 0, 1 | 2 | | | | |
| 34 | 2 | 2, 3 | 2 | | | | |
| 35 | 2 | 4, 5 | 2 | | | | |
| 36 | 2 | 6, 7 | 2 | | | | |
| 37 | 2 | 0, 4 | 2 | | | | |
| 38 | 2 | 2, 6 | 2 | | | | |
| 39 | 2 | 0, 1, 4 | 2 | | | | |
| 40 | 2 | 2,3,6 | 2 | | | | |
| 41 | 2 | 0, 1, 4, 5 | 2 | | | | |
| 42 | 2 | 2,3,6,7 | 2 | | | | |
| 43 | 2 | 8 | 2 | | | | |
| 44 | 2 | 9 | 2 | | | | |
| 45 | 2 | 10 | 2 | | | | |
| 46 | 2 | 11 | 2 | | | | |
| 47 | 2 | 12 | 2 | | | | |
| 48 | 2 | 13 | 2 | | | | |
| 49 | 2 | 14 | 2 | | | | |
| 50 | 2 | 15 | 2 | | | | |
| 51 | 2 | 8, 9 | 2 | | | | |
| 52 | 2 | 10, 11 | 2 | | | | |
| 53 | 2 | 12, 13 | 2 | | | | |
| 54 | 2 | 14, 15 | 2 | | | | |
| 55 | 2 | 5, 8,9 | 2 | | | | |
| 56 | 2 | 7, 10, 11 | 2 | | | | |
| 57 | 2 | 8, 9, 12, 13 | 2 | | | | |
| 58 | 2 | 10, 11, 14, 15 | 2 | | | | |
| 59 | 2 | 7, 12, 13 | 2 | | | | |
| 60~127 | | Reserved | | | | | |

Table 22-9 occupies 6 bits. It can be learned from table 22-9 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal.

For example, it is assumed that the port 0 is allocated to another terminal. The M ports allocated by the network device to the current terminal device may include a port 1 and a port 9 that correspond to the row 17 or 18, and the port 1 and the port 9 belong to a same CDM group. However, 4-length frequency domain cover codes corresponding to the port 1 and the port 9 are orthogonal, but 2-length frequency domain cover codes corresponding to the port 1 and the port 9 are not orthogonal. Alternatively, the corresponding ports in the row 17 or 18 may be replaced with a port 0 and a port 8.

For another example, it is assumed that the port 0 is allocated to another terminal. The M ports allocated by the network device to the current terminal device may include a port 1 and a port 9 that correspond to the row 40, and the port 1 and the port 9 belong to a same CDM group. However, 4-length frequency domain cover codes corresponding to the port 1 and the port 9 are orthogonal, but 2-length frequency domain cover codes corresponding to the port 1 and the port 9 are not orthogonal. The corresponding ports in the row 40 may be replaced with a port 0 and a port 8.

For another example, it is assumed that the port 0 is allocated to another terminal. The M ports allocated by the network device to the current terminal device may include a port 1, a port 5, and a port 9 that correspond to the row 41, and the port 1, the port 5, and the port 9 belong to a same CDM group. However, 4-length frequency domain cover codes corresponding to the port 1, the port 5, and the port 9 are orthogonal, but 2-length frequency domain cover codes corresponding to the port 1, the port 5, and the port 9 are not orthogonal. The corresponding ports in the row 41 may be replaced with a port 0, a port 4, and a port 8.

For another example, it is assumed that the port 0 is allocated to another terminal. The M ports allocated by the network device to the current terminal device may include a port 1, a port 5, a port 9, and a port 13 that correspond to the row 42, and the port 1, the port 5, the port 9, and the port 13 belong to a same CDM group. However, 4-length frequency domain cover codes corresponding to the port 1, the port 5, the port 9, and the port 13 are orthogonal, but 2-length frequency domain cover codes corresponding to the port 1, the port 5, the port 9, and the port 13 are not orthogonal. The corresponding ports in the row 42 may be replaced with a port 0, a port 4, a port 8, and a port 12.

In addition, it can be learned from table 22-9 that, when the first value is the value 1, FD-OCC lengths of the M ports associated with the first value may be different, that is, ports in a same row in table 22-9 may correspond to different FD-OCC lengths. For example, for specific detail descriptions of the row 19 to the row 22 and the row 43 to the row 47 in table 22-9, refer to related descriptions in table 22-1.

In addition, it can be learned from table 22-9 that a double symbol R18 port of type1 supports a maximum of 16-stream transmission, that is, table 22-9 includes any port combination for 16-stream transmission, a total number of ports allocated by the network device to paired terminal devices is less than or equal to 16, and a number of ports allocated to each terminal device is less than or equal to 4. For a specific example, refer to related descriptions in table 22-1.

In addition, it can be learned from table 22-9 that table 22-9 does not include a port combination corresponding to an R15 port.

Correspondingly, table 22-9 may be used with reference to table 18-1 to table 19-1 in Embodiment 1. For example, the network device indicates a port 0, a port 1, a port 8, and a port 9 in the row 9 to the terminal device. Correspondingly, if the network device indicates that a value of a first DCI field is 0, 4-length orthogonal cover codes corresponding to the port 0, the port 1, the port 8, and the port 9 have been allocated to another terminal, or FD-OCC lengths corresponding to the port 0, the port 1, the port 8, and the port 9 are 2-length. If the network device indicates that a value of a first DCI field is 1, 4-length orthogonal cover codes corresponding to the port 0, the port 1, the port 8, and the port 9 are not allocated to another terminal, or FD-OCC lengths corresponding to the port 0, the port 1, the port 8, and the port 9 are 4-length.

**Table 22-9: Type1-E or Type1-R18, maxlength=2**

| One codeword (One Codeword): Codeword 0 enabled (Codeword 0 enabled), Codeword 1 disabled (Codeword 1 disabled) | | | | Two codewords (Two Codewords): Codeword 0 enabled (Codeword 0 enabled), Codeword 1 disabled (Codeword 1 disabled) | | | |
|---|---|---|---|---|---|---|---|
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 8 | 1 | 0 | 2 | 0-4 | 2 |
| 1 | 1 | 9 | 1 | 1 | 2 | 0, 1, 2, 3, 4, 6 | 2 |
| 2 | 1 | 8, 9 | 1 | 2 | 2 | 0, 1, 2, 3, 4, 5, 6 | 2 |
| 3 | 1 | 0, 1,8 | 1 | 3 | 2 | 0, 1, 2, 3, 4, 5, 6, 7 | 2 |
| 4 | 1 | 0, 1, 8, 9 | 1 | 4 | 1 | 0, 1, 4, 5, 8 | 2 |
| 5 | 2 | 8 | 1 | 5 | 1 | 0, 1, 4, 5, 8, 9 | 2 |
| 6 | 2 | 9 | 1 | 6 | 1 | 0, 1, 4, 5, 8, 9, 12 | 2 |
| 7 | 2 | 8, 9 | 1 | 7 | 1 | 0, 1, 4, 5, 8, 9, 12, 13 | 2 |
| 8 | 2 | 0, 1,8 | 1 | 8-31 | Reserved | Reserved | Reserved |
| 9 | 2 | 0, 1, 8, 9 | 1 | | | | |
| 10 | 2 | 10 | 1 | | | | |
| 11 | 2 | 11 | 1 | | | | |
| 12 | 2 | 10, 11 | 1 | | | | |
| 13 | 2 | 2, 3, 10 | 1 | | | | |
| 14 | 2 | 2, 3, 10, 11 | 1 | | | | |
| 15 | 2 | 9, 11 | 1 | | | | |
| 16 | 2 | 8, 9, 10, 11 | 1 | | | | |
| 17 | 1 | 1, 9 | 1 | | | | |
| 18 | 2 | 1, 9 | 1 | | | | |
| 19 | 1 | 0, 1(FD-OCC2), 8 | 1 | | | | |
| 20 | 2 | 0, 1(FD-OCC2), 8 | 1 | | | | |
| 21 | 1 | 0(FD-OCC2), 1 | 1 | | | | |
| 22 | 2 | 0(FD-OCC2), 1 | 1 | | | | |
| 23 | 2 | 8 | 2 | | | | |
| 24 | 2 | 9 | 2 | | | | |
| 25 | 2 | 10 | 2 | | | | |
| 26 | 2 | 11 | 2 | | | | |
| 27 | 2 | 12 | 2 | | | | |
| 28 | 2 | 13 | 2 | | | | |
| 29 | 2 | 14 | 2 | | | | |
| 30 | 2 | 15 | 2 | | | | |
| 31 | 2 | 8, 9 | 2 | | | | |
| 32 | 2 | 10, 11 | 2 | | | | |
| 33 | 2 | 12, 13 | 2 | | | | |
| 34 | 2 | 14, 15 | 2 | | | | |
| 35 | 2 | 5, 8, 9 | 2 | | | | |
| 36 | 2 | 7, 10, 11 | 2 | | | | |
| 37 | 2 | 8, 9, 12, 13 | 2 | | | | |
| 38 | 2 | 10, 11, 14, 15 | 2 | | | | |
| 39 | 2 | 7, 12, 13 | 2 | | | | |
| 40 | 2 | 1, 9 | 2 | | | | |
| 41 | 2 | 1, 5, 9 | 2 | | | | |
| 42 | 2 | 1, 5, 9, 13 | 2 | | | | |
| 43 | 2 | 0(FD-OCC2), 1 | 2 | | | | |
| 44 | 2 | 0(FD-OCC2), 5, 13 | 2 | | | | |
| 45 | 2 | 0(FD-OCC2), 1, 5, 9 | 2 | | | | |
| 46 | 2 | 0(FD-OCC2), 4(FD-OCC2), 1 | 2 | | | | |
| 47 | 2 | 0(FD-OCC2), 4(FD-OCC2), 9, 13 | 2 | | | | |
| 48~127 | | Reserved | | | | | |

3. If a DMRS type configured by the network device for the terminal device is type2 and the DMRS occupies a single symbol, the network device may indicate content in table 23-1 to table 23-9 to the terminal device by using the first indication information, so that the terminal device may determine, based on the first indication information with reference to table 23-1 to table 23-9, ports allocated by the network device to the terminal device and FD-OCC lengths corresponding to the ports. A default FD-OCC length of R18 may be determined according to table 5-1 to table 7-3 corresponding to the foregoing formulas 2.1 to 2.4.

Table 23-1 occupies 7 bits. In table 23-1, an FD-OCC length corresponding to a port that is not indicated is 4-length by default. It can be learned from table 23-1 that an FD-OCC length of a same port may be dynamically switched (for example, the network device may indicate, by using DCI signaling, the terminal device to perform switching). In a possible implementation, the first indication information is carried in first signaling, the first signaling further includes second indication information, the second indication information indicates a first value, and the first value is associated with indexes of the M ports. The first value may be understood as an index in a row in table 23-1.

For example, using a port 0 as an example, in table 23-1, when the first value is 0 and 57, the indexes of the M ports include an index of the port 0; and when the first value is 0, an FD-OCC length of the port 0 is 4-length; or when the first value is 57, the index of the port 0 corresponds to a first identifier (that is, FD-OCC2), and the first identifier indicates that an FD-OCC length corresponding to the port 0 is 2-length.

For another example, using a port 0 as an example, in table 23-1, when the first value is 3 and 60, the indexes of the M ports include an index of the port 0; and when the first value is 3, an FD-OCC length of the port 0 is 4-length; or when the first value is 60, the index of the port 0 corresponds to a first identifier (that is, FD-OCC2), and the first identifier indicates that an FD-OCC length corresponding to the port 0 is 2-length.

For another example, using a port 1 as an example, in table 23-1, when the first value is 1 and 58, the indexes of the M ports include an index of the port 1; and when the first value is 1, an FD-OCC length of the port 1 is 4-length; or when the first value is 58, the index of the port 1 corresponds to a first identifier (that is, FD-OCC2), and the first identifier indicates that an FD-OCC length corresponding to the port 1 is 2-length.

For another example, using a port 1 as an example, in table 23-1, when the first value is 4 and 61, the indexes of the M ports include an index of the port 1; and when the first value is 4, an FD-OCC length of the port 1 is 4-length; or when the first value is 61, the index of the port 1 corresponds to a first identifier (that is, FD-OCC2), and the first identifier indicates that an FD-OCC length corresponding to the port 1 is 2-length.

For another example, using a port 0 and a port 1 as an example, in table 23-1, when the first value is 2 and 59, the indexes of the M ports include indexes of the port 0 and the port 1; and when the first value is 2, FD-OCC lengths of the port 0 and the port 1 are 4-length; or when the first value is 59, the indexes of the port 0 and the port 1 correspond to a first identifier (that is, FD-OCC2), and the first identifier indicates that FD-OCC lengths corresponding to the port 0 and the port 1 are 2-length.

For another example, using a port 0 and a port 1 as an example, in table 23-1, when the first value is 7 and 64, the indexes of the M ports include indexes of the port 0 and the port 1; and when the first value is 7, FD-OCC lengths of the port 0 and the port 1 are 4-length; or when the first value is 64, the indexes of the port 0 and the port 1 correspond to a first identifier (that is, FD-OCC2), and the first identifier indicates that FD-OCC lengths corresponding to the port 0 and the port 1 are 2-length.

For another example, using a port 2 as an example, in table 23-1, when the first value is 5 and 62, the indexes of the M ports include an index of the port 2; and when the first value is 5, an FD-OCC length of the port 2 is 4-length; or when the first value is 62, the index of the port 2 corresponds to a first identifier (that is, FD-OCC2), and the first identifier indicates that an FD-OCC length corresponding to the port 2 is 2-length.

For another example, using a port 3 as an example, in table 23-1, when the first value is 6 and 63, the indexes of the M ports include an index of the port 3; and when the first value is 6, an FD-OCC length of the port 3 is 4-length; or when the first value is 63, the index of the port 3 corresponds to a first identifier (that is, FD-OCC2), and the first identifier indicates that an FD-OCC length corresponding to the port 3 is 2-length.

For another example, using a port 2 and a port 3 as an example, in table 23-1, when the first value is 8 and 65, the indexes of the M ports include indexes of the port 2 and the port 3; and when the first value is 8, FD-OCC lengths of the port 2 and the port 3 are 4-length; or when the first value is 65, the indexes of the port 2 and the port 3 correspond to a first identifier (that is, FD-OCC2), and the first identifier indicates that FD-OCC lengths corresponding to the port 2 and the port 3 are 2-length.

By analogy, for FD-OCC lengths of ports corresponding to the row 66 to the row 79, refer to example descriptions.

In addition, it can be learned from table 23-1 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal. For example, it is assumed that the port 0 is allocated to another terminal. The M ports may include a port 1 and a port 13 corresponding to any one of the rows 80, 81, and 82, and the port 1 and the port 13 belong to a same CDM group. However, 4-length frequency domain cover codes corresponding to the port 1 and the port 13 are orthogonal, but 2-length frequency domain cover codes corresponding to the port 1 and the port 13 are not orthogonal. Alternatively, the ports corresponding to any one of the rows 80, 81, and 82 may be replaced with a port 0 and a port 12.

In addition, it can be learned from table 23-1 that, when the first value is the value 1, FD-OCC lengths of the M ports associated with the first value may be different, that is, ports in a same row in table 23-1 may correspond to different FD-OCC lengths.

For example, when the first value is any one of 83, 84, and 85, the M ports may include a port 0, a port 1, and a port 13 corresponding to any one of 83, 84, and 85, an FD-OCC length of the port 0 is 2-length, and FD-OCC lengths of the port 1 and the port 13 are 4-length. Alternatively, the ports corresponding to any one of 83, 84, and 85 may be replaced with a port 0, a port 1, and a port 12, where an FD-OCC length of the port 0 is 4-length, an FD-OCC length of the port 1 is 2-length, and an FD-OCC length of the port 12 is 4-length.

For another example, when the first value is any one of 86, 87, and 88, the M ports may include a port 0 and a port 1 corresponding to any one of 86, 87, and 88, an FD-OCC length of the port 0 is 2-length, and an FD-OCC length of the port 1 is 4-length. Alternatively, an FD-OCC length of the 8 port 0 is 4-length, and an FD-OCC length of the port 1 is 2-length.

In addition, it can be learned from table 23-1 that table 23-1 includes any port combination for a maximum of 12-stream transmission supported by the type2 single-symbol R18 port, a total number of ports allocated by the network device to paired terminal devices is less than or equal to 8, and a number of ports allocated to each terminal is less than or equal to 4. The port combination is a port combination corresponding to any plurality of rows in the rows 24 to 56 in table 23-1.

For example, the network device may indicate a port 13, a port 15, and a port 17 in the row 54 to a terminal device 1, indicate a port 4, a port 5, and a port 16 in the row 52 to a terminal device 2, indicate a port 2, a port 3, and a port 14 in the row 47 to a terminal device 3, and indicate a port 0, a port 1, and a port 12 in the row 42 to a terminal device 4. To be specific, the network device indicates three streams to the terminal device 1, indicates three streams to the terminal device 2, indicates three streams to the terminal device 3, and indicates three streams to the terminal device 4, to form 12-stream transmission pairing.

For another example, the network device indicates a port 4, a port 5, and a port 16 in the row 52 to a terminal device 1, indicates a port 13 and a port 15 in the row 55 or the row 56 to a terminal device 2, and indicates a port 2 and a port 3 in the row 8 to a terminal device 3. To be specific, the network device indicates three streams to the terminal device 1, indicates two streams to the terminal device 2, and indicates three streams to the terminal device 3, to form 8-stream transmission pairing.

In addition, it can be learned from table 23-1 that table 23-1 includes any port combination for a maximum of 6-stream transmission supported by a type2 single-symbol R15 port, and a number of ports corresponding to each port combination is less than or equal to 4, that is, a number of ports corresponding to each row in rows 0 to 23 in table 23-1 is less than 4.

For example, the network device may indicate a port 0 and a port 1 in the row 2 to a terminal device 1, and indicate a port 2 and a port 3 in the row 8 to a terminal device 2, to form 4-stream transmission pairing, so that the terminal device 1 and the terminal device 2 are simultaneously scheduled in a same slot (that is, scheduled on a same time-frequency resource).

For another example, the network device may indicate a port 0 in the row 5 to a terminal device 1, and indicate a port 3 in the row 6 to a terminal device 2, to form 4-stream transmission pairing, so that the terminal device 1 and the terminal device 2 are simultaneously scheduled in a same slot (that is, scheduled on a same time-frequency resource).

For another example, the network device may indicate a port 0, a port 1, a port 2, and a port 3 in the row 22 to a terminal device 1, and indicate a port 4 and a port 5 in the row 19 to a terminal device 2, to form 6-stream transmission pairing, so that the terminal device 1 and the terminal device 2 are simultaneously scheduled in a same slot (that is, scheduled on a same time-frequency resource).

An existing protocol specifies that when the network device indicates a port 0, a port 1, and a port 2 in the row 9, or indicates a port 0, a port 1, a port 2, and a port 3 in the row 10, or indicates a port 0, a port 1, and a port 2 in the row 11 to a terminal device 1, ports corresponding to the row 2, the row 9, the row 11, and the row 23 are used only for single-UE transmission. Therefore, only the terminal device 1 is scheduled, that is, no other terminal is scheduled on a same time-frequency resource as the terminal device 1.

Optionally, table 23-1 may not include a value set corresponding to the R15 port (a row corresponding to a port combination of R15 ports). That is, rows 0 to 23 in table 23-1 may be deleted.

**Table 23-1: Type2-E or Type2-R18, maxlength=1**

| **One codeword: Codeword 0 enabled, Codeword 1 disabled** | | | **Two codewords: Codeword 0 enabled, Codeword 1 enabled** | | |
|---|---|---|---|---|---|
| **Value** | **Number of DMRS CDM group(s) without data** | **DMRS port(s)** | **Value** | **Number of DMRS CDM group(s) without data** | **DMRS port(s)** |
| 0 | 1 | 0 | 0 | 3 | 0-4 |
| 1 | 1 | 1 | 1 | 3 | 0-5 |
| 2 | 1 | 0, 1 | 2 | 2 | 0, 1, 2, 3, 12 |
| 3 | 2 | 0 | 3 | 2 | 0, 1, 2, 3, 12, 13 |
| 4 | 2 | 1 | 4 | 2 | 0, 1, 2, 3, 12, 13, 14 |
| 5 | 2 | 2 | 5 | 2 | 0, 1, 2, 3, 12, 13, 14, 15 |
| 6 | 2 | 3 | 6-31 | Reserved | Reserved |
| 7 | 2 | 0, 1 | | | |
| 8 | 2 | 2, 3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0, 1 | | | |
| 18 | 3 | 2, 3 | | | |
| 19 | 3 | 4, 5 | | | |
| 20 | 3 | 0-2 | | | |
| 21 | 3 | 3-5 | | | |
| 22 | 3 | 0-3 | | | |
| 23 | 2 | 0, 2 | | | |
| 24 | 1 | 12 | | | |
| 25 | 1 | 13 | | | |
| 26 | 1 | 12, 13 | | | |
| 27 | 1 | 0, 1, 12 | | | |
| 28 | 1 | 0, 1, 12, 13 | | | |
| 29 | 2 | 12 | | | |
| 30 | 2 | 13 | | | |
| 31 | 2 | 12, 13 | | | |
| 32 | 2 | 0, 1, 12 | | | |
| 33 | 2 | 0, 1, 12, 13 | | | |
| 34 | 2 | 14 | | | |
| 35 | 2 | 15 | | | |
| 36 | 2 | 14, 15 | | | |
| 37 | 2 | 2, 3, 14 | | | |
| 38 | 2 | 2, 3, 14, 15 | | | |
| 39 | 3 | 12 | | | |
| 40 | 3 | 13 | | | |
| 41 | 3 | 12, 13 | | | |
| 42 | 3 | 0, 1, 12 | | | |
| 43 | 3 | 0, 1, 12, 13 | | | |
| 44 | 3 | 14 | | | |
| 45 | 3 | 15 | | | |
| 46 | 3 | 14, 15 | | | |
| 47 | 3 | 2, 3, 14 | | | |
| 48 | 3 | 2, 3, 14, 15 | | | |
| 49 | 3 | 16 | | | |
| 50 | 3 | 17 | | | |
| 51 | 3 | 16, 17 | | | |
| 52 | 3 | 4, 5, 16 | | | |
| 53 | 3 | 4, 5, 16, 17 | | | |
| 54 | 3 | 13, 15, 17 | | | |
| 55 | 2 | 13, 15 | | | |
| 56 | 3 | 13, 15 | | | |
| 57 | 1 | 0(FD-OCC2) | | | |
| 58 | 1 | 1(FD-OCC2) | | | |
| 59 | 1 | 0(FD-OCC2), 1(FD-OCC2) | | | |
| 60 | 2 | 0(FD-OCC2) | | | |
| 61 | 2 | 1(FD-OCC2) | | | |
| 62 | 2 | 2(FD-OCC2) | | | |
| 63 | 2 | 3(FD-OCC2) | | | |
| 64 | 2 | 0(FD-OCC2), 1(FD-OCC2) | | | |
| 65 | 2 | 2(FD-OCC2), 3(FD-OCC2) | | | |
| 66 | 2 | 0-2(FD-OCC2) | | | |
| 67 | 2 | 0-3(FD-OCC2) | | | |
| 68 | 3 | 0(FD-OCC2) | | | |
| 69 | 3 | 1(FD-OCC2) | | | |
| 70 | 3 | 2(FD-OCC2) | | | |
| 71 | 3 | 3(FD-OCC2) | | | |
| 72 | 3 | 4(FD-OCC2) | | | |
| 73 | 3 | 5(FD-OCC2) | | | |
| 74 | 3 | 0(FD-OCC2), 1(FD-OCC2) | | | |
| 75 | 3 | 2(FD-OCC2), 3(FD-OCC2) | | | |
| 76 | 3 | 4(FD-OCC2), 5(FD-OCC2) | | | |
| 77 | 3 | 0-2(FD-OCC2) | | | |
| 78 | 3 | 3-5(FD-OCC2) | | | |
| 79 | 3 | 0-3(FD-OCC2) | | | |
| 80 | 1 | 1, 13 | | | |
| 81 | 2 | 1, 13 | | | |
| 82 | 3 | 1, 13 | | | |
| 83 | 1 | 0(FD-OCC2), 1, 13 | | | |
| 84 | 2 | 0(FD-OCC2), 1, 13 | | | |
| 85 | 3 | 0(FD-OCC2), 1, 13 | | | |
| 86 | 1 | 0(FD-OCC2), 1 | | | |
| 87 | 2 | 0(FD-OCC2), 1 | | | |
| 88 | 3 | 0(FD-OCC2), 1 | | | |
| 89~128 | Reserved | | | | |

Table 23-2 occupies 7 bits. In table 23-2, an FD-OCC length corresponding to a port that is not indicated is 4-length by default. It can be learned from table 23-2 that an FD-OCC length of a same port can be dynamically switched. In a possible implementation, the first indication information is carried in first signaling, the first signaling further includes second indication information, the second indication information indicates a first value, and the first value is associated with indexes of the M ports. The first value may be understood as an index in a row in table 23-2. For a specific example, refer to related descriptions in table 23-1.

In addition, it can be learned from table 23-2 that an R18 port of type2 supports a maximum of 12-stream transmission, that is, table 23-2 includes any port combination for 12-stream transmission, a total number of ports allocated by the network device to paired terminal devices is less than or equal to 8, and a number of M ports corresponding to each row is less than or equal to 4. For a specific example, refer to related descriptions in table 23-1.

In addition, all rows in table 23-2 are used for MU. In other words, the network device may indicate, to a terminal device, a port combination corresponding to any plurality of rows in table 23-2, to implement MU of a plurality of terminals. For example, the network device indicates a port 0 and a port 1 in a row 7 to a terminal device 1, and indicates a port 2 and a port 3 in a row 17 to a terminal device 2, so that the terminal device 1 and the terminal device 2 can be paired.

**Table 23-2: Type2-E or Type2-R18, maxlength=1**

| **One codeword: Codeword 0 enabled, Codeword 1 disabled** | | | **Two codewords: Codeword 0 enabled, Codeword 1 enabled** | | |
|---|---|---|---|---|---|
| **Value** | **Number of DMRS CDM group(s) without data** | **DMRS port(s)** | **Value** | **Number of DMRS CDM group(s) without data** | **DMRS port(s)** |
| 0 | 1 | 0 | 0 | 3 | 0-4 |
| 1 | 1 | 1 | 1 | 3 | 0-5 |
| 2 | 1 | 0, 1 | 2 | 2 | 0, 1, 2, 3, 12 |
| 3 | 2 | 0 | 3 | 2 | 0, 1, 2, 3, 12, 13 |
| 4 | 2 | 1 | 4 | 2 | 0, 1, 2, 3, 12, 13, 14 |
| 5 | 2 | 2 | 5 | 2 | 0, 1, 2, 3, 12, 13, 14, 15 |
| 6 | 2 | 3 | 6-31 | Reserved | Reserved |
| 7 | 2 | 0, 1 | | | |
| 8 | 2 | 2, 3 | | | |
| 9 | 2 | 0-2 | | | |
| 10 | 3 | 0 | | | |
| 11 | 3 | 1 | | | |
| 12 | 3 | 2 | | | |
| 13 | 3 | 3 | | | |
| 14 | 3 | 4 | | | |
| 15 | 3 | 5 | | | |
| 16 | 3 | 0, 1 | | | |
| 17 | 3 | 2, 3 | | | |
| 18 | 3 | 4, 5 | | | |
| 19 | 3 | 0-2 | | | |
| 20 | 3 | 3-5 | | | |
| 21 | 3 | 0-3 | | | |
| 22 | 1 | 12 | | | |
| 23 | 1 | 13 | | | |
| 24 | 1 | 12, 13 | | | |
| 25 | 1 | 0, 1, 12 | | | |
| 26 | 1 | 0, 1, 12, 13 | | | |
| 27 | 2 | 12 | | | |
| 28 | 2 | 13 | | | |
| 29 | 2 | 12, 13 | | | |
| 30 | 2 | 0, 1, 12 | | | |
| 31 | 2 | 0,1,12,13 | | | |
| 32 | 2 | 14 | | | |
| 33 | 2 | 15 | | | |
| 34 | 2 | 14, 15 | | | |
| 35 | 2 | 2, 3, 14 | | | |
| 36 | 2 | 2, 3, 14, 15 | | | |
| 37 | 3 | 12 | | | |
| 38 | 3 | 13 | | | |
| 39 | 3 | 12, 13 | | | |
| 40 | 3 | 0, 1, 12 | | | |
| 41 | 3 | 0, 1, 12, 13 | | | |
| 42 | 3 | 14 | | | |
| 43 | 3 | 15 | | | |
| 44 | 3 | 14, 15 | | | |
| 45 | 3 | 2, 3, 14 | | | |
| 46 | 3 | 2, 3, 14, 15 | | | |
| 47 | 3 | 16 | | | |
| 48 | 3 | 17 | | | |
| 49 | 3 | 16, 17 | | | |
| 50 | 3 | 4, 5, 16 | | | |
| 51 | 3 | 4, 5, 16, 17 | | | |
| 52 | 3 | 13, 15, 17 | | | |
| 53 | 2 | 13, 15 | | | |
| 54 | 3 | 13, 15 | | | |
| 55 | 1 | 0(FD-OCC2) | | | |
| 56 | 1 | 1(FD-OCC2) | | | |
| 57 | 1 | 0(FD-OCC2), 1(FD-OCC2) | | | |
| 58 | 2 | 0(FD-OCC2) | | | |
| 59 | 2 | 1(FD-OCC2) | | | |
| 60 | 2 | 2(FD-OCC2) | | | |
| 61 | 2 | 3(FD-OCC2) | | | |
| 62 | 2 | 0(FD-OCC2), 1(FD-OCC2) | | | |
| 63 | 2 | 2(FD-OCC2), 3(FD-OCC2) | | | |
| 64 | 2 | 0-2(FD-OCC2) | | | |
| 65 | 2 | 0-3 (FD-OCC2) | | | |
| 66 | 3 | 0(FD-OCC2) | | | |
| 67 | 3 | 1(FD-OCC2) | | | |
| 68 | 3 | 2(FD-OCC2) | | | |
| 69 | 3 | 3(FD-OCC2) | | | |
| 70 | 3 | 4(FD-OCC2) | | | |
| 71 | 3 | 5(FD-OCC2) | | | |
| 72 | 3 | 0(FD-OCC2), 1(FD-OCC2) | | | |
| 73 | 3 | 2(FD-OCC2), 3(FD-OCC2) | | | |
| 74 | 3 | 4(FD-OCC2), 5(FD-OCC2) | | | |
| 75 | 3 | 0-2(FD-OCC2) | | | |
| 76 | 3 | 3-5(FD-OCC2) | | | |
| 77 | 3 | 0-3(FD-OCC2) | | | |
| 78~128 | Reserved | | | | |

A difference between table 23-3 and table 23-2 lies in that a number of rows corresponding to a port combination included in table 23-3 is less than that in table 23-2, so that table 23-3 needs to occupy only 6 bits, and table 23-2 needs to occupy 7 bits. Therefore, table 23-3 can reduce resource overheads.

**Table 23-3: Type2-E or Type2-R18, maxlength=1**

| **One codeword: Codeword 0 enabled, Codeword 1 disabled** | | | **Two codewords: Codeword 0 enabled, Codeword 1 enabled** | | |
|---|---|---|---|---|---|
| **Value** | **Number of DMRS CDM group(s) without data** | **DMRS port(s)** | **Value** | **Number of DMRS CDM group(s) without data** | **DMRS port(s)** |
| 0 | 1 | 0 | 0 | 3 | 0-4 |
| 1 | 1 | 1 | 1 | 3 | 0-5 |
| 2 | 1 | 0, 1 | 2 | 2 | 0, 1, 2, 3, 12 |
| 3 | 2 | 0 | 3 | 2 | 0, 1, 2, 3, 12, 13 |
| 4 | 2 | 1 | 4 | 2 | 0, 1, 2, 3, 12, 13, 14 |
| 5 | 2 | 2 | 5 | 2 | 0, 1, 2, 3, 12, 13, 14, 15 |
| 6 | 2 | 3 | 6-31 | Reserved | Reserved |
| 7 | 2 | 0, 1 | | | |
| 8 | 2 | 2, 3 | | | |
| 9 | 2 | 0-2 | | | |
| 10 | 3 | 0 | | | |
| 11 | 3 | 1 | | | |
| 12 | 3 | 2 | | | |
| 13 | 3 | 3 | | | |
| 14 | 3 | 4 | | | |
| 15 | 3 | 5 | | | |
| 16 | 3 | 0, 1 | | | |
| 17 | 3 | 2, 3 | | | |
| 18 | 3 | 4, 5 | | | |
| 19 | 3 | 0-2 | | | |
| 20 | 3 | 3-5 | | | |
| 21 | 3 | 0-3 | | | |
| 22 | 1 | 12 | | | |
| 23 | 1 | 13 | | | |
| 24 | 1 | 12, 13 | | | |
| 25 | 1 | 0, 1, 12 | | | |
| 26 | 1 | 0, 1, 12, 13 | | | |
| 27 | 2 | 12 | | | |
| 28 | 2 | 13 | | | |
| 29 | 2 | 12, 13 | | | |
| 30 | 2 | 0, 1, 12 | | | |
| 31 | 2 | 0, 1, 12, 13 | | | |
| 32 | 2 | 14 | | | |
| 33 | 2 | 15 | | | |
| 34 | 2 | 14, 15 | | | |
| 35 | 2 | 2, 3, 14 | | | |
| 36 | 2 | 2, 3, 14, 15 | | | |
| 37 | 3 | 12 | | | |
| 38 | 3 | 13 | | | |
| 39 | 3 | 12, 13 | | | |
| 40 | 3 | 0, 1, 12 | | | |
| 41 | 3 | 0, 1, 12, 13 | | | |
| 42 | 3 | 14 | | | |
| 43 | 3 | 15 | | | |
| 44 | 3 | 14, 15 | | | |
| 45 | 3 | 2, 3, 14 | | | |
| 46 | 3 | 2, 3, 14, 15 | | | |
| 47 | 3 | 16 | | | |
| 48 | 3 | 17 | | | |
| 49 | 3 | 16, 17 | | | |
| 50 | 3 | 4, 5, 16 | | | |
| 51 | 3 | 4, 5, 16, 17 | | | |
| 52 | 3 | 13, 15, 17 | | | |
| 53 | 2 | 13, 15 | | | |
| 54 | 3 | 13, 15 | | | |
| 55 | 3 | 0(FD-OCC2) | | | |
| 56 | 3 | 1(FD-OCC2) | | | |
| 57 | 3 | 2(FD-OCC2) | | | |
| 58 | 3 | 3(FD-OCC2) | | | |
| 59 | 3 | 4(FD-OCC2) | | | |
| 60 | 3 | 5(FD-OCC2) | | | |
| 61 | 3 | 0(FD-OCC2), 1(FD-OCC2) | | | |
| 62 | 3 | 2(FD-OCC2), 3(FD-OCC2) | | | |
| 63~128 | Reserved | | | | |

Table 23-4 occupies 7 bits. In table 23-4, an FD-OCC length corresponding to a port that is not indicated is 4-length by default. It can be learned from table 23-1 that an FD-OCC length of a same port may be dynamically switched (for example, the network device may indicate, by using DCI signaling, the terminal device to perform switching). In a possible implementation, the first indication information is carried in first signaling, the first signaling further includes second indication information, the second indication information indicates a first value, and the first value is associated with indexes of the M ports. The first value may be understood as an index in a row in table 23-1. For a specific example, refer to related descriptions in table 23-1.

In addition, it can be learned from table 23-4 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal. For a specific example, refer to related descriptions in table 23-1.

In addition, it can be learned from table 23-4 that an R18 port of type1 supports a maximum of 12-stream transmission, that is, table 23-1 includes any port combination for 12-stream transmission, a total number of ports allocated by the network device to paired terminal devices is less than or equal to 8, and a number of M ports corresponding to each row is less than or equal to 4. The port combination is a port combination corresponding to any plurality of rows in the rows 24 to 56 in table 23-1. For a specific example, refer to related descriptions in table 23-1.

In addition, it can be learned from table 23-4 that table 23-1 includes any port combination for a maximum of 6-stream transmission supported by the R15 port, and all rows are used for MU.

**Table 23-4: Type2-E or Type2-R18, maxlength=1**

| **One codeword:** | | | **Two codewords:** | | |
|---|---|---|---|---|---|
| **Codeword 0 enabled,** | | | **Codeword 0 enabled,** | | |
| **Codeword 1 disabled** | | | **Codeword 1 enabled** | | |
| **Value** | **Number of DMRS CDM group(s) without data** | **DMRS port(s)** | **Value** | **Number of DMRS CDM group(s) without data** | **DMRS port(s)** |
| 1 | 1 | 0 | 0 | 3 | 0-4 |
| 2 | 1 | 1 | 1 | 3 | 0-5 |
| 3 | 1 | 0, 1 | 2 | 2 | 0, 1, 2, 3, 12 |
| 4 | 2 | 0 | 3 | 2 | 0, 1, 2, 3, 12, 13 |
| 5 | 2 | 1 | 4 | 2 | 0, 1, 2, 3, 12, 13, 14 |
| 6 | 2 | 2 | 5 | 2 | 0, 1, 2, 3, 12, 13, 14, 15 |
| 7 | 2 | 3 | 6-31 | Reserved | Reserved |
| 8 | 2 | 0, 1 | | | |
| 9 | 2 | 2, 3 | | | |
| 10 | 2 | 0-2 | | | |
| 11 | 2 | 0-3 | | | |
| 12 | 3 | 0 | | | |
| 13 | 3 | 1 | | | |
| 14 | 3 | 2 | | | |
| 15 | 3 | 3 | | | |
| 16 | 3 | 4 | | | |
| 17 | 3 | 5 | | | |
| 18 | 3 | 0, 1 | | | |
| 19 | 3 | 2, 3 | | | |
| 20 | 3 | 4, 5 | | | |
| 21 | 3 | 0-2 | | | |
| 22 | 3 | 3-5 | | | |
| 23 | 3 | 0-3 | | | |
| 24 | 1 | 12 | | | |
| 25 | 1 | 13 | | | |
| 26 | 1 | 12, 13 | | | |
| 27 | 1 | 0, 1, 12 | | | |
| 28 | 1 | 0, 1, 12, 13 | | | |
| 29 | 2 | 12 | | | |
| 30 | 2 | 13 | | | |
| 31 | 2 | 12, 13 | | | |
| 32 | 2 | 0, 1, 12 | | | |
| 33 | 2 | 0, 1, 12, 13 | | | |
| 34 | 2 | 14 | | | |
| 35 | 2 | 15 | | | |
| 36 | 2 | 14, 15 | | | |
| 37 | 2 | 2, 3, 14 | | | |
| 38 | 2 | 2, 3, 14, 15 | | | |
| 39 | 3 | 12 | | | |
| 40 | 3 | 13 | | | |
| 41 | 3 | 12, 13 | | | |
| 42 | 3 | 0, 1, 12 | | | |
| 43 | 3 | 0, 1, 12, 13 | | | |
| 44 | 3 | 14 | | | |
| 45 | 3 | 15 | | | |
| 46 | 3 | 14, 15 | | | |
| 47 | 3 | 2, 3, 14 | | | |
| 48 | 3 | 2, 3, 14, 15 | | | |
| 49 | 3 | 16 | | | |
| 50 | 3 | 17 | | | |
| 51 | 3 | 16, 17 | | | |
| 52 | 3 | 4, 5, 16 | | | |
| 53 | 3 | 4, 5, 16, 17 | | | |
| 54 | 3 | 13, 15, 17 | | | |
| 55 | 2 | 13, 15 | | | |
| 56 | 3 | 13, 15 | | | |
| 57 | 1 | 0(FD-OCC2) | | | |
| 58 | 1 | 1(FD-OCC2) | | | |
| 59 | 1 | 0(FD-OCC2), 1(FD-OCC2) | | | |
| 60 | 2 | 0(FD-OCC2) | | | |
| 61 | 2 | 1(FD-OCC2) | | | |
| 62 | 2 | 2(FD-OCC2) | | | |
| 63 | 2 | 3(FD-OCC2) | | | |
| 64 | 2 | 0(FD-OCC2), 1(FD-OCC2) | | | |
| 65 | 2 | 2(FD-OCC2), 3(FD-OCC2) | | | |
| 66 | 2 | 0-2(FD-OCC2) | | | |
| 67 | 2 | 0-3(FD-OCC2) | | | |
| 68 | 3 | 0(FD-OCC2) | | | |
| 69 | 3 | 1(FD-OCC2) | | | |
| 70 | 3 | 2(FD-OCC2) | | | |
| 71 | 3 | 3(FD-OCC2) | | | |
| 72 | 3 | 4(FD-OCC2) | | | |
| 73 | 3 | 5(FD-OCC2) | | | |
| 74 | 3 | 0(FD-OCC2), 1(FD-OCC2) | | | |
| 75 | 3 | 2(FD-OCC2), 3(FD-OCC2) | | | |
| 76 | 3 | 4(FD-OCC2), 5(FD-OCC2) | | | |
| 77 | 3 | 0-2(FD-OCC2) | | | |
| 78 | 3 | 3-5(FD-OCC2) | | | |
| 79 | 3 | 0-3(FD-OCC2) | | | |
| 80 | 1 | 1, 13 | | | |
| 81 | 2 | 1, 13 | | | |
| 82 | 3 | 1, 13 | | | |
| 83~128 | Reserved | | | | |

A difference between table 23-5 and table 23-4 lies in that table 23-5 includes a smaller number of port combinations, so that table 23-5 needs to occupy only 6 bits, and table 23-4 needs to occupy only 7 bits. Therefore, compared with table 23-4, table 23-5 can reduce bit consumption.

**Table 23-5: Type2-E or Type2-R18, maxlength=1**

| **One codeword:** | | | **Two codewords:** | | |
|---|---|---|---|---|---|
| **Codeword 0 enabled,** | | | **Codeword 0 enabled,** | | |
| **Codeword 1 disabled** | | | **Codeword 1 enabled** | | |
| **Value** | **Number of DMRS CDM group(s) without data** | **DMRS port(s)** | **Value** | **Number of DMRS CDM group(s) without data** | **DMRS port(s)** |
| 0 | 1 | 0 | 0 | 3 | 0-4 |
| 1 | 1 | 1 | 1 | 3 | 0-5 |
| 2 | 1 | 0, 1 | 2 | 2 | 0, 1, 2, 3, 12 |
| 3 | 2 | 0 | 3 | 2 | 0, 1, 2, 3, 12, 13 |
| 4 | 2 | 1 | 4 | 2 | 0, 1, 2, 3, 12, 13, 14 |
| 5 | 2 | 2 | 5 | 2 | 0, 1, 2, 3, 12, 13, 14, 15 |
| 6 | 2 | 3 | 6-31 | Reserved | Reserved |
| 7 | 2 | 0, 1 | | | |
| 8 | 2 | 2, 3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0, 1 | | | |
| 18 | 3 | 2, 3 | | | |
| 19 | 3 | 4, 5 | | | |
| 20 | 3 | 0-2 | | | |
| 21 | 3 | 3-5 | | | |
| 22 | 3 | 0-3 | | | |
| 23 | 1 | 12 | | | |
| 24 | 1 | 13 | | | |
| 25 | 1 | 12, 13 | | | |
| 26 | 1 | 0, 1, 12 | | | |
| 27 | 1 | 0, 1, 12, 13 | | | |
| 28 | 2 | 12 | | | |
| 29 | 2 | 13 | | | |
| 30 | 2 | 12, 13 | | | |
| 31 | 2 | 0, 1, 12 | | | |
| 32 | 2 | 0, 1, 12, 13 | | | |
| 33 | 2 | 14 | | | |
| 34 | 2 | 15 | | | |
| 35 | 2 | 14, 15 | | | |
| 36 | 2 | 2, 3, 14 | | | |
| 37 | 2 | 2, 3, 14, 15 | | | |
| 38 | 3 | 12 | | | |
| 39 | 3 | 13 | | | |
| 40 | 3 | 12, 13 | | | |
| 41 | 3 | 0, 1, 12 | | | |
| 42 | 3 | 0, 1, 12, 13 | | | |
| 43 | 3 | 14 | | | |
| 44 | 3 | 15 | | | |
| 45 | 3 | 14, 15 | | | |
| 46 | 3 | 2, 3, 14 | | | |
| 47 | 3 | 2, 3, 14, 15 | | | |
| 48 | 3 | 16 | | | |
| 49 | 3 | 17 | | | |
| 50 | 3 | 16, 17 | | | |
| 51 | 3 | 4, 5, 16 | | | |
| 52 | 3 | 4, 5, 16, 17 | | | |
| 53 | 3 | 13, 15, 17 | | | |
| 54 | 2 | 13, 15 | | | |
| 55 | 3 | 13, 15 | | | |
| 56 | 3 | 0(FD-OCC2) | | | |
| 57 | 3 | 1(FD-OCC2) | | | |
| 58 | 3 | 4(FD-OCC2) | | | |
| 59 | 3 | 5(FD-OCC2) | | | |
| 60 | 3 | 0(FD-OCC2), 1(FD-OCC2) | | | |
| 61 | 1 | 1, 13 | | | |
| 62 | 2 | 1, 13 | | | |
| 63 | 3 | 1, 13 | | | |
| 64~128 | Reserved | | | | |

Table 23-6 occupies 6 bits. It can be learned from table 23-6 that table 23-6 includes any port combination for a maximum of 12-stream transmission supported by a type2 single-symbol R18 port, a total number of ports allocated by the network device to paired terminal devices is less than or equal to 8, and a number of M ports corresponding to each row is less than or equal to 4. The port combination is a port combination corresponding to any plurality of rows in the rows 24 to 56 in table 23-6. For a specific example, refer to related descriptions in table 23-1.

In addition, it can be learned from table 23-6 that table 23-6 includes any port combination for a maximum of 6-stream transmission supported by a type2 single-symbol R15 port, and a number of ports corresponding to each port combination is less than or equal to 4, that is, a number of ports corresponding to any row in rows 0 to 23 in table 23-6 is less than 4. For a specific example, refer to related descriptions in table 23-1.

**Table 23-6: Type2-E or Type2-R18, maxlength=1**

| **One codeword:** | | | **Two codewords:** | | |
|---|---|---|---|---|---|
| **Codeword 0 enabled,** | | | **Codeword 0 enabled,** | | |
| **Codeword 1 disabled** | | | **Codeword 1 enabled** | | |
| **Value** | **Number of DMRS CDM group(s) without data** | **DMRS port(s)** | **Value** | **Number of DMRS CDM group(s) without data** | **DMRS port(s)** |
| 0 | 1 | 0 | 0 | 3 | 0-4 |
| 1 | 1 | 1 | 1 | 3 | 0-5 |
| 2 | 1 | 0, 1 | 2 | 2 | 0, 1, 2, 3, 12 |
| 3 | 2 | 0 | 3 | 2 | 0, 1, 2, 3, 12, 13 |
| 4 | 2 | 1 | 4 | 2 | 0, 1, 2, 3, 12, 13, 14 |
| 5 | 2 | 2 | 5 | 2 | 0, 1, 2, 3, 12, 13, 14, 15 |
| 6 | 2 | 3 | 6-31 | Reserved | Reserved |
| 7 | 2 | 0, 1 | | | |
| 8 | 2 | 2, 3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0, 1 | | | |
| 18 | 3 | 2, 3 | | | |
| 19 | 3 | 4, 5 | | | |
| 20 | 3 | 0-2 | | | |
| 21 | 3 | 3-5 | | | |
| 22 | 3 | 0-3 | | | |
| 23 | 2 | 0, 2 | | | |
| 24 | 1 | 12 | | | |
| 25 | 1 | 13 | | | |
| 26 | 1 | 12, 13 | | | |
| 27 | 1 | 0, 1, 12 | | | |
| 28 | 1 | 0, 1, 12, 13 | | | |
| 29 | 2 | 12 | | | |
| 30 | 2 | 13 | | | |
| 31 | 2 | 12, 13 | | | |
| 32 | 2 | 0, 1, 12 | | | |
| 33 | 2 | 0, 1, 12, 13 | | | |
| 34 | 2 | 14 | | | |
| 35 | 2 | 15 | | | |
| 36 | 2 | 14, 15 | | | |
| 37 | 2 | 2, 3, 14 | | | |
| 38 | 2 | 2, 3, 14, 15 | | | |
| 39 | 3 | 12 | | | |
| 40 | 3 | 13 | | | |
| 41 | 3 | 12, 13 | | | |
| 42 | 3 | 0, 1, 12 | | | |
| 43 | 3 | 0, 1, 12, 13 | | | |
| 44 | 3 | 14 | | | |
| 45 | 3 | 15 | | | |
| 46 | 3 | 14, 15 | | | |
| 47 | 3 | 2, 3, 14 | | | |
| 48 | 3 | 2, 3, 14, 15 | | | |
| 49 | 3 | 16 | | | |
| 50 | 3 | 17 | | | |
| 51 | 3 | 16, 17 | | | |
| 52 | 3 | 4, 5, 16 | | | |
| 53 | 3 | 4, 5, 16, 17 | | | |
| 54 | 3 | 13, 15, 17 | | | |
| 55 | 2 | 13, 15 | | | |
| 56 | 3 | 13, 15 | | | |
| 57~128 | Reserved | | | | |

Table 23-7 occupies 6 bits. It can be learned from table 23-7 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal. For example, it is assumed that the port 0 is allocated to another terminal. The M ports may include a port 1 and a port 13 corresponding to any one of the rows 57, 58, and 59, and the port 1 and the port 13 belong to a same CDM group. However, 4-length frequency domain cover codes corresponding to the port 1 and the port 13 are orthogonal, but 2-length frequency domain cover codes corresponding to the port 1 and the port 13 are not orthogonal. Alternatively, the ports corresponding to any one of the rows 57, 58, and 59 may be replaced with a port 0 and a port 12.

It can be learned from table 23-7 that table 23-7 includes any port combination for a maximum of 12-stream transmission supported by a type2 single-symbol R18 port, a total number of ports allocated by the network device to paired terminal devices is less than or equal to 8, and a number of M ports corresponding to each row is less than or equal to 4. The port combination is a port combination corresponding to any plurality of rows in the rows 24 to 56 in table 23-7. For a specific example, refer to related descriptions in table 23-1.

In addition, it can be learned from table 23-7 that table 23-7 includes any port combination for a maximum of 6-stream transmission supported by a type2 single-symbol R15 port, and a number of ports corresponding to each port combination is less than or equal to 4, that is, a number of ports corresponding to any row in rows 0 to 23 in table 23-7 is less than 4. For a specific example, refer to related descriptions in table 23-1.

**Table 23-7: Type2-E or Type2-R18, maxlength=1**

| **One codeword: Codeword 0 enabled, Codeword 1 disabled** | | | **Two codewords: Codeword 0 enabled, Codeword 1 enabled** | | |
|---|---|---|---|---|---|
| **Value** | **Number of DMRS CDM group(s) without data** | **DMRS port(s)** | **Value** | **Number of DMRS CDM group(s) without data** | **DMRS port(s)** |
| 0 | 1 | 0 | 0 | 3 | 0-4 |
| 1 | 1 | 1 | 1 | 3 | 0-5 |
| 2 | 1 | 0, 1 | 2 | 2 | 0, 1, 2, 3, 12 |
| 3 | 2 | 0 | 3 | 2 | 0, 1, 2, 3, 12, 13 |
| 4 | 2 | 1 | 4 | 2 | 0, 1, 2, 3, 12, 13, 14 |
| 5 | 2 | 2 | 5 | 2 | 0, 1, 2, 3, 12, 13, 14, 15 |
| 6 | 2 | 3 | 6-31 | Reserved | Reserved |
| 7 | 2 | 0, 1 | | | |
| 8 | 2 | 2, 3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0, 1 | | | |
| 18 | 3 | 2, 3 | | | |
| 19 | 3 | 4, 5 | | | |
| 20 | 3 | 0-2 | | | |
| 21 | 3 | 3-5 | | | |
| 22 | 3 | 0-3 | | | |
| 23 | 2 | 0, 2 | | | |
| 24 | 1 | 12 | | | |
| 25 | 1 | 13 | | | |
| 26 | 1 | 12, 13 | | | |
| 27 | 1 | 0, 1, 12 | | | |
| 28 | 1 | 0, 1, 12, 13 | | | |
| 29 | 2 | 12 | | | |
| 30 | 2 | 13 | | | |
| 31 | 2 | 12, 13 | | | |
| 32 | 2 | 0, 1, 12 | | | |
| 33 | 2 | 0, 1, 12, 13 | | | |
| 34 | 2 | 14 | | | |
| 35 | 2 | 15 | | | |
| 36 | 2 | 14, 15 | | | |
| 37 | 2 | 2, 3, 14 | | | |
| 38 | 2 | 2, 3, 14, 15 | | | |
| 39 | 3 | 12 | | | |
| 40 | 3 | 13 | | | |
| 41 | 3 | 12, 13 | | | |
| 42 | 3 | 0, 1, 12 | | | |
| 43 | 3 | 0, 1, 12, 13 | | | |
| 44 | 3 | 14 | | | |
| 45 | 3 | 15 | | | |
| 46 | 3 | 14, 15 | | | |
| 47 | 3 | 2, 3, 14 | | | |
| 48 | 3 | 2, 3, 14, 15 | | | |
| 49 | 3 | 16 | | | |
| 50 | 3 | 17 | | | |
| 51 | 3 | 16, 17 | | | |
| 52 | 3 | 4, 5, 16 | | | |
| 53 | 3 | 4, 5, 16, 17 | | | |
| 54 | 3 | 13, 15, 17 | | | |
| 55 | 2 | 13, 15 | | | |
| 56 | 3 | 13, 15 | | | |
| 57 | 1 | 1, 13 | | | |
| 58 | 2 | 1, 13 | | | |
| 59 | 3 | 1, 13 | | | |
| 60~128 | Reserved | | | | |

Table 23-8 occupies 6 bits. It can be learned from table 23-8 that a single-symbol R18 port of type2 supports a maximum of 12-stream transmission, that is, table 23-8 includes any port combination for 12-stream transmission, a total number of ports allocated by the network device to paired terminal devices is less than or equal to 8, and a number of M ports corresponding to each row is less than or equal to 4. The port combination is a port combination corresponding to any plurality of rows in the rows 24 to 56 in table 23-8. For a specific example, refer to related descriptions in table 23-1.

In addition, it can be learned from table 23-8 that table 23-8 includes port combinations for a maximum of 6-stream transmission supported by the type2 single-symbol R15 port, and all these port combinations are used for MU. For a specific example, refer to related descriptions in table 23-1.

**Table 23-8: Type2-E or Type2-R18, maxlength=1**

| **One codeword: Codeword 0 enabled, Codeword 1 disabled** | | | **Two codewords: Codeword 0 enabled, Codeword 1 enabled** | | |
|---|---|---|---|---|---|
| **Value** | **Number of DMRS CDM group(s) without data** | **DMRS port(s)** | **Value** | **Number of DMRS CDM group(s) without data** | **DMRS port(s)** |
| 0 | 1 | 0 | 0 | 3 | 0-4 |
| 1 | 1 | 1 | 1 | 3 | 0-5 |
| 2 | 1 | 0, 1 | 2 | 2 | 0, 1, 2, 3, 12 |
| 3 | 2 | 0 | 3 | 2 | 0, 1, 2, 3, 12, 13 |
| 4 | 2 | 1 | 4 | 2 | 0, 1, 2, 3, 12, 13, 14 |
| 5 | 2 | 2 | 5 | 2 | 0, 1, 2, 3, 12, 13, 14, 15 |
| 6 | 2 | 3 | 6-31 | Reserved | Reserved |
| 7 | 2 | 0, 1 | | | |
| 8 | 2 | 2, 3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0, 1 | | | |
| 18 | 3 | 2, 3 | | | |
| 19 | 3 | 4, 5 | | | |
| 20 | 3 | 0-2 | | | |
| 21 | 3 | 3-5 | | | |
| 22 | 3 | 0-3 | | | |
| 23 | 1 | 12 | | | |
| 24 | 1 | 13 | | | |
| 25 | 1 | 12, 13 | | | |
| 26 | 1 | 0, 1, 12 | | | |
| 27 | 1 | 0, 1, 12, 13 | | | |
| 28 | 2 | 12 | | | |
| 29 | 2 | 13 | | | |
| 30 | 2 | 12, 13 | | | |
| 31 | 2 | 0, 1, 12 | | | |
| 32 | 2 | 0, 1, 12, 13 | | | |
| 33 | 2 | 14 | | | |
| 34 | 2 | 15 | | | |
| 35 | 2 | 14, 15 | | | |
| 36 | 2 | 2, 3, 14 | | | |
| 37 | 2 | 2, 3, 14, 15 | | | |
| 38 | 3 | 12 | | | |
| 39 | 3 | 13 | | | |
| 40 | 3 | 12, 13 | | | |
| 41 | 3 | 0, 1, 12 | | | |
| 42 | 3 | 0, 1, 12, 13 | | | |
| 43 | 3 | 14 | | | |
| 44 | 3 | 15 | | | |
| 45 | 3 | 14, 15 | | | |
| 46 | 3 | 2, 3, 14 | | | |
| 47 | 3 | 2, 3, 14, 15 | | | |
| 48 | 3 | 16 | | | |
| 49 | 3 | 17 | | | |
| 50 | 3 | 16, 17 | | | |
| 51 | 3 | 4, 5, 16 | | | |
| 52 | 3 | 4, 5, 16, 17 | | | |
| 53 | 3 | 13, 15, 17 | | | |
| 54 | 2 | 13, 15 | | | |
| 55 | 3 | 13, 15 | | | |
| 56~128 | Reserved | | | | |

Table 23-9 occupies 6 bits. It can be learned from table 23-9 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal. For example, it is assumed that the port 0 is allocated to another terminal. The M ports may include a port 1 and a port 13 corresponding to any one of the rows 34, 35, and 36, and the port 1 and the port 13 belong to a same CDM group. However, 4-length frequency domain cover codes corresponding to the port 1 and the port 13 are orthogonal, but 2-length frequency domain cover codes corresponding to the port 1 and the port 13 are not orthogonal. Alternatively, the ports corresponding to any one of the rows 34, 35, and 36 may be replaced with a port 0 and a port 12.

In addition, it can be learned from table 23-9 that, when the first value is the value 1, FD-OCC lengths of the M ports associated with the first value may be different, that is, ports in a same row in table 23-9 may correspond to different FD-OCC lengths.

For example, when the first value is any one of 37, 38, and 39, the M ports may include a port 0, a port 1, and a port 13 corresponding to any one of 37, 38, and 39, an FD-OCC length of the port 0 is 2-length, and FD-OCC lengths of the port 1 and the port 13 are 4-length. Alternatively, the ports corresponding to any one of 37, 38, and 39 may be replaced with a port 0, a port 1, and a port 12, where an FD-OCC length of the port 0 is 4-length, an FD-OCC length of the port 1 is 2-length, and an FD-OCC length of the port 12 is 4-length.

For another example, when the first value is any one of 40, 41, and 42, the M ports may include a port 0 and a port 1 corresponding to any one of 40, 41, and 42, an FD-OCC length of the port 0 is 2-length, and an FD-OCC length of the port 1 is 4-length. Alternatively, an FD-OCC length of the 8 port 0 is 4-length, and an FD-OCC length of the port 1 is 2-length.

In addition, it can be learned from table 23-9 that a single-symbol R18 port of type2 supports a maximum of 12-stream transmission, that is, table 23-9 includes any port combination for 12-stream transmission, a total number of ports allocated by the network device to paired terminal devices is less than or equal to 8, and a number of M ports corresponding to each row is less than or equal to 4. The port combination is a port combination corresponding to any plurality of rows in the rows 0 to 33 in table 23-9. For a specific example, refer to related descriptions in table 23-1.

In addition, it can be learned from table 23-9 that table 23-9 does not include a maximum port combination supported by an R15 port.

Correspondingly, table 23-9 may be used with reference to table 18-1, table 18-2, table 19-1, and table 19-2 in Embodiment 1. For example, the network device indicates a port 0, a port 1, a port 12, and a port 13 in the row 5 to the terminal device. Correspondingly, if the network device indicates that a value of a first DCI field is 0, 4-length orthogonal cover codes corresponding to the port 0, the port 1, the port 12, and the port 13 have been allocated to another terminal, or FD-OCC lengths corresponding to the port 0, the port 1, the port 12, and the port 13 are 2-length. If the network device indicates that a value of a first DCI field is 1, 4-length orthogonal cover codes corresponding to the port 0, the port 1, the port 12, and the port 13 are not allocated to another terminal, or FD-OCC lengths corresponding to the port 0, the port 1, the port 12, and the port 13 are 4-length.

**Table 23-9: Type2-E or Type2-R18, maxlength=1**

| **One codeword: Codeword 0 enabled, Codeword 1 disabled** | | | **Two codewords: Codeword 0 enabled, Codeword 1 enabled** | | |
|---|---|---|---|---|---|
| **Value** | **Number of DMRS CDM group(s) without data** | **DMRS port(s)** | **Value** | **Number of DMRS CDM group(s) without data** | **DMRS port(s)** |
| 0 | 2 | 0, 2 | 0 | 3 | 0-4 |
| 1 | 1 | 12 | 1 | 3 | 0-5 |
| 2 | 1 | 13 | 2 | 2 | 0, 1, 2, 3, 12 |
| 3 | 1 | 12, 13 | 3 | 2 | 0, 1, 2, 3, 12, 13 |
| 4 | 1 | 0, 1, 12 | 4 | 2 | 0, 1, 2, 3, 12, 13, 14 |
| 5 | 1 | 0, 1, 12, 13 | 5 | 2 | 0, 1, 2, 3, 12, 13, 14, 15 |
| 6 | 2 | 12 | 6-31 | Reserved | Reserved |
| 7 | 2 | 13 | | | |
| 8 | 2 | 12, 13 | | | |
| 9 | 2 | 0, 1, 12 | | | |
| 10 | 2 | 0, 1, 12, 13 | | | |
| 11 | 2 | 14 | | | |
| 12 | 2 | 15 | | | |
| 13 | 2 | 14, 15 | | | |
| 14 | 2 | 2, 3, 14 | | | |
| 15 | 2 | 2, 3, 14, 15 | | | |
| 16 | 3 | 12 | | | |
| 17 | 3 | 13 | | | |
| 18 | 3 | 12, 13 | | | |
| 19 | 3 | 0, 1, 12 | | | |
| 20 | 3 | 0, 1, 12, 13 | | | |
| 21 | 3 | 14 | | | |
| 22 | 3 | 15 | | | |
| 23 | 3 | 14, 15 | | | |
| 24 | 3 | 2, 3, 14 | | | |
| 25 | 3 | 2, 3, 14, 15 | | | |
| 26 | 3 | 16 | | | |
| 27 | 3 | 17 | | | |
| 28 | 3 | 16, 17 | | | |
| 29 | 3 | 4, 5, 16 | | | |
| 30 | 3 | 4, 5, 16, 17 | | | |
| 31 | 3 | 13, 15, 17 | | | |
| 32 | 2 | 13, 15 | | | |
| 33 | 3 | 13, 15 | | | |
| 34 | 1 | 1, 13 | | | |
| 35 | 2 | 1, 13 | | | |
| 36 | 3 | 1, 13 | | | |
| 37 | 1 | 0(FD-OCC2), 1, 13 | | | |
| 38 | 2 | 0(FD-OCC2), 1, 13 | | | |
| 39 | 3 | 0(FD-OCC2), 1, 13 | | | |
| 40 | 1 | 0(FD-OCC2), 1 | | | |
| 41 | 2 | 0(FD-OCC2), 1 | | | |
| 42 | 3 | 0(FD-OCC2), 1 | | | |
| 43~128 | Reserved | | | | |

4. If a DMRS type configured by the network device for the terminal device is type2 and the DMRS occupies double symbols, the network device may indicate content in table 24-A1 to table 24-A9 to the terminal device by using the first indication information, so that the terminal device may determine, based on the first indication information with reference to table 24-A1 to table 24-A9, ports allocated by the network device to the terminal device and FD-OCC lengths corresponding to the ports. In table 24-A1 to table 24-A9, an FD-OCC length corresponding to a port that is not indicated is 4-length by default. A default FD-OCC length of R18 may be determined according to table 5-1 to table 7-3 corresponding to the foregoing formulas 2.1 to 2.4.

Table 24-A1 occupies 8 bits. It can be learned from table 24-A1 that an FD-OCC length of a same port may be dynamically switched (for example, the network device may indicate, by using DCI signaling, the terminal device to perform switching). In a possible implementation, the first indication information is carried in first signaling, the first signaling further includes second indication information, the second indication information indicates a first value, and the first value is associated with indexes of the M ports. The first value may be understood as an index in a row in table 24-A1.

For example, using a port 0 as an example, in table 24-A1, when the first value is 0 and 91, the indexes of the M ports include an index of the port 0; and when the first value is 0, an FD-OCC length of the port 0 is 4-length; or when the first value is 91, the index of the port 0 corresponds to a first identifier (that is, FD-OCC2), and the first identifier indicates that an FD-OCC length corresponding to the port 0 is 2-length.

For another example, using a port 0 as an example, in table 24-A1, when the first value is 3 and 94, the indexes of the M ports include an index of the port 0; and when the first value is 3, an FD-OCC length of the port 0 is 4-length; or when the first value is 94, the index of the port 0 corresponds to a first identifier (that is, FD-OCC2), and the first identifier indicates that an FD-OCC length corresponding to the port 0 is 2-length.

For another example, using a port 1 as an example, in table 24-A1, when the first value is 1 and 92, the indexes of the M ports include an index of the port 1; and when the first value is 1, an FD-OCC length of the port 1 is 4-length; or when the first value is 92, the index of the port 1 corresponds to a first identifier (that is, FD-OCC2), and the first identifier indicates that an FD-OCC length corresponding to the port 1 is 2-length.

For another example, using a port 1 as an example, in table 24-A1, when the first value is 4 and 95, the indexes of the M ports include an index of the port 1; and when the first value is 4, an FD-OCC length of the port 1 is 4-length; or when the first value is 95, the index of the port 1 corresponds to a first identifier (that is, FD-OCC2), and the first identifier indicates that an FD-OCC length corresponding to the port 1 is 2-length.

For another example, using a port 0 and a port 1 as an example, in table 24-A1, when the first value is 2 and 93, the indexes of the M ports include indexes of the port 0 and the port 1; and when the first value is 2, FD-OCC lengths of the port 0 and the port 1 are 4-length; or when the first value is 93, the indexes of the port 0 and the port 1 correspond to a first identifier (that is, FD-OCC2), and the first identifier indicates that FD-OCC lengths corresponding to the port 0 and the port 1 are 2-length.

For another example, using a port 0 and a port 1 as an example, in table 24-A1, when the first value is 7 and 98, the indexes of the M ports include indexes of the port 0 and the port 1; and when the first value is 7, FD-OCC lengths of the port 0 and the port 1 are 4-length; or when the first value is 98, the indexes of the port 0 and the port 1 correspond to a first identifier (that is, FD-OCC2), and the first identifier indicates that FD-OCC lengths corresponding to the port 0 and the port 1 are 2-length.

For another example, using a port 2 as an example, in table 24-A1, when the first value is 5 and 96, the indexes of the M ports include an index of the port 2; and when the first value is 5, an FD-OCC length of the port 2 is 4-length; or when the first value is 96, the index of the port 2 corresponds to a first identifier (that is, FD-OCC2), and the first identifier indicates that an FD-OCC length corresponding to the port 2 is 2-length.

For another example, using a port 3 as an example, in table 24-A1, when the first value is 6 and 97, the indexes of the M ports include an index of the port 3; and when the first value is 6, an FD-OCC length of the port 3 is 4-length; or when the first value is 97, the index of the port 3 corresponds to a first identifier (that is, FD-OCC2), and the first identifier indicates that an FD-OCC length corresponding to the port 3 is 2-length.

For another example, using a port 2 and a port 3 as an example, in table 24-A1, when the first value is 8 and 99, the indexes of the M ports include indexes of the port 2 and the port 3; and when the first value is 8, FD-OCC lengths of the port 2 and the port 3 are 4-length; or when the first value is 99, the indexes of the port 2 and the port 3 correspond to a first identifier (that is, FD-OCC2), and the first identifier indicates that FD-OCC lengths corresponding to the port 2 and the port 3 are 2-length.

For another example, using a port 0, a port 1, a port 2, and a port 3 as an example, in table 24-A1, when the first value is 10 and 101, the indexes of the M ports include indexes of the port 0, the port 1, the port 2, and the port 3; and when the first value is 10, FD-OCC lengths of the port 0, the port 1, the port 2, and the port 3 are 4-length; or when the first value is 101, indexes of the port 0, the port 1, the port 2, and the port 3 correspond to a first identifier (that is, FD-OCC2), and the first identifier indicates that FD-OCC lengths corresponding to the port 0, the port 1, the port 2, and the port 3 are 2-length.

By analogy, FD-OCC lengths of ports corresponding to the row 100, the row 102 to the row 113, and the row 152 to the row 209 may also be dynamically switched.

In addition, it can be learned from table 24-A1 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal.

For example, it is assumed that the port 0 is allocated to another terminal. The M ports allocated by the network device to the current terminal device may include a port 1 and a port 13 corresponding to any one of the rows 114, 115, 116, and 210, and the port 1 and the port 13 belong to a same CDM group. However, 4-length frequency domain cover codes corresponding to the port 1 and the port 13 are orthogonal, but 2-length frequency domain cover codes corresponding to the port 1 and the port 13 are not orthogonal. Alternatively, the ports corresponding to any one of the rows 114, 115, 116, and 210 may be replaced with a port 0 and a port 12.

For another example, it is assumed that the port 0 is allocated to another terminal. The M ports allocated by the network device to the current terminal device may include a port 1, a port 7, and a port 13 that correspond to the row 211, and the port 1, the port 7, and the port 13 belong to a same CDM group. However, 4-length frequency domain cover codes corresponding to the port 1, the port 7, and the port 13 are orthogonal, but 2-length frequency domain cover codes corresponding to the port 1, the port 7, and the port 13 are not orthogonal. The corresponding ports in the row 211 may be replaced with a port 0, a port 6, and a port 12.

For another example, it is assumed that the port 0 is allocated to another terminal. The M ports allocated by the network device to the current terminal device may include a port 1, a port 7, a port 13, and a port 19 that correspond to the row 212, and the port 1, the port 7, the port 13, and the port 19 belong to a same CDM group. However, 4-length frequency domain cover codes corresponding to the port 1, the port 7, the port 13, and the port 19 are orthogonal, but 2-length frequency domain cover codes corresponding to the port 1, the port 7, the port 13, and the port 19 are not orthogonal. The corresponding ports in the row 212 may be replaced with a port 0, a port 6, a port 12, and a port 18.

In addition, it can be learned from table 24-A1 that, when the first value is the value 1, FD-OCC lengths of the M ports associated with the first value may be different, that is, ports in a same row in table 24-A1 may correspond to different FD-OCC lengths.

For example, when the first value is any one of the rows 117, 118, and 119, the M ports may include a port 0, a port 1, and a port 13 corresponding to any one of the rows 117, 118, and 119, an FD-OCC length of the port 0 is 2-length, an FD-OCC length of the port 1 is 4-length, and an FD-OCC length of the port 13 is 4-length. Alternatively, the ports corresponding to any one of the rows 117, 118, and 119 may be replaced with a port 0, a port 1, and a port 12, where an FD-OCC length of the port 0 is 4-length, an FD-OCC length of the port 1 is 2-length, and an FD-OCC length of the port 12 is 4-length.

For another example, when the first value is any one of the rows 120, 121, and 122, the M ports may include a port 0 and a port 1 corresponding to any one of the rows 120, 121, and 122, an FD-OCC length of the port 0 is 2-length, and an FD-OCC length of the port 1 is 4-length. Alternatively, the ports corresponding to any one of the rows 120, 121, and 122 are still the port 0 and the port 1, but an FD-OCC length of the port 0 is 4-length, and an FD-OCC length of the port 1 is 2-length.

For another example, when the first value is the row 213 or 218, the M ports may include a port 0 and a port 1 that correspond to the row 213 or 218, an FD-OCC length of the port 0 is 2-length, and an FD-OCC length of the port 1 is 4-length. The corresponding ports in the row 213 or 218 may be replaced with a port 0 and a port 7, where an FD-OCC length of the port 0 is 2-length, and an FD-OCC length of the port 7 is 4-length. Alternatively, the corresponding ports in the row 213 or 218 may be replaced with a port 0 and a port 19, where an FD-OCC length of the port 0 is 2-length, and an FD-OCC length of the port 19 is 4-length. Alternatively, the corresponding ports in the row 213 or 218 may be replaced with a port 0 and a port 13, where an FD-OCC length of the port 0 is 2-length, and an FD-OCC length of the port 13 is 4-length. Alternatively, the corresponding ports in the row 213 or 218 are still the port 0 and the port 1, but an FD-OCC length of the port 0 is 4-length, and an FD-OCC length of the port 1 is 2-length. Alternatively, the corresponding ports in the row 213 or 218 may be replaced with a port 1 and a port 6, where an FD-OCC length of the port 1 is 2-length, and an FD-OCC length of the port 6 is 4-length. Alternatively, the corresponding ports in the row 213 or 218 may be replaced with a port 1 and a port 18, where an FD-OCC length of the port 1 is 2-length, and an FD-OCC length of the port 18 is 4-length. Alternatively, the corresponding ports in the row 213 or 218 may be replaced with a port 1 and a port 12, where an FD-OCC length of the port 1 is 2-length, and an FD-OCC length of the port 12 is 4-length.

For another example, when the first value is the row 214 or 219, the M ports may include a port 0, a port 1, and a port 13 that correspond to the row 214 or 219, an FD-OCC length of the port 0 is 2-length, and FD-OCC lengths of the port 1 and the port 13 are 4-length. The corresponding ports in the row 214 or 219 may be replaced with a port 0, a port 1, and a port 19, where an FD-OCC length of the port 0 is 2-length, and FD-OCC lengths of the port 1 and the port 19 are 4-length. Alternatively, the corresponding ports in the row 214 or 219 may be replaced with a port 0, a port 1, and a port 7, where an FD-OCC length of the port 0 is 2-length, and FD-OCC lengths of the port 1 and the port 7 are 4-length. Alternatively, the corresponding ports in the row 214 or 219 may be replaced with a port 0, a port 13, and a port 19, where an FD-OCC length of the port 0 is 2-length, and FD-OCC lengths of the port 13 and the port 19 are 4-length. Alternatively, the corresponding ports in the row 214 or 219 may be replaced with a port 0, a port 7, and a port 19, where an FD-OCC length of the port 0 is 2-length, and FD-OCC lengths of the port 7 and the port 19 are 4-length. Alternatively, the corresponding ports in the row 214 or 219 may be replaced with a port 1, a port 6, and a port 12, where an FD-OCC length of the port 1 is 2-length, and FD-OCC lengths of the port 6 and the port 12 are 4-length. Alternatively, the corresponding ports in the row 214 or 219 may be replaced with a port 1, a port 12, and a port 18, where an FD-OCC length of the port 1 is 2-length, and FD-OCC lengths of the port 12 and the port 18 are 4-length. Alternatively, the corresponding ports in the row 214 or 219 may be replaced with a port 1, a port 6, and a port 18, where an FD-OCC length of the port 1 is 2-length, and FD-OCC lengths of the port 6 and the port 18 are 4-length.

For another example, when the first value is the row 215 or 220, the M ports may include a port 0, a port 1, a port 7, and a port 13 that correspond to the row 215 or 220, an FD-OCC length of the port 0 is 2-length, and FD-OCC lengths of the port 1, the port 7, and the port 13 are 4-length. The corresponding ports in the row 215 or 220 may be replaced with a port 0, a port 1, a port 7, and a port 19, where an FD-OCC length of the port 0 is 2-length, and FD-OCC lengths of the port 1, the port 7, and the port 19 are 4-length. Alternatively, the corresponding ports in the row 215 or 220 may be replaced with a port 0, a port 1, a port 7, and a port 19, where an FD-OCC length of the port 0 is 2-length, and FD-OCC lengths of the port 1, the port 7, and the port 19 are 4-length. Alternatively, the corresponding ports in the row 215 or 220 may be replaced with a port 0, a port 1, a port 13, and a port 19, where an FD-OCC length of the port 0 is 2-length, and FD-OCC lengths of the port 1, the port 13, and the port 19 are 4-length. Alternatively, the corresponding ports in the row 215 or 220 may be replaced with a port 0, a port 1, a port 6, and a port 12, where an FD-OCC length of the port 1 is 2-length, and FD-OCC lengths of the port 0, the port 6, and the port 12 are 4-length. Alternatively, the corresponding ports in the row 215 or 220 may be replaced with a port 0, a port 1, a port 12, and a port 18, where an FD-OCC length of the port 1 is 2-length, and FD-OCC lengths of the port 0, the port 12, and the port 18 are 4-length. Alternatively, the corresponding ports in the row 215 or 220 may be replaced with a port 0, a port 1, a port 6, and a port 18, where an FD-OCC length of the port 1 is 2-length, and FD-OCC lengths of the port 0, the port 6, and the port 18 are 4-length.

For another example, when the first value is the row 216 or 221, the M ports may include a port 0, a port 6, and a port 1 that correspond to the row 216 or 221, FD-OCC lengths of the port 0 and the port 6 are 2-length, and an FD-OCC length of the port 1 is 4-length. The corresponding ports in the row 216 or 221 may be replaced with a port 0, a port 6, and a port 7, where FD-OCC lengths of the port 0 and the port 7 are 2-length, and an FD-OCC length of the port 7 is 4-length. Alternatively, the corresponding ports in the row 216 or 221 may be replaced with a port 0, a port 6, and a port 13, where FD-OCC lengths of the port 0 and the port 6 are 2-length, and an FD-OCC length of the port 13 is 4-length. Alternatively, the corresponding ports in the row 216 or 221 may be replaced with a port 0, a port 6, and a port 19, where FD-OCC lengths of the port 0 and the port 6 are 2-length, and an FD-OCC length of the port 19 is 4-length. Alternatively, the corresponding ports in the row 216 or 221 may be replaced with a port 1, a port 7, and a port 6, where FD-OCC lengths of the port 1 and the port 7 are 2-length, and an FD-OCC length of the port 6 is 4-length. Alternatively, the corresponding ports in the row 216 or 221 may be replaced with a port 1, a port 7, and a port 12, where FD-OCC lengths of the port 1 and the port 7 are 2-length, and an FD-OCC length of the port 12 is 4-length. Alternatively, the corresponding ports in the row 216 or 221 may be replaced with a port 0, a port 1, and a port 7, where FD-OCC lengths of the port 1 and the port 7 are 2-length, and an FD-OCC length of the port 0 is 4-length.

For another example, when the first value is the row 217 or 222, the M ports may include a port 0, a port 6, a port 13, and a port 19 that correspond to the row 217 or 222, FD-OCC lengths of the port 0 and the port 6 are 2-length, and FD-OCC lengths of the port 13 and the port 19 are 4-length. The corresponding ports in the row 217 or 222 may be replaced with a port 0, a port 6, a port 7, and a port 19, where FD-OCC lengths of the port 0 and the port 6 are 2-length, and FD-OCC lengths of the port 7 and the port 19 are 4-length. Alternatively, the corresponding ports in the row 217 or 222 may be replaced with a port 0, a port 6, a port 7, and a port 13, where FD-OCC lengths of the port 0 and the port 6 are 2-length, and FD-OCC lengths of the port 7 and the port 13 are 4-length. Alternatively, the corresponding ports in the row 217 or 222 may be replaced with a port 1, a port 7, a port 12, and a port 18, where FD-OCC lengths of the port 1 and the port 7 are 2-length, and FD-OCC lengths of the port 18 and the port 12 are 4-length. Alternatively, the corresponding ports in the row 217 or 222 may be replaced with a port 1, a port 7, a port 6, and a port 18, where FD-OCC lengths of the port 1 and the port 7 are 2-length, and FD-OCC lengths of the port 18 and the port 6 are 4-length. Alternatively, the corresponding ports in the row 217 or 222 may be replaced with a port 0, a port 1, a port 6, and a port 7, where FD-OCC lengths of the port 1 and the port 7 are 2-length, and FD-OCC lengths of the port 0 and the port 6 are 4-length.

In addition, it can be learned from table 24-A1 that an R18 port of type2 supports a maximum of 24-stream transmission, that is, table 24-A1 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 58 to 217 in table 24-A1.

For example, the network device may indicate a port 0, a port 1, a port 2, and a port 3 in the row 113 to a terminal device 1, indicate a port 7, a port 12, and a port 13 in the row 141 to a terminal device 2, indicate a port 9, a port 18, and a port 19 in the row 147 or 148 to a terminal device 3, indicate a port 14, a port 15, a port 20, and a port 21 in the row 145 to a terminal device 4, indicate a port 16, a port 17, a port 22, and a port 23 in the row 146 to a terminal device 5, indicate a port 4 and a port 5 in the row 171 to a terminal device 6, indicate a port 6 in the row 182 to a terminal device 7, indicate a port 10 and a port 11 in the row 193 to a terminal device 8, and indicate a port 8 in the row 184 to a terminal device 9. To be specific, the network device indicates four streams to the terminal device 1, indicates three streams to the terminal device 2, indicates three streams to the terminal device 3, indicates four streams to the terminal device 4, indicates four streams to the terminal device 5, indicates two streams to the terminal device 6, indicates one stream to the terminal device 7, indicates two streams to the terminal device 8, and indicates one stream to the terminal device 9, to form 24-stream transmission pairing. The corresponding ports in the row 147 or 148 may be replaced with a port 7, a port 20, and a port 21.

For another example, the first port index group indicated by the network device to the terminal device 1 includes indexes of the port 18, the port 19, and the port 20, the second port index group indicated by the network device to the terminal device 2 includes indexes of the port 21, the port 22, and the port 23, the third port index group indicated by the network device to the terminal device 3 includes indexes of the port 7, the port 12, and the port 13, the fourth port index group indicated by the network device to the terminal device 4 includes indexes of the port 14, the port 15, and the port 20, the fifth port index group indicated by the network device to the terminal device 5 includes indexes of the port 11, the port 16, and the port 17, the sixth port index group indicated by the network device to the terminal device 6 includes indexes of the port 2, the port 3, and the port 8, the seventh port index group indicated by the network device to the terminal device 7 includes indexes of the port 0, the port 1, and the port 6, and the eighth port index group indicated by the network device to the terminal device 8 includes indexes of the port 4, the port 5, and the port 10. In this way, 24-stream transmission pairing can be formed.

In addition, it can be learned from table 24-A1 that table 24-A1 includes any port combination for 12-stream transmission supported by an R15 port, and a number of ports corresponding to each port combination (that is, each row in table 24-A1) is less than or equal to 4, that is, rows 0 to 57 in table 24-A1. For example, the network device may indicate a port 0 and a port 1 in the row 2 to a terminal device 1, and indicate a port 2 and a port 3 in the row 8 to a terminal device 2, so that the terminal device 1 and the terminal device 2 are simultaneously scheduled in a same slot (that is, scheduled on a same time-frequency resource). For another example, the network device may indicate a port 0 in the row 5 to a terminal device 1, and indicate a port 3 in the row 6 to a terminal device 2, so that the terminal device 1 and the terminal device 2 are simultaneously scheduled in a same slot (that is, scheduled on a same time-frequency resource). An existing protocol specifies that when the network device indicates a port 0, a port 1, and a port 2 in the row 9, or indicates a port 0, a port 1, a port 2, and a port 3 in the row 10, or indicates a port 0, a port 1, and a port 2 in the row 11, or indicates a port 0 and a port 2 in the row 23 to a terminal device 1, ports corresponding to the row 9, the row 10, the row 11, and the row 23 are used only for single-UE transmission. Therefore, only the terminal device 1 is scheduled, that is, no other terminal is scheduled on a same time-frequency resource as the terminal device 1.

Optionally, table 24-A1 may not include a value set corresponding to the R15 port (a row corresponding to a port combination of R15 ports). That is, rows 0 to 57 in table 24-A1 may be deleted.

**Table 24-A1: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0, 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0, 1 | 2 | | | | |
| 37 | 3 | 2, 3 | 2 | | | | |
| 38 | 3 | 4, 5 | 2 | | | | |
| 39 | 3 | 6, 7 | 2 | | | | |
| 40 | 3 | 8, 9 | 2 | | | | |
| 41 | 3 | 10, 11 | 2 | | | | |
| 42 | 3 | 0, 1, 6 | 2 | | | | |
| 43 | 3 | 2,3,8 | 2 | | | | |
| 44 | 3 | 4, 5, 10 | 2 | | | | |
| 45 | 3 | 0, 1, 6, 7 | 2 | | | | |
| 46 | 3 | 2, 3, 8, 9 | 2 | | | | |
| 47 | 3 | 4, 5, 10, 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0, 1 | 2 | | | | |
| 53 | 1 | 6, 7 | 2 | | | | |
| 54 | 2 | 0, 1 | 2 | | | | |
| 55 | 2 | 2, 3 | 2 | | | | |
| 56 | 2 | 6, 7 | 2 | | | | |
| 57 | 2 | 8, 9 | 2 | | | | |
| 58 | 1 | 12 | 1 | | | | |
| 59 | 1 | 13 | 1 | | | | |
| 60 | 1 | 12, 13 | 1 | | | | |
| 61 | 1 | 0, 1, 12 | 1 | | | | |
| 62 | 1 | 0, 1, 12, 13 | 1 | | | | |
| 63 | 2 | 12 | 1 | | | | |
| 64 | 2 | 13 | 1 | | | | |
| 65 | 2 | 12, 13 | 1 | | | | |
| 66 | 2 | 0, 1, 12 | 1 | | | | |
| 67 | 2 | 0, 1, 12, 13 | 1 | | | | |
| 68 | 2 | 14 | 1 | | | | |
| 69 | 2 | 15 | 1 | | | | |
| 70 | 2 | 14, 15 | 1 | | | | |
| 71 | 2 | 2, 3, 14 | 1 | | | | |
| 72 | 2 | 2, 3, 14, 15 | 1 | | | | |
| 73 | 3 | 12 | 1 | | | | |
| 74 | 3 | 13 | 1 | | | | |
| 75 | 3 | 12, 13 | 1 | | | | |
| 76 | 3 | 0, 1, 12 | 1 | | | | |
| 77 | 3 | 0, 1, 12, 13 | 1 | | | | |
| 78 | 3 | 14 | 1 | | | | |
| 79 | 3 | 15 | 1 | | | | |
| 80 | 3 | 14, 15 | 1 | | | | |
| 81 | 3 | 2, 3, 14 | 1 | | | | |
| 82 | 3 | 2, 3, 14, 15 | 1 | | | | |
| 83 | 3 | 16 | 1 | | | | |
| 84 | 3 | 17 | 1 | | | | |
| 85 | 3 | 16, 17 | 1 | | | | |
| 86 | 3 | 4, 5, 16 | 1 | | | | |
| 87 | 3 | 4, 5, 16, 17 | 1 | | | | |
| 88 | 3 | 13, 15, 17 | 1 | | | | |
| 89 | 2 | 13, 15 | 1 | | | | |
| 90 | 3 | 13, 15 | 1 | | | | |
| 91 | 1 | 0(FD-OCC2) | 1 | | | | |
| 92 | 1 | 1(FD-OCC2) | 1 | | | | |
| 93 | 1 | 0(FD-OCC2), 1(FD-OCC2) | 1 | | | | |
| 94 | 2 | 0(FD-OCC2) | 1 | | | | |
| 95 | 2 | 1(FD-OCC2) | 1 | | | | |
| 96 | 2 | 2(FD-OCC2) | 1 | | | | |
| 97 | 2 | 3(FD-OCC2) | 1 | | | | |
| 98 | 2 | 0(FD-OCC2), 1(FD-OCC2) | 1 | | | | |
| 99 | 2 | 2(FD-OCC2), 3(FD-OCC2) | 1 | | | | |
| 100 | 2 | 0-2(FD-OCC2) | 1 | | | | |
| 101 | 2 | 0-3(FD-OCC2) | 1 | | | | |
| 102 | 3 | 0(FD-OCC2) | 1 | | | | |
| 103 | 3 | 1(FD-OCC2) | 1 | | | | |
| 104 | 3 | 2(FD-OCC2) | 1 | | | | |
| 105 | 3 | 3(FD-OCC2) | 1 | | | | |
| 106 | 3 | 4(FD-OCC2) | 1 | | | | |
| 107 | 3 | 5(FD-OCC2) | 1 | | | | |
| 108 | 3 | 0(FD-OCC2), 1(FD-OCC2) | 1 | | | | |
| 109 | 3 | 2(FD-OCC2), 3(FD-OCC2) | 1 | | | | |
| 110 | 3 | 4(FD-OCC2), 5(FD-OCC2) | 1 | | | | |
| 111 | 3 | 0-2(FD-OCC2) | 1 | | | | |
| 112 | 3 | 3-5(FD-OCC2) | 1 | | | | |
| 113 | 3 | 0-3(FD-OCC2) | 1 | | | | |
| 114 | 1 | 1, 13 | 1 | | | | |
| 115 | 2 | 1, 13 | 1 | | | | |
| 116 | 3 | 1, 13 | 1 | | | | |
| 117 | 1 | 0(FD-OCC2), 1, 13 | 1 | | | | |
| 118 | 2 | 0(FD-OCC2), 1, 13 | 1 | | | | |
| 119 | 3 | 0(FD-OCC2), 1, 13 | 1 | | | | |
| 120 | 1 | 0(FD-OCC2), 1 | 1 | | | | |
| 121 | 2 | 0(FD-OCC2), 1 | 1 | | | | |
| 122 | 3 | 0(FD-OCC2), 1 | 1 | | | | |
| 123 | 3 | 12 | 2 | | | | |
| 124 | 3 | 13 | 2 | | | | |
| 125 | 3 | 14 | 2 | | | | |
| 126 | 3 | 15 | 2 | | | | |
| 127 | 3 | 16 | 2 | | | | |
| 128 | 3 | 17 | 2 | | | | |
| 129 | 3 | 18 | 2 | | | | |
| 130 | 3 | 19 | 2 | | | | |
| 131 | 3 | 20 | 2 | | | | |
| 132 | 3 | 21 | 2 | | | | |
| 133 | 3 | 22 | 2 | | | | |
| 134 | 3 | 23 | 2 | | | | |
| 135 | 3 | 12, 13 | 2 | | | | |
| 136 | 3 | 14, 15 | 2 | | | | |
| 137 | 3 | 16, 17 | 2 | | | | |
| 138 | 3 | 18, 19 | 2 | | | | |
| 139 | 3 | 20, 21 | 2 | | | | |
| 140 | 3 | 22, 23 | 2 | | | | |
| 141 | 3 | 7, 12, 13 | 2 | | | | |
| 142 | 3 | 9, 14, 15 | 2 | | | | |
| 143 | 3 | 11, 16, 17 | 2 | | | | |
| 144 | 3 | 12, 13, 18, 19 | 2 | | | | |
| 145 | 3 | 14, 15, 20, 21 | 2 | | | | |
| 146 | 3 | 16, 17, 22, 23 | 2 | | | | |
| 147 | 2 | 9, 18, 19 | 2 | | | | |
| 148 | 3 | 9, 18, 19 | 2 | | | | |
| 149 | 2 | 18, 19, 20 | 2 | | | | |
| 150 | 3 | 18, 19, 20 | 2 | | | | |
| 151 | 3 | 21, 22, 23 | 2 | | | | |
| 152 | 1 | 0(FD-OCC2) | 1 | | | | |
| 153 | 1 | 1(FD-OCC2) | 1 | | | | |
| 154 | 1 | 0(FD-OCC2), 1(FD-OCC2) | 1 | | | | |
| 155 | 2 | 0(FD-OCC2) | 1 | | | | |
| 156 | 2 | 1(FD-OCC2) | 1 | | | | |
| 157 | 2 | 2(FD-OCC2) | 1 | | | | |
| 158 | 2 | 3(FD-OCC2) | 1 | | | | |
| 159 | 2 | 0(FD-OCC2), 1(FD-OCC2) | 1 | | | | |
| 160 | 2 | 2(FD-OCC2), 3(FD-OCC2) | 1 | | | | |
| 161 | 2 | 0-2(FD-OCC2) | 1 | | | | |
| 162 | 2 | 0-3(FD-OCC2) | 1 | | | | |
| 163 | 3 | 0(FD-OCC2) | 1 | | | | |
| 164 | 3 | 1(FD-OCC2) | 1 | | | | |
| 165 | 3 | 2(FD-OCC2) | 1 | | | | |
| 166 | 3 | 3(FD-OCC2) | 1 | | | | |
| 167 | 3 | 4(FD-OCC2) | 1 | | | | |
| 168 | 3 | 5(FD-OCC2) | 1 | | | | |
| 169 | 3 | 0(FD-OCC2), 1(FD-OCC2) | 1 | | | | |
| 170 | 3 | 2(FD-OCC2), 3(FD-OCC2) | 1 | | | | |
| 171 | 3 | 4(FD-OCC2), 5(FD-OCC2) | 1 | | | | |
| 172 | 3 | 0-2(FD-OCC2) | 1 | | | | |
| 173 | 3 | 3-5(FD-OCC2) | 1 | | | | |
| 174 | 3 | 0-3(FD-OCC2) | 1 | | | | |
| 175 | 2 | 0, 2(FD-OCC2) | 1 | | | | |
| 176 | 3 | 0(FD-OCC2) | 2 | | | | |
| 177 | 3 | 1(FD-OCC2) | 2 | | | | |
| 178 | 3 | 2(FD-OCC2) | 2 | | | | |
| 179 | 3 | 3(FD-OCC2) | 2 | | | | |
| 180 | 3 | 4(FD-OCC2) | 2 | | | | |
| 181 | 3 | 5(FD-OCC2) | 2 | | | | |
| 182 | 3 | 6(FD-OCC2) | 2 | | | | |
| 183 | 3 | 7(FD-OCC2) | 2 | | | | |
| 184 | 3 | 8(FD-OCC2) | 2 | | | | |
| 185 | 3 | 9(FD-OCC2) | 2 | | | | |
| 186 | 3 | 10(FD-OCC2) | 2 | | | | |
| 187 | 3 | 11 (FD-OCC2) | 2 | | | | |
| 188 | 3 | 0(FD-OCC2), 1(FD-OCC2) | 2 | | | | |
| 189 | 3 | 2(FD-OCC2), 3(FD-OCC2) | 2 | | | | |
| 190 | 3 | 4(FD-OCC2), 5(FD-OCC2) | 2 | | | | |
| 191 | 3 | 6(FD-OCC2), 7(FD-OCC2) | 2 | | | | |
| 192 | 3 | 8(FD-OCC2), 9(FD-OCC2) | 2 | | | | |
| 193 | 3 | 10(FD-OCC2), 11 (FD-OCC2) | 2 | | | | |
| 194 | 3 | 0(FD-OCC2), 1(FD-OCC2), 6(FD-OCC2) | 2 | | | | |
| 195 | 3 | 2(FD-OCC2), 3(FD-OCC2), 8(FD-OCC2) | 2 | | | | |
| 196 | 3 | 4(FD-OCC2), 5(FD-OCC2), 10(FD-OCC2) | 2 | | | | |
| 197 | 3 | 0(FD-OCC2), 1(FD-OCC2), 6(FD-OCC2), 7(FD-OCC2) | 2 | | | | |
| 198 | 3 | 2(FD-OCC2), 3(FD-OCC2), 8(FD-OCC2), 9(FD-OCC2) | 2 | | | | |
| 199 | 3 | 4(FD-OCC2), 5(FD-OCC2), 10(FD-OCC2), 11 (FD-OCC2) | 2 | | | | |
| 200 | 1 | 0(FD-OCC2) | 2 | | | | |
| 201 | 1 | 1(FD-OCC2) | 2 | | | | |
| 202 | 1 | 6(FD-OCC2) | 2 | | | | |
| 203 | 1 | 7(FD-OCC2) | 2 | | | | |
| 204 | 1 | 0(FD-OCC2), 1(FD-OCC2) | 2 | | | | |
| 205 | 1 | 6(FD-OCC2), 7(FD-OCC2) | 2 | | | | |
| 206 | 2 | 0(FD-OCC2), 1(FD-OCC2) | 2 | | | | |
| 207 | 2 | 2(FD-OCC2), 3(FD-OCC2) | 2 | | | | |
| 208 | 2 | 6(FD-OCC2), 7(FD-OCC2) | 2 | | | | |
| 209 | 2 | 8(FD-OCC2), 9(FD-OCC2) | 2 | | | | |
| 210 | 3 | 1, 13 | 2 | | | | |
| 211 | 3 | 1, 7, 13 | 2 | | | | |
| 212 | 3 | 1, 7, 13, 19 | 2 | | | | |
| 213 | 3 | 0(FD-OCC2), 1 | 2 | | | | |
| 214 | 3 | 0(FD-OCC2), 1, 13 | 2 | | | | |
| 215 | 3 | 0(FD-OCC2), 1, 7, 13 | 2 | | | | |
| 216 | 3 | 0(FD-OCC2), 6(FD-OCC2), 1 | 2 | | | | |
| 217 | 3 | 0(FD-OCC2), 6(FD-OCC2), 13, 19 | 2 | | | | |
| 218 | 3 | 0(FD-OCC2), 1 | 2 | | | | |
| 219 | 3 | 0(FD-OCC2), 1, 13 | 2 | | | | |
| 220 | 3 | 0(FD-OCC2), 1, 7, 13 | 2 | | | | |
| 221 | 3 | 0(FD-OCC2), 6(FD-OCC2), 1 | 2 | | | | |
| 222 | 3 | 0(FD-OCC2), 6(FD-OCC2), 13, 19 | 2 | | | | |
| 223~256 | Reserved | Reserved | Reserved | | | | |

Table 24-A2 occupies 8 bits. It can be learned from table 24-A1 that an FD-OCC length of a same port may be dynamically switched (for example, the network device may indicate, by using DCI signaling, the terminal device to perform switching). For a specific example, refer to related descriptions in table 24-A1.

In addition, it can be learned from table 24-A2 that a double-symbol R18 port of type2 supports a maximum of 24-stream transmission, that is, table 24-A1 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 57 to 200 in table 24-A1.

For example, the network device may indicate a port 0, a port 1, a port 2, and a port 3 in the row 113 to a terminal device 1, indicate a port 7, a port 12, and a port 13 in the row 131 to a terminal device 2, indicate a port 9, a port 18, and a port 19 in the row 137 or 138 to a terminal device 3, indicate a port 14, a port 15, a port 20, and a port 21 in the row 135 to a terminal device 4, indicate a port 16, a port 17, a port 22, and a port 23 in the row 136 to a terminal device 5, indicate a port 4 and a port 5 in the row 161 to a terminal device 6, indicate a port 6 in the row 172 to a terminal device 7, indicate a port 10 and a port 11 in the row 183 to a terminal device 8, and indicate a port 8 in the row 174 to a terminal device 9. To be specific, the network device indicates four streams to the terminal device 1, indicates three streams to the terminal device 2, indicates three streams to the terminal device 3, indicates four streams to the terminal device 4, indicates four streams to the terminal device 5, indicates two streams to the terminal device 6, indicates one stream to the terminal device 7, indicates two streams to the terminal device 8, and indicates one stream to the terminal device 9, to form 24-stream transmission pairing. The corresponding ports in the row 137 or 138 may be replaced with a port 7, a port 20, and a port 21.

In addition, it can be learned from table 24-A2 that table 24-A2 includes port combinations for 12-stream transmission supported by the type2 double-symbol R15 port, and all rows are used for MU.

**Table 24-A2: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 3 | 0 | 2 | | | | |
| 24 | 3 | 1 | 2 | | | | |
| 25 | 3 | 2 | 2 | | | | |
| 26 | 3 | 3 | 2 | | | | |
| 27 | 3 | 4 | 2 | | | | |
| 28 | 3 | 5 | 2 | | | | |
| 29 | 3 | 6 | 2 | | | | |
| 30 | 3 | 7 | 2 | | | | |
| 31 | 3 | 8 | 2 | | | | |
| 32 | 3 | 9 | 2 | | | | |
| 33 | 3 | 10 | 2 | | | | |
| 34 | 3 | 11 | 2 | | | | |
| 35 | 3 | 0, 1 | 2 | | | | |
| 36 | 3 | 2, 3 | 2 | | | | |
| 37 | 3 | 4, 5 | 2 | | | | |
| 38 | 3 | 6, 7 | 2 | | | | |
| 39 | 3 | 8, 9 | 2 | | | | |
| 40 | 3 | 10, 11 | 2 | | | | |
| 41 | 3 | 0, 1, 6 | 2 | | | | |
| 42 | 3 | 2, 3, 8 | 2 | | | | |
| 43 | 3 | 4, 5, 10 | 2 | | | | |
| 44 | 3 | 0, 1, 6, 7 | 2 | | | | |
| 45 | 3 | 2,3,8,9 | 2 | | | | |
| 46 | 3 | 4, 5, 10, 11 | 2 | | | | |
| 47 | 1 | 0 | 2 | | | | |
| 48 | 1 | 1 | 2 | | | | |
| 49 | 1 | 6 | 2 | | | | |
| 50 | 1 | 7 | 2 | | | | |
| 51 | 1 | 0, 1 | 2 | | | | |
| 52 | 1 | 6, 7 | 2 | | | | |
| 53 | 2 | 0, 1 | 2 | | | | |
| 54 | 2 | 2, 3 | 2 | | | | |
| 55 | 2 | 6, 7 | 2 | | | | |
| 56 | 2 | 8, 9 | 2 | | | | |
| 57 | 1 | 12 | 1 | | | | |
| 58 | 1 | 13 | 1 | | | | |
| 59 | 1 | 12, 13 | 1 | | | | |
| 60 | 1 | 0, 1, 12 | 1 | | | | |
| 61 | 1 | 0, 1, 12, 13 | 1 | | | | |
| 62 | 2 | 12 | 1 | | | | |
| 63 | 2 | 13 | 1 | | | | |
| 64 | 2 | 12, 13 | 1 | | | | |
| 65 | 2 | 0, 1, 12 | 1 | | | | |
| 66 | 2 | 0, 1, 12, 13 | 1 | | | | |
| 67 | 2 | 14 | 1 | | | | |
| 68 | 2 | 15 | 1 | | | | |
| 69 | 2 | 14, 15 | 1 | | | | |
| 70 | 2 | 2, 3, 14 | 1 | | | | |
| 71 | 2 | 2, 3, 14, 15 | 1 | | | | |
| 72 | 3 | 12 | 1 | | | | |
| 73 | 3 | 13 | 1 | | | | |
| 74 | 3 | 12, 13 | 1 | | | | |
| 75 | 3 | 0, 1, 12 | 1 | | | | |
| 76 | 3 | 0, 1, 12, 13 | 1 | | | | |
| 77 | 3 | 14 | 1 | | | | |
| 78 | 3 | 15 | 1 | | | | |
| 79 | 3 | 14, 15 | 1 | | | | |
| 80 | 3 | 2, 3, 14 | 1 | | | | |
| 81 | 3 | 2, 3, 14, 15 | 1 | | | | |
| 82 | 3 | 16 | 1 | | | | |
| 83 | 3 | 17 | 1 | | | | |
| 84 | 3 | 16, 17 | 1 | | | | |
| 85 | 3 | 4, 5, 16 | 1 | | | | |
| 86 | 3 | 4, 5, 16, 17 | 1 | | | | |
| 87 | 3 | 13, 15, 17 | 1 | | | | |
| 88 | 2 | 13, 15 | 1 | | | | |
| 89 | 3 | 13, 15 | 1 | | | | |
| 90 | 1 | 0(FD-OCC2) | 1 | | | | |
| 91 | 1 | 1(FD-OCC2) | 1 | | | | |
| 92 | 1 | 0(FD-OCC2), 1(FD-OCC2) | 1 | | | | |
| 93 | 2 | 0(FD-OCC2) | 1 | | | | |
| 94 | 2 | 1(FD-OCC2) | 1 | | | | |
| 95 | 2 | 2(FD-OCC2) | 1 | | | | |
| 96 | 2 | 3(FD-OCC2) | 1 | | | | |
| 97 | 2 | 0(FD-OCC2), 1(FD-OCC2) | 1 | | | | |
| 98 | 2 | 2(FD-OCC2), 3(FD-OCC2) | 1 | | | | |
| 99 | 2 | 0-2(FD-OCC2) | 1 | | | | |
| 100 | 2 | 0-3(FD-OCC2) | 1 | | | | |
| 101 | 3 | 0(FD-OCC2) | 1 | | | | |
| 102 | 3 | 1(FD-OCC2) | 1 | | | | |
| 103 | 3 | 2(FD-OCC2) | 1 | | | | |
| 104 | 3 | 3(FD-OCC2) | 1 | | | | |
| 105 | 3 | 4(FD-OCC2) | 1 | | | | |
| 106 | 3 | 5(FD-OCC2) | 1 | | | | |
| 107 | 3 | 0(FD-OCC2), 1(FD-OCC2) | 1 | | | | |
| 108 | 3 | 2(FD-OCC2), 3(FD-OCC2) | 1 | | | | |
| 109 | 3 | 4(FD-OCC2), 5(FD-OCC2) | 1 | | | | |
| 110 | 3 | 0-2(FD-OCC2) | 1 | | | | |
| 111 | 3 | 3-5(FD-OCC2) | 1 | | | | |
| 112 | 3 | 0-3(FD-OCC2) | 1 | | | | |
| 113 | 3 | 12 | 2 | | | | |
| 114 | 3 | 13 | 2 | | | | |
| 115 | 3 | 14 | 2 | | | | |
| 116 | 3 | 15 | 2 | | | | |
| 117 | 3 | 16 | 2 | | | | |
| 118 | 3 | 17 | 2 | | | | |
| 119 | 3 | 18 | 2 | | | | |
| 120 | 3 | 19 | 2 | | | | |
| 121 | 3 | 20 | 2 | | | | |
| 122 | 3 | 21 | 2 | | | | |
| 123 | 3 | 22 | 2 | | | | |
| 124 | 3 | 23 | 2 | | | | |
| 125 | 3 | 12, 13 | 2 | | | | |
| 126 | 3 | 14, 15 | 2 | | | | |
| 127 | 3 | 16, 17 | 2 | | | | |
| 128 | 3 | 18, 19 | 2 | | | | |
| 129 | 3 | 20, 21 | 2 | | | | |
| 130 | 3 | 22, 23 | 2 | | | | |
| 131 | 3 | 7, 12, 13 | 2 | | | | |
| 132 | 3 | 9, 14, 15 | 2 | | | | |
| 133 | 3 | 11, 16, 17 | 2 | | | | |
| 134 | 3 | 12, 13, 18, 19 | 2 | | | | |
| 135 | 3 | 14, 15, 20, 21 | 2 | | | | |
| 136 | 3 | 16, 17, 22, 23 | 2 | | | | |
| 137 | 2 | 9, 18, 19 | 2 | | | | |
| 138 | 3 | 9, 18, 19 | 2 | | | | |
| 139 | 2 | 18, 19, 20 | 2 | | | | |
| 140 | 3 | 18, 19, 20 | 2 | | | | |
| 141 | 3 | 21, 22, 23 | 2 | | | | |
| 142 | 1 | 0(FD-OCC2) | 1 | | | | |
| 143 | 1 | 1(FD-OCC2) | 1 | | | | |
| 144 | 1 | 0(FD-OCC2), 1(FD-OCC2) | 1 | | | | |
| 145 | 2 | 0(FD-OCC2) | 1 | | | | |
| 146 | 2 | 1(FD-OCC2) | 1 | | | | |
| 147 | 2 | 2(FD-OCC2) | 1 | | | | |
| 148 | 2 | 3(FD-OCC2) | 1 | | | | |
| 149 | 2 | 0(FD-OCC2), 1(FD-OCC2) | 1 | | | | |
| 150 | 2 | 2(FD-OCC2), 3(FD-OCC2) | 1 | | | | |
| 151 | 2 | 0-2(FD-OCC2) | 1 | | | | |
| 152 | 2 | 0-3(FD-OCC2) | 1 | | | | |
| 153 | 3 | 0(FD-OCC2) | 1 | | | | |
| 154 | 3 | 1(FD-OCC2) | 1 | | | | |
| 155 | 3 | 2(FD-OCC2) | 1 | | | | |
| 156 | 3 | 3(FD-OCC2) | 1 | | | | |
| 157 | 3 | 4(FD-OCC2) | 1 | | | | |
| 158 | 3 | 5(FD-OCC2) | 1 | | | | |
| 159 | 3 | 0(FD-OCC2), 1(FD-OCC2) | 1 | | | | |
| 160 | 3 | 2(FD-OCC2), 3(FD-OCC2) | 1 | | | | |
| 161 | 3 | 4(FD-OCC2), 5(FD-OCC2) | 1 | | | | |
| 162 | 3 | 0-2(FD-OCC2) | 1 | | | | |
| 163 | 3 | 3-5(FD-OCC2) | 1 | | | | |
| 164 | 3 | 0-3(FD-OCC2) | 1 | | | | |
| 165 | 2 | 0, 2(FD-OCC2) | 1 | | | | |
| 166 | 3 | 0(FD-OCC2) | 2 | | | | |
| 167 | 3 | 1(FD-OCC2) | 2 | | | | |
| 168 | 3 | 2(FD-OCC2) | 2 | | | | |
| 169 | 3 | 3(FD-OCC2) | 2 | | | | |
| 170 | 3 | 4(FD-OCC2) | 2 | | | | |
| 171 | 3 | 5(FD-OCC2) | 2 | | | | |
| 172 | 3 | 6(FD-OCC2) | 2 | | | | |
| 173 | 3 | 7(FD-OCC2) | 2 | | | | |
| 174 | 3 | 8(FD-OCC2) | 2 | | | | |
| 175 | 3 | 9(FD-OCC2) | 2 | | | | |
| 176 | 3 | 10(FD-OCC2) | 2 | | | | |
| 177 | 3 | 11(FD-OCC2) | 2 | | | | |
| 178 | 3 | 0(FD-OCC2), 1(FD-OCC2) | 2 | | | | |
| 179 | 3 | 2(FD-OCC2), 3(FD-OCC2) | 2 | | | | |
| 180 | 3 | 4(FD-OCC2), 5(FD-OCC2) | 2 | | | | |
| 181 | 3 | 6(FD-OCC2), 7(FD-OCC2) | 2 | | | | |
| 182 | 3 | 8(FD-OCC2), 9(FD-OCC2) | 2 | | | | |
| 183 | 3 | 10(FD-OCC2), 11(FD-OCC2) | 2 | | | | |
| 184 | 3 | 0(FD-OCC2), 1(FD-OCC2), 6(FD-OCC2) | 2 | | | | |
| 185 | 3 | 2(FD-OCC2), 3(FD-OCC2), 8(FD-OCC2) | 2 | | | | |
| 186 | 3 | 4(FD-OCC2), 5(FD-OCC2), 10(FD-OCC2) | 2 | | | | |
| 187 | 3 | 0(FD-OCC2), 1(FD-OCC2), 6(FD-OCC2), 7(FD-OCC2) | 2 | | | | |
| 188 | 3 | 2(FD-OCC2), 3(FD-OCC2), 8(FD-OCC2), 9(FD-OCC2) | 2 | | | | |
| 189 | 3 | 4(FD-OCC2), 5(FD-OCC2), 10(FD-OCC2), 11(FD-OCC2) | 2 | | | | |
| 190 | 1 | 0(FD-OCC2) | 2 | | | | |
| 191 | 1 | 1(FD-OCC2) | 2 | | | | |
| 192 | 1 | 6(FD-OCC2) | 2 | | | | |
| 193 | 1 | 7(FD-OCC2) | 2 | | | | |
| 194 | 1 | 0(FD-OCC2), 1(FD-OCC2) | 2 | | | | |
| 195 | 1 | 6(FD-OCC2), 7(FD-OCC2) | 2 | | | | |
| 196 | 2 | 0(FD-OCC2), 1(FD-OCC2) | 2 | | | | |
| 197 | 2 | 2(FD-OCC2), 3(FD-OCC2) | 2 | | | | |
| 198 | 2 | 6(FD-OCC2), 7(FD-OCC2) | 2 | | | | |
| 199 | 2 | 8(FD-OCC2), 9(FD-OCC2) | 2 | | | | |
| 200~256 | Reserved | Reserved | Reserved | | | | |

A difference between table 24-A3 and table 24-2 lies in that an FD-OCC length of a same port in table 24-A3 can be dynamically switched, and corresponding examples are fewer than those in table 24-A2.

**Table 24-A3: Type2-E or Type2-R18, maxlength=2**

| One codeword (One Codeword): Codeword 0 enabled (Codeword 0 enabled), Codeword 1 disabled (Codeword 1 disabled) | | | | Two codewords (Two Codewords): Codeword 0 enabled (Codeword 0 enabled), Codeword 1 disabled (Codeword 1 disabled) | | | |
|---|---|---|---|---|---|---|---|
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 3 | 0 | 2 | | | | |
| 24 | 3 | 1 | 2 | | | | |
| 25 | 3 | 2 | 2 | | | | |
| 26 | 3 | 3 | 2 | | | | |
| 27 | 3 | 4 | 2 | | | | |
| 28 | 3 | 5 | 2 | | | | |
| 29 | 3 | 6 | 2 | | | | |
| 30 | 3 | 7 | 2 | | | | |
| 31 | 3 | 8 | 2 | | | | |
| 32 | 3 | 9 | 2 | | | | |
| 33 | 3 | 10 | 2 | | | | |
| 34 | 3 | 11 | 2 | | | | |
| 35 | 3 | 0, 1 | 2 | | | | |
| 36 | 3 | 2, 3 | 2 | | | | |
| 37 | 3 | 4, 5 | 2 | | | | |
| 38 | 3 | 6, 7 | 2 | | | | |
| 39 | 3 | 8, 9 | 2 | | | | |
| 40 | 3 | 10, 11 | 2 | | | | |
| 41 | 3 | 0, 1, 6 | 2 | | | | |
| 42 | 3 | 2, 3, 8 | 2 | | | | |
| 43 | 3 | 4, 5, 10 | 2 | | | | |
| 44 | 3 | 0, 1, 6, 7 | 2 | | | | |
| 45 | 3 | 2, 3, 8, 9 | 2 | | | | |
| 46 | 3 | 4, 5, 10, 11 | 2 | | | | |
| 47 | 1 | 0 | 2 | | | | |
| 48 | 1 | 1 | 2 | | | | |
| 49 | 1 | 6 | 2 | | | | |
| 50 | 1 | 7 | 2 | | | | |
| 51 | 1 | 0, 1 | 2 | | | | |
| 52 | 1 | 6, 7 | 2 | | | | |
| 53 | 2 | 0, 1 | 2 | | | | |
| 54 | 2 | 2, 3 | 2 | | | | |
| 55 | 2 | 6, 7 | 2 | | | | |
| 56 | 2 | 8, 9 | 2 | | | | |
| 57 | 1 | 12 | 1 | | | | |
| 58 | 1 | 13 | 1 | | | | |
| 59 | 1 | 12, 13 | 1 | | | | |
| 60 | 1 | 0, 1, 12 | 1 | | | | |
| 61 | 1 | 0, 1, 12, 13 | 1 | | | | |
| 62 | 2 | 12 | 1 | | | | |
| 63 | 2 | 13 | 1 | | | | |
| 64 | 2 | 12, 13 | 1 | | | | |
| 65 | 2 | 0, 1, 12 | 1 | | | | |
| 66 | 2 | 0, 1, 12, 13 | 1 | | | | |
| 67 | 2 | 14 | 1 | | | | |
| 68 | 2 | 15 | 1 | | | | |
| 69 | 2 | 14, 15 | 1 | | | | |
| 70 | 2 | 2, 3, 14 | 1 | | | | |
| 71 | 2 | 2, 3, 14, 15 | 1 | | | | |
| 72 | 3 | 12 | 1 | | | | |
| 73 | 3 | 13 | 1 | | | | |
| 74 | 3 | 12, 13 | 1 | | | | |
| 75 | 3 | 0, 1, 12 | 1 | | | | |
| 76 | 3 | 0, 1, 12, 13 | 1 | | | | |
| 77 | 3 | 14 | 1 | | | | |
| 78 | 3 | 15 | 1 | | | | |
| 79 | 3 | 14, 15 | 1 | | | | |
| 80 | 3 | 2, 3, 14 | 1 | | | | |
| 81 | 3 | 2, 3, 14, 15 | 1 | | | | |
| 82 | 3 | 16 | 1 | | | | |
| 83 | 3 | 17 | 1 | | | | |
| 84 | 3 | 16, 17 | 1 | | | | |
| 85 | 3 | 4, 5, 16 | 1 | | | | |
| 86 | 3 | 4, 5, 16, 17 | 1 | | | | |
| 87 | 3 | 13, 15, 17 | 1 | | | | |
| 88 | 2 | 13, 15 | 1 | | | | |
| 89 | 3 | 13, 15 | 1 | | | | |
| 90 | 3 | 12 | 2 | | | | |
| 91 | 3 | 13 | 2 | | | | |
| 92 | 3 | 14 | 2 | | | | |
| 93 | 3 | 15 | 2 | | | | |
| 94 | 3 | 16 | 2 | | | | |
| 95 | 3 | 17 | 2 | | | | |
| 96 | 3 | 18 | 2 | | | | |
| 97 | 3 | 19 | 2 | | | | |
| 98 | 3 | 20 | 2 | | | | |
| 99 | 3 | 21 | 2 | | | | |
| 100 | 3 | 22 | 2 | | | | |
| 101 | 3 | 23 | 2 | | | | |
| 102 | 3 | 12, 13 | 2 | | | | |
| 103 | 3 | 14, 15 | 2 | | | | |
| 104 | 3 | 16, 17 | 2 | | | | |
| 105 | 3 | 18, 19 | 2 | | | | |
| 106 | 3 | 20, 21 | 2 | | | | |
| 107 | 3 | 22, 23 | 2 | | | | |
| 108 | 3 | 7, 12, 13 | 2 | | | | |
| 109 | 3 | 9, 14, 15 | 2 | | | | |
| 110 | 3 | 11, 16, 17 | 2 | | | | |
| 111 | 3 | 12, 13, 18, 19 | 2 | | | | |
| 112 | 3 | 14, 15, 20, 21 | 2 | | | | |
| 113 | 3 | 16, 17, 22, 23 | 2 | | | | |
| 114 | 2 | 9, 18, 19 | 2 | | | | |
| 115 | 3 | 9, 18, 19 | 2 | | | | |
| 116 | 2 | 18, 19, 20 | 2 | | | | |
| 117 | 3 | 18, 19, 20 | 2 | | | | |
| 118 | 3 | 21, 22, 23 | 2 | | | | |
| 119 | 1 | 0(FD-OCC2) | 1 | | | | |
| 120 | 1 | 1(FD-OCC2) | 1 | | | | |
| 121 | 1 | 0(FD-OCC2), 1(FD-OCC2) | 1 | | | | |
| 122 | 2 | 0(FD-OCC2) | 1 | | | | |
| 123 | 2 | 1(FD-OCC2) | 1 | | | | |
| 124 | 2 | 2(FD-OCC2) | 1 | | | | |
| 125 | 2 | 3(FD-OCC2) | 1 | | | | |
| 126 | 2 | 0(FD-OCC2), 1(FD-OCC2) | 1 | | | | |
| 127 | 2 | 2(FD-OCC2), 3(FD-OCC2) | 1 | | | | |
| 128 | 2 | 0-2(FD-OCC2) | 1 | | | | |
| 129 | 2 | 0-3(FD-OCC2) | 1 | | | | |
| 130 | 1 | 0(FD-OCC2) | 2 | | | | |
| 131 | 1 | 1(FD-OCC2) | 2 | | | | |
| 132 | 1 | 6(FD-OCC2) | 2 | | | | |
| 133 | 1 | 7(FD-OCC2) | 2 | | | | |
| 134 | 1 | 0(FD-OCC2), 1(FD-OCC2) | 2 | | | | |
| 135 | 1 | 6(FD-OCC2), 7(FD-OCC2) | 2 | | | | |
| 136 | 2 | 0(FD-OCC2), 1(FD-OCC2) | 2 | | | | |
| 137 | 2 | 6(FD-OCC2), 7(FD-OCC2) | 2 | | | | |
| 138 | 2 | 8(FD-OCC2), 9(FD-OCC2) | 2 | | | | |
| 137~256 | Reserved | Reserved | Reserved | | | | |

Table 24-A4 occupies 8 bits. In table 24-A4, an FD-OCC length corresponding to a port that is not indicated is 4-length by default. It can be learned from table 24-A1 that an FD-OCC length of a same port may be dynamically switched (for example, the network device may indicate, by using DCI signaling, the terminal device to perform switching). In a possible implementation, the first indication information is carried in first signaling, the first signaling further includes second indication information, the second indication information indicates a first value, and the first value is associated with indexes of the M ports. The first value may be understood as an index in a row in table 24-A4, for example, row 90 to row 118 and row 142 to row 192. For a specific example, refer to related descriptions in table 24-A1.

In addition, it can be learned from table 24-A4 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal.

For example, it is assumed that the port 0 is allocated to another terminal. The M ports allocated by the network device to the current terminal device may include a port 1 and a port 13 corresponding to any one of the rows 113, 114, 115, and 203, and the port 1 and the port 13 belong to a same CDM group. However, 4-length frequency domain cover codes corresponding to the port 1 and the port 13 are orthogonal, but 2-length frequency domain cover codes corresponding to the port 1 and the port 13 are not orthogonal. Alternatively, the ports corresponding to any one of the rows 113, 114, 115, and 203 may be replaced with a port 0 and a port 12.

For another example, it is assumed that the port 0 is allocated to another terminal. The M ports allocated by the network device to the current terminal device may include a port 1, a port 7, and a port 13 that correspond to the row 204, and the port 1, the port 7, and the port 13 belong to a same CDM group. However, 4-length frequency domain cover codes corresponding to the port 1, the port 7, and the port 13 are orthogonal, but 2-length frequency domain cover codes corresponding to the port 1, the port 7, and the port 13 are not orthogonal. The corresponding ports in the row 204 may be replaced with a port 0, a port 6, and a port 12.

For another example, it is assumed that the port 0 is allocated to another terminal. The M ports allocated by the network device to the current terminal device may include a port 1, a port 7, a port 13, and a port 19 that correspond to the row 205, and the port 1, the port 7, the port 13, and the port 19 belong to a same CDM group. However, 4-length frequency domain cover codes corresponding to the port 1, the port 7, the port 13, and the port 19 are orthogonal, but 2-length frequency domain cover codes corresponding to the port 1, the port 7, the port 13, and the port 19 are not orthogonal. The corresponding ports in the row 205 may be replaced with a port 0, a port 6, a port 12, and a port 18.

In addition, it can be learned from table 24-A4 that a double-symbol R18 port of type2 supports a maximum of 24-stream transmission, that is, table 24-A1 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 57 to 200 in table 24-A1.

For example, the network device may indicate a port 0, a port 1, a port 2, and a port 3 in the row 113 to a terminal device 1, indicate a port 7, a port 12, and a port 13 in the row 131 to a terminal device 2, indicate a port 9, a port 18, and a port 19 in the row 137 or 138 to a terminal device 3, indicate a port 14, a port 15, a port 20, and a port 21 in the row 135 to a terminal device 4, indicate a port 16, a port 17, a port 22, and a port 23 in the row 136 to a terminal device 5, indicate a port 4 and a port 5 in the row 161 to a terminal device 6, indicate a port 6 in the row 172 to a terminal device 7, indicate a port 10 and a port 11 in the row 183 to a terminal device 8, and indicate a port 8 in the row 174 to a terminal device 9. To be specific, the network device indicates four streams to the terminal device 1, indicates three streams to the terminal device 2, indicates three streams to the terminal device 3, indicates four streams to the terminal device 4, indicates four streams to the terminal device 5, indicates two streams to the terminal device 6, indicates one stream to the terminal device 7, indicates two streams to the terminal device 8, and indicates one stream to the terminal device 9, to form 24-stream transmission pairing. The corresponding ports in the row 137 or 138 may be replaced with a port 7, a port 20, and a port 21.

In addition, it can be learned from table 24-A4 that table 24-A4 includes port combinations for 12-stream transmission supported by the type2 double-symbol R15 port, and all rows are used for MU.

**Table 24-A4: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 3 | 0 | 2 | | | | |
| 24 | 3 | 1 | 2 | | | | |
| 25 | 3 | 2 | 2 | | | | |
| 26 | 3 | 3 | 2 | | | | |
| 27 | 3 | 4 | 2 | | | | |
| 28 | 3 | 5 | 2 | | | | |
| 29 | 3 | 6 | 2 | | | | |
| 30 | 3 | 7 | 2 | | | | |
| 31 | 3 | 8 | 2 | | | | |
| 32 | 3 | 9 | 2 | | | | |
| 33 | 3 | 10 | 2 | | | | |
| 34 | 3 | 11 | 2 | | | | |
| 35 | 3 | 0, 1 | 2 | | | | |
| 36 | 3 | 2, 3 | 2 | | | | |
| 37 | 3 | 4, 5 | 2 | | | | |
| 38 | 3 | 6, 7 | 2 | | | | |
| 39 | 3 | 8, 9 | 2 | | | | |
| 40 | 3 | 10, 11 | 2 | | | | |
| 41 | 3 | 0, 1, 6 | 2 | | | | |
| 42 | 3 | 2,3,8 | 2 | | | | |
| 43 | 3 | 4, 5, 10 | 2 | | | | |
| 44 | 3 | 0, 1, 6, 7 | 2 | | | | |
| 45 | 3 | 2, 3, 8, 9 | 2 | | | | |
| 46 | 3 | 4, 5, 10, 11 | 2 | | | | |
| 47 | 1 | 0 | 2 | | | | |
| 48 | 1 | 1 | 2 | | | | |
| 49 | 1 | 6 | 2 | | | | |
| 50 | 1 | 7 | 2 | | | | |
| 51 | 1 | 0, 1 | 2 | | | | |
| 52 | 1 | 6, 7 | 2 | | | | |
| 53 | 2 | 0, 1 | 2 | | | | |
| 54 | 2 | 2, 3 | 2 | | | | |
| 55 | 2 | 6, 7 | 2 | | | | |
| 56 | 2 | 8, 9 | 2 | | | | |
| 57 | 1 | 12 | 1 | | | | |
| 58 | 1 | 13 | 1 | | | | |
| 59 | 1 | 12, 13 | 1 | | | | |
| 60 | 1 | 0, 1, 12 | 1 | | | | |
| 61 | 1 | 0, 1, 12, 13 | 1 | | | | |
| 62 | 2 | 12 | 1 | | | | |
| 63 | 2 | 13 | 1 | | | | |
| 64 | 2 | 12, 13 | 1 | | | | |
| 65 | 2 | 0, 1, 12 | 1 | | | | |
| 66 | 2 | 0, 1, 12, 13 | 1 | | | | |
| 67 | 2 | 14 | 1 | | | | |
| 68 | 2 | 15 | 1 | | | | |
| 69 | 2 | 14, 15 | 1 | | | | |
| 70 | 2 | 2, 3, 14 | 1 | | | | |
| 71 | 2 | 2, 3, 14, 15 | 1 | | | | |
| 72 | 3 | 12 | 1 | | | | |
| 73 | 3 | 13 | 1 | | | | |
| 74 | 3 | 12, 13 | 1 | | | | |
| 75 | 3 | 0, 1, 12 | 1 | | | | |
| 76 | 3 | 0, 1, 12, 13 | 1 | | | | |
| 77 | 3 | 14 | 1 | | | | |
| 78 | 3 | 15 | 1 | | | | |
| 79 | 3 | 14, 15 | 1 | | | | |
| 80 | 3 | 2, 3, 14 | 1 | | | | |
| 81 | 3 | 2, 3, 14, 15 | 1 | | | | |
| 82 | 3 | 16 | 1 | | | | |
| 83 | 3 | 17 | 1 | | | | |
| 84 | 3 | 16, 17 | 1 | | | | |
| 85 | 3 | 4, 5, 16 | 1 | | | | |
| 86 | 3 | 4, 5, 16, 17 | 1 | | | | |
| 87 | 3 | 13, 15, 17 | 1 | | | | |
| 88 | 2 | 13, 15 | 1 | | | | |
| 89 | 3 | 13, 15 | 1 | | | | |
| 90 | 1 | 0(FD-OCC2) | 1 | | | | |
| 91 | 1 | 1(FD-OCC2) | 1 | | | | |
| 92 | 1 | 0(FD-OCC2), 1(FD-OCC2) | 1 | | | | |
| 93 | 2 | 0(FD-OCC2) | 1 | | | | |
| 94 | 2 | 1(FD-OCC2) | 1 | | | | |
| 95 | 2 | 2(FD-OCC2) | 1 | | | | |
| 96 | 2 | 3(FD-OCC2) | 1 | | | | |
| 97 | 2 | 0(FD-OCC2), 1(FD-OCC2) | 1 | | | | |
| 98 | 2 | 2(FD-OCC2), 3(FD-OCC2) | 1 | | | | |
| 99 | 2 | 0-2(FD-OCC2) | 1 | | | | |
| 100 | 2 | 0-3(FD-OCC2) | 1 | | | | |
| 101 | 3 | 0(FD-OCC2) | 1 | | | | |
| 102 | 3 | 1(FD-OCC2) | 1 | | | | |
| 103 | 3 | 2(FD-OCC2) | 1 | | | | |
| 104 | 3 | 3(FD-OCC2) | 1 | | | | |
| 105 | 3 | 4(FD-OCC2) | 1 | | | | |
| 106 | 3 | 5(FD-OCC2) | 1 | | | | |
| 107 | 3 | 0(FD-OCC2), 1(FD-OCC2) | 1 | | | | |
| 108 | 3 | 2(FD-OCC2), 3(FD-OCC2) | 1 | | | | |
| 109 | 3 | 4(FD-OCC2), 5(FD-OCC2) | 1 | | | | |
| 110 | 3 | 0-2(FD-OCC2) | 1 | | | | |
| 111 | 3 | 3-5(FD-OCC2) | 1 | | | | |
| 112 | 3 | 0-3(FD-OCC2) | 1 | | | | |
| 113 | 1 | 1, 13 | 1 | | | | |
| 114 | 2 | 1, 13 | 1 | | | | |
| 115 | 3 | 1, 13 | 1 | | | | |
| 116 | 3 | 12 | 2 | | | | |
| 117 | 3 | 13 | 2 | | | | |
| 118 | 3 | 14 | 2 | | | | |
| 119 | 3 | 15 | 2 | | | | |
| 120 | 3 | 16 | 2 | | | | |
| 121 | 3 | 17 | 2 | | | | |
| 122 | 3 | 18 | 2 | | | | |
| 123 | 3 | 19 | 2 | | | | |
| 124 | 3 | 20 | 2 | | | | |
| 125 | 3 | 21 | 2 | | | | |
| 126 | 3 | 22 | 2 | | | | |
| 127 | 3 | 23 | 2 | | | | |
| 128 | 3 | 12, 13 | 2 | | | | |
| 129 | 3 | 14, 15 | 2 | | | | |
| 130 | 3 | 16, 17 | 2 | | | | |
| 131 | 3 | 18, 19 | 2 | | | | |
| 132 | 3 | 20, 21 | 2 | | | | |
| 133 | 3 | 22, 23 | 2 | | | | |
| 134 | 3 | 7, 12, 13 | 2 | | | | |
| 135 | 3 | 9, 14, 15 | 2 | | | | |
| 136 | 3 | 11, 16, 17 | 2 | | | | |
| 137 | 3 | 12, 13, 18, 19 | 2 | | | | |
| 138 | 3 | 14, 15, 20, 21 | 2 | | | | |
| 139 | 3 | 16, 17, 22, 23 | 2 | | | | |
| 140 | 2 | 9, 18, 19 | 2 | | | | |
| 141 | 3 | 9, 18, 19 | 2 | | | | |
| 142 | 2 | 18, 19, 20 | 2 | | | | |
| 143 | 3 | 18, 19, 20 | 2 | | | | |
| 144 | 3 | 21, 22, 23 | 2 | | | | |
| 145 | 1 | 0(FD-OCC2) | 1 | | | | |
| 146 | 1 | 1(FD-OCC2) | 1 | | | | |
| 147 | 1 | 0(FD-OCC2), 1(FD-OCC2) | 1 | | | | |
| 148 | 2 | 0(FD-OCC2) | 1 | | | | |
| 149 | 2 | 1(FD-OCC2) | 1 | | | | |
| 150 | 2 | 2(FD-OCC2) | 1 | | | | |
| 151 | 2 | 3(FD-OCC2) | 1 | | | | |
| 152 | 2 | 0(FD-OCC2), 1(FD-OCC2) | 1 | | | | |
| 153 | 2 | 2(FD-OCC2), 3(FD-OCC2) | 1 | | | | |
| 154 | 2 | 0-2(FD-OCC2) | 1 | | | | |
| 155 | 2 | 0-3(FD-OCC2) | 1 | | | | |
| 156 | 3 | 0(FD-OCC2) | 1 | | | | |
| 157 | 3 | 1(FD-OCC2) | 1 | | | | |
| 158 | 3 | 2(FD-OCC2) | 1 | | | | |
| 159 | 3 | 3(FD-OCC2) | 1 | | | | |
| 160 | 3 | 4(FD-OCC2) | 1 | | | | |
| 161 | 3 | 5(FD-OCC2) | 1 | | | | |
| 162 | 3 | 0(FD-OCC2), 1(FD-OCC2) | 1 | | | | |
| 163 | 3 | 2(FD-OCC2), 3(FD-OCC2) | 1 | | | | |
| 164 | 3 | 4(FD-OCC2), 5(FD-OCC2) | 1 | | | | |
| 165 | 3 | 0-2(FD-OCC2) | 1 | | | | |
| 166 | 3 | 3-5(FD-OCC2) | 1 | | | | |
| 167 | 3 | 0-3(FD-OCC2) | 1 | | | | |
| 168 | 2 | 0, 2(FD-OCC2) | 1 | | | | |
| 169 | 3 | 0(FD-OCC2) | 2 | | | | |
| 170 | 3 | 1(FD-OCC2) | 2 | | | | |
| 171 | 3 | 2(FD-OCC2) | 2 | | | | |
| 172 | 3 | 3(FD-OCC2) | 2 | | | | |
| 173 | 3 | 4(FD-OCC2) | 2 | | | | |
| 174 | 3 | 5(FD-OCC2) | 2 | | | | |
| 175 | 3 | 6(FD-OCC2) | 2 | | | | |
| 176 | 3 | 7(FD-OCC2) | 2 | | | | |
| 177 | 3 | 8(FD-OCC2) | 2 | | | | |
| 178 | 3 | 9(FD-OCC2) | 2 | | | | |
| 179 | 3 | 10(FD-OCC2) | 2 | | | | |
| 180 | 3 | 11(FD-OCC2) | 2 | | | | |
| 181 | 3 | 0(FD-OCC2), 1(FD-OCC2) | 2 | | | | |
| 182 | 3 | 2(FD-OCC2), 3(FD-OCC2) | 2 | | | | |
| 183 | 3 | 4(FD-OCC2), 5(FD-OCC2) | 2 | | | | |
| 184 | 3 | 6(FD-OCC2), 7(FD-OCC2) | 2 | | | | |
| 185 | 3 | 8(FD-OCC2), 9(FD-OCC2) | 2 | | | | |
| 186 | 3 | 10(FD-OCC2), 11(FD-OCC2) | 2 | | | | |
| 187 | 3 | 0(FD-OCC2), 1(FD-OCC2), 6(FD-OCC2) | 2 | | | | |
| 188 | 3 | 2(FD-OCC2), 3(FD-OCC2), 8(FD-OCC2) | 2 | | | | |
| 189 | 3 | 4(FD-OCC2), 5(FD-OCC2), 10(FD-OCC2) | 2 | | | | |
| 190 | 3 | 0(FD-OCC2), 1(FD-OCC2), 6(FD-OCC2), 7(FD-OCC2) | 2 | | | | |
| 191 | 3 | 2(FD-OCC2), 3(FD-OCC2), 8(FD-OCC2), 9(FD-OCC2) | 2 | | | | |
| 192 | 3 | 4(FD-OCC2), 5(FD-OCC2), 10(FD-OCC2), 11(FD-OCC2) | 2 | | | | |
| 193 | 1 | 0(FD-OCC2) | 2 | | | | |
| 194 | 1 | 1(FD-OCC2) | 2 | | | | |
| 195 | 1 | 6(FD-OCC2) | 2 | | | | |
| 196 | 1 | 7(FD-OCC2) | 2 | | | | |
| 197 | 1 | 0(FD-OCC2), 1(FD-OCC2) | 2 | | | | |
| 198 | 1 | 6(FD-OCC2), 7(FD-OCC2) | 2 | | | | |
| 199 | 2 | 0(FD-OCC2), 1(FD-OCC2) | 2 | | | | |
| 200 | 2 | 2(FD-OCC2), 3(FD-OCC2) | 2 | | | | |
| 201 | 2 | 6(FD-OCC2), 7(FD-OCC2) | 2 | | | | |
| 202 | 2 | 8(FD-OCC2), 9(FD-OCC2) | 2 | | | | |
| 203 | 3 | 1, 13 | 2 | | | | |
| 204 | 3 | 1, 7, 13 | 2 | | | | |
| 205 | 3 | 1, 7, 13, 19 | 2 | | | | |
| 206~256 | Reserved | Reserved | Reserved | | | | |

A difference between table 24-A5 and table 24-A4 lies in that an FD-OCC length of a same port in table 24-A5 can be dynamically switched, and corresponding examples are fewer than those in table 24-A4.

**Table 24-A5: Type2-E or Type2-R18, maxlength=2**

| One codeword (One Codeword): Codeword 0 enabled (Codeword 0 enabled), Codeword 1 disabled (Codeword 1 disabled) | | | | Two codewords (Two Codewords): Codeword 0 enabled (Codeword 0 enabled), Codeword 1 disabled (Codeword 1 disabled) | | | |
|---|---|---|---|---|---|---|---|
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 3 | 0 | 2 | | | | |
| 24 | 3 | 1 | 2 | | | | |
| 25 | 3 | 2 | 2 | | | | |
| 26 | 3 | 3 | 2 | | | | |
| 27 | 3 | 4 | 2 | | | | |
| 28 | 3 | 5 | 2 | | | | |
| 29 | 3 | 6 | 2 | | | | |
| 30 | 3 | 7 | 2 | | | | |
| 31 | 3 | 8 | 2 | | | | |
| 32 | 3 | 9 | 2 | | | | |
| 33 | 3 | 10 | 2 | | | | |
| 34 | 3 | 11 | 2 | | | | |
| 35 | 3 | 0, 1 | 2 | | | | |
| 36 | 3 | 2, 3 | 2 | | | | |
| 37 | 3 | 4, 5 | 2 | | | | |
| 38 | 3 | 6, 7 | 2 | | | | |
| 39 | 3 | 8, 9 | 2 | | | | |
| 40 | 3 | 10, 11 | 2 | | | | |
| 41 | 3 | 0, 1, 6 | 2 | | | | |
| 42 | 3 | 2, 3, 8 | 2 | | | | |
| 43 | 3 | 4, 5, 10 | 2 | | | | |
| 44 | 3 | 0, 1, 6, 7 | 2 | | | | |
| 45 | 3 | 2, 3, 8, 9 | 2 | | | | |
| 46 | 3 | 4, 5, 10, 11 | 2 | | | | |
| 47 | 1 | 0 | 2 | | | | |
| 48 | 1 | 1 | 2 | | | | |
| 49 | 1 | 6 | 2 | | | | |
| 50 | 1 | 7 | 2 | | | | |
| 51 | 1 | 0, 1 | 2 | | | | |
| 52 | 1 | 6, 7 | 2 | | | | |
| 53 | 2 | 0, 1 | 2 | | | | |
| 54 | 2 | 2, 3 | 2 | | | | |
| 55 | 2 | 6, 7 | 2 | | | | |
| 56 | 2 | 8, 9 | 2 | | | | |
| 57 | 1 | 12 | 1 | | | | |
| 58 | 1 | 13 | 1 | | | | |
| 59 | 1 | 12, 13 | 1 | | | | |
| 60 | 1 | 0, 1, 12 | 1 | | | | |
| 61 | 1 | 0, 1, 12, 13 | 1 | | | | |
| 62 | 2 | 12 | 1 | | | | |
| 63 | 2 | 13 | 1 | | | | |
| 64 | 2 | 12, 13 | 1 | | | | |
| 65 | 2 | 0, 1, 12 | 1 | | | | |
| 66 | 2 | 0, 1, 12, 13 | 1 | | | | |
| 67 | 2 | 14 | 1 | | | | |
| 68 | 2 | 15 | 1 | | | | |
| 69 | 2 | 14, 15 | 1 | | | | |
| 70 | 2 | 2, 3, 14 | 1 | | | | |
| 71 | 2 | 2, 3, 14, 15 | 1 | | | | |
| 72 | 3 | 12 | 1 | | | | |
| 73 | 3 | 13 | 1 | | | | |
| 74 | 3 | 12, 13 | 1 | | | | |
| 75 | 3 | 0, 1, 12 | 1 | | | | |
| 76 | 3 | 0, 1, 12, 13 | 1 | | | | |
| 77 | 3 | 14 | 1 | | | | |
| 78 | 3 | 15 | 1 | | | | |
| 79 | 3 | 14, 15 | 1 | | | | |
| 80 | 3 | 2, 3, 14 | 1 | | | | |
| 81 | 3 | 2, 3, 14, 15 | 1 | | | | |
| 82 | 3 | 16 | 1 | | | | |
| 83 | 3 | 17 | 1 | | | | |
| 84 | 3 | 16, 17 | 1 | | | | |
| 85 | 3 | 4, 5, 16 | 1 | | | | |
| 86 | 3 | 4, 5, 16, 17 | 1 | | | | |
| 87 | 3 | 13, 15, 17 | 1 | | | | |
| 88 | 2 | 13, 15 | 1 | | | | |
| 89 | 3 | 13, 15 | 1 | | | | |
| 90 | 1 | 1, 13 | 1 | | | | |
| 91 | 2 | 1, 13 | 1 | | | | |
| 92 | 3 | 1, 13 | 1 | | | | |
| 93 | 3 | 12 | 2 | | | | |
| 94 | 3 | 13 | 2 | | | | |
| 95 | 3 | 14 | 2 | | | | |
| 96 | 3 | 15 | 2 | | | | |
| 97 | 3 | 16 | 2 | | | | |
| 98 | 3 | 17 | 2 | | | | |
| 99 | 3 | 18 | 2 | | | | |
| 100 | 3 | 19 | 2 | | | | |
| 101 | 3 | 20 | 2 | | | | |
| 102 | 3 | 21 | 2 | | | | |
| 103 | 3 | 22 | 2 | | | | |
| 104 | 3 | 23 | 2 | | | | |
| 105 | 3 | 12, 13 | 2 | | | | |
| 106 | 3 | 14, 15 | 2 | | | | |
| 107 | 3 | 16, 17 | 2 | | | | |
| 108 | 3 | 18, 19 | 2 | | | | |
| 109 | 3 | 20, 21 | 2 | | | | |
| 110 | 3 | 22, 23 | 2 | | | | |
| 111 | 3 | 7, 12, 13 | 2 | | | | |
| 112 | 3 | 9, 14, 15 | 2 | | | | |
| 113 | 3 | 11, 16, 17 | 2 | | | | |
| 114 | 3 | 12, 13, 18, 19 | 2 | | | | |
| 115 | 3 | 14, 15, 20, 21 | 2 | | | | |
| 116 | 3 | 16, 17, 22, 23 | 2 | | | | |
| 117 | 2 | 9, 18, 19 | 2 | | | | |
| 118 | 3 | 9, 18, 19 | 2 | | | | |
| 119 | 2 | 18, 19, 20 | 2 | | | | |
| 120 | 3 | 18, 19, 20 | 2 | | | | |
| 121 | 3 | 21, 22, 23 | 2 | | | | |
| 122 | 1 | 0(FD-OCC2) | 1 | | | | |
| 123 | 1 | 1(FD-OCC2) | 1 | | | | |
| 124 | 1 | 0(FD-OCC2), 1(FD-OCC2) | 1 | | | | |
| 125 | 2 | 0(FD-OCC2) | 1 | | | | |
| 126 | 2 | 1(FD-OCC2) | 1 | | | | |
| 127 | 2 | 2(FD-OCC2) | 1 | | | | |
| 128 | 2 | 3(FD-OCC2) | 1 | | | | |
| 129 | 2 | 0(FD-OCC2), 1(FD-OCC2) | 1 | | | | |
| 130 | 2 | 2(FD-OCC2), 3(FD-OCC2) | 1 | | | | |
| 131 | 2 | 0-2(FD-OCC2) | 1 | | | | |
| 132 | 2 | 0-3 (FD-OCC2) | 1 | | | | |
| 133 | 1 | 0(FD-OCC2) | 2 | | | | |
| 134 | 1 | 1(FD-OCC2) | 2 | | | | |
| 135 | 1 | 6(FD-OCC2) | 2 | | | | |
| 136 | 1 | 7(FD-OCC2) | 2 | | | | |
| 137 | 1 | 0(FD-OCC2), 1(FD-OCC2) | 2 | | | | |
| 138 | 1 | 6(FD-OCC2), 7(FD-OCC2) | 2 | | | | |
| 139 | 2 | 0(FD-OCC2), 1(FD-OCC2) | 2 | | | | |
| 140 | 2 | 6(FD-OCC2), 7(FD-OCC2) | 2 | | | | |
| 141 | 2 | 8(FD-OCC2), 9(FD-OCC2) | 2 | | | | |
| 140~256 | Reserved | Reserved | Reserved | | | | |

Table 24-A6 occupies 7 bits. It can be learned from table 24-A6 that an R18 port of type2 supports a maximum of 24-stream transmission, that is, table 24-A6 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 58 to 217 in table 24-A6. For a specific example, refer to related descriptions in table 24-A1.

In addition, it can be learned from table 24-A6 that table 24-A6 includes any port combination for 12-stream transmission supported by an R15 port, a number of ports corresponding to each port combination is less than or equal to 4, and all rows are used for MU.

**Table 24-A6: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0, 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0, 1 | 2 | | | | |
| 37 | 3 | 2, 3 | 2 | | | | |
| 38 | 3 | 4, 5 | 2 | | | | |
| 39 | 3 | 6, 7 | 2 | | | | |
| 40 | 3 | 8, 9 | 2 | | | | |
| 41 | 3 | 10, 11 | 2 | | | | |
| 42 | 3 | 0, 1, 6 | 2 | | | | |
| 43 | 3 | 2, 3, 8 | 2 | | | | |
| 44 | 3 | 4, 5, 10 | 2 | | | | |
| 45 | 3 | 0, 1, 6, 7 | 2 | | | | |
| 46 | 3 | 2, 3, 8, 9 | 2 | | | | |
| 47 | 3 | 4, 5, 10, 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0, 1 | 2 | | | | |
| 53 | 1 | 6, 7 | 2 | | | | |
| 54 | 2 | 0, 1 | 2 | | | | |
| 55 | 2 | 2, 3 | 2 | | | | |
| 56 | 2 | 6, 7 | 2 | | | | |
| 57 | 2 | 8, 9 | 2 | | | | |
| 58 | 1 | 12 | 1 | | | | |
| 59 | 1 | 13 | 1 | | | | |
| 60 | 1 | 12, 13 | 1 | | | | |
| 61 | 1 | 0, 1, 12 | 1 | | | | |
| 62 | 1 | 0, 1, 12, 13 | 1 | | | | |
| 63 | 2 | 12 | 1 | | | | |
| 64 | 2 | 13 | 1 | | | | |
| 65 | 2 | 12, 13 | 1 | | | | |
| 66 | 2 | 0, 1, 12 | 1 | | | | |
| 67 | 2 | 0, 1, 12, 13 | 1 | | | | |
| 68 | 2 | 14 | 1 | | | | |
| 69 | 2 | 15 | 1 | | | | |
| 70 | 2 | 14, 15 | 1 | | | | |
| 71 | 2 | 2, 3, 14 | 1 | | | | |
| 72 | 2 | 2, 3, 14, 15 | 1 | | | | |
| 73 | 3 | 12 | 1 | | | | |
| 74 | 3 | 13 | 1 | | | | |
| 75 | 3 | 12, 13 | 1 | | | | |
| 76 | 3 | 0, 1, 12 | 1 | | | | |
| 77 | 3 | 0, 1, 12, 13 | 1 | | | | |
| 78 | 3 | 14 | 1 | | | | |
| 79 | 3 | 15 | 1 | | | | |
| 80 | 3 | 14, 15 | 1 | | | | |
| 81 | 3 | 2, 3, 14 | 1 | | | | |
| 82 | 3 | 2, 3, 14, 15 | 1 | | | | |
| 83 | 3 | 16 | 1 | | | | |
| 84 | 3 | 17 | 1 | | | | |
| 85 | 3 | 16, 17 | 1 | | | | |
| 86 | 3 | 4, 5, 16 | 1 | | | | |
| 87 | 3 | 4, 5, 16, 17 | 1 | | | | |
| 88 | 3 | 13, 15, 17 | 1 | | | | |
| 89 | 2 | 13, 15 | 1 | | | | |
| 90 | 3 | 13, 15 | 1 | | | | |
| 91 | 3 | 12 | 2 | | | | |
| 92 | 3 | 13 | 2 | | | | |
| 93 | 3 | 14 | 2 | | | | |
| 94 | 3 | 15 | 2 | | | | |
| 95 | 3 | 16 | 2 | | | | |
| 96 | 3 | 17 | 2 | | | | |
| 97 | 3 | 18 | 2 | | | | |
| 98 | 3 | 19 | 2 | | | | |
| 99 | 3 | 20 | 2 | | | | |
| 100 | 3 | 21 | 2 | | | | |
| 101 | 3 | 22 | 2 | | | | |
| 102 | 3 | 23 | 2 | | | | |
| 103 | 3 | 12, 13 | 2 | | | | |
| 104 | 3 | 14, 15 | 2 | | | | |
| 105 | 3 | 16, 17 | 2 | | | | |
| 106 | 3 | 18, 19 | 2 | | | | |
| 107 | 3 | 20, 21 | 2 | | | | |
| 108 | 3 | 22, 23 | 2 | | | | |
| 109 | 3 | 7, 12, 13 | 2 | | | | |
| 110 | 3 | 9, 14, 15 | 2 | | | | |
| 111 | 3 | 11, 16, 17 | 2 | | | | |
| 112 | 3 | 12, 13, 18, 19 | 2 | | | | |
| 113 | 3 | 14, 15, 20, 21 | 2 | | | | |
| 114 | 3 | 16, 17, 22, 23 | 2 | | | | |
| 115 | 2 | 9, 18, 19 | 2 | | | | |
| 116 | 3 | 9, 18, 19 | 2 | | | | |
| 117 | 2 | 18, 19, 20 | 2 | | | | |
| 118 | 3 | 18, 19, 20 | 2 | | | | |
| 119 | 3 | 21, 22, 23 | 2 | | | | |
| 120~256 | Reserved | Reserved | Reserved | | | | |

Table 24-A7 occupies 8 bits. It can be learned from table 24-A7 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal.

For example, it is assumed that the port 0 is allocated to another terminal. The M ports allocated by the network device to the current terminal device may include a port 1 and a port 13 corresponding to any one of the rows 91, 92, 93, and 123, and the port 1 and the port 13 belong to a same CDM group. However, 4-length frequency domain cover codes corresponding to the port 1 and the port 13 are orthogonal, but 2-length frequency domain cover codes corresponding to the port 1 and the port 13 are not orthogonal. Alternatively, the ports corresponding to any one of the rows 91, 92, 93, and 123 may be replaced with a port 0 and a port 12.

For another example, it is assumed that the port 0 is allocated to another terminal. The M ports allocated by the network device to the current terminal device may include a port 1, a port 7, and a port 13 that correspond to the row 124, and the port 1, the port 7, and the port 13 belong to a same CDM group. However, 4-length frequency domain cover codes corresponding to the port 1, the port 7, and the port 13 are orthogonal, but 2-length frequency domain cover codes corresponding to the port 1, the port 7, and the port 13 are not orthogonal. The corresponding ports in the row 124 may be replaced with a port 0, a port 6, and a port 12.

For another example, it is assumed that the port 0 is allocated to another terminal. The M ports allocated by the network device to the current terminal device may include a port 1, a port 7, a port 13, and a port 19 that correspond to the row 125, and the port 1, the port 7, the port 13, and the port 19 belong to a same CDM group. However, 4-length frequency domain cover codes corresponding to the port 1, the port 7, the port 13, and the port 19 are orthogonal, but 2-length frequency domain cover codes corresponding to the port 1, the port 7, the port 13, and the port 19 are not orthogonal. The corresponding ports in the row 125 may be replaced with a port 0, a port 6, a port 12, and a port 18.

In addition, it can be learned from table 24-A7 that an R18 port of type2 supports a maximum of 24-stream transmission, that is, table 24-A6 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 58 to 125 in table 24-A6. For a specific example, refer to related descriptions in table 24-A1.

In addition, it can be learned from table 24-A7 that table 24-A6 includes any port combination for 4-stream transmission supported by an R15 port, and a number of ports corresponding to each port combination (that is, each row in table 24-A6) is less than or equal to 4.

**Table 24-A7: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0, 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0, 1 | 2 | | | | |
| 37 | 3 | 2, 3 | 2 | | | | |
| 38 | 3 | 4, 5 | 2 | | | | |
| 39 | 3 | 6, 7 | 2 | | | | |
| 40 | 3 | 8, 9 | 2 | | | | |
| 41 | 3 | 10, 11 | 2 | | | | |
| 42 | 3 | 0, 1, 6 | 2 | | | | |
| 43 | 3 | 2, 3, 8 | 2 | | | | |
| 44 | 3 | 4, 5, 10 | 2 | | | | |
| 45 | 3 | 0, 1, 6, 7 | 2 | | | | |
| 46 | 3 | 2, 3, 8, 9 | 2 | | | | |
| 47 | 3 | 4, 5, 10, 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0, 1 | 2 | | | | |
| 53 | 1 | 6, 7 | 2 | | | | |
| 54 | 2 | 0, 1 | 2 | | | | |
| 55 | 2 | 2, 3 | 2 | | | | |
| 56 | 2 | 6, 7 | 2 | | | | |
| 57 | 2 | 8, 9 | 2 | | | | |
| 58 | 1 | 12 | 1 | | | | |
| 59 | 1 | 13 | 1 | | | | |
| 60 | 1 | 12, 13 | 1 | | | | |
| 61 | 1 | 0, 1, 12 | 1 | | | | |
| 62 | 1 | 0, 1, 12, 13 | 1 | | | | |
| 63 | 2 | 12 | 1 | | | | |
| 64 | 2 | 13 | 1 | | | | |
| 65 | 2 | 12, 13 | 1 | | | | |
| 66 | 2 | 0, 1, 12 | 1 | | | | |
| 67 | 2 | 0, 1, 12, 13 | 1 | | | | |
| 68 | 2 | 14 | 1 | | | | |
| 69 | 2 | 15 | 1 | | | | |
| 70 | 2 | 14, 15 | 1 | | | | |
| 71 | 2 | 2, 3, 14 | 1 | | | | |
| 72 | 2 | 2, 3, 14, 15 | 1 | | | | |
| 73 | 3 | 12 | 1 | | | | |
| 74 | 3 | 13 | 1 | | | | |
| 75 | 3 | 12, 13 | 1 | | | | |
| 76 | 3 | 0, 1, 12 | 1 | | | | |
| 77 | 3 | 0, 1, 12, 13 | 1 | | | | |
| 78 | 3 | 14 | 1 | | | | |
| 79 | 3 | 15 | 1 | | | | |
| 80 | 3 | 14, 15 | 1 | | | | |
| 81 | 3 | 2, 3, 14 | 1 | | | | |
| 82 | 3 | 2, 3, 14, 15 | 1 | | | | |
| 83 | 3 | 16 | 1 | | | | |
| 84 | 3 | 17 | 1 | | | | |
| 85 | 3 | 16, 17 | 1 | | | | |
| 86 | 3 | 4, 5, 16 | 1 | | | | |
| 87 | 3 | 4, 5, 16, 17 | 1 | | | | |
| 88 | 3 | 13, 15, 17 | 1 | | | | |
| 89 | 2 | 13, 15 | 1 | | | | |
| 90 | 3 | 13, 15 | 1 | | | | |
| 91 | 1 | 1, 13 | 1 | | | | |
| 92 | 2 | 1, 13 | 1 | | | | |
| 93 | 3 | 1, 13 | 1 | | | | |
| 94 | 3 | 12 | 2 | | | | |
| 95 | 3 | 13 | 2 | | | | |
| 96 | 3 | 14 | 2 | | | | |
| 97 | 3 | 15 | 2 | | | | |
| 98 | 3 | 16 | 2 | | | | |
| 99 | 3 | 17 | 2 | | | | |
| 100 | 3 | 18 | 2 | | | | |
| 101 | 3 | 19 | 2 | | | | |
| 102 | 3 | 20 | 2 | | | | |
| 103 | 3 | 21 | 2 | | | | |
| 104 | 3 | 22 | 2 | | | | |
| 105 | 3 | 23 | 2 | | | | |
| 106 | 3 | 12, 13 | 2 | | | | |
| 107 | 3 | 14, 15 | 2 | | | | |
| 108 | 3 | 16, 17 | 2 | | | | |
| 109 | 3 | 18, 19 | 2 | | | | |
| 110 | 3 | 20, 21 | 2 | | | | |
| 111 | 3 | 22, 23 | 2 | | | | |
| 112 | 3 | 7, 12, 13 | 2 | | | | |
| 113 | 3 | 9, 14, 15 | 2 | | | | |
| 114 | 3 | 11, 16, 17 | 2 | | | | |
| 115 | 3 | 12, 13, 18, 19 | 2 | | | | |
| 116 | 3 | 14, 15, 20, 21 | 2 | | | | |
| 117 | 3 | 16, 17, 22, 23 | 2 | | | | |
| 118 | 2 | 9, 18, 19 | 2 | | | | |
| 119 | 3 | 9, 18, 19 | 2 | | | | |
| 120 | 2 | 18, 19, 20 | 2 | | | | |
| 121 | 3 | 18, 19, 20 | 2 | | | | |
| 122 | 3 | 21, 22, 23 | 2 | | | | |
| 123 | 3 | 1, 13 | 2 | | | | |
| 124 | 3 | 1, 7, 13 | 2 | | | | |
| 125 | 3 | 1, 7, 13, 19 | 2 | | | | |
| 126~256 | Reserved | Reserved | Reserved | | | | |

Table 24-A8 occupies 7 bits. It can be learned from table 24-A8 that an R18 port of type2 supports a maximum of 24-stream transmission, that is, table 24-A6 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 58 to 118 in table 24-A6. For a specific example, refer to related descriptions in table 24-A1.

In addition, it can be learned from table 24-A8 that table 24-A8 includes any port combination for 12-stream transmission supported by an R15 port, a number of ports corresponding to each port combination (that is, each row in table 24-A6) is less than or equal to 4, that is, rows 0 to 56, and all rows are used for MU.

**Table 24-A8: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 3 | 0 | 2 | | | | |
| 24 | 3 | 1 | 2 | | | | |
| 25 | 3 | 2 | 2 | | | | |
| 26 | 3 | 3 | 2 | | | | |
| 27 | 3 | 4 | 2 | | | | |
| 28 | 3 | 5 | 2 | | | | |
| 29 | 3 | 6 | 2 | | | | |
| 30 | 3 | 7 | 2 | | | | |
| 31 | 3 | 8 | 2 | | | | |
| 32 | 3 | 9 | 2 | | | | |
| 33 | 3 | 10 | 2 | | | | |
| 34 | 3 | 11 | 2 | | | | |
| 35 | 3 | 0, 1 | 2 | | | | |
| 36 | 3 | 2, 3 | 2 | | | | |
| 37 | 3 | 4, 5 | 2 | | | | |
| 38 | 3 | 6, 7 | 2 | | | | |
| 39 | 3 | 8, 9 | 2 | | | | |
| 40 | 3 | 10, 11 | 2 | | | | |
| 41 | 3 | 0, 1, 6 | 2 | | | | |
| 42 | 3 | 2, 3, 8 | 2 | | | | |
| 43 | 3 | 4, 5, 10 | 2 | | | | |
| 44 | 3 | 0, 1, 6, 7 | 2 | | | | |
| 45 | 3 | 2, 3, 8, 9 | 2 | | | | |
| 46 | 3 | 4, 5, 10, 11 | 2 | | | | |
| 47 | 1 | 0 | 2 | | | | |
| 48 | 1 | 1 | 2 | | | | |
| 49 | 1 | 6 | 2 | | | | |
| 50 | 1 | 7 | 2 | | | | |
| 51 | 1 | 0, 1 | 2 | | | | |
| 52 | 1 | 6, 7 | 2 | | | | |
| 53 | 2 | 0, 1 | 2 | | | | |
| 54 | 2 | 2, 3 | 2 | | | | |
| 55 | 2 | 6, 7 | 2 | | | | |
| 56 | 2 | 8, 9 | 2 | | | | |
| 57 | 1 | 12 | 1 | | | | |
| 58 | 1 | 13 | 1 | | | | |
| 59 | 1 | 12, 13 | 1 | | | | |
| 60 | 1 | 0, 1, 12 | 1 | | | | |
| 61 | 1 | 0, 1, 12, 13 | 1 | | | | |
| 62 | 2 | 12 | 1 | | | | |
| 63 | 2 | 13 | 1 | | | | |
| 64 | 2 | 12, 13 | 1 | | | | |
| 65 | 2 | 0, 1, 12 | 1 | | | | |
| 66 | 2 | 0, 1, 12, 13 | 1 | | | | |
| 67 | 2 | 14 | 1 | | | | |
| 68 | 2 | 15 | 1 | | | | |
| 69 | 2 | 14, 15 | 1 | | | | |
| 70 | 2 | 2, 3, 14 | 1 | | | | |
| 71 | 2 | 2, 3, 14, 15 | 1 | | | | |
| 72 | 3 | 12 | 1 | | | | |
| 73 | 3 | 13 | 1 | | | | |
| 74 | 3 | 12, 13 | 1 | | | | |
| 75 | 3 | 0, 1, 12 | 1 | | | | |
| 76 | 3 | 0, 1, 12, 13 | 1 | | | | |
| 77 | 3 | 14 | 1 | | | | |
| 78 | 3 | 15 | 1 | | | | |
| 79 | 3 | 14, 15 | 1 | | | | |
| 80 | 3 | 2, 3, 14 | 1 | | | | |
| 81 | 3 | 2, 3, 14, 15 | 1 | | | | |
| 82 | 3 | 16 | 1 | | | | |
| 83 | 3 | 17 | 1 | | | | |
| 84 | 3 | 16, 17 | 1 | | | | |
| 85 | 3 | 4, 5, 16 | 1 | | | | |
| 86 | 3 | 4, 5, 16, 17 | 1 | | | | |
| 87 | 3 | 13, 15, 17 | 1 | | | | |
| 88 | 2 | 13, 15 | 1 | | | | |
| 89 | 3 | 13, 15 | 1 | | | | |
| 90 | 3 | 12 | 2 | | | | |
| 91 | 3 | 13 | 2 | | | | |
| 92 | 3 | 14 | 2 | | | | |
| 93 | 3 | 15 | 2 | | | | |
| 94 | 3 | 16 | 2 | | | | |
| 95 | 3 | 17 | 2 | | | | |
| 96 | 3 | 18 | 2 | | | | |
| 97 | 3 | 19 | 2 | | | | |
| 98 | 3 | 20 | 2 | | | | |
| 99 | 3 | 21 | 2 | | | | |
| 100 | 3 | 22 | 2 | | | | |
| 101 | 3 | 23 | 2 | | | | |
| 102 | 3 | 12, 13 | 2 | | | | |
| 103 | 3 | 14, 15 | 2 | | | | |
| 104 | 3 | 16, 17 | 2 | | | | |
| 105 | 3 | 18, 19 | 2 | | | | |
| 106 | 3 | 20, 21 | 2 | | | | |
| 107 | 3 | 22, 23 | 2 | | | | |
| 108 | 3 | 7, 12, 13 | 2 | | | | |
| 109 | 3 | 9, 14, 15 | 2 | | | | |
| 110 | 3 | 11, 16, 17 | 2 | | | | |
| 111 | 3 | 12, 13, 18, 19 | 2 | | | | |
| 112 | 3 | 14, 15, 20, 21 | 2 | | | | |
| 113 | 3 | 16, 17, 22, 23 | 2 | | | | |
| 114 | 2 | 9, 18, 19 | 2 | | | | |
| 115 | 3 | 9, 18, 19 | 2 | | | | |
| 116 | 2 | 18, 19, 20 | 2 | | | | |
| 117 | 3 | 18, 19, 20 | 2 | | | | |
| 118 | 3 | 21, 22, 23 | 2 | | | | |
| 119∼256 | Reserved | Reserved | Reserved | | | | |

Table 24-A9 occupies 7 bits. It can be learned from table 24-A9 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal.

For example, it is assumed that the port 0 is allocated to another terminal. The M ports allocated by the network device to the current terminal device may include a port 1 and a port 13 corresponding to any one of the rows 34, 35, 36, and 72, and the port 1 and the port 13 belong to a same CDM group. However, 4-length frequency domain cover codes corresponding to the port 1 and the port 13 are orthogonal, but 2-length frequency domain cover codes corresponding to the port 1 and the port 13 are not orthogonal. Alternatively, the ports corresponding to any one of the rows 34, 35, 36, and 72 may be replaced with a port 0 and a port 12.

For another example, it is assumed that the port 0 is allocated to another terminal. The M ports allocated by the network device to the current terminal device may include a port 1, a port 7, and a port 13 that correspond to the row 73, and the port 1, the port 7, and the port 13 belong to a same CDM group. However, 4-length frequency domain cover codes corresponding to the port 1, the port 7, and the port 13 are orthogonal, but 2-length frequency domain cover codes corresponding to the port 1, the port 7, and the port 13 are not orthogonal. The corresponding ports in the row 73 may be replaced with a port 0, a port 6, and a port 12.

For another example, it is assumed that the port 0 is allocated to another terminal. The M ports allocated by the network device to the current terminal device may include a port 1, a port 7, a port 13, and a port 19 that correspond to the row 74, and the port 1, the port 7, the port 13, and the port 19 belong to a same CDM group. However, 4-length frequency domain cover codes corresponding to the port 1, the port 7, the port 13, and the port 19 are orthogonal, but 2-length frequency domain cover codes corresponding to the port 1, the port 7, the port 13, and the port 19 are not orthogonal. The corresponding ports in the row 74 may be replaced with a port 0, a port 6, a port 12, and a port 18.

In addition, it can be learned from table 24-A9 that, when the first value is the value 1, FD-OCC lengths of the M ports associated with the first value may be different, that is, ports in a same row in table 24-A9 may correspond to different FD-OCC lengths.

For example, when the first value is any one of the rows 37, 38, and 39, the M ports may include a port 0, a port 1, and a port 13 corresponding to any one of the rows 37, 38, and 39, an FD-OCC length of the port 0 is 2-length, an FD-OCC length of the port 1 is 4-length, and an FD-OCC length of the port 13 is 4-length. Alternatively, the ports corresponding to any one of the rows 37, 38, and 39 may be replaced with a port 0, a port 1, and a port 12, where an FD-OCC length of the port 0 is 4-length, an FD-OCC length of the port 1 is 2-length, and an FD-OCC length of the port 12 is 4-length.

For another example, when the first value is any one of the rows 40, 41, and 42, the M ports may include a port 0 and a port 1 corresponding to any one of the rows 40, 41, and 42, an FD-OCC length of the port 0 is 2-length, and an FD-OCC length of the port 1 is 4-length. Alternatively, the ports corresponding to any one of the rows 40, 41, and 42 are still the port 0 and the port 1, but an FD-OCC length of the port 0 is 4-length, and an FD-OCC length of the port 1 is 2-length.

For another example, when the first value is the row 75 or 80, the M ports may include a port 0 and a port 1 that correspond to the row 75 or 80, an FD-OCC length of the port 0 is 2-length, and an FD-OCC length of the port 1 is 4-length. The corresponding ports in the row 75 or 80 may be replaced with a port 0 and a port 7, where an FD-OCC length of the port 0 is 2-length, and an FD-OCC length of the port 7 is 4-length. Alternatively, the corresponding ports in the row 75 or 80 may be replaced with a port 0 and a port 19, where an FD-OCC length of the port 0 is 2-length, and an FD-OCC length of the port 19 is 4-length. Alternatively, the corresponding ports in the row 75 or 80 may be replaced with a port 0 and a port 13, where an FD-OCC length of the port 0 is 2-length, and an FD-OCC length of the port 13 is 4-length. Alternatively, the corresponding ports in the row 75 or 80 are still the port 0 and the port 1, but an FD-OCC length of the port 0 is 4-length, and an FD-OCC length of the port 1 is 2-length. Alternatively, the corresponding ports in the row 75 or 80 may be replaced with a port 1 and a port 6, where an FD-OCC length of the port 1 is 2-length, and an FD-OCC length of the port 6 is 4-length. Alternatively, the corresponding ports in the row 75 or 80 may be replaced with a port 1 and a port 18, where an FD-OCC length of the port 1 is 2-length, and an FD-OCC length of the port 18 is 4-length. Alternatively, the corresponding ports in the row 75 or 80 may be replaced with a port 1 and a port 12, where an FD-OCC length of the port 1 is 2-length, and an FD-OCC length of the port 12 is 4-length.

For another example, when the first value is the row 76 or 81, the M ports may include a port 0, a port 1, and a port 13 that correspond to the row 76, 81, or 81, an FD-OCC length of the port 0 is 2-length, and FD-OCC lengths of the port 1 and the port 13 are 4-length. The corresponding ports in the row 76, 81, or 81 may be replaced with a port 0, a port 1, and a port 19, where an FD-OCC length of the port 0 is 2-length, and FD-OCC lengths of the port 1 and the port 19 are 4-length. Alternatively, the corresponding ports in the row 76, 81, or 81 may be replaced with a port 0, a port 1, and a port 7, where an FD-OCC length of the port 0 is 2-length, and FD-OCC lengths of the port 1 and the port 7 are 4-length. Alternatively, the corresponding ports in the row 76, 81, or 81 may be replaced with a port 0, a port 13, and a port 19, where an FD-OCC length of the port 0 is 2-length, and FD-OCC lengths of the port 13 and the port 19 are 4-length. Alternatively, the corresponding ports in the row 76, 81, or 81 may be replaced with a port 0, a port 7, and a port 9, where an FD-OCC length of the port 0 is 2-length, and FD-OCC lengths of the port 7 and the port 9 are 4-length. Alternatively, the corresponding ports in the row 76, 81, or 81 may be replaced with a port 1, a port 6, and a port 12, where an FD-OCC length of the port 1 is 2-length, and FD-OCC lengths of the port 6 and the port 12 are 4-length. Alternatively, the corresponding ports in the row 76, 81, or 81 may be replaced with a port 0, a port 1, and a port 12, where an FD-OCC length of the port 1 is 2-length, and FD-OCC lengths of the port 0 and the port 12 are 4-length. Alternatively, the corresponding ports in the row 76, 81, or 81 may be replaced with a port 1, a port 6, and a port 18, where an FD-OCC length of the port 1 is 2-length, and FD-OCC lengths of the port 6 and the port 18 are 4-length.

For another example, when the first value is the row 77 or 82, the M ports may include a port 0, a port 1, a port 7, and a port 13 that correspond to the row 77 or 82, an FD-OCC length of the port 0 is 2-length, and FD-OCC lengths of the port 1, the port 7, and the port 13 are 4-length. The corresponding ports in the row 77 or 82 may be replaced with a port 0, a port 1, a port 7, and a port 19, where an FD-OCC length of the port 0 is 2-length, and FD-OCC lengths of the port 1, the port 7, and the port 19 are 4-length. Alternatively, the corresponding ports in the row 77 or 82 may be replaced with a port 0, a port 1, a port 7, and a port 19, where an FD-OCC length of the port 0 is 2-length, and FD-OCC lengths of the port 1, the port 7, and the port 19 are 4-length. Alternatively, the corresponding ports in the row 77 or 82 may be replaced with a port 0, a port 1, a port 13, and a port 19, where an FD-OCC length of the port 0 is 2-length, and FD-OCC lengths of the port 1, the port 13, and the port 19 are 4-length. Alternatively, the corresponding ports in the row 77 or 82 may be replaced with a port 0, a port 1, a port 6, and a port 12, where an FD-OCC length of the port 1 is 2-length, and FD-OCC lengths of the port 0, the port 6, and the port 12 are 4-length. Alternatively, the corresponding ports in the row 77 or 82 may be replaced with a port 0, a port 1, a port 12, and a port 18, where an FD-OCC length of the port 1 is 2-length, and FD-OCC lengths of the port 0, the port 12, and the port 18 are 4-length. Alternatively, the corresponding ports in the row 77 or 82 may be replaced with a port 0, a port 1, a port 6, and a port 18, where an FD-OCC length of the port 1 is 2-length, and FD-OCC lengths of the port 0, the port 6, and the port 18 are 4-length.

For another example, when the first value is the row 78 or 83, the M ports may include a port 0, a port 6, and a port 1 that correspond to the row 78 or 83, FD-OCC lengths of the port 0 and the port 6 are 2-length, and an FD-OCC length of the port 1 is 4-length. The corresponding ports in the row 78 or 83 may be replaced with a port 0, a port 6, and a port 7, where FD-OCC lengths of the port 0 and the port 7 are 2-length, and an FD-OCC length of the port 7 is 4-length. Alternatively, the corresponding ports in the row 78 or 83 may be replaced with a port 0, a port 6, and a port 13, where FD-OCC lengths of the port 0 and the port 6 are 2-length, and an FD-OCC length of the port 13 is 4-length. Alternatively, the corresponding ports in the row 78 or 83 may be replaced with a port 0, a port 6, and a port 19, where FD-OCC lengths of the port 0 and the port 6 are 2-length, and an FD-OCC length of the port 19 is 4-length. Alternatively, the corresponding ports in the row 78 or 83 may be replaced with a port 1, a port 7, and a port 6, where FD-OCC lengths of the port 1 and the port 7 are 2-length, and an FD-OCC length of the port 6 is 4-length. Alternatively, the corresponding ports in the row 78 or 83 may be replaced with a port 1, a port 7, and a port 12, where FD-OCC lengths of the port 1 and the port 7 are 2-length, and an FD-OCC length of the port 12 is 4-length. Alternatively, the corresponding ports in the row 78 or 83 may be replaced with a port 0, a port 1, a port 6, and a port 7, where FD-OCC lengths of the port 1 and the port 7 are 2-length, and FD-OCC lengths of the port 0 and the port 6 are 4-length.

For another example, when the first value is the row 79 or 84, the M ports may include a port 0, a port 6, a port 13, and a port 19 that correspond to the row 79 or 84, FD-OCC lengths of the port 0 and the port 6 are 2-length, and FD-OCC lengths of the port 13 and the port 19 are 4-length. The corresponding ports in the row 79 or 84 may be replaced with a port 0, a port 6, a port 7, and a port 19, where FD-OCC lengths of the port 0 and the port 6 are 2-length, and FD-OCC lengths of the port 7 and the port 19 are 4-length. Alternatively, the corresponding ports in the row 79 or 84 may be replaced with a port 0, a port 6, a port 7, and a port 13, where FD-OCC lengths of the port 0 and the port 6 are 2-length, and FD-OCC lengths of the port 7 and the port 13 are 4-length. Alternatively, the corresponding ports in the row 79 or 84 may be replaced with a port 1, a port 7, a port 12, and a port 18, where FD-OCC lengths of the port 1 and the port 7 are 2-length, and FD-OCC lengths of the port 18 and the port 12 are 4-length. Alternatively, the corresponding ports in the row 79 or 84 may be replaced with a port 1, a port 7, a port 6, and a port 18, where FD-OCC lengths of the port 1 and the port 7 are 2-length, and FD-OCC lengths of the port 18 and the port 6 are 4-length. Alternatively, the corresponding ports in the row 79 or 84 may be replaced with a port 0, a port 1, a port 6, and a port 7, where FD-OCC lengths of the port 1 and the port 7 are 2-length, and FD-OCC lengths of the port 0 and the port 6 are 4-length.

In addition, it can be learned from table 24-A9 that an R18 port of type2 supports a maximum of 24-stream transmission, that is, table 24-A9 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 0 to 79 in table 24-A9. For a specific example, refer to related descriptions in table 24-A1.

Correspondingly, table 24-A9 may be used with reference to table 18-1, table 18-2, table 19-1, and table 19-2 in Embodiment 1. For example, the network device indicates a port 0, a port 1, a port 12, and a port 13 in the row 5 to the terminal device. Correspondingly, if the network device indicates that a value of a first DCI field is 0, 4-length orthogonal cover codes corresponding to the port 0, the port 1, the port 12, and the port 13 have been allocated to another terminal, or FD-OCC lengths corresponding to the port 0, the port 1, the port 12, and the port 13 are 2-length. If the network device indicates that a value of a first DCI field is 1, 4-length orthogonal cover codes corresponding to the port 0, the port 1, the port 12, and the port 13 are not allocated to another terminal, or FD-OCC lengths corresponding to the port 0, the port 1, the port 12, and the port 13 are 4-length.

**Table 24-A9: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 2 | 8, 9 | 2 | 0 | 3 | 0-4 | 1 |
| 1 | 1 | 12 | 1 | 1 | 3 | 0-5 | 1 |
| 2 | 1 | 13 | 1 | 2 | 2 | 0, 1, 2, 3, 6 | 2 |
| 3 | 1 | 12, 13 | 1 | 3 | 2 | 0, 1, 2, 3, 6, 8 | 2 |
| 4 | 1 | 0, 1, 12 | 1 | 4 | 2 | 0, 1, 2, 3, 6, 7, 8 | 2 |
| 5 | 1 | 0, 1, 12, 13 | 1 | 5 | 2 | 0, 1, 2, 3, 6, 7, 8, 9 | 2 |
| 6 | 2 | 12 | 1 | 6 | 1 | 0, 1, 6, 7, 12 | 2 |
| 7 | 2 | 13 | 1 | 7 | 1 | 0, 1, 6, 7, 12, 13 | 2 |
| 8 | 2 | 12, 13 | 1 | 8 | 1 | 0, 1, 6, 7, 12, 13, 18 | 2 |
| 9 | 2 | 0, 1, 12 | 1 | 9 | 1 | 0, 1, 6, 7, 12, 13, 18, 19 | 2 |
| 10 | 2 | 0, 1, 12, 13 | 1 | 10-63 | Reserved | Reserved | Reserved |
| 11 | 2 | 14 | 1 | | | | |
| 12 | 2 | 15 | 1 | | | | |
| 13 | 2 | 14, 15 | 1 | | | | |
| 14 | 2 | 2, 3, 14 | 1 | | | | |
| 15 | 2 | 2, 3, 14, 15 | 1 | | | | |
| 16 | 3 | 12 | 1 | | | | |
| 17 | 3 | 13 | 1 | | | | |
| 18 | 3 | 12, 13 | 1 | | | | |
| 19 | 3 | 0, 1, 12 | 1 | | | | |
| 20 | 3 | 0, 1, 12, 13 | 1 | | | | |
| 21 | 3 | 14 | 1 | | | | |
| 22 | 3 | 15 | 1 | | | | |
| 23 | 3 | 14, 15 | 1 | | | | |
| 24 | 3 | 2, 3, 14 | 1 | | | | |
| 25 | 3 | 2, 3, 14, 15 | 1 | | | | |
| 26 | 3 | 16 | 1 | | | | |
| 27 | 3 | 17 | 1 | | | | |
| 28 | 3 | 16, 17 | 1 | | | | |
| 29 | 3 | 4, 5, 16 | 1 | | | | |
| 30 | 3 | 4, 5, 16, 17 | 1 | | | | |
| 31 | 3 | 13, 15, 17 | 1 | | | | |
| 32 | 2 | 13, 15 | 1 | | | | |
| 33 | 3 | 13, 15 | 1 | | | | |
| 34 | 1 | 1, 13 | 1 | | | | |
| 35 | 2 | 1, 13 | 1 | | | | |
| 36 | 3 | 1, 13 | 1 | | | | |
| 37 | 1 | 0(FD-OCC2), 1, 13 | 1 | | | | |
| 38 | 2 | 0(FD-OCC2), 1, 13 | 1 | | | | |
| 39 | 3 | 0(FD-OCC2), 1, 13 | 1 | | | | |
| 40 | 1 | 0(FD-OCC2), 1 | 1 | | | | |
| 41 | 2 | 0(FD-OCC2), 1 | 1 | | | | |
| 42 | 3 | 0(FD-OCC2), 1 | 1 | | | | |
| 43 | 3 | 12 | 2 | | | | |
| 44 | 3 | 13 | 2 | | | | |
| 45 | 3 | 14 | 2 | | | | |
| 46 | 3 | 15 | 2 | | | | |
| 47 | 3 | 16 | 2 | | | | |
| 48 | 3 | 17 | 2 | | | | |
| 49 | 3 | 18 | 2 | | | | |
| 50 | 3 | 19 | 2 | | | | |
| 51 | 3 | 20 | 2 | | | | |
| 52 | 3 | 21 | 2 | | | | |
| 53 | 3 | 22 | 2 | | | | |
| 54 | 3 | 23 | 2 | | | | |
| 55 | 3 | 12, 13 | 2 | | | | |
| 56 | 3 | 14, 15 | 2 | | | | |
| 57 | 3 | 16, 17 | 2 | | | | |
| 58 | 3 | 18, 19 | 2 | | | | |
| 59 | 3 | 20, 21 | 2 | | | | |
| 60 | 3 | 22, 23 | 2 | | | | |
| 61 | 3 | 7, 12, 13 | 2 | | | | |
| 62 | 3 | 9, 14, 15 | 2 | | | | |
| 63 | 3 | 11, 16, 17 | 2 | | | | |
| 64 | 3 | 12, 13, 18, 19 | 2 | | | | |
| 65 | 3 | 14, 15, 20, 21 | 2 | | | | |
| 66 | 3 | 16, 17, 22, 23 | 2 | | | | |
| 67 | 2 | 9, 18, 19, or 7, 20, 21 | 2 | | | | |
| 68 | 3 | 9, 18, 19, or 7, 20, 21 | 2 | | | | |
| 69 | 2 | 18, 19, 20 | 2 | | | | |
| 70 | 3 | 18, 19, 20 | 2 | | | | |
| 71 | 3 | 21, 22, 23 | 2 | | | | |
| 72 | 3 | 1, 13 | 2 | | | | |
| 73 | 3 | 1, 7, 13 | 2 | | | | |
| 74 | 3 | 1, 7, 13, 19 | 2 | | | | |
| 75 | 3 | 0(FD-OCC2), 1 | 2 | | | | |
| 76 | 3 | 0(FD-OCC2), 1, 13 | 2 | | | | |
| 77 | 3 | 0(FD-OCC2), 1, 7, 13 | 2 | | | | |
| 78 | 3 | 0(FD-OCC2), 6(FD-OCC2), 1 | 2 | | | | |
| 79 | 3 | 0(FD-OCC2), 6(FD-OCC2), 13, 19 | 2 | | | | |
| 80 | 3 | 0(FD-OCC2), 1 | 2 | | | | |
| 81 | 3 | 0(FD-OCC2), 1, 13 | 2 | | | | |
| 82 | 3 | 0(FD-OCC2), 1, 7, 13 | 2 | | | | |
| 83 | 3 | 0(FD-OCC2), 6(FD-OCC2), 1 | 2 | | | | |
| 84 | 3 | 0(FD-OCC2), 6(FD-OCC2), 13, 19 | 2 | | | | |
| 85~256 | Reserved | Reserved | Reserved | | | | |

In another possible implementation, if a DMRS type configured by the network device for the terminal device is type2 and the DMRS occupies double symbols, the network device may indicate content in table 24-B 1 to table 24-B9 to the terminal device by using the first indication information, so that the terminal device may determine, based on the first indication information with reference to table 24-B 1 to table 24-B9, ports allocated by the network device to the terminal device and FD-OCC lengths corresponding to the ports.

Table 24-B 1 occupies 8 bits. In table 24-B1, an FD-OCC length corresponding to a port that is not indicated is 4-length by default. It can be learned from table 24-B 1 that an FD-OCC length of a same port may be dynamically switched (for example, the network device may indicate, by using DCI signaling, the terminal device to perform switching). In a possible implementation, the first indication information is carried in first signaling, the first signaling further includes second indication information, the second indication information indicates a first value, and the first value is associated with indexes of the M ports. The first value may be understood as an index in a row in table 24-B1.

For example, using a port 0 as an example, in table 24-B 1, when the first value is 0 and 91, the indexes of the M ports include an index of the port 0; and when the first value is 0, an FD-OCC length of the port 0 is 4-length; or when the first value is 91, the index of the port 0 corresponds to a first identifier (that is, FD-OCC2), and the first identifier indicates that an FD-OCC length corresponding to the port 0 is 2-length.

For another example, using a port 0 as an example, in table 24-B 1, when the first value is 3 and 94, the indexes of the M ports include an index of the port 0; and when the first value is 3, an FD-OCC length of the port 0 is 4-length; or when the first value is 94, the index of the port 0 corresponds to a first identifier (that is, FD-OCC2), and the first identifier indicates that an FD-OCC length corresponding to the port 0 is 2-length.

For another example, using a port 1 as an example, in table 24-B 1, when the first value is 1 and 92, the indexes of the M ports include an index of the port 1; and when the first value is 1, an FD-OCC length of the port 1 is 4-length; or when the first value is 92, the index of the port 1 corresponds to a first identifier (that is, FD-OCC2), and the first identifier indicates that an FD-OCC length corresponding to the port 1 is 2-length.

For another example, using a port 1 as an example, in table 24-B 1, when the first value is 4 and 95, the indexes of the M ports include an index of the port 1; and when the first value is 4, an FD-OCC length of the port 1 is 4-length; or when the first value is 95, the index of the port 1 corresponds to a first identifier (that is, FD-OCC2), and the first identifier indicates that an FD-OCC length corresponding to the port 1 is 2-length.

For another example, using a port 0 and a port 1 as an example, in table 24-B 1, when the first value is 2 and 93, the indexes of the M ports include indexes of the port 0 and the port 1; and when the first value is 2, FD-OCC lengths of the port 0 and the port 1 are 4-length; or when the first value is 93, the indexes of the port 0 and the port 1 correspond to a first identifier (that is, FD-OCC2), and the first identifier indicates that FD-OCC lengths corresponding to the port 0 and the port 1 are 2-length.

For another example, using a port 0 and a port 1 as an example, in table 24-B 1, when the first value is 7 and 98, the indexes of the M ports include indexes of the port 0 and the port 1; and when the first value is 7, FD-OCC lengths of the port 0 and the port 1 are 4-length; or when the first value is 98, the indexes of the port 0 and the port 1 correspond to a first identifier (that is, FD-OCC2), and the first identifier indicates that FD-OCC lengths corresponding to the port 0 and the port 1 are 2-length.

For another example, using a port 2 as an example, in table 24-B 1, when the first value is 5 and 96, the indexes of the M ports include an index of the port 2; and when the first value is 5, an FD-OCC length of the port 2 is 4-length; or when the first value is 96, the index of the port 2 corresponds to a first identifier (that is, FD-OCC2), and the first identifier indicates that an FD-OCC length corresponding to the port 2 is 2-length.

For another example, using a port 3 as an example, in table 24-B 1, when the first value is 6 and 97, the indexes of the M ports include an index of the port 3; and when the first value is 6, an FD-OCC length of the port 3 is 4-length; or when the first value is 97, the index of the port 3 corresponds to a first identifier (that is, FD-OCC2), and the first identifier indicates that an FD-OCC length corresponding to the port 3 is 2-length.

For another example, using a port 2 and a port 3 as an example, in table 24-B 1, when the first value is 8 and 99, the indexes of the M ports include indexes of the port 2 and the port 3; and when the first value is 8, FD-OCC lengths of the port 2 and the port 3 are 4-length; or when the first value is 99, the indexes of the port 2 and the port 3 correspond to a first identifier (that is, FD-OCC2), and the first identifier indicates that FD-OCC lengths corresponding to the port 2 and the port 3 are 2-length.

For another example, using a port 0, a port 1, a port 2, and a port 3 as an example, in table 24-B1, when the first value is 10 and 101, the indexes of the M ports include indexes of the port 0, the port 1, the port 2, and the port 3; and when the first value is 10, FD-OCC lengths of the port 0, the port 1, the port 2, and the port 3 are 4-length; or when the first value is 101, indexes of the port 0, the port 1, the port 2, and the port 3 correspond to a first identifier (that is, FD-OCC2), and the first identifier indicates that FD-OCC lengths corresponding to the port 0, the port 1, the port 2, and the port 3 are 2-length.

By analogy, FD-OCC lengths of ports corresponding to the row 100, the row 102 to the row 113, and the row 150 to the row 207 may also be dynamically switched.

In addition, it can be learned from table 24-B1 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal.

For example, it is assumed that the port 0 is allocated to another terminal. The M ports allocated by the network device to the current terminal device may include a port 1 and a port 13 corresponding to any one of the rows 114, 115, 116, and 208, and the port 1 and the port 13 belong to a same CDM group. However, 4-length frequency domain cover codes corresponding to the port 1 and the port 13 are orthogonal, but 2-length frequency domain cover codes corresponding to the port 1 and the port 13 are not orthogonal. Alternatively, the ports corresponding to any one of the rows 114, 115, 116, and 208 may be replaced with a port 0 and a port 12.

For another example, it is assumed that the port 0 is allocated to another terminal. The M ports allocated by the network device to the current terminal device may include a port 1, a port 7, and a port 13 that correspond to the row 209, and the port 1, the port 7, and the port 13 belong to a same CDM group. However, 4-length frequency domain cover codes corresponding to the port 1, the port 7, and the port 13 are orthogonal, but 2-length frequency domain cover codes corresponding to the port 1, the port 7, and the port 13 are not orthogonal. The corresponding ports in the row 209 may be replaced with a port 0, a port 6, and a port 12.

For another example, it is assumed that the port 0 is allocated to another terminal. The M ports allocated by the network device to the current terminal device may include a port 1, a port 7, a port 13, and a port 19 that correspond to the row 210, and the port 1, the port 7, the port 13, and the port 19 belong to a same CDM group. However, 4-length frequency domain cover codes corresponding to the port 1, the port 7, the port 13, and the port 19 are orthogonal, but 2-length frequency domain cover codes corresponding to the port 1, the port 7, the port 13, and the port 19 are not orthogonal. The corresponding ports in the row 210 may be replaced with a port 0, a port 6, a port 12, and a port 18.

In addition, it can be learned from table 24-B1 that, when the first value is the value 1, FD-OCC lengths of the M ports associated with the first value may be different, that is, ports in a same row in table 24-B1 may correspond to different FD-OCC lengths.

For example, when the first value is any one of the rows 117, 118, and 119, the M ports may include a port 0, a port 1, and a port 13 corresponding to any one of the rows 117, 118, and 119, an FD-OCC length of the port 0 is 2-length, an FD-OCC length of the port 1 is 4-length, and an FD-OCC length of the port 13 is 4-length. Alternatively, the ports corresponding to any one of the rows 117, 118, and 119 may be replaced with a port 0, a port 1, and a port 12, where an FD-OCC length of the port 0 is 4-length, an FD-OCC length of the port 1 is 2-length, and an FD-OCC length of the port 12 is 4-length.

For another example, when the first value is any one of the rows 120, 121, and 122, the M ports may include a port 0 and a port 1 corresponding to any one of the rows 120, 121, and 122, an FD-OCC length of the port 0 is 2-length, and an FD-OCC length of the port 1 is 4-length. Alternatively, the ports corresponding to any one of the rows 120, 121, and 122 are still the port 0 and the port 1, but an FD-OCC length of the port 0 is 4-length, and an FD-OCC length of the port 1 is 2-length.

For another example, when the first value is the row 211 or 216, the M ports may include a port 0 and a port 1 that correspond to the row 211 or 216, an FD-OCC length of the port 0 is 2-length, and an FD-OCC length of the port 1 is 4-length. The corresponding ports in the row 211 or 216 may be replaced with a port 0 and a port 7, where an FD-OCC length of the port 0 is 2-length, and an FD-OCC length of the port 7 is 4-length. Alternatively, the corresponding ports in the row 211 or 216 may be replaced with a port 0 and a port 19, where an FD-OCC length of the port 0 is 2-length, and an FD-OCC length of the port 19 is 4-length. Alternatively, the corresponding ports in the row 211 or 216 may be replaced with a port 0 and a port 13, where an FD-OCC length of the port 0 is 2-length, and an FD-OCC length of the port 13 is 4-length. Alternatively, the corresponding ports in the row 211 or 216 are still the port 0 and the port 1, but an FD-OCC length of the port 0 is 4-length, and an FD-OCC length of the port 1 is 2-length. Alternatively, the corresponding ports in the row 211 or 216 may be replaced with a port 1 and a port 6, where an FD-OCC length of the port 1 is 2-length, and an FD-OCC length of the port 6 is 4-length. Alternatively, the corresponding ports in the row 211 or 216 may be replaced with a port 1 and a port 18, where an FD-OCC length of the port 1 is 2-length, and an FD-OCC length of the port 18 is 4-length. Alternatively, the corresponding ports in the row 211 or 216 may be replaced with a port 1 and a port 12, where an FD-OCC length of the port 1 is 2-length, and an FD-OCC length of the port 12 is 4-length.

For another example, when the first value is the row 212 or 217, the M ports may include a port 0, a port 1, and a port 13 that correspond to the row 212 or 217, an FD-OCC length of the port 0 is 2-length, and FD-OCC lengths of the port 1 and the port 13 are 4-length. The corresponding ports in the row 212 or 217 may be replaced with a port 0, a port 1, and a port 19, where an FD-OCC length of the port 0 is 2-length, and FD-OCC lengths of the port 1 and the port 19 are 4-length. Alternatively, the corresponding ports in the row 212 or 217 may be replaced with a port 0, a port 1, and a port 7, where an FD-OCC length of the port 0 is 2-length, and FD-OCC lengths of the port 1 and the port 7 are 4-length. Alternatively, the corresponding ports in the row 212 or 217 may be replaced with a port 0, a port 13, and a port 19, where an FD-OCC length of the port 0 is 2-length, and FD-OCC lengths of the port 13 and the port 19 are 4-length. Alternatively, the corresponding ports in the row 212 or 217 may be replaced with a port 0, a port 7, and a port 9, where an FD-OCC length of the port 0 is 2-length, and FD-OCC lengths of the port 7 and the port 9 are 4-length. Alternatively, the corresponding ports in the row 212 or 217 may be replaced with a port 1, a port 6, and a port 12, where an FD-OCC length of the port 1 is 2-length, and FD-OCC lengths of the port 6 and the port 12 are 4-length. Alternatively, the corresponding ports in the row 212 or 217 may be replaced with a port 0, a port 1, and a port 12, where an FD-OCC length of the port 1 is 2-length, and FD-OCC lengths of the port 0 and the port 12 are 4-length. Alternatively, the corresponding ports in the row 212 or 217 may be replaced with a port 1, a port 6, and a port 18, where an FD-OCC length of the port 1 is 2-length, and FD-OCC lengths of the port 6 and the port 18 are 4-length.

For another example, when the first value is the row 213 or 218, the M ports may include a port 0, a port 1, a port 7, and a port 13 that correspond to the row 213 or 218, an FD-OCC length of the port 0 is 2-length, and FD-OCC lengths of the port 1, the port 7, and the port 13 are 4-length. The corresponding ports in the row 213 or 218 may be replaced with a port 0, a port 1, a port 7, and a port 19, where an FD-OCC length of the port 0 is 2-length, and FD-OCC lengths of the port 1, the port 7, and the port 19 are 4-length. Alternatively, the corresponding ports in the row 213 or 218 may be replaced with a port 0, a port 1, a port 7, and a port 19, where an FD-OCC length of the port 0 is 2-length, and FD-OCC lengths of the port 1, the port 7, and the port 19 are 4-length. Alternatively, the corresponding ports in the row 213 or 218 may be replaced with a port 0, a port 1, a port 13, and a port 19, where an FD-OCC length of the port 0 is 2-length, and FD-OCC lengths of the port 1, the port 13, and the port 19 are 4-length. Alternatively, the corresponding ports in the row 213 or 218 may be replaced with a port 0, a port 1, a port 6, and a port 12, where an FD-OCC length of the port 1 is 2-length, and FD-OCC lengths of the port 0, the port 6, and the port 12 are 4-length. Alternatively, the corresponding ports in the row 213 or 218 may be replaced with a port 0, a port 1, a port 12, and a port 18, where an FD-OCC length of the port 1 is 2-length, and FD-OCC lengths of the port 0, the port 12, and the port 18 are 4-length. Alternatively, the corresponding ports in the row 213 or 218 may be replaced with a port 0, a port 1, a port 6, and a port 18, where an FD-OCC length of the port 1 is 2-length, and FD-OCC lengths of the port 0, the port 6, and the port 18 are 4-length.

For another example, when the first value is the row 214 or 219, the M ports may include a port 0, a port 6, and a port 1 that correspond to the row 214 or 219, FD-OCC lengths of the port 0 and the port 6 are 2-length, and an FD-OCC length of the port 1 is 4-length. The corresponding ports in the row 214 or 219 may be replaced with a port 0, a port 6, and a port 7, where FD-OCC lengths of the port 0 and the port 7 are 2-length, and an FD-OCC length of the port 7 is 4-length. Alternatively, the corresponding ports in the row 214 or 219 may be replaced with a port 0, a port 6, and a port 13, where FD-OCC lengths of the port 0 and the port 6 are 2-length, and an FD-OCC length of the port 13 is 4-length. Alternatively, the corresponding ports in the row 214 or 219 may be replaced with a port 0, a port 6, and a port 19, where FD-OCC lengths of the port 0 and the port 6 are 2-length, and an FD-OCC length of the port 19 is 4-length. Alternatively, the corresponding ports in the row 214 or 219 may be replaced with a port 1, a port 7, and a port 6, where FD-OCC lengths of the port 1 and the port 7 are 2-length, and an FD-OCC length of the port 6 is 4-length. Alternatively, the corresponding ports in the row 214 or 219 may be replaced with a port 1, a port 7, and a port 12, where FD-OCC lengths of the port 1 and the port 7 are 2-length, and an FD-OCC length of the port 12 is 4-length. Alternatively, the corresponding ports in the row 214 or 219 may be replaced with a port 0, a port 1, a port 6, and a port 7, where FD-OCC lengths of the port 1 and the port 7 are 2-length, and FD-OCC lengths of the port 0 and the port 6 are 4-length.

For another example, when the first value is the row 215 or 220, the M ports may include a port 0, a port 6, a port 13, and a port 19 that correspond to the row 105, FD-OCC lengths of the port 0 and the port 6 are 2-length, and FD-OCC lengths of the port 13 and the port 19 are 4-length. The corresponding ports in the row 215 or 220 may be replaced with a port 0, a port 6, a port 7, and a port 19, where FD-OCC lengths of the port 0 and the port 6 are 2-length, and FD-OCC lengths of the port 7 and the port 19 are 4-length. Alternatively, the corresponding ports in the row 215 or 220 may be replaced with a port 0, a port 6, a port 7, and a port 13, where FD-OCC lengths of the port 0 and the port 6 are 2-length, and FD-OCC lengths of the port 7 and the port 13 are 4-length. Alternatively, the corresponding ports in the row 215 or 220 may be replaced with a port 1, a port 7, a port 12, and a port 18, where FD-OCC lengths of the port 1 and the port 7 are 2-length, and FD-OCC lengths of the port 18 and the port 12 are 4-length. Alternatively, the corresponding ports in the row 215 or 220 may be replaced with a port 1, a port 7, a port 6, and a port 18, where FD-OCC lengths of the port 1 and the port 7 are 2-length, and FD-OCC lengths of the port 18 and the port 6 are 4-length. Alternatively, the corresponding ports in the row 215 or 220 may be replaced with a port 0, a port 1, a port 6, and a port 7, where FD-OCC lengths of the port 1 and the port 7 are 2-length, and FD-OCC lengths of the port 0 and the port 6 are 4-length.

In addition, it can be learned from table 24-B1 that an R18 port of type2 supports a maximum of 24-stream transmission, that is, table 24-B1 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 58 to 215 in table 24-B1.

For example, the network device may indicate a port 0, a port 1, a port 2, and a port 3 in the row 113 to a terminal device 1, indicate a port 7, a port 12, and a port 13 in the row 141 to a terminal device 2, indicate a port 9, a port 18, and a port 19 in the row 147 or 148 to a terminal device 3, indicate a port 14, a port 15, a port 20, and a port 21 in the row 145 to a terminal device 4, indicate a port 16, a port 17, a port 22, and a port 23 in the row 146 to a terminal device 5, indicate a port 4 and a port 5 in the row 169 to a terminal device 6, indicate a port 6 in the row 180 to a terminal device 7, indicate a port 10 and a port 11 in the row 191 to a terminal device 8, and indicate a port 8 in the row 182 to a terminal device 9. To be specific, the network device indicates four streams to the terminal device 1, indicates three streams to the terminal device 2, indicates three streams to the terminal device 3, indicates four streams to the terminal device 4, indicates four streams to the terminal device 5, indicates two streams to the terminal device 6, indicates one stream to the terminal device 7, indicates two streams to the terminal device 8, and indicates one stream to the terminal device 9, to form 24-stream transmission pairing. The corresponding ports in the row 147 or 148 may be replaced with a port 7, a port 20, and a port 21.

In addition, it can be learned from table 24-B1 that table 24-B1 includes any port combination for 4-stream transmission supported by an R15 port, and a number of ports corresponding to each port combination (that is, each row in table 24-B1) is less than or equal to 4, that is, rows 0 to 57 in table 24-B1. For example, the network device may indicate a port 0 and a port 1 in the row 2 to a terminal device 1, and indicate a port 2 and a port 3 in the row 8 to a terminal device 2, so that the terminal device 1 and the terminal device 2 are simultaneously scheduled in a same slot (that is, scheduled on a same time-frequency resource). For another example, the network device may indicate a port 0 in the row 5 to a terminal device 1, and indicate a port 3 in the row 6 to a terminal device 2, so that the terminal device 1 and the terminal device 2 are simultaneously scheduled in a same slot (that is, scheduled on a same time-frequency resource). An existing protocol specifies that when the network device indicates a port 0, a port 1, and a port 2 in the row 9, or indicates a port 0, a port 1, a port 2, and a port 3 in the row 10, or indicates a port 0, a port 1, and a port 2 in the row 11, or indicates a port 0 and a port 2 in the row 23 to a terminal device 1, ports corresponding to the row 9, the row 10, the row 11, and the row 23 are used only for single-UE transmission. Therefore, only the terminal device 1 is scheduled, that is, no other terminal is scheduled on a same time-frequency resource as the terminal device 1.

Optionally, table 24-B1 may not include a value set corresponding to the R15 port (a row corresponding to a port combination of R15 ports). That is, rows 0 to 57 in table 24-B1 may be deleted.

**Table 24-B1: Type2-E or Type2-R18, maxlength=2**

| One codeword (One Codeword): Codeword 0 enabled (Codeword 0 enabled), Codeword 1 disabled (Codeword 1 disabled) | | | | Two codewords (Two Codewords): Codeword 0 enabled (Codeword 0 enabled), Codeword 1 disabled (Codeword 1 disabled) | | | |
|---|---|---|---|---|---|---|---|
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0, 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0, 1 | 2 | | | | |
| 37 | 3 | 2, 3 | 2 | | | | |
| 38 | 3 | 4, 5 | 2 | | | | |
| 39 | 3 | 6, 7 | 2 | | | | |
| 40 | 3 | 8, 9 | 2 | | | | |
| 41 | 3 | 10, 11 | 2 | | | | |
| 42 | 3 | 0, 1, 6 | 2 | | | | |
| 43 | 3 | 2, 3, 8 | 2 | | | | |
| 44 | 3 | 4, 5, 10 | 2 | | | | |
| 45 | 3 | 0, 1, 6, 7 | 2 | | | | |
| 46 | 3 | 2, 3, 8, 9 | 2 | | | | |
| 47 | 3 | 4, 5, 10, 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0, 1 | 2 | | | | |
| 53 | 1 | 6, 7 | 2 | | | | |
| 54 | 2 | 0, 1 | 2 | | | | |
| 55 | 2 | 2, 3 | 2 | | | | |
| 56 | 2 | 6, 7 | 2 | | | | |
| 57 | 2 | 8, 9 | 2 | | | | |
| 58 | 1 | 12 | 1 | | | | |
| 59 | 1 | 13 | 1 | | | | |
| 60 | 1 | 12, 13 | 1 | | | | |
| 61 | 1 | 0, 1, 12 | 1 | | | | |
| 62 | 1 | 0, 1, 12, 13 | 1 | | | | |
| 63 | 2 | 12 | 1 | | | | |
| 64 | 2 | 13 | 1 | | | | |
| 65 | 2 | 12, 13 | 1 | | | | |
| 66 | 2 | 0, 1, 12 | 1 | | | | |
| 67 | 2 | 0, 1, 12, 13 | 1 | | | | |
| 68 | 2 | 14 | 1 | | | | |
| 69 | 2 | 15 | 1 | | | | |
| 70 | 2 | 14, 15 | 1 | | | | |
| 71 | 2 | 2, 3, 14 | 1 | | | | |
| 72 | 2 | 2, 3, 14, 15 | 1 | | | | |
| 73 | 3 | 12 | 1 | | | | |
| 74 | 3 | 13 | 1 | | | | |
| 75 | 3 | 12, 13 | 1 | | | | |
| 76 | 3 | 0, 1, 12 | 1 | | | | |
| 77 | 3 | 0, 1, 12, 13 | 1 | | | | |
| 78 | 3 | 14 | 1 | | | | |
| 79 | 3 | 15 | 1 | | | | |
| 80 | 3 | 14, 15 | 1 | | | | |
| 81 | 3 | 2, 3, 14 | 1 | | | | |
| 82 | 3 | 2, 3, 14, 15 | 1 | | | | |
| 83 | 3 | 16 | 1 | | | | |
| 84 | 3 | 17 | 1 | | | | |
| 85 | 3 | 16, 17 | 1 | | | | |
| 86 | 3 | 4, 5, 16 | 1 | | | | |
| 87 | 3 | 4, 5, 16, 17 | 1 | | | | |
| 88 | 3 | 13, 15, 17 | 1 | | | | |
| 89 | 2 | 13, 15 | 1 | | | | |
| 90 | 3 | 13, 15 | 1 | | | | |
| 91 | 1 | 0(FD-OCC2) | 1 | | | | |
| 92 | 1 | 1(FD-OCC2) | 1 | | | | |
| 93 | 1 | 0(FD-OCC2), 1(FD-OCC2) | 1 | | | | |
| 94 | 2 | 0(FD-OCC2) | 1 | | | | |
| 95 | 2 | 1(FD-OCC2) | 1 | | | | |
| 96 | 2 | 2(FD-OCC2) | 1 | | | | |
| 97 | 2 | 3(FD-OCC2) | 1 | | | | |
| 98 | 2 | 0(FD-OCC2), 1(FD-OCC2) | 1 | | | | |
| 99 | 2 | 2(FD-OCC2), 3(FD-OCC2) | 1 | | | | |
| 100 | 2 | 0-2(FD-OCC2) | 1 | | | | |
| 101 | 2 | 0-3(FD-OCC2) | 1 | | | | |
| 102 | 3 | 0(FD-OCC2) | 1 | | | | |
| 103 | 3 | 1(FD-OCC2) | 1 | | | | |
| 104 | 3 | 2(FD-OCC2) | 1 | | | | |
| 105 | 3 | 3(FD-OCC2) | 1 | | | | |
| 106 | 3 | 4(FD-OCC2) | 1 | | | | |
| 107 | 3 | 5(FD-OCC2) | 1 | | | | |
| 108 | 3 | 0(FD-OCC2), 1(FD-OCC2) | 1 | | | | |
| 109 | 3 | 2(FD-OCC2), 3(FD-OCC2) | 1 | | | | |
| 110 | 3 | 4(FD-OCC2), 5(FD-OCC2) | 1 | | | | |
| 111 | 3 | 0-2(FD-OCC2) | 1 | | | | |
| 112 | 3 | 3-5(FD-OCC2) | 1 | | | | |
| 113 | 3 | 0-3(FD-OCC2) | 1 | | | | |
| 114 | 1 | 1, 13 | 1 | | | | |
| 115 | 2 | 1, 13 | 1 | | | | |
| 116 | 3 | 1, 13 | 1 | | | | |
| 117 | 1 | 0(FD-OCC2), 1, 13 | 1 | | | | |
| 118 | 2 | 0(FD-OCC2), 1, 13 | 1 | | | | |
| 119 | 3 | 0(FD-OCC2), 1, 13, or 0, 1 (FD-OCC2), 12 | 1 | | | | |
| 120 | 1 | 0(FD-OCC2), 1, or 0, 1(FD-OCC2) | 1 | | | | |
| 121 | 2 | 0(FD-OCC2), 1, or 0, 1(FD-OCC2) | 1 | | | | |
| 122 | 3 | 0(FD-OCC2), 1, or 0, 1(FD-OCC2) | 1 | | | | |
| 123 | 3 | 12 | 2 | | | | |
| 124 | 3 | 13 | 2 | | | | |
| 125 | 3 | 14 | 2 | | | | |
| 126 | 3 | 15 | 2 | | | | |
| 127 | 3 | 16 | 2 | | | | |
| 128 | 3 | 17 | 2 | | | | |
| 129 | 3 | 18 | 2 | | | | |
| 130 | 3 | 19 | 2 | | | | |
| 131 | 3 | 20 | 2 | | | | |
| 132 | 3 | 21 | 2 | | | | |
| 133 | 3 | 22 | 2 | | | | |
| 134 | 3 | 23 | 2 | | | | |
| 135 | 3 | 12, 13 | 2 | | | | |
| 136 | 3 | 14, 15 | 2 | | | | |
| 137 | 3 | 16, 17 | 2 | | | | |
| 138 | 3 | 18, 19 | 2 | | | | |
| 139 | 3 | 20, 21 | 2 | | | | |
| 140 | 3 | 22, 23 | 2 | | | | |
| 141 | 3 | 7, 12, 13 | 2 | | | | |
| 142 | 3 | 14, 15, 20 | 2 | | | | |
| 143 | 3 | 11, 16, 17 | 2 | | | | |
| 144 | 3 | 12, 13, 18, 19 | 2 | | | | |
| 145 | 3 | 14, 15, 20, 21 | 2 | | | | |
| 146 | 3 | 16, 17, 22, 23 | 2 | | | | |
| 147 | 2 | 9, 18, 19 | 2 | | | | |
| 148 | 3 | 9, 18, 19 | 2 | | | | |
| 149 | 2 | 21, 22, 23 | 2 | | | | |
| 150 | 1 | 0(FD-OCC2) | 1 | | | | |
| 151 | 1 | 1(FD-OCC2) | 1 | | | | |
| 152 | 1 | 0(FD-OCC2), 1(FD-OCC2) | 1 | | | | |
| 153 | 2 | 0(FD-OCC2) | 1 | | | | |
| 154 | 2 | 1(FD-OCC2) | 1 | | | | |
| 155 | 2 | 2(FD-OCC2) | 1 | | | | |
| 156 | 2 | 3(FD-OCC2) | 1 | | | | |
| 157 | 2 | 0(FD-OCC2), 1(FD-OCC2) | 1 | | | | |
| 158 | 2 | 2(FD-OCC2), 3(FD-OCC2) | 1 | | | | |
| 159 | 2 | 0-2(FD-OCC2) | 1 | | | | |
| 160 | 2 | 0-3(FD-OCC2) | 1 | | | | |
| 161 | 3 | 0(FD-OCC2) | 1 | | | | |
| 162 | 3 | 1(FD-OCC2) | 1 | | | | |
| 163 | 3 | 2(FD-OCC2) | 1 | | | | |
| 164 | 3 | 3(FD-OCC2) | 1 | | | | |
| 165 | 3 | 4(FD-OCC2) | 1 | | | | |
| 166 | 3 | 5(FD-OCC2) | 1 | | | | |
| 167 | 3 | 0(FD-OCC2), 1(FD-OCC2) | 1 | | | | |
| 168 | 3 | 2(FD-OCC2), 3(FD-OCC2) | 1 | | | | |
| 169 | 3 | 4(FD-OCC2), 5(FD-OCC2) | 1 | | | | |
| 170 | 3 | 0-2(FD-OCC2) | 1 | | | | |
| 171 | 3 | 3-5(FD-OCC2) | 1 | | | | |
| 172 | 3 | 0-3(FD-OCC2) | 1 | | | | |
| 173 | 2 | 0, 2(FD-OCC2) | 1 | | | | |
| 174 | 3 | 0(FD-OCC2) | 2 | | | | |
| 175 | 3 | 1(FD-OCC2) | 2 | | | | |
| 176 | 3 | 2(FD-OCC2) | 2 | | | | |
| 177 | 3 | 3(FD-OCC2) | 2 | | | | |
| 178 | 3 | 4(FD-OCC2) | 2 | | | | |
| 179 | 3 | 5(FD-OCC2) | 2 | | | | |
| 180 | 3 | 6(FD-OCC2) | 2 | | | | |
| 181 | 3 | 7(FD-OCC2) | 2 | | | | |
| 182 | 3 | 8(FD-OCC2) | 2 | | | | |
| 183 | 3 | 9(FD-OCC2) | 2 | | | | |
| 184 | 3 | 10(FD-OCC2) | 2 | | | | |
| 185 | 3 | 11(FD-OCC2) | 2 | | | | |
| 186 | 3 | 0(FD-OCC2), 1(FD-OCC2) | 2 | | | | |
| 187 | 3 | 2(FD-OCC2), 3(FD-OCC2) | 2 | | | | |
| 188 | 3 | 4(FD-OCC2), 5(FD-OCC2) | 2 | | | | |
| 189 | 3 | 6(FD-OCC2), 7(FD-OCC2) | 2 | | | | |
| 190 | 3 | 8(FD-OCC2), 9(FD-OCC2) | 2 | | | | |
| 191 | 3 | 10(FD-OCC2), 11(FD-OCC2) | 2 | | | | |
| 192 | 3 | 0(FD-OCC2), 1(FD-OCC2), 6(FD-OCC2) | 2 | | | | |
| 193 | 3 | 2(FD-OCC2), 3(FD-OCC2), 8(FD-OCC2) | 2 | | | | |
| 194 | 3 | 4(FD-OCC2), 5(FD-OCC2), 10(FD-OCC2) | 2 | | | | |
| 195 | 3 | 0(FD-OCC2), 1(FD-OCC2), 6(FD-OCC2), 7(FD-OCC2) | 2 | | | | |
| 196 | 3 | 2(FD-OCC2), 3(FD-OCC2), 8(FD-OCC2), 9(FD-OCC2) | 2 | | | | |
| 197 | 3 | 4(FD-OCC2), 5(FD-OCC2), 10(FD-OCC2), 11(FD-OCC2) | 2 | | | | |
| 198 | 1 | 0(FD-OCC2) | 2 | | | | |
| 199 | 1 | 1(FD-OCC2) | 2 | | | | |
| 200 | 1 | 6(FD-OCC2) | 2 | | | | |
| 201 | 1 | 7(FD-OCC2) | 2 | | | | |
| 202 | 1 | 0(FD-OCC2), 1(FD-OCC2) | 2 | | | | |
| 203 | 1 | 6(FD-OCC2), 7(FD-OCC2) | 2 | | | | |
| 204 | 2 | 0(FD-OCC2), 1(FD-OCC2) | 2 | | | | |
| 205 | 2 | 2(FD-OCC2), 3(FD-OCC2) | 2 | | | | |
| 206 | 2 | 6(FD-OCC2), 7(FD-OCC2) | 2 | | | | |
| 207 | 2 | 8(FD-OCC2), 9(FD-OCC2) | 2 | | | | |
| 208 | 3 | 1, 13 | 2 | | | | |
| 209 | 3 | 1, 7, 13 | 2 | | | | |
| 210 | 3 | 1, 7, 13, 19 | 2 | | | | |
| 211 | 3 | 0(FD-OCC2), 1 | 2 | | | | |
| 212 | 3 | 0(FD-OCC2), 1, 13 | 2 | | | | |
| 213 | 3 | 0(FD-OCC2), 1, 7, 13 | 2 | | | | |
| 214 | 3 | 0(FD-OCC2), 6(FD-OCC2), 1 | 2 | | | | |
| 215 | 3 | 0(FD-OCC2), 6(FD-OCC2), 13, 19 | 2 | | | | |
| 216 | 3 | 0(FD-OCC2), 1 | 2 | | | | |
| 217 | 3 | 0(FD-OCC2), 1, 13 | 2 | | | | |
| 218 | 3 | 0(FD-OCC2), 1, 7, 13 | 2 | | | | |
| 219 | 3 | 0(FD-OCC2), 6(FD-OCC2), 1 | 2 | | | | |
| 220 | 3 | 0(FD-OCC2), 6(FD-OCC2), 13, 19 | 2 | | | | |
| 221~256 | Reserved | Reserved | Reserved | | | | |

Table 24-B2 occupies 8 bits. In table 24-B2, an FD-OCC length corresponding to a port that is not indicated is 4-length by default. It can be learned from table 24-B 1 that an FD-OCC length of a same port may be dynamically switched (for example, the network device may indicate, by using DCI signaling, the terminal device to perform switching). In a possible implementation, the first indication information is carried in first signaling, the first signaling further includes second indication information, the second indication information indicates a first value, and the first value is associated with indexes of the M ports. The first value may be understood as an index in a row in table 24-B2, for example, row 90 to row 112 and row 140 to row 197. For a specific example, refer to related descriptions in table 24-B1.

In addition, it can be learned from table 24-B2 that an R18 port of type2 supports a maximum of 24-stream transmission, that is, table 24-B1 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 57 to 197 in table 24-B1.

For example, the network device may indicate a port 0, a port 1, a port 2, and a port 3 in the row 113 to a terminal device 1, indicate a port 7, a port 12, and a port 13 in the row 131 to a terminal device 2, indicate a port 9, a port 18, and a port 19 in the row 137 or 138 to a terminal device 3, indicate a port 14, a port 15, a port 20, and a port 21 in the row 135 to a terminal device 4, indicate a port 16, a port 17, a port 22, and a port 23 in the row 136 to a terminal device 5, indicate a port 4 and a port 5 in the row 159 to a terminal device 6, indicate a port 6 in the row 172 to a terminal device 7, indicate a port 10 and a port 11 in the row 181 to a terminal device 8, and indicate a port 8 in the row 172 to a terminal device 9. To be specific, the network device indicates four streams to the terminal device 1, indicates three streams to the terminal device 2, indicates three streams to the terminal device 3, indicates four streams to the terminal device 4, indicates four streams to the terminal device 5, indicates two streams to the terminal device 6, indicates one stream to the terminal device 7, indicates two streams to the terminal device 8, and indicates one stream to the terminal device 9, to form 24-stream transmission pairing. The corresponding ports in the row 137 or 138 may be replaced with a port 7, a port 20, and a port 21.

In addition, it can be learned from table 24-B2 that table 24-B2 includes port combinations for 4-stream transmission supported by the R15 port, and all rows are used for MU.

**Table 24-B2: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1,2,3,6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 3 | 0 | 2 | | | | |
| 24 | 3 | 1 | 2 | | | | |
| 25 | 3 | 2 | 2 | | | | |
| 26 | 3 | 3 | 2 | | | | |
| 27 | 3 | 4 | 2 | | | | |
| 28 | 3 | 5 | 2 | | | | |
| 29 | 3 | 6 | 2 | | | | |
| 30 | 3 | 7 | 2 | | | | |
| 31 | 3 | 8 | 2 | | | | |
| 32 | 3 | 9 | 2 | | | | |
| 33 | 3 | 10 | 2 | | | | |
| 34 | 3 | 11 | 2 | | | | |
| 35 | 3 | 0, 1 | 2 | | | | |
| 36 | 3 | 2, 3 | 2 | | | | |
| 37 | 3 | 4, 5 | 2 | | | | |
| 38 | 3 | 6, 7 | 2 | | | | |
| 39 | 3 | 8, 9 | 2 | | | | |
| 40 | 3 | 10, 11 | 2 | | | | |
| 41 | 3 | 0, 1, 6 | 2 | | | | |
| 42 | 3 | 2, 3, 8 | 2 | | | | |
| 43 | 3 | 4, 5, 10 | 2 | | | | |
| 44 | 3 | 0, 1, 6, 7 | 2 | | | | |
| 45 | 3 | 2,3,8,9 | 2 | | | | |
| 46 | 3 | 4, 5, 10, 11 | 2 | | | | |
| 47 | 1 | 0 | 2 | | | | |
| 48 | 1 | 1 | 2 | | | | |
| 49 | 1 | 6 | 2 | | | | |
| 50 | 1 | 7 | 2 | | | | |
| 51 | 1 | 0, 1 | 2 | | | | |
| 52 | 1 | 6, 7 | 2 | | | | |
| 53 | 2 | 0, 1 | 2 | | | | |
| 54 | 2 | 2, 3 | 2 | | | | |
| 55 | 2 | 6, 7 | 2 | | | | |
| 56 | 2 | 8, 9 | 2 | | | | |
| 57 | 1 | 12 | 1 | | | | |
| 58 | 1 | 13 | 1 | | | | |
| 59 | 1 | 12, 13 | 1 | | | | |
| 60 | 1 | 0, 1, 12 | 1 | | | | |
| 61 | 1 | 0, 1, 12, 13 | 1 | | | | |
| 62 | 2 | 12 | 1 | | | | |
| 63 | 2 | 13 | 1 | | | | |
| 64 | 2 | 12, 13 | 1 | | | | |
| 65 | 2 | 0, 1, 12 | 1 | | | | |
| 66 | 2 | 0, 1, 12, 13 | 1 | | | | |
| 67 | 2 | 14 | 1 | | | | |
| 68 | 2 | 15 | 1 | | | | |
| 69 | 2 | 14, 15 | 1 | | | | |
| 70 | 2 | 2, 3, 14 | 1 | | | | |
| 71 | 2 | 2, 3, 14, 15 | 1 | | | | |
| 72 | 3 | 12 | 1 | | | | |
| 73 | 3 | 13 | 1 | | | | |
| 74 | 3 | 12, 13 | 1 | | | | |
| 75 | 3 | 0, 1, 12 | 1 | | | | |
| 76 | 3 | 0, 1, 12, 13 | 1 | | | | |
| 77 | 3 | 14 | 1 | | | | |
| 78 | 3 | 15 | 1 | | | | |
| 79 | 3 | 14, 15 | 1 | | | | |
| 80 | 3 | 2, 3, 14 | 1 | | | | |
| 81 | 3 | 2, 3, 14, 15 | 1 | | | | |
| 82 | 3 | 16 | 1 | | | | |
| 83 | 3 | 17 | 1 | | | | |
| 84 | 3 | 16, 17 | 1 | | | | |
| 85 | 3 | 4, 5, 16 | 1 | | | | |
| 86 | 3 | 4, 5, 16, 17 | 1 | | | | |
| 87 | 3 | 13, 15, 17 | 1 | | | | |
| 88 | 2 | 13, 15 | 1 | | | | |
| 89 | 3 | 13, 15 | 1 | | | | |
| 90 | 1 | 0(FD-OCC2) | 1 | | | | |
| 91 | 1 | 1(FD-OCC2) | 1 | | | | |
| 92 | 1 | 0(FD-OCC2), 1(FD-OCC2) | 1 | | | | |
| 93 | 2 | 0(FD-OCC2) | 1 | | | | |
| 94 | 2 | 1(FD-OCC2) | 1 | | | | |
| 95 | 2 | 2(FD-OCC2) | 1 | | | | |
| 96 | 2 | 3(FD-OCC2) | 1 | | | | |
| 97 | 2 | 0(FD-OCC2), 1(FD-OCC2) | 1 | | | | |
| 98 | 2 | 2(FD-OCC2), 3(FD-OCC2) | 1 | | | | |
| 99 | 2 | 0-2(FD-OCC2) | 1 | | | | |
| 100 | 2 | 0-3(FD-OCC2) | 1 | | | | |
| 101 | 3 | 0(FD-OCC2) | 1 | | | | |
| 102 | 3 | 1(FD-OCC2) | 1 | | | | |
| 103 | 3 | 2(FD-OCC2) | 1 | | | | |
| 104 | 3 | 3(FD-OCC2) | 1 | | | | |
| 105 | 3 | 4(FD-OCC2) | 1 | | | | |
| 106 | 3 | 5(FD-OCC2) | 1 | | | | |
| 107 | 3 | 0(FD-OCC2), 1(FD-OCC2) | 1 | | | | |
| 108 | 3 | 2(FD-OCC2), 3(FD-OCC2) | 1 | | | | |
| 109 | 3 | 4(FD-OCC2), 5(FD-OCC2) | 1 | | | | |
| 110 | 3 | 0-2(FD-OCC2) | 1 | | | | |
| 111 | 3 | 3-5(FD-OCC2) | 1 | | | | |
| 112 | 3 | 0-3(FD-OCC2) | 1 | | | | |
| 113 | 3 | 12 | 2 | | | | |
| 114 | 3 | 13 | 2 | | | | |
| 115 | 3 | 14 | 2 | | | | |
| 116 | 3 | 15 | 2 | | | | |
| 117 | 3 | 16 | 2 | | | | |
| 118 | 3 | 17 | 2 | | | | |
| 119 | 3 | 18 | 2 | | | | |
| 120 | 3 | 19 | 2 | | | | |
| 121 | 3 | 20 | 2 | | | | |
| 122 | 3 | 21 | 2 | | | | |
| 123 | 3 | 22 | 2 | | | | |
| 124 | 3 | 23 | 2 | | | | |
| 125 | 3 | 12, 13 | 2 | | | | |
| 126 | 3 | 14, 15 | 2 | | | | |
| 127 | 3 | 16, 17 | 2 | | | | |
| 128 | 3 | 18, 19 | 2 | | | | |
| 129 | 3 | 20, 21 | 2 | | | | |
| 130 | 3 | 22, 23 | 2 | | | | |
| 131 | 3 | 7, 12, 13 | 2 | | | | |
| 132 | 3 | 14, 15, 20 | 2 | | | | |
| 133 | 3 | 11, 16, 17 | 2 | | | | |
| 134 | 3 | 12, 13, 18, 19 | 2 | | | | |
| 135 | 3 | 14, 15, 20, 21 | 2 | | | | |
| 136 | 3 | 16, 17, 22, 23 | 2 | | | | |
| 137 | 2 | 9, 18, 19 | 2 | | | | |
| 138 | 3 | 9, 18, 19 | 2 | | | | |
| 139 | 2 | 21, 22, 23 | 2 | | | | |
| 140 | 1 | 0(FD-OCC2) | 1 | | | | |
| 141 | 1 | 1(FD-OCC2) | 1 | | | | |
| 142 | 1 | 0(FD-OCC2), 1(FD-OCC2) | 1 | | | | |
| 143 | 2 | 0(FD-OCC2) | 1 | | | | |
| 144 | 2 | 1(FD-OCC2) | 1 | | | | |
| 145 | 2 | 2(FD-OCC2) | 1 | | | | |
| 146 | 2 | 3(FD-OCC2) | 1 | | | | |
| 147 | 2 | 0(FD-OCC2), 1(FD-OCC2) | 1 | | | | |
| 148 | 2 | 2(FD-OCC2), 3(FD-OCC2) | 1 | | | | |
| 149 | 2 | 0-2(FD-OCC2) | 1 | | | | |
| 150 | 2 | 0-3(FD-OCC2) | 1 | | | | |
| 151 | 3 | 0(FD-OCC2) | 1 | | | | |
| 152 | 3 | 1(FD-OCC2) | 1 | | | | |
| 153 | 3 | 2(FD-OCC2) | 1 | | | | |
| 154 | 3 | 3(FD-OCC2) | 1 | | | | |
| 155 | 3 | 4(FD-OCC2) | 1 | | | | |
| 156 | 3 | 5(FD-OCC2) | 1 | | | | |
| 157 | 3 | 0(FD-OCC2), 1(FD-OCC2) | 1 | | | | |
| 158 | 3 | 2(FD-OCC2), 3(FD-OCC2) | 1 | | | | |
| 159 | 3 | 4(FD-OCC2), 5(FD-OCC2) | 1 | | | | |
| 160 | 3 | 0-2(FD-OCC2) | 1 | | | | |
| 161 | 3 | 3-5(FD-OCC2) | 1 | | | | |
| 162 | 3 | 0-3(FD-OCC2) | 1 | | | | |
| 163 | 2 | 0, 2(FD-OCC2) | 1 | | | | |
| 164 | 3 | 0(FD-OCC2) | 2 | | | | |
| 165 | 3 | 1(FD-OCC2) | 2 | | | | |
| 166 | 3 | 2(FD-OCC2) | 2 | | | | |
| 167 | 3 | 3(FD-OCC2) | 2 | | | | |
| 168 | 3 | 4(FD-OCC2) | 2 | | | | |
| 169 | 3 | 5(FD-OCC2) | 2 | | | | |
| 170 | 3 | 6(FD-OCC2) | 2 | | | | |
| 171 | 3 | 7(FD-OCC2) | 2 | | | | |
| 172 | 3 | 8(FD-OCC2) | 2 | | | | |
| 173 | 3 | 9(FD-OCC2) | 2 | | | | |
| 174 | 3 | 10(FD-OCC2) | 2 | | | | |
| 175 | 3 | 11 (FD-OCC2) | 2 | | | | |
| 176 | 3 | 0(FD-OCC2), 1(FD-OCC2) | 2 | | | | |
| 177 | 3 | 2(FD-OCC2), 3(FD-OCC2) | 2 | | | | |
| 178 | 3 | 4(FD-OCC2), 5(FD-OCC2) | 2 | | | | |
| 179 | 3 | 6(FD-OCC2), 7(FD-OCC2) | 2 | | | | |
| 180 | 3 | 8(FD-OCC2), 9(FD-OCC2) | 2 | | | | |
| 181 | 3 | 10(FD-OCC2), 11 (FD-OCC2) | 2 | | | | |
| 182 | 3 | 0(FD-OCC2), 1(FD-OCC2), 6(FD-OCC2) | 2 | | | | |
| 183 | 3 | 2(FD-OCC2), 3(FD-OCC2), 8(FD-OCC2) | 2 | | | | |
| 184 | 3 | 4(FD-OCC2), 5(FD-OCC2), 10(FD-OCC2) | 2 | | | | |
| 185 | 3 | 0(FD-OCC2), 1(FD-OCC2), 6(FD-OCC2), 7(FD-OCC2) | 2 | | | | |
| 186 | 3 | 2(FD-OCC2), 3(FD-OCC2), 8(FD-OCC2), 9(FD-OCC2) | 2 | | | | |
| 187 | 3 | 4(FD-OCC2), 5(FD-OCC2), 10(FD-OCC2), 11 (FD-OCC2) | 2 | | | | |
| 188 | 1 | 0(FD-OCC2) | 2 | | | | |
| 189 | 1 | 1(FD-OCC2) | 2 | | | | |
| 190 | 1 | 6(FD-OCC2) | 2 | | | | |
| 191 | 1 | 7(FD-OCC2) | 2 | | | | |
| 192 | 1 | 0(FD-OCC2), 1(FD-OCC2) | 2 | | | | |
| 193 | 1 | 6(FD-OCC2), 7(FD-OCC2) | 2 | | | | |
| 194 | 2 | 0(FD-OCC2), 1(FD-OCC2) | 2 | | | | |
| 195 | 2 | 2(FD-OCC2), 3(FD-OCC2) | 2 | | | | |
| 196 | 2 | 6(FD-OCC2), 7(FD-OCC2) | 2 | | | | |
| 197 | 2 | 8(FD-OCC2), 9(FD-OCC2) | 2 | | | | |
| 198 | Reserved | Reserved | Reserved | | | | |

A difference between table 24-B3 and table 24-B2 lies in that a corresponding example in which an FD-OCC length of a same port can be dynamically switched includes only three rows (that is, rows 90, 91, and 92). In this case, table 24-B3 occupies 7 bits, and table 24-B2 occupies 8 bits. Therefore, table 24-B3 can reduce bit consumption.

**Table 24-B3: Type2-E or Type2-R18, maxlength=2**

| One codeword (One Codeword): Codeword 0 enabled (Codeword 0 enabled), Codeword 1 disabled (Codeword 1 disabled) | | | | Two codewords (Two Codewords): Codeword 0 enabled (Codeword 0 enabled), Codeword 1 disabled (Codeword 1 disabled) | | | |
|---|---|---|---|---|---|---|---|
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 3 | 0 | 2 | | | | |
| 24 | 3 | 1 | 2 | | | | |
| 25 | 3 | 2 | 2 | | | | |
| 26 | 3 | 3 | 2 | | | | |
| 27 | 3 | 4 | 2 | | | | |
| 28 | 3 | 5 | 2 | | | | |
| 29 | 3 | 6 | 2 | | | | |
| 30 | 3 | 7 | 2 | | | | |
| 31 | 3 | 8 | 2 | | | | |
| 32 | 3 | 9 | 2 | | | | |
| 33 | 3 | 10 | 2 | | | | |
| 34 | 3 | 11 | 2 | | | | |
| 35 | 3 | 0, 1 | 2 | | | | |
| 36 | 3 | 2, 3 | 2 | | | | |
| 37 | 3 | 4, 5 | 2 | | | | |
| 38 | 3 | 6, 7 | 2 | | | | |
| 39 | 3 | 8, 9 | 2 | | | | |
| 40 | 3 | 10, 11 | 2 | | | | |
| 41 | 3 | 0, 1, 6 | 2 | | | | |
| 42 | 3 | 2, 3, 8 | 2 | | | | |
| 43 | 3 | 4, 5, 10 | 2 | | | | |
| 44 | 3 | 0, 1, 6, 7 | 2 | | | | |
| 45 | 3 | 2, 3, 8, 9 | 2 | | | | |
| 46 | 3 | 4, 5, 10, 11 | 2 | | | | |
| 47 | 1 | 0 | 2 | | | | |
| 48 | 1 | 1 | 2 | | | | |
| 49 | 1 | 6 | 2 | | | | |
| 50 | 1 | 7 | 2 | | | | |
| 51 | 1 | 0, 1 | 2 | | | | |
| 52 | 1 | 6, 7 | 2 | | | | |
| 53 | 2 | 0, 1 | 2 | | | | |
| 54 | 2 | 2, 3 | 2 | | | | |
| 55 | 2 | 6, 7 | 2 | | | | |
| 56 | 2 | 8, 9 | 2 | | | | |
| 57 | 1 | 12 | 1 | | | | |
| 58 | 1 | 13 | 1 | | | | |
| 59 | 1 | 12, 13 | 1 | | | | |
| 60 | 1 | 0, 1, 12 | 1 | | | | |
| 61 | 1 | 0, 1, 12, 13 | 1 | | | | |
| 62 | 2 | 12 | 1 | | | | |
| 63 | 2 | 13 | 1 | | | | |
| 64 | 2 | 12, 13 | 1 | | | | |
| 65 | 2 | 0, 1, 12 | 1 | | | | |
| 66 | 2 | 0, 1, 12, 13 | 1 | | | | |
| 67 | 2 | 14 | 1 | | | | |
| 68 | 2 | 15 | 1 | | | | |
| 69 | 2 | 14, 15 | 1 | | | | |
| 70 | 2 | 2, 3, 14 | 1 | | | | |
| 71 | 2 | 2, 3, 14, 15 | 1 | | | | |
| 72 | 3 | 12 | 1 | | | | |
| 73 | 3 | 13 | 1 | | | | |
| 74 | 3 | 12, 13 | 1 | | | | |
| 75 | 3 | 0, 1, 12 | 1 | | | | |
| 76 | 3 | 0, 1, 12, 13 | 1 | | | | |
| 77 | 3 | 14 | 1 | | | | |
| 78 | 3 | 15 | 1 | | | | |
| 79 | 3 | 14, 15 | 1 | | | | |
| 80 | 3 | 2, 3, 14 | 1 | | | | |
| 81 | 3 | 2, 3, 14, 15 | 1 | | | | |
| 82 | 3 | 16 | 1 | | | | |
| 83 | 3 | 17 | 1 | | | | |
| 84 | 3 | 16, 17 | 1 | | | | |
| 85 | 3 | 4, 5, 16 | 1 | | | | |
| 86 | 3 | 4, 5, 16, 17 | 1 | | | | |
| 87 | 3 | 13, 15, 17 | 1 | | | | |
| 88 | 2 | 13, 15 | 1 | | | | |
| 89 | 3 | 13, 15 | 1 | | | | |
| 90 | 3 | 12 | 2 | | | | |
| 91 | 3 | 13 | 2 | | | | |
| 92 | 3 | 14 | 2 | | | | |
| 93 | 3 | 15 | 2 | | | | |
| 94 | 3 | 16 | 2 | | | | |
| 95 | 3 | 17 | 2 | | | | |
| 96 | 3 | 18 | 2 | | | | |
| 97 | 3 | 19 | 2 | | | | |
| 98 | 3 | 20 | 2 | | | | |
| 99 | 3 | 21 | 2 | | | | |
| 100 | 3 | 22 | 2 | | | | |
| 101 | 3 | 23 | 2 | | | | |
| 102 | 3 | 12, 13 | 2 | | | | |
| 103 | 3 | 14, 15 | 2 | | | | |
| 104 | 3 | 16, 17 | 2 | | | | |
| 105 | 3 | 18, 19 | 2 | | | | |
| 106 | 3 | 20, 21 | 2 | | | | |
| 107 | 3 | 22, 23 | 2 | | | | |
| 108 | 3 | 7, 12, 13 | 2 | | | | |
| 109 | 3 | 14, 15, 20 | 2 | | | | |
| 110 | 3 | 11, 16, 17 | 2 | | | | |
| 111 | 3 | 12, 13, 18, 19 | 2 | | | | |
| 112 | 3 | 14, 15, 20, 21 | 2 | | | | |
| 113 | 3 | 16, 17, 22, 23 | 2 | | | | |
| 114 | 2 | 9, 18, 19 | 2 | | | | |
| 115 | 3 | 9, 18, 19 | 2 | | | | |
| 116 | 2 | 21, 22, 23 | 2 | | | | |
| 117 | 1 | 0(FD-OCC2) | 1 | | | | |
| 118 | 1 | 1(FD-OCC2) | 1 | | | | |
| 119 | 1 | 0(FD-OCC2), 1(FD-OCC2) | 1 | | | | |
| 120 | 2 | 0(FD-OCC2) | 1 | | | | |
| 121 | 2 | 1(FD-OCC2) | 1 | | | | |
| 122 | 2 | 2(FD-OCC2) | 1 | | | | |
| 123 | 2 | 3(FD-OCC2) | 1 | | | | |
| 124 | 2 | 0(FD-OCC2), 1(FD-OCC2) | 1 | | | | |
| 125 | 2 | 2(FD-OCC2), 3(FD-OCC2) | 1 | | | | |
| 126 | 2 | 0-2(FD-OCC2) | 1 | | | | |
| 127 | 2 | 0-3(FD-OCC2) | 1 | | | | |
| 128 | 1 | 0(FD-OCC2) | 2 | | | | |
| 129 | 1 | 1(FD-OCC2) | 2 | | | | |
| 130 | 1 | 6(FD-OCC2) | 2 | | | | |
| 131 | 1 | 7(FD-OCC2) | 2 | | | | |
| 132 | 1 | 0(FD-OCC2), 1(FD-OCC2) | 2 | | | | |
| 133 | 1 | 6(FD-OCC2), 7(FD-OCC2) | 2 | | | | |
| 134 | 2 | 0(FD-OCC2), 1(FD-OCC2) | 2 | | | | |
| 123~256 | Reserved | Reserved | Reserved | | | | |

Table 24-B4 occupies 8 bits. In table 24-B4, an FD-OCC length corresponding to a port that is not indicated is 4-length by default. It can be learned from table 24-B1 that an FD-OCC length of a same port may be dynamically switched (for example, the network device may indicate, by using DCI signaling, the terminal device to perform switching). In a possible implementation, the first indication information is carried in first signaling, the first signaling further includes second indication information, the second indication information indicates a first value, and the first value is associated with indexes of the M ports. The first value may be understood as an index in a row in table 24-B4, for example, row 90 to row 118 and row 142 to row 192. For a specific example, refer to related descriptions in table 24-B1.

In addition, it can be learned from table 24-B4 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal.

For example, it is assumed that the port 0 is allocated to another terminal. The M ports allocated by the network device to the current terminal device may include a port 1 and a port 13 corresponding to any one of the rows 113, 114, 115, and 201, and the port 1 and the port 13 belong to a same CDM group. However, 4-length frequency domain cover codes corresponding to the port 1 and the port 13 are orthogonal, but 2-length frequency domain cover codes corresponding to the port 1 and the port 13 are not orthogonal. Alternatively, the ports corresponding to any one of the rows 113, 114, 115, and 201 may be replaced with a port 0 and a port 12.

For another example, it is assumed that the port 0 is allocated to another terminal. The M ports allocated by the network device to the current terminal device may include a port 1, a port 7, and a port 13 that correspond to the row 202, and the port 1, the port 7, and the port 13 belong to a same CDM group. However, 4-length frequency domain cover codes corresponding to the port 1, the port 7, and the port 13 are orthogonal, but 2-length frequency domain cover codes corresponding to the port 1, the port 7, and the port 13 are not orthogonal. The corresponding ports in the row 202 may be replaced with a port 0, a port 6, and a port 12.

For another example, it is assumed that the port 0 is allocated to another terminal. The M ports allocated by the network device to the current terminal device may include a port 1, a port 7, a port 13, and a port 19 that correspond to the row 203, and the port 1, the port 7, the port 13, and the port 19 belong to a same CDM group. However, 4-length frequency domain cover codes corresponding to the port 1, the port 7, the port 13, and the port 19 are orthogonal, but 2-length frequency domain cover codes corresponding to the port 1, the port 7, the port 13, and the port 19 are not orthogonal. The corresponding ports in the row 203 may be replaced with a port 0, a port 6, a port 12, and a port 18.

In addition, it can be learned from table 24-B4 that an R18 port of type2 supports a maximum of 24-stream transmission, that is, table 24-B1 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 57 to 203 in table 24-B1.

For example, the network device may indicate a port 0, a port 1, a port 2, and a port 3 in the row 112 to a terminal device 1, indicate a port 7, a port 12, and a port 13 in the row 134 to a terminal device 2, indicate a port 9, a port 18, and a port 19 in the row 140 or 141 to a terminal device 3, indicate a port 14, a port 15, a port 20, and a port 21 in the row 138 to a terminal device 4, indicate a port 16, a port 17, a port 22, and a port 23 in the row 139 to a terminal device 5, indicate a port 4 and a port 5 in the row 162 to a terminal device 6, indicate a port 6 in the row 173 to a terminal device 7, indicate a port 10 and a port 11 in the row 184 to a terminal device 8, and indicate a port 8 in the row 175 to a terminal device 9. To be specific, the network device indicates four streams to the terminal device 1, indicates three streams to the terminal device 2, indicates three streams to the terminal device 3, indicates four streams to the terminal device 4, indicates four streams to the terminal device 5, indicates two streams to the terminal device 6, indicates one stream to the terminal device 7, indicates two streams to the terminal device 8, and indicates one stream to the terminal device 9, to form 24-stream transmission pairing.

In addition, it can be learned from table 24-B4 that table 24-B4 includes port combinations for 4-stream transmission supported by the R15 port, and all rows are used for MU.

**Table 24-B4: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 3 | 0 | 2 | | | | |
| 24 | 3 | 1 | 2 | | | | |
| 25 | 3 | 2 | 2 | | | | |
| 26 | 3 | 3 | 2 | | | | |
| 27 | 3 | 4 | 2 | | | | |
| 28 | 3 | 5 | 2 | | | | |
| 29 | 3 | 6 | 2 | | | | |
| 30 | 3 | 7 | 2 | | | | |
| 31 | 3 | 8 | 2 | | | | |
| 32 | 3 | 9 | 2 | | | | |
| 33 | 3 | 10 | 2 | | | | |
| 34 | 3 | 11 | 2 | | | | |
| 35 | 3 | 0, 1 | 2 | | | | |
| 36 | 3 | 2, 3 | 2 | | | | |
| 37 | 3 | 4, 5 | 2 | | | | |
| 38 | 3 | 6, 7 | 2 | | | | |
| 39 | 3 | 8, 9 | 2 | | | | |
| 40 | 3 | 10, 11 | 2 | | | | |
| 41 | 3 | 0, 1, 6 | 2 | | | | |
| 42 | 3 | 2, 3, 8 | 2 | | | | |
| 43 | 3 | 4, 5, 10 | 2 | | | | |
| 44 | 3 | 0, 1, 6, 7 | 2 | | | | |
| 45 | 3 | 2, 3, 8, 9 | 2 | | | | |
| 46 | 3 | 4, 5, 10, 11 | 2 | | | | |
| 47 | 1 | 0 | 2 | | | | |
| 48 | 1 | 1 | 2 | | | | |
| 49 | 1 | 6 | 2 | | | | |
| 50 | 1 | 7 | 2 | | | | |
| 51 | 1 | 0, 1 | 2 | | | | |
| 52 | 1 | 6, 7 | 2 | | | | |
| 53 | 2 | 0, 1 | 2 | | | | |
| 54 | 2 | 2, 3 | 2 | | | | |
| 55 | 2 | 6, 7 | 2 | | | | |
| 56 | 2 | 8, 9 | 2 | | | | |
| 57 | 1 | 12 | 1 | | | | |
| 58 | 1 | 13 | 1 | | | | |
| 59 | 1 | 12, 13 | 1 | | | | |
| 60 | 1 | 0, 1, 12 | 1 | | | | |
| 61 | 1 | 0, 1, 12, 13 | 1 | | | | |
| 62 | 2 | 12 | 1 | | | | |
| 63 | 2 | 13 | 1 | | | | |
| 64 | 2 | 12, 13 | 1 | | | | |
| 65 | 2 | 0, 1, 12 | 1 | | | | |
| 66 | 2 | 0, 1, 12, 13 | 1 | | | | |
| 67 | 2 | 14 | 1 | | | | |
| 68 | 2 | 15 | 1 | | | | |
| 69 | 2 | 14, 15 | 1 | | | | |
| 70 | 2 | 2, 3, 14 | 1 | | | | |
| 71 | 2 | 2, 3, 14, 15 | 1 | | | | |
| 72 | 3 | 12 | 1 | | | | |
| 73 | 3 | 13 | 1 | | | | |
| 74 | 3 | 12, 13 | 1 | | | | |
| 75 | 3 | 0, 1, 12 | 1 | | | | |
| 76 | 3 | 0, 1, 12, 13 | 1 | | | | |
| 77 | 3 | 14 | 1 | | | | |
| 78 | 3 | 15 | 1 | | | | |
| 79 | 3 | 14, 15 | 1 | | | | |
| 80 | 3 | 2, 3, 14 | 1 | | | | |
| 81 | 3 | 2, 3, 14, 15 | 1 | | | | |
| 82 | 3 | 16 | 1 | | | | |
| 83 | 3 | 17 | 1 | | | | |
| 84 | 3 | 16, 17 | 1 | | | | |
| 85 | 3 | 4, 5, 16 | 1 | | | | |
| 86 | 3 | 4, 5, 16, 17 | 1 | | | | |
| 87 | 3 | 13, 15, 17 | 1 | | | | |
| 88 | 2 | 13, 15 | 1 | | | | |
| 89 | 3 | 13, 15 | 1 | | | | |
| 90 | 1 | 0(FD-OCC2) | 1 | | | | |
| 91 | 1 | 1(FD-OCC2) | 1 | | | | |
| 92 | 1 | 0(FD-OCC2), 1(FD-OCC2) | 1 | | | | |
| 93 | 2 | 0(FD-OCC2) | 1 | | | | |
| 94 | 2 | 1(FD-OCC2) | 1 | | | | |
| 95 | 2 | 2(FD-OCC2) | 1 | | | | |
| 96 | 2 | 3(FD-OCC2) | 1 | | | | |
| 97 | 2 | 0(FD-OCC2), 1(FD-OCC2) | 1 | | | | |
| 98 | 2 | 2(FD-OCC2), 3(FD-OCC2) | 1 | | | | |
| 99 | 2 | 0-2(FD-OCC2) | 1 | | | | |
| 100 | 2 | 0-3(FD-OCC2) | 1 | | | | |
| 101 | 3 | 0(FD-OCC2) | 1 | | | | |
| 102 | 3 | 1(FD-OCC2) | 1 | | | | |
| 103 | 3 | 2(FD-OCC2) | 1 | | | | |
| 104 | 3 | 3(FD-OCC2) | 1 | | | | |
| 105 | 3 | 4(FD-OCC2) | 1 | | | | |
| 106 | 3 | 5(FD-OCC2) | 1 | | | | |
| 107 | 3 | 0(FD-OCC2), 1(FD-OCC2) | 1 | | | | |
| 108 | 3 | 2(FD-OCC2), 3(FD-OCC2) | 1 | | | | |
| 109 | 3 | 4(FD-OCC2), 5(FD-OCC2) | 1 | | | | |
| 110 | 3 | 0-2(FD-OCC2) | 1 | | | | |
| 111 | 3 | 3-5(FD-OCC2) | 1 | | | | |
| 112 | 3 | 0-3(FD-OCC2) | 1 | | | | |
| 113 | 1 | 1, 13 | 1 | | | | |
| 114 | 2 | 1, 13 | 1 | | | | |
| 115 | 3 | 1, 13 | 1 | | | | |
| 116 | 3 | 12 | 2 | | | | |
| 117 | 3 | 13 | 2 | | | | |
| 118 | 3 | 14 | 2 | | | | |
| 119 | 3 | 15 | 2 | | | | |
| 120 | 3 | 16 | 2 | | | | |
| 121 | 3 | 17 | 2 | | | | |
| 122 | 3 | 18 | 2 | | | | |
| 123 | 3 | 19 | 2 | | | | |
| 124 | 3 | 20 | 2 | | | | |
| 125 | 3 | 21 | 2 | | | | |
| 126 | 3 | 22 | 2 | | | | |
| 127 | 3 | 23 | 2 | | | | |
| 128 | 3 | 12, 13 | 2 | | | | |
| 129 | 3 | 14, 15 | 2 | | | | |
| 130 | 3 | 16, 17 | 2 | | | | |
| 131 | 3 | 18, 19 | 2 | | | | |
| 132 | 3 | 20, 21 | 2 | | | | |
| 133 | 3 | 22, 23 | 2 | | | | |
| 134 | 3 | 7, 12, 13 | 2 | | | | |
| 135 | 3 | 14, 15, 20 | 2 | | | | |
| 136 | 3 | 11, 16, 17 | 2 | | | | |
| 137 | 3 | 12, 13, 18, 19 | 2 | | | | |
| 138 | 3 | 14, 15, 20, 21 | 2 | | | | |
| 139 | 3 | 16, 17, 22, 23 | 2 | | | | |
| 140 | 2 | 9, 18, 19 | 2 | | | | |
| 141 | 3 | 9, 18, 19 | 2 | | | | |
| 142 | 2 | 21, 22, 23 | 2 | | | | |
| 143 | 1 | 0(FD-OCC2) | 1 | | | | |
| 144 | 1 | 1(FD-OCC2) | 1 | | | | |
| 145 | 1 | 0(FD-OCC2), 1(FD-OCC2) | 1 | | | | |
| 146 | 2 | 0(FD-OCC2) | 1 | | | | |
| 147 | 2 | 1(FD-OCC2) | 1 | | | | |
| 148 | 2 | 2(FD-OCC2) | 1 | | | | |
| 149 | 2 | 3(FD-OCC2) | 1 | | | | |
| 150 | 2 | 0(FD-OCC2), 1(FD-OCC2) | 1 | | | | |
| 151 | 2 | 2(FD-OCC2), 3(FD-OCC2) | 1 | | | | |
| 152 | 2 | 0-2(FD-OCC2) | 1 | | | | |
| 153 | 2 | 0-3(FD-OCC2) | 1 | | | | |
| 154 | 3 | 0(FD-OCC2) | 1 | | | | |
| 155 | 3 | 1(FD-OCC2) | 1 | | | | |
| 156 | 3 | 2(FD-OCC2) | 1 | | | | |
| 157 | 3 | 3(FD-OCC2) | 1 | | | | |
| 158 | 3 | 4(FD-OCC2) | 1 | | | | |
| 159 | 3 | 5(FD-OCC2) | 1 | | | | |
| 160 | 3 | 0(FD-OCC2), 1(FD-OCC2) | 1 | | | | |
| 161 | 3 | 2(FD-OCC2), 3(FD-OCC2) | 1 | | | | |
| 162 | 3 | 4(FD-OCC2), 5(FD-OCC2) | 1 | | | | |
| 163 | 3 | 0-2(FD-OCC2) | 1 | | | | |
| 164 | 3 | 3-5(FD-OCC2) | 1 | | | | |
| 165 | 3 | 0-3(FD-OCC2) | 1 | | | | |
| 166 | 2 | 0, 2(FD-OCC2) | 1 | | | | |
| 167 | 3 | 0(FD-OCC2) | 2 | | | | |
| 168 | 3 | 1(FD-OCC2) | 2 | | | | |
| 169 | 3 | 2(FD-OCC2) | 2 | | | | |
| 170 | 3 | 3(FD-OCC2) | 2 | | | | |
| 171 | 3 | 4(FD-OCC2) | 2 | | | | |
| 172 | 3 | 5(FD-OCC2) | 2 | | | | |
| 173 | 3 | 6(FD-OCC2) | 2 | | | | |
| 174 | 3 | 7(FD-OCC2) | 2 | | | | |
| 175 | 3 | 8(FD-OCC2) | 2 | | | | |
| 176 | 3 | 9(FD-OCC2) | 2 | | | | |
| 177 | 3 | 10(FD-OCC2) | 2 | | | | |
| 178 | 3 | 11(FD-OCC2) | 2 | | | | |
| 179 | 3 | 0(FD-OCC2), 1(FD-OCC2) | 2 | | | | |
| 180 | 3 | 2(FD-OCC2), 3(FD-OCC2) | 2 | | | | |
| 181 | 3 | 4(FD-OCC2), 5(FD-OCC2) | 2 | | | | |
| 182 | 3 | 6(FD-OCC2), 7(FD-OCC2) | 2 | | | | |
| 183 | 3 | 8(FD-OCC2), 9(FD-OCC2) | 2 | | | | |
| 184 | 3 | 10(FD-OCC2), 11(FD-OCC2) | 2 | | | | |
| 185 | 3 | 0(FD-OCC2), 1(FD-OCC2), 6(FD-OCC2) | 2 | | | | |
| 186 | 3 | 2(FD-OCC2), 3(FD-OCC2), 8(FD-OCC2) | 2 | | | | |
| 187 | 3 | 4(FD-OCC2), 5(FD-OCC2), 10(FD-OCC2) | 2 | | | | |
| 188 | 3 | 0(FD-OCC2), 1(FD-OCC2), 6(FD-OCC2), 7(FD-OCC2) | 2 | | | | |
| 189 | 3 | 2(FD-OCC2), 3(FD-OCC2), 8(FD-OCC2), 9(FD-OCC2) | 2 | | | | |
| 190 | 3 | 4(FD-OCC2), 5(FD-OCC2), 10(FD-OCC2), 11(FD-OCC2) | 2 | | | | |
| 191 | 1 | 0(FD-OCC2) | 2 | | | | |
| 192 | 1 | 1(FD-OCC2) | 2 | | | | |
| 193 | 1 | 6(FD-OCC2) | 2 | | | | |
| 194 | 1 | 7(FD-OCC2) | 2 | | | | |
| 195 | 1 | 0(FD-OCC2), 1(FD-OCC2) | 2 | | | | |
| 196 | 1 | 6(FD-OCC2), 7(FD-OCC2) | 2 | | | | |
| 197 | 2 | 0(FD-OCC2), 1(FD-OCC2) | 2 | | | | |
| 198 | 2 | 2(FD-OCC2), 3(FD-OCC2) | 2 | | | | |
| 199 | 2 | 6(FD-OCC2), 7(FD-OCC2) | 2 | | | | |
| 200 | 2 | 8(FD-OCC2), 9(FD-OCC2) | 2 | | | | |
| 201 | 3 | 1, 13 | 2 | | | | |
| 202 | 3 | 1, 7, 13 | 2 | | | | |
| 203 | 3 | 1, 7, 13, 19 | 2 | | | | |
| 204~256 | Reserved | Reserved | Reserve d | | | | |

A difference between table 24-B5 and table 24-B4 lies in that a corresponding example in which an FD-OCC length of a same port can be dynamically switched includes only three rows (that is, rows 90, 91, and 92). In this case, table 24-B5 occupies 7 bits, and table 24-B4 occupies 8 bits. Therefore, table 24-B5 can reduce bit consumption.

**Table 24-B5: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 3 | 0 | 2 | | | | |
| 24 | 3 | 1 | 2 | | | | |
| 25 | 3 | 2 | 2 | | | | |
| 26 | 3 | 3 | 2 | | | | |
| 27 | 3 | 4 | 2 | | | | |
| 28 | 3 | 5 | 2 | | | | |
| 29 | 3 | 6 | 2 | | | | |
| 30 | 3 | 7 | 2 | | | | |
| 31 | 3 | 8 | 2 | | | | |
| 32 | 3 | 9 | 2 | | | | |
| 33 | 3 | 10 | 2 | | | | |
| 34 | 3 | 11 | 2 | | | | |
| 35 | 3 | 0, 1 | 2 | | | | |
| 36 | 3 | 2, 3 | 2 | | | | |
| 37 | 3 | 4, 5 | 2 | | | | |
| 38 | 3 | 6, 7 | 2 | | | | |
| 39 | 3 | 8, 9 | 2 | | | | |
| 40 | 3 | 10, 11 | 2 | | | | |
| 41 | 3 | 0, 1, 6 | 2 | | | | |
| 42 | 3 | 2, 3, 8 | 2 | | | | |
| 43 | 3 | 4, 5, 10 | 2 | | | | |
| 44 | 3 | 0, 1, 6, 7 | 2 | | | | |
| 45 | 3 | 2, 3, 8, 9 | 2 | | | | |
| 46 | 3 | 4, 5, 10, 11 | 2 | | | | |
| 47 | 1 | 0 | 2 | | | | |
| 48 | 1 | 1 | 2 | | | | |
| 49 | 1 | 6 | 2 | | | | |
| 50 | 1 | 7 | 2 | | | | |
| 51 | 1 | 0, 1 | 2 | | | | |
| 52 | 1 | 6, 7 | 2 | | | | |
| 53 | 2 | 0, 1 | 2 | | | | |
| 54 | 2 | 2, 3 | 2 | | | | |
| 55 | 2 | 6, 7 | 2 | | | | |
| 56 | 2 | 8, 9 | 2 | | | | |
| 57 | 1 | 12 | 1 | | | | |
| 58 | 1 | 13 | 1 | | | | |
| 59 | 1 | 12, 13 | 1 | | | | |
| 60 | 1 | 0, 1, 12 | 1 | | | | |
| 61 | 1 | 0, 1, 12, 13 | 1 | | | | |
| 62 | 2 | 12 | 1 | | | | |
| 63 | 2 | 13 | 1 | | | | |
| 64 | 2 | 12, 13 | 1 | | | | |
| 65 | 2 | 0, 1, 12 | 1 | | | | |
| 66 | 2 | 0, 1, 12, 13 | 1 | | | | |
| 67 | 2 | 14 | 1 | | | | |
| 68 | 2 | 15 | 1 | | | | |
| 69 | 2 | 14, 15 | 1 | | | | |
| 70 | 2 | 2, 3, 14 | 1 | | | | |
| 71 | 2 | 2, 3, 14, 15 | 1 | | | | |
| 72 | 3 | 12 | 1 | | | | |
| 73 | 3 | 13 | 1 | | | | |
| 74 | 3 | 12, 13 | 1 | | | | |
| 75 | 3 | 0, 1, 12 | 1 | | | | |
| 76 | 3 | 0, 1, 12, 13 | 1 | | | | |
| 77 | 3 | 14 | 1 | | | | |
| 78 | 3 | 15 | 1 | | | | |
| 79 | 3 | 14, 15 | 1 | | | | |
| 80 | 3 | 2, 3, 14 | 1 | | | | |
| 81 | 3 | 2, 3, 14, 15 | 1 | | | | |
| 82 | 3 | 16 | 1 | | | | |
| 83 | 3 | 17 | 1 | | | | |
| 84 | 3 | 16, 17 | 1 | | | | |
| 85 | 3 | 4, 5, 16 | 1 | | | | |
| 86 | 3 | 4, 5, 16, 17 | 1 | | | | |
| 87 | 3 | 13, 15, 17 | 1 | | | | |
| 88 | 2 | 13, 15 | 1 | | | | |
| 89 | 3 | 13, 15 | 1 | | | | |
| 90 | 1 | 1, 13 | 1 | | | | |
| 91 | 2 | 1, 13 | 1 | | | | |
| 92 | 3 | 1, 13 | 1 | | | | |
| 93 | 3 | 12 | 2 | | | | |
| 94 | 3 | 13 | 2 | | | | |
| 95 | 3 | 14 | 2 | | | | |
| 96 | 3 | 15 | 2 | | | | |
| 97 | 3 | 16 | 2 | | | | |
| 98 | 3 | 17 | 2 | | | | |
| 99 | 3 | 18 | 2 | | | | |
| 100 | 3 | 19 | 2 | | | | |
| 101 | 3 | 20 | 2 | | | | |
| 102 | 3 | 21 | 2 | | | | |
| 103 | 3 | 22 | 2 | | | | |
| 104 | 3 | 23 | 2 | | | | |
| 105 | 3 | 12, 13 | 2 | | | | |
| 106 | 3 | 14, 15 | 2 | | | | |
| 107 | 3 | 16, 17 | 2 | | | | |
| 108 | 3 | 18, 19 | 2 | | | | |
| 109 | 3 | 20, 21 | 2 | | | | |
| 110 | 3 | 22, 23 | 2 | | | | |
| 111 | 3 | 7, 12, 13 | 2 | | | | |
| 112 | 3 | 14, 15, 20 | 2 | | | | |
| 113 | 3 | 11, 16, 17 | 2 | | | | |
| 114 | 3 | 12, 13, 18, 19 | 2 | | | | |
| 115 | 3 | 14, 15, 20, 21 | 2 | | | | |
| 116 | 3 | 16, 17, 22, 23 | 2 | | | | |
| 117 | 2 | 9, 18, 19 | 2 | | | | |
| 118 | 3 | 9, 18, 19 | 2 | | | | |
| 119 | 2 | 21, 22, 23 | 2 | | | | |
| 120 | 3 | 1, 13 | 2 | | | | |
| 121 | 3 | 1, 7, 13 | 2 | | | | |
| 122 | 3 | 1, 7, 13, 19 | 2 | | | | |
| 123 | 1 | 0(FD-OCC2) | 1 | | | | |
| 124 | 1 | 1(FD-OCC2) | 1 | | | | |
| 125 | 1 | 0(FD-OCC2), 1(FD-OCC2) | 1 | | | | |
| 126 | 2 | 0(FD-OCC2) | 1 | | | | |
| 127 | 2 | 1(FD-OCC2) | 1 | | | | |
| 128 | 2 | 2(FD-OCC2) | 1 | | | | |
| 129 | 2 | 3(FD-OCC2) | 1 | | | | |
| 130 | 2 | 0(FD-OCC2), 1(FD-OCC2) | 1 | | | | |
| 131 | 2 | 2(FD-OCC2), 3(FD-OCC2) | 1 | | | | |
| 132 | 2 | 0-2(FD-OCC2) | 1 | | | | |
| 133 | 2 | 0-3(FD-OCC2) | 1 | | | | |
| 134 | 1 | 0(FD-OCC2) | 2 | | | | |
| 135 | 1 | 1(FD-OCC2) | 2 | | | | |
| 136 | 1 | 6(FD-OCC2) | 2 | | | | |
| 137 | 1 | 7(FD-OCC2) | 2 | | | | |
| 138 | 1 | 0(FD-OCC2), 1(FD-OCC2) | 2 | | | | |
| 139 | 1 | 6(FD-OCC2), 7(FD-OCC2) | 2 | | | | |
| 140 | 2 | 0(FD-OCC2), 1(FD-OCC2) | 2 | | | | |
| 141 | 2 | 6(FD-OCC2), 7(FD-OCC2) | 2 | | | | |
| 142 | 2 | 8(FD-OCC2), 9(FD-OCC2) | 2 | | | | |
| 143~256 | Reserved | Reserved | Reserved | | | | |

Table 24-B6 occupies 7 bits. It can be learned from table 24-B6 that an R18 port of type2 supports a maximum of 24-stream transmission, that is, table 24-B6 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 58 to 117 in table 24-B6. For a specific example, refer to related descriptions in table 24-B1.

In addition, it can be learned from table 24-B6 that table 24-B6 includes any port combination for 4-stream transmission supported by an R15 port, a number of ports corresponding to each port combination (that is, any row in rows 0 to 57 in table 24-B6) is less than or equal to 4, and all rows are used for MU.

**Table 24-B6: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0, 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0, 1 | 2 | | | | |
| 37 | 3 | 2, 3 | 2 | | | | |
| 38 | 3 | 4, 5 | 2 | | | | |
| 39 | 3 | 6, 7 | 2 | | | | |
| 40 | 3 | 8, 9 | 2 | | | | |
| 41 | 3 | 10, 11 | 2 | | | | |
| 42 | 3 | 0, 1, 6 | 2 | | | | |
| 43 | 3 | 2,3,8 | 2 | | | | |
| 44 | 3 | 4, 5, 10 | 2 | | | | |
| 45 | 3 | 0, 1, 6, 7 | 2 | | | | |
| 46 | 3 | 2, 3, 8, 9 | 2 | | | | |
| 47 | 3 | 4, 5, 10, 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0, 1 | 2 | | | | |
| 53 | 1 | 6, 7 | 2 | | | | |
| 54 | 2 | 0, 1 | 2 | | | | |
| 55 | 2 | 2, 3 | 2 | | | | |
| 56 | 2 | 6, 7 | 2 | | | | |
| 57 | 2 | 8, 9 | 2 | | | | |
| 58 | 1 | 12 | 1 | | | | |
| 59 | 1 | 13 | 1 | | | | |
| 60 | 1 | 12, 13 | 1 | | | | |
| 61 | 1 | 0, 1, 12 | 1 | | | | |
| 62 | 1 | 0, 1, 12, 13 | 1 | | | | |
| 63 | 2 | 12 | 1 | | | | |
| 64 | 2 | 13 | 1 | | | | |
| 65 | 2 | 12, 13 | 1 | | | | |
| 66 | 2 | 0, 1, 12 | 1 | | | | |
| 67 | 2 | 0, 1, 12, 13 | 1 | | | | |
| 68 | 2 | 14 | 1 | | | | |
| 69 | 2 | 15 | 1 | | | | |
| 70 | 2 | 14, 15 | 1 | | | | |
| 71 | 2 | 2, 3, 14 | 1 | | | | |
| 72 | 2 | 2, 3, 14, 15 | 1 | | | | |
| 73 | 3 | 12 | 1 | | | | |
| 74 | 3 | 13 | 1 | | | | |
| 75 | 3 | 12, 13 | 1 | | | | |
| 76 | 3 | 0, 1, 12 | 1 | | | | |
| 77 | 3 | 0, 1, 12, 13 | 1 | | | | |
| 78 | 3 | 14 | 1 | | | | |
| 79 | 3 | 15 | 1 | | | | |
| 80 | 3 | 14, 15 | 1 | | | | |
| 81 | 3 | 2, 3, 14 | 1 | | | | |
| 82 | 3 | 2, 3, 14, 15 | 1 | | | | |
| 83 | 3 | 16 | 1 | | | | |
| 84 | 3 | 17 | 1 | | | | |
| 85 | 3 | 16, 17 | 1 | | | | |
| 86 | 3 | 4, 5, 16 | 1 | | | | |
| 87 | 3 | 4, 5, 16, 17 | 1 | | | | |
| 88 | 3 | 13, 15, 17 | 1 | | | | |
| 89 | 2 | 13, 15 | 1 | | | | |
| 90 | 3 | 13, 15 | 1 | | | | |
| 91 | 3 | 12 | 2 | | | | |
| 92 | 3 | 13 | 2 | | | | |
| 93 | 3 | 14 | 2 | | | | |
| 94 | 3 | 15 | 2 | | | | |
| 95 | 3 | 16 | 2 | | | | |
| 96 | 3 | 17 | 2 | | | | |
| 97 | 3 | 18 | 2 | | | | |
| 98 | 3 | 19 | 2 | | | | |
| 99 | 3 | 20 | 2 | | | | |
| 100 | 3 | 21 | 2 | | | | |
| 101 | 3 | 22 | 2 | | | | |
| 102 | 3 | 23 | 2 | | | | |
| 103 | 3 | 12, 13 | 2 | | | | |
| 104 | 3 | 14, 15 | 2 | | | | |
| 105 | 3 | 16, 17 | 2 | | | | |
| 106 | 3 | 18, 19 | 2 | | | | |
| 107 | 3 | 20, 21 | 2 | | | | |
| 108 | 3 | 22, 23 | 2 | | | | |
| 109 | 3 | 7, 12, 13 | 2 | | | | |
| 110 | 3 | 14, 15, 20 | 2 | | | | |
| 111 | 3 | 11, 16, 17 | 2 | | | | |
| 112 | 3 | 12, 13, 18, 19 | 2 | | | | |
| 113 | 3 | 14, 15, 20, 21 | 2 | | | | |
| 114 | 3 | 16, 17, 22, 23 | 2 | | | | |
| 115 | 2 | 9, 18, 19 | 2 | | | | |
| 116 | 3 | 9, 18, 19 | 2 | | | | |
| 117 | 2 | 21, 22, 23 | 2 | | | | |
| 118~256 | Reserved | Reserved | Reserved | | | | |

Table 24-B7 occupies 7 bits. It can be learned from table 24-B7 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal.

For example, it is assumed that the port 0 is allocated to another terminal. The M ports allocated by the network device to the current terminal device may include a port 1 and a port 13 corresponding to any one of the rows 91, 92, 93, and 121, and the port 1 and the port 13 belong to a same CDM group. However, 4-length frequency domain cover codes corresponding to the port 1 and the port 13 are orthogonal, but 2-length frequency domain cover codes corresponding to the port 1 and the port 13 are not orthogonal. Alternatively, the ports corresponding to any one of the rows 91, 92, 93, and 121 may be replaced with a port 0 and a port 12.

For another example, it is assumed that the port 0 is allocated to another terminal. The M ports allocated by the network device to the current terminal device may include a port 1, a port 7, and a port 13 that correspond to the row 122, and the port 1, the port 7, and the port 13 belong to a same CDM group. However, 4-length frequency domain cover codes corresponding to the port 1, the port 7, and the port 13 are orthogonal, but 2-length frequency domain cover codes corresponding to the port 1, the port 7, and the port 13 are not orthogonal. The corresponding ports in the row 124 may be replaced with a port 0, a port 6, and a port 12.

For another example, it is assumed that the port 0 is allocated to another terminal. The M ports allocated by the network device to the current terminal device may include a port 1, a port 7, a port 13, and a port 19 that correspond to the row 123, and the port 1, the port 7, the port 13, and the port 19 belong to a same CDM group. However, 4-length frequency domain cover codes corresponding to the port 1, the port 7, the port 13, and the port 19 are orthogonal, but 2-length frequency domain cover codes corresponding to the port 1, the port 7, the port 13, and the port 19 are not orthogonal. The corresponding ports in the row 125 may be replaced with a port 0, a port 6, a port 12, and a port 18.

In addition, it can be learned from table 24-B7 that an R18 port of type2 supports a maximum of 24-stream transmission, that is, table 24-B6 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 58 to 123 in table 24-B6. For a specific example, refer to related descriptions in table 24-B1.

In addition, it can be learned from table 24-B7 that table 24-B6 includes any port combination for 4-stream transmission supported by an R15 port, and a number of ports corresponding to each port combination (that is, any row in rows 0 to 57 in table 24-B6) is less than or equal to 4.

**Table 24-B7: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6-63 | Reserved | Reserved | Reserved |
| 7 | 2 | 0, 1 | 1 | | | | |
| 8 | 2 | 2, 3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0, 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0, 1 | 2 | | | | |
| 37 | 3 | 2, 3 | 2 | | | | |
| 38 | 3 | 4, 5 | 2 | | | | |
| 39 | 3 | 6, 7 | 2 | | | | |
| 40 | 3 | 8, 9 | 2 | | | | |
| 41 | 3 | 10, 11 | 2 | | | | |
| 42 | 3 | 0, 1, 6 | 2 | | | | |
| 43 | 3 | 2, 3, 8 | 2 | | | | |
| 44 | 3 | 4, 5, 10 | 2 | | | | |
| 45 | 3 | 0, 1, 6, 7 | 2 | | | | |
| 46 | 3 | 2, 3, 8, 9 | 2 | | | | |
| 47 | 3 | 4, 5, 10, 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0, 1 | 2 | | | | |
| 53 | 1 | 6, 7 | 2 | | | | |
| 54 | 2 | 0, 1 | 2 | | | | |
| 55 | 2 | 2, 3 | 2 | | | | |
| 56 | 2 | 6, 7 | 2 | | | | |
| 57 | 2 | 8, 9 | 2 | | | | |
| 58 | 1 | 12 | 1 | | | | |
| 59 | 1 | 13 | 1 | | | | |
| 60 | 1 | 12, 13 | 1 | | | | |
| 61 | 1 | 0, 1, 12 | 1 | | | | |
| 62 | 1 | 0, 1, 12, 13 | 1 | | | | |
| 63 | 2 | 12 | 1 | | | | |
| 64 | 2 | 13 | 1 | | | | |
| 65 | 2 | 12, 13 | 1 | | | | |
| 66 | 2 | 0, 1, 12 | 1 | | | | |
| 67 | 2 | 0, 1, 12, 13 | 1 | | | | |
| 68 | 2 | 14 | 1 | | | | |
| 69 | 2 | 15 | 1 | | | | |
| 70 | 2 | 14, 15 | 1 | | | | |
| 71 | 2 | 2, 3, 14 | 1 | | | | |
| 72 | 2 | 2, 3, 14, 15 | 1 | | | | |
| 73 | 3 | 12 | 1 | | | | |
| 74 | 3 | 13 | 1 | | | | |
| 75 | 3 | 12, 13 | 1 | | | | |
| 76 | 3 | 0, 1, 12 | 1 | | | | |
| 77 | 3 | 0, 1, 12, 13 | 1 | | | | |
| 78 | 3 | 14 | 1 | | | | |
| 79 | 3 | 15 | 1 | | | | |
| 80 | 3 | 14, 15 | 1 | | | | |
| 81 | 3 | 2, 3, 14 | 1 | | | | |
| 82 | 3 | 2, 3, 14, 15 | 1 | | | | |
| 83 | 3 | 16 | 1 | | | | |
| 84 | 3 | 17 | 1 | | | | |
| 85 | 3 | 16, 17 | 1 | | | | |
| 86 | 3 | 4, 5, 16 | 1 | | | | |
| 87 | 3 | 4, 5, 16, 17 | 1 | | | | |
| 88 | 3 | 13, 15, 17 | 1 | | | | |
| 89 | 2 | 13, 15 | 1 | | | | |
| 90 | 3 | 13, 15 | 1 | | | | |
| 91 | 1 | 1, 13 | 1 | | | | |
| 92 | 2 | 1, 13 | 1 | | | | |
| 93 | 3 | 1, 13 | 1 | | | | |
| 94 | 3 | 12 | 2 | | | | |
| 95 | 3 | 13 | 2 | | | | |
| 96 | 3 | 14 | 2 | | | | |
| 97 | 3 | 15 | 2 | | | | |
| 98 | 3 | 16 | 2 | | | | |
| 99 | 3 | 17 | 2 | | | | |
| 100 | 3 | 18 | 2 | | | | |
| 101 | 3 | 19 | 2 | | | | |
| 102 | 3 | 20 | 2 | | | | |
| 103 | 3 | 21 | 2 | | | | |
| 104 | 3 | 22 | 2 | | | | |
| 105 | 3 | 23 | 2 | | | | |
| 106 | 3 | 12, 13 | 2 | | | | |
| 107 | 3 | 14, 15 | 2 | | | | |
| 108 | 3 | 16, 17 | 2 | | | | |
| 109 | 3 | 18, 19 | 2 | | | | |
| 110 | 3 | 20, 21 | 2 | | | | |
| 111 | 3 | 22, 23 | 2 | | | | |
| 112 | 3 | 7, 12, 13 | 2 | | | | |
| 113 | 3 | 14, 15, 20 | 2 | | | | |
| 114 | 3 | 11, 16, 17 | 2 | | | | |
| 115 | 3 | 12, 13, 18, 19 | 2 | | | | |
| 116 | 3 | 14, 15, 20, 21 | 2 | | | | |
| 117 | 3 | 16, 17, 22, 23 | 2 | | | | |
| 118 | 2 | 9, 18, 19 | 2 | | | | |
| 119 | 3 | 9, 18, 19 | 2 | | | | |
| 120 | 2 | 21, 22, 23 | 2 | | | | |
| 121 | 3 | 1, 13 | 2 | | | | |
| 122 | 3 | 1, 7, 13 | 2 | | | | |
| 123 | 3 | 1, 7, 13, 19 | 2 | | | | |
| 124~256 | Reserved | Reserved | Reserved | | | | |

Table 24-B8 occupies 7 bits. It can be learned from table 24-B8 that an R18 port of type2 supports a maximum of 24-stream transmission, that is, table 24-B6 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 58 to 116 in table 24-B6. For a specific example, refer to related descriptions in table 24-B1.

In addition, it can be learned from table 24-B8 that table 24-B8 includes some port combinations for 4-stream transmission supported by an R15 port, a number of ports corresponding to these port combinations (that is, any row in rows 0 to 56 in table 24-B6) is less than or equal to 4, and all port combinations corresponding to rows 0 to 56 are used for MU.

**Table 24-B8: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |
| 5 | 2 | 2 | 1 | 5 | 2 | 0, 1, 2, 3, 6, 7, 8, 9 | 2 |
| 6 | 2 | 3 | 1 | 6 | 1 | 0, 1, 6, 7, 12 | 2 |
| 7 | 2 | 0, 1 | 1 | 7 | 1 | 0, 1, 6, 7, 12, 13 | 2 |
| 8 | 2 | 2, 3 | 1 | 8 | 1 | 0, 1, 6, 7, 12, 13, 18 | 2 |
| 9 | 2 | 0-2 | 1 | 9 | 1 | 0, 1, 6, 7, 12, 13, 18, 19 | 2 |
| 10 | 2 | 0-3 | 1 | 10-63 | Reserved | Reserved | Reserved |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 3 | 0 | 2 | | | | |
| 24 | 3 | 1 | 2 | | | | |
| 25 | 3 | 2 | 2 | | | | |
| 26 | 3 | 3 | 2 | | | | |
| 27 | 3 | 4 | 2 | | | | |
| 28 | 3 | 5 | 2 | | | | |
| 29 | 3 | 6 | 2 | | | | |
| 30 | 3 | 7 | 2 | | | | |
| 31 | 3 | 8 | 2 | | | | |
| 32 | 3 | 9 | 2 | | | | |
| 33 | 3 | 10 | 2 | | | | |
| 34 | 3 | 11 | 2 | | | | |
| 35 | 3 | 0, 1 | 2 | | | | |
| 36 | 3 | 2, 3 | 2 | | | | |
| 37 | 3 | 4, 5 | 2 | | | | |
| 38 | 3 | 6, 7 | 2 | | | | |
| 39 | 3 | 8, 9 | 2 | | | | |
| 40 | 3 | 10, 11 | 2 | | | | |
| 41 | 3 | 0, 1, 6 | 2 | | | | |
| 42 | 3 | 2, 3, 8 | 2 | | | | |
| 43 | 3 | 4, 5, 10 | 2 | | | | |
| 44 | 3 | 0, 1, 6, 7 | 2 | | | | |
| 45 | 3 | 2, 3, 8, 9 | 2 | | | | |
| 46 | 3 | 4, 5, 10, 11 | 2 | | | | |
| 47 | 1 | 0 | 2 | | | | |
| 48 | 1 | 1 | 2 | | | | |
| 49 | 1 | 6 | 2 | | | | |
| 50 | 1 | 7 | 2 | | | | |
| 51 | 1 | 0, 1 | 2 | | | | |
| 52 | 1 | 6, 7 | 2 | | | | |
| 53 | 2 | 0, 1 | 2 | | | | |
| 54 | 2 | 2, 3 | 2 | | | | |
| 55 | 2 | 6, 7 | 2 | | | | |
| 56 | 2 | 8, 9 | 2 | | | | |
| 57 | 1 | 12 | 1 | | | | |
| 58 | 1 | 13 | 1 | | | | |
| 59 | 1 | 12, 13 | 1 | | | | |
| 60 | 1 | 0, 1, 12 | 1 | | | | |
| 61 | 1 | 0, 1, 12, 13 | 1 | | | | |
| 62 | 2 | 12 | 1 | | | | |
| 63 | 2 | 13 | 1 | | | | |
| 64 | 2 | 12, 13 | 1 | | | | |
| 65 | 2 | 0, 1, 12 | 1 | | | | |
| 66 | 2 | 0, 1, 12, 13 | 1 | | | | |
| 67 | 2 | 14 | 1 | | | | |
| 68 | 2 | 15 | 1 | | | | |
| 69 | 2 | 14, 15 | 1 | | | | |
| 70 | 2 | 2, 3, 14 | 1 | | | | |
| 71 | 2 | 2, 3, 14, 15 | 1 | | | | |
| 72 | 3 | 12 | 1 | | | | |
| 73 | 3 | 13 | 1 | | | | |
| 74 | 3 | 12, 13 | 1 | | | | |
| 75 | 3 | 0, 1, 12 | 1 | | | | |
| 76 | 3 | 0, 1, 12, 13 | 1 | | | | |
| 77 | 3 | 14 | 1 | | | | |
| 78 | 3 | 15 | 1 | | | | |
| 79 | 3 | 14, 15 | 1 | | | | |
| 80 | 3 | 2, 3, 14 | 1 | | | | |
| 81 | 3 | 2, 3, 14, 15 | 1 | | | | |
| 82 | 3 | 16 | 1 | | | | |
| 83 | 3 | 17 | 1 | | | | |
| 84 | 3 | 16, 17 | 1 | | | | |
| 85 | 3 | 4, 5, 16 | 1 | | | | |
| 86 | 3 | 4, 5, 16, 17 | 1 | | | | |
| 87 | 3 | 13, 15, 17 | 1 | | | | |
| 88 | 2 | 13, 15 | 1 | | | | |
| 89 | 3 | 13, 15 | 1 | | | | |
| 90 | 3 | 12 | 2 | | | | |
| 91 | 3 | 13 | 2 | | | | |
| 92 | 3 | 14 | 2 | | | | |
| 93 | 3 | 15 | 2 | | | | |
| 94 | 3 | 16 | 2 | | | | |
| 95 | 3 | 17 | 2 | | | | |
| 96 | 3 | 18 | 2 | | | | |
| 97 | 3 | 19 | 2 | | | | |
| 98 | 3 | 20 | 2 | | | | |
| 99 | 3 | 21 | 2 | | | | |
| 100 | 3 | 22 | 2 | | | | |
| 101 | 3 | 23 | 2 | | | | |
| 102 | 3 | 12, 13 | 2 | | | | |
| 103 | 3 | 14, 15 | 2 | | | | |
| 104 | 3 | 16, 17 | 2 | | | | |
| 105 | 3 | 18, 19 | 2 | | | | |
| 106 | 3 | 20, 21 | 2 | | | | |
| 107 | 3 | 22, 23 | 2 | | | | |
| 108 | 3 | 7, 12, 13 | 2 | | | | |
| 109 | 3 | 14, 15, 20 | 2 | | | | |
| 110 | 3 | 11, 16, 17 | 2 | | | | |
| 111 | 3 | 12, 13, 18, 19 | 2 | | | | |
| 112 | 3 | 14, 15, 20, 21 | 2 | | | | |
| 113 | 3 | 16, 17, 22, 23 | 2 | | | | |
| 114 | 2 | 9, 18, 19 | 2 | | | | |
| 115 | 3 | 9, 18, 19 | 2 | | | | |
| 116 | 2 | 21, 22, 23 | 2 | | | | |
| 117~256 | Reserved | Reserved | Reserved | | | | |

Table 24-B9 occupies 7 bits. It can be learned from table 24-B9 that MU may be performed on the R15 port and the R18 port in one CDM group. In other words, when the M ports indicated by the network device to the terminal device belong to an R15 port set and an R18 port set, the M ports include a port combination corresponding to a sequence in which 4-length frequency domain cover codes are orthogonal but 2-length frequency domain cover codes are not orthogonal.

For example, it is assumed that the port 0 is allocated to another terminal. The M ports allocated by the network device to the current terminal device may include a port 1 and a port 13 corresponding to any one of the rows 33, 34, 35, and 69, and the port 1 and the port 13 belong to a same CDM group. However, 4-length frequency domain cover codes corresponding to the port 1 and the port 13 are orthogonal, but 2-length frequency domain cover codes corresponding to the port 1 and the port 13 are not orthogonal. Alternatively, the ports corresponding to any one of the rows 33, 34, 35, and 72 may be replaced with a port 0 and a port 12.

For another example, it is assumed that the port 0 is allocated to another terminal. The M ports allocated by the network device to the current terminal device may include a port 1, a port 7, and a port 13 that correspond to the row 70, and the port 1, the port 7, and the port 13 belong to a same CDM group. However, 4-length frequency domain cover codes corresponding to the port 1, the port 7, and the port 13 are orthogonal, but 2-length frequency domain cover codes corresponding to the port 1, the port 7, and the port 13 are not orthogonal. The corresponding ports in the row 70 may be replaced with a port 0, a port 6, and a port 12.

For another example, it is assumed that the port 0 is allocated to another terminal. The M ports allocated by the network device to the current terminal device may include a port 1, a port 7, a port 13, and a port 19 that correspond to the row 71, and the port 1, the port 7, the port 13, and the port 19 belong to a same CDM group. However, 4-length frequency domain cover codes corresponding to the port 1, the port 7, the port 13, and the port 19 are orthogonal, but 2-length frequency domain cover codes corresponding to the port 1, the port 7, the port 13, and the port 19 are not orthogonal. The corresponding ports in the row 71 may be replaced with a port 0, a port 6, a port 12, and a port 18.

In addition, it can be learned from table 24-B9 that, when the first value is the value 1, FD-OCC lengths of the M ports associated with the first value may be different, that is, ports in a same row in table 24-B9 may correspond to different FD-OCC lengths.

For example, when the first value is any one of the rows 36, 37, and 38, the M ports may include a port 0, a port 1, and a port 13 corresponding to any one of the rows 36, 37, and 38, an FD-OCC length of the port 0 is 2-length, an FD-OCC length of the port 1 is 4-length, and an FD-OCC length of the port 13 is 4-length. Alternatively, the ports corresponding to any one of the rows 36, 37, and 38 may be replaced with a port 0, a port 1, and a port 12, where an FD-OCC length of the port 0 is 4-length, an FD-OCC length of the port 1 is 2-length, and an FD-OCC length of the port 12 is 4-length.

For another example, when the first value is any one of the rows 39, 40, and 41, the M ports may include a port 0 and a port 1 corresponding to any one of the rows 39, 40, and 41, an FD-OCC length of the port 0 is 2-length, and an FD-OCC length of the port 1 is 4-length. Alternatively, the ports corresponding to any one of the rows 39, 40, and 41 are still the port 0 and the port 1, but an FD-OCC length of the port 0 is 4-length, and an FD-OCC length of the port 1 is 2-length.

For another example, when the first value is the row 72 or 77, the M ports may include a port 0 and a port 1 that correspond to the row 72 or 77, an FD-OCC length of the port 0 is 2-length, and an FD-OCC length of the port 1 is 4-length. The corresponding ports in the row 72 or 77 may be replaced with a port 0 and a port 7, where an FD-OCC length of the port 0 is 2-length, and an FD-OCC length of the port 7 is 4-length. Alternatively, the corresponding ports in the row 72 or 77 may be replaced with a port 0 and a port 19, where an FD-OCC length of the port 0 is 2-length, and an FD-OCC length of the port 19 is 4-length. Alternatively, the corresponding ports in the row 72 or 77 may be replaced with a port 0 and a port 13, where an FD-OCC length of the port 0 is 2-length, and an FD-OCC length of the port 13 is 4-length. Alternatively, the corresponding ports in the row 72 or 77 are still the port 0 and the port 1, but an FD-OCC length of the port 0 is 4-length, and an FD-OCC length of the port 1 is 2-length. Alternatively, the corresponding ports in the row 72 or 77 may be replaced with a port 1 and a port 6, where an FD-OCC length of the port 1 is 2-length, and an FD-OCC length of the port 6 is 4-length. Alternatively, the corresponding ports in the row 72 or 77 may be replaced with a port 1 and a port 18, where an FD-OCC length of the port 1 is 2-length, and an FD-OCC length of the port 18 is 4-length. Alternatively, the corresponding ports in the row 72 or 77 may be replaced with a port 1 and a port 12, where an FD-OCC length of the port 1 is 2-length, and an FD-OCC length of the port 12 is 4-length.

For another example, when the first value is the row 73 or 78, the M ports may include a port 0, a port 1, and a port 13 that correspond to the row 73 or 78, an FD-OCC length of the port 0 is 2-length, and FD-OCC lengths of the port 1 and the port 13 are 4-length. The corresponding ports in the row 73 or 78 may be replaced with a port 0, a port 1, and a port 19, where an FD-OCC length of the port 0 is 2-length, and FD-OCC lengths of the port 1 and the port 19 are 4-length. Alternatively, the corresponding ports in the row 73 or 78 may be replaced with a port 0, a port 1, and a port 7, where an FD-OCC length of the port 0 is 2-length, and FD-OCC lengths of the port 1 and the port 7 are 4-length. Alternatively, the corresponding ports in the row 73 or 78 may be replaced with a port 0, a port 13, and a port 19, where an FD-OCC length of the port 0 is 2-length, and FD-OCC lengths of the port 13 and the port 19 are 4-length. Alternatively, the corresponding ports in the row 73 or 78 may be replaced with a port 0, a port 7, and a port 19, where an FD-OCC length of the port 0 is 2-length, and FD-OCC lengths of the port 7 and the port 19 are 4-length. Alternatively, the corresponding ports in the row 73 or 78 may be replaced with a port 1, a port 6, and a port 12, where an FD-OCC length of the port 1 is 2-length, and FD-OCC lengths of the port 6 and the port 12 are 4-length. Alternatively, the corresponding ports in the row 73 or 78 may be replaced with a port 0, a port 1, and a port 12, where an FD-OCC length of the port 1 is 2-length, and FD-OCC lengths of the port 0 and the port 12 are 4-length. Alternatively, the corresponding ports in the row 73 or 78 may be replaced with a port 1, a port 6, and a port 18, where an FD-OCC length of the port 1 is 2-length, and FD-OCC lengths of the port 6 and the port 18 are 4-length.

For another example, when the first value is the row 74 or 79, the M ports may include a port 0, a port 1, a port 7, and a port 13 that correspond to the row 74 or 79, an FD-OCC length of the port 0 is 2-length, and FD-OCC lengths of the port 1, the port 7, and the port 13 are 4-length. The corresponding ports in the row 74 or 79 may be replaced with a port 0, a port 1, a port 7, and a port 19, where an FD-OCC length of the port 0 is 2-length, and FD-OCC lengths of the port 1, the port 7, and the port 19 are 4-length. Alternatively, the corresponding ports in the row 74 or 79 may be replaced with a port 0, a port 1, a port 7, and a port 19, where an FD-OCC length of the port 0 is 2-length, and FD-OCC lengths of the port 1, the port 7, and the port 19 are 4-length. Alternatively, the corresponding ports in the row 74 or 79 may be replaced with a port 0, a port 1, a port 13, and a port 19, where an FD-OCC length of the port 0 is 2-length, and FD-OCC lengths of the port 1, the port 13, and the port 19 are 4-length. Alternatively, the corresponding ports in the row 74 or 79 may be replaced with a port 0, a port 1, a port 6, and a port 12, where an FD-OCC length of the port 1 is 2-length, and FD-OCC lengths of the port 0, the port 6, and the port 12 are 4-length. Alternatively, the corresponding ports in the row 74 or 79 may be replaced with a port 0, a port 1, a port 12, and a port 18, where an FD-OCC length of the port 1 is 2-length, and FD-OCC lengths of the port 0, the port 12, and the port 18 are 4-length. Alternatively, the corresponding ports in the row 74 or 79 may be replaced with a port 0, a port 1, a port 6, and a port 18, where an FD-OCC length of the port 1 is 2-length, and FD-OCC lengths of the port 0, the port 6, and the port 18 are 4-length.

For another example, when the first value is the row 75 or 80, the M ports may include a port 0, a port 6, and a port 1 that correspond to the row 75 or 80, FD-OCC lengths of the port 0 and the port 6 are 2-length, and an FD-OCC length of the port 1 is 4-length. The corresponding ports in the row 75 or 80 may be replaced with a port 0, a port 6, and a port 7, where FD-OCC lengths of the port 0 and the port 7 are 2-length, and an FD-OCC length of the port 7 is 4-length. Alternatively, the corresponding ports in the row 75 or 80 may be replaced with a port 0, a port 6, and a port 13, where FD-OCC lengths of the port 0 and the port 6 are 2-length, and an FD-OCC length of the port 13 is 4-length. Alternatively, the corresponding ports in the row 75 or 80 may be replaced with a port 0, a port 6, and a port 19, where FD-OCC lengths of the port 0 and the port 6 are 2-length, and an FD-OCC length of the port 19 is 4-length. Alternatively, the corresponding ports in the row 75 or 80 may be replaced with a port 1, a port 7, and a port 6, where FD-OCC lengths of the port 1 and the port 7 are 2-length, and an FD-OCC length of the port 6 is 4-length. Alternatively, the corresponding ports in the row 75 or 80 may be replaced with a port 1, a port 7, and a port 12, where FD-OCC lengths of the port 1 and the port 7 are 2-length, and an FD-OCC length of the port 12 is 4-length. Alternatively, the corresponding ports in the row 75 or 80 may be replaced with a port 0, a port 1, a port 6, and a port 7, where FD-OCC lengths of the port 1 and the port 7 are 2-length, and FD-OCC lengths of the port 0 and the port 6 are 4-length.

For another example, when the first value is the row 76 or 81, the M ports may include a port 0, a port 6, a port 13, and a port 19 that correspond to the row 76 or 81, FD-OCC lengths of the port 0 and the port 6 are 2-length, and FD-OCC lengths of the port 13 and the port 19 are 4-length. The corresponding ports in the row 76 or 81 may be replaced with a port 0, a port 6, a port 7, and a port 19, where FD-OCC lengths of the port 0 and the port 6 are 2-length, and FD-OCC lengths of the port 7 and the port 19 are 4-length. Alternatively, the corresponding ports in the row 76 or 81 may be replaced with a port 0, a port 6, a port 7, and a port 13, where FD-OCC lengths of the port 0 and the port 6 are 2-length, and FD-OCC lengths of the port 7 and the port 13 are 4-length. Alternatively, the corresponding ports in the row 76 or 81 may be replaced with a port 1, a port 7, a port 12, and a port 18, where FD-OCC lengths of the port 1 and the port 7 are 2-length, and FD-OCC lengths of the port 18 and the port 12 are 4-length. Alternatively, the corresponding ports in the row 76 or 81 may be replaced with a port 1, a port 7, a port 6, and a port 18, where FD-OCC lengths of the port 1 and the port 7 are 2-length, and FD-OCC lengths of the port 18 and the port 6 are 4-length. Alternatively, the corresponding ports in the row 76 or 81 may be replaced with a port 0, a port 1, a port 6, and a port 7, where FD-OCC lengths of the port 1 and the port 7 are 2-length, and FD-OCC lengths of the port 0 and the port 6 are 4-length.

In addition, it can be learned from table 24-B9 that an R18 port of type2 supports a maximum of 24-stream transmission, that is, table 24-B9 includes any port combination for 24-stream transmission, a total number of ports allocated by the network device to paired terminal devices is less than or equal to 24, and a number of M ports corresponding to each row is less than or equal to 4. The port combination is a port combination corresponding to the rows 0 to 76 or 81 in table 24-B9. For a specific example, refer to related descriptions in table 24-B1.

Correspondingly, table 24-B9 may be used with reference to table 18-1, table 18-2, table 19-1, and table 19-2 in Embodiment 1. For example, the network device indicates a port 0, a port 1, a port 12, and a port 13 in the row 5 to the terminal device. Correspondingly, if the network device indicates that a value of a first DCI field is 0, 4-length orthogonal cover codes corresponding to the port 0, the port 1, the port 12, and the port 13 have been allocated to another terminal. If the network device indicates that a value of a first DCI field is 1, 4-length orthogonal cover codes corresponding to the port 0, the port 1, the port 12, and the port 13 are not allocated to another terminal.

**Table 24-B9: Type2-E or Type2-R18, maxlength=2**

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 disabled) | | | |
| Value (value) | Number of CDM groups without data (Number of DMRS CDM group(s) without data) | DMRS port (port(s)) index | Number of front-load symbols (Number of front-load symbols) | Value (value) | Number of CDM groups without data (Number of DMRS CDM group(s) without data) | DMRS port (port(s)) index | Number of front-load symbols (Number of front-load symbols) |
| 0 | 1 | 12 | 1 | 0 | 3 | 0-4 | 1 |
| 1 | 1 | 13 | 1 | 1 | 3 | 0-5 | 1 |
| 2 | 1 | 12, 13 | 1 | 2 | 2 | 0, 1, 2, 3, 6 | 2 |
| 3 | 1 | 0, 1, 12 | 1 | 3 | 2 | 0, 1, 2, 3, 6, 8 | 2 |
| 4 | 1 | 0, 1, 12, 13 | 1 | 4 | 2 | 0, 1, 2, 3, 6, 7, 8 | 2 |
| 5 | 2 | 12 | 1 | 5 | 2 | 0, 1, 2, 3, 6, 7, 8, | 2 |
| 6 | 2 | 13 | 1 | 6 | 1 | 0, 1, 6, 7, 12 | 2 |
| 7 | 2 | 12, 13 | 1 | 7 | 1 | 0, 1, 6, 7, 12, 13 | 2 |
| 8 | 2 | 0, 1, 12 | 1 | 8 | 1 | 0, 1, 6, 7, 12, 13, 18 | 2 |
| 9 | 2 | 0, 1, 12, 13 | 1 | 9 | 1 | 0, 1, 6, 7, 12, 13, 18, 19 | 2 |
| 10 | 2 | 14 | 1 | 10-63 | Reserved | Reserved | Reserved |
| 11 | 2 | 15 | 1 | | | | |
| 12 | 2 | 14, 15 | 1 | | | | |
| 13 | 2 | 2, 3, 14 | 1 | | | | |
| 14 | 2 | 2, 3, 14, 15 | 1 | | | | |
| 15 | 3 | 12 | 1 | | | | |
| 16 | 3 | 13 | 1 | | | | |
| 17 | 3 | 12, 13 | 1 | | | | |
| 18 | 3 | 0, 1, 12 | 1 | | | | |
| 19 | 3 | 0, 1, 12, 13 | 1 | | | | |
| 20 | 3 | 14 | 1 | | | | |
| 21 | 3 | 15 | 1 | | | | |
| 22 | 3 | 14, 15 | 1 | | | | |
| 23 | 3 | 2, 3, 14 | 1 | | | | |
| 24 | 3 | 2, 3, 14, 15 | 1 | | | | |
| 25 | 3 | 16 | 1 | | | | |
| 26 | 3 | 17 | 1 | | | | |
| 27 | 3 | 16, 17 | 1 | | | | |
| 28 | 3 | 4, 5, 16 | 1 | | | | |
| 29 | 3 | 4, 5, 16, 17 | 1 | | | | |
| 30 | 3 | 13, 15, 17 | 1 | | | | |
| 31 | 2 | 13, 15 | 1 | | | | |
| 32 | 3 | 13, 15 | 1 | | | | |
| 33 | 1 | 1, 13 | 1 | | | | |
| 34 | 2 | 1, 13 | 1 | | | | |
| 35 | 3 | 1, 13 | 1 | | | | |
| 36 | 1 | 0(FD-OCC2), 1, 13 | 1 | | | | |
| 37 | 2 | 0(FD-OCC2), 1, 13 | 1 | | | | |
| 38 | 3 | 0(FD-OCC2), 1, 13 | 1 | | | | |
| 39 | 1 | 0(FD-OCC2), 1 | 1 | | | | |
| 40 | 2 | 0(FD-OCC2), 1 | 1 | | | | |
| 41 | 3 | 0(FD-OCC2), 1 | 1 | | | | |
| 42 | 3 | 12 | 2 | | | | |
| 43 | 3 | 13 | 2 | | | | |
| 44 | 3 | 14 | 2 | | | | |
| 45 | 3 | 15 | 2 | | | | |
| 46 | 3 | 16 | 2 | | | | |
| 47 | 3 | 17 | 2 | | | | |
| 48 | 3 | 18 | 2 | | | | |
| 49 | 3 | 19 | 2 | | | | |
| 50 | 3 | 20 | 2 | | | | |
| 51 | 3 | 21 | 2 | | | | |
| 52 | 3 | 22 | 2 | | | | |
| 53 | 3 | 23 | 2 | | | | |
| 54 | 3 | 12, 13 | 2 | | | | |
| 55 | 3 | 14, 15 | 2 | | | | |
| 56 | 3 | 16, 17 | 2 | | | | |
| 57 | 3 | 18, 19 | 2 | | | | |
| 58 | 3 | 20, 21 | 2 | | | | |
| 59 | 3 | 22, 23 | 2 | | | | |
| 60 | 3 | 7, 12, 13 | 2 | | | | |
| 61 | 3 | 14, 15, 20 | 2 | | | | |
| 62 | 3 | 11, 16, 17 | 2 | | | | |
| 63 | 3 | 12, 13, 18, 19 | 2 | | | | |
| 64 | 3 | 14, 15, 20, 21 | 2 | | | | |
| 65 | 3 | 16, 17, 22, 23 | 2 | | | | |
| 66 | 2 | 9, 18, 19 | 2 | | | | |
| 67 | 3 | 9, 18, 19 | 2 | | | | |
| 68 | 2 | 21, 22, 23 | 2 | | | | |
| 69 | 3 | 1, 13 | 2 | | | | |
| 70 | 3 | 1, 7, 13 | 2 | | | | |
| 71 | 3 | 1, 7, 13, 19 | 2 | | | | |
| 72 | 3 | 0(FD-OCC2), 1 | 2 | | | | |
| 73 | 3 | 0(FD-OCC2), 1, 13 | 2 | | | | |
| 74 | 3 | 0(FD-OCC2), 1, 7, 13 | 2 | | | | |
| 75 | 3 | 0(FD-OCC2), 6(FD-OCC2), 1 | 2 | | | | |
| 76 | 3 | 0(FD-OCC2), 6(FD-OCC2), 13, 19 | 2 | | | | |
| 77 | 3 | 0(FD-OCC2), 1 | 2 | | | | |
| 78 | 3 | 0(FD-OCC2), 1, 13 | 2 | | | | |
| 79 | 3 | 0(FD-OCC2), 1, 7, 13 | 2 | | | | |
| 80 | 3 | 0(FD-OCC2), 6(FD-OCC2), 1 | 2 | | | | |
| 81 | 3 | 0(FD-OCC2), 6(FD-OCC2), 13, 19 | 2 | | | | |
| 82~256 | Reserved | Reserved | Reserved | | | | |

In a possible implementation, the network device may further receive third indication information from the first terminal device, where the third indication information indicates that the first terminal device supports a first capability, the first capability includes that the first terminal device supports cover code length switching, and the cover code length switching includes switching a cover code length by using the first signaling. The first indication information is carried in the first signaling, and the switching a cover code length by using the first signaling includes switching the cover code length by using the first indication information. That the first terminal device supports cover code length switching may be understood as that the first terminal device supports that a same DMRS port index corresponds to different cover code lengths, and the cover code length may be 2 or 4. For example, when the first port index group includes a port index of a port 0, a cover code length of the port 0 is 2; or when the second port index group includes a port index of a port 0, a cover code length of the port 0 is 4.

In a possible implementation, when any one of the M ports belongs to the second port set, the network device may further receive fourth indication information from the first terminal device, where the fourth indication information indicates that the first terminal device supports a second capability, the second capability includes that the any one of the M ports occupies a same time-frequency resource as a twelfth port, and the twelfth port belongs to the first port set.

In embodiments of this application, that "K is related to a type of a demodulation reference signal DMRS" may be understood as that a maximum number of orthogonal ports corresponding to different DMRS types is K. When the DMRS type is type1 and the maximum length is 1, K=8; when the DMRS type is type1 and the maximum length is 2, K=16; when the DMRS type is type2 and the maximum length is 1, K=12; or when the DMRS type is type2 and the maximum length is 2, K=24.

In embodiments of this application, any two port index groups included in the antenna port set correspond to a same number of DMRS CDM groups without data. When the maximum length of the demodulation reference signal is 2, any two port index groups included in the antenna port set correspond to a same number of front-load symbols. The following uses tables obtained through splitting corresponding to table 21-6, table 22-6, table 23-6, and table 24-A6 as an example for description.

In embodiments of this application, table 21-6 may be further split into table 25-1 to table 25-8. When the type of the demodulation reference signal is the first type (Type1), and the maximum length (maxLength) of the demodulation reference signal is 1, a value of M corresponding to the port index group included in the antenna port set is any one of 1 to 8.

When the value of M is 1, the antenna port set is table 25-1, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), an eighth port index group (a row corresponding to a value being 7), a ninth port index group (a row corresponding to a value being 8), a tenth port index group (a row corresponding to a value being 9), an eleventh port index group (a row corresponding to a value being 10), and a twelfth port index group (a row corresponding to a value being 11). The first port index group includes a port 0, and a number of DMRS CDM groups without data that correspond to the first port index group is 1. The second port index group includes a port 1, and a number of DMRS CDM groups without data that correspond to the second port index group is 1. The third port index group includes a port 0, and a number of DMRS CDM groups without data that correspond to the third port index group is 2. The fourth port index group includes a port 1, and a number of DMRS CDM groups without data that correspond to the fourth port index group is 2. The fifth port index group includes a port 2, and a number of DMRS CDM groups without data that correspond to the fifth port index group is 2. The sixth port index group includes a port 3, and a number of DMRS CDM groups without data that correspond to the sixth port index group is 2. The seventh port index group includes a port 8, and a number of DMRS CDM groups without data that correspond to the seventh port index group is 1. The eighth port index group includes a port 9, and a number of DMRS CDM groups without data that correspond to the eighth port index group is 1. The ninth port index group includes a port 8, and a number of DMRS CDM groups without data that correspond to the ninth port index group is 2. The tenth port index group includes a port 9, and a number of DMRS CDM groups without data that correspond to the tenth port index group is 2. The eleventh port index group includes a port 10, and a number of DMRS CDM groups without data that correspond to the eleventh port index group is 1. The twelfth port index group includes a port 11, and a number of DMRS CDM groups without data that correspond to the twelfth port index group is 1.

When the value of M is 2, the antenna port set is table 25-2, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), and an eighth port index group (a row corresponding to a value being 7). The first port index group includes a port 0 and a port 1, and a number of DMRS CDM groups without data that correspond to the first port index group is 1. The second port index group includes a port 0 and a port 1, and a number of DMRS CDM groups without data that correspond to the second port index group is 2. The third port index group includes a port 2 and a port 3, and a number of DMRS CDM groups without data that correspond to the third port index group is 2. The fourth port index group includes a port 0 and a port 2, and a number of DMRS CDM groups without data that correspond to the fourth port index group is 2. The fifth port index group includes a port 8 and a port 9, and a number of DMRS CDM groups without data that correspond to the fifth port index group is 1. The sixth port index group includes a port 8 and a port 9, and a number of DMRS CDM groups without data that correspond to the sixth port index group is 2. The seventh port index group includes a port 10 and a port 11, and a number of DMRS CDM groups without data that correspond to the seventh port index group is 2. The eighth port index group includes a port 9 and a port 11, and a number of DMRS CDM groups without data that correspond to the eighth port index group is 2. When the value of M is 3, the antenna port set is table 25-3, and the antenna port set includes a first port index group (a row corresponding to a value being 0), a second port index group (a row corresponding to a value being 1), a third port index group (a row corresponding to a value being 2), and a fourth port index group (a row corresponding to a value being 3). The first port index group includes a port 0, a port 1, and a port 2, and a number of DMRS CDM groups without data that correspond to the first port index group is 2. The second port index group includes a port 0, a port 1, and a port 8, and a number of DMRS CDM groups without data that correspond to the second port index group is 1. The third port index group includes a port 0, a port 1, and a port 8, and a number of DMRS CDM groups without data that correspond to the third port index group is 2. The fourth port index group includes a port 2, a port 3, and a port 10, and a number of DMRS CDM groups without data that correspond to the fourth port index group is 2.

When the value of M is 4, the antenna port set is table 25-4, and the antenna port set includes a first port index group (a row corresponding to a value being 0), a second port index group (a row corresponding to a value being 1), a third port index group (a row corresponding to a value being 2), a fourth port index group (a row corresponding to a value being 3), and a fifth port index group (a row corresponding to a value being 4). The first port index group includes a port 0, a port 1, a port 2, and a port 3, and a number of DMRS CDM groups without data that correspond to the first port index group is 2. The second port index group includes a port 8, a port 9, a port 10, and a port 11, and a number of DMRS CDM groups without data that correspond to the second port index group is 2. The third port index group includes a port 0, a port 1, a port 8, and a port 9, and a number of DMRS CDM groups without data that correspond to the third port index group is 1. The fourth port index group includes a port 0, a port 1, a port 8, and a port 9, and a number of DMRS CDM groups without data that correspond to the fourth port index group is 2. The fifth port index group includes a port 2, a port 3, a port 10, and a port 11, and a number of DMRS CDM groups without data that correspond to the fifth port index group is 2.

When the value of M is 5, the antenna port set is table 25-5, and the antenna port set includes a first port index group (a row corresponding to a value being 0). The first port index group includes a port 0, a port 1, a port 2, a port 3, and a port 8, and a number of DMRS CDM groups without data that correspond to the first port index group is 2.

When the value of M is 6, the antenna port set is table 25-6, and the antenna port set includes a first port index group (a row corresponding to a value being 0). The first port index group includes a port 0, a port 1, a port 2, a port 3, a port 8, and a port 10, and a number of DMRS CDM groups without data that correspond to the first port index group is 2.

When the value of M is 7, the antenna port set is table 25-7, and the antenna port set includes a first port index group (a row corresponding to a value being 0). The first port index group includes a port 0, a port 1, a port 2, a port 3, a port 8, a port 9, and a port 10, and a number of DMRS CDM groups without data that correspond to the first port index group is 2.

When the value of M is 8, the antenna port set is table 25-8, and the antenna port set includes a first port index group (a row corresponding to a value being 0). The first port index group includes a port 0, a port 1, a port 2, a port 3, a port 8, a port 9, a port 10, and a port 11, and a number of DMRS CDM groups without data that correspond to the first port index group is 2.

**Table 25-1: dmrs type=Typel, maxLength=1, M=1**

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 1 | 8 |
| 7 | 1 | 9 |
| 8 | 2 | 8 |
| 9 | 2 | 9 |
| 10 | 2 | 10 |
| 11 | 2 | 11 |
| 12-15 | Reserved | Reserved |

**Table 25-2: dmrs type=Type1, maxLength=1, M=2**

| Value | Number of DMRS CDM group(s) without data | DMRS port(s) |
|---|---|---|
| 0 | 1 | 0, 1 |
| 1 | 2 | 0, 1 |
| 2 | 2 | 2, 3 |
| 3 | 2 | 0, 2 |
| 4 | 1 | 8, 9 |
| 5 | 2 | 8, 9 |
| 6 | 2 | 10, 11 |
| 7 | 2 | 9, 11 |
| 8-15 | Reserved | Reserved |

**Table 25-3: dmrs type=Type1, maxLength=1, M=3**

| Value | Number of DMRS CDM group(s) without data | DMRS port(s) |
|---|---|---|
| 0 | 2 | 0-2 |
| 1 | 1 | 0, 1,8 |
| 2 | 2 | 0, 1,8 |
| 3 | 2 | 2, 3, 10 |
| 4-15 | Reserved | Reserved |

**Table 25-4: dmrs type=Type1, maxLength=1, M=4**

| Value | Number of DMRS CDM group(s) without data | DMRS port(s) |
|---|---|---|
| 0 | 2 | 0-3 |
| 1 | 2 | 8-11 |
| 2 | 1 | 0, 1, 8, 9 |
| 3 | 2 | 0, 1, 8, 9 |
| 4 | 2 | 2, 3, 10, 11 |
| 5-15 | Reserved | Reserved |

**Table 25-5: dmrs type=Type1, maxLength=1, M=5**

| Value | Number of DMRS CDM group(s) without data | DMRS port(s) |
|---|---|---|
| 0 | 2 | 0, 1, 2, 3, 8 |
| 1-15 | Reserved | Reserved |

**Table 25-6: dmrs type=Type1, maxLength=1, M=6**

| Value | Number of DMRS CDM group(s) without data | DMRS port(s) |
|---|---|---|
| 0 | 2 | 0, 1, 2, 3, 8, 10 |
| 1-15 | Reserved | Reserved |

**Table 25-7: dmrs type=Type1, enhanced dmrs type is configured, maxLength=1, M=7**

| Value | Number of DMRS CDM group(s) without data | DMRS port(s) |
|---|---|---|
| 0 | 2 | 0, 1, 2, 3, 8, 9, 10 |
| 1-15 | Reserved | Reserved |

**Table 25-8: dmrs type=Type1, maxLength=1, M=8**

| Value | Number of DMRS CDM group(s) without data | DMRS port(s) |
|---|---|---|
| 0 | 2 | 0, 1, 2, 3, 8, 9, 10, 11 |
| 1-15 | Reserved | Reserved |

In embodiments of this application, table 22-6 may be further split into table 26-1 to table 26-8. When the type of the demodulation reference signal is the first type (Type1), and the maximum length (maxLength) of the demodulation reference signal is 2, a value of M corresponding to the port index group included in the antenna port set is any one of 1 to 8.

When the value of M is 1, the antenna port set is table 26-1, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), an eighth port index group (a row corresponding to a value being 7), a ninth port index group (a row corresponding to a value being 8), a tenth port index group (a row corresponding to a value being 9), an eleventh port index group (a row corresponding to a value being 10), a twelfth port index group (a row corresponding to a value being 11), a thirteenth port index group (a row corresponding to a value being 12), a fourteenth port index group (a row corresponding to a value being 13), a fifteenth port index group (a row corresponding to a value being 14), a sixteenth port index group (a row corresponding to a value being 15), a seventeenth port index group (a row corresponding to a value being 16), an eighteenth port index group (a row corresponding to a value being 17), a nineteenth port index group (a row corresponding to a value being 18), a twentieth port index group (a row corresponding to a value being 19), a twenty-first port index group (a row corresponding to a value being 20), a twenty-second port index group (a row corresponding to a value being 21), a twenty-third port index group (a row corresponding to a value being 22), a twenty-fourth port index group (a row corresponding to a value being 23), a twenty-fifth port index group (a row corresponding to a value being 24), a twenty-sixth port index group (a row corresponding to a value being 25), a twenty-seventh port index group (a row corresponding to a value being 26), and a twenty-eighth port index group (a row corresponding to a value being 27). The first port index group includes a port 0, a number of DMRS CDM groups without data that correspond to the first port index group is 1, and a number of front-load symbols that correspond to the first port index group is 1. The second port index group includes a port 1, a number of DMRS CDM groups without data that correspond to the second port index group is 1, and a number of front-load symbols that correspond to the second port index group is 1. The third port index group includes a port 0, a number of DMRS CDM groups without data that correspond to the third port index group is 2, and a number of front-load symbols that correspond to the third port index group is 1. The fourth port index group includes a port 1, a number of DMRS CDM groups without data that correspond to the fourth port index group is 2, and a number of front-load symbols that correspond to the fourth port index group is 1. The fifth port index group includes a port 2, a number of DMRS CDM groups without data that correspond to the fifth port index group is 2, and a number of front-load symbols that correspond to the fifth port index group is 1. The sixth port index group includes a port 3, a number of DMRS CDM groups without data that correspond to the sixth port index group is 2, and a number of front-load symbols that correspond to the fifth port index group is 1. The seventh port index group includes a port 0, a number of DMRS CDM groups without data that correspond to the seventh port index group is 2, and a number of front-load symbols that correspond to the seventh port index group is 2. The eighth port index group includes a port 1, a number of DMRS CDM groups without data that correspond to the eighth port index group is 2, and a number of front-load symbols that correspond to the eighth port index group is 2. The ninth port index group includes a port 2, a number of DMRS CDM groups without data that correspond to the ninth port index group is 2, and a number of front-load symbols that correspond to the ninth port index group is 2. The tenth port index group includes a port 3, a number of DMRS CDM groups without data that correspond to the tenth port index group is 2, and a number of front-load symbols that correspond to the tenth port index group is 2. The eleventh port index group includes a port 4, a number of DMRS CDM groups without data that correspond to the eleventh port index group is 2, and a number of front-load symbols that correspond to the eleventh port index group is 2. The twelfth port index group includes a port 5, a number of DMRS CDM groups without data that correspond to the twelfth port index group is 2, and a number of front-load symbols that correspond to the eleventh port index group is 2. The thirteenth port index group includes a port 6, a number of DMRS CDM groups without data that correspond to the thirteenth port index group is 2, and a number of front-load symbols that correspond to the thirteenth port index group is 2. The fourteenth port index group includes a port 7, a number of DMRS CDM groups without data that correspond to the fourteenth port index group is 2, and a number of front-load symbols that correspond to the fourteenth port index group is 2. The fifteenth port index group includes a port 8, a number of DMRS CDM groups without data that correspond to the fifteenth port index group is 1, and a number of front-load symbols that correspond to the fifteenth port index group is 1. The sixteenth port index group includes a port 9, a number of DMRS CDM groups without data that correspond to the sixteenth port index group is 1, and a number of front-load symbols that correspond to the sixteenth port index group is 1. The seventeenth port index group includes a port 8, a number of DMRS CDM groups without data that correspond to the seventeenth port index group is 2, and a number of front-load symbols that correspond to the seventeenth port index group is 1. The eighteenth port index group includes a port 9, a number of DMRS CDM groups without data that correspond to the eighteenth port index group is 2, and a number of front-load symbols that correspond to the eighteenth port index group is 1. The nineteenth port index group includes a port 10, a number of DMRS CDM groups without data that correspond to the nineteenth port index group is 2, and a number of front-load symbols that correspond to the nineteenth port index group is 1. The twentieth port index group includes a port 11, a number of DMRS CDM groups without data that correspond to the twentieth port index group is 2, and a number of front-load symbols that correspond to the twentieth port index group is 1. The twenty-first port index group includes a port 8, a number of DMRS CDM groups without data that correspond to the twenty-first port index group is 2, and a number of front-load symbols that correspond to the twenty-first port index group is 2. The twenty-second port index group includes a port 9, a number of DMRS CDM groups without data that correspond to the twenty-second port index group is 2, and a number of front-load symbols that correspond to the twenty-second port index group is 2. The twenty-third port index group includes a port 10, a number of DMRS CDM groups without data that correspond to the twenty-third port index group is 2, and a number of front-load symbols that correspond to the twenty-third port index group is 2. The twenty-fourth port index group includes a port 11, a number of DMRS CDM groups without data that correspond to the twenty-fourth port index group is 2, and a number of front-load symbols that correspond to the twenty-fourth port index group is 2. The twenty-fifth port index group includes a port 12, a number of DMRS CDM groups without data that correspond to the twenty-fifth port index group is 2, and a number of front-load symbols that correspond to the twenty-fifth port index group is 2. The twenty-sixth port index group includes a port 13, a number of DMRS CDM groups without data that correspond to the twenty-sixth port index group is 2, and a number of front-load symbols that correspond to the twenty-sixth port index group is 2. The twenty-seventh port index group includes a port 14, a number of DMRS CDM groups without data that correspond to the twenty-seventh port index group is 2, and a number of front-load symbols that correspond to the twenty-seventh port index group is 2. The twenty-eighth port index group includes a port 15, a number of DMRS CDM groups without data that correspond to the twenty-eighth port index group is 2, and a number of front-load symbols that correspond to the twenty-eighth port index group is 2.

When the value of M is 2, the antenna port set is table 26-2, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), an eighth port index group (a row corresponding to a value being 7), a ninth port index group (a row corresponding to a value being 8), a tenth port index group (a row corresponding to a value being 9), an eleventh port index group (a row corresponding to a value being 10), a twelfth port index group (a row corresponding to a value being 11), a thirteenth port index group (a row corresponding to a value being 12), a fourteenth port index group (a row corresponding to a value being 13), a fifteenth port index group (a row corresponding to a value being 14), a sixteenth port index group (a row corresponding to a value being 15), a seventeenth port index group (a row corresponding to a value being 16), and an eighteenth port index group (a row corresponding to a value being 17). The first port index group includes a port 0 and a port 1, a number of DMRS CDM groups without data that correspond to the first port index group is 1, and a number of front-load symbols that correspond to the first port index group is 1. The second port index group includes a port 0 and a port 1, a number of DMRS CDM groups without data that correspond to the second port index group is 2, and a number of front-load symbols that correspond to the second port index group is 1. The third port index group includes a port 2 and a port 3, a number of DMRS CDM groups without data that correspond to the third port index group is 2, and a number of front-load symbols that correspond to the third port index group is 1. The fourth port index group includes a port 0 and a port 2, a number of DMRS CDM groups without data that correspond to the fourth port index group is 2, and a number of front-load symbols that correspond to the fourth port index group is 1. The fifth port index group includes a port 0 and a port 1, a number of DMRS CDM groups without data that correspond to the fifth port index group is 2, and a number of front-load symbols that correspond to the fifth port index group is 2. The sixth port index group includes a port 2 and a port 3, a number of DMRS CDM groups without data that correspond to the sixth port index group is 2, and a number of front-load symbols that correspond to the sixth port index group is 2. The seventh port index group includes a port 4 and a port 5, a number of DMRS CDM groups without data that correspond to the seventh port index group is 2, and a number of front-load symbols that correspond to the seventh port index group is 2. The eighth port index group includes a port 6 and a port 7, a number of DMRS CDM groups without data that correspond to the eighth port index group is 2, and a number of front-load symbols that correspond to the eighth port index group is 2. The ninth port index group includes a port 0 and a port 4, a number of DMRS CDM groups without data that correspond to the ninth port index group is 2, and a number of front-load symbols that correspond to the ninth port index group is 2. The tenth port index group includes a port 2 and a port 6, a number of DMRS CDM groups without data that correspond to the tenth port index group is 2, and a number of front-load symbols that correspond to the tenth port index group is 2. The eleventh port index group includes a port 8 and a port 9, a number of DMRS CDM groups without data that correspond to the eleventh port index group is 1, and a number of front-load symbols that correspond to the eleventh port index group is 1. The twelfth port index group includes a port 8 and a port 9, a number of DMRS CDM groups without data that correspond to the twelfth port index group is 2, and a number of front-load symbols that correspond to twelfth port index group is 1. The thirteenth port index group includes a port 10 and a port 11, a number of DMRS CDM groups without data that correspond to the thirteenth port index group is 2, and a number of front-load symbols that correspond to the thirteenth port index group is 1. The fourteenth port index group includes a port 8 and a port 9, a number of DMRS CDM groups without data that correspond to the fourteenth port index group is 2, and a number of front-load symbols that correspond to the fourteenth port index group is 2. The fifteenth port index group includes a port 10 and a port 11, a number of DMRS CDM groups without data that correspond to the fifteenth port index group is 2, and a number of front-load symbols that correspond to the fifteenth port index group is 2. The sixteenth port index group includes a port 12 and a port 13, a number of DMRS CDM groups without data that correspond to the sixteenth port index group is 2, and a number of front-load symbols that correspond to the sixteenth port index group is 2. The seventeenth port index group includes a port 14 and a port 15, a number of DMRS CDM groups without data that correspond to the seventeenth port index group is 2, and a number of front-load symbols that correspond to the seventeenth port index group is 2. The eighteenth port index group includes a port 9 and a port 11, a number of DMRS CDM groups without data that correspond to the eighteenth port index group is 2, and a number of front-load symbols that correspond to the eighteenth port index group is 1.

When the value of M is 3, the antenna port set is table 26-3, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), an eighth port index group (a row corresponding to a value being 7), and a ninth port index group (a row corresponding to a value being 8). The first port index group includes a port 0, a port 1, and a port 2, a number of DMRS CDM groups without data that correspond to the first port index group is 2, and a number of front-load symbols that correspond to the first port index group is 1. The second port index group includes a port 0, a port 1, and a port 4, a number of DMRS CDM groups without data that correspond to the second port index group is 2, and a number of front-load symbols that correspond to the second port index group is 2. The third port index group includes a port 2, a port 3, and a port 6, a number of DMRS CDM groups without data that correspond to the third port index group is 2, and a number of front-load symbols that correspond to the third port index group is 2. The fourth port index group includes a port 0, a port 1, and a port 8, a number of DMRS CDM groups without data that correspond to the fourth port index group is 1, and a number of front-load symbols that correspond to the fourth port index group is 1. The fifth port index group includes a port 0, a port 1, and a port 8, a number of DMRS CDM groups without data that correspond to the fifth port index group is 2, and a number of front-load symbols that correspond to the fifth port index group is 1. The sixth port index group includes a port 2, a port 3, and a port 10, a number of DMRS CDM groups without data that correspond to the sixth port index group is 2, and a number of front-load symbols that correspond to the sixth port index group is 1. The seventh port index group includes a port 5, a port 8, and a port 9, a number of DMRS CDM groups without data that correspond to the seventh port index group is 2, and a number of front-load symbols that correspond to the seventh port index group is 2. The eighth port index group includes a port 7, a port 10, and a port 11, a number of DMRS CDM groups without data that correspond to the eighth port index group is 2, and a number of front-load symbols that correspond to the eighth port index group is 2. The ninth port index group includes a port 7, a port 11, and a port 12, a number of DMRS CDM groups without data that correspond to the ninth port index group is 2, and a number of front-load symbols that correspond to the ninth port index group is 2.

When the value of M is 4, the antenna port set is table 26-4, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), an eighth port index group (a row corresponding to a value being 7), and a ninth port index group (a row corresponding to a value being 8). The first port index group includes a port 0, a port 1, a port 2, and a port 3, a number of DMRS CDM groups without data that correspond to the first port index group is 2, and a number of front-load symbols that correspond to the first port index group is 1. The second port index group includes a port 0, a port 1, a port 4, and a port 5, a number of DMRS CDM groups without data that correspond to the second port index group is 2, and a number of front-load symbols that correspond to the second port index group is 2. The third port index group includes a port 2, a port 3, a port 6, and a port 7, a number of DMRS CDM groups without data that correspond to the third port index group is 1, and a number of front-load symbols that correspond to the third port index group is 2. The fourth port index group includes a port 0, a port 2, a port 4, and a port 6, a number of DMRS CDM groups without data that correspond to the fourth port index group is 2, and a number of front-load symbols that correspond to the fourth port index group is 2. The fifth port index group includes a port 8, a port 9, a port 12, and a port 13, a number of DMRS CDM groups without data that correspond to the fifth port index group is 2, and a number of front-load symbols that correspond to the fifth port index group is 2. The sixth port index group includes a port 10, a port 11, a port 14, and a port 15, a number of DMRS CDM groups without data that correspond to the sixth port index group is 2, and a number of front-load symbols that correspond to the sixth port index group is 2. The seventh port index group includes a port 0, a port 1, a port 8, and a port 9, a number of DMRS CDM groups without data that correspond to the seventh port index group is 1, and a number of front-load symbols that correspond to the seventh port index group is 1. The eighth port index group includes a port 0, a port 1, a port 8, and a port 9, a number of DMRS CDM groups without data that correspond to the eighth port index group is 2, and a number of front-load symbols that correspond to the eighth port index group is 1. The ninth port index group includes a port 2, a port 3, a port 10, and a port 11, a number of DMRS CDM groups without data that correspond to the ninth port index group is 2, and a number of front-load symbols that correspond to the ninth port index group is 1.

When the value of M is 5, the antenna port set is table 26-5, and the antenna port set includes a first port index group (a row corresponding to a value being 0) and a second port index group (a row corresponding to a value being 1). The first port index group includes a port 0, a port 1, a port 2, a port 3, and a port 4, a number of DMRS CDM groups without data that correspond to the first port index group is 2, and a number of front-load symbols that correspond to the first port index group is 2. The second port index group includes a port 0, a port 1, a port 4, a port 5, and a port 8, a number of DMRS CDM groups without data that correspond to the second port index group is 1, and a number of front-load symbols that correspond to the second port index group is 2.

When the value of M is 6, the antenna port set is table 26-6, and the antenna port set includes a first port index group (a row corresponding to a value being 0) and a second port index group (a row corresponding to a value being 1). The first port index group includes a port 0, a port 1, a port 2, a port 3, a port 4, and a port 6, a number of DMRS CDM groups without data that correspond to the first port index group is 2, and a number of front-load symbols that correspond to the first port index group is 2. The second port index group includes a port 0, a port 1, a port 4, a port 5, a port 8, and a port 9, a number of DMRS CDM groups without data that correspond to the second port index group is 1, and a number of front-load symbols that correspond to the second port index group is 2.

When the value of M is 7, the antenna port set is table 26-7, and the antenna port set includes a first port index group (a row corresponding to a value being 0) and a second port index group (a row corresponding to a value being 1). The first port index group includes a port 0, a port 1, a port 2, a port 3, a port 4, a port 5, and a port 6, a number of DMRS CDM groups without data that correspond to the first port index group is 2, and a number of front-load symbols that correspond to the first port index group is 2. The second port index group includes a port 0, a port 1, a port 4, a port 5, a port 8, a port 9, and a port 12, a number of DMRS CDM groups without data that correspond to the second port index group is 1, and a number of front-load symbols that correspond to the second port index group is 2.

When the value of M is 8, the antenna port set is table 26-8, and the antenna port set includes a first port index group (a row corresponding to a value being 0) and a second port index group (a row corresponding to a value being 1). The first port index group includes a port 0, a port 1, a port 2, a port 3, a port 4, a port 5, a port 6, and a port 7, a number of DMRS CDM groups without data that correspond to the first port index group is 2, and a number of front-load symbols that correspond to the first port index group is 2. The second port index group includes a port 0, a port 1, a port 4, a port 5, a port 8, a port 9, a port 12, and a port 13, a number of DMRS CDM groups without data that correspond to the second port index group is 1, and a number of front-load symbols that correspond to the second port index group is 2.

**Table 26-1: dmrs type=Type1, maxLength=2, M=1**

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14 | 1 | 8 | 1 |
| 15 | 1 | 9 | 1 |
| 16 | 2 | 8 | 1 |
| 17 | 2 | 9 | 1 |
| 18 | 2 | 10 | 1 |
| 19 | 2 | 11 | 1 |
| 20 | 2 | 8 | 2 |
| 21 | 2 | 9 | 2 |
| 22 | 2 | 10 | 2 |
| 23 | 2 | 11 | 2 |
| 24 | 2 | 12 | 2 |
| 25 | 2 | 13 | 2 |
| 26 | 2 | 14 | 2 |
| 27 | 2 | 15 | 2 |
| 28-31 | Reserved | Reserved | Reserved |

**Table 26-2: dmrs type=Type1, maxLength=2, M=2**

| Value | Number of DMRS CDM group(s) without data | DMRS port(s) | Number of front-load symbols |
|---|---|---|---|
| 0 | 1 | 0, 1 | 1 |
| 1 | 2 | 0, 1 | 1 |
| 2 | 2 | 2, 3 | 1 |
| 3 | 2 | 0, 2 | 1 |
| 4 | 2 | 0, 1 | 2 |
| 5 | 2 | 2, 3 | 2 |
| 6 | 2 | 4, 5 | 2 |
| 7 | 2 | 6, 7 | 2 |
| 8 | 2 | 0, 4 | 2 |
| 9 | 2 | 2, 6 | 2 |
| 10 | 1 | 8, 9 | 1 |
| 11 | 2 | 8, 9 | 1 |
| 12 | 2 | 10, 11 | 1 |
| 13 | 2 | 8, 9 | 2 |
| 14 | 2 | 10, 11 | 2 |
| 15 | 2 | 12, 13 | 2 |
| 16 | 2 | 14, 15 | 2 |
| 17 | 2 | 9, 11 | 1 |
| 18-31 | Reserved | Reserved | Reserved |

**Table 26-3: dmrs type=Type1, maxLength=2, M=3**

| Value | Number of DMRS CDM group(s) without data | DMRS port(s) | Number of front-load symbols |
|---|---|---|---|
| 0 | 2 | 0-2 | 1 |
| 1 | 2 | 0, 1, 4 | 2 |
| 2 | 2 | 2,3,6 | 2 |
| 3 | 1 | 0, 1,8 | 1 |
| 4 | 2 | 0, 1,8 | 1 |
| 5 | 2 | 2, 3, 10 | 1 |
| 6 | 2 | 5, 8, 9 | 2 |
| 7 | 2 | 7, 10, 11 | 2 |
| 8 | 2 | 7, 12, 13 | 2 |
| 9-31 | Reserved | Reserved | Reserved |

**Table 26-4: dmrs type=Typel, maxLength=2, M=4**

| Value | Number of DMRS CDM group(s) without data | DMRS port(s) | Number of front-load symbols |
|---|---|---|---|
| 0 | 2 | 0-3 | 1 |
| 1 | 2 | 0, 1, 4, 5 | 2 |
| 2 | 2 | 2,3,6,7 | 2 |
| 3 | 2 | 0, 2, 4, 6 | 2 |
| 4 | 2 | 8, 9, 12, 13 | 2 |
| 5 | 2 | 10, 11, 14, 15 | 2 |
| 6 | 1 | 0, 1, 8, 9 | 1 |
| 7 | 2 | 0, 1, 8, 9 | 1 |
| 8 | 2 | 2,3, 10, 11 | 1 |
| 9-31 | Reserved | Reserved | Reserved |

**Table 26-5: dmrs type=Type1, maxLength=2, M=5**

| Value | Number of DMRS CDM group(s) without data | DMRS port(s) | Number of front-load symbols |
|---|---|---|---|
| 0 | 2 | 0-4 | 2 |
| 1 | 1 | 0, 1, 4, 5, 8 | 2 |
| 2-31 | Reserved | Reserved | Reserved |

**Table 26-6: dmrs type=Type1, maxLength=2, M=6**

| Value | Number of DMRS CDM group(s) without data | DMRS port(s) | Number of front-load symbols |
|---|---|---|---|
| 0 | 2 | 0, 1, 2, 3, 4, 6 | 2 |
| 1 | 1 | 0, 1, 4, 5, 8, 9 | 2 |
| 2-31 | Reserved | Reserved | Reserved |

**Table 26-7: dmrs type=Type1, maxLength=2, M=7**

| Value | Number of DMRS CDM group(s) without data | DMRS port(s) | Number of front-load symbols |
|---|---|---|---|
| 0 | 2 | 0, 1, 2, 3, 4, 5, 6 | 2 |
| 1 | 1 | 0, 1, 4, 5, 8, 9, 12 | 2 |
| 2-31 | Reserved | Reserved | Reserved |

**Table 26-8: dmrs type=Type1, maxLength=2, M=8**

| Value | Number of DMRS CDM group(s) without data | DMRS port(s) | Number of front-load symbols |
|---|---|---|---|
| 0 | 2 | 0, 1, 2, 3, 4, 5, 6, 7 | 2 |
| 1 | 1 | 0, 1, 4, 5, 8, 9, 12, 13 | 2 |
| 2-31 | Reserved | Reserved | Reserved |

In embodiments of this application, table 23-6 may be further split into table 27-1 to table 27-8. When the type of the demodulation reference signal is the second type (Type2), and the maximum length (maxLength) of the demodulation reference signal is 1, a value of M corresponding to the port index group included in the antenna port set is any one of 1 to 8.

When the value of M is 1, the antenna port set is table 27-1, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), an eighth port index group (a row corresponding to a value being 7), a ninth port index group (a row corresponding to a value being 8), a tenth port index group (a row corresponding to a value being 9), an eleventh port index group (a row corresponding to a value being 10), a twelfth port index group (a row corresponding to a value being 11), a thirteenth port index group (a row corresponding to a value being 12), a fourteenth port index group (a row corresponding to a value being 13), a fifteenth port index group (a row corresponding to a value being 14), a sixteenth port index group (a row corresponding to a value being 15), a seventeenth port index group (a row corresponding to a value being 16), an eighteenth port index group (a row corresponding to a value being 17), a nineteenth port index group (a row corresponding to a value being 18), a twentieth port index group (a row corresponding to a value being 19), a twenty-first port index group (a row corresponding to a value being 20), a twenty-second port index group (a row corresponding to a value being 21), a twenty-third port index group (a row corresponding to a value being 22), and a twenty-fourth port index group (a row corresponding to a value being 23). The first port index group includes a port 0, and a number of DMRS CDM groups without data that correspond to the first port index group is 1. The second port index group includes a port 1, and a number of DMRS CDM groups without data that correspond to the second port index group is 1. The third port index group includes a port 0, and a number of DMRS CDM groups without data that correspond to the third port index group is 2. The fourth port index group includes a port 1, and a number of DMRS CDM groups without data that correspond to the fourth port index group is 2. The fifth port index group includes a port 2, and a number of DMRS CDM groups without data that correspond to the fifth port index group is 2. The sixth port index group includes a port 3, and a number of DMRS CDM groups without data that correspond to the sixth port index group is 2. The seventh port index group includes a port 0, and a number of DMRS CDM groups without data that correspond to the seventh port index group is 3. The eighth port index group includes a port 1, and a number of DMRS CDM groups without data that correspond to the eighth port index group is 3. The ninth port index group includes a port 2, and a number of DMRS CDM groups without data that correspond to the ninth port index group is 3. The tenth port index group includes a port 3, and a number of DMRS CDM groups without data that correspond to the tenth port index group is 3. The eleventh port index group includes a port 4, and a number of DMRS CDM groups without data that correspond to the eleventh port index group is 3. The twelfth port index group includes a port 5, and a number of DMRS CDM groups without data that correspond to the twelfth port index group is 3. The thirteenth port index group includes a port 12, and a number of DMRS CDM groups without data that correspond to the thirteenth port index group is 1. The fourteenth port index group includes a port 13, and a number of DMRS CDM groups without data that correspond to the fourteenth port index group is 1. The fifteenth port index group includes a port 12, and a number of DMRS CDM groups without data that correspond to the fifteenth port index group is 2. The sixteenth port index group includes a port 13, and a number of DMRS CDM groups without data that correspond to the sixteenth port index group is 2. The seventeenth port index group includes a port 14, and a number of DMRS CDM groups without data that correspond to the seventeenth port index group is 2. The eighteenth port index group includes a port 15, and a number of DMRS CDM groups without data that correspond to the eighteenth port index group is 2. The nineteenth port index group includes a port 12, and a number of DMRS CDM groups without data that correspond to the nineteenth port index group is 3. The twentieth port index group includes a port 13, and a number of DMRS CDM groups without data that correspond to the twentieth port index group is 3. The twenty-first port index group includes a port 14, and a number of DMRS CDM groups without data that correspond to the twenty-first port index group is 3. The twenty-second port index group includes a port 15, and a number of DMRS CDM groups without data that correspond to the twenty-second port index group is 3. The twenty-third port index group includes a port 16, and a number of DMRS CDM groups without data that correspond to the twenty-third port index group is 3. The twenty-fourth port index group includes a port 17, and a number of DMRS CDM groups without data that correspond to the twenty-fourth port index group is 3.

When the value of M is 2, the antenna port set is table 27-2, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), an eighth port index group (a row corresponding to a value being 7), a ninth port index group (a row corresponding to a value being 8), a tenth port index group (a row corresponding to a value being 9), an eleventh port index group (a row corresponding to a value being 10), a twelfth port index group (a row corresponding to a value being 11), a thirteenth port index group (a row corresponding to a value being 12), a fourteenth port index group (a row corresponding to a value being 13), and a fifteenth port index group (a row corresponding to a value being 14). The first port index group includes a port 0 and a port 1, and a number of DMRS CDM groups without data that correspond to the first port index group is 1. The second port index group includes a port 0 and a port 1, and a number of DMRS CDM groups without data that correspond to the second port index group is 2. The third port index group includes a port 2 and a port 3, and a number of DMRS CDM groups without data that correspond to the third port index group is 2. The fourth port index group includes a port 0 and a port 1, and a number of DMRS CDM groups without data that correspond to the fourth port index group is 3. The fifth port index group includes a port 2 and a port 3, and a number of DMRS CDM groups without data that correspond to the fifth port index group is 3. The sixth port index group includes a port 4 and a port 5, and a number of DMRS CDM groups without data that correspond to the sixth port index group is 3. The seventh port index group includes a port 0 and a port 2, and a number of DMRS CDM groups without data that correspond to the seventh port index group is 2. The eighth port index group includes a port 12 and a port 13, and a number of DMRS CDM groups without data that correspond to the eighth port index group is 1. The ninth port index group includes a port 12 and a port 13, and a number of DMRS CDM groups without data that correspond to the ninth port index group is 2. The tenth port index group includes a port 14 and a port 15, and a number of DMRS CDM groups without data that correspond to the tenth port index group is 2. The eleventh port index group includes a port 12 and a port 13, and a number of DMRS CDM groups without data that correspond to the eleventh port index group is 3. The twelfth port index group includes a port 14 and a port 15, and a number of DMRS CDM groups without data that correspond to the twelfth port index group is 3. The thirteenth port index group includes a port 16 and a port 17, and a number of DMRS CDM groups without data that correspond to the thirteenth port index group is 3. The fourteenth port index group includes a port 13 and a port 15, and a number of DMRS CDM groups without data that correspond to the fourteenth port index group is 3. The fifteenth port index group includes a port 13 and a port 15, and a number of DMRS CDM groups without data that correspond to the fifteenth port index group is 2.

When the value of M is 3, the antenna port set is table 27-3, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), an eighth port index group (a row corresponding to a value being 7), a ninth port index group (a row corresponding to a value being 8), and a tenth port index group (a row corresponding to a value being 9). The first port index group includes a port 0, a port 1, and a port 2, and a number of DMRS CDM groups without data that correspond to the first port index group is 2. The second port index group includes a port 0, a port 1, and a port 2, and a number of DMRS CDM groups without data that correspond to the second port index group is 3. The third port index group includes a port 3, a port 4, and a port 5, and a number of DMRS CDM groups without data that correspond to the third port index group is 3. The fourth port index group includes a port 0, a port 1, and a port 12, and a number of DMRS CDM groups without data that correspond to the fourth port index group is 1. The fifth port index group includes a port 0, a port 1, and a port 12, and a number of DMRS CDM groups without data that correspond to the fifth port index group is 2. The sixth port index group includes a port 2, a port 3, and a port 14, and a number of DMRS CDM groups without data that correspond to the sixth port index group is 2. The seventh port index group includes a port 0, a port 1, and a port 12, and a number of DMRS CDM groups without data that correspond to the seventh port index group is 3. The eighth port index group includes a port 2, a port 3, and a port 14, and a number of DMRS CDM groups without data that correspond to the eighth port index group is 3. The ninth port index group includes a port 4, a port 5, and a port 16, and a number of DMRS CDM groups without data that correspond to the ninth port index group is 3. The tenth port index group includes a port 13, a port 15, and a port 17, and a number of DMRS CDM groups without data that correspond to the tenth port index group is 3.

When the value of M is 4, the antenna port set is table 27-4, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), and an eighth port index group (a row corresponding to a value being 7). The first port index group includes a port 0, a port 1, a port 2, and a port 3, and a number of DMRS CDM groups without data that correspond to the first port index group is 2. The second port index group includes a port 0, a port 1, a port 2, and a port 3, and a number of DMRS CDM groups without data that correspond to the second port index group is 3. The third port index group includes a port 0, a port 1, a port 12, and a port 13, and a number of DMRS CDM groups without data that correspond to the third port index group is 1. The fourth port index group includes a port 0, a port 1, a port 12, and a port 13, and a number of DMRS CDM groups without data that correspond to the fourth port index group is 2. The fifth port index group includes a port 2, a port 3, a port 14, and a port 15, and a number of DMRS CDM groups without data that correspond to the fifth port index group is 2. The sixth port index group includes a port 0, a port 1, a port 12, and a port 13, and a number of DMRS CDM groups without data that correspond to the sixth port index group is 3. The seventh port index group includes a port 2, a port 3, a port 14, and a port 15, and a number of DMRS CDM groups without data that correspond to the seventh port index group is 3. The eighth port index group includes a port 4, a port 5, a port 6, and a port 17, and a number of DMRS CDM groups without data that correspond to the eighth port index group is 3.

When the value of M is 5, the antenna port set is table 27-5, and the antenna port set includes a first port index group (a row corresponding to a value being 0) and a second port index group (a row corresponding to a value being 1). The first port index group includes a port 0, a port 1, a port 2, a port 3, and a port 4, and a number of DMRS CDM groups without data that correspond to the first port index group is 3. The second port index group includes a port 0, a port 1, a port 2, a port 3, and a port 12, and a number of DMRS CDM groups without data that correspond to the second port index group is 2.

When the value of M is 6, the antenna port set is table 27-6, and the antenna port set includes a first port index group (a row corresponding to a value being 0) and a second port index group (a row corresponding to a value being 1). The first port index group includes a port 0, a port 1, a port 2, a port 3, a port 4, and a port 5, and a number of DMRS CDM groups without data that correspond to the first port index group is 3. The second port index group includes a port 0, a port 1, a port 2, a port 3, a port 12, and a port 13, and a number of DMRS CDM groups without data that correspond to the second port index group is 2.

When the value of M is 7, the antenna port set is table 27-7, and the antenna port set includes a first port index group (a row corresponding to a value being 0). The first port index group includes a port 0, a port 1, a port 2, a port 3, a port 12, a port 13, and a port 14, and a number of DMRS CDM groups without data that correspond to the first port index group is 2.

When the value of M is 8, the antenna port set is table 27-8, and the antenna port set includes a first port index group (a row corresponding to a value being 0). The first port index group includes a port 0, a port 1, a port 2, a port 3, a port 12, a port 13, a port 14, and a port 15, and a number of DMRS CDM groups without data that correspond to the first port index group is 2.

**Table 27-1: dmrs type=Type2, maxLength=1, M=1**

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12 | 1 | 12 |
| 13 | 1 | 13 |
| 14 | 2 | 12 |
| 15 | 2 | 13 |
| 16 | 2 | 14 |
| 17 | 2 | 15 |
| 18 | 3 | 12 |
| 19 | 3 | 13 |
| 20 | 3 | 14 |
| 21 | 3 | 15 |
| 22 | 3 | 16 |
| 23 | 3 | 17 |
| 24-31 | Reserved | Reserved |

**Table 27-2: dmrs type=Type2, maxLength=1, M=2**

| Value | Number of DMRS CDM group(s) without data | DMRS port(s) |
|---|---|---|
| 0 | 1 | 0, 1 |
| 1 | 2 | 0, 1 |
| 2 | 2 | 2, 3 |
| 3 | 3 | 0, 1 |
| 4 | 3 | 2, 3 |
| 5 | 3 | 4, 5 |
| 6 | 2 | 0, 2 |
| 7 | 1 | 12, 13 |
| 8 | 2 | 12, 13 |
| 9 | 2 | 14, 15 |
| 10 | 3 | 12, 13 |
| 11 | 3 | 14, 15 |
| 12 | 3 | 16, 17 |
| 13 | 3 | 13, 15 |
| 14 | 2 | 13, 15 |
| 15-31 | Reserved | Reserved |

**Table 27-3: dmrs type=Type2, maxLength=1, M=3**

| Value | Number of DMRS CDM group(s) without data | DMRS port(s) |
|---|---|---|
| 0 | 2 | 0-2 |
| 1 | 3 | 0-2 |
| 2 | 3 | 3-5 |
| 3 | 1 | 0, 1, 12 |
| 4 | 2 | 0, 1, 12 |
| 5 | 2 | 2, 3, 14 |
| 6 | 3 | 0, 1, 12 |
| 7 | 3 | 2, 3, 14 |
| 8 | 3 | 4, 5, 16 |
| 9 | 3 | 13, 15, 17 |
| 10-31 | Reserved | Reserved |

**Table 27-4: dmrs type=Type2, maxLength=1, M=4**

| Value | Number of DMRS CDM group(s) without data | DMRS port(s) |
|---|---|---|
| 0 | 2 | 0-3 |
| 1 | 3 | 0-3 |
| 2 | 1 | 0, 1, 12, 13 |
| 3 | 2 | 0, 1, 12, 13 |
| 4 | 2 | 2, 3, 14, 15 |
| 5 | 3 | 0, 1, 12, 13 |
| 6 | 3 | 2, 3, 14, 15 |
| 7 | 3 | 4, 5, 16, 17 |
| 8-31 | Reserved | Reserved |

**Table 27-5: dmrs type=Type2, maxLength=1, M=5**

| Value | Number of DMRS CDM group(s) without data | DMRS port(s) |
|---|---|---|
| 0 | 3 | 0-4 |
| 1 | 2 | 0, 1, 2, 3, 12 |
| 2-31 | Reserved | Reserved |

**Table 27-6: dmrs type=Type2, maxLength=1, M=6**

| Value | Number of DMRS CDM group(s) without data | DMRS port(s) |
|---|---|---|
| 0 | 3 | 0-5 |
| 1 | 2 | 0, 1, 2, 3, 12, 13 |
| 2-31 | Reserved | Reserved |

**Table 27-7: dmrs type=Type2, maxLength=1, M=7**

| Value | Number of DMRS CDM group(s) without data | DMRS port(s) |
|---|---|---|
| 0 | 2 | 0, 1, 2, 3, 12, 13, 14 |
| 1-31 | Reserved | Reserved |

**Table 27-8: dmrs type=Type2, maxLength=1, M=8**

| Value | Number of DMRS CDM group(s) without data | DMRS port(s) |
|---|---|---|
| 0 | 2 | 0, 1, 2, 3, 12, 13, 14, 15 |
| 1-31 | Reserved | Reserved |

In embodiments of this application, table 24-A6 may be further split into table 28-1 to table 28-8. The type of the demodulation reference signal is the second type (Type2), the maximum length (maxLength) of the demodulation reference signal is 2, and a value of M corresponding to the port index group included in the antenna port set is any one of 1 to 8.

When the value of M is 1, the antenna port set is table 28-1, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), an eighth port index group (a row corresponding to a value being 7), a ninth port index group (a row corresponding to a value being 8), a tenth port index group (a row corresponding to a value being 9), an eleventh port index group (a row corresponding to a value being 10), a twelfth port index group (a row corresponding to a value being 11), a thirteenth port index group (a row corresponding to a value being 12), a fourteenth port index group (a row corresponding to a value being 13), a fifteenth port index group (a row corresponding to a value being 14), a sixteenth port index group (a row corresponding to a value being 15), a seventeenth port index group (a row corresponding to a value being 16), an eighteenth port index group (a row corresponding to a value being 17), a nineteenth port index group (a row corresponding to a value being 18), a twentieth port index group (a row corresponding to a value being 19), a twenty-first port index group (a row corresponding to a value being 20), a twenty-second port index group (a row corresponding to a value being 21), a twenty-third port index group (a row corresponding to a value being 22), a twenty-fourth port index group (a row corresponding to a value being 23), a twenty-fifth port index group (a row corresponding to a value being 24), a twenty-sixth port index group (a row corresponding to a value being 25), a twenty-seventh port index group (a row corresponding to a value being 26), a twenty-eighth port index group (a row corresponding to a value being 27), a twenty-ninth port index group (a row corresponding to a value being 28), a thirtieth port index group (a row corresponding to a value being 29), a thirty-first port index group (a row corresponding to a value being 30), a thirty-second port index group (a row corresponding to a value being 31), a thirty-third port index group (a row corresponding to a value being 32), a thirty-fourth port index group (a row corresponding to a value being 33), a thirty-fifth port index group (a row corresponding to a value being 34), a thirty-sixth port index group (a row corresponding to a value being 35), a thirty-seventh port index group (a row corresponding to a value being 36), a thirty-eighth port index group (a row corresponding to a value being 37), a thirty-ninth port index group (a row corresponding to a value being 38), a fortieth port index group (a row corresponding to a value being 39), a forty-first port index group (a row corresponding to a value being 40), a forty-second port index group (a row corresponding to a value being 41), a forty-third port index group (a row corresponding to a value being 42), a forty-fourth port index group (a row corresponding to a value being 43), a forty-fifth port index group (a row corresponding to a value being 44), a forty-sixth port index group (a row corresponding to a value being 45), a forty-seventh port index group (a row corresponding to a value being 46), a forty-eighth port index group (a row corresponding to a value being 47), a forty-ninth port index group (a row corresponding to a value being 48), a fiftieth port index group (a row corresponding to a value being 49), a fifty-first port index group (a row corresponding to a value being 50), and a fifty-second port index group (a row corresponding to a value being 51). The first port index group includes a port 0, a number of DMRS CDM groups without data that correspond to the first port index group is 1, and a number of front-load symbols that correspond to the first port index group is 1. The second port index group includes a port 1, a number of DMRS CDM groups without data that correspond to the second port index group is 1, and a number of front-load symbols that correspond to the second port index group is 1. The third port index group includes a port 0, a number of DMRS CDM groups without data that correspond to the third port index group is 2, and a number of front-load symbols that correspond to the third port index group is 1. The fourth port index group includes a port 1, a number of DMRS CDM groups without data that correspond to the fourth port index group is 2, and a number of front-load symbols that correspond to the fourth port index group is 1. The fifth port index group includes a port 2, a number of DMRS CDM groups without data that correspond to the fifth port index group is 2, and a number of front-load symbols that correspond to the fifth port index group is 1. The sixth port index group includes a port 3, a number of DMRS CDM groups without data that correspond to the sixth port index group is 2, and a number of front-load symbols that correspond to the fifth port index group is 1. The seventh port index group includes a port 0, a number of DMRS CDM groups without data that correspond to the seventh port index group is 3, and a number of front-load symbols that correspond to the seventh port index group is 1. The eighth port index group includes a port 1, a number of DMRS CDM groups without data that correspond to the eighth port index group is 3, and a number of front-load symbols that correspond to the eighth port index group is 1. The ninth port index group includes a port 2, a number of DMRS CDM groups without data that correspond to the ninth port index group is 3, and a number of front-load symbols that correspond to the ninth port index group is 1. The tenth port index group includes a port 3, a number of DMRS CDM groups without data that correspond to the tenth port index group is 3, and a number of front-load symbols that correspond to the tenth port index group is 1. The eleventh port index group includes a port 4, a number of DMRS CDM groups without data that correspond to the eleventh port index group is 3, and a number of front-load symbols that correspond to the eleventh port index group is 1. The twelfth port index group includes a port 5, a number of DMRS CDM groups without data that correspond to the twelfth port index group is 3, and a number of front-load symbols that correspond to the eleventh port index group is 1. The thirteenth port index group includes a port 0, a number of DMRS CDM groups without data that correspond to the thirteenth port index group is 3, and a number of front-load symbols that correspond to the thirteenth port index group is 2. The fourteenth port index group includes a port 1, a number of DMRS CDM groups without data that correspond to the fourteenth port index group is 3, and a number of front-load symbols that correspond to the fourteenth port index group is 2. The fifteenth port index group includes a port 2, a number of DMRS CDM groups without data that correspond to the fifteenth port index group is 3, and a number of front-load symbols that correspond to the fifteenth port index group is 2. The sixteenth port index group includes a port 3, a number of DMRS CDM groups without data that correspond to the sixteenth port index group is 3, and a number of front-load symbols that correspond to the sixteenth port index group is 2. The seventeenth port index group includes a port 4, a number of DMRS CDM groups without data that correspond to the seventeenth port index group is 3, and a number of front-load symbols that correspond to the seventeenth port index group is 2. The eighteenth port index group includes a port 5, a number of DMRS CDM groups without data that correspond to the eighteenth port index group is 3, and a number of front-load symbols that correspond to the eighteenth port index group is 2. The nineteenth port index group includes a port 6, a number of DMRS CDM groups without data that correspond to the nineteenth port index group is 3, and a number of front-load symbols that correspond to the nineteenth port index group is 2. The twentieth port index group includes a port 7, a number of DMRS CDM groups without data that correspond to the twentieth port index group is 3, and a number of front-load symbols that correspond to the twentieth port index group is 2. The twenty-first port index group includes a port 8, a number of DMRS CDM groups without data that correspond to the twenty-first port index group is 3, and a number of front-load symbols that correspond to the twenty-first port index group is 2. The twenty-second port index group includes a port 9, a number of DMRS CDM groups without data that correspond to the twenty-second port index group is 3, and a number of front-load symbols that correspond to the twenty-second port index group is 2. The twenty-third port index group includes a port 10, a number of DMRS CDM groups without data that correspond to the twenty-third port index group is 3, and a number of front-load symbols that correspond to the twenty-third port index group is 2. The twenty-fourth port index group includes a port 11, a number of DMRS CDM groups without data that correspond to the twenty-fourth port index group is 3, and a number of front-load symbols that correspond to the twenty-fourth port index group is 2. The twenty-fifth port index group includes a port 0, a number of DMRS CDM groups without data that correspond to the twenty-fifth port index group is 1, and a number of front-load symbols that correspond to the twenty-fifth port index group is 2. The twenty-sixth port index group includes a port 1, a number of DMRS CDM groups without data that correspond to the twenty-sixth port index group is 1, and a number of front-load symbols that correspond to the twenty-sixth port index group is 2. The twenty-seventh port index group includes a port 6, a number of DMRS CDM groups without data that correspond to the twenty-seventh port index group is 1, and a number of front-load symbols that correspond to the twenty-seventh port index group is 2. The twenty-eighth port index group includes a port 7, a number of DMRS CDM groups without data that correspond to the twenty-eighth port index group is 1, and a number of front-load symbols that correspond to the twenty-eighth port index group is 2. The twenty-ninth port index group includes a port 12, a number of DMRS CDM groups without data that correspond to the twenty-ninth port index group is 1, and a number of front-load symbols that correspond to the twenty-ninth port index group is 1. The thirtieth port index group includes a port 13, a number of DMRS CDM groups without data that correspond to the thirtieth port index group is 1, and a number of front-load symbols that correspond to the thirtieth port index group is 1. The thirty-first port index group includes a port 12, a number of DMRS CDM groups without data that correspond to the thirty-first port index group is 2, and a number of front-load symbols that correspond to the thirty-first port index group is 1. The thirty-second port index group includes a port 13, a number of DMRS CDM groups without data that correspond to the thirty-second port index group is 2, and a number of front-load symbols that correspond to the thirty-second port index group is 1. The thirty-third port index group includes a port 14, a number of DMRS CDM groups without data that correspond to the thirty-third port index group is 2, and a number of front-load symbols that correspond to the thirty-third port index group is 1. The thirty-fourth port index group includes a port 15, a number of DMRS CDM groups without data that correspond to the thirty-fourth port index group is 2, and a number of front-load symbols that correspond to the thirty-fourth port index group is 1. The thirty-fifth port index group includes a port 12, a number of DMRS CDM groups without data that correspond to the thirty-fifth port index group is 3, and a number of front-load symbols that correspond to the thirty-fifth port index group is 1. The thirty-sixth port index group includes a port 13, a number of DMRS CDM groups without data that correspond to the thirty-sixth port index group is 3, and a number of front-load symbols that correspond to the thirty-sixth port index group is 1. The thirty-seventh port index group includes a port 14, a number of DMRS CDM groups without data that correspond to the thirty-seventh port index group is 3, and a number of front-load symbols that correspond to the thirty-seventh port index group is 1. The thirty-eighth port index group includes a port 15, a number of DMRS CDM groups without data that correspond to the thirty-eighth port index group is 3, and a number of front-load symbols that correspond to the thirty-eighth port index group is 1. The thirty-ninth port index group includes a port 16, a number of DMRS CDM groups without data that correspond to the thirty-ninth port index group is 3, and a number of front-load symbols that correspond to the thirty-ninth port index group is 1. The fortieth port index group includes a port 17, a number of DMRS CDM groups without data that correspond to the fortieth port index group is 3, and a number of front-load symbols that correspond to the fortieth port index group is 1. The forty-first port index group includes a port 12, a number of DMRS CDM groups without data that correspond to the forty-first port index group is 3, and a number of front-load symbols that correspond to the forty-first port index group is 2. The forty-second port index group includes a port 13, a number of DMRS CDM groups without data that correspond to the forty-second port index group is 3, and a number of front-load symbols that correspond to the forty-second port index group is 2. The forty-third port index group includes a port 14, a number of DMRS CDM groups without data that correspond to the forty-third port index group is 3, and a number of front-load symbols that correspond to the forty-third port index group is 2. The forty-fourth port index group includes a port 15, a number of DMRS CDM groups without data that correspond to the forty-fourth port index group is 3, and a number of front-load symbols that correspond to the forty-fourth port index group is 2. The forty-fifth port index group includes a port 16, a number of DMRS CDM groups without data that correspond to the forty-fifth port index group is 3, and a number of front-load symbols that correspond to the forty-fifth port index group is 2. The forty-sixth port index group includes a port 17, a number of DMRS CDM groups without data that correspond to the forty-sixth port index group is 3, and a number of front-load symbols that correspond to the forty-sixth port index group is 2. The forty-seventh port index group includes a port 18, a number of DMRS CDM groups without data that correspond to the forty-seventh port index group is 3, and a number of front-load symbols that correspond to the forty-seventh port index group is 2. The forty-eighth port index group includes a port 19, a number of DMRS CDM groups without data that correspond to the forty-eighth port index group is 3, and a number of front-load symbols that correspond to the forty-eighth port index group is 2. The forty-ninth port index group includes a port 20, a number of DMRS CDM groups without data that correspond to the forty-ninth port index group is 3, and a number of front-load symbols that correspond to the forty-ninth port index group is 2. The fiftieth port index group includes a port 21, a number of DMRS CDM groups without data that correspond to the fiftieth port index group is 3, and a number of front-load symbols that correspond to the fiftieth port index group is 2. The fifty-first port index group includes a port 22, a number of DMRS CDM groups without data that correspond to the fifty-first port index group is 3, and a number of front-load symbols that correspond to the fifty-first port index group is 2. The fifty-second port index group includes a port 23, a number of DMRS CDM groups without data that correspond to the fifty-second port index group is 3, and a number of front-load symbols that correspond to the fifty-second port index group is 2.

When the value of M is 2, the antenna port set is table 28-2, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), an eighth port index group (a row corresponding to a value being 7), a ninth port index group (a row corresponding to a value being 8), a tenth port index group (a row corresponding to a value being 9), an eleventh port index group (a row corresponding to a value being 10), a twelfth port index group (a row corresponding to a value being 11), a thirteenth port index group (a row corresponding to a value being 12), a fourteenth port index group (a row corresponding to a value being 13), a fifteenth port index group (a row corresponding to a value being 14), a sixteenth port index group (a row corresponding to a value being 15), a seventeenth port index group (a row corresponding to a value being 16), an eighteenth port index group (a row corresponding to a value being 17), a nineteenth port index group (a row corresponding to a value being 18), a twentieth port index group (a row corresponding to a value being 19), a twenty-first port index group (a row corresponding to a value being 20), a twenty-second port index group (a row corresponding to a value being 21), a twenty-third port index group (a row corresponding to a value being 22), a twenty-fourth port index group (a row corresponding to a value being 23), a twenty-fifth port index group (a row corresponding to a value being 24), a twenty-sixth port index group (a row corresponding to a value being 25), a twenty-seventh port index group (a row corresponding to a value being 26), a twenty-eighth port index group (a row corresponding to a value being 27), a twenty-ninth port index group (a row corresponding to a value being 28), a thirtieth port index group (a row corresponding to a value being 29), a thirty-first port index group (a row corresponding to a value being 30), a thirty-second port index group (a row corresponding to a value being 31), and a thirty-third port index group (a row corresponding to a value being 32). The first port index group includes a port 0 and a port 1, a number of DMRS CDM groups without data that correspond to the first port index group is 1, and a number of front-load symbols that correspond to the first port index group is 1. The second port index group includes a port 0 and a port 1, a number of DMRS CDM groups without data that correspond to the second port index group is 2, and a number of front-load symbols that correspond to the second port index group is 1. The third port index group includes a port 2 and a port 3, a number of DMRS CDM groups without data that correspond to the third port index group is 2, and a number of front-load symbols that correspond to the third port index group is 1. The fourth port index group includes a port 0 and a port 1, a number of DMRS CDM groups without data that correspond to the fourth port index group is 3, and a number of front-load symbols that correspond to the fourth port index group is 1. The fifth port index group includes a port 2 and a port 3, a number of DMRS CDM groups without data that correspond to the fifth port index group is 3, and a number of front-load symbols that correspond to the fifth port index group is 1. The sixth port index group includes a port 4 and a port 5, a number of DMRS CDM groups without data that correspond to the sixth port index group is 3, and a number of front-load symbols that correspond to the sixth port index group is 1. The seventh port index group includes a port 0 and a port 2, a number of DMRS CDM groups without data that correspond to the seventh port index group is 2, and a number of front-load symbols that correspond to the seventh port index group is 1. The eighth port index group includes a port 0 and a port 1, a number of DMRS CDM groups without data that correspond to the eighth port index group is 3, and a number of front-load symbols that correspond to the eighth port index group is 2. The ninth port index group includes a port 2 and a port 3, a number of DMRS CDM groups without data that correspond to the ninth port index group is 3, and a number of front-load symbols that correspond to the ninth port index group is 2. The tenth port index group includes a port 4 and a port 5, a number of DMRS CDM groups without data that correspond to the tenth port index group is 3, and a number of front-load symbols that correspond to the tenth port index group is 2. The eleventh port index group includes a port 6 and a port 7, a number of DMRS CDM groups without data that correspond to the eleventh port index group is 3, and a number of front-load symbols that correspond to the eleventh port index group is 2. The twelfth port index group includes a port 8 and a port 9, a number of DMRS CDM groups without data that correspond to the twelfth port index group is 3, and a number of front-load symbols that correspond to the twelfth port index group is 2. The thirteenth port index group includes a port 10 and a port 11, a number of DMRS CDM groups without data that correspond to the thirteenth port index group is 3, and a number of front-load symbols that correspond to the thirteenth port index group is 2. The fourteenth port index group includes a port 0 and a port 1, a number of DMRS CDM groups without data that correspond to the fourteenth port index group is 1, and a number of front-load symbols that correspond to the fourteenth port index group is 2. The fifteenth port index group includes a port 6 and a port 7, a number of DMRS CDM groups without data that correspond to the fifteenth port index group is 1, and a number of front-load symbols that correspond to the fifteenth port index group is 2. The sixteenth port index group includes a port 0 and a port 1, a number of DMRS CDM groups without data that correspond to the sixteenth port index group is 2, and a number of front-load symbols that correspond to the sixteenth port index group is 2. The seventeenth port index group includes a port 2 and a port 3, a number of DMRS CDM groups without data that correspond to the seventeenth port index group is 2, and a number of front-load symbols that correspond to the seventeenth port index group is 2. The eighteenth port index group includes a port 6 and a port 7, a number of DMRS CDM groups without data that correspond to the eighteenth port index group is 2, and a number of front-load symbols that correspond to the eighteenth port index group is 2. The nineteenth port index group includes a port 8 and a port 9, a number of DMRS CDM groups without data that correspond to the nineteenth port index group is 2, and a number of front-load symbols that correspond to the nineteenth port index group is 2. The twentieth port index group includes a port 12 and a port 13, a number of DMRS CDM groups without data that correspond to the twentieth port index group is 1, and a number of front-load symbols that correspond to the twentieth port index group is 1. The twenty-first port index group includes a port 12 and a port 13, a number of DMRS CDM groups without data that correspond to the twenty-first port index group is 2, and a number of front-load symbols that correspond to the twenty-first port index group is 1. The twenty-second port index group includes a port 14 and a port 15, a number of DMRS CDM groups without data that correspond to the twenty-first port index group is 2, and a number of front-load symbols that correspond to the twenty-first port index group is 1. The twenty-third port index group includes a port 12 and a port 13, a number of DMRS CDM groups without data that correspond to the twenty-third port index group is 3, and a number of front-load symbols that correspond to the twenty-third port index group is 1. The twenty-fourth port index group includes a port 14 and a port 15, a number of DMRS CDM groups without data that correspond to the twenty-fourth port index group is 3, and a number of front-load symbols that correspond to the twenty-fourth port index group is 1. The twenty-fifth port index group includes a port 16 and a port 17, a number of DMRS CDM groups without data that correspond to the twenty-fifth port index group is 3, and a number of front-load symbols that correspond to the twenty-fifth port index group is 1. The twenty-sixth port index group includes a port 12 and a port 13, a number of DMRS CDM groups without data that correspond to the twenty-sixth port index group is 3, and a number of front-load symbols that correspond to the twenty-sixth port index group is 2. The twenty-seventh port index group includes a port 14 and a port 15, a number of DMRS CDM groups without data that correspond to the twenty-seventh port index group is 3, and a number of front-load symbols that correspond to the twenty-seventh port index group is 2. The twenty-eighth port index group includes a port 16 and a port 17, a number of DMRS CDM groups without data that correspond to the twenty-eighth port index group is 3, and a number of front-load symbols that correspond to the twenty-eighth port index group is 2. The twenty-ninth port index group includes a port 18 and a port 19, a number of DMRS CDM groups without data that correspond to the twenty-ninth port index group is 3, and a number of front-load symbols that correspond to the twenty-ninth port index group is 2. The thirtieth port index group includes a port 20 and a port 21, a number of DMRS CDM groups without data that correspond to the thirtieth port index group is 3, and a number of front-load symbols that correspond to the thirtieth port index group is 2. The thirty-first port index group includes a port 22 and a port 23, a number of DMRS CDM groups without data that correspond to the thirty-first port index group is 3, and a number of front-load symbols that correspond to the thirty-first port index group is 2. The thirty-second port index group includes a port 13 and a port 15, a number of DMRS CDM groups without data that correspond to the thirty-second port index group is 3, and a number of front-load symbols that correspond to the thirty-second port index group is 1. The thirty-third port index group includes a port 13 and a port 15, a number of DMRS CDM groups without data that correspond to the thirty-third port index group is 2, and a number of front-load symbols that correspond to the thirty-third port index group is 1.

When the value of M is 3, the antenna port set is table 28-3, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), an eighth port index group (a row corresponding to a value being 7), a ninth port index group (a row corresponding to a value being 8), a tenth port index group (a row corresponding to a value being 9), an eleventh port index group (a row corresponding to a value being 10), a twelfth port index group (a row corresponding to a value being 11), a thirteenth port index group (a row corresponding to a value being 12), a fourteenth port index group (a row corresponding to a value being 13), a fifteenth port index group (a row corresponding to a value being 14), a sixteenth port index group (a row corresponding to a value being 15), a seventeenth port index group (a row corresponding to a value being 16), an eighteenth port index group (a row corresponding to a value being 17), and a nineteenth port index group (a row corresponding to a value being 18). The first port index group includes a port 0, a port 1, and a port 2, a number of DMRS CDM groups without data that correspond to the first port index group is 2, and a number of front-load symbols that correspond to the first port index group is 1. The second port index group includes a port 0, a port 1, and a port 2, a number of DMRS CDM groups without data that correspond to the second port index group is 3, and a number of front-load symbols that correspond to the second port index group is 1. The third port index group includes a port 3, a port 4, and a port 5, a number of DMRS CDM groups without data that correspond to the third port index group is 3, and a number of front-load symbols that correspond to the third port index group is 1. The fourth port index group includes a port 0, a port 1, and a port 6, a number of DMRS CDM groups without data that correspond to the fourth port index group is 3, and a number of front-load symbols that correspond to the fourth port index group is 2. The fifth port index group includes a port 2, a port 3, and a port 8, a number of DMRS CDM groups without data that correspond to the fifth port index group is 3, and a number of front-load symbols that correspond to the fifth port index group is 2. The sixth port index group includes a port 4, a port 5, and a port 10, a number of DMRS CDM groups without data that correspond to the sixth port index group is 3, and a number of front-load symbols that correspond to the sixth port index group is 2. The seventh port index group includes a port 0, a port 1, and a port 12, a number of DMRS CDM groups without data that correspond to the seventh port index group is 1, and a number of front-load symbols that correspond to the seventh port index group is 1. The eighth port index group includes a port 0, a port 1, and a port 12, a number of DMRS CDM groups without data that correspond to the eighth port index group is 2, and a number of front-load symbols that correspond to the eighth port index group is 1. The ninth port index group includes a port 2, a port 3, and a port 14, a number of DMRS CDM groups without data that correspond to the ninth port index group is 2, and a number of front-load symbols that correspond to the ninth port index group is 1. The tenth port index group includes a port 0, a port 1, and a port 12, a number of DMRS CDM groups without data that correspond to the tenth port index group is 3, and a number of front-load symbols that correspond to the tenth port index group is 1. The eleventh port index group includes a port 2, a port 3, and a port 14, a number of DMRS CDM groups without data that correspond to the eleventh port index group is 3, and a number of front-load symbols that correspond to the eleventh port index group is 1. The twelfth port index group includes a port 4, a port 5, and a port 16, a number of DMRS CDM groups without data that correspond to the twelfth port index group is 3, and a number of front-load symbols that correspond to the twelfth port index group is 1. The thirteenth port index group includes a port 7, a port 12, and a port 13, a number of DMRS CDM groups without data that correspond to the thirteenth port index group is 3, and a number of front-load symbols that correspond to the thirteenth port index group is 2. The fourteenth port index group includes a port 9, a port 14, and a port 15, a number of DMRS CDM groups without data that correspond to the fourteenth port index group is 3, and a number of front-load symbols that correspond to the fourteenth port index group is 2. The fifteenth port index group includes a port 11, a port 16, and a port 17, a number of DMRS CDM groups without data that correspond to the fifteenth port index group is 3, and a number of front-load symbols that correspond to the fifteenth port index group is 2. The sixteenth port index group includes a port 9, a port 18, and a port 19, a number of DMRS CDM groups without data that correspond to the sixteenth port index group is 3, and a number of front-load symbols that correspond to the sixteenth port index group is 2. The seventeenth port index group includes a port 18, a port 19, and a port 20, a number of DMRS CDM groups without data that correspond to the seventeenth port index group is 3, and a number of front-load symbols that correspond to the seventeenth port index group is 2. The eighteenth port index group includes a port 21, a port 22, and a port 23, a number of DMRS CDM groups without data that correspond to the eighteenth port index group is 3, and a number of front-load symbols that correspond to the eighteenth port index group is 2. The nineteenth port index group includes a port 13, a port 15, and a port 17, a number of DMRS CDM groups without data that correspond to the nineteenth port index group is 3, and a number of front-load symbols that correspond to the nineteenth port index group is 1.

When the value of M is 4, the antenna port set is table 28-4, and the antenna port set includes a first port index group (a row corresponding to a value being 0), a second port index group (a row corresponding to a value being 1), a third port index group (a row corresponding to a value being 2), a fourth port index group (a row corresponding to a value being 3), a fifth port index group (a row corresponding to a value being 4), a sixth port index group (a row corresponding to a value being 5), a seventh port index group (a row corresponding to a value being 6), an eighth port index group (a row corresponding to a value being 7), a ninth port index group (a row corresponding to a value being 8), a tenth port index group (a row corresponding to a value being 9), an eleventh port index group (a row corresponding to a value being 10), a twelfth port index group (a row corresponding to a value being 11), a thirteenth port index group (a row corresponding to a value being 12), and a fourteenth port index group (a row corresponding to a value being 13). The first port index group includes a port 0, a port 1, a port 2, and a port 3, a number of DMRS CDM groups without data that correspond to the first port index group is 2, and a number of front-load symbols that correspond to the first port index group is 1. The second port index group includes a port 0, a port 1, a port 2, and a port 3, a number of DMRS CDM groups without data that correspond to the second port index group is 3, and a number of front-load symbols that correspond to the second port index group is 1. The third port index group includes a port 0, a port 1, a port 6, and a port 7, a number of DMRS CDM groups without data that correspond to the third port index group is 3, and a number of front-load symbols that correspond to the third port index group is 2. The fourth port index group includes a port 2, a port 3, a port 8, and a port 9, a number of DMRS CDM groups without data that correspond to the fourth port index group is 3, and a number of front-load symbols that correspond to the fourth port index group is 2. The fifth port index group includes a port 4, a port 5, a port 10, and a port 11, a number of DMRS CDM groups without data that correspond to the fifth port index group is 3, and a number of front-load symbols that correspond to the fifth port index group is 2. The sixth port index group includes a port 12, a port 13, a port 18, and a port 19, a number of DMRS CDM groups without data that correspond to the sixth port index group is 3, and a number of front-load symbols that correspond to the sixth port index group is 2. The seventh port index group includes a port 14, a port 15, a port 20, and a port 21, a number of DMRS CDM groups without data that correspond to the seventh port index group is 3, and a number of front-load symbols that correspond to the seventh port index group is 2. The eighth port index group includes a port 16, a port 17, a port 22, and a port 23, a number of DMRS CDM groups without data that correspond to the eighth port index group is 3, and a number of front-load symbols that correspond to the eighth port index group is 2. The ninth port index group includes a port 0, a port 1, a port 12, and a port 13, a number of DMRS CDM groups without data that correspond to the ninth port index group is 1, and a number of front-load symbols that correspond to the ninth port index group is 1. The tenth port index group includes a port 0, a port 1, a port 12, and a port 13, a number of DMRS CDM groups without data that correspond to the tenth port index group is 2, and a number of front-load symbols that correspond to the tenth port index group is 1. The eleventh port index group includes a port 2, a port 3, a port 14, and a port 15, a number of DMRS CDM groups without data that correspond to the eleventh port index group is 2, and a number of front-load symbols that correspond to the eleventh port index group is 1. The twelfth port index group includes a port 0, a port 1, a port 12, and a port 13, a number of DMRS CDM groups without data that correspond to the twelfth port index group is 3, and a number of front-load symbols that correspond to the twelfth port index group is 1. The thirteenth port index group includes a port 2, a port 3, a port 14, and a port 15, a number of DMRS CDM groups without data that correspond to the thirteenth port index group is 3, and a number of front-load symbols that correspond to the thirteenth port index group is 1. The fourteenth port index group includes a port 4, a port 5, a port 16, and a port 17, a number of DMRS CDM groups without data that correspond to the fourteenth port index group is 3, and a number of front-load symbols that correspond to the fourteenth port index group is 1.

When the value of M is 5, the antenna port set is table 28-5, and the antenna port set includes a first port index group (a row corresponding to a value being 0), a second port index group (a row corresponding to a value being 1), and a third port index group (a row corresponding to a value being 2). The first port index group includes a port 0, a port 1, a port 2, a port 3, and a port 4, a number of DMRS CDM groups without data that correspond to the first port index group is 3, and a number of front-load symbols that correspond to the first port index group is 2. The second port index group includes a port 0, a port 1, a port 2, a port 3, and a port 6, a number of DMRS CDM groups without data that correspond to the second port index group is 2, and a number of front-load symbols that correspond to the second port index group is 2. The third port index group includes a port 0, a port 1, a port 6, a port 7, and a port 12, a number of DMRS CDM groups without data that correspond to the third port index group is 1, and a number of front-load symbols that correspond to the third port index group is 2.

When the value of M is 6, the antenna port set is table 28-6, and the antenna port set includes a first port index group (a row corresponding to a value being 0), a second port index group (a row corresponding to a value being 1), and a third port index group (a row corresponding to a value being 2). The first port index group includes a port 0, a port 1, a port 2, a port 3, a port 4, and a port 5, a number of DMRS CDM groups without data that correspond to the first port index group is 3, and a number of front-load symbols that correspond to the first port index group is 2. The second port index group includes a port 0, a port 1, a port 2, a port 3, a port 6, and a port 8, a number of DMRS CDM groups without data that correspond to the second port index group is 2, and a number of front-load symbols that correspond to the second port index group is 2. The third port index group includes a port 0, a port 1, a port 6, a port 7, a port 12, and a port 13, a number of DMRS CDM groups without data that correspond to the third port index group is 1, and a number of front-load symbols that correspond to the third port index group is 2.

When the value of M is 7, the antenna port set is table 28-7, and the antenna port set includes a first port index group (a row corresponding to a value being 0) and a second port index group (a row corresponding to a value being 1). The first port index group includes a port 0, a port 1, a port 2, a port 3, a port 6, a port 7, and a port 8, a number of DMRS CDM groups without data that correspond to the first port index group is 2, and a number of front-load symbols that correspond to the first port index group is 2. The second port index group includes a port 0, a port 1, a port 6, a port 7, a port 12, a port 13, and a port 18, a number of DMRS CDM groups without data that correspond to the second port index group is 1, and a number of front-load symbols that correspond to the second port index group is 2.

When the value of M is 8, the antenna port set is table 28-8, and the antenna port set includes a first port index group (a row corresponding to a value being 0) and a second port index group (a row corresponding to a value being 1). The first port index group includes a port 0, a port 1, a port 2, a port 3, a port 6, a port 7, a port 8, and a port 9, a number of DMRS CDM groups without data that correspond to the first port index group is 2, and a number of front-load symbols that correspond to the first port index group is 2. The second port index group includes a port 0, a port 1, a port 6, a port 7, a port 12, a port 13, a port 18, and a port 19, a number of DMRS CDM groups without data that correspond to the second port index group is 1, and a number of front-load symbols that correspond to the second port index group is 2.

**Table 28-1: dmrs type=Type2, maxLength=2, M=1**

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28 | 1 | 12 | 1 |
| 29 | 1 | 13 | 1 |
| 30 | 2 | 12 | 1 |
| 31 | 2 | 13 | 1 |
| 32 | 2 | 14 | 1 |
| 33 | 2 | 15 | 1 |
| 34 | 3 | 12 | 1 |
| 35 | 3 | 13 | 1 |
| 36 | 3 | 14 | 1 |
| 37 | 3 | 15 | 1 |
| 38 | 3 | 16 | 1 |
| 39 | 3 | 17 | 1 |
| 40 | 3 | 12 | 2 |
| 41 | 3 | 13 | 2 |
| 42 | 3 | 14 | 2 |
| 43 | 3 | 15 | 2 |
| 44 | 3 | 16 | 2 |
| 45 | 3 | 17 | 2 |
| 46 | 3 | 18 | 2 |
| 47 | 3 | 19 | 2 |
| 48 | 3 | 20 | 2 |
| 49 | 3 | 21 | 2 |
| 50 | 3 | 22 | 2 |
| 51 | 3 | 23 | 2 |
| 52-63 | Reserved | Reserved | Reserved |

**Table 28-2: dmrs type=Type2, maxLength=2, M=2**

| Value | Number of DMRS CDM group(s) without data | DMRS port(s) | Number of front-load symbols |
|---|---|---|---|
| 0 | 1 | 0, 1 | 1 |
| 1 | 2 | 0, 1 | 1 |
| 2 | 2 | 2, 3 | 1 |
| 3 | 3 | 0, 1 | 1 |
| 4 | 3 | 2, 3 | 1 |
| 5 | 3 | 4, 5 | 1 |
| 6 | 2 | 0, 2 | 1 |
| 7 | 3 | 0, 1 | 2 |
| 8 | 3 | 2, 3 | 2 |
| 9 | 3 | 4, 5 | 2 |
| 10 | 3 | 6, 7 | 2 |
| 11 | 3 | 8, 9 | 2 |
| 12 | 3 | 10, 11 | 2 |
| 13 | 1 | 0, 1 | 2 |
| 14 | 1 | 6, 7 | 2 |
| 15 | 2 | 0, 1 | 2 |
| 16 | 2 | 2, 3 | 2 |
| 17 | 2 | 6, 7 | 2 |
| 18 | 2 | 8, 9 | 2 |
| 19 | 1 | 12, 13 | 1 |
| 20 | 2 | 12, 13 | 1 |
| 21 | 2 | 14, 15 | 1 |
| 22 | 3 | 12, 13 | 1 |
| 23 | 3 | 14, 15 | 1 |
| 24 | 3 | 16, 17 | 1 |
| 25 | 3 | 12, 13 | 2 |
| 26 | 3 | 14, 15 | 2 |
| 27 | 3 | 16, 17 | 2 |
| 28 | 3 | 18, 19 | 2 |
| 29 | 3 | 20, 21 | 2 |
| 30 | 3 | 22, 23 | 2 |
| 31 | 3 | 13, 15 | 1 |
| 32 | 2 | 13, 15 | 1 |
| 33-63 | Reserved | Reserved | Reserved |

**Table 28-3: dmrs type=Type2, maxLength=2, M=3**

| Value | Number of DMRS CDM group(s) without data | DMRS port(s) | Number of front-load symbols |
|---|---|---|---|
| 0 | 2 | 0-2 | 1 |
| 1 | 3 | 0-2 | 1 |
| 2 | 3 | 3-5 | 1 |
| 3 | 3 | 0, 1, 6 | 2 |
| 4 | 3 | 2, 3, 8 | 2 |
| 5 | 3 | 4, 5, 10 | 2 |
| 6 | 1 | 0, 1, 12 | 1 |
| 7 | 2 | 0, 1, 12 | 1 |
| 8 | 2 | 2, 3, 14 | 1 |
| 9 | 3 | 0, 1, 12 | 1 |
| 10 | 3 | 2, 3, 14 | 1 |
| 11 | 3 | 4, 5, 16 | 1 |
| 12 | 3 | 7, 12, 13 | 2 |
| 13 | 3 | 9, 14, 15 | 2 |
| 14 | 3 | 11, 16, 17 | 2 |
| 15 | 3 | 9, 18, 19 | 2 |
| 16 | 3 | 18, 19, 20 | 2 |
| 17 | 3 | 21, 22, 23 | 2 |
| 18 | 3 | 13, 15, 17 | 1 |
| 19-63 | Reserved | Reserved | Reserved |

**Table 28-4: dmrs type=Type2, maxLength=2, M=4**

| Value | Number of DMRS CDM group(s) without data | DMRS port(s) | Number of front-load symbols |
|---|---|---|---|
| 0 | 2 | 0-3 | 1 |
| 1 | 3 | 0-3 | 1 |
| 2 | 3 | 0, 1, 6, 7 | 2 |
| 3 | 3 | 2, 3, 8, 9 | 2 |
| 4 | 3 | 4, 5, 10, 11 | 2 |
| 5 | 3 | 12, 13, 18, 19 | 2 |
| 6 | 3 | 14, 15, 20, 21 | 2 |
| 7 | 3 | 16, 17, 22, 23 | 2 |
| 8 | 1 | 0, 1, 12, 13 | 1 |
| 9 | 2 | 0, 1, 12, 13 | 1 |
| 10 | 2 | 2, 3, 14, 15 | 1 |
| 11 | 3 | 0, 1, 12, 13 | 1 |
| 12 | 3 | 2, 3, 14, 15 | 1 |
| 13 | 3 | 4, 5, 16, 17 | 1 |
| 14-63 | Reserved | Reserved | Reserved |

**Table 28-5: dmrs type=Type2, maxLength=2, M=5**

| Value | Number of DMRS CDM group(s) without data | DMRS port(s) | Number of front-load symbols |
|---|---|---|---|
| 0 | 3 | 0-4 | 1 |
| 1 | 2 | 0, 1, 2, 3, 6 | 2 |
| 2 | 1 | 0, 1, 6, 7, 12 | 2 |
| 3-63 | Reserved | Reserved | Reserved |

**Table 28-6: dmrs type=Type2, maxLength=2, M=6**

| Value | Number of DMRS CDM group(s) without data | DMRS port(s) | Number of front-load symbols |
|---|---|---|---|
| 0 | 3 | 0-5 | 1 |
| 1 | 2 | 0, 1, 2, 3, 6, 8 | 2 |
| 2 | 1 | 0, 1, 6, 7, 12, 13 | 2 |
| 3-63 | Reserved | Reserved | Reserved |

**Table 28-7: dmrs type=2, maxLength=2, M=7**

| Value | Number of DMRS CDM group(s) without data | DMRS port(s) | Number of front-load symbols |
|---|---|---|---|
| 0 | 2 | 0, 1, 2, 3, 6, 7, 8 | 2 |
| 1 | 1 | 0, 1, 6, 7, 12, 13, 18 | 2 |
| 2-63 | Reserved | Reserved | Reserved |

**Table 28-8: dmrs type=2, maxLength=2, M=8**

| Value | Number of DMRS CDM group(s) without data | DMRS port(s) | Number of front-load symbols |
|---|---|---|---|
| 0 | 2 | 0, 1, 2, 3, 6, 7, 8, 9 | 2 |
| 1 | 1 | 0, 1, 6, 7, 12, 13, 18, 19 | 2 |
| 2-63 | Reserved | Reserved | Reserved |

The foregoing mainly describes, from the perspective of interaction between the network device and the terminal device, the solutions provided in embodiments of this application. It may be understood that, to implement the foregoing functions, the network device and the terminal device may include corresponding hardware structures and/or software modules for performing the functions. A person skilled in the art should be easily aware that, with reference to the example units and algorithm steps described in embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the network device and the terminal device based on the foregoing method examples. For example, division into each functional unit may be based on each corresponding function, or two or more functions may be integrated into one unit. The integrated unit may be implemented in a form of hardware, or may be implemented in a form of a software functional unit.

When the integrated unit is used, FIG. 8 is a possible example block diagram of an apparatus according to an embodiment of this application. As shown in FIG. 8, the apparatus 800 may include a processing unit 802 and a communication unit 803. The processing unit 802 is configured to control and manage an action of the apparatus 800. The communication unit 803 is configured to support communication between the apparatus 800 and another device. Optionally, the communication unit 803 is also referred to as a transceiver unit, and may include a receiving unit and/or a sending unit, respectively configured to perform a receiving operation and a sending operation. The apparatus 800 may further include a storage unit 801, configured to store program code and/or data of the apparatus 800.

The apparatus 800 may be the network device in the foregoing embodiment. The processing unit 802 may support the apparatus 800 in performing actions of the network device in the foregoing method examples. Alternatively, the processing unit 802 mainly performs internal actions of the network device in the method examples, and the communication unit 803 may support communication between the apparatus 800 and another device.

For example, in an embodiment, the communication unit 803 is configured to: send first indication information to a terminal device, and send second indication information to the terminal device.

The apparatus 800 may be the terminal device in the foregoing embodiment. The processing unit 802 may support the apparatus 800 in performing actions of the terminal device in the foregoing method examples. Alternatively, the processing unit 802 mainly performs an internal action of the terminal device in the method examples, and the communication unit 803 may support communication between the apparatus 800 and another device.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element, or may be implemented in a form of software invoked by a processing element.

In an example, a unit in any one of the foregoing apparatuses may be one or more integrated circuits configured to implement the foregoing method, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these integrated circuit forms. For another example, when the unit in the apparatus is implemented in a form of scheduling a program by a processing element, the processing element may be a processor, for example, a general-purpose central processing unit (central processing unit, CPU) or another processor that can invoke the program. For another example, the units may be integrated together and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

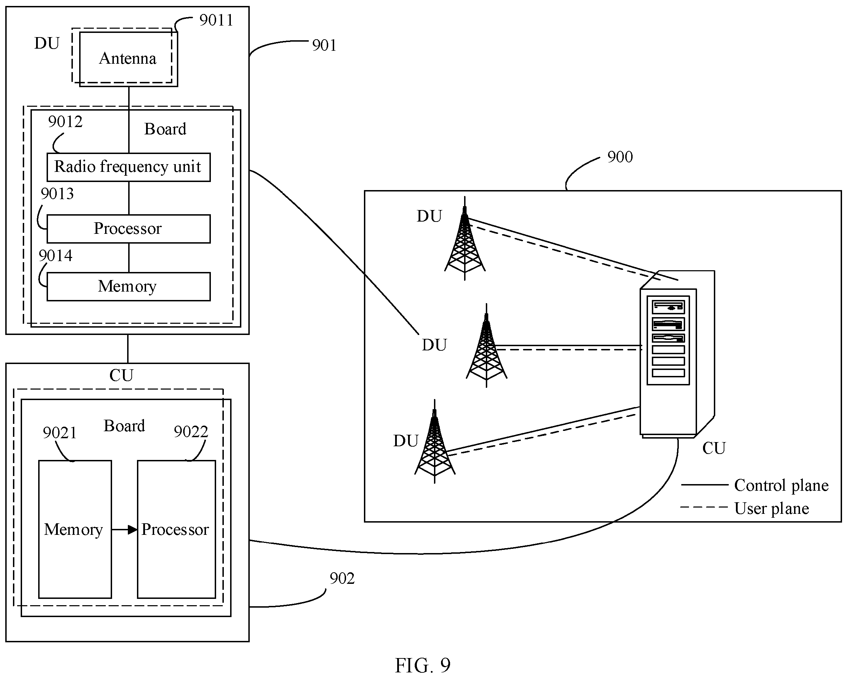

FIG. 9 is a diagram of a structure of a network device according to an embodiment of this application. The network device (or a base station) may be used in the communication system shown in FIG. 1, to perform functions of the network device in the foregoing method embodiments. As shown in FIG. 9, the network device 900 may include one or more DUs 901 and one or more CUs 902. The DU 901 may include at least one antenna 9011, at least one radio frequency unit 9012, at least one processor 9013, and at least one memory 9014. The DU 901 is mainly configured to receive and send radio frequency signals, convert a radio frequency signal and a baseband signal, and perform some baseband processing. The CU 902 may include at least one processor 9022 and at least one memory 9021.

The CU 902 is mainly configured to perform baseband processing, control the network device, and the like. The DU 901 and the CU 902 may be physically disposed together, or may be physically separated, namely, a distributed base station. The CU 902 is a control center of the network device, may also be referred to as a processing unit, and is mainly configured to complete a baseband processing function. For example, the CU 902 may be configured to control the network device to perform the operation procedure related to the network device in the foregoing method embodiments.

In addition, optionally, the network device 900 may include one or more radio frequency units, one or more DUs, and one or more CUs. The DU may include at least one processor 9013 and at least one memory 9014, the radio frequency unit may include at least one antenna 9011 and at least one radio frequency unit 9012, and the CU may include at least one processor 9022 and at least one memory 9021.

In an example, the CU 902 may include one or more boards. A plurality of boards may jointly support a radio access network (for example, a 5G network) with a single access indication, or may separately support radio access networks (for example, an LTE network, a 5G network, or another network) with different access standards. The memory 9021 and the processor 9022 may serve one or more boards. In other words, a memory and a processor may be disposed on each board. Alternatively, a plurality of boards may share a same memory and a same processor. In addition, a necessary circuit may further be disposed on each board. The DU 901 may include one or more boards. A plurality of boards may jointly support a radio access network (for example, a 5G network) with a single access indication, or may separately support radio access networks (for example, an LTE network, a 5G network, or another network) with different access standards. The memory 9014 and the processor 9013 may serve one or more boards. In other words, a memory and a processor may be disposed on each board. Alternatively, a plurality of boards may share a same memory and a same processor. In addition, a necessary circuit may further be disposed on each board.

The network device shown in FIG. 9 can implement all processes related to the network device in the foregoing method embodiments. Operations and/or functions of modules in the network device shown in FIG. 9 are respectively intended to implement corresponding procedures in the foregoing method embodiments. For details, refer to the descriptions in the foregoing method embodiments. To avoid repetition, detailed descriptions are properly omitted herein.

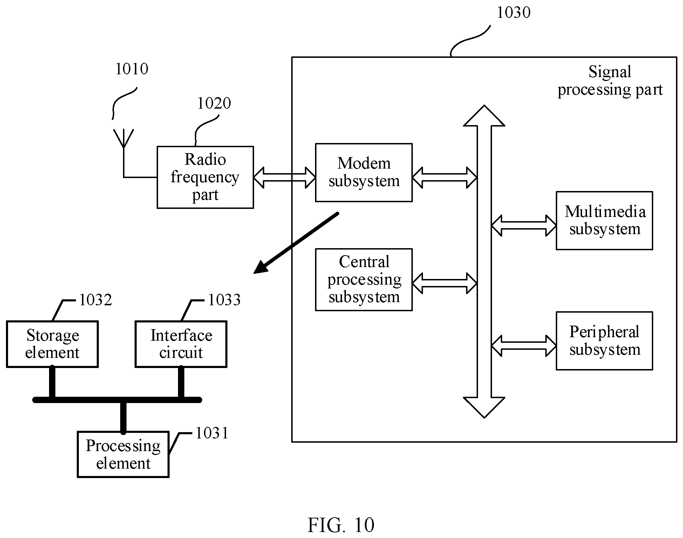

FIG. 10 is a diagram of a structure of a terminal device according to an embodiment of this application. The terminal device may be applied to the communication system shown in FIG. 1, and is configured to implement operations of the terminal device in the foregoing embodiments. As shown in FIG. 10, the terminal device includes: an antenna 1010, a radio frequency part 1020, and a signal processing part 1030. The antenna 1010 is connected to the radio frequency part 1020. In a downlink direction, the radio frequency part 1020 receives, through the antenna 1010, information sent by a network device (for example, a network device), and sends, to the signal processing part 1030 for processing, the information sent by the network device. In an uplink direction, the signal processing part 1030 processes information of the terminal device, and sends processed information to the radio frequency part 1020; and the radio frequency part 1020 processes the information of the terminal device, and then sends processed information to the network device through the antenna 1010.

The signal processing part 1030 may include a modem subsystem, configured to process data at each communication protocol layer; may further include a central processing subsystem, configured to process an operating system and an application layer that are of the terminal device; and may further include another subsystem, for example, a multimedia subsystem, or a peripheral subsystem. The multimedia subsystem is configured to control a camera or screen display of the terminal device. The peripheral subsystem is configured to connect to another device. The modem subsystem may be a separately disposed chip.

The modem subsystem may include one or more processing elements 1031, for example, include a main control CPU and another integrated circuit. In addition, the modem subsystem may further include a storage element 1032 and an interface circuit 1033. The storage element 1032 is configured to store data and a program. However, a program used to perform the methods performed by the terminal device in the foregoing methods may not be stored in the storage element 1032, but is stored in a memory outside the modem subsystem, and is loaded and used by the modem subsystem when to be used. The interface circuit 1033 is configured to communicate with another subsystem.

The modem subsystem may be implemented by using a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the method performed by the terminal device in the foregoing method embodiment. The storage element may be a storage element whose processing element is located on a same chip, that is, an on-chip storage element.

**In** another implementation, the program used to perform the method performed by the terminal device in the foregoing method may be in a storage element located on a different chip from the processing element, that is, an off-chip storage element. In this case, the processing element invokes or loads the program from the off-chip storage element to the on-chip storage element, to invoke and perform the method performed by the terminal device in the foregoing method embodiment.

**In** another implementation, units of the terminal device that implement the steps in the foregoing method may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

The units of the terminal device that implement the steps of the foregoing methods may be integrated together, and implemented in a form of SoC. The SoC chip is configured to implement the foregoing methods. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logical circuit in the processor element in combination with instructions; or may certainly perform, by combining the first manner and the second manner, some or all steps performed by the terminal device.

The processing element herein is the same as that described above, and may be implemented by a processor. A function of the processing element may be the same as a function of the processing unit described in FIG. 5. For example, the processing element may be a general-purpose processor, for example, a CPU, or may be one or more integrated circuits configured to implement the foregoing method, for example, one or more ASICs, one or more microprocessors DSPs, or one or more FPGAs, or a combination of at least two of the integrated circuit forms. The storage element may be implemented by using a memory. The storage element may be a memory, or may be a general name of a plurality of memories.

The terminal device shown in FIG. 10 can implement all processes related to the terminal device in the foregoing method embodiments. Operations and/or functions of the modules in the terminal device shown in FIG. 10 are intended to implement the corresponding procedures in the foregoing method embodiments respectively. For details, refer to the descriptions in the foregoing method embodiments. To avoid repetition, detailed descriptions are properly omitted herein.

Terms "system" and "network" in embodiments of this application may be used interchangeably. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects. "At least one of the following items (pieces)" or a similar expression thereof refers to any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art may make various modifications and variations to this application without departing from the spirit and scope of this application. Thus, this application is intended to cover these modifications and variations, provided that they fall within the scope of the claims of this application and their equivalent technologies.

## Claims

1. An antenna port indication method, comprising:
obtaining, by the network device, an antenna port set, wherein the antenna port set comprises at least one port index group set, port indexes comprised in a first port index group set in the at least one port index group set are different from each other, the first port index group set comprises at least one port index group, the at least one port index group comprises M port indexes, and M is a positive integer greater than or equal to 1; and
a total number of port indexes comprised in the first port index group set is G, G is a positive integer greater than or equal to 1 and less than or equal to K, and K is related to a type of a demodulation reference signal DMRS; and
sending, by the network device, first indication information to a first terminal device, wherein the first indication information indicates a first port index group.

2. The method according to claim 1, wherein the at least one port index group set comprises K port index group sets, a total number G of port indexes comprised in an i^{th} port index group set in the K port index group sets is in a one-to-one correspondence with a positive integer greater than or equal to 1 and less than or equal to K, and i∈[1, K].

3. The method according to claim 1 or 2, wherein a value of K is any one of 8, 12, 16, or 24.

4. The method according to any one of claims 1 to 3, wherein K is further related to a maximum length of the demodulation reference signal; and
when the type of the demodulation reference signal is a first type, and the maximum length of the demodulation reference signal is 1, the value of K is 8; or
when the type of the demodulation reference signal is a first type, and the maximum length of the demodulation reference signal is 2, the value of K is 16; or
when the type of the demodulation reference signal is a second type, and the maximum length of the demodulation reference signal is 1, the value of K is 12; or
when the type of the demodulation reference signal is a second type, and the maximum length of the demodulation reference signal is 2, the value of K is 24.

5. The method according to any one of claims 1 to 4, wherein the first port index group set comprises the first port index group, a second port index group, and a third port index group, the first port index group comprises three port indexes, the second port index group comprises three port indexes, and the third port index group comprises two port indexes.

6. The method according to claim 5, wherein when the type of the demodulation reference signal is the first type, and the maximum length of the demodulation reference signal is 1, the first port index group comprises indexes of a port 0, a port 1, and a port 8, the second port index group comprises indexes of a port 2, a port 3, and a port 10, and the third port index group comprises indexes of a port 9 and a port 11.

7. The method according to any one of claims 1 to 4, wherein the first port index group set comprises the first port index group, a second port index group, a third port index group, and a fourth port index group, the first port index group comprises three port indexes, the second port index group comprises three port indexes, the third port index group comprises three port indexes, and the fourth port index group comprises four port indexes.

8. The method according to claim 7, wherein when the type of the demodulation reference signal is the first type, and the maximum length of the demodulation reference signal is 2, the first port index group comprises indexes of a port 7, a port 12, and a port 13, the second port index group comprises indexes of a port 0, a port 1, and a port 4, the third port index group comprises indexes of a port 2, a port 3, and a port 6, and the fourth port index group comprises indexes of a port 10, a port 11, a port 14, and a port 15.

9. The method according to any one of claims 1 to 4, wherein the first port index group set comprises the first port index group, a second port index group, a third port index group, and a fourth port index group, the first port index group comprises three port indexes, the second port index group comprises three port indexes, the third port index group comprises three port indexes, and the fourth port index group comprises three port indexes.

10. The method according to claim 9, wherein when the type of the demodulation reference signal is the second type, and the maximum length of the demodulation reference signal is 1, the first port index group comprises indexes of a port 13, a port 15, and a port 17, the second port index group comprises indexes of a port 0, a port 1, and a port 12, the third port index group comprises indexes of a port 4, a port 5, and a port 16, and the fourth port index group comprises indexes of a port 2, a port 3, and a port 14.

11. The method according to any one of claims 1 to 4, wherein the first port index group set comprises the first port index group, a second port index group, a third port index group, a fourth port index group, a fifth port index group, a sixth port index group, a seventh port index group, and an eighth port index group, the first port index group comprises three port indexes, the second port index group comprises three port indexes, the third port index group comprises three port indexes, the fourth port index group comprises three port indexes, the fifth port index group comprises three port indexes, the sixth port index group comprises three port indexes, the seventh port index group comprises three port indexes, and the eighth port index group comprises three port indexes.

12. The method according to claim 11, wherein when the type of the demodulation reference signal is the second type, and the maximum length of the demodulation reference signal is 2, the first port index group comprises indexes of a port 18, a port 19, and a port 20, the second port index group comprises indexes of a port 21, a port 22, and a port 23, the third port index group comprises indexes of a port 7, a port 12, and a port 13, the fourth port index group comprises indexes of a port 9, a port 14, and a port 15, the fifth port index group comprises indexes of a port 11, a port 16, and a port 17, the sixth port index group comprises indexes of a port 2, a port 3, and a port 8, the seventh port index group comprises indexes of a port 0, a port 1, and a port 6, and the eighth port index group comprises indexes of a port 4, a port 5, and a port 10.

13. The method according to any one of claims 1 to 12, wherein that the first indication information indicates the first port index group comprises:
the first indication information indicates a first value, and the first value is associated with the first port index group.

14. The method according to claim 13, wherein when the first value comprises a value 1 and/or a value 2, the first port index group comprises an index of a first port; and
when the first value comprises the value 1, a cover code length corresponding to the first port is a first length; or
when the first value comprises the value 2, a cover code length corresponding to the first port is a second length.

15. The method according to claim 13 or 14, wherein when the first value comprises a value 3, the first port index group comprises indexes of a second port and a third port, wherein 4-length frequency domain cover codes corresponding to the second port and the third port are orthogonal, and 2-length frequency domain cover codes corresponding to the second port and the third port are not orthogonal.

16. The method according to claim 15, wherein the second port and the third port are in a same CDM group.

17. The method according to any one of claims 13 to 16, wherein when the first value comprises a value 4, the first port index group comprises indexes of at least one fourth port and at least one fifth port, wherein a cover code length corresponding to the at least one fourth port is the first length, and a cover code length corresponding to the at least one fifth port is the second length.

18. The method according to claim 17, wherein the index of the at least one fourth port corresponds to a first identifier, and the first identifier indicates that the cover code length of the at least one fourth port is 2-length.

19. The method according to any one of claims 15 to 18, wherein the first length is 2, and the second length is 4.

20. The method according to any one of claims 1 to 19, wherein the first port index group comprises at least one first port, the at least one first port belongs to a first port set, and a first cover code length corresponding to a port in the first port set is 4.

21. The method according to claim 20, wherein the first cover code is W_{f}(f), and a time-frequency resource mapping formula corresponding to the first port set is as follows: ${a}_{k , l}^{\left(p, μ\right)} = {β}_{PDSCH}^{DMRS} {w}_{f} \left(2⋅\left(n mod 2\right)+k′\right) {w}_{t} \left(l′\right) r \left(2n+k′\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} + l ′$ $n = 0 , 1 , …$ wherein *p* is a port index value, *µ* is a subcarrier spacing parameter, ${a}_{k , l}^{\left(p, μ\right)}$ is a demodulation reference signal DMRS that corresponds to a demodulation reference signal DMRS port *p* and that is mapped to a resource element RE whose index is (*k,l)_{p,µ}* (k,l), ${β}_{PDSCH}^{DMRS}$ is a power coefficient, *w*ₜ(*l'*) is a time domain cover code corresponding to a time domain symbol whose index is *l'*, W_{f}(f) is a frequency domain cover code corresponding to a subcarrier whose index is *k',* f = 2 · (*n* mod 2) *+ k', m* = *2n + k', m is* an *m*^{th} element in a reference signal sequence, *l* represents an index of an orthogonal frequency division multiplexing OFDM symbol comprised in a slot, *l̅* is a symbol index of a start time domain symbol occupied by the DMRS symbol or a symbol index of a reference time domain symbol, and Δ is a subcarrier offset factor.

22. The method according to any one of claims 1 to 19, wherein the first port index group further comprises at least one second port, the at least one second port belongs to a second port set, and a first cover code length corresponding to a port in the second port set is 2.

23. The method according to claim 22, wherein the first cover code is *w*_{f}(*k'*), and a time-frequency resource mapping formula corresponding to the second port set is as follows: ${a}_{k , l}^{\left(p, μ\right)} = {β}_{PDSCH}^{DMRS} {w}_{f} \left(k′\right) {w}_{t} \left(l′\right) r \left(2n+k′\right)$ $k = \left\{\begin{matrix}4 n + 2 k ′ + Δ & Type 1 \\ 6 n + k ′ + Δ & Type 2\end{matrix}\right. ;$ $k ′ = 0 , 1 ;$ $l = \overline{l} + l ′ ;$ $n = 0 , 1 , … ;$ $l ′ = 0 , 1 ;$ wherein *p* is a port index value, *µ* is a subcarrier spacing parameter, ${a}_{k , l}^{\left(p, μ\right)}$ is a demodulation reference signal DMRS symbol that corresponds to a demodulation reference signal DMRS port *p* and that is mapped to a resource element RE whose index is (*k,l*)*_{p,µ}*, ${β}_{PDSCH}^{DMRS}$ is a power scaling factor or a power control factor, *w*ₜ(*l'*) is a time domain cover code sequence element corresponding to a time domain symbol whose index is *l'*, *w*_{f}(*k'*) is a frequency domain cover code sequence element corresponding to a subcarrier whose index is *k', m =* 2*n + k', m* is an *m*^{th} element in a reference signal sequence, *l* represents an index of an orthogonal frequency division multiplexing OFDM symbol comprised in a slot, *l̅* is a symbol index of a start time domain symbol occupied by the DMRS symbol or a symbol index of a reference time domain symbol, and Δ is a subcarrier offset factor.

24. An antenna port indication method, comprising:
receiving, by a first terminal device, first indication information from a network device, wherein the first indication information indicates a first port index group, the first port index group comprises M port indexes, M is a positive integer greater than or equal to 1, the first port index group is one port index group in a first port index group set, the first port index group set is one port index group set in the antenna port set, and the antenna port set comprises the at least one port index group set; and
port indexes comprised in the first port index group set are different from each other, the first port index group set comprises at least one port index group, a total number of port indexes comprised in the first port index group set is G, G is a positive integer greater than or equal to 1 and less than or equal to K, and K is related to a type of a demodulation reference signal DMRS.

25. A communication method, wherein the method comprises:
sending, by a network device, first indication information to a first terminal device, wherein the first indication information indicates a cover code length corresponding to a first port in M ports, wherein
the M ports belong to a first port set and/or a second port set, a first cover code length corresponding to the first port set is a first length, and a first cover code length corresponding to the second port set is a second length.

26. The method according to claim 25, wherein that the M ports belong to the first port set and/or the second port set comprises:
the M ports belong to the first port set; or
the M ports belong to the second port set; or
a second port in the M ports belongs to the first port set, and a port other than the second port in the M ports belongs to the second port set.

27. The method according to claim 25 or 26, wherein a second cover code length corresponding to the first port set is the same as a second cover code length corresponding to the second port set.

28. The method according to claim 27, wherein the first cover code is a frequency domain cover code, and the second cover code is a time domain cover code.

29. The method according to claim 28, wherein when the cover code length is the first cover code length, the first cover code length is 4-length or 2-length.

30. The method according to any one of claims 25 to 29, wherein the first indication information comprises a first bit field; and
that the first indication information indicates the cover code length corresponding to the first port in the M ports comprises:
the first bit field indicates the cover code length corresponding to the first port.

31. The method according to claim 30, wherein the first bit field comprises one first bit, and the first bit indicates the cover code length corresponding to the first port.

32. The method according to claim 30, wherein the first bit field comprises one first bit, and the first bit indicates cover code lengths corresponding to the M ports.

33. The method according to claim 30, wherein the first bit field comprises a bitmap; and
that the first indication information indicates the cover code length corresponding to the first port in the M ports comprises:
the bitmap indicates the cover code length corresponding to the first port.

34. The method according to claim 33, wherein the bitmap comprises N bits, N is greater than M, an i^{th} bit in the N bits indicates a first cover code length corresponding to an i^{th} port in the M ports, and i∈{1, M}.

35. The method according to claim 34, wherein the N bits comprise M bits, there are at least two bits with different values in the M bits, and the M bits are a 1^{st} bit to an M^{th} bit in the N bits.

36. The method according to any one of claims 30 to 35, wherein the first indication information is carried in first signaling, the first signaling further comprises second indication information, the second indication information indicates a first value, the first value is associated with a first port index group, the first port index group comprises indexes of the M ports, and M is a positive integer greater than or equal to 1.

37. The method according to any one of claims 25 to 29, wherein that the first indication information indicates the cover code length corresponding to the first port in the M ports comprises:
the first indication information indicates a first value, the first value is associated with a first port index group, the first port index group comprises indexes of the M ports, an index of the first port corresponds to a first identifier, and the first identifier indicates the cover code length corresponding to the first port, wherein M is a positive integer greater than or equal to 1.

38. The method according to any one of claims 25 to 29, wherein that the first indication information indicates the cover code length corresponding to the first port in the M ports comprises:
the first indication information indicates a first value, the first value is associated with a first port index group, the first port index group comprises indexes of the M ports, and an index of the first port indicates the cover code length corresponding to the first port, wherein M is a positive integer greater than or equal to 1.

39. The method according to any one of claims 36 to 38, wherein when the first value comprises a value 1 and/or a value 2, the first port index group comprises an index of a third port; and
when the first value comprises the value 1, a cover code length corresponding to the third port is the first length; or
when the first value comprises the value 2, a cover code length corresponding to the third port is the second length.

40. The method according to any one of claims 36 to 39, wherein when the first value comprises a value 3, the first port index group comprises indexes of a fourth port and a fifth port, wherein 4-length frequency domain cover codes corresponding to the fourth port and the fifth port are orthogonal, and 2-length frequency domain cover codes corresponding to the fourth port and the fifth port are not orthogonal.

41. The method according to any one of claims 36 to 40, wherein when the first value comprises a value 4, the first port index group comprises indexes of the first port, a sixth port, and a seventh port, wherein the cover code length corresponding to the first port is the first length, and cover code lengths corresponding to the sixth port and the seventh port are the second length.

42. The method according to claim 39 or 41, wherein the first length is 2, and the second length is 4.

43. The method according to claim 41 or 42, wherein that the first identifier indicates the cover code length corresponding to the first port comprises:
the first identifier indicates that the cover code length of the first port is 2-length.

44. The method according to any one of claims 36 to 43, wherein the method further comprises:
obtaining, by the network device, a first antenna port set, wherein the first antenna port set comprises at least one port index group set, and port indexes comprised in a first port index group set in the at least one port index group set are different from each other;
the first port index group is any port index group in the first port index group set; and
a total number of port indexes comprised in the first port index group set is G, G is a positive integer greater than or equal to 1 and less than or equal to K, and K is related to a type of a demodulation reference signal DMRS.

45. The method according to claim 44, wherein K is further associated with a maximum length of the demodulation reference signal; and
the method further comprises:
sending, by the network device, second signaling to the first terminal device, wherein the second signaling indicates the type of the demodulation reference signal and/or the maximum length of the demodulation reference signal.

46. The method according to claim 44 or 45, wherein a value of K is any one of 8, 12, 16, or 24.

47. The method according to any one of claims 44 to 46, wherein
when the type of the demodulation reference signal is a first type, and the maximum length of the demodulation reference signal is 1, the value of K is 8; or
when the type of the demodulation reference signal is a first type, and the maximum length of the demodulation reference signal is 2, the value of K is 16; or
when the type of the demodulation reference signal is a second type, and the maximum length of the demodulation reference signal is 1, the value of K is 12; or
when the type of the demodulation reference signal is a second type, and the maximum length of the demodulation reference signal is 2, the value of K is 24.

48. The method according to any one of claims 25 to 47, wherein the first port index group belongs to the first antenna port set and a second antenna port set, and the second antenna port set is a subset of the first antenna port set.

49. The method according to any one of claims 25 to 47, wherein the first port index group belongs to the first antenna port set and a second antenna port set; and
the second antenna port set comprises at least one antenna port subset, and a complementary set of the at least one antenna port subset in the second antenna port set is a subset of the first antenna port set.

50. The method according to any one of claims 25 to 49, wherein the method further comprises:
receiving, by the network device, third indication information from the first terminal device, wherein the third indication information indicates that the first terminal device supports a first capability, the first capability comprises that the first terminal device supports cover code length switching, and the cover code length switching comprises switching a cover code length by using the first signaling; and
the first indication information is carried in the first signaling, and the switching a cover code length by using the first signaling comprises switching the cover code length by using the first indication information.

51. The method according to any one of claims 25 to 50, wherein when any one of the M ports belongs to the second port set, the method further comprises:
receiving, by the network device, fourth indication information from the first terminal device, wherein the fourth indication information indicates that the first terminal device supports a second capability, the second capability comprises that the any one of the M ports occupies a same time-frequency resource as a twelfth port, and the twelfth port belongs to the first port set.

52. The method according to any one of claims 25 to 51, wherein the first port set comprises an eighth port and a ninth port, and 4-length frequency domain cover codes corresponding to the eighth port and the ninth port are orthogonal; and
that the 4-length frequency domain cover codes are orthogonal comprises that frequency domain cover codes corresponding to four consecutive subcarriers in one code division multiplexing CDM group are orthogonal.

53. The method according to claim 52, wherein that the 4-length frequency domain cover codes are orthogonal satisfies the following formula: ${W}_{1 , f}^{H} {W}_{2 , f} = 0$ wherein ${W}_{1 , f} = \left[\begin{matrix}{W}_{1 , 1} \\ {W}_{1 , 2} \\ {W}_{1 , 3} \\ {W}_{1 , 4}\end{matrix}\right]$ represents a first frequency domain cover code of the eighth port, ${W}_{2 , f} = \left[\begin{matrix}{W}_{2 , 1} \\ {W}_{2 , 2} \\ {W}_{2 , 3} \\ {W}_{2 , 4}\end{matrix}\right]$ represents a second frequency domain cover code of the ninth port, and *f* represents a frequency domain position.

54. The method according to any one of claims 25 to 51, wherein the second port set comprises a tenth port and an eleventh port, and 2-length frequency domain cover codes corresponding to the tenth port and the eleventh port are orthogonal; and
that the 2-length frequency domain cover codes are orthogonal comprises that frequency domain cover codes corresponding to two consecutive subcarriers in one CDM group are orthogonal.

55. The method according to claim 54, wherein that the 2-length frequency domain cover codes are orthogonal satisfies the following formula: ${W}_{1 , f}^{H} {W}_{2 , f} = 0$ wherein ${W}_{1 , f} = \left[\begin{matrix}{W}_{1 , 1} \\ {W}_{1 , 2}\end{matrix}\right]$ represents a first frequency domain cover code corresponding to the tenth port, ${W}_{2 , f} = \left[\begin{matrix}{W}_{2 , 1} \\ {W}_{2 , 2}\end{matrix}\right]$ represents a second frequency domain cover code corresponding to the eleventh port, and *f* represents a frequency domain position.

56. The method according to claim 28, wherein the frequency domain cover code is W_{f}(f) in a first time-frequency resource mapping rule, and the time domain cover code is *w*ₜ(*l'*) in the first time-frequency resource mapping rule; and
the first time-frequency resource mapping rule satisfies the following formula: ${a}_{k , l}^{\left(p, μ\right)} = {β}_{PDSCH}^{DMRS} {w}_{f} \left(2⋅\left(n mod 2\right)+k′\right) {w}_{t} \left(l′\right) r \left(2n+k′\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} + l ′$ $n = 0 , 1 , …$
wherein *p* is a port index value, *µ* is a subcarrier spacing parameter, ${α}_{k , l}^{\left(p, μ\right)}$ is a demodulation reference signal DMRS that corresponds to a demodulation reference signal DMRS port *p* and that is mapped to a resource element RE whose index is (*k,l*)*_{p,µ}* (k,l), ${β}_{PDSCH}^{DMRS}$ is a power coefficient, *w*ₜ(*l'*) is a time domain cover code corresponding to a time domain symbol whose index is *l'*, W_{f}(f) is a frequency domain cover code corresponding to a subcarrier whose index is *k',* f = 2 · (*n* mod 2) *+ k', m* = 2*n + k', m is* an *m*^{th} element in a reference signal sequence, *l* represents an index of an orthogonal frequency division multiplexing OFDM symbol comprised in a slot, *l̅* is a symbol index of a start time domain symbol occupied by the DMRS symbol or a symbol index of a reference time domain symbol, and Δ is a subcarrier offset factor.

57. A communication method, wherein the method comprises:
receiving, by a first terminal device, first indication information from a network device, wherein the first indication information indicates a cover code length corresponding to a first port in M ports, wherein
the M ports belong to a first port set and/or a second port set, a first cover code length corresponding to the first port set is a first length, and a first cover code length corresponding to the second port set is a second length.

58. The method according to claim 57, wherein the method further comprises:
sending, by the first terminal device, third indication information to the network device, wherein the third indication information indicates that the first terminal device supports a first capability, the first capability comprises that the first terminal device supports cover code length switching, and the cover code length switching comprises switching a cover code length by using first signaling; and
the first indication information is carried in the first signaling, and the switching a cover code length by using first signaling comprises switching the cover code length by using the first indication information.

59. The method according to claim 57 or 58, wherein when any one of the M ports belongs to the second port set, the method further comprises:
receiving, by the network device, fourth indication information from the first terminal device, wherein the fourth indication information indicates that the first terminal device supports a second capability, the second capability comprises that the any one of the M ports occupies a same time-frequency resource as a twelfth port, and the twelfth port belongs to the first port set.

60. A communication method, wherein the method comprises:
sending, by a network device, first signaling to a first terminal device, wherein the first signaling indicates a port index of a first port in M ports and indicates allocation status information of a second port; and
the second port and the first port belong to a same code division multiplexing CDM group.

61. The method according to claim 60, wherein the allocation status information of the second port comprises that the second port is allocated or the second port is not allocated.

62. The method according to claim 60 or 61, wherein the first signaling comprises the first indication information, and the first indication information indicates the allocation status information of the second port.

63. The method according to claim 62, wherein the first indication information further indicates the port index of the first port.

64. The method according to claim 62 or 63, wherein that the first indication information indicates the allocation status information of the second port comprises:
the first indication information indicates that the second port is allocated to a second terminal device, or the first indication information indicates that the second port is not allocated to a second terminal device.

65. The method according to any one of claims 60 to 64, wherein the first indication information comprises a first bit field; and
that the first indication information indicates the allocation status information of the second port comprises:
the first bit field indicates the allocation status information of the second port.

66. The method according to claim 65, wherein the first bit field comprises one first bit, and the first bit indicates the allocation status information of the second port.

67. The method according to claim 65, wherein the first bit field comprises one first bit, and the first bit indicates allocation status information of the second ports corresponding to the M ports.

68. The method according to claim 65, wherein the first bit field comprises a bitmap; and
that the first indication information indicates the allocation status information of the second port comprises:
the bitmap indicates the allocation status information of the second port.

69. The method according to claim 68, wherein the bitmap comprises N bits, N is greater than M, an i^{th} bit in the N bits indicates allocation status information of the second port corresponding to an i^{th} port in the M ports, and i∈{1, M}.

70. The method according to claim 69, wherein the N bits comprise M bits, there are at least two bits with different values in the M bits, and the M bits are a 1^{st} bit to an M^{th} bit in the N bits.

71. The method according to any one of claims 65 to 70, wherein the first signaling further comprises second indication information, the second indication information indicates a first value, the first value is associated with a first port index group, and the first port index group comprises indexes of the M ports.

72. The method according to any one of claims 60 to 64, wherein that the first indication information indicates the allocation status information of the second port comprises:
the first indication information indicates a first value, the first value is associated with a first port index group, the first port index group comprises the index of the first port, the index of the first port corresponds to a first identifier, and the first identifier indicates the allocation status information of the second port.

73. The method according to claim 72, wherein that the first identifier indicates the allocation status information of the second port comprises:
the first identifier indicates that 2-length non-orthogonal cover codes in 4-length orthogonal cover codes corresponding to the second port are allocated to the second terminal device; or
the first identifier indicates that 2-length non-orthogonal cover codes in 4-length orthogonal cover codes corresponding to the second port are not allocated to the second terminal device.

74. The method according to any one of claims 71 to 73, wherein when the first value comprises a value 1 and/or a value 2, the first port index group comprises an index of a third port; and
when the first value comprises the value 1, a cover code length corresponding to the third port is a first length; or
when the first value comprises the value 2, a cover code length corresponding to the third port is a second length.

75. The method according to any one of claims 71 to 74, wherein when the first value comprises a value 3, the first port index group comprises indexes of a fourth port and a fifth port, wherein 4-length frequency domain cover codes corresponding to the fourth port and the fifth port are orthogonal, and 2-length frequency domain cover codes corresponding to the fourth port and the fifth port are not orthogonal.

76. The method according to any one of claims 71 to 75, wherein when the first value comprises a value 4, the first port index group comprises indexes of the first port, a sixth port, and a seventh port, wherein a cover code length corresponding to the first port is the first length, and cover code lengths corresponding to the sixth port and the seventh port are the second length.

77. The method according to claim 74 or 76, wherein the first length is 2, and the second length is 4.

78. The method according to claim 76 or 77, wherein that the first identifier indicates the cover code length corresponding to the first port comprises:
the first identifier indicates that the cover code length of the first port is 2-length.

79. The method according to any one of claims 71 to 78, wherein the method further comprises:
obtaining, by the network device, a first antenna port set, wherein the first antenna port set comprises at least one port index group set, and port indexes comprised in a first port index group set in the at least one port index group set are different from each other;
the first port index group is any port index group in the first port index group set; and
a total number of port indexes comprised in the first port index group set is G, G is a positive integer greater than or equal to 1 and less than or equal to K, and K is related to a type of a demodulation reference signal DMRS.

80. The method according to claim 79, wherein K is further associated with a maximum length of the demodulation reference signal; and
the method further comprises:
sending, by the network device, second signaling to the first terminal device, wherein the second signaling indicates the type of the DMRS and/or the maximum length of the DMRS.

81. The method according to claim 79 or 80, wherein a value of K is any one of 8, 12, 16, or 24.

82. The method according to any one of claims 79 to 81, wherein
when the type of the DMRS is a first type, and the maximum length of the DMRS is 1, the value of K is 8; or
when the type of the DMRS is a first type, and the maximum length of the DMRS is 2, the value of K is 16; or
when the type of the DMRS is a second type, and the maximum length of the DMRS is 1, the value of K is 12; or
when the type of the DMRS is a second type, and the maximum length of the DMRS is 2, the value of K is 24.

83. The method according to any one of claims 60 to 82, wherein the first port index group belongs to the first antenna port set and a second antenna port set, and the second antenna port set is a subset of the first antenna port set.

84. The method according to any one of claims 60 to 82, wherein the first port index group belongs to the first antenna port set and a second antenna port set; and
the second antenna port set comprises at least one antenna port subset, and a complementary set of the at least one antenna port subset in the second antenna port set is a subset of the first antenna port set.

85. The method according to any one of claims 60 to 84, wherein the method further comprises:
receiving, by the network device, third indication information from the first terminal device, wherein the third indication information indicates that the first terminal device supports a first capability, the first capability comprises that the first terminal device supports cover code length switching, and the cover code length switching comprises switching a cover code length by using the first signaling; and
the first indication information is carried in the first signaling, and the switching a cover code length by using the first signaling comprises switching the cover code length by using the first indication information.

86. The method according to any one of claims 60 to 85, wherein when any one of the M ports belongs to a second port set, the method further comprises:
receiving, by the network device, fourth indication information from the first terminal device, wherein the fourth indication information indicates that the first terminal device supports a second capability, the second capability comprises that the any one of the M ports occupies a same time-frequency resource as a twelfth port, and the twelfth port belongs to a first port set.

87. The method according to any one of claims 60 to 86, wherein the first port set comprises an eighth port and a ninth port, and 4-length frequency domain cover codes corresponding to the eighth port and the ninth port are orthogonal; and
that the 4-length frequency domain cover codes are orthogonal comprises that frequency domain cover codes corresponding to four consecutive subcarriers in one code division multiplexing CDM group are orthogonal.

88. The method according to claim 87, wherein that the 4-length frequency domain cover codes are orthogonal satisfies the following formula: ${W}_{1 , f}^{H} {W}_{2 , f} = 0$ wherein ${W}_{1 , f} = \left[\begin{matrix}{W}_{1 , 1} \\ {W}_{1 , 2} \\ {W}_{1 , 3} \\ {W}_{1 , 4}\end{matrix}\right]$ represents a first frequency domain cover code of the eighth port, ${W}_{2 , f} = \left[\begin{matrix}{W}_{2 , 1} \\ {W}_{2 , 2} \\ {W}_{2 , 3} \\ {W}_{2 , 4}\end{matrix}\right]$ represents a second frequency domain cover code of the ninth port, and *f* represents a frequency domain position.

89. The method according to any one of claims 60 to 86, wherein the second port set comprises a tenth port and an eleventh port, and 2-length frequency domain cover codes corresponding to the tenth port and the eleventh port are orthogonal; and
that the 2-length frequency domain cover codes are orthogonal comprises that frequency domain cover codes corresponding to two consecutive subcarriers in one CDM group are orthogonal.

90. The method according to claim 89, wherein that the 2-length frequency domain cover codes are orthogonal satisfies the following formula: ${W}_{1 , f}^{H} {W}_{2 , f} = 0$
wherein ${W}_{1 , f} = \left[\begin{matrix}{W}_{1 , 1} \\ {W}_{1 , 2}\end{matrix}\right]$ represents a first frequency domain cover code corresponding to the tenth port, ${W}_{2 , f} = \left[\begin{matrix}{W}_{2 , 1} \\ {W}_{2 , 2}\end{matrix}\right]$ represents a second frequency domain cover code corresponding to the eleventh port, and *f* represents a frequency domain position; and
the M ports belong to the first port set and/or the second port set, a first cover code length corresponding to the first port set is the first length, and a first cover code length corresponding to the second port set is the second length.

91. The method according to any one of claims 60 to 90, wherein that the M ports belong to the first port set and/or the second port set comprises:
the M ports belong to the first port set; or
the M ports belong to the second port set; or
a second port in the M ports belongs to the first port set, and a port other than the second port in the M ports belongs to the second port set.

92. The method according to claim 91, wherein a second cover code length corresponding to the first port set is the same as a second cover code length corresponding to the second port set.

93. The method according to claim 92, wherein the first cover code is a frequency domain cover code, and the second cover code is a time domain cover code.

94. The method according to claim 93, wherein the frequency domain cover code is W_{f}(f) in a first time-frequency resource mapping rule, and the time domain cover code is *w*ₜ(*l'*) in the first time-frequency resource mapping rule; and
the first time-frequency resource mapping rule satisfies the following formula: ${a}_{k , l}^{\left(p, μ\right)} = {β}_{PDSCH}^{DMRS} {w}_{f} \left(2⋅\left(n mod 2\right)+k′\right) {w}_{t} \left(l′\right) r \left(2n+k′\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} + l ′$ $n = 0 , 1 , …$
wherein *p* is a port index value, *µ* is a subcarrier spacing parameter, ${a}_{k , l}^{\left(p, μ\right)}$ is a demodulation reference signal DMRS that corresponds to a demodulation reference signal DMRS port *p* and that is mapped to a resource element RE whose index is (*k,l*)*_{p,µ}* (k,l), ${β}_{PDSCH}^{DMRS}$ is a power coefficient, *w*ₜ(*l'*) is a time domain cover code corresponding to a time domain symbol whose index is *l'*, W_{f}(f) is a frequency domain cover code corresponding to a subcarrier whose index is *k',* f = 2 · (*n* mod 2) *+ k', m* = 2*n + k', m is* an *m*^{th} element in a reference signal sequence, *l* represents an index of an orthogonal frequency division multiplexing OFDM symbol comprised in a slot, *l̅* is a symbol index of a start time domain symbol occupied by the DMRS symbol or a symbol index of a reference time domain symbol, and Δ is a subcarrier offset factor.

95. A communication method, wherein the method comprises:
receiving, by a first terminal device, first signaling from a network device, wherein the first signaling indicates a port index of a first port in M ports and indicates allocation status information of a second port; and
the second port and the first port belong to a same code division multiplexing CDM group.

96. The method according to claim 95, wherein the method further comprises:
sending, by the first terminal device, third indication information to the network device, wherein the third indication information indicates that the first terminal device supports a first capability, the first capability comprises that the first terminal device supports cover code length switching, and the cover code length switching comprises switching a cover code length by using the first signaling; and
the first indication information is carried in the first signaling, and the switching a cover code length by using the first signaling comprises switching the cover code length by using the first indication information.

97. The method according to claim 95 or 96, wherein when any one of the M ports belongs to a second port set, the method further comprises:
the second capability comprises that the any one of the M ports occupies a same time-frequency resource as a twelfth port, and the twelfth port belongs to a first port set.

98. An antenna port indication method, comprising:
obtaining an antenna port set, wherein the antenna port set comprises at least one port index group, the one port index group comprises M port indexes, M is a positive integer greater than or equal to 1, a number of port indexes that are different from each other and that are comprised in the antenna port set is K, K is related to a type of a demodulation reference signal DMRS, and K is a positive integer greater than or equal to 1; and
sending first indication information, wherein the first indication information indicates a first port index group, and the antenna port set comprises the first port index group.

99. An antenna port indication method, comprising:
receiving first indication information, wherein the first indication information indicates a first port index group, the first port index group comprises M port indexes, and M is a positive integer greater than or equal to 1; and
the first port index group is one port index group in an antenna port set, a number of port indexes that are different from each other and that are comprised in the antenna port set is K, K is related to a type of a demodulation reference signal DMRS, and K is a positive integer greater than or equal to 1.

100. The method according to claim 98 or 99, wherein a value of K is any one of 8, 12, 16, or 24.

101. The method according to any one of claims 98 to 100, wherein K is further related to a maximum length of the demodulation reference signal; and
when the type of the demodulation reference signal is a first type, and the maximum length of the demodulation reference signal is 1, the value of K is 8; or
when the type of the demodulation reference signal is a first type, and the maximum length of the demodulation reference signal is 2, the value of K is 16; or
when the type of the demodulation reference signal is a second type, and the maximum length of the demodulation reference signal is 1, the value of K is 12; or
when the type of the demodulation reference signal is a second type, and the maximum length of the demodulation reference signal is 2, the value of K is 24.

102. The method according to any one of claims 98 to 101, wherein the type of the demodulation reference signal is the first type, the maximum length of the demodulation reference signal is 1, and a value of M corresponding to the port index group comprised in the antenna port set is one of 1 to 8.

103. The method according to claim 102, wherein the value of M of the at least one port index group in the antenna port set is 1, and the at least one port index group comprises the first port index group, a second port index group, a third port index group, a fourth port index group, a fifth port index group, a sixth port index group, a seventh port index group, an eighth port index group, a ninth port index group, a tenth port index group, an eleventh port index group, and a twelfth port index group;
the first port index group comprises a port 0, and a number of DMRS CDM groups without data that correspond to the first port index group is 1;
the second port index group comprises a port 1, and a number of DMRS CDM groups without data that correspond to the second port index group is 1;
the third port index group comprises a port 0, and a number of DMRS CDM groups without data that correspond to the third port index group is 2;
the fourth port index group comprises a port 1, and a number of DMRS CDM groups without data that correspond to the fourth port index group is 2;
the fifth port index group comprises a port 2, and a number of DMRS CDM groups without data that correspond to the fifth port index group is 2;
the sixth port index group comprises a port 3, and a number of DMRS CDM groups without data that correspond to the sixth port index group is 2;
the seventh port index group comprises a port 8, and a number of DMRS CDM groups without data that correspond to the seventh port index group is 1;
the eighth port index group comprises a port 9, and a number of DMRS CDM groups without data that correspond to the eighth port index group is 1;
the ninth port index group comprises a port 8, and a number of DMRS CDM groups without data that correspond to the ninth port index group is 2;
the tenth port index group comprises a port 9, and a number of DMRS CDM groups without data that correspond to the tenth port index group is 2;
the eleventh port index group comprises a port 10, and a number of DMRS CDM groups without data that correspond to the eleventh port index group is 1; and
the twelfth port index group comprises a port 11, and a number of DMRS CDM groups without data that correspond to the twelfth port index group is 1.

104. The method according to claim 102, wherein the value of M of the at least one port index group in the antenna port set is 2, and the at least one port index group comprises the first port index group, a second port index group, a third port index group, a fourth port index group, a fifth port index group, a sixth port index group, a seventh port index group, and an eighth port index group;
the first port index group comprises a port 0 and a port 1, and a number of DMRS CDM groups without data that correspond to the first port index group is 1;
the second port index group comprises a port 0 and a port 1, and a number of DMRS CDM groups without data that correspond to the second port index group is 2;
the third port index group comprises a port 2 and a port 3, and a number of DMRS CDM groups without data that correspond to the third port index group is 2;
the fourth port index group comprises a port 0 and a port 2, and a number of DMRS CDM groups without data that correspond to the fourth port index group is 2;
the fifth port index group comprises a port 8 and a port 9, and a number of DMRS CDM groups without data that correspond to the fifth port index group is 1;
the sixth port index group comprises a port 8 and a port 9, and a number of DMRS CDM groups without data that correspond to the sixth port index group is 2;
the seventh port index group comprises a port 10 and a port 11, and a number of DMRS CDM groups without data that correspond to the seventh port index group is 2; and
the eighth port index group comprises a port 9 and a port 11, and a number of DMRS CDM groups without data that correspond to the eighth port index group is 2.

105. The method according to claim 102, wherein the value of M of the at least one port index group in the antenna port set is 3, and the at least one port index group comprises the first port index group, a second port index group, a third port index group, and a fourth port index group;
the first port index group comprises a port 0, a port 1, and a port 2, and a number of DMRS CDM groups without data that correspond to the first port index group is 2;
the second port index group comprises a port 0, a port 1, and a port 8, and a number of DMRS CDM groups without data that correspond to the second port index group is 1;
the third port index group comprises a port 0, a port 1, and a port 8, and a number of DMRS CDM groups without data that correspond to the third port index group is 2; and
the fourth port index group comprises a port 2, a port 3, and a port 10, and a number of DMRS CDM groups without data that correspond to the fourth port index group is 2.

106. The method according to claim 102, wherein the value of M of the at least one port index group in the antenna port set is 4, and the at least one port index group comprises the first port index group, a second port index group, a third port index group, a fourth port index group, and a fifth port index group;
the first port index group comprises a port 0, a port 1, a port 2, and a port 3, and a number of DMRS CDM groups without data that correspond to the first port index group is 2;
the second port index group comprises a port 8, a port 9, a port 10, and a port 11, and a number of DMRS CDM groups without data that correspond to the second port index group is 2;
the third port index group comprises a port 0, a port 1, a port 8, and a port 9, and a number of DMRS CDM groups without data that correspond to the third port index group is 1;
the fourth port index group comprises a port 0, a port 1, a port 8, and a port 9, and a number of DMRS CDM groups without data that correspond to the fourth port index group is 2; and
the fifth port index group comprises a port 2, a port 3, a port 10, and a port 11, and a number of DMRS CDM groups without data that correspond to the fifth port index group is 2.

107. The method according to claim 102, wherein the value of M of the at least one port index group in the antenna port set is 5, the at least one port index group comprises the first port index group, the first port index group comprises a port 0, a port 1, a port 2, a port 3, and a port 8, and a number of DMRS CDM groups without data that correspond to the first port index group is 2.

108. The method according to claim 102, wherein the value of M of the at least one port index group in the antenna port set is 6, the at least one port index group comprises the first port index group, the first port index group comprises a port 0, a port 1, a port 2, a port 3, a port 8, and a port 10, and a number of DMRS CDM groups without data that correspond to the first port index group is 2.

109. The method according to claim 102, wherein the value of M of the at least one port index group in the antenna port set is 7, the at least one port index group comprises the first port index group, the first port index group comprises a port 0, a port 1, a port 2, a port 3, a port 8, a port 9, and a port 10, and a number of DMRS CDM groups without data that correspond to the first port index group is 2.

110. The method according to claim 102, wherein the value of M of the at least one port index group in the antenna port set is 8, the at least one port index group comprises the first port index group, the first port index group comprises a port 0, a port 1, a port 2, a port 3, a port 8, a port 9, a port 10, and a port 11, and a number of DMRS CDM groups without data that correspond to the first port index group is 2.

111. The method according to any one of claims 98 to 110, wherein any two port index groups comprised in the antenna port set have a same number of DMRS CDM groups without data.

112. The method according to any one of claims 98 to 111, wherein when the maximum length of the DMRS is 2, any two port index groups comprised in the antenna port set have a same number of front-load symbols.

113. The method according to any one of claims 98 to 101, wherein the antenna port set comprises the first port index group, a second port index group, and a third port index group, the first port index group comprises three port indexes, the second port index group comprises three port indexes, the third port index group comprises two port indexes, and the first port index group, the second port index group, and the third port index group have different port indexes.

114. The method according to claim 113, wherein when the type of the DMRS is the first type, and the maximum length of the DMRS is 1, the first port index group comprises indexes of a port 0, a port 1, and a port 8, the second port index group comprises indexes of a port 2, a port 3, and a port 10, and the third port index group comprises indexes of a port 9 and a port 11.

115. The method according to any one of claims 98 to 101, wherein the antenna port set comprises the first port index group, a second port index group, a third port index group, and a fourth port index group, the first port index group comprises three port indexes, the second port index group comprises three port indexes, the third port index group comprises three port indexes, the fourth port index group comprises four port indexes, and the first port index group, the second port index group, the third port index group, and the fourth port index group have different port indexes.

116. The method according to claim 115, wherein when the type of the DMRS is the first type, and the maximum length of the DMRS is 2, the first port index group comprises indexes of a port 7, a port 12, and a port 13, the second port index group comprises indexes of a port 0, a port 1, and a port 4, the third port index group comprises indexes of a port 2, a port 3, and a port 6, and the fourth port index group comprises indexes of a port 10, a port 11, a port 14, and a port 15.

117. The method according to any one of claims 98 to 101, wherein the antenna port set comprises the first port index group, a second port index group, a third port index group, and a fourth port index group, the first port index group comprises three port indexes, the second port index group comprises three port indexes, the third port index group comprises three port indexes, the fourth port index group comprises three port indexes, and the first port index group, the second port index group, the third port index group, and the fourth port index group have different port indexes.

118. The method according to claim 117, wherein when the type of the DMRS is the second type, and the maximum length of the DMRS is 1, the first port index group comprises indexes of a port 13, a port 15, and a port 17, the second port index group comprises indexes of a port 0, a port 1, and a port 12, the third port index group comprises indexes of a port 4, a port 5, and a port 16, and the fourth port index group comprises indexes of a port 2, a port 3, and a port 14.

119. The method according to any one of claims 98 to 101, wherein the antenna port set comprises the first port index group, a second port index group, a third port index group, a fourth port index group, a fifth port index group, a sixth port index group, a seventh port index group, and an eighth port index group, the first port index group comprises three port indexes, the second port index group comprises three port indexes, the third port index group comprises three port indexes, the fourth port index group comprises three port indexes, the fifth port index group comprises three port indexes, the sixth port index group comprises three port indexes, the seventh port index group comprises three port indexes, the eighth port index group comprises three port indexes, and the first port index group, the second port index group, the third port index group, the fourth port, the fifth port index group, the sixth port index group, the seventh port index group, and the eighth port index group have different port indexes.

120. The method according to claim 119, wherein when the type of the DMRS is the second type, and the maximum length of the DMRS is 2, the first port index group comprises indexes of a port 18, a port 19, and a port 20, the second port index group comprises indexes of a port 21, a port 22, and a port 23, the third port index group comprises indexes of a port 7, a port 12, and a port 13, the fourth port index group comprises indexes of a port 14, a port 15, and a port 20, the fifth port index group comprises indexes of a port 11, a port 16, and a port 17, the sixth port index group comprises indexes of a port 2, a port 3, and a port 8, the seventh port index group comprises indexes of a port 0, a port 1, and a port 6, and the eighth port index group comprises indexes of a port 4, a port 5, and a port 10.

121. The method according to any one of claims 98 to 120, wherein the first port index group comprises at least one first port, the at least one first port belongs to a first port set, and a first cover code length corresponding to a port in the first port set is 4.

122. The method according to claim 121, wherein the first cover code is W_{f}(f), and a time-frequency resource mapping formula corresponding to the first port set is as follows: ${a}_{k , l}^{\left(p, μ\right)} = {β}_{PDSCH}^{DMRS} {w}_{f} \left(2⋅\left(n mod 2\right)+k′\right) {w}_{t} \left(l′\right) r \left(2n+k′\right)$ $k = \left\{\begin{matrix}4 n + 2 k ′ + Δ , & Type 1 \\ 6 n + k ′ + Δ , & Type 2\end{matrix}\right.$ $k ′ = 0 , 1$ $l = \overline{l} + l ′$ $n = 0 , 1 , …$ wherein *p* is a port index value, *µ* is a subcarrier spacing parameter, ${a}_{k , l}^{\left(p, μ\right)}$ is a demodulation reference signal DMRS that corresponds to a demodulation reference signal DMRS port p and that is mapped to a resource element RE whose index is (*k,l*)*_{p,µ}* (k,l), ${β}_{PDSCH}^{DMRS}$ is a power coefficient, *w*ₜ(*l'*) is a time domain cover code corresponding to a time domain symbol whose index is *l'*, W_{f}(f) is a frequency domain cover code corresponding to a subcarrier whose index is *k',* f = 2 · (*n* mod 2) *+ k', m* = 2*n + k', m is* an *m*^{th} element in a reference signal sequence, *l* represents an index of an orthogonal frequency division multiplexing OFDM symbol comprised in a slot, *l̅* is a symbol index of a start time domain symbol occupied by the DMRS symbol or a symbol index of a reference time domain symbol, and Δ is a subcarrier offset factor.

123. The method according to any one of claims 98 to 122, wherein the method further comprises:
sending RRC signaling, wherein the RRC signaling indicates the type and/or the maximum length of the DMRS.

124. A communication apparatus, comprising a processor, wherein the processor is coupled to a memory, the memory stores a computer program, and the processor is configured to invoke the computer program in the memory, to enable the communication apparatus to perform the method according to any one of claims 1 to 123.

125. A communication apparatus, comprising a unit or module configured to implement the method according to any one of claims 1 to 123.

126. A computer-readable storage medium, wherein the storage medium stores a computer program or instructions, and when the computer program or the instructions are executed by a computer, the method according to any one of claims 1 to 123 is implemented.
